(19) **Europäisches Patentamt**
**European Patent Office**
**Office européen des brevets**

(11) **EP 4 773 530 A1**

(12) **EUROPEAN PATENT APPLICATION**
published in accordance with Art. 153(4) EPC

(43) Date of publication:
**08.07.2026 Bulletin 2026/28**

(21) Application number: **24869784.9**

(22) Date of filing: **28.05.2024**

(51) International Patent Classification (IPC):
**H04L 1/00** $^{(2006.01)}$    **H04B 10/54** $^{(2013.01)}$

(52) Cooperative Patent Classification (CPC):
**H04B 10/54; H04L 1/00; H04L 5/00**

(86) International application number:
**PCT/CN2024/095639**

(87) International publication number:
**WO 2025/066220 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311288520**

(71) Applicant: **HUAWEI TECHNOLOGIES CO., LTD.
Shenzhen 518129 (CN)**

(72) Inventors:
• **HUANG, Kechao**
  **Shenzhen, Guangdong 518129 (CN)**
• **WANG, Haoyi**
  **Shenzhen, Guangdong 518129 (CN)**
• **LUO, Ji**
  **Shenzhen, Guangdong 518129 (CN)**
• **MA, Huixiao**
  **Shenzhen, Guangdong 518129 (CN)**

(74) Representative: **Grünecker Patent- und
Rechtsanwälte
PartG mbB
Leopoldstraße 4
80802 München (DE)**

(54) **DATA TRANSMISSION METHOD AND RELATED APPARATUS**

(57) Embodiments of this application provide a data transmission method and a related apparatus. Specifically, a transmitter obtains a super-frame composed of multiple sub-frames. In a polarization direction, each sub-frame includes $N_{TS}$ training symbols and $N_{PS}$ pilot symbols, where both $N_{TS}$ and $N_{PS}$ are integers greater than 1, and $N_{TS}+N_{PS}$ is an odd number greater than or equal to 5. One symbol in the sub-frame serves as both a training symbol and a pilot symbol, and each of these symbols are one of four complex numbers: -A-Aj, -A+Aj, A-Aj, and A+Aj, where A is a real number. Within every $N_{PG}$ consecutive symbols in the sub-frame, where $N_{PG}$ is 96 or 128, there is a pilot symbol located at a fixed position. The transmitter then sends the super-frame. This approach increases the interval at which pilot symbols are inserted into the sub-frame, thereby reducing overhead. In addition, having one symbol that serves as both a training symbol and a pilot symbol simplifies the sub-frame structure.

FIG. 5A

FIG. 5B

## Description

This application claims priority to Chinese Patent Application No. 202311288520.2, filed with the China National Intellectual Property Administration on September 28, 2023 and entitled "DATA TRANSMISSION METHOD AND RELATED APPARATUS", which is incorporated herein by reference in its entirety.

## TECHNICAL FIELD

Embodiments of this application relate to the field of optical communication, and in particular, to a data transmission method and a related apparatus.

## BACKGROUND

Driven by continuous advancement of 5G, cloud computing, big data, artificial intelligence, and the like, high-speed optical transport networks are evolving toward high capacity, packetization, and intelligence. Coherent optical communication systems use amplitudes, phases, polarization, and frequencies of optical waves to carry information. To resist optical signal distortion caused by dispersion, polarization-dependent impairment, noise, non-linear effect, and other factors during transmission and maintain long-distance transmission, the coherent optical communication systems typically insert some designed fixed symbol sequences to transmission symbol sequences, to help a receiver restore sent symbols.

Existing transmission symbol sequences are primarily used in 400 Gbps or 800 Gbps scenarios, and cannot adapt to future scenarios above 800 Gbps (including 1.2 Tbps, 1.6 Tbps, and the like), and additionally introduce transmission overhead.

## SUMMARY

Embodiments of this application provide a data transmission method and a related apparatus, to resolve a problem that prior-art transmission symbol sequences cannot be used in scenarios above 800 Gbps.

According to a first aspect, an embodiment of this application provides a data transmission method. The method is applied to a transmitter. Specifically, a transmitter obtains a super-frame including a plurality of sub-frames, where each sub-frame includes training symbols and pilot symbols, in a polarization direction, a quantity of training symbols in the sub-frame is $N_{TS}$, a quantity of pilot symbols in the sub-frame is $N_{PS}$, both $N_{TS}$ and $N_{PS}$ are integers greater than 1, $N_{TS}+N_{PS}$ is an odd number greater than or equal to 5, one symbol in the sub-frame serves as both a training symbol and a pilot symbol, each training symbol and each pilot symbol are one of four complex numbers: -A-Aj, -A+Aj, A-Aj, and A+Aj, A is a real number, every $N_{PG}$ consecutive symbols in the sub-frame include a pilot symbol located at a fixed position, and $N_{PG}$ is 96 or 128. Further, the transmitter sends the super-frame. It should be noted that the method may also be applied to a specific module of the transmitter, for example, a signal processor of the transmitter. It should be understood that the super-frame obtained by the module may be understood as the super-frame generated by the module, or may be understood as the super-frame received by the module from a preceding module. It should be further understood that the module sends the super-frame may be understood as that the module sends the super-frame to a receiver through a channel, or may be understood as that the module sends the super-frame to a subsequent module of the module.

In this implementation, every 96 or 128 consecutive symbols in the sub-frame include one pilot symbol. This approach increases the interval at which pilot symbols are inserted into the sub-frame, thereby reducing overhead. In addition, having one symbol that serves as both a training symbol and a pilot symbol simplifies the sub-frame structure.

In some possible implementations, in one sub-frame, a training symbol sequence including a plurality of training symbols in a first polarization direction is different from a training symbol sequence including a plurality of training symbols in a second polarization direction, a pilot sequence including a plurality of pilot symbols in the first polarization direction is different from a pilot sequence that includes a plurality of pilot symbols in the second polarization direction. This prevents the issue where a receiver might be unable to distinguish between the two polarization directions during actual transmission. The first polarization direction and the second polarization direction are orthogonal to each other.

In some possible implementations, in one sub-frame and in a polarization direction, a sum of real parts of all symbols including all training symbols and all pilot symbols, totally $N_{TS}+N_{PS}-1$ symbols, is 0, and a sum of imaginary parts of all symbols including all training symbols and all pilot symbols, totally $N_{TS}+N_{PS}-1$ symbols, is 0. In this way, direct current balance (DC Balance) can be achieved, and this facilitates signal quality recovery at the receiver.

In some possible implementations, in one sub-frame and in a polarization direction, among the total of $N_{TS}+N_{PS}-1$ symbols including all training symbols and all pilot symbols, a quantity of symbols that are -A-Aj, -A+Aj, A-Aj, and A+Aj differ from each other by no more than 2. This effectively ensures a near-balance in the quantities of symbols across each polarization direction.

In some possible implementations, in one sub-frame and in two polarization directions, quantities of training symbols and pilot symbols valued at -A-Aj, quantities of training symbols and pilot symbols valued at -A+Aj, quantities of training symbols and pilot symbols valued at A-Aj, and quantities of training symbols and pilot symbols valued at A+Aj are the same. This effectively ensures a balance in the quantities of symbols across the two polarization directions.

In some possible implementations, in one sub-frame, $N_{TS}$ consecutive training symbols are arranged starting from the beginning of the sub-frame. In this way, a structure of the sub-frame is more orderly.

In some possible implementations, among the $N_{TS}$ consecutive training symbols, a symbol at the beginning serves as both a training symbol and a pilot symbol. In this way, pilot symbol arrangement is more conducive to standardization.

In some possible implementations, a sub-frame arranged at a $1^{st}$ position in the super-frame is a first-type sub-frame, and the first-type sub-frame further includes frame alignment word symbols, reserved symbols, and symbols before framing. In this way, function implementation of the first-type sub-frame is enriched. Each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, and $A_{FAW}$ is a real number. In the first-type sub-frame, training symbols are located before the frame alignment word symbols, the frame alignment word symbols are located before the reserved symbols, and the reserved symbols are located before the symbols before framing.

In some possible implementations, $A=A_{FAW}$.

In some possible implementations, the super-frame includes at least one second-type sub-frame, the second-type sub-frame further includes symbols before framing, and in the second-type sub-frame, training symbols are located before the symbols before framing.

In some possible implementations, a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;
$N_{PG}$=128, $N_{CW}$=344064, and $N_F$=346880, 347136, 347392, 347520, 347648, 347776, 347904, or 348160;
$N_{PG}$=128, $N_{CW}$=516096, and $N_F$=520192, 520320, 520448, 520576, 520704, 520832, 520960, 521088, 521472, 521600, 521856, or 522240;
$N_{PG}$=128, $N_{CW}$=688128, and $N_F$=693760, 693888, 694144, 694272, 694400, 694656, 694784, 694912, 695040, 695296, 695552, 695808, 696192, or 696320;
$N_{PG}$=128, $N_{CW}$=150528, and $N_F$=152064, 152192, or 152320;
$N_{PG}$=128, $N_{CW}$=129024, and $N_F$=130048, 130176, or 130560;
$N_{PG}$=128, $N_{CW}$=107520, and $N_F$=108416, 108544, 108672, or 108800;
$N_{PG}$=128, $N_{CW}$=175616, and $N_F$=177152, 177280, 177408, 177536, or 177664;
$N_{PG}$=128, $N_{CW}$=351232, and $N_F$=354304, 354432, 354560, 354688, 354816, 354944, 355072, 355200, or 355328;
$N_{PG}$=128, $N_{CW}$=526848, and $N_F$=531200, 531456, 531712, 531840, 532224, 532480, 532608, 532864, 532992, or 533120;
$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;
$N_{PG}$=96, $N_{CW}$=172032, and $N_F$=173952, 174048, 174240, 174336, 174432, or 174528;
$N_{PG}$=96, $N_{CW}$=344064, and $N_F$=347904, 348000, 348096, 348192, 348384, 348480, 348672, 348768, 348864, or 349056;
$N_{PG}$=96, $N_{CW}$=516096, and $N_F$=521664, 521856, 522144, 522240, 522720, 522816, 523008, 523200, 523296, 523392, 523488, 523584, or 523776;
$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;
$N_{PG}$=96, $N_{CW}$=150528, and $N_F$=152160, 152256, 152352, 152448, 152544, 152640, or 152736;
$N_{PG}$=96, $N_{CW}$=129024, and $N_F$=130464, 130560, 130752, 130848, or 130944;
$N_{PG}$=96, $N_{CW}$=107520, and $N_F$=108672, 108768, 108864, 108960, or 109056;
$N_{PG}$=96, $N_{CW}$=175616, and $N_F$=177504, 177600, 177888, 177984, 178080, or 178176;
$N_{PG}$=96, $N_{CW}$=351232, and $N_F$=355008, 355104, 355200, 355488, 355680, 355776, 355872, 355968, 356160, 356352, or 356448;
$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and
$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

In some possible implementations, in a polarization direction, a modulation format of a symbol in the super-frame is quadrature phase shift keying (Quadrature Phase Shift Keying, QPSK), and A=-1 or 1; or in a polarization direction, a modulation format of a symbol in the super-frame is 16QAM, and A=-1, 1, -3, 3, $-\sqrt{5}$, or $\sqrt{5}$; or in a polarization direction, a modulation format of a symbol in the super-frame is 64QAM, and A=-1, 1, -3, 3, $-\sqrt{21}$, $\sqrt{21}$, -5, 5, -7, or 7.

According to a second aspect, an embodiment of this application provides a data transmission method. The method is applied to a receiver. Specifically, the receiver receives a super-frame including a plurality of sub-frames, where each sub-frame includes training symbols and pilot symbols, in a polarization direction, a quantity of training symbols in the sub-frame is $N_{TS}$, a quantity of pilot symbols in the sub-frame is $N_{PS}$, both $N_{TS}$ and $N_{PS}$ are integers greater than 1, $N_{TS}$+$N_{PS}$ is an odd number greater than or equal to 5, one symbol in the sub-frame serves as both a training symbol and a pilot symbol, each training symbol and each pilot symbol are one of four complex numbers: -A-Aj, -A+Aj, A-Aj, and A+Aj, A is a real number, and every 96 or 128 consecutive symbols in the sub-frame include a pilot symbol located at a fixed position. Further, the receiver decodes the super-frame.

In some possible implementations, in one sub-frame, a training symbol sequence including a plurality of training symbols in a first polarization direction is different from a training symbol sequence including a plurality of training symbols in a second polarization direction, a pilot sequence including a plurality of pilot symbols in the first polarization direction is different from a pilot sequence that includes a plurality of pilot symbols in the second polarization direction. This prevents the issue where a receiver might be unable to distinguish between the two polarization directions during actual transmission. The first polarization direction and the second polarization direction are orthogonal to each other.

In some possible implementations, in one sub-frame and in a polarization direction, a sum of real parts of all symbols including all training symbols and all pilot symbols, totally $N_{TS}$+$N_{PS}$-1 symbols, is 0, and a sum of imaginary parts of all symbols including all training symbols and all pilot symbols, totally $N_{TS}$+$N_{PS}$-1 symbols, is 0. In this way, direct current balance (DC Balance) can be achieved, and this facilitates signal quality recovery at the receiver.

In some possible implementations, in one sub-frame and in a polarization direction, among the total of $N_{TS}$+$N_{PS}$-1 symbols including all training symbols and all pilot symbols, a quantity of symbols that are -A-Aj, -A+Aj, A-Aj, and A+Aj differ from each other by no more than 2. This effectively ensures a near-balance in the quantities of symbols across each polarization direction.

In some possible implementations, in one sub-frame and in two polarization directions, quantities of training symbols and pilot symbols valued at -A-Aj, quantities of training symbols and pilot symbols valued at -A+Aj, quantities of training symbols and pilot symbols valued at A-Aj, and quantities of training symbols and pilot symbols valued at A+Aj are the same. This effectively ensures a balance in the quantities of symbols across the two polarization directions.

In some possible implementations, in one sub-frame, $N_{TS}$ consecutive training symbols are arranged starting from the beginning of the sub-frame. In this way, a structure of the sub-frame is more orderly.

In some possible implementations, among the $N_{TS}$ consecutive training symbols, a symbol at the beginning serves as both a training symbol and a pilot symbol. In this way, pilot symbol arrangement is more conducive to standardization.

In some possible implementations, a sub-frame arranged at a 1st position in the super-frame is a first-type sub-frame, and the first-type sub-frame further includes frame alignment word symbols, reserved symbols, and symbols before framing. In this way, function implementation of the first-type sub-frame is enriched. Each frame alignment word symbol is one of four complex numbers: -$A_{FAW}$-$A_{FAW}$j, -$A_{FAW}$+$A_{FAW}$j, $A_{FAW}$-$A_{FAW}$j, and $A_{FAW}$+$A_{FAW}$j, and $A_{FAW}$ is a real number. In the first-type sub-frame, training symbols are located before the frame alignment word symbols, the frame alignment word symbols are located before the reserved symbols, and the reserved symbols are located before the symbols before framing.

In some possible implementations, A=$A_{FAW}$.

In some possible implementations, the super-frame includes at least one second-type sub-frame, the second-type sub-frame further includes symbols before framing, and in the second-type sub-frame, training symbols are located before the symbols before framing.

In some possible implementations, a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;
$N_{PG}$=128, $N_{CW}$=344064, and $N_F$=346880, 347136, 347392, 347520, 347648, 347776, 347904, or 348160;
$N_{PG}$=128, $N_{CW}$=516096, and $N_F$=520192, 520320, 520448, 520576, 520704, 520832, 520960, 521088, 521472, 521600, 521856, or 522240;
$N_{PG}$=128, $N_{CW}$=688128, and $N_F$=693760, 693888, 694144, 694272, 694400, 694656, 694784, 694912, 695040, 695296, 695552, 695808, 696192, or 696320;
$N_{PG}$=128, $N_{CW}$=150528, and $N_F$=152064, 152192, or 152320;
$N_{PG}$=128, $N_{CW}$=129024, and $N_F$=130048, 130176, or 130560;
$N_{PG}$=128, $N_{CW}$=107520, and $N_F$=108416, 108544, 108672, or 108800;

$N_{PG}$=128, $N_{CW}$=175616, and $N_F$=177152, 177280, 177408, 177536, or 177664;

$N_{PG}$=128, $N_{CW}$=351232, and $N_F$=354304, 354432, 354560, 354688, 354816, 354944, 355072, 355200, or 355328;

$N_{PG}$=128, $N_{CW}$=526848, and $N_F$=531200, 531456, 531712, 531840, 532224, 532480, 532608, 532864, 532992, or 533120;

$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;

$N_{PG}$=96, $N_{CW}$=172032, and $N_F$=173952, 174048, 174240, 174336, 174432, or 174528;

$N_{PG}$=96, $N_{CW}$=344064, and $N_F$=347904, 348000, 348096, 348192, 348384, 348480, 348672, 348768, 348864, or 349056;

$N_{PG}$=96, $N_{CW}$=516096, and $N_F$=521664, 521856, 522144, 522240, 522720, 522816, 523008, 523200, 523296, 523392, 523488, 523584, or 523776;

$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;

$N_{PG}$=96, $N_{CW}$=150528, and $N_F$=152160, 152256, 152352, 152448, 152544, 152640, or 152736;

$N_{PG}$=96, $N_{CW}$=129024, and $N_F$=130464, 130560, 130752, 130848, or 130944;

$N_{PG}$=96, $N_{CW}$=107520, and $N_F$=108672, 108768, 108864, 108960, or 109056;

$N_{PG}$=96, $N_{CW}$=175616, and $N_F$=177504, 177600, 177888, 177984, 178080, or 178176;

$N_{PG}$=96, $N_{CW}$=351232, and $N_F$=355008, 355104, 355200, 355488, 355680, 355776, 355872, 355968, 356160, 356352, or 356448;

$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and

$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

In some possible implementations, in a polarization direction, a modulation format of a symbol in the super-frame is QPSK, and A=-1 or 1; or in a polarization direction, a modulation format of a symbol in the super-frame is 16QAM, and A=-1, 1, -3, 3, $-\sqrt{5}$, or $\sqrt{5}$; or in a polarization direction, a modulation format of a symbol in the super-frame is 64QAM, and A=-1, 1, -3, 3, $-\sqrt{21}$, $\sqrt{21}$, -5, 5, -7, or 7.

According to a third aspect, an embodiment of this application provides a chip. The chip includes a processor and a memory. The memory and the processor are connected to each other through a line. The memory stores instructions. The processor is configured to perform the method described in any implementation of the first aspect and the second aspect.

According to a fourth aspect, an embodiment of this application provides a data transmission apparatus at a transmitting side. The data transmission apparatus includes a processing unit and a sending unit. The processing unit is configured to obtain a super-frame including a plurality of sub-frames, where each sub-frame includes training symbols and pilot symbols, in a polarization direction, a quantity of training symbols in the sub-frame is $N_{TS}$, a quantity of pilot symbols in the sub-frame is $N_{PS}$, both $N_{TS}$ and $N_{PS}$ are integers greater than 1, $N_{TS}+N_{PS}$ is an odd number greater than or equal to 5, one symbol in the sub-frame serves as both a training symbol and a pilot symbol, each training symbol and each pilot symbol are one of four complex numbers: -A-Aj, -A+Aj, A-Aj, and A+Aj, A is a real number, and every 96 or 128 consecutive symbols in the sub-frame include a pilot symbol located at a fixed position. The sending unit is configured to send the super-frame.

In some possible implementations, in one sub-frame, a training symbol sequence including a plurality of training symbols in a first polarization direction is different from a training symbol sequence including a plurality of training symbols in a second polarization direction, a pilot sequence including a plurality of pilot symbols in the first polarization direction is different from a pilot sequence that includes a plurality of pilot symbols in the second polarization direction. This prevents the issue where a receiver might be unable to distinguish between the two polarization directions during actual transmission. The first polarization direction and the second polarization direction are orthogonal to each other.

In some possible implementations, in one sub-frame and in a polarization direction, a sum of real parts of all symbols including all training symbols and all pilot symbols, totally $N_{TS}+N_{PS}$-1 symbols, is 0, and a sum of imaginary parts of all symbols including all training symbols and all pilot symbols, totally $N_{TS}+N_{PS}$-1 symbols, is 0. In this way, direct current balance (DC Balance) can be achieved, and this facilitates signal quality recovery at the receiver.

In some possible implementations, in one sub-frame and in a polarization direction, among the total of $N_{TS}+N_{PS}$-1 symbols including all training symbols and all pilot symbols, a quantity of symbols that are -A-Aj, -A+Aj, A-Aj, and A+Aj differ from each other by no more than 2. This effectively a near-balance in the quantities of symbols across each polarization direction.

In some possible implementations, in one sub-frame and in two polarization directions, quantities of training symbols and pilot symbols valued at $-A-Aj$, quantities of training symbols and pilot symbols valued at $-A+Aj$, quantities of training symbols and pilot symbols valued at $A-Aj$, and quantities of training symbols and pilot symbols valued at $A+Aj$ are the same,. This effectively ensures a balance in the quantities of symbols across the two polarization directions.

In some possible implementations, in one sub-frame, $N_{TS}$ consecutive training symbols are arranged starting from the beginning of the sub-frame. In this way, a structure of the sub-frame is more orderly.

In some possible implementations, among the $N_{TS}$ consecutive training symbols, a symbol at the beginning serves as both a training symbol and a pilot symbol. In this way, pilot symbol arrangement is more conducive to standardization.

In some possible implementations, a sub-frame arranged at a 1st position in the super-frame is a first-type sub-frame, and the first-type sub-frame further includes frame alignment word symbols, reserved symbols, and symbols before framing. In this way, function implementation of the first-type sub-frame is enriched. Each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, and $A_{FAW}$ is a real number. In the first-type sub-frame, training symbols are located before the frame alignment word symbols, the frame alignment word symbols are located before the reserved symbols, and the reserved symbols are located before the symbols before framing.

In some possible implementations, $A=A_{FAW}$.

In some possible implementations, the super-frame includes at least one second-type sub-frame, the second-type sub-frame further includes symbols before framing, and in the second-type sub-frame, training symbols are located before the symbols before framing.

In some possible implementations, a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}=128$, $N_{CW}=172032$, and $N_F=173440$, 173568, 173696, 173824, 173952, or 174080;
$N_{PG}=128$, $N_{CW}=344064$, and $N_F=346880$, 347136, 347392, 347520, 347648, 347776, 347904, or 348160;
$N_{PG}=128$, $N_{CW}=516096$, and $N_F=520192$, 520320, 520448, 520576, 520704, 520832, 520960, 521088, 521472, 521600, 521856, or 522240;
$N_{PG}=128$, $N_{CW}=688128$, and $N_F=693760$, 693888, 694144, 694272, 694400, 694656, 694784, 694912, 695040, 695296, 695552, 695808, 696192, or 696320;
$N_{PG}=128$, $N_{CW}=150528$, and $N_F=152064$, 152192, or 152320;
$N_{PG}=128$, $N_{CW}=129024$, and $N_F=130048$, 130176, or 130560;
$N_{PG}=128$, $N_{CW}=107520$, and $N_F=108416$, 108544, 108672, or 108800;
$N_{PG}=128$, $N_{CW}=175616$, and $N_F=177152$, 177280, 177408, 177536, or 177664;
$N_{PG}=128$, $N_{CW}=351232$, and $N_F=354304$, 354432, 354560, 354688, 354816, 354944, 355072, 355200, or 355328;
$N_{PG}=128$, $N_{CW}=526848$, and $N_F=531200$, 531456, 531712, 531840, 532224, 532480, 532608, 532864, 532992, or 533120;
$N_{PG}=128$, $N_{CW}=702464$, and $N_F=708096$, 708224, 708480, 708608, 708736, 708864, 708992, 709120, 709376, 709504, 709632, 709888, 710016, 710144, 710272, 710400, 710528, or 710656;
$N_{PG}=96$, $N_{CW}=172032$, and $N_F=173952$, 174048, 174240, 174336, 174432, or 174528;
$N_{PG}=96$, $N_{CW}=344064$, and $N_F=347904$, 348000, 348096, 348192, 348384, 348480, 348672, 348768, 348864, or 349056;
$N_{PG}=96$, $N_{CW}=516096$, and $N_F=521664$, 521856, 522144, 522240, 522720, 522816, 523008, 523200, 523296, 523392, 523488, 523584, or 523776;
$N_{PG}=96$, $N_{CW}=688128$, and $N_F=695520$, 695808, 695904, 696000, 696192, 696384, 696672, 696768, 696864, 696960, 697056, 697248, 697344, 697536, 697632, 697728, 698112, or 698400;
$N_{PG}=96$, $N_{CW}=150528$, and $N_F=152160$, 152256, 152352, 152448, 152544, 152640, or 152736;
$N_{PG}=96$, $N_{CW}=129024$, and $N_F=130464$, 130560, 130752, 130848, or 130944;
$N_{PG}=96$, $N_{CW}=107520$, and $N_F=108672$, 108768, 108864, 108960, or 109056;
$N_{PG}=96$, $N_{CW}=175616$, and $N_F=177504$, 177600, 177888, 177984, 178080, or 178176;
$N_{PG}=96$, $N_{CW}=351232$, and $N_F=355008$, 355104, 355200, 355488, 355680, 355776, 355872, 355968, 356160, 356352, or 356448;
$N_{PG}=96$, $N_{CW}=526848$, and $N_F=532416$, 532512, 532608, 532704, 532800, 532896, 532992, 533280, 533376, 533568, 533664, 533760, 533856, 533952, 534144, 534240, 534336, 534432, or 534528; and
$N_{PG}=96$, $N_{CW}=702464$, and $N_F=709920$, 710016, 710112, 710208, 710304, 710400, 710688, 710784, 710976, 711168, 711264, 711360, 711552, 711648, 711744, 711936, 712320, 712416, 712704, 712800, or 712896.

In some possible implementations, in a polarization direction, a modulation format of a symbol in the super-frame is QPSK, and $A=-1$ or 1; or in a polarization direction, a modulation format of a symbol in the super-frame is 16QAM, and

A=-1, 1, -3, 3, $-\sqrt{5}$, or $\sqrt{5}$; or in a polarization direction, a modulation format of a symbol in the super-frame is 64QAM, and A=-1, 1, -3, 3, $-\sqrt{21}$, $\sqrt{21}$, -5, 5, -7, or 7.

According to a fifth aspect, an embodiment of this application provides a data transmission apparatus at a receiving side. The data transmission apparatus includes a receiving unit and a processing unit. The receiving unit is configured to receive a super-frame including a plurality of sub-frames, where each sub-frame includes training symbols and pilot symbols, in a polarization direction, a quantity of training symbols in the sub-frame is $N_{TS}$, a quantity of pilot symbols in the sub-frame is $N_{PS}$, both $N_{TS}$ and $N_{PS}$ are integers greater than 1, $N_{TS}+N_{PS}$ is an odd number greater than or equal to 5, one symbol in the sub-frame serves as both a training symbol and a pilot symbol, each training symbol and each pilot symbol are one of four complex numbers: -A-Aj, -A+Aj, A-Aj, and A+Aj, A is a real number, and every 96 or 128 consecutive symbols in the sub-frame include a pilot symbol located at a fixed position. The processing unit is configured to decode the super-frame.

In some possible implementations, in one sub-frame, a training symbol sequence including a plurality of training symbols in a first polarization direction is different from a training symbol sequence including a plurality of training symbols in a second polarization direction, a pilot sequence including a plurality of pilot symbols in the first polarization direction is different from a pilot sequence that includes a plurality of pilot symbols in the second polarization direction. This prevents the issue where a receiver might be unable to distinguish between the two polarization directions during actual transmission. The first polarization direction and the second polarization direction are orthogonal to each other.

In some possible implementations, in one sub-frame and in a polarization direction, a sum of real parts of all symbols including all training symbols and all pilot symbols, totally $N_{TS}+N_{PS}-1$ symbols, is 0, and a sum of imaginary parts of all symbols including all training symbols and all pilot symbols, totally $N_{TS}+N_{PS}-1$ symbols, is 0. In this way, direct current balance (DC Balance) can be achieved, and this facilitates signal quality recovery at the receiver.

In some possible implementations, in one sub-frame and in a polarization direction, among the total of $N_{TS}+N_{PS}-1$ symbols including all training symbols and all pilot symbols, a quantity of symbols that are -A-Aj, -A+Aj, A-Aj, and A+Aj differ from each other by no more than 2. This effectively ensures a near-balance in the quantities of symbols across each polarization direction.

In some possible implementations, in one sub-frame and in two polarization directions, quantities of training symbols and pilot symbols valued at -A-Aj, quantities of training symbols and pilot symbols valued at -A+Aj, quantities of training symbols and pilot symbols valued at A-Aj, and quantities of training symbols and pilot symbols valued at A+Aj are the same. This effectively ensures a balance in the quantities of symbols across the two polarization directions.

In some possible implementations, in one sub-frame, $N_{TS}$ consecutive training symbols are arranged starting from the beginning of the sub-frame. In this way, a structure of the sub-frame is more orderly.

In some possible implementations, among the $N_{TS}$ consecutive training symbols, a symbol at the beginning serves as both a training symbol and a pilot symbol. In this way, pilot symbol arrangement is more conducive to standardization.

In some possible implementations, a sub-frame arranged at a 1st position in the super-frame is a first-type sub-frame, and the first-type sub-frame further includes frame alignment word symbols, reserved symbols, and symbols before framing. In this way, function implementation of

the first-type sub-frame is enriched. Each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, and $A_{FAW}$ is a real number. In the first-type sub-frame, training symbols are located before the frame alignment word symbols, the frame alignment word symbols are located before the reserved symbols, and the reserved symbols are located before the symbols before framing.

In some possible implementations, $A=A_{FAW}$.

In some possible implementations, the super-frame includes at least one second-type sub-frame, the second-type sub-frame further includes symbols before framing, and in the second-type sub-frame, training symbols are located before the symbols before framing.

In some possible implementations, a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;
$N_{PG}$=128, $N_{CW}$=344064, and $N_F$=346880, 347136, 347392, 347520, 347648, 347776, 347904, or 348160;
$N_{PG}$=128, $N_{CW}$=516096, and $N_F$=520192, 520320, 520448, 520576, 520704, 520832, 520960, 521088, 521472, 521600, 521856, or 522240;
$N_{PG}$=128, $N_{CW}$=688128, and $N_F$=693760, 693888, 694144, 694272, 694400, 694656, 694784, 694912, 695040, 695296, 695552, 695808, 696192, or 696320;
$N_{PG}$=128, $N_{CW}$=150528, and $N_F$=152064, 152192, or 152320;
$N_{PG}$=128, $N_{CW}$=129024, and $N_F$=130048, 130176, or 130560;
$N_{PG}$=128, $N_{CW}$=107520, and $N_F$=108416, 108544, 108672, or 108800;

$N_{PG}$=128, $N_{CW}$=175616, and $N_F$=177152, 177280, 177408, 177536, or 177664;

$N_{PG}$=128, $N_{CW}$=351232, and $N_F$=354304, 354432, 354560, 354688, 354816, 354944, 355072, 355200, or 355328;

$N_{PG}$=128, $N_{CW}$=526848, and $N_F$=531200, 531456, 531712, 531840, 532224, 532480, 532608, 532864, 532992, or 533120;

$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;

$N_{PG}$=96, $N_{CW}$=172032, and $N_F$=173952, 174048, 174240, 174336, 174432, or 174528;

$N_{PG}$=96, $N_{CW}$=344064, and $N_F$=347904, 348000, 348096, 348192, 348384, 348480, 348672, 348768, 348864, or 349056;

$N_{PG}$=96, $N_{CW}$=516096, and $N_F$=521664, 521856, 522144, 522240, 522720, 522816, 523008, 523200, 523296, 523392, 523488, 523584, or 523776;

$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;

$N_{PG}$=96, $N_{CW}$=150528, and $N_F$=152160, 152256, 152352, 152448, 152544, 152640, or 152736;

$N_{PG}$=96, $N_{CW}$=129024, and $N_F$=130464, 130560, 130752, 130848, or 130944;

$N_{PG}$=96, $N_{CW}$=107520, and $N_F$=108672, 108768, 108864, 108960, or 109056;

$N_{PG}$=96, $N_{CW}$=175616, and $N_F$=177504, 177600, 177888, 177984, 178080, or 178176;

$N_{PG}$=96, $N_{CW}$=351232, and $N_F$=355008, 355104, 355200, 355488, 355680, 355776, 355872, 355968, 356160, 356352, or 356448;

$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and

$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

In some possible implementations, in a polarization direction, a modulation format of a symbol in the super-frame is QPSK, and A=-1 or 1; or in a polarization direction, a modulation format of a symbol in the super-frame is 16QAM, and A=-1, 1, -3, 3, $-\sqrt{5}$, or $\sqrt{5}$; or in a polarization direction, a modulation format of a symbol in the super-frame is 64QAM, and A=-1, 1, -3, 3, $-\sqrt{21}$, $\sqrt{21}$,, -5, 5, -7, or 7.

According to a sixth aspect, an embodiment of this application provides a data transmission system. The data transmission system includes the data transmission apparatus that is described in any implementation of the fourth aspect and that is at a transmitting side and the data transmission apparatus that is described in any implementation of the fifth aspect and that is at a receiving side.

## BRIEF DESCRIPTION OF DRAWINGS

FIG. 1 is a diagram of a communication system to which an embodiment of this application is applied;

FIG. 2A to FIG. 2C are diagrams of framing processes according to an embodiment of this application;

FIG. 3 is a diagram of a data transmission method according to an embodiment of this application;

FIG. 4 is a diagram of a structure of a super-frame according to an embodiment of this application;

FIG. 5A and FIG. 5B are diagrams of structures of sub-frames according to an embodiment of this application;

FIG. 6A and FIG. 6B are diagrams of other structures of sub-frames according to an embodiment of this application;

FIG. 7A and FIG. 7B are diagrams of constellation diagrams in two polarization directions according to an embodiment of this application;

FIG. 8A and FIG. 8B are other diagrams of constellation diagrams in two polarization directions according to an embodiment of this application;

FIG. 9 is a diagram of analog symbol data streams according to an embodiment of this application;

FIG. 10A to FIG. 10C are diagrams of a first implementation of a super-frame and sub-frames according to an embodiment of this application;

FIG. 11A to FIG. 11C are diagrams of a second implementation of a super-frame and sub-frames according to an embodiment of this application;

FIG. 12A to FIG. 12C are diagrams of a third implementation of a super-frame and sub-frames according to an embodiment of this application;

FIG. 13A to FIG. 13C are diagrams of a fourth implementation of a super-frame and sub-frames according to an embodiment of this application;

FIG. 14A to FIG. 14C are diagrams of a fifth implementation of a super-frame and sub-frames according to an embodiment of this application;

FIG. 15A to FIG. 15C are diagrams of a sixth implementation of a super-frame and sub-frames according to an embodiment of this application;

FIG. 16A to FIG. 16C are diagrams of a seventh implementation of a super-frame and sub-frames according to an embodiment of this application;

FIG. 17A to FIG. 17C are diagrams of an eighth implementation of a super-frame and sub-frames according to an embodiment of this application;

FIG. 18A to FIG. 18C are diagrams of a ninth implementation of a super-frame and sub-frames according to an embodiment of this application;

FIG. 19A to FIG. 19C are diagrams of a tenth implementation of a super-frame and sub-frames according to an embodiment of this application;

FIG. 20A to FIG. 20C are diagrams of an eleventh implementation of a super-frame and sub-frames according to an embodiment of this application;

FIG. 21A to FIG. 21C are diagrams of a twelfth implementation of a super-frame and sub-frames according to an embodiment of this application;

FIG. 22A to FIG. 22C are diagrams of a thirteenth implementation of a super-frame and sub-frames according to an embodiment of this application;

FIG. 23A to FIG. 23C are diagrams of a fourteenth implementation of a super-frame and sub-frames according to an embodiment of this application;

FIG. 24A to FIG. 24C are diagrams of a fifteenth implementation of a super-frame and sub-frames according to an embodiment of this application;

FIG. 25A to FIG. 25C are diagrams of a sixteenth implementation of a super-frame and sub-frames according to an embodiment of this application;

FIG. 26 is a diagram of a structure of a data transmission apparatus at a transmitting side according to an embodiment of this application;

FIG. 27 is a diagram of a structure of a data transmission apparatus at a receiving side according to an embodiment of this application; and

FIG. 28 is a diagram of another structure of a data transmission apparatus according to an embodiment of this application.

## DESCRIPTION OF EMBODIMENTS

Embodiments of this application provide a data transmission method and a related apparatus. Every 96 or 128 consecutive symbols in a sub-frame include one pilot symbol. This approach increases the interval at which pilot symbols are inserted into the sub-frame, thereby reducing overhead. In addition, having one symbol that serves as both a training symbol and a pilot symbol simplifies the sub-frame structure.

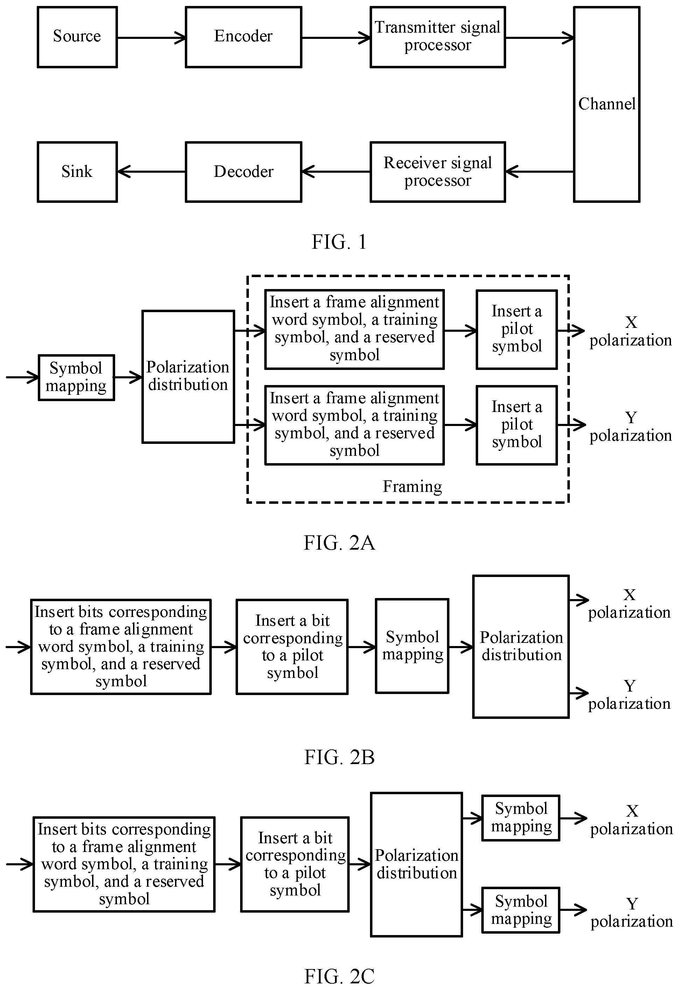

FIG. 1 is a diagram of a communication system to which an embodiment of this application is applied. As shown in FIG. 1, at a transmitter, a source provides a to-be-sent data stream. An encoder receives the data stream, encodes the data stream to obtain codeword information obtained by combining parity bits and information bits, and sends the codeword information to a transmitter signal processor for framing. After being transmitted through a channel, the codeword information reaches a receiver. After receiving a distorted signal generated due to noise or other impairments in the channel, the receiver sends the distorted signal to a receiver signal processor for operations such as dispersion compensation, alignment, and phase recovery, then decoding is performed by a decoder to recover original data, and the original data is sent to a sink. The data transmission method provided in embodiments of this application is applied to the transmitter signal processor shown in FIG. 1, and is a very important part in the communication system.

FIG. 2A to FIG. 2C are diagrams of framing processes according to an embodiment of this application. In a framing manner, as shown in FIG. 2A, symbol mapping (symbol mapping) is performed on a received data sequence, including but not limited to quadrature phase shift keying (Quadrature Phase Shift Keying, QPSK) and quadrature amplitude modulation (Quadrature Amplitude Modulation, QAM), and then, polarization symbol distribution (Polarization distribution) is performed to obtain a dual-polarization (Dual-polarization, DP) symbol, for example, DP-QPSK, DP-8QAM, DP-16QAM, DP-32QAM, and DP-64QAM symbols. A specific quantity of dual-polarization symbols are framed. These dual-polarization symbols before framing are referred to as symbols before framing, or may be referred to as payload (payload) symbols. The framing process is as follows: A frame alignment word sequence (Frame Alignment Word Sequence, FAW Sequence), a training symbol sequence (Training Sequence), a reserved symbol (Reserved symbol) sequence, and a pilot sequence (Pilot Sequence) are inserted in each of X and Y polarization directions, to obtain a to-be-sent dual-polarization symbol sequence, which is referred to as a super-frame (super-frame) or a multi-frame (multi-frame). The frame alignment word sequence is also referred to as a super-frame alignment word sequence (Super-Frame Alignment Word Sequence). It should be noted that the frame alignment word sequence may alternatively be used for link training, and in this case, the frame alignment word sequence may be considered as a training symbol sequence.

In embodiments of this application, one dual-polarization symbol may be represented by two symbols, where one symbol is located in the X polarization direction, the other symbol is located in the Y polarization direction, and each symbol may be represented by a complex number. For example, a symbol obtained through 16QAM modulation may be represented by any one of the following 16 complex numbers: $\pm 1 \pm 1j$, $\pm 1 \pm 3j$, $\pm 3 \pm 1j$, and $\pm 3 \pm 3j$, where j is a complex number unit, which may alternatively be represented by another letter, for example, i. It should be understood that, in some cases, a real part and an imaginary part are normalized. However, this does not change an underlying principle. Further, a sequence having N dual-polarization symbols may be completely represented by two complex number sequences whose lengths are N, where one complex number sequence represents a symbol on the X polarization, and the other complex number sequence represents a symbol on the Y polarization. Each complex number sequence whose length is N is represented by a real part sequence whose length is N and an imaginary part sequence whose length is N, where N is an integer greater than 1.

Generally, the received data sequence is an information and parity sequence obtained through forward error correction (Forward Error Correction, FEC), and a framing operation shown in FIG. 2A is an operation performed on a symbol. In another framing manner, as shown in FIG. 2B, for a received data sequence, bits corresponding to a frame alignment word sequence, a training symbol sequence, a reserved symbol sequence, and a pilot sequence are first inserted according to a used symbol mapping rule, symbol mapping is performed, and then polarization distribution is performed, to obtain a super-frame that is the same as that obtained through the operation in FIG. 2A. Similarly, in still another framing manner, as shown in FIG. 2C, for a received data sequence, bits that correspond to a frame alignment word sequence, a training symbol sequence, a reserved symbol sequence, and a pilot sequence are first inserted according to a used symbol mapping rule, polarization distribution is performed, and then symbol mapping is performed, to obtain a super-frame that is the same as that obtained through the operation in FIG. 2A. It should be understood that, in addition to the framing manners described in FIG. 2A to FIG. 2C, there may be another similar framing manner. Details are not described in this application.

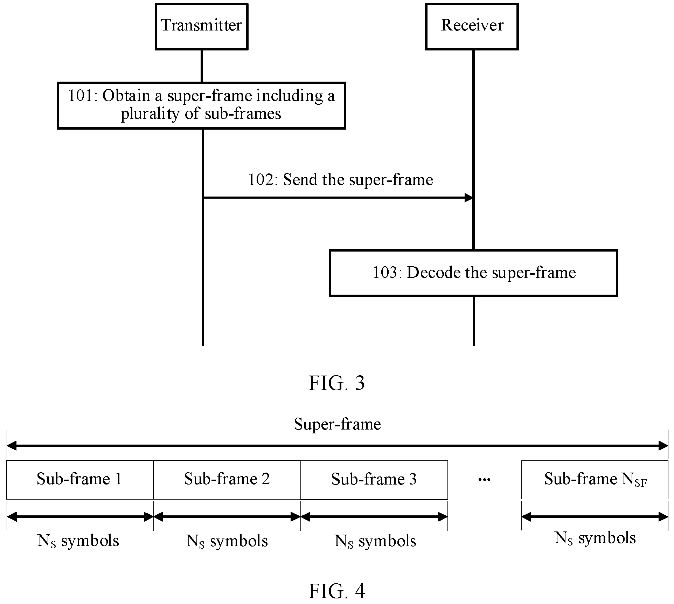

FIG. 3 is a diagram of a data transmission method according to an embodiment of this application. As shown in FIG. 3, the data transmission method includes the following steps.

101: A transmitter obtains a super-frame including a plurality of sub-frames.

FIG. 4 is a diagram of a structure of a super-frame according to an embodiment of this application. As shown in FIG. 4, the super-frame includes $N_{SF}$ sub-frames, and each sub-frame includes $N_S$ symbols. In this case, the super-frame includes $N_F$ symbols, where $N_F = N_{SF} \times N_S$, and both $N_S$ and $N_{SF}$ are integers greater than 1. The sub-frames in the super-frame are classified into two types, and are denoted as a first-type sub-frame and a second-type sub-frame herein. The following separately describes the two types of sub-frames.

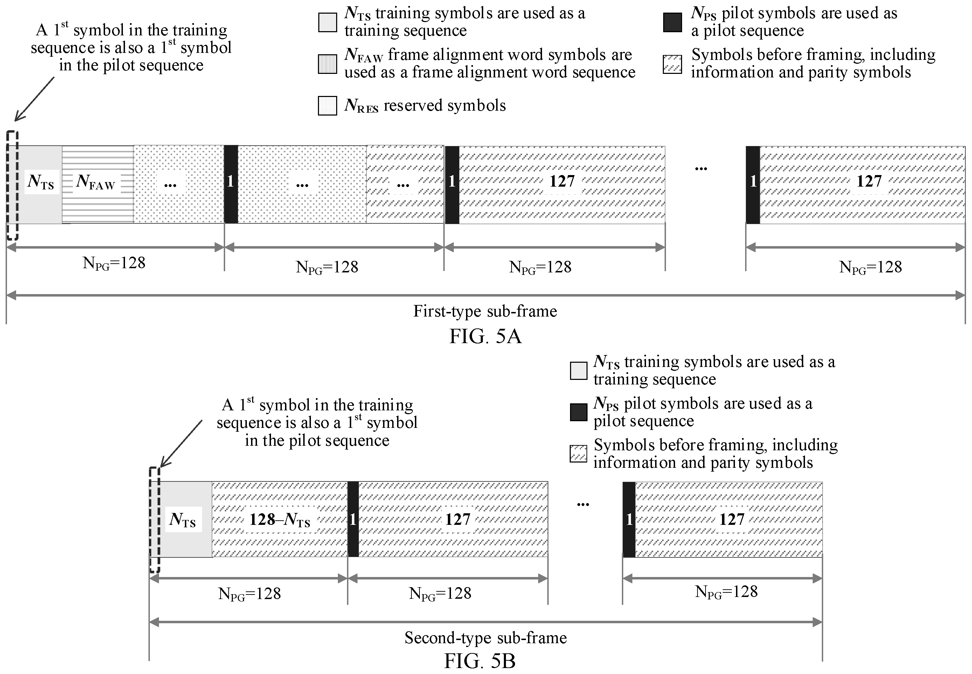

FIG. 5A and FIG. 5B are diagrams of structures of sub-frames according to an embodiment of this application. FIG. 5A shows a structure of the first-type sub-frame. The first-type sub-frame includes training symbols, pilot symbols, frame alignment word symbols, reserved symbols, and payload symbols. Generally, the first-type sub-frame is a sub-frame arranged at a $1^{st}$ position in the super-frame, and certainly, may alternatively be at another position in the super-frame. For example, the first-type sub-frame may alternatively be a sub-frame arranged at a last position in the super-frame. A sub-frame other than the first-type sub-frame in the super-frame is the second-type sub-frame. As shown in FIG. 5B, the second-type sub-frame is different from the first-type sub-frame, and the second-type sub-frame includes training symbols, pilot symbols, and payload symbols, but does not include frame alignment word symbols or reserved symbols.

For the first-type sub-frame and the second-type sub-frame, each sub-frame includes training symbols and pilot symbols. The training symbol is used for link training and/or sub-frame alignment, and the pilot symbol is used for carrier phase recovery. In a polarization direction, a quantity of training symbols in the sub-frame is denoted as $N_{TS}$, a quantity of pilot symbols in the sub-frame is denoted as $N_{PS}$, and both $N_{TS}$ and $N_{PS}$ are integers greater than 1. It should be noted that one symbol in the sub-frame serves as both a training symbol and a pilot symbol, that is, a symbol indicated by a dashed-line box in FIG. 5A and FIG. 5B. The $N_{TS}$ training symbols include the symbol indicated by the dashed-line box, and the $N_{PS}$ pilot symbols also include the symbol indicated by the dashed-line box. Further, $N_{TS} + N_{PS}$ is greater than or equal to 5, and $N_{TS} + N_{PS}$ is an odd number. Generally, the $N_{TS}$ consecutive training symbols are arranged starting from the beginning of the sub-frame, and among the $N_{TS}$ consecutive training symbols, a symbol at the beginning serves as both a training symbol and a pilot symbol. To be specific, a $1^{st}$ symbol in the sub-frame is a $1^{st}$ symbol in a training symbol sequence, and is also a $1^{st}$ symbol in a pilot sequence. In other words, a $1^{st}$ symbol in a training symbol sequence is also a $1^{st}$ symbol in a pilot sequence, and the $1^{st}$ symbol in the training symbol sequence has a same value as the $1^{st}$ symbol in the pilot sequence. Certainly, the symbol indicated by the dashed-line box in FIG. 5A and FIG. 5B may alternatively be any one of the $N_{TS}$ training symbols. This is not limited in this application.

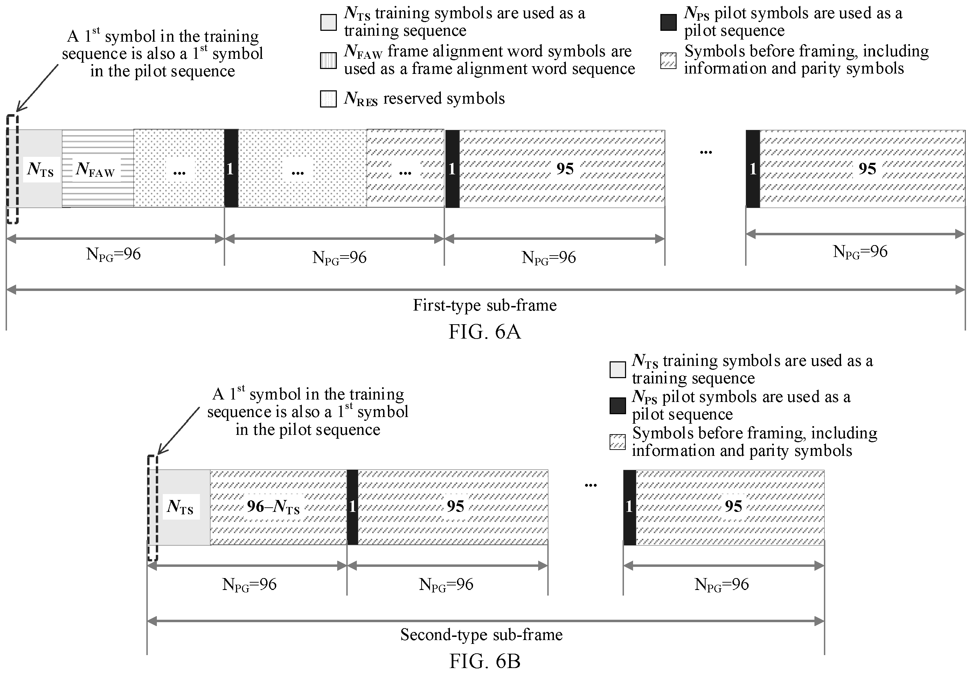

FIG. 6A and FIG. 6B are diagrams of other structures of sub-frames according to an embodiment of this application. For each sub-frame in the super-frame, every $N_{PG}$ consecutive symbols in the sub-frame include a pilot symbol located at a fixed position, where $N_{PG}$ is 96 or 128. To be specific, $N_{PG}$ shown in FIG. 5A and FIG. 5B is 128, and $N_{PG}$ shown in FIG. 6A and FIG. 6B is 96. It should be understood that, because the position of the pilot symbol in every $N_{PG}$

consecutive symbols is fixed, any two consecutive pilot symbols in the sub-frame are arranged at equal intervals. Generally, the pilot symbol is at the beginning in every $N_{PG}$ consecutive symbols. Certainly, the pilot symbol is at any position in every $N_{PG}$ consecutive symbols. This is not limited herein.

It should be noted that the frame alignment word symbol is used for alignment between super-frames. The frame alignment word symbol may be used for the alignment between the super-frames together with the training symbol, or may be used for implementing an alignment function together with the pilot symbol. It should be understood that frame alignment word symbols are consecutively arranged and may be close to the training symbols, as shown in FIG. 5A and FIG. 5B and FIG. 6A and FIG. 6B. In addition, there may also be one or more symbol intervals between the frame alignment word symbol and the training symbol. A plurality of frame alignment word symbols are usually followed by a plurality of reserved symbols, and may be reserved for future use. The reserved symbols need to be randomized, and may not be symbols in a constellation diagram of a used modulation format. Certainly, in some application, the reserved symbols may alternatively be symbols in the constellation diagram of the used modulation format. Alternatively, a part of the reserved symbols may be fixed for other purposes, for example, optical signal-to-noise ratio (optical signal-to-noise ratio, OSNR) measurement and end-to-end (E2E) delay measurement. Alternatively, the reserved symbols may be in one of a plurality of second-type sub-frames. This is not limited in this application. Remaining symbols are symbols before framing (that is, payload symbols) including information and parity symbols, where the pilot symbols do not overlap the reserved symbols, and the pilot symbols do not overlap the symbols before framing either. In other words, there is no symbol that serves as both a pilot symbol and a symbol before framing, and there is no symbol that serves as both a pilot symbol and a reserved symbol.

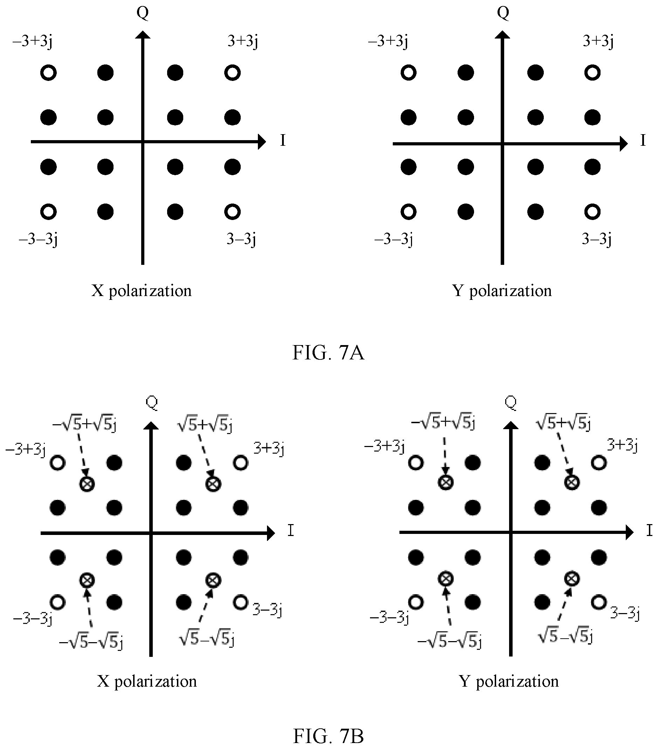

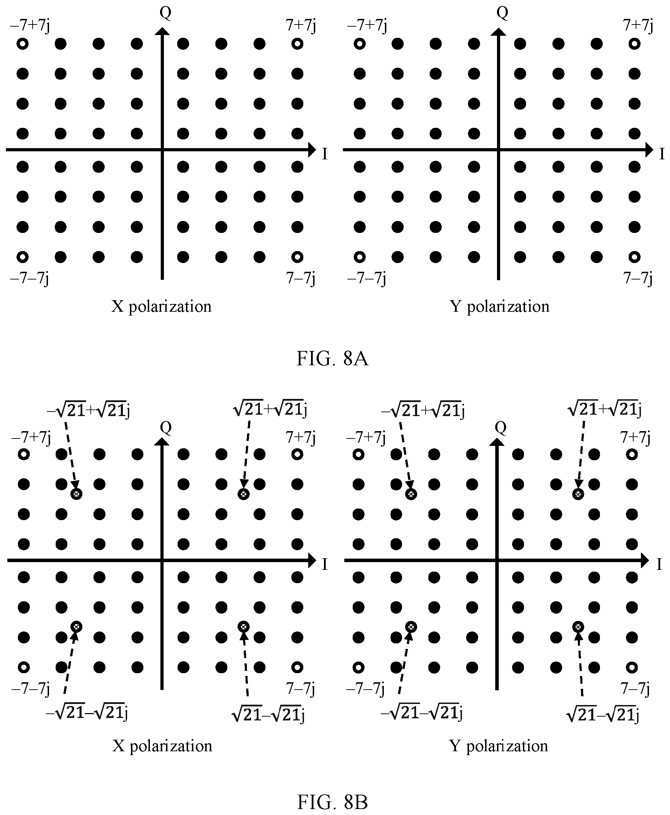

FIG. 7A and FIG. 7B are diagrams of constellation diagrams in two polarization directions according to an embodiment of this application. FIG. 8A and FIG. 8B are other diagrams of constellation diagrams in two polarization directions according to an embodiment of this application. It should be noted that each training symbol and each pilot symbol are one of four complex numbers: -A-Aj, -A+Aj, A-Aj, and A+Aj, where A is a real number. In embodiments of this application, a value of A is determined based on a modulation format used during symbol generation. In some actual application scenarios, -A-Aj, -A+Aj, A-Aj, and A+Aj correspond to symbols in a constellation diagram of the used modulation format. For example, if QPSK is used, there are four symbols, and A=1 or -1. Each training symbol may be represented by one of -1-1j, -1+1j, 1-1j, and 1+1j. In one sub-frame, training symbols represented by the four complex numbers all exist, and the same principle applies to pilot symbols. For another example, if 16QAM is used, there are 16 symbols, and A=1, -1, 3, or -3. Generally, both the training symbols and the pilot symbols are four outermost symbols in the constellation diagram, as indicated by hollow symbols in FIG. 7A. In this case, when A=3 or -3, each training symbol may be represented by one of -3-3j, -3+3j, 3-3j, and 3+3j. In one sub-frame, training symbols represented by the four complex numbers all exist, and the same principle applies to pilot symbols. Similarly, if 64QAM is used, there are 64 symbols, and A=1, -1, 3, -3, 5, -5, 7, or -7. Generally, for complex numbers representing training symbols and pilot symbols, A=5, -5, 7, or -7. Assuming that A=7 or -7, as indicated by hollow symbols in FIG. 8A, each training symbol may be represented by one of -7-7j, -7+7j, 7-7j, and 7+7j. In one sub-frame, training symbols represented by the four complex numbers all exist, and the same principle applies to pilot symbols. Alternatively, a higher-order modulation format may be used. Details are not described in this application. In an actual transmission process, this can lead to a lower symbol error probability and facilitate channel estimation.

It should be noted that each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, where $A_{FAW}$ is a real number. Here, $A_{FAW}$ may be equal to A, or may not be equal to A. Typically, $A_{FAW}$ is equal to A, which simplifies the framing operation when inserting training symbols, pilot symbols, and frame alignment word symbols.

It should be noted that a symbol in the constellation diagram may alternatively be compressed, and accordingly, the value of A is also correspondingly compressed. Taking 16QAM as an example, if power normalization is performed on 16 symbols in a 16QAM constellation diagram, the values are changed to $\{\pm\frac{1}{\sqrt{10}}\pm\frac{1}{\sqrt{10}}j, \pm\frac{1}{\sqrt{10}}\pm\frac{3}{\sqrt{10}}j, \pm\frac{3}{\sqrt{10}}\pm\frac{1}{\sqrt{10}}j, \pm\frac{3}{\sqrt{10}}\pm\frac{3}{\sqrt{10}}j\}$, and the value of A is $\frac{1}{\sqrt{10}}$, $-\frac{1}{\sqrt{10}}$, $\frac{3}{\sqrt{10}}$, or $-\frac{3}{\sqrt{10}}$. Taking 64QAM as an example, if power normalization is performed on 64 symbols in a 64QAM constellation diagram, the values are changed to $\{\pm\frac{1}{\sqrt{42}}\pm\frac{1}{\sqrt{42}}j, \pm\frac{1}{\sqrt{42}}\pm\frac{3}{\sqrt{42}}j, \pm\frac{1}{\sqrt{42}}\pm\frac{5}{\sqrt{42}}j, \pm\frac{1}{\sqrt{42}}\pm\frac{7}{\sqrt{42}}j, \pm\frac{3}{\sqrt{42}}\pm\frac{1}{\sqrt{42}}j, \pm\frac{5}{\sqrt{42}}\pm\frac{1}{\sqrt{42}}j, \pm\frac{7}{\sqrt{42}}\pm\frac{1}{\sqrt{42}}j,$

$\pm\frac{3}{\sqrt{42}}\pm\frac{3}{\sqrt{42}}j, \pm\frac{3}{\sqrt{42}}\pm\frac{5}{\sqrt{42}}j, \pm\frac{3}{\sqrt{42}}\pm\frac{7}{\sqrt{42}}j, \pm\frac{5}{\sqrt{42}}\pm\frac{3}{\sqrt{42}}j, \pm\frac{7}{\sqrt{42}}\pm\frac{3}{\sqrt{42}}j, \pm\frac{5}{\sqrt{42}}\pm\frac{5}{\sqrt{42}}j, \pm\frac{5}{\sqrt{42}}\pm$

$\frac{7}{\sqrt{42}}j, \pm\frac{7}{\sqrt{42}} \pm \frac{5}{\sqrt{42}}j, \pm\frac{7}{\sqrt{42}} \pm \frac{7}{\sqrt{42}}j\}$ , and the value of A is $\frac{1}{\sqrt{42}}, -\frac{1}{\sqrt{42}}, \frac{3}{\sqrt{42}}, -\frac{3}{\sqrt{42}}, \frac{5}{\sqrt{42}}, -\frac{5}{\sqrt{42}}$ ,

$-\frac{7}{\sqrt{42}}$ , or $\frac{7}{\sqrt{42}}$ . Other normalization methods may be used. This is not limited in this application.

It should be understood that, when the pilot symbols and the training symbols valued at -A-Aj, -A+Aj, A-Aj and A+Aj are four outermost symbols in the constellation diagram, the training symbols and the pilot symbols have high sensitivity (sensitivity) and a large peak-to-average power (peak-to-average power) ratio. When the pilot symbols and the training symbols valued at -A-Aj, -A+Aj, A-Aj and A+Aj are four innermost symbols in the constellation diagram, the training symbols and the pilot symbols have low noise (noise) and low sensitivity (sensitivity).

It should be noted that, in some actual application scenarios, the pilot symbols and the training symbols valued at -A-Aj, -A+Aj, A-Aj, and A+Aj may not be symbols in the constellation diagram of the used modulation format. They may be four symbols located in the region between the four outermost symbols and the four innermost symbols in the constellation diagram. In this case, the training symbols and the pilot symbols have fair noise and sensitivity, and a relatively low peak-to-average power ratio. Taking 16QAM as an example, values of the 16 symbols in a 16QAM constellation diagram are one of $\{\pm1 \pm 1j, \pm1 \pm 3j, \pm3 \pm 1j, \pm3 \pm 3j\}$, and the value of the real number A meets $1 \le A \le 3$. More specifically, as shown in FIG. 7B, the four outermost symbols in the constellation diagram are 3 + 3j, 3 - 3j, -3 + 3j, and -3 - 3j, and the four innermost symbols in the constellation diagram are 1 + 1j, 1 - 1j, -1 + 1j, and -1 - 1j. The values -A-Aj, -A+Aj, A-Aj, and A+Aj for the pilot symbols and the training symbols may be indicated by four symbols located in the region between the four outermost symbols and the four innermost symbols in the 16QAM constellation diagram. The specific value of the real number A may be selected based on an actual application scenario to achieve a good trade-off among the peak-to-average power ratio, noise, and sensitivity of the training symbols and the pilot symbols. For example, if the real number $A = \sqrt{5}$, the values of the pilot symbols and the training symbols are one of $\{-\sqrt{5} - \sqrt{5}j, -\sqrt{5} + \sqrt{5}j, \sqrt{5} - \sqrt{5}j, \sqrt{5} + \sqrt{5}j\}$. In addition, when power normalization is performed on the 16 symbols in the 16QAM constellation diagram, the values are one of $\{\pm\frac{1}{\sqrt{10}} \pm \frac{1}{\sqrt{10}}j, \pm\frac{1}{\sqrt{10}} \pm \frac{3}{\sqrt{10}}j, \pm\frac{3}{\sqrt{10}} \pm \frac{1}{\sqrt{10}}j, \pm\frac{3}{\sqrt{10}} \pm \frac{3}{\sqrt{10}}j\}$ , and the value of the real number A meets $\frac{1}{\sqrt{10}} \le A \le \frac{3}{\sqrt{10}}$ . For example, if the real number $A = \frac{\sqrt{2}}{2}$, the values of the pilot symbols and the training symbols are one of $\{-\frac{\sqrt{2}}{2} - \frac{\sqrt{2}}{2}j, -\frac{\sqrt{2}}{2} + \frac{\sqrt{2}}{2}j, \frac{\sqrt{2}}{2} - \frac{\sqrt{2}}{2}j, \frac{\sqrt{2}}{2} + \frac{\sqrt{2}}{2}j\}$ . Taking 64QAM as an example, values of the 64 symbols in a 64QAM constellation diagram are one of $\{\pm1 \pm 1j, \pm1 \pm 3j, \pm1 \pm 5j, \pm1 \pm 7j, \pm3 \pm 1j, \pm5 \pm 1j, \pm7 \pm 1j, \pm3 \pm 3j, \pm3 \pm 5j, \pm3 \pm 7j, \pm5 \pm 3j, \pm7 \pm 3j, \pm5 \pm 5j, \pm5 \pm 7j, \pm7 \pm 5j, \pm7 \pm 7j\}$, and the value of the real number A meets $1 \le A \le 7$. More specifically, as shown in FIG. 8B, the four outermost symbols in the constellation diagram are 7 + 7j, 7 - 7j, -7 + 7j, and -7 - 7j, and the four innermost symbols in the constellation diagram are 1 + 1j, 1 - 1j, -1 + 1j, and -1 - 1j. The values -A-Aj, -A+Aj, A-Aj, and A+Aj for the pilot symbols and the training symbols may be indicated by four symbols located in a region between the four outermost symbols and the four innermost symbols in the 64QAM constellation diagram. The specific value of the real number A may be selected based on an actual application scenario to achieve a good trade-off among peak-to-average power ratio, noise, and sensitivity of the training symbols and pilot symbols. For example, if the real number $A = \sqrt{21}$ , the values of the pilot symbols and the training symbols are one of $\{-\sqrt{21} - \sqrt{21}\,j, -\sqrt{21} + \sqrt{21}\,j, \sqrt{21} - \sqrt{21}\,j, \sqrt{21} + \sqrt{21}\,j\}$ . In addition, when power normalization is performed on the 64 symbols in the 64QAM constellation diagram, the values are one of

$\{\pm\frac{1}{\sqrt{42}} \pm \frac{1}{\sqrt{42}}j, \pm\frac{1}{\sqrt{42}} \pm \frac{3}{\sqrt{42}}j, \pm\frac{1}{\sqrt{42}} \pm \frac{5}{\sqrt{42}}j, \pm\frac{1}{\sqrt{42}} \pm \frac{7}{\sqrt{42}}j, \pm\frac{3}{\sqrt{42}} \pm \frac{1}{\sqrt{42}}j, \pm\frac{5}{\sqrt{42}} \pm \frac{1}{\sqrt{42}}j$ ,

$\pm\frac{7}{\sqrt{42}} \pm \frac{1}{\sqrt{42}}j, \pm\frac{3}{\sqrt{42}} \pm \frac{3}{\sqrt{42}}j, \pm\frac{3}{\sqrt{42}} \pm \frac{5}{\sqrt{42}}j, \pm\frac{3}{\sqrt{42}} \pm \frac{7}{\sqrt{42}}j, \pm\frac{5}{\sqrt{42}} \pm \frac{3}{\sqrt{42}}j, \pm\frac{7}{\sqrt{42}} \pm \frac{3}{\sqrt{42}}j, \pm\frac{5}{\sqrt{42}} \pm$

$\frac{5}{\sqrt{42}}j, \pm\frac{5}{\sqrt{42}} \pm \frac{7}{\sqrt{42}}j, \pm\frac{7}{\sqrt{42}} \pm \frac{5}{\sqrt{42}}j, \pm\frac{7}{\sqrt{42}} \pm \frac{7}{\sqrt{42}}j\}$ , and the value of the real number A meets $\frac{1}{\sqrt{42}} \le A \le \frac{7}{\sqrt{42}}$ . For example, if the real number $A = \frac{\sqrt{2}}{2}$ , the values of the pilot symbols and the training symbols are one of $\{-\frac{\sqrt{2}}{2} - \frac{\sqrt{2}}{2}j, -\frac{\sqrt{2}}{2} + \frac{\sqrt{2}}{2}j, \frac{\sqrt{2}}{2} - \frac{\sqrt{2}}{2}j, \frac{\sqrt{2}}{2} + \frac{\sqrt{2}}{2}j\}$ .

It should be noted that, in one sub-frame, a training symbol sequence including a plurality of training symbols in an X polarization direction is different from a training symbol sequence including a plurality of training symbols in a Y polarization direction, and a pilot sequence including a plurality of pilot symbols in the X polarization direction is different from a pilot sequence including a plurality of pilot symbols in the Y polarization direction. The X polarization direction and the Y polarization direction are orthogonal to each other. For example, the sequence formed by the training symbols in the X polarization direction are -A-Aj, -A-Aj, A+Aj, and A-Aj, and the sequence formed by the training symbols in the Y polarization direction are -A-Aj, -A-Aj, A+Aj, and A+Aj. The training symbol sequences in the two polarization directions differ by one symbol. This prevents the issue where a receiver might be unable to distinguish between the two polarization directions during actual transmission.

It should be noted that, in one sub-frame and in a polarization direction, a sum of real parts of all symbols including all training symbols and all pilot symbols, totally $N_{TS}+N_{PS}-1$ symbols, is 0, and a sum of imaginary parts of all symbols including all training symbols and all pilot symbols, totally $N_{TS}+N_{PS}-1$ symbols, is 0. This achieves direct current balance (DC Balance), which facilitates signal quality recovery at the receiver. It should be understood that, because the training symbol sequence and the pilot sequence in the sub-frame share one symbol, this shared symbol must be subtracted when combining the training symbol sequence and the pilot sequence to calculate a quantity of symbols, resulting in a total of $N_{TS}+N_{PS}-1$ symbols.

In a possible scenario, in one sub-frame and in a polarization direction, among the total of $N_{TS}+N_{PS}-1$ symbols including all training symbols and all pilot symbols, a quantity of symbols that are -A-Aj, -A+Aj, A-Aj, and A+Aj differ from each other by no more than 2. This effectively ensures a near-balance in the quantities of symbols across each polarization direction. For example, in a polarization direction, a quantity of symbols that are -A-Aj is $\lfloor(N_{TS}+N_{PS}-1)/4\rfloor$, a quantity of symbols that are -A+Aj is $(N_{TS}+N_{PS}-1)/2-\lfloor(N_{TS}+N_{PS}-1)/4\rfloor$, a quantity of symbols that are A-Aj is $(N_{TS}+N_{PS}-1)/2-\lfloor(N_{TS}+N_{PS}-1)/4\rfloor$, and a quantity of symbols that are A+Aj is $\lfloor(N_{TS}+N_{PS}-1)/4\rfloor$. For another example, in a polarization direction, a quantity of symbols that are -A-Aj is $(N_{TS}+N_{PS}-1)/2-\lfloor(N_{TS}+N_{PS}-1)/4\rfloor$, a quantity of symbols that are -A+Aj is $\lfloor(N_{TS}+N_{PS}-1)/4\rfloor$, a quantity of symbols that are A-Aj is $\lfloor(N_{TS}+N_{PS}-1)/4\rfloor$, and a quantity of symbols that are A+Aj is $(N_{TS}+N_{PS}-1)/2-\lfloor(N_{TS}+N_{PS}-1)/4\rfloor$. For still another example, in a polarization direction, a quantity of symbols that are -A-Aj is $\lfloor(N_{TS}+N_{PS}-1)/4\rfloor+1$, a quantity of symbols that are -A+Aj is $(N_{TS}+N_{PS}-1)/2-\lfloor(N_{TS}+N_{PS}-1)/4\rfloor-1$, a quantity of symbols that are A-Aj is $(N_{TS}+N_{PS}-1)/2-\lfloor(N_{TS}+N_{PS}-1)/4\rfloor-1$, and a quantity of symbols that are A+Aj is $\lfloor(N_{TS}+N_{PS}-1)/4\rfloor+1$. For yet another example, in a polarization direction, a quantity of symbols that are -A-Aj is $(N_{TS}+N_{PS}-1)/2-\lfloor(N_{TS}+N_{PS}-1)/4-1\rfloor$, a quantity of symbols that are -A+Aj is $\lfloor(N_{TS}+N_{PS}-1)/4\rfloor+1$, a quantity of symbols that are A-Aj is $\lfloor(N_{TS}+N_{PS}-1)/4\rfloor+1$, and a quantity of symbols that are A+Aj is $(N_{TS}+N_{PS}-1)/2-\lfloor(N_{TS}+N_{PS}-1)/4\rfloor-1$. $\lfloor a \rfloor$ represents rounding down a positive real number a.

In a possible scenario, in one sub-frame and in two polarization directions, quantities of training symbols and pilot symbols valued at -A-Aj, quantities of training symbols and pilot symbols valued at -A+Aj, quantities of training symbols and pilot symbols valued at A-Aj, and quantities of training symbols and pilot symbols valued at A+Aj are the same. This effectively ensures a balance in the quantities of symbols across the two polarization directions.

In an example, for training symbols and pilot symbols valued at -A-Aj among the $N_{TS}+N_{PS}-1$ symbols in the two polarization directions, quantities of such symbols are respectively $\lfloor(N_{TS}+N_{PS}-1)/4\rfloor$ and $(N_{TS}+N_{PS}-1)/2-\lfloor(N_{TS}+N_{PS}-1)/4\rfloor$, and a sum of the quantities is $(N_{TS}+N_{PS}-1)/2$; for training symbols and pilot symbols valued at -A+Aj among the $N_{TS}+N_{PS}-1$ symbols in the two polarization directions, quantities of such symbols are respectively $(N_{TS}+N_{PS}-1)/2-\lfloor(N_{TS}+N_{PS}-1)/4\rfloor$ and $\lfloor(N_{TS}+N_{PS}-1)/4\rfloor$, and a sum of the quantities is $(N_{TS}+N_{PS}-1)/2$; for training symbols and pilot symbols valued at A-Aj among the $N_{TS}+N_{PS}-1$ symbols in the two polarization directions, quantities of such symbols are respectively $(N_{TS}+N_{PS}-1)/2-\lfloor(N_{TS}+N_{PS}-1)/4\rfloor$ and $\lfloor(N_{TS}+N_{PS}-1)/4\rfloor$, and a sum of the quantities is $(N_{TS}+N_{PS}-1)/2$; and for training symbols and pilot symbols valued at A+Aj among the $N_{TS}+N_{PS}-1$ symbols in the two polarization directions, quantities of such symbols are respectively $\lfloor(N_{TS}+N_{PS}-1)/4\rfloor$ and $(N_{TS}+N_{PS}-1)/2-\lfloor(N_{TS}+N_{PS}-1)/4\rfloor$, and a sum of the quantities is $(N_{TS}+N_{PS}-1)/2$.

In another example, for training symbols and pilot symbols valued at -A-Aj among the $N_{TS}+N_{PS}$-1 symbols in the two polarization directions, quantities of such symbols are respectively $\lfloor(N_{TS}+N_{PS}-1)/4\rfloor+1$ and $(N_{TS}+N_{PS}-1)/2-\lfloor(N_{TS}+N_{PS}-1)/4\rfloor-1$, and a sum of the quantities is $(N_{TS}+N_{PS}$-1)/2; for training symbols and pilot symbols valued at -A+Aj among the $N_{TS}+N_{PS}$-1 symbols in the two polarization directions, quantities of such symbols are respectively $(N_{TS}+N_{PS}-1)/2-\lfloor(N_{TS}+N_{PS}-1)/4\rfloor-1$ and $\lfloor(N_{TS}+N_{PS}-1)/4\rfloor+1$, and a sum of the quantities is $(N_{TS}+N_{PS}$-1)/2; for training symbols and pilot symbols valued at A-Aj among the $N_{TS}+N_{PS}$-1 symbols in the two polarization directions, quantities of such symbols are respectively $(N_{TS}+N_{PS}-1)/2-\lfloor(N_{TS}+N_{PS}-1)/4\rfloor-1$ and $\lfloor(N_{TS}+N_{PS}-1)/4\rfloor+1$, and a sum of the quantities is $(N_{TS}+N_{PS}$-1)/2; and for training symbols and pilot symbols valued at A+Aj among the $N_{TS}+N_{PS}$-1 symbols in the two polarization directions, quantities of such symbols are respectively $\lfloor(N_{TS}+N_{PS}-1)/4\rfloor+1$ and $(N_{TS}+N_{PS}-1)/2-\lfloor(N_{TS}+N_{PS}-1)/4\rfloor-1$, and a sum of the quantities is $(N_{TS}+N_{PS}$-1)/2.

It should be noted that, in this embodiment of this application, a value of a quantity $N_{CW}$ of symbols before framing in the super-frame includes but is not limited to 172032, 344064, 516096, 688128, 150528, 129024, 107520, 175616, 351232, 526848, 702464, 172032, 344064, 516096, 688128, 150528, 129024, 107520, 175616, 351232, 526848, or 702464.

102: The transmitter sends the super-frame to the receiver.

The super-frame sent by the transmitter is transmitted to the receiver through a channel.

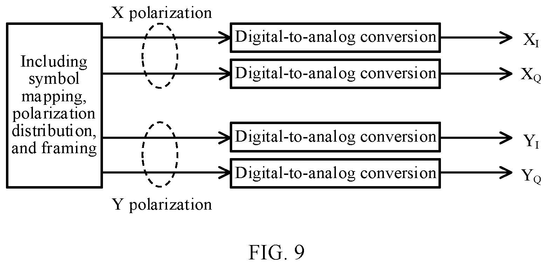

FIG. 9 is a diagram of analog symbol data streams according to an embodiment of this application. As shown in FIG. 9, in some possible scenarios, after digital-to-analog conversion (Digital-to-Analog Conversion, DAC) is performed on a super-frame symbol data stream, the super-frame symbol data stream may be considered as four analog symbol data streams, which are respectively denoted as $X_I$, $X_Q$, $Y_I$, and $Y_Q$. The analog symbol data stream $X_I$ and the analog symbol data stream $X_Q$ respectively correspond to a real part sequence data stream and an imaginary part sequence data stream in an X polarization direction. The analog symbol data stream $Y_I$ and the analog symbol data stream $Y_Q$ respectively correspond to a real part sequence data stream and an imaginary part sequence data stream in a Y polarization direction. It should be understood that the X polarization direction and the Y polarization direction (which may also be referred to as an H polarization direction and a V polarization direction) are two polarization directions that are orthogonal to each other. In each polarization direction, there are two phase channels orthogonal to each other: I (In-phase) and Q (Quadrature). I and Q respectively correspond to the real part sequence data stream and the imaginary part sequence data stream.

103: The receiver decodes the super-frame.

It should be understood that a specific operation after the receiver receives the super-frame is not described in detail in this application. For details, refer to the related descriptions in FIG. 1.

The following describes some specific examples of quantities of different parts of symbols in the super-frame provided in embodiments of this application.

(1) The quantity $N_{CW}$ of symbols before framing is 172032. For example, an open FEC (Open FEC, OFEC) encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 1. $N_{TS}+N_{PS}$ is an odd number, and $N_{FAW}$ is an even number. Correspondingly, $N_{RES}>0$, $OH = (N_F - N_{CW})/N_{CW}$, $N_F = N_S \times N_{SF}$, and $N_{TS,TOT} = N_{TS} \times N_{SF}$.

Parameters other than OH are all symbol quantities, which may be understood as a quantity of dual-polarization symbols, or may be understood as a quantity of symbols in a polarization direction. In addition, quantities of different symbols in two polarization directions are equal. For example, there are 10 training symbols in one polarization direction, and there are also 10 training symbols in the other polarization direction. On the whole, there are 10 dual-polarization training symbols. Subsequent tables may all be understood in this way. Details are not described in this application again.

A frame overhead of a super-frame architecture in cases listed in Table 1 is low: OH<1.20%. In Table 1, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 1.

Table 1

| Sequence number | $N_{SF}$ | $N_{Ps}$ | $N_S$ | $N_F$ | OH | $N_{TS,TOT}+N_{FAW}+N_{RES}$ |
|---|---|---|---|---|---|---|
| 1 | 136 | 10 | 1280 | 174080 | 1.19% | 688 |
| 2 | 113 | 12 | 1536 | 173568 | 0.89% | 180 |
| 3 | 97 | 14 | 1792 | 173824 | 1.04% | 434 |
| 4 | 85 | 16 | 2048 | 174080 | 1.19% | 688 |
| 5 | 80 | 17 | 2176 | 174080 | 1.19% | 688 |
| 6 | 68 | 20 | 2560 | 174080 | 1.19% | 688 |
| 7 | 59 | 23 | 2944 | 173696 | 0.97% | 307 |
| 8 | 40 | 34 | 4352 | 174080 | 1.19% | 688 |
| 9 | 34 | 40 | 5120 | 174080 | 1.19% | 688 |
| 10 | 23 | 59 | 7552 | 173696 | 0.97% | 307 |
| 11 | 20 | 68 | 8704 | 174080 | 1.19% | 688 |
| 12 | 17 | 80 | 10240 | 174080 | 1.19% | 688 |
| 13 | 16 | 85 | 10880 | 174080 | 1.19% | 688 |
| 14 | 14 | 97 | 12416 | 173824 | 1.04% | 434 |
| 15 | 12 | 113 | 14464 | 173568 | 0.89% | 180 |
| 16 | 10 | 136 | 17408 | 174080 | 1.19% | 688 |
| 17 | 9 | 151 | 19328 | 173952 | 1.12% | 561 |
| 18 | 8 | 170 | 21760 | 174080 | 1.19% | 688 |
| 19 | 7 | 194 | 24832 | 173824 | 1.04% | 434 |
| 20 | 6 | 226 | 28928 | 173568 | 0.89% | 180 |
| 21 | 5 | 271 | 34688 | 173440 | 0.82% | 53 |
| 22 | 5 | 272 | 34816 | 174080 | 1.19% | 688 |
| 23 | 4 | 339 | 43392 | 173568 | 0.89% | 180 |
| 24 | 4 | 340 | 43520 | 174080 | 1.19% | 688 |

Considering that the quantity $N_{TS}$ of training symbols is not greater than 11, Table 2 may be obtained with reference to Table 1. In this case, a frame overhead OH of a super-frame architecture in cases listed in Table 2 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 2.

Table 2

| Sequence number | $N_{SF}$ | $N_{PS}$ | $N_S$ | $N_F$ | OH | $N_{TS}$ | $N_{FAW}+N_{RES}$ |
|---|---|---|---|---|---|---|---|
| 1 | 80 | 17 | 2176 | 174080 | 1.19% | 2 | 608 |
| 2 | 59 | 23 | 2944 | 173696 | 0.97% | 2 | 248 |
| 3 | 23 | 59 | 7552 | 173696 | 0.97% | 2 | 284 |
| 4 | 16 | 85 | 10880 | 174080 | 1.19% | 2 | 672 |
| 5 | 14 | 97 | 12416 | 173824 | 1.04% | 2 | 420 |
| 6 | 12 | 113 | 14464 | 173568 | 0.89% | 2 | 168 |
| 7 | 9 | 151 | 19328 | 173952 | 1.12% | 2 | 552 |
| 8 | 5 | 271 | 34688 | 173440 | 0.82% | 2 | 48 |
| 9 | 4 | 339 | 43392 | 173568 | 0.89% | 2 | 176 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 10 | 136 | 10 | 1280 | 174080 | 1.19% | 3 | 416 |
| 11 | 97 | 14 | 1792 | 173824 | 1.04% | 3 | 240 |
| 12 | 85 | 16 | 2048 | 174080 | 1.19% | 3 | 518 |
| 13 | 68 | 20 | 2560 | 174080 | 1.19% | 3 | 552 |
| 14 | 40 | 34 | 4352 | 174080 | 1.19% | 3 | 608 |
| 15 | 34 | 40 | 5120 | 174080 | 1.19% | 3 | 620 |
| 16 | 20 | 68 | 8704 | 174080 | 1.19% | 3 | 648 |
| 17 | 17 | 80 | 10240 | 174080 | 1.19% | 3 | 654 |
| 18 | 10 | 136 | 17408 | 174080 | 1.19% | 3 | 668 |
| 19 | 8 | 170 | 21760 | 174080 | 1.19% | 3 | 672 |
| 20 | 7 | 194 | 24832 | 173824 | 1.04% | 3 | 420 |
| 21 | 6 | 226 | 28928 | 173568 | 0.89% | 3 | 168 |
| 22 | 5 | 272 | 34816 | 174080 | 1.19% | 3 | 678 |
| 23 | 4 | 340 | 43520 | 174080 | 1.19% | 3 | 680 |
| 24 | 80 | 17 | 2176 | 174080 | 1.19% | 4 | 448 |
| 25 | 59 | 23 | 2944 | 173696 | 0.97% | 4 | 130 |
| 26 | 23 | 59 | 7552 | 173696 | 0.97% | 4 | 238 |
| 27 | 16 | 85 | 10880 | 174080 | 1.19% | 4 | 640 |
| 28 | 14 | 97 | 12416 | 173824 | 1.04% | 4 | 392 |
| 29 | 12 | 113 | 14464 | 173568 | 0.89% | 4 | 144 |
| 30 | 9 | 151 | 19328 | 173952 | 1.12% | 4 | 534 |
| 31 | 5 | 271 | 34688 | 173440 | 0.82% | 4 | 38 |
| 32 | 4 | 339 | 43392 | 173568 | 0.89% | 4 | 168 |
| 33 | 136 | 10 | 1280 | 174080 | 1.19% | 5 | 144 |
| 34 | 97 | 14 | 1792 | 173824 | 1.04% | 5 | 46 |
| 35 | 85 | 16 | 2048 | 174080 | 1.19% | 5 | 348 |
| 36 | 68 | 20 | 2560 | 174080 | 1.19% | 5 | 416 |
| 37 | 40 | 34 | 4352 | 174080 | 1.19% | 5 | 528 |
| 38 | 34 | 40 | 5120 | 174080 | 1.19% | 5 | 552 |
| 39 | 20 | 68 | 8704 | 174080 | 1.19% | 5 | 608 |
| 40 | 17 | 80 | 10240 | 174080 | 1.19% | 5 | 620 |
| 41 | 10 | 136 | 17408 | 174080 | 1.19% | 5 | 648 |
| 42 | 8 | 170 | 21760 | 174080 | 1.19% | 5 | 656 |
| 43 | 7 | 194 | 24832 | 173824 | 1.04% | 5 | 406 |
| 44 | 6 | 226 | 28928 | 173568 | 0.89% | 5 | 156 |
| 45 | 5 | 272 | 34816 | 174080 | 1.19% | 5 | 668 |
| 46 | 4 | 340 | 43520 | 174080 | 1.19% | 5 | 672 |
| 47 | 80 | 17 | 2176 | 174080 | 1.19% | 6 | 288 |
| 48 | 23 | 59 | 7552 | 173696 | 0.97% | 6 | 192 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 49 | 16 | 85 | 10880 | 174080 | 1.19% | 6 | 608 |
| 50 | 14 | 97 | 12416 | 173824 | 1.04% | 6 | 364 |
| 51 | 12 | 113 | 14464 | 173568 | 0.89% | 6 | 120 |
| 52 | 9 | 151 | 19328 | 173952 | 1.12% | 6 | 516 |
| 53 | 5 | 271 | 34688 | 173440 | 0.82% | 6 | 28 |
| 54 | 4 | 339 | 43392 | 173568 | 0.89% | 6 | 160 |
| 55 | 85 | 16 | 2048 | 174080 | 1.19% | 7 | 178 |
| 56 | 68 | 20 | 2560 | 174080 | 1.19% | 7 | 280 |
| 57 | 40 | 34 | 4352 | 174080 | 1.19% | 7 | 448 |
| 58 | 34 | 40 | 5120 | 174080 | 1.19% | 7 | 484 |
| 59 | 20 | 68 | 8704 | 174080 | 1.19% | 7 | 568 |
| 60 | 17 | 80 | 10240 | 174080 | 1.19% | 7 | 586 |
| 61 | 10 | 136 | 17408 | 174080 | 1.19% | 7 | 628 |
| 62 | 8 | 170 | 21760 | 174080 | 1.19% | 7 | 640 |
| 63 | 7 | 194 | 24832 | 173824 | 1.04% | 7 | 392 |
| 64 | 6 | 226 | 28928 | 173568 | 0.89% | 7 | 144 |
| 65 | 5 | 272 | 34816 | 174080 | 1.19% | 7 | 658 |
| 66 | 4 | 340 | 43520 | 174080 | 1.19% | 7 | 664 |
| 67 | 80 | 17 | 2176 | 174080 | 1.19% | 8 | 128 |
| 68 | 23 | 59 | 7552 | 173696 | 0.97% | 8 | 146 |
| 69 | 16 | 85 | 10880 | 174080 | 1.19% | 8 | 576 |
| 70 | 14 | 97 | 12416 | 173824 | 1.04% | 8 | 336 |
| 71 | 12 | 113 | 14464 | 173568 | 0.89% | 8 | 96 |
| 72 | 9 | 151 | 19328 | 173952 | 1.12% | 8 | 498 |
| 73 | 4 | 339 | 43392 | 173568 | 0.89% | 8 | 152 |
| 74 | 68 | 20 | 2560 | 174080 | 1.19% | 9 | 144 |
| 75 | 40 | 34 | 4352 | 174080 | 1.19% | 9 | 368 |
| 76 | 34 | 40 | 5120 | 174080 | 1.19% | 9 | 416 |
| 77 | 20 | 68 | 8704 | 174080 | 1.19% | 9 | 528 |
| 78 | 17 | 80 | 10240 | 174080 | 1.19% | 9 | 552 |
| 79 | 10 | 136 | 17408 | 174080 | 1.19% | 9 | 608 |
| 80 | 8 | 170 | 21760 | 174080 | 1.19% | 9 | 624 |
| 81 | 7 | 194 | 24832 | 173824 | 1.04% | 9 | 378 |
| 82 | 6 | 226 | 28928 | 173568 | 0.89% | 9 | 132 |
| 83 | 5 | 272 | 34816 | 174080 | 1.19% | 9 | 648 |
| 84 | 4 | 340 | 43520 | 174080 | 1.19% | 9 | 656 |
| 85 | 23 | 59 | 7552 | 173696 | 0.97% | 10 | 100 |
| 86 | 16 | 85 | 10880 | 174080 | 1.19% | 10 | 544 |
| 87 | 14 | 97 | 12416 | 173824 | 1.04% | 10 | 308 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 88 | 12 | 113 | 14464 | 173568 | 0.89% | 10 | 72 |
| 89 | 9 | 151 | 19328 | 173952 | 1.12% | 10 | 480 |
| 90 | 4 | 339 | 43392 | 173568 | 0.89% | 10 | 144 |
| 91 | 40 | 34 | 4352 | 174080 | 1.19% | 11 | 288 |
| 92 | 34 | 40 | 5120 | 174080 | 1.19% | 11 | 348 |
| 93 | 20 | 68 | 8704 | 174080 | 1.19% | 11 | 488 |
| 94 | 17 | 80 | 10240 | 174080 | 1.19% | 11 | 518 |
| 95 | 10 | 136 | 17408 | 174080 | 1.19% | 11 | 588 |
| 96 | 8 | 170 | 21760 | 174080 | 1.19% | 11 | 608 |
| 97 | 7 | 194 | 24832 | 173824 | 1.04% | 11 | 364 |
| 98 | 6 | 226 | 28928 | 173568 | 0.89% | 11 | 120 |
| 99 | 5 | 272 | 34816 | 174080 | 1.19% | 11 | 638 |
| 100 | 4 | 340 | 43520 | 174080 | 1.19% | 11 | 648 |

In some specific applications, a bus width (bus width) used in a specific DSP implementation of the receiver and the transmitter is 192 or 128. For ease of hardware implementation, the quantity $N_F$ of symbols in the super-frame needs to be an integer multiple of 192 and 128. It should be understood that, when $N_{PG}=128$, to be specific, when a 1st symbol in every 128 symbols in each sub-frame is used as a pilot symbol, both the quantity $N_F$ of symbols in the super-frame and the quantity $N_S$ of symbols in each sub-frame are definitely integer multiples of 128. Therefore, when the 1st symbol in every 128 symbols is used as the pilot symbol in each sub-frame, it only needs to be considered that the quantity $N_F$ of symbols in the super-frame is an integer multiple of 192. For subsequent tables in which a 1st symbol in every 128 symbols in each sub-frame is used as a pilot symbol, such understanding applies. Details are not described in this application. Considering that the quantity $N_F$ of symbols in the super-frame needs to be an integer multiple of 192, Table 3 may be obtained with reference to Table 2. In this case, a frame overhead OH in cases listed in Table 3 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 3.

Table 3

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 12 | 113 | 14464 | 173568 | 0.89% | 2 | 168 |
| 2 | 9 | 151 | 19328 | 173952 | 1.12% | 2 | 552 |
| 3 | 4 | 339 | 43392 | 173568 | 0.89% | 2 | 176 |
| 4 | 6 | 226 | 28928 | 173568 | 0.89% | 3 | 168 |
| 5 | 12 | 113 | 14464 | 173568 | 0.89% | 4 | 144 |
| 6 | 9 | 151 | 19328 | 173952 | 1.12% | 4 | 534 |
| 7 | 4 | 339 | 43392 | 173568 | 0.89% | 4 | 168 |
| 8 | 6 | 226 | 28928 | 173568 | 0.89% | 5 | 156 |
| 9 | 12 | 113 | 14464 | 173568 | 0.89% | 6 | 120 |
| 10 | 9 | 151 | 19328 | 173952 | 1.12% | 6 | 516 |
| 11 | 4 | 339 | 43392 | 173568 | 0.89% | 6 | 160 |
| 12 | 6 | 226 | 28928 | 173568 | 0.89% | 7 | 144 |
| 13 | 12 | 113 | 14464 | 173568 | 0.89% | 8 | 96 |
| 14 | 9 | 151 | 19328 | 173952 | 1.12% | 8 | 498 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 15 | 4 | 339 | 43392 | 173568 | 0.89% | 8 | 152 |
| 16 | 6 | 226 | 28928 | 173568 | 0.89% | 9 | 132 |
| 17 | 12 | 113 | 14464 | 173568 | 0.89% | 10 | 72 |
| 18 | 9 | 151 | 19328 | 173952 | 1.12% | 10 | 480 |
| 19 | 4 | 339 | 43392 | 173568 | 0.89% | 10 | 144 |
| 20 | 6 | 226 | 28928 | 173568 | 0.89% | 11 | 120 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 4 may be obtained with reference to Table 3. In this case, a frame overhead OH in cases listed in Table 4 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 4

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 4 | 339 | 43392 | 173568 | 0.89% | 2 | 176 |
| 2 | 4 | 339 | 43392 | 173568 | 0.89% | 4 | 168 |
| 3 | 4 | 339 | 43392 | 173568 | 0.89% | 6 | 160 |
| 4 | 4 | 339 | 43392 | 173568 | 0.89% | 8 | 152 |
| 5 | 4 | 339 | 43392 | 173568 | 0.89% | 10 | 144 |

(2) The quantity $N_{CW}$ of symbols before framing is 344064. For example, an open FEC (Open FEC, OFEC) encoding scheme with an encoding overhead of approximately 15.3% is used, or another encoding scheme may be used. A 1st symbol in every $N_{PG}=128$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 5. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 5 is low: OH<1.20%. In Table 5, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 5.

Table 5

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 271 | 10 | 1280 | 346880 | 0.82% | 106 |
| 2 | 247 | 11 | 1408 | 347776 | 1.08% | 995 |
| 3 | 226 | 12 | 1536 | 347136 | 0.89% | 360 |
| 4 | 209 | 13 | 1664 | 347776 | 1.08% | 995 |
| 5 | 194 | 14 | 1792 | 347648 | 1.04% | 868 |
| 6 | 181 | 15 | 1920 | 347520 | 1.00% | 741 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 7 | 170 | 16 | 2048 | 348160 | 1.19% | 1376 |
| 8 | 160 | 17 | 2176 | 348160 | 1.19% | 1376 |
| 9 | 151 | 18 | 2304 | 347904 | 1.12% | 1122 |
| 10 | 143 | 19 | 2432 | 347776 | 1.08% | 995 |
| 11 | 136 | 20 | 2560 | 348160 | 1.19% | 1376 |
| 12 | 118 | 23 | 2944 | 347392 | 0.97% | 614 |
| 13 | 113 | 24 | 3072 | 347136 | 0.89% | 360 |
| 14 | 97 | 28 | 3584 | 347648 | 1.04% | 868 |
| 15 | 85 | 32 | 4096 | 348160 | 1.19% | 1376 |
| 16 | 80 | 34 | 4352 | 348160 | 1.19% | 1376 |
| 17 | 68 | 40 | 5120 | 348160 | 1.19% | 1376 |
| 18 | 59 | 46 | 5888 | 347392 | 0.97% | 614 |
| 19 | 46 | 59 | 7552 | 347392 | 0.97% | 614 |
| 20 | 40 | 68 | 8704 | 348160 | 1.19% | 1376 |
| 21 | 34 | 80 | 10240 | 348160 | 1.19% | 1376 |
| 22 | 32 | 85 | 10880 | 348160 | 1.19% | 1376 |
| 23 | 28 | 97 | 12416 | 347648 | 1.04% | 868 |
| 24 | 24 | 113 | 14464 | 347136 | 0.89% | 360 |
| 25 | 23 | 118 | 15104 | 347392 | 0.97% | 614 |
| 26 | 20 | 136 | 17408 | 348160 | 1.19% | 1376 |
| 27 | 19 | 143 | 18304 | 347776 | 1.08% | 995 |
| 28 | 18 | 151 | 19328 | 347904 | 1.12% | 1122 |
| 29 | 17 | 160 | 20480 | 348160 | 1.19% | 1376 |
| 30 | 16 | 170 | 21760 | 348160 | 1.19% | 1376 |
| 31 | 15 | 181 | 23168 | 347520 | 1.00% | 741 |
| 32 | 14 | 194 | 24832 | 347648 | 1.04% | 868 |
| 33 | 13 | 209 | 26752 | 347776 | 1.08% | 995 |
| 34 | 12 | 226 | 28928 | 347136 | 0.89% | 360 |
| 35 | 11 | 247 | 31616 | 347776 | 1.08% | 995 |
| 36 | 10 | 271 | 34688 | 346880 | 0.82% | 106 |
| 37 | 10 | 272 | 34816 | 348160 | 1.19% | 1376 |
| 38 | 9 | 302 | 38656 | 347904 | 1.12% | 1122 |
| 39 | 8 | 339 | 43392 | 347136 | 0.89% | 360 |
| 40 | 8 | 340 | 43520 | 348160 | 1.19% | 1376 |
| 41 | 7 | 388 | 49664 | 347648 | 1.04% | 868 |

Considering that the quantity $N_{TS}$ of training symbols is not greater than 11, Table 6 may be obtained with reference to Table 5. In this case, a frame overhead OH of a super-frame architecture in cases listed in Table 6 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 6.

Table 6

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 247 | 11 | 1408 | 347776 | 1.08% | 2 | 748 |
| 2 | 209 | 13 | 1664 | 347776 | 1.08% | 2 | 786 |
| 3 | 181 | 15 | 1920 | 347520 | 1.00% | 2 | 560 |
| 4 | 160 | 17 | 2176 | 348160 | 1.19% | 2 | 1216 |
| 5 | 143 | 19 | 2432 | 347776 | 1.08% | 2 | 852 |
| 6 | 118 | 23 | 2944 | 347392 | 0.97% | 2 | 496 |
| 7 | 46 | 59 | 7552 | 347392 | 0.97% | 2 | 568 |
| 8 | 32 | 85 | 10880 | 348160 | 1.19% | 2 | 1344 |
| 9 | 28 | 97 | 12416 | 347648 | 1.04% | 2 | 840 |
| 10 | 24 | 113 | 14464 | 347136 | 0.89% | 2 | 336 |
| 11 | 19 | 143 | 18304 | 347776 | 1.08% | 2 | 976 |
| 12 | 18 | 151 | 19328 | 347904 | 1.12% | 2 | 1104 |
| 13 | 15 | 181 | 23168 | 347520 | 1.00% | 2 | 726 |
| 14 | 13 | 209 | 26752 | 347776 | 1.08% | 2 | 982 |
| 15 | 11 | 247 | 31616 | 347776 | 1.08% | 2 | 984 |
| 16 | 10 | 271 | 34688 | 346880 | 0.82% | 2 | 96 |
| 17 | 8 | 339 | 43392 | 347136 | 0.89% | 2 | 352 |
| 18 | 272 | 10 | 1280 | 348160 | 1.19% | 3 | 832 |
| 19 | 194 | 14 | 1792 | 347648 | 1.04% | 3 | 480 |
| 20 | 170 | 16 | 2048 | 348160 | 1.19% | 3 | 1036 |
| 21 | 151 | 18 | 2304 | 347904 | 1.12% | 3 | 820 |
| 22 | 136 | 20 | 2560 | 348160 | 1.19% | 3 | 1104 |
| 23 | 113 | 24 | 3072 | 347136 | 0.89% | 3 | 134 |
| 24 | 97 | 28 | 3584 | 347648 | 1.04% | 3 | 674 |
| 25 | 85 | 32 | 4096 | 348160 | 1.19% | 3 | 1206 |
| 26 | 80 | 34 | 4352 | 348160 | 1.19% | 3 | 1216 |
| 27 | 68 | 40 | 5120 | 348160 | 1.19% | 3 | 1240 |
| 28 | 59 | 46 | 5888 | 347392 | 0.97% | 3 | 496 |
| 29 | 40 | 68 | 8704 | 348160 | 1.19% | 3 | 1296 |
| 30 | 34 | 80 | 10240 | 348160 | 1.19% | 3 | 1308 |
| 31 | 23 | 118 | 15104 | 347392 | 0.97% | 3 | 568 |
| 32 | 20 | 136 | 17408 | 348160 | 1.19% | 3 | 1336 |
| 33 | 17 | 160 | 20480 | 348160 | 1.19% | 3 | 1342 |
| 34 | 16 | 170 | 21760 | 348160 | 1.19% | 3 | 1344 |
| 35 | 14 | 194 | 24832 | 347648 | 1.04% | 3 | 840 |
| 36 | 12 | 226 | 28928 | 347136 | 0.89% | 3 | 336 |
| 37 | 10 | 272 | 34816 | 348160 | 1.19% | 3 | 1356 |
| 38 | 9 | 302 | 38656 | 347904 | 1.12% | 3 | 1104 |
| 39 | 8 | 340 | 43520 | 348160 | 1.19% | 3 | 1360 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 40 | 7 | 388 | 49664 | 347648 | 1.04% | 3 | 854 |
| 41 | 247 | 11 | 1408 | 347776 | 1.08% | 4 | 254 |
| 42 | 209 | 13 | 1664 | 347776 | 1.08% | 4 | 368 |
| 43 | 181 | 15 | 1920 | 347520 | 1.00% | 4 | 198 |
| 44 | 160 | 17 | 2176 | 348160 | 1.19% | 4 | 896 |
| 45 | 143 | 19 | 2432 | 347776 | 1.08% | 4 | 566 |
| 46 | 118 | 23 | 2944 | 347392 | 0.97% | 4 | 260 |
| 47 | 46 | 59 | 7552 | 347392 | 0.97% | 4 | 476 |
| 48 | 32 | 85 | 10880 | 348160 | 1.19% | 4 | 1280 |
| 49 | 28 | 97 | 12416 | 347648 | 1.04% | 4 | 784 |
| 50 | 24 | 113 | 14464 | 347136 | 0.89% | 4 | 288 |
| 51 | 19 | 143 | 18304 | 347776 | 1.08% | 4 | 938 |
| 52 | 18 | 151 | 19328 | 347904 | 1.12% | 4 | 1068 |
| 53 | 15 | 181 | 23168 | 347520 | 1.00% | 4 | 696 |
| 54 | 13 | 209 | 26752 | 347776 | 1.08% | 4 | 956 |
| 55 | 11 | 247 | 31616 | 347776 | 1.08% | 4 | 962 |
| 56 | 10 | 271 | 34688 | 346880 | 0.82% | 4 | 76 |
| 57 | 8 | 339 | 43392 | 347136 | 0.89% | 4 | 336 |
| 58 | 272 | 10 | 1280 | 348160 | 1.19% | 5 | 288 |
| 59 | 194 | 14 | 1792 | 347648 | 1.04% | 5 | 92 |
| 60 | 170 | 16 | 2048 | 348160 | 1.19% | 5 | 696 |
| 61 | 151 | 18 | 2304 | 347904 | 1.12% | 5 | 518 |
| 62 | 136 | 20 | 2560 | 348160 | 1.19% | 5 | 832 |
| 63 | 97 | 28 | 3584 | 347648 | 1.04% | 5 | 480 |
| 64 | 85 | 32 | 4096 | 348160 | 1.19% | 5 | 1036 |
| 65 | 80 | 34 | 4352 | 348160 | 1.19% | 5 | 1056 |
| 66 | 68 | 40 | 5120 | 348160 | 1.19% | 5 | 1104 |
| 67 | 59 | 46 | 5888 | 347392 | 0.97% | 5 | 378 |
| 68 | 40 | 68 | 8704 | 348160 | 1.19% | 5 | 1216 |
| 69 | 34 | 80 | 10240 | 348160 | 1.19% | 5 | 1240 |
| 70 | 23 | 118 | 15104 | 347392 | 0.97% | 5 | 522 |
| 71 | 20 | 136 | 17408 | 348160 | 1.19% | 5 | 1296 |
| 72 | 17 | 160 | 20480 | 348160 | 1.19% | 5 | 1308 |
| 73 | 16 | 170 | 21760 | 348160 | 1.19% | 5 | 1312 |
| 74 | 14 | 194 | 24832 | 347648 | 1.04% | 5 | 812 |
| 75 | 12 | 226 | 28928 | 347136 | 0.89% | 5 | 312 |
| 76 | 10 | 272 | 34816 | 348160 | 1.19% | 5 | 1336 |
| 77 | 9 | 302 | 38656 | 347904 | 1.12% | 5 | 1086 |
| 78 | 8 | 340 | 43520 | 348160 | 1.19% | 5 | 1344 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 79 | 7 | 388 | 49664 | 347648 | 1.04% | 5 | 840 |
| 80 | 160 | 17 | 2176 | 348160 | 1.19% | 6 | 576 |
| 81 | 143 | 19 | 2432 | 347776 | 1.08% | 6 | 280 |
| 82 | 118 | 23 | 2944 | 347392 | 0.97% | 6 | 24 |
| 83 | 46 | 59 | 7552 | 347392 | 0.97% | 6 | 384 |
| 84 | 32 | 85 | 10880 | 348160 | 1.19% | 6 | 1216 |
| 85 | 28 | 97 | 12416 | 347648 | 1.04% | 6 | 728 |
| 86 | 24 | 113 | 14464 | 347136 | 0.89% | 6 | 240 |
| 87 | 19 | 143 | 18304 | 347776 | 1.08% | 6 | 900 |
| 88 | 18 | 151 | 19328 | 347904 | 1.12% | 6 | 1032 |
| 89 | 15 | 181 | 23168 | 347520 | 1.00% | 6 | 666 |
| 90 | 13 | 209 | 26752 | 347776 | 1.08% | 6 | 930 |
| 91 | 11 | 247 | 31616 | 347776 | 1.08% | 6 | 940 |
| 92 | 10 | 271 | 34688 | 346880 | 0.82% | 6 | 56 |
| 93 | 8 | 339 | 43392 | 347136 | 0.89% | 6 | 320 |
| 94 | 170 | 16 | 2048 | 348160 | 1.19% | 7 | 356 |
| 95 | 151 | 18 | 2304 | 347904 | 1.12% | 7 | 216 |
| 96 | 136 | 20 | 2560 | 348160 | 1.19% | 7 | 560 |
| 97 | 97 | 28 | 3584 | 347648 | 1.04% | 7 | 286 |
| 98 | 85 | 32 | 4096 | 348160 | 1.19% | 7 | 866 |
| 99 | 80 | 34 | 4352 | 348160 | 1.19% | 7 | 896 |
| 100 | 68 | 40 | 5120 | 348160 | 1.19% | 7 | 968 |
| 101 | 59 | 46 | 5888 | 347392 | 0.97% | 7 | 260 |
| 102 | 40 | 68 | 8704 | 348160 | 1.19% | 7 | 1136 |
| 103 | 34 | 80 | 10240 | 348160 | 1.19% | 7 | 1172 |
| 104 | 23 | 118 | 15104 | 347392 | 0.97% | 7 | 476 |
| 105 | 20 | 136 | 17408 | 348160 | 1.19% | 7 | 1256 |
| 106 | 17 | 160 | 20480 | 348160 | 1.19% | 7 | 1274 |
| 107 | 16 | 170 | 21760 | 348160 | 1.19% | 7 | 1280 |
| 108 | 14 | 194 | 24832 | 347648 | 1.04% | 7 | 784 |
| 109 | 12 | 226 | 28928 | 347136 | 0.89% | 7 | 288 |
| 110 | 10 | 272 | 34816 | 348160 | 1.19% | 7 | 1316 |
| 111 | 9 | 302 | 38656 | 347904 | 1.12% | 7 | 1068 |
| 112 | 8 | 340 | 43520 | 348160 | 1.19% | 7 | 1328 |
| 113 | 7 | 388 | 49664 | 347648 | 1.04% | 7 | 826 |
| 114 | 160 | 17 | 2176 | 348160 | 1.19% | 8 | 256 |
| 115 | 46 | 59 | 7552 | 347392 | 0.97% | 8 | 292 |
| 116 | 32 | 85 | 10880 | 348160 | 1.19% | 8 | 1152 |
| 117 | 28 | 97 | 12416 | 347648 | 1.04% | 8 | 672 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 118 | 24 | 113 | 14464 | 347136 | 0.89% | 8 | 192 |
| 119 | 19 | 143 | 18304 | 347776 | 1.08% | 8 | 862 |
| 120 | 18 | 151 | 19328 | 347904 | 1.12% | 8 | 996 |
| 121 | 15 | 181 | 23168 | 347520 | 1.00% | 8 | 636 |
| 122 | 13 | 209 | 26752 | 347776 | 1.08% | 8 | 904 |
| 123 | 11 | 247 | 31616 | 347776 | 1.08% | 8 | 918 |
| 124 | 10 | 271 | 34688 | 346880 | 0.82% | 8 | 36 |
| 125 | 8 | 339 | 43392 | 347136 | 0.89% | 8 | 304 |
| 126 | 136 | 20 | 2560 | 348160 | 1.19% | 9 | 288 |
| 127 | 97 | 28 | 3584 | 347648 | 1.04% | 9 | 92 |
| 128 | 85 | 32 | 4096 | 348160 | 1.19% | 9 | 696 |
| 129 | 80 | 34 | 4352 | 348160 | 1.19% | 9 | 736 |
| 130 | 68 | 40 | 5120 | 348160 | 1.19% | 9 | 832 |
| 131 | 59 | 46 | 5888 | 347392 | 0.97% | 9 | 142 |
| 132 | 40 | 68 | 8704 | 348160 | 1.19% | 9 | 1056 |
| 133 | 34 | 80 | 10240 | 348160 | 1.19% | 9 | 1104 |
| 134 | 23 | 118 | 15104 | 347392 | 0.97% | 9 | 430 |
| 135 | 20 | 136 | 17408 | 348160 | 1.19% | 9 | 1216 |
| 136 | 17 | 160 | 20480 | 348160 | 1.19% | 9 | 1240 |
| 137 | 16 | 170 | 21760 | 348160 | 1.19% | 9 | 1248 |
| 138 | 14 | 194 | 24832 | 347648 | 1.04% | 9 | 756 |
| 139 | 12 | 226 | 28928 | 347136 | 0.89% | 9 | 264 |
| 140 | 10 | 272 | 34816 | 348160 | 1.19% | 9 | 1296 |
| 141 | 9 | 302 | 38656 | 347904 | 1.12% | 9 | 1050 |
| 142 | 8 | 340 | 43520 | 348160 | 1.19% | 9 | 1312 |
| 143 | 7 | 388 | 49664 | 347648 | 1.04% | 9 | 812 |
| 144 | 46 | 59 | 7552 | 347392 | 0.97% | 10 | 200 |
| 145 | 32 | 85 | 10880 | 348160 | 1.19% | 10 | 1088 |
| 146 | 28 | 97 | 12416 | 347648 | 1.04% | 10 | 616 |
| 147 | 24 | 113 | 14464 | 347136 | 0.89% | 10 | 144 |
| 148 | 19 | 143 | 18304 | 347776 | 1.08% | 10 | 824 |
| 149 | 18 | 151 | 19328 | 347904 | 1.12% | 10 | 960 |
| 150 | 15 | 181 | 23168 | 347520 | 1.00% | 10 | 606 |
| 151 | 13 | 209 | 26752 | 347776 | 1.08% | 10 | 878 |
| 152 | 11 | 247 | 31616 | 347776 | 1.08% | 10 | 896 |
| 153 | 8 | 339 | 43392 | 347136 | 0.89% | 10 | 288 |
| 154 | 85 | 32 | 4096 | 348160 | 1.19% | 11 | 526 |
| 155 | 80 | 34 | 4352 | 348160 | 1.19% | 11 | 576 |
| 156 | 68 | 40 | 5120 | 348160 | 1.19% | 11 | 696 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 157 | 59 | 46 | 5888 | 347392 | 0.97% | 11 | 24 |
| 158 | 40 | 68 | 8704 | 348160 | 1.19% | 11 | 976 |
| 159 | 34 | 80 | 10240 | 348160 | 1.19% | 11 | 1036 |
| 160 | 23 | 118 | 15104 | 347392 | 0.97% | 11 | 384 |
| 161 | 20 | 136 | 17408 | 348160 | 1.19% | 11 | 1176 |
| 162 | 17 | 160 | 20480 | 348160 | 1.19% | 11 | 1206 |
| 163 | 16 | 170 | 21760 | 348160 | 1.19% | 11 | 1216 |
| 164 | 14 | 194 | 24832 | 347648 | 1.04% | 11 | 728 |
| 165 | 12 | 226 | 28928 | 347136 | 0.89% | 11 | 240 |
| 166 | 10 | 272 | 34816 | 348160 | 1.19% | 11 | 1276 |
| 167 | 9 | 302 | 38656 | 347904 | 1.12% | 11 | 1032 |
| 168 | 8 | 340 | 43520 | 348160 | 1.19% | 11 | 1296 |
| 169 | 7 | 388 | 49664 | 347648 | 1.04% | 11 | 798 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 7 may be obtained with reference to Table 6. In this case, a frame overhead OH in cases listed in Table 7 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 7.

Table 7

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 181 | 15 | 1920 | 347520 | 1.00% | 2 | 560 |
| 2 | 24 | 113 | 14464 | 347136 | 0.89% | 2 | 336 |
| 3 | 18 | 151 | 19328 | 347904 | 1.12% | 2 | 1104 |
| 4 | 15 | 181 | 23168 | 347520 | 1.00% | 2 | 726 |
| 5 | 8 | 339 | 43392 | 347136 | 0.89% | 2 | 352 |
| 6 | 151 | 18 | 2304 | 347904 | 1.12% | 3 | 820 |
| 7 | 113 | 24 | 3072 | 347136 | 0.89% | 3 | 134 |
| 8 | 12 | 226 | 28928 | 347136 | 0.89% | 3 | 336 |
| 9 | 9 | 302 | 38656 | 347904 | 1.12% | 3 | 1104 |
| 10 | 181 | 15 | 1920 | 347520 | 1.00% | 4 | 198 |
| 11 | 24 | 113 | 14464 | 347136 | 0.89% | 4 | 288 |
| 12 | 18 | 151 | 19328 | 347904 | 1.12% | 4 | 1068 |
| 13 | 15 | 181 | 23168 | 347520 | 1.00% | 4 | 696 |
| 14 | 8 | 339 | 43392 | 347136 | 0.89% | 4 | 336 |
| 15 | 151 | 18 | 2304 | 347904 | 1.12% | 5 | 518 |
| 16 | 12 | 226 | 28928 | 347136 | 0.89% | 5 | 312 |
| 17 | 9 | 302 | 38656 | 347904 | 1.12% | 5 | 1086 |
| 18 | 24 | 113 | 14464 | 347136 | 0.89% | 6 | 240 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 19 | 18 | 151 | 19328 | 347904 | 1.12% | 6 | 1032 |
| 20 | 15 | 181 | 23168 | 347520 | 1.00% | 6 | 666 |
| 21 | 8 | 339 | 43392 | 347136 | 0.89% | 6 | 320 |
| 22 | 151 | 18 | 2304 | 347904 | 1.12% | 7 | 216 |
| 23 | 12 | 226 | 28928 | 347136 | 0.89% | 7 | 288 |
| 24 | 9 | 302 | 38656 | 347904 | 1.12% | 7 | 1068 |
| 25 | 24 | 113 | 14464 | 347136 | 0.89% | 8 | 192 |
| 26 | 18 | 151 | 19328 | 347904 | 1.12% | 8 | 996 |
| 27 | 15 | 181 | 23168 | 347520 | 1.00% | 8 | 636 |
| 28 | 8 | 339 | 43392 | 347136 | 0.89% | 8 | 304 |
| 29 | 12 | 226 | 28928 | 347136 | 0.89% | 9 | 264 |
| 30 | 9 | 302 | 38656 | 347904 | 1.12% | 9 | 1050 |
| 31 | 24 | 113 | 14464 | 347136 | 0.89% | 10 | 144 |
| 32 | 18 | 151 | 19328 | 347904 | 1.12% | 10 | 960 |
| 33 | 15 | 181 | 23168 | 347520 | 1.00% | 10 | 606 |
| 34 | 8 | 339 | 43392 | 347136 | 0.89% | 10 | 288 |
| 35 | 12 | 226 | 28928 | 347136 | 0.89% | 11 | 240 |
| 36 | 9 | 302 | 38656 | 347904 | 1.12% | 11 | 1032 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 8 may be obtained with reference to Table 7. In this case, a frame overhead OH in cases listed in Table 8 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 8

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 181 | 15 | 1920 | 347520 | 1.00% | 2 | 560 |
| 2 | 8 | 339 | 43392 | 347136 | 0.89% | 2 | 352 |
| 3 | 151 | 18 | 2304 | 347904 | 1.12% | 3 | 820 |
| 4 | 113 | 24 | 3072 | 347136 | 0.89% | 3 | 134 |
| 5 | 181 | 15 | 1920 | 347520 | 1.00% | 4 | 198 |
| 6 | 8 | 339 | 43392 | 347136 | 0.89% | 4 | 336 |
| 7 | 151 | 18 | 2304 | 347904 | 1.12% | 5 | 518 |
| 8 | 8 | 339 | 43392 | 347136 | 0.89% | 6 | 320 |
| 9 | 151 | 18 | 2304 | 347904 | 1.12% | 7 | 216 |
| 10 | 8 | 339 | 43392 | 347136 | 0.89% | 8 | 304 |
| 11 | 8 | 339 | 43392 | 347136 | 0.89% | 10 | 288 |

(3) The quantity $N_{CW}$ of symbols before framing is 516096. For example, an open FEC (Open FEC, OFEC) encoding scheme with an encoding overhead of approximately 15.3% is used, or another encoding scheme may be used. A 1st symbol in every $N_{PG}=128$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 9. $N_{TS}+N_{PS}$ is an odd number, and $N_{FAW}$ is an even number. Correspondingly, $N_{RES}>0$, OH $= (N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 9 is low: OH<1.20%. In Table 9, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 9.

Table 9

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 407 | 10 | 1280 | 520960 | 0.94% | 794 |
| 2 | 370 | 11 | 1408 | 520960 | 0.94% | 794 |
| 3 | 339 | 12 | 1536 | 520704 | 0.89% | 540 |
| 4 | 313 | 13 | 1664 | 520832 | 0.92% | 667 |
| 5 | 291 | 14 | 1792 | 521472 | 1.04% | 1302 |
| 6 | 271 | 15 | 1920 | 520320 | 0.82% | 159 |
| 7 | 254 | 16 | 2048 | 520192 | 0.79% | 32 |
| 8 | 240 | 17 | 2176 | 522240 | 1.19% | 2064 |
| 9 | 226 | 18 | 2304 | 520704 | 0.89% | 540 |
| 10 | 214 | 19 | 2432 | 520448 | 0.84% | 286 |
| 11 | 204 | 20 | 2560 | 522240 | 1.19% | 2064 |
| 12 | 194 | 21 | 2688 | 521472 | 1.04% | 1302 |
| 13 | 185 | 22 | 2816 | 520960 | 0.94% | 794 |
| 14 | 177 | 23 | 2944 | 521088 | 0.97% | 921 |
| 15 | 170 | 24 | 3072 | 522240 | 1.19% | 2064 |
| 16 | 163 | 25 | 3200 | 521600 | 1.07% | 1429 |
| 17 | 151 | 27 | 3456 | 521856 | 1.12% | 1683 |
| 18 | 136 | 30 | 3840 | 522240 | 1.19% | 2064 |
| 19 | 127 | 32 | 4096 | 520192 | 0.79% | 32 |
| 20 | 120 | 34 | 4352 | 522240 | 1.19% | 2064 |
| 21 | 113 | 36 | 4608 | 520704 | 0.89% | 540 |
| 22 | 110 | 37 | 4736 | 520960 | 0.94% | 794 |
| 23 | 107 | 38 | 4864 | 520448 | 0.84% | 286 |
| 24 | 102 | 40 | 5120 | 522240 | 1.19% | 2064 |
| 25 | 97 | 42 | 5376 | 521472 | 1.04% | 1302 |
| 26 | 85 | 48 | 6144 | 522240 | 1.19% | 2064 |
| 27 | 83 | 49 | 6272 | 520576 | 0.87% | 413 |
| 28 | 80 | 51 | 6528 | 522240 | 1.19% | 2064 |
| 29 | 74 | 55 | 7040 | 520960 | 0.94% | 794 |
| 30 | 69 | 59 | 7552 | 521088 | 0.97% | 921 |

(continued)

| Sequence number | $N_{SF}$ | $N_{PS}$ | $N_S$ | $N_F$ | OH | $N_{TS,TOT}+N_{FAW}+N_{RES}$ |
|---|---|---|---|---|---|---|
| 31 | 68 | 60 | 7680 | 522240 | 1.19% | 2064 |
| 32 | 60 | 68 | 8704 | 522240 | 1.19% | 2064 |
| 33 | 59 | 69 | 8832 | 521088 | 0.97% | 921 |
| 34 | 55 | 74 | 9472 | 520960 | 0.94% | 794 |
| 35 | 51 | 80 | 10240 | 522240 | 1.19% | 2064 |
| 36 | 49 | 83 | 10624 | 520576 | 0.87% | 413 |
| 37 | 48 | 85 | 10880 | 522240 | 1.19% | 2064 |
| 38 | 42 | 97 | 12416 | 521472 | 1.04% | 1302 |
| 39 | 40 | 102 | 13056 | 522240 | 1.19% | 2064 |
| 40 | 38 | 107 | 13696 | 520448 | 0.84% | 286 |
| 41 | 37 | 110 | 14080 | 520960 | 0.94% | 794 |
| 42 | 36 | 113 | 14464 | 520704 | 0.89% | 540 |
| 43 | 34 | 120 | 15360 | 522240 | 1.19% | 2064 |
| 44 | 32 | 127 | 16256 | 520192 | 0.79% | 32 |
| 45 | 30 | 136 | 17408 | 522240 | 1.19% | 2064 |
| 46 | 27 | 151 | 19328 | 521856 | 1.12% | 1683 |
| 47 | 25 | 163 | 20864 | 521600 | 1.07% | 1429 |
| 48 | 24 | 170 | 21760 | 522240 | 1.19% | 2064 |
| 49 | 23 | 177 | 22656 | 521088 | 0.97% | 921 |
| 50 | 22 | 185 | 23680 | 520960 | 0.94% | 794 |
| 51 | 21 | 194 | 24832 | 521472 | 1.04% | 1302 |
| 52 | 20 | 204 | 26112 | 522240 | 1.19% | 2064 |
| 53 | 19 | 214 | 27392 | 520448 | 0.84% | 286 |
| 54 | 18 | 226 | 28928 | 520704 | 0.89% | 540 |
| 55 | 17 | 240 | 30720 | 522240 | 1.19% | 2064 |
| 56 | 16 | 254 | 32512 | 520192 | 0.79% | 32 |
| 57 | 16 | 255 | 32640 | 522240 | 1.19% | 2064 |
| 58 | 15 | 271 | 34688 | 520320 | 0.82% | 159 |
| 59 | 15 | 272 | 34816 | 522240 | 1.19% | 2064 |
| 60 | 14 | 291 | 37248 | 521472 | 1.04% | 1302 |
| 61 | 13 | 313 | 40064 | 520832 | 0.92% | 667 |
| 62 | 12 | 339 | 43392 | 520704 | 0.89% | 540 |
| 63 | 12 | 340 | 43520 | 522240 | 1.19% | 2064 |
| 64 | 11 | 370 | 47360 | 520960 | 0.94% | 794 |

Considering that the quantity $N_{TS}$ of training symbols is not greater than 11, Table 10 may be obtained with reference to Table 9. In this case, a frame overhead OH of a super-frame architecture in cases listed in Table 10 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 10.

Table 10

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 370 | 11 | 1408 | 520960 | 0.94% | 2 | 424 |
| 2 | 313 | 13 | 1664 | 520832 | 0.92% | 2 | 354 |
| 3 | 272 | 15 | 1920 | 522240 | 1.19% | 2 | 1792 |
| 4 | 240 | 17 | 2176 | 522240 | 1.19% | 2 | 1824 |
| 5 | 214 | 19 | 2432 | 520448 | 0.84% | 2 | 72 |
| 6 | 194 | 21 | 2688 | 521472 | 1.04% | 2 | 1108 |
| 7 | 177 | 23 | 2944 | 521088 | 0.97% | 2 | 744 |
| 8 | 163 | 25 | 3200 | 521600 | 1.07% | 2 | 1266 |
| 9 | 151 | 27 | 3456 | 521856 | 1.12% | 2 | 1532 |
| 10 | 110 | 37 | 4736 | 520960 | 0.94% | 2 | 684 |
| 11 | 83 | 49 | 6272 | 520576 | 0.87% | 2 | 330 |
| 12 | 80 | 51 | 6528 | 522240 | 1.19% | 2 | 1984 |
| 13 | 74 | 55 | 7040 | 520960 | 0.94% | 2 | 720 |
| 14 | 69 | 59 | 7552 | 521088 | 0.97% | 2 | 852 |
| 15 | 59 | 69 | 8832 | 521088 | 0.97% | 2 | 862 |
| 16 | 49 | 83 | 10624 | 520576 | 0.87% | 2 | 364 |
| 17 | 48 | 85 | 10880 | 522240 | 1.19% | 2 | 2016 |
| 18 | 42 | 97 | 12416 | 521472 | 1.04% | 2 | 1260 |
| 19 | 38 | 107 | 13696 | 520448 | 0.84% | 2 | 248 |
| 20 | 36 | 113 | 14464 | 520704 | 0.89% | 2 | 504 |
| 21 | 27 | 151 | 19328 | 521856 | 1.12% | 2 | 1656 |
| 22 | 25 | 163 | 20864 | 521600 | 1.07% | 2 | 1404 |
| 23 | 23 | 177 | 22656 | 521088 | 0.97% | 2 | 898 |
| 24 | 22 | 185 | 23680 | 520960 | 0.94% | 2 | 772 |
| 25 | 16 | 255 | 32640 | 522240 | 1.19% | 2 | 2048 |
| 26 | 15 | 271 | 34688 | 520320 | 0.82% | 2 | 144 |
| 27 | 14 | 291 | 37248 | 521472 | 1.04% | 2 | 1288 |
| 28 | 13 | 313 | 40064 | 520832 | 0.92% | 2 | 654 |
| 29 | 12 | 339 | 43392 | 520704 | 0.89% | 2 | 528 |
| 30 | 408 | 10 | 1280 | 522240 | 1.19% | 3 | 1248 |
| 31 | 340 | 12 | 1536 | 522240 | 1.19% | 3 | 1384 |
| 32 | 291 | 14 | 1792 | 521472 | 1.04% | 3 | 720 |
| 33 | 255 | 16 | 2048 | 522240 | 1.19% | 3 | 1554 |
| 34 | 226 | 18 | 2304 | 520704 | 0.89% | 3 | 88 |
| 35 | 204 | 20 | 2560 | 522240 | 1.19% | 3 | 1656 |
| 36 | 185 | 22 | 2816 | 520960 | 0.94% | 3 | 424 |
| 37 | 170 | 24 | 3072 | 522240 | 1.19% | 3 | 1724 |
| 38 | 136 | 30 | 3840 | 522240 | 1.19% | 3 | 1792 |
| 39 | 120 | 34 | 4352 | 522240 | 1.19% | 3 | 1824 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 40 | 113 | 36 | 4608 | 520704 | 0.89% | 3 | 314 |
| 41 | 107 | 38 | 4864 | 520448 | 0.84% | 3 | 72 |
| 42 | 102 | 40 | 5120 | 522240 | 1.19% | 3 | 1860 |
| 43 | 97 | 42 | 5376 | 521472 | 1.04% | 3 | 1108 |
| 44 | 85 | 48 | 6144 | 522240 | 1.19% | 3 | 1894 |
| 45 | 68 | 60 | 7680 | 522240 | 1.19% | 3 | 1928 |
| 46 | 60 | 68 | 8704 | 522240 | 1.19% | 3 | 1944 |
| 47 | 55 | 74 | 9472 | 520960 | 0.94% | 3 | 684 |
| 48 | 51 | 80 | 10240 | 522240 | 1.19% | 3 | 1962 |
| 49 | 40 | 102 | 13056 | 522240 | 1.19% | 3 | 1984 |
| 50 | 37 | 110 | 14080 | 520960 | 0.94% | 3 | 720 |
| 51 | 34 | 120 | 15360 | 522240 | 1.19% | 3 | 1996 |
| 52 | 30 | 136 | 17408 | 522240 | 1.19% | 3 | 2004 |
| 53 | 24 | 170 | 21760 | 522240 | 1.19% | 3 | 2016 |
| 54 | 21 | 194 | 24832 | 521472 | 1.04% | 3 | 1260 |
| 55 | 20 | 204 | 26112 | 522240 | 1.19% | 3 | 2024 |
| 56 | 19 | 214 | 27392 | 520448 | 0.84% | 3 | 248 |
| 57 | 18 | 226 | 28928 | 520704 | 0.89% | 3 | 504 |
| 58 | 17 | 240 | 30720 | 522240 | 1.19% | 3 | 2030 |
| 59 | 15 | 272 | 34816 | 522240 | 1.19% | 3 | 2034 |
| 60 | 12 | 340 | 43520 | 522240 | 1.19% | 3 | 2040 |
| 61 | 11 | 370 | 47360 | 520960 | 0.94% | 3 | 772 |
| 62 | 272 | 15 | 1920 | 522240 | 1.19% | 4 | 1248 |
| 63 | 240 | 17 | 2176 | 522240 | 1.19% | 4 | 1344 |
| 64 | 194 | 21 | 2688 | 521472 | 1.04% | 4 | 720 |
| 65 | 177 | 23 | 2944 | 521088 | 0.97% | 4 | 390 |
| 66 | 163 | 25 | 3200 | 521600 | 1.07% | 4 | 940 |
| 67 | 151 | 27 | 3456 | 521856 | 1.12% | 4 | 1230 |
| 68 | 110 | 37 | 4736 | 520960 | 0.94% | 4 | 464 |
| 69 | 83 | 49 | 6272 | 520576 | 0.87% | 4 | 164 |
| 70 | 80 | 51 | 6528 | 522240 | 1.19% | 4 | 1824 |
| 71 | 74 | 55 | 7040 | 520960 | 0.94% | 4 | 572 |
| 72 | 69 | 59 | 7552 | 521088 | 0.97% | 4 | 714 |
| 73 | 59 | 69 | 8832 | 521088 | 0.97% | 4 | 744 |
| 74 | 49 | 83 | 10624 | 520576 | 0.87% | 4 | 266 |
| 75 | 48 | 85 | 10880 | 522240 | 1.19% | 4 | 1920 |
| 76 | 42 | 97 | 12416 | 521472 | 1.04% | 4 | 1176 |
| 77 | 38 | 107 | 13696 | 520448 | 0.84% | 4 | 172 |
| 78 | 36 | 113 | 14464 | 520704 | 0.89% | 4 | 432 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 79 | 27 | 151 | 19328 | 521856 | 1.12% | 4 | 1602 |
| 80 | 25 | 163 | 20864 | 521600 | 1.07% | 4 | 1354 |
| 81 | 23 | 177 | 22656 | 521088 | 0.97% | 4 | 852 |
| 82 | 22 | 185 | 23680 | 520960 | 0.94% | 4 | 728 |
| 83 | 16 | 255 | 32640 | 522240 | 1.19% | 4 | 2016 |
| 84 | 15 | 271 | 34688 | 520320 | 0.82% | 4 | 114 |
| 85 | 14 | 291 | 37248 | 521472 | 1.04% | 4 | 1260 |
| 86 | 13 | 313 | 40064 | 520832 | 0.92% | 4 | 628 |
| 87 | 12 | 339 | 43392 | 520704 | 0.89% | 4 | 504 |
| 88 | 408 | 10 | 1280 | 522240 | 1.19% | 5 | 432 |
| 89 | 340 | 12 | 1536 | 522240 | 1.19% | 5 | 704 |
| 90 | 291 | 14 | 1792 | 521472 | 1.04% | 5 | 138 |
| 91 | 255 | 16 | 2048 | 522240 | 1.19% | 5 | 1044 |
| 92 | 204 | 20 | 2560 | 522240 | 1.19% | 5 | 1248 |
| 93 | 185 | 22 | 2816 | 520960 | 0.94% | 5 | 54 |
| 94 | 170 | 24 | 3072 | 522240 | 1.19% | 5 | 1384 |
| 95 | 136 | 30 | 3840 | 522240 | 1.19% | 5 | 1520 |
| 96 | 120 | 34 | 4352 | 522240 | 1.19% | 5 | 1584 |
| 97 | 113 | 36 | 4608 | 520704 | 0.89% | 5 | 88 |
| 98 | 102 | 40 | 5120 | 522240 | 1.19% | 5 | 1656 |
| 99 | 97 | 42 | 5376 | 521472 | 1.04% | 5 | 914 |
| 100 | 85 | 48 | 6144 | 522240 | 1.19% | 5 | 1724 |
| 101 | 68 | 60 | 7680 | 522240 | 1.19% | 5 | 1792 |
| 102 | 60 | 68 | 8704 | 522240 | 1.19% | 5 | 1824 |
| 103 | 55 | 74 | 9472 | 520960 | 0.94% | 5 | 574 |
| 104 | 51 | 80 | 10240 | 522240 | 1.19% | 5 | 1860 |
| 105 | 40 | 102 | 13056 | 522240 | 1.19% | 5 | 1904 |
| 106 | 37 | 110 | 14080 | 520960 | 0.94% | 5 | 646 |
| 107 | 34 | 120 | 15360 | 522240 | 1.19% | 5 | 1928 |
| 108 | 30 | 136 | 17408 | 522240 | 1.19% | 5 | 1944 |
| 109 | 24 | 170 | 21760 | 522240 | 1.19% | 5 | 1968 |
| 110 | 21 | 194 | 24832 | 521472 | 1.04% | 5 | 1218 |
| 111 | 20 | 204 | 26112 | 522240 | 1.19% | 5 | 1984 |
| 112 | 19 | 214 | 27392 | 520448 | 0.84% | 5 | 210 |
| 113 | 18 | 226 | 28928 | 520704 | 0.89% | 5 | 468 |
| 114 | 17 | 240 | 30720 | 522240 | 1.19% | 5 | 1996 |
| 115 | 15 | 272 | 34816 | 522240 | 1.19% | 5 | 2004 |
| 116 | 12 | 340 | 43520 | 522240 | 1.19% | 5 | 2016 |
| 117 | 11 | 370 | 47360 | 520960 | 0.94% | 5 | 750 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 118 | 272 | 15 | 1920 | 522240 | 1.19% | 6 | 704 |
| 119 | 240 | 17 | 2176 | 522240 | 1.19% | 6 | 864 |
| 120 | 194 | 21 | 2688 | 521472 | 1.04% | 6 | 332 |
| 121 | 177 | 23 | 2944 | 521088 | 0.97% | 6 | 36 |
| 122 | 163 | 25 | 3200 | 521600 | 1.07% | 6 | 614 |
| 123 | 151 | 27 | 3456 | 521856 | 1.12% | 6 | 928 |
| 124 | 110 | 37 | 4736 | 520960 | 0.94% | 6 | 244 |
| 125 | 80 | 51 | 6528 | 522240 | 1.19% | 6 | 1664 |
| 126 | 74 | 55 | 7040 | 520960 | 0.94% | 6 | 424 |
| 127 | 69 | 59 | 7552 | 521088 | 0.97% | 6 | 576 |
| 128 | 59 | 69 | 8832 | 521088 | 0.97% | 6 | 626 |
| 129 | 49 | 83 | 10624 | 520576 | 0.87% | 6 | 168 |
| 130 | 48 | 85 | 10880 | 522240 | 1.19% | 6 | 1824 |
| 131 | 42 | 97 | 12416 | 521472 | 1.04% | 6 | 1092 |
| 132 | 38 | 107 | 13696 | 520448 | 0.84% | 6 | 96 |
| 133 | 36 | 113 | 14464 | 520704 | 0.89% | 6 | 360 |
| 134 | 27 | 151 | 19328 | 521856 | 1.12% | 6 | 1548 |
| 135 | 25 | 163 | 20864 | 521600 | 1.07% | 6 | 1304 |
| 136 | 23 | 177 | 22656 | 521088 | 0.97% | 6 | 806 |
| 137 | 22 | 185 | 23680 | 520960 | 0.94% | 6 | 684 |
| 138 | 16 | 255 | 32640 | 522240 | 1.19% | 6 | 1984 |
| 139 | 15 | 271 | 34688 | 520320 | 0.82% | 6 | 84 |
| 140 | 14 | 291 | 37248 | 521472 | 1.04% | 6 | 1232 |
| 141 | 13 | 313 | 40064 | 520832 | 0.92% | 6 | 602 |
| 142 | 12 | 339 | 43392 | 520704 | 0.89% | 6 | 480 |
| 143 | 340 | 12 | 1536 | 522240 | 1.19% | 7 | 24 |
| 144 | 255 | 16 | 2048 | 522240 | 1.19% | 7 | 534 |
| 145 | 204 | 20 | 2560 | 522240 | 1.19% | 7 | 840 |
| 146 | 170 | 24 | 3072 | 522240 | 1.19% | 7 | 1044 |
| 147 | 136 | 30 | 3840 | 522240 | 1.19% | 7 | 1248 |
| 148 | 120 | 34 | 4352 | 522240 | 1.19% | 7 | 1344 |
| 149 | 102 | 40 | 5120 | 522240 | 1.19% | 7 | 1452 |
| 150 | 97 | 42 | 5376 | 521472 | 1.04% | 7 | 720 |
| 151 | 85 | 48 | 6144 | 522240 | 1.19% | 7 | 1554 |
| 152 | 68 | 60 | 7680 | 522240 | 1.19% | 7 | 1656 |
| 153 | 60 | 68 | 8704 | 522240 | 1.19% | 7 | 1704 |
| 154 | 55 | 74 | 9472 | 520960 | 0.94% | 7 | 464 |
| 155 | 51 | 80 | 10240 | 522240 | 1.19% | 7 | 1758 |
| 156 | 40 | 102 | 13056 | 522240 | 1.19% | 7 | 1824 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 157 | 37 | 110 | 14080 | 520960 | 0.94% | 7 | 572 |
| 158 | 34 | 120 | 15360 | 522240 | 1.19% | 7 | 1860 |
| 159 | 30 | 136 | 17408 | 522240 | 1.19% | 7 | 1884 |
| 160 | 24 | 170 | 21760 | 522240 | 1.19% | 7 | 1920 |
| 161 | 21 | 194 | 24832 | 521472 | 1.04% | 7 | 1176 |
| 162 | 20 | 204 | 26112 | 522240 | 1.19% | 7 | 1944 |
| 163 | 19 | 214 | 27392 | 520448 | 0.84% | 7 | 172 |
| 164 | 18 | 226 | 28928 | 520704 | 0.89% | 7 | 432 |
| 165 | 17 | 240 | 30720 | 522240 | 1.19% | 7 | 1962 |
| 166 | 15 | 272 | 34816 | 522240 | 1.19% | 7 | 1974 |
| 167 | 12 | 340 | 43520 | 522240 | 1.19% | 7 | 1992 |
| 168 | 11 | 370 | 47360 | 520960 | 0.94% | 7 | 728 |
| 169 | 272 | 15 | 1920 | 522240 | 1.19% | 8 | 160 |
| 170 | 240 | 17 | 2176 | 522240 | 1.19% | 8 | 384 |
| 171 | 163 | 25 | 3200 | 521600 | 1.07% | 8 | 288 |
| 172 | 151 | 27 | 3456 | 521856 | 1.12% | 8 | 626 |
| 173 | 110 | 37 | 4736 | 520960 | 0.94% | 8 | 24 |
| 174 | 80 | 51 | 6528 | 522240 | 1.19% | 8 | 1504 |
| 175 | 74 | 55 | 7040 | 520960 | 0.94% | 8 | 276 |
| 176 | 69 | 59 | 7552 | 521088 | 0.97% | 8 | 438 |
| 177 | 59 | 69 | 8832 | 521088 | 0.97% | 8 | 508 |
| 178 | 49 | 83 | 10624 | 520576 | 0.87% | 8 | 70 |
| 179 | 48 | 85 | 10880 | 522240 | 1.19% | 8 | 1728 |
| 180 | 42 | 97 | 12416 | 521472 | 1.04% | 8 | 1008 |
| 181 | 36 | 113 | 14464 | 520704 | 0.89% | 8 | 288 |
| 182 | 27 | 151 | 19328 | 521856 | 1.12% | 8 | 1494 |
| 183 | 25 | 163 | 20864 | 521600 | 1.07% | 8 | 1254 |
| 184 | 23 | 177 | 22656 | 521088 | 0.97% | 8 | 760 |
| 185 | 22 | 185 | 23680 | 520960 | 0.94% | 8 | 640 |
| 186 | 16 | 255 | 32640 | 522240 | 1.19% | 8 | 1952 |
| 187 | 15 | 271 | 34688 | 520320 | 0.82% | 8 | 54 |
| 188 | 14 | 291 | 37248 | 521472 | 1.04% | 8 | 1204 |
| 189 | 13 | 313 | 40064 | 520832 | 0.92% | 8 | 576 |
| 190 | 12 | 339 | 43392 | 520704 | 0.89% | 8 | 456 |
| 191 | 255 | 16 | 2048 | 522240 | 1.19% | 9 | 24 |
| 192 | 204 | 20 | 2560 | 522240 | 1.19% | 9 | 432 |
| 193 | 170 | 24 | 3072 | 522240 | 1.19% | 9 | 704 |
| 194 | 136 | 30 | 3840 | 522240 | 1.19% | 9 | 976 |
| 195 | 120 | 34 | 4352 | 522240 | 1.19% | 9 | 1104 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 196 | 102 | 40 | 5120 | 522240 | 1.19% | 9 | 1248 |
| 197 | 97 | 42 | 5376 | 521472 | 1.04% | 9 | 526 |
| 198 | 85 | 48 | 6144 | 522240 | 1.19% | 9 | 1384 |
| 199 | 68 | 60 | 7680 | 522240 | 1.19% | 9 | 1520 |
| 200 | 60 | 68 | 8704 | 522240 | 1.19% | 9 | 1584 |
| 201 | 55 | 74 | 9472 | 520960 | 0.94% | 9 | 354 |
| 202 | 51 | 80 | 10240 | 522240 | 1.19% | 9 | 1656 |
| 203 | 40 | 102 | 13056 | 522240 | 1.19% | 9 | 1744 |
| 204 | 37 | 110 | 14080 | 520960 | 0.94% | 9 | 498 |
| 205 | 34 | 120 | 15360 | 522240 | 1.19% | 9 | 1792 |
| 206 | 30 | 136 | 17408 | 522240 | 1.19% | 9 | 1824 |
| 207 | 24 | 170 | 21760 | 522240 | 1.19% | 9 | 1872 |
| 208 | 21 | 194 | 24832 | 521472 | 1.04% | 9 | 1134 |
| 209 | 20 | 204 | 26112 | 522240 | 1.19% | 9 | 1904 |
| 210 | 19 | 214 | 27392 | 520448 | 0.84% | 9 | 134 |
| 211 | 18 | 226 | 28928 | 520704 | 0.89% | 9 | 396 |
| 212 | 17 | 240 | 30720 | 522240 | 1.19% | 9 | 1928 |
| 213 | 15 | 272 | 34816 | 522240 | 1.19% | 9 | 1944 |
| 214 | 12 | 340 | 43520 | 522240 | 1.19% | 9 | 1968 |
| 215 | 11 | 370 | 47360 | 520960 | 0.94% | 9 | 706 |
| 216 | 151 | 27 | 3456 | 521856 | 1.12% | 10 | 324 |
| 217 | 80 | 51 | 6528 | 522240 | 1.19% | 10 | 1344 |
| 218 | 74 | 55 | 7040 | 520960 | 0.94% | 10 | 128 |
| 219 | 69 | 59 | 7552 | 521088 | 0.97% | 10 | 300 |
| 220 | 59 | 69 | 8832 | 521088 | 0.97% | 10 | 390 |
| 221 | 48 | 85 | 10880 | 522240 | 1.19% | 10 | 1632 |
| 222 | 42 | 97 | 12416 | 521472 | 1.04% | 10 | 924 |
| 223 | 36 | 113 | 14464 | 520704 | 0.89% | 10 | 216 |
| 224 | 27 | 151 | 19328 | 521856 | 1.12% | 10 | 1440 |
| 225 | 25 | 163 | 20864 | 521600 | 1.07% | 10 | 1204 |
| 226 | 23 | 177 | 22656 | 521088 | 0.97% | 10 | 714 |
| 227 | 22 | 185 | 23680 | 520960 | 0.94% | 10 | 596 |
| 228 | 16 | 255 | 32640 | 522240 | 1.19% | 10 | 1920 |
| 229 | 15 | 271 | 34688 | 520320 | 0.82% | 10 | 24 |
| 230 | 14 | 291 | 37248 | 521472 | 1.04% | 10 | 1176 |
| 231 | 13 | 313 | 40064 | 520832 | 0.92% | 10 | 550 |
| 232 | 12 | 339 | 43392 | 520704 | 0.89% | 10 | 432 |
| 233 | 204 | 20 | 2560 | 522240 | 1.19% | 11 | 24 |
| 234 | 170 | 24 | 3072 | 522240 | 1.19% | 11 | 364 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 235 | 136 | 30 | 3840 | 522240 | 1.19% | 11 | 704 |
| 236 | 120 | 34 | 4352 | 522240 | 1.19% | 11 | 864 |
| 237 | 102 | 40 | 5120 | 522240 | 1.19% | 11 | 1044 |
| 238 | 97 | 42 | 5376 | 521472 | 1.04% | 11 | 332 |
| 239 | 85 | 48 | 6144 | 522240 | 1.19% | 11 | 1214 |
| 240 | 68 | 60 | 7680 | 522240 | 1.19% | 11 | 1384 |
| 241 | 60 | 68 | 8704 | 522240 | 1.19% | 11 | 1464 |
| 242 | 55 | 74 | 9472 | 520960 | 0.94% | 11 | 244 |
| 243 | 51 | 80 | 10240 | 522240 | 1.19% | 11 | 1554 |
| 244 | 40 | 102 | 13056 | 522240 | 1.19% | 11 | 1664 |
| 245 | 37 | 110 | 14080 | 520960 | 0.94% | 11 | 424 |
| 246 | 34 | 120 | 15360 | 522240 | 1.19% | 11 | 1724 |
| 247 | 30 | 136 | 17408 | 522240 | 1.19% | 11 | 1764 |
| 248 | 24 | 170 | 21760 | 522240 | 1.19% | 11 | 1824 |
| 249 | 21 | 194 | 24832 | 521472 | 1.04% | 11 | 1092 |
| 250 | 20 | 204 | 26112 | 522240 | 1.19% | 11 | 1864 |
| 251 | 19 | 214 | 27392 | 520448 | 0.84% | 11 | 96 |
| 252 | 18 | 226 | 28928 | 520704 | 0.89% | 11 | 360 |
| 253 | 17 | 240 | 30720 | 522240 | 1.19% | 11 | 1894 |
| 254 | 15 | 272 | 34816 | 522240 | 1.19% | 11 | 1914 |
| 255 | 12 | 340 | 43520 | 522240 | 1.19% | 11 | 1944 |
| 256 | 11 | 370 | 47360 | 520960 | 0.94% | 11 | 684 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 11 may be obtained with reference to Table 10. In this case, a frame overhead OH in cases listed in Table 11 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 11.

Table 11

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 272 | 15 | 1920 | 522240 | 1.19% | 2 | 1792 |
| 2 | 240 | 17 | 2176 | 522240 | 1.19% | 2 | 1824 |
| 3 | 194 | 21 | 2688 | 521472 | 1.04% | 2 | 1108 |
| 4 | 177 | 23 | 2944 | 521088 | 0.97% | 2 | 744 |
| 5 | 151 | 27 | 3456 | 521856 | 1.12% | 2 | 1532 |
| 6 | 80 | 51 | 6528 | 522240 | 1.19% | 2 | 1984 |
| 7 | 69 | 59 | 7552 | 521088 | 0.97% | 2 | 852 |
| 8 | 59 | 69 | 8832 | 521088 | 0.97% | 2 | 862 |
| 9 | 48 | 85 | 10880 | 522240 | 1.19% | 2 | 2016 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 10 | 42 | 97 | 12416 | 521472 | 1.04% | 2 | 1260 |
| 11 | 36 | 113 | 14464 | 520704 | 0.89% | 2 | 504 |
| 12 | 27 | 151 | 19328 | 521856 | 1.12% | 2 | 1656 |
| 13 | 23 | 177 | 22656 | 521088 | 0.97% | 2 | 898 |
| 14 | 16 | 255 | 32640 | 522240 | 1.19% | 2 | 2048 |
| 15 | 15 | 271 | 34688 | 520320 | 0.82% | 2 | 144 |
| 16 | 14 | 291 | 37248 | 521472 | 1.04% | 2 | 1288 |
| 17 | 12 | 339 | 43392 | 520704 | 0.89% | 2 | 528 |
| 18 | 408 | 10 | 1280 | 522240 | 1.19% | 3 | 1248 |
| 19 | 340 | 12 | 1536 | 522240 | 1.19% | 3 | 1384 |
| 20 | 291 | 14 | 1792 | 521472 | 1.04% | 3 | 720 |
| 21 | 255 | 16 | 2048 | 522240 | 1.19% | 3 | 1554 |
| 22 | 226 | 18 | 2304 | 520704 | 0.89% | 3 | 88 |
| 23 | 204 | 20 | 2560 | 522240 | 1.19% | 3 | 1656 |
| 24 | 170 | 24 | 3072 | 522240 | 1.19% | 3 | 1724 |
| 25 | 136 | 30 | 3840 | 522240 | 1.19% | 3 | 1792 |
| 26 | 120 | 34 | 4352 | 522240 | 1.19% | 3 | 1824 |
| 27 | 113 | 36 | 4608 | 520704 | 0.89% | 3 | 314 |
| 28 | 102 | 40 | 5120 | 522240 | 1.19% | 3 | 1860 |
| 29 | 97 | 42 | 5376 | 521472 | 1.04% | 3 | 1108 |
| 30 | 85 | 48 | 6144 | 522240 | 1.19% | 3 | 1894 |
| 31 | 68 | 60 | 7680 | 522240 | 1.19% | 3 | 1928 |
| 32 | 60 | 68 | 8704 | 522240 | 1.19% | 3 | 1944 |
| 33 | 51 | 80 | 10240 | 522240 | 1.19% | 3 | 1962 |
| 34 | 40 | 102 | 13056 | 522240 | 1.19% | 3 | 1984 |
| 35 | 34 | 120 | 15360 | 522240 | 1.19% | 3 | 1996 |
| 36 | 30 | 136 | 17408 | 522240 | 1.19% | 3 | 2004 |
| 37 | 24 | 170 | 21760 | 522240 | 1.19% | 3 | 2016 |
| 38 | 21 | 194 | 24832 | 521472 | 1.04% | 3 | 1260 |
| 39 | 20 | 204 | 26112 | 522240 | 1.19% | 3 | 2024 |
| 40 | 18 | 226 | 28928 | 520704 | 0.89% | 3 | 504 |
| 41 | 17 | 240 | 30720 | 522240 | 1.19% | 3 | 2030 |
| 42 | 15 | 272 | 34816 | 522240 | 1.19% | 3 | 2034 |
| 43 | 12 | 340 | 43520 | 522240 | 1.19% | 3 | 2040 |
| 44 | 272 | 15 | 1920 | 522240 | 1.19% | 4 | 1248 |
| 45 | 240 | 17 | 2176 | 522240 | 1.19% | 4 | 1344 |
| 46 | 194 | 21 | 2688 | 521472 | 1.04% | 4 | 720 |
| 47 | 177 | 23 | 2944 | 521088 | 0.97% | 4 | 390 |
| 48 | 151 | 27 | 3456 | 521856 | 1.12% | 4 | 1230 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 49 | 80 | 51 | 6528 | 522240 | 1.19% | 4 | 1824 |
| 50 | 69 | 59 | 7552 | 521088 | 0.97% | 4 | 714 |
| 51 | 59 | 69 | 8832 | 521088 | 0.97% | 4 | 744 |
| 52 | 48 | 85 | 10880 | 522240 | 1.19% | 4 | 1920 |
| 53 | 42 | 97 | 12416 | 521472 | 1.04% | 4 | 1176 |
| 54 | 36 | 113 | 14464 | 520704 | 0.89% | 4 | 432 |
| 55 | 27 | 151 | 19328 | 521856 | 1.12% | 4 | 1602 |
| 56 | 23 | 177 | 22656 | 521088 | 0.97% | 4 | 852 |
| 57 | 16 | 255 | 32640 | 522240 | 1.19% | 4 | 2016 |
| 58 | 15 | 271 | 34688 | 520320 | 0.82% | 4 | 114 |
| 59 | 14 | 291 | 37248 | 521472 | 1.04% | 4 | 1260 |
| 60 | 12 | 339 | 43392 | 520704 | 0.89% | 4 | 504 |
| 61 | 408 | 10 | 1280 | 522240 | 1.19% | 5 | 432 |
| 62 | 340 | 12 | 1536 | 522240 | 1.19% | 5 | 704 |
| 63 | 291 | 14 | 1792 | 521472 | 1.04% | 5 | 138 |
| 64 | 255 | 16 | 2048 | 522240 | 1.19% | 5 | 1044 |
| 65 | 204 | 20 | 2560 | 522240 | 1.19% | 5 | 1248 |
| 66 | 170 | 24 | 3072 | 522240 | 1.19% | 5 | 1384 |
| 67 | 136 | 30 | 3840 | 522240 | 1.19% | 5 | 1520 |
| 68 | 120 | 34 | 4352 | 522240 | 1.19% | 5 | 1584 |
| 69 | 113 | 36 | 4608 | 520704 | 0.89% | 5 | 88 |
| 70 | 102 | 40 | 5120 | 522240 | 1.19% | 5 | 1656 |
| 71 | 97 | 42 | 5376 | 521472 | 1.04% | 5 | 914 |
| 72 | 85 | 48 | 6144 | 522240 | 1.19% | 5 | 1724 |
| 73 | 68 | 60 | 7680 | 522240 | 1.19% | 5 | 1792 |
| 74 | 60 | 68 | 8704 | 522240 | 1.19% | 5 | 1824 |
| 75 | 51 | 80 | 10240 | 522240 | 1.19% | 5 | 1860 |
| 76 | 40 | 102 | 13056 | 522240 | 1.19% | 5 | 1904 |
| 77 | 34 | 120 | 15360 | 522240 | 1.19% | 5 | 1928 |
| 78 | 30 | 136 | 17408 | 522240 | 1.19% | 5 | 1944 |
| 79 | 24 | 170 | 21760 | 522240 | 1.19% | 5 | 1968 |
| 80 | 21 | 194 | 24832 | 521472 | 1.04% | 5 | 1218 |
| 81 | 20 | 204 | 26112 | 522240 | 1.19% | 5 | 1984 |
| 82 | 18 | 226 | 28928 | 520704 | 0.89% | 5 | 468 |
| 83 | 17 | 240 | 30720 | 522240 | 1.19% | 5 | 1996 |
| 84 | 15 | 272 | 34816 | 522240 | 1.19% | 5 | 2004 |
| 85 | 12 | 340 | 43520 | 522240 | 1.19% | 5 | 2016 |
| 86 | 272 | 15 | 1920 | 522240 | 1.19% | 6 | 704 |
| 87 | 240 | 17 | 2176 | 522240 | 1.19% | 6 | 864 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 88 | 194 | 21 | 2688 | 521472 | 1.04% | 6 | 332 |
| 89 | 177 | 23 | 2944 | 521088 | 0.97% | 6 | 36 |
| 90 | 151 | 27 | 3456 | 521856 | 1.12% | 6 | 928 |
| 91 | 80 | 51 | 6528 | 522240 | 1.19% | 6 | 1664 |
| 92 | 69 | 59 | 7552 | 521088 | 0.97% | 6 | 576 |
| 93 | 59 | 69 | 8832 | 521088 | 0.97% | 6 | 626 |
| 94 | 48 | 85 | 10880 | 522240 | 1.19% | 6 | 1824 |
| 95 | 42 | 97 | 12416 | 521472 | 1.04% | 6 | 1092 |
| 96 | 36 | 113 | 14464 | 520704 | 0.89% | 6 | 360 |
| 97 | 27 | 151 | 19328 | 521856 | 1.12% | 6 | 1548 |
| 98 | 23 | 177 | 22656 | 521088 | 0.97% | 6 | 806 |
| 99 | 16 | 255 | 32640 | 522240 | 1.19% | 6 | 1984 |
| 100 | 15 | 271 | 34688 | 520320 | 0.82% | 6 | 84 |
| 101 | 14 | 291 | 37248 | 521472 | 1.04% | 6 | 1232 |
| 102 | 12 | 339 | 43392 | 520704 | 0.89% | 6 | 480 |
| 103 | 340 | 12 | 1536 | 522240 | 1.19% | 7 | 24 |
| 104 | 255 | 16 | 2048 | 522240 | 1.19% | 7 | 534 |
| 105 | 204 | 20 | 2560 | 522240 | 1.19% | 7 | 840 |
| 106 | 170 | 24 | 3072 | 522240 | 1.19% | 7 | 1044 |
| 107 | 136 | 30 | 3840 | 522240 | 1.19% | 7 | 1248 |
| 108 | 120 | 34 | 4352 | 522240 | 1.19% | 7 | 1344 |
| 109 | 102 | 40 | 5120 | 522240 | 1.19% | 7 | 1452 |
| 110 | 97 | 42 | 5376 | 521472 | 1.04% | 7 | 720 |
| 111 | 85 | 48 | 6144 | 522240 | 1.19% | 7 | 1554 |
| 112 | 68 | 60 | 7680 | 522240 | 1.19% | 7 | 1656 |
| 113 | 60 | 68 | 8704 | 522240 | 1.19% | 7 | 1704 |
| 114 | 51 | 80 | 10240 | 522240 | 1.19% | 7 | 1758 |
| 115 | 40 | 102 | 13056 | 522240 | 1.19% | 7 | 1824 |
| 116 | 34 | 120 | 15360 | 522240 | 1.19% | 7 | 1860 |
| 117 | 30 | 136 | 17408 | 522240 | 1.19% | 7 | 1884 |
| 118 | 24 | 170 | 21760 | 522240 | 1.19% | 7 | 1920 |
| 119 | 21 | 194 | 24832 | 521472 | 1.04% | 7 | 1176 |
| 120 | 20 | 204 | 26112 | 522240 | 1.19% | 7 | 1944 |
| 121 | 18 | 226 | 28928 | 520704 | 0.89% | 7 | 432 |
| 122 | 17 | 240 | 30720 | 522240 | 1.19% | 7 | 1962 |
| 123 | 15 | 272 | 34816 | 522240 | 1.19% | 7 | 1974 |
| 124 | 12 | 340 | 43520 | 522240 | 1.19% | 7 | 1992 |
| 125 | 272 | 15 | 1920 | 522240 | 1.19% | 8 | 160 |
| 126 | 240 | 17 | 2176 | 522240 | 1.19% | 8 | 384 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 127 | 151 | 27 | 3456 | 521856 | 1.12% | 8 | 626 |
| 128 | 80 | 51 | 6528 | 522240 | 1.19% | 8 | 1504 |
| 129 | 69 | 59 | 7552 | 521088 | 0.97% | 8 | 438 |
| 130 | 59 | 69 | 8832 | 521088 | 0.97% | 8 | 508 |
| 131 | 48 | 85 | 10880 | 522240 | 1.19% | 8 | 1728 |
| 132 | 42 | 97 | 12416 | 521472 | 1.04% | 8 | 1008 |
| 133 | 36 | 113 | 14464 | 520704 | 0.89% | 8 | 288 |
| 134 | 27 | 151 | 19328 | 521856 | 1.12% | 8 | 1494 |
| 135 | 23 | 177 | 22656 | 521088 | 0.97% | 8 | 760 |
| 136 | 16 | 255 | 32640 | 522240 | 1.19% | 8 | 1952 |
| 137 | 15 | 271 | 34688 | 520320 | 0.82% | 8 | 54 |
| 138 | 14 | 291 | 37248 | 521472 | 1.04% | 8 | 1204 |
| 139 | 12 | 339 | 43392 | 520704 | 0.89% | 8 | 456 |
| 140 | 255 | 16 | 2048 | 522240 | 1.19% | 9 | 24 |
| 141 | 204 | 20 | 2560 | 522240 | 1.19% | 9 | 432 |
| 142 | 170 | 24 | 3072 | 522240 | 1.19% | 9 | 704 |
| 143 | 136 | 30 | 3840 | 522240 | 1.19% | 9 | 976 |
| 144 | 120 | 34 | 4352 | 522240 | 1.19% | 9 | 1104 |
| 145 | 102 | 40 | 5120 | 522240 | 1.19% | 9 | 1248 |
| 146 | 97 | 42 | 5376 | 521472 | 1.04% | 9 | 526 |
| 147 | 85 | 48 | 6144 | 522240 | 1.19% | 9 | 1384 |
| 148 | 68 | 60 | 7680 | 522240 | 1.19% | 9 | 1520 |
| 149 | 60 | 68 | 8704 | 522240 | 1.19% | 9 | 1584 |
| 150 | 51 | 80 | 10240 | 522240 | 1.19% | 9 | 1656 |
| 151 | 40 | 102 | 13056 | 522240 | 1.19% | 9 | 1744 |
| 152 | 34 | 120 | 15360 | 522240 | 1.19% | 9 | 1792 |
| 153 | 30 | 136 | 17408 | 522240 | 1.19% | 9 | 1824 |
| 154 | 24 | 170 | 21760 | 522240 | 1.19% | 9 | 1872 |
| 155 | 21 | 194 | 24832 | 521472 | 1.04% | 9 | 1134 |
| 156 | 20 | 204 | 26112 | 522240 | 1.19% | 9 | 1904 |
| 157 | 18 | 226 | 28928 | 520704 | 0.89% | 9 | 396 |
| 158 | 17 | 240 | 30720 | 522240 | 1.19% | 9 | 1928 |
| 159 | 15 | 272 | 34816 | 522240 | 1.19% | 9 | 1944 |
| 160 | 12 | 340 | 43520 | 522240 | 1.19% | 9 | 1968 |
| 161 | 151 | 27 | 3456 | 521856 | 1.12% | 10 | 324 |
| 162 | 80 | 51 | 6528 | 522240 | 1.19% | 10 | 1344 |
| 163 | 69 | 59 | 7552 | 521088 | 0.97% | 10 | 300 |
| 164 | 59 | 69 | 8832 | 521088 | 0.97% | 10 | 390 |
| 165 | 48 | 85 | 10880 | 522240 | 1.19% | 10 | 1632 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 166 | 42 | 97 | 12416 | 521472 | 1.04% | 10 | 924 |
| 167 | 36 | 113 | 14464 | 520704 | 0.89% | 10 | 216 |
| 168 | 27 | 151 | 19328 | 521856 | 1.12% | 10 | 1440 |
| 169 | 23 | 177 | 22656 | 521088 | 0.97% | 10 | 714 |
| 170 | 16 | 255 | 32640 | 522240 | 1.19% | 10 | 1920 |
| 171 | 15 | 271 | 34688 | 520320 | 0.82% | 10 | 24 |
| 172 | 14 | 291 | 37248 | 521472 | 1.04% | 10 | 1176 |
| 173 | 12 | 339 | 43392 | 520704 | 0.89% | 10 | 432 |
| 174 | 204 | 20 | 2560 | 522240 | 1.19% | 11 | 24 |
| 175 | 170 | 24 | 3072 | 522240 | 1.19% | 11 | 364 |
| 176 | 136 | 30 | 3840 | 522240 | 1.19% | 11 | 704 |
| 177 | 120 | 34 | 4352 | 522240 | 1.19% | 11 | 864 |
| 178 | 102 | 40 | 5120 | 522240 | 1.19% | 11 | 1044 |
| 179 | 97 | 42 | 5376 | 521472 | 1.04% | 11 | 332 |
| 180 | 85 | 48 | 6144 | 522240 | 1.19% | 11 | 1214 |
| 181 | 68 | 60 | 7680 | 522240 | 1.19% | 11 | 1384 |
| 182 | 60 | 68 | 8704 | 522240 | 1.19% | 11 | 1464 |
| 183 | 51 | 80 | 10240 | 522240 | 1.19% | 11 | 1554 |
| 184 | 40 | 102 | 13056 | 522240 | 1.19% | 11 | 1664 |
| 185 | 34 | 120 | 15360 | 522240 | 1.19% | 11 | 1724 |
| 186 | 30 | 136 | 17408 | 522240 | 1.19% | 11 | 1764 |
| 187 | 24 | 170 | 21760 | 522240 | 1.19% | 11 | 1824 |
| 188 | 21 | 194 | 24832 | 521472 | 1.04% | 11 | 1092 |
| 189 | 20 | 204 | 26112 | 522240 | 1.19% | 11 | 1864 |
| 190 | 18 | 226 | 28928 | 520704 | 0.89% | 11 | 360 |
| 191 | 17 | 240 | 30720 | 522240 | 1.19% | 11 | 1894 |
| 192 | 15 | 272 | 34816 | 522240 | 1.19% | 11 | 1914 |
| 193 | 12 | 340 | 43520 | 522240 | 1.19% | 11 | 1944 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 12 may be obtained with reference to Table 11. In this case, a frame overhead OH in cases listed in Table 12 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 12

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 272 | 15 | 1920 | 522240 | 1.19% | 2 | 1792 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 2 | 194 | 21 | 2688 | 521472 | 1.04% | 2 | 1108 |
| 3 | 151 | 27 | 3456 | 521856 | 1.12% | 2 | 1532 |
| 4 | 80 | 51 | 6528 | 522240 | 1.19% | 2 | 1984 |
| 5 | 59 | 69 | 8832 | 521088 | 0.97% | 2 | 862 |
| 6 | 23 | 177 | 22656 | 521088 | 0.97% | 2 | 898 |
| 7 | 16 | 255 | 32640 | 522240 | 1.19% | 2 | 2048 |
| 8 | 14 | 291 | 37248 | 521472 | 1.04% | 2 | 1288 |
| 9 | 12 | 339 | 43392 | 520704 | 0.89% | 2 | 528 |
| 10 | 340 | 12 | 1536 | 522240 | 1.19% | 3 | 1384 |
| 11 | 226 | 18 | 2304 | 520704 | 0.89% | 3 | 88 |
| 12 | 170 | 24 | 3072 | 522240 | 1.19% | 3 | 1724 |
| 13 | 136 | 30 | 3840 | 522240 | 1.19% | 3 | 1792 |
| 14 | 113 | 36 | 4608 | 520704 | 0.89% | 3 | 314 |
| 15 | 97 | 42 | 5376 | 521472 | 1.04% | 3 | 1108 |
| 16 | 85 | 48 | 6144 | 522240 | 1.19% | 3 | 1894 |
| 17 | 68 | 60 | 7680 | 522240 | 1.19% | 3 | 1928 |
| 18 | 40 | 102 | 13056 | 522240 | 1.19% | 3 | 1984 |
| 19 | 34 | 120 | 15360 | 522240 | 1.19% | 3 | 1996 |
| 20 | 20 | 204 | 26112 | 522240 | 1.19% | 3 | 2024 |
| 21 | 17 | 240 | 30720 | 522240 | 1.19% | 3 | 2030 |
| 22 | 272 | 15 | 1920 | 522240 | 1.19% | 4 | 1248 |
| 23 | 194 | 21 | 2688 | 521472 | 1.04% | 4 | 720 |
| 24 | 151 | 27 | 3456 | 521856 | 1.12% | 4 | 1230 |
| 25 | 80 | 51 | 6528 | 522240 | 1.19% | 4 | 1824 |
| 26 | 59 | 69 | 8832 | 521088 | 0.97% | 4 | 744 |
| 27 | 23 | 177 | 22656 | 521088 | 0.97% | 4 | 852 |
| 28 | 16 | 255 | 32640 | 522240 | 1.19% | 4 | 2016 |
| 29 | 14 | 291 | 37248 | 521472 | 1.04% | 4 | 1260 |
| 30 | 12 | 339 | 43392 | 520704 | 0.89% | 4 | 504 |
| 31 | 340 | 12 | 1536 | 522240 | 1.19% | 5 | 704 |
| 32 | 170 | 24 | 3072 | 522240 | 1.19% | 5 | 1384 |
| 33 | 136 | 30 | 3840 | 522240 | 1.19% | 5 | 1520 |
| 34 | 113 | 36 | 4608 | 520704 | 0.89% | 5 | 88 |
| 35 | 97 | 42 | 5376 | 521472 | 1.04% | 5 | 914 |
| 36 | 85 | 48 | 6144 | 522240 | 1.19% | 5 | 1724 |
| 37 | 68 | 60 | 7680 | 522240 | 1.19% | 5 | 1792 |
| 38 | 40 | 102 | 13056 | 522240 | 1.19% | 5 | 1904 |
| 39 | 34 | 120 | 15360 | 522240 | 1.19% | 5 | 1928 |
| 40 | 20 | 204 | 26112 | 522240 | 1.19% | 5 | 1984 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 41 | 17 | 240 | 30720 | 522240 | 1.19% | 5 | 1996 |
| 42 | 272 | 15 | 1920 | 522240 | 1.19% | 6 | 704 |
| 43 | 194 | 21 | 2688 | 521472 | 1.04% | 6 | 332 |
| 44 | 151 | 27 | 3456 | 521856 | 1.12% | 6 | 928 |
| 45 | 80 | 51 | 6528 | 522240 | 1.19% | 6 | 1664 |
| 46 | 59 | 69 | 8832 | 521088 | 0.97% | 6 | 626 |
| 47 | 23 | 177 | 22656 | 521088 | 0.97% | 6 | 806 |
| 48 | 16 | 255 | 32640 | 522240 | 1.19% | 6 | 1984 |
| 49 | 14 | 291 | 37248 | 521472 | 1.04% | 6 | 1232 |
| 50 | 12 | 339 | 43392 | 520704 | 0.89% | 6 | 480 |
| 51 | 340 | 12 | 1536 | 522240 | 1.19% | 7 | 24 |
| 52 | 170 | 24 | 3072 | 522240 | 1.19% | 7 | 1044 |
| 53 | 136 | 30 | 3840 | 522240 | 1.19% | 7 | 1248 |
| 54 | 97 | 42 | 5376 | 521472 | 1.04% | 7 | 720 |
| 55 | 85 | 48 | 6144 | 522240 | 1.19% | 7 | 1554 |
| 56 | 68 | 60 | 7680 | 522240 | 1.19% | 7 | 1656 |
| 57 | 40 | 102 | 13056 | 522240 | 1.19% | 7 | 1824 |
| 58 | 34 | 120 | 15360 | 522240 | 1.19% | 7 | 1860 |
| 59 | 20 | 204 | 26112 | 522240 | 1.19% | 7 | 1944 |
| 60 | 17 | 240 | 30720 | 522240 | 1.19% | 7 | 1962 |
| 61 | 272 | 15 | 1920 | 522240 | 1.19% | 8 | 160 |
| 62 | 151 | 27 | 3456 | 521856 | 1.12% | 8 | 626 |
| 63 | 80 | 51 | 6528 | 522240 | 1.19% | 8 | 1504 |
| 64 | 59 | 69 | 8832 | 521088 | 0.97% | 8 | 508 |
| 65 | 23 | 177 | 22656 | 521088 | 0.97% | 8 | 760 |
| 66 | 16 | 255 | 32640 | 522240 | 1.19% | 8 | 1952 |
| 67 | 14 | 291 | 37248 | 521472 | 1.04% | 8 | 1204 |
| 68 | 12 | 339 | 43392 | 520704 | 0.89% | 8 | 456 |
| 69 | 170 | 24 | 3072 | 522240 | 1.19% | 9 | 704 |
| 70 | 136 | 30 | 3840 | 522240 | 1.19% | 9 | 976 |
| 71 | 97 | 42 | 5376 | 521472 | 1.04% | 9 | 526 |
| 72 | 85 | 48 | 6144 | 522240 | 1.19% | 9 | 1384 |
| 73 | 68 | 60 | 7680 | 522240 | 1.19% | 9 | 1520 |
| 74 | 40 | 102 | 13056 | 522240 | 1.19% | 9 | 1744 |
| 75 | 34 | 120 | 15360 | 522240 | 1.19% | 9 | 1792 |
| 76 | 20 | 204 | 26112 | 522240 | 1.19% | 9 | 1904 |
| 77 | 17 | 240 | 30720 | 522240 | 1.19% | 9 | 1928 |
| 78 | 151 | 27 | 3456 | 521856 | 1.12% | 10 | 324 |
| 79 | 80 | 51 | 6528 | 522240 | 1.19% | 10 | 1344 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 80 | 59 | 69 | 8832 | 521088 | 0.97% | 10 | 390 |
| 81 | 23 | 177 | 22656 | 521088 | 0.97% | 10 | 714 |
| 82 | 16 | 255 | 32640 | 522240 | 1.19% | 10 | 1920 |
| 83 | 14 | 291 | 37248 | 521472 | 1.04% | 10 | 1176 |
| 84 | 12 | 339 | 43392 | 520704 | 0.89% | 10 | 432 |
| 85 | 170 | 24 | 3072 | 522240 | 1.19% | 11 | 364 |
| 86 | 136 | 30 | 3840 | 522240 | 1.19% | 11 | 704 |
| 87 | 97 | 42 | 5376 | 521472 | 1.04% | 11 | 332 |
| 88 | 85 | 48 | 6144 | 522240 | 1.19% | 11 | 1214 |
| 89 | 68 | 60 | 7680 | 522240 | 1.19% | 11 | 1384 |
| 90 | 40 | 102 | 13056 | 522240 | 1.19% | 11 | 1664 |
| 91 | 34 | 120 | 15360 | 522240 | 1.19% | 11 | 1724 |
| 92 | 20 | 204 | 26112 | 522240 | 1.19% | 11 | 1864 |
| 93 | 17 | 240 | 30720 | 522240 | 1.19% | 11 | 1894 |

(4) The quantity $N_{CW}$ of symbols before framing is 688128. For example, an open FEC (Open FEC, OFEC) encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 13. $N_{TS}+N_{PS}$ is an odd number, and $N_{FAW}$ is an even number. Correspondingly, $N_{RES}>0$, OH = $(N_F = N_{CW})/N_{CW}$, $N_F = N_S \times N_{SF}$, and $N_{TS,TOT} = N_{TS} \times N_{SF}$.

A frame overhead of a super-frame architecture in cases listed in Table 13 is low: OH<1.20%. In Table 13, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 13.

Table 13

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 542 | 10 | 1280 | 693760 | 0.82% | 212 |
| 2 | 493 | 11 | 1408 | 694144 | 0.87% | 593 |
| 3 | 452 | 12 | 1536 | 694272 | 0.89% | 720 |
| 4 | 417 | 13 | 1664 | 693888 | 0.84% | 339 |
| 5 | 388 | 14 | 1792 | 695296 | 1.04% | 1736 |
| 6 | 362 | 15 | 1920 | 695040 | 1.00% | 1482 |
| 7 | 339 | 16 | 2048 | 694272 | 0.89% | 720 |
| 8 | 319 | 17 | 2176 | 694144 | 0.87% | 593 |
| 9 | 302 | 18 | 2304 | 695808 | 1.12% | 2244 |
| 10 | 286 | 19 | 2432 | 695552 | 1.08% | 1990 |
| 11 | 271 | 20 | 2560 | 693760 | 0.82% | 212 |
| 12 | 259 | 21 | 2688 | 696192 | 1.17% | 2625 |
| 13 | 247 | 22 | 2816 | 695552 | 1.08% | 1990 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 14 | 236 | 23 | 2944 | 694784 | 0.97% | 1228 |
| 15 | 226 | 24 | 3072 | 694272 | 0.89% | 720 |
| 16 | 217 | 25 | 3200 | 694400 | 0.91% | 847 |
| 17 | 209 | 26 | 3328 | 695552 | 1.08% | 1990 |
| 18 | 201 | 27 | 3456 | 694656 | 0.95% | 1101 |
| 19 | 194 | 28 | 3584 | 695296 | 1.04% | 1736 |
| 20 | 187 | 29 | 3712 | 694144 | 0.87% | 593 |
| 21 | 181 | 30 | 3840 | 695040 | 1.00% | 1482 |
| 22 | 175 | 31 | 3968 | 694400 | 0.91% | 847 |
| 23 | 170 | 32 | 4096 | 696320 | 1.19% | 2752 |
| 24 | 160 | 34 | 4352 | 696320 | 1.19% | 2752 |
| 25 | 155 | 35 | 4480 | 694400 | 0.91% | 847 |
| 26 | 151 | 36 | 4608 | 695808 | 1.12% | 2244 |
| 27 | 147 | 37 | 4736 | 696192 | 1.17% | 2625 |
| 28 | 143 | 38 | 4864 | 695552 | 1.08% | 1990 |
| 29 | 139 | 39 | 4992 | 693888 | 0.84% | 339 |
| 30 | 136 | 40 | 5120 | 696320 | 1.19% | 2752 |
| 31 | 118 | 46 | 5888 | 694784 | 0.97% | 1228 |
| 32 | 113 | 48 | 6144 | 694272 | 0.89% | 720 |
| 33 | 111 | 49 | 6272 | 696192 | 1.17% | 2625 |
| 34 | 97 | 56 | 7168 | 695296 | 1.04% | 1736 |
| 35 | 92 | 59 | 7552 | 694784 | 0.97% | 1228 |
| 36 | 89 | 61 | 7808 | 694912 | 0.99% | 1355 |
| 37 | 85 | 64 | 8192 | 696320 | 1.19% | 2752 |
| 38 | 81 | 67 | 8576 | 694656 | 0.95% | 1101 |
| 39 | 80 | 68 | 8704 | 696320 | 1.19% | 2752 |
| 40 | 68 | 80 | 10240 | 696320 | 1.19% | 2752 |
| 41 | 67 | 81 | 10368 | 694656 | 0.95% | 1101 |
| 42 | 64 | 85 | 10880 | 696320 | 1.19% | 2752 |
| 43 | 61 | 89 | 11392 | 694912 | 0.99% | 1355 |
| 44 | 59 | 92 | 11776 | 694784 | 0.97% | 1228 |
| 45 | 56 | 97 | 12416 | 695296 | 1.04% | 1736 |
| 46 | 49 | 111 | 14208 | 696192 | 1.17% | 2625 |
| 47 | 48 | 113 | 14464 | 694272 | 0.89% | 720 |
| 48 | 46 | 118 | 15104 | 694784 | 0.97% | 1228 |
| 49 | 40 | 136 | 17408 | 696320 | 1.19% | 2752 |
| 50 | 39 | 139 | 17792 | 693888 | 0.84% | 339 |
| 51 | 38 | 143 | 18304 | 695552 | 1.08% | 1990 |
| 52 | 37 | 147 | 18816 | 696192 | 1.17% | 2625 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 53 | 36 | 151 | 19328 | 695808 | 1.12% | 2244 |
| 54 | 35 | 155 | 19840 | 694400 | 0.91% | 847 |
| 55 | 34 | 160 | 20480 | 696320 | 1.19% | 2752 |
| 56 | 32 | 170 | 21760 | 696320 | 1.19% | 2752 |
| 57 | 31 | 175 | 22400 | 694400 | 0.91% | 847 |
| 58 | 30 | 181 | 23168 | 695040 | 1.00% | 1482 |
| 59 | 29 | 187 | 23936 | 694144 | 0.87% | 593 |
| 60 | 28 | 194 | 24832 | 695296 | 1.04% | 1736 |
| 61 | 27 | 201 | 25728 | 694656 | 0.95% | 1101 |
| 62 | 26 | 209 | 26752 | 695552 | 1.08% | 1990 |
| 63 | 25 | 217 | 27776 | 694400 | 0.91% | 847 |
| 64 | 24 | 226 | 28928 | 694272 | 0.89% | 720 |
| 65 | 23 | 236 | 30208 | 694784 | 0.97% | 1228 |
| 66 | 22 | 247 | 31616 | 695552 | 1.08% | 1990 |
| 67 | 21 | 259 | 33152 | 696192 | 1.17% | 2625 |
| 68 | 20 | 271 | 34688 | 693760 | 0.82% | 212 |
| 69 | 20 | 272 | 34816 | 696320 | 1.19% | 2752 |
| 70 | 19 | 286 | 36608 | 695552 | 1.08% | 1990 |
| 71 | 18 | 302 | 38656 | 695808 | 1.12% | 2244 |
| 72 | 17 | 319 | 40832 | 694144 | 0.87% | 593 |
| 73 | 17 | 320 | 40960 | 696320 | 1.19% | 2752 |
| 74 | 16 | 339 | 43392 | 694272 | 0.89% | 720 |
| 75 | 16 | 340 | 43520 | 696320 | 1.19% | 2752 |
| 76 | 15 | 362 | 46336 | 695040 | 1.00% | 1482 |
| 77 | 14 | 388 | 49664 | 695296 | 1.04% | 1736 |

Considering that the quantity $N_{TS}$ of training symbols is not greater than 11, Table 14 may be obtained with reference to Table 13. In this case, a frame overhead OH of a super-frame architecture in cases listed in Table 14 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 14.

Table 14

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 493 | 11 | 1408 | 694144 | 0.87% | 2 | 100 |
| 2 | 418 | 13 | 1664 | 695552 | 1.08% | 2 | 1572 |
| 3 | 362 | 15 | 1920 | 695040 | 1.00% | 2 | 1120 |
| 4 | 319 | 17 | 2176 | 694144 | 0.87% | 2 | 274 |
| 5 | 286 | 19 | 2432 | 695552 | 1.08% | 2 | 1704 |
| 6 | 259 | 21 | 2688 | 696192 | 1.17% | 2 | 2366 |
| 7 | 236 | 23 | 2944 | 694784 | 0.97% | 2 | 992 |
| 8 | 217 | 25 | 3200 | 694400 | 0.91% | 2 | 630 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 9 | 201 | 27 | 3456 | 694656 | 0.95% | 2 | 900 |
| 10 | 187 | 29 | 3712 | 694144 | 0.87% | 2 | 406 |
| 11 | 175 | 31 | 3968 | 694400 | 0.91% | 2 | 672 |
| 12 | 155 | 35 | 4480 | 694400 | 0.91% | 2 | 692 |
| 13 | 147 | 37 | 4736 | 696192 | 1.17% | 2 | 2478 |
| 14 | 139 | 39 | 4992 | 693888 | 0.84% | 2 | 200 |
| 15 | 111 | 49 | 6272 | 696192 | 1.17% | 2 | 2514 |
| 16 | 92 | 59 | 7552 | 694784 | 0.97% | 2 | 1136 |
| 17 | 89 | 61 | 7808 | 694912 | 0.99% | 2 | 1266 |
| 18 | 81 | 67 | 8576 | 694656 | 0.95% | 2 | 1020 |
| 19 | 67 | 81 | 10368 | 694656 | 0.95% | 2 | 1034 |
| 20 | 64 | 85 | 10880 | 696320 | 1.19% | 2 | 2688 |
| 21 | 61 | 89 | 11392 | 694912 | 0.99% | 2 | 1294 |
| 22 | 56 | 97 | 12416 | 695296 | 1.04% | 2 | 1680 |
| 23 | 49 | 111 | 14208 | 696192 | 1.17% | 2 | 2576 |
| 24 | 48 | 113 | 14464 | 694272 | 0.89% | 2 | 672 |
| 25 | 39 | 139 | 17792 | 693888 | 0.84% | 2 | 300 |
| 26 | 38 | 143 | 18304 | 695552 | 1.08% | 2 | 1952 |
| 27 | 37 | 147 | 18816 | 696192 | 1.17% | 2 | 2588 |
| 28 | 36 | 151 | 19328 | 695808 | 1.12% | 2 | 2208 |
| 29 | 35 | 155 | 19840 | 694400 | 0.91% | 2 | 812 |
| 30 | 31 | 175 | 22400 | 694400 | 0.91% | 2 | 816 |
| 31 | 30 | 181 | 23168 | 695040 | 1.00% | 2 | 1452 |
| 32 | 29 | 187 | 23936 | 694144 | 0.87% | 2 | 564 |
| 33 | 27 | 201 | 25728 | 694656 | 0.95% | 2 | 1074 |
| 34 | 26 | 209 | 26752 | 695552 | 1.08% | 2 | 1964 |
| 35 | 25 | 217 | 27776 | 694400 | 0.91% | 2 | 822 |
| 36 | 22 | 247 | 31616 | 695552 | 1.08% | 2 | 1968 |
| 37 | 21 | 259 | 33152 | 696192 | 1.17% | 2 | 2604 |
| 38 | 20 | 271 | 34688 | 693760 | 0.82% | 2 | 192 |
| 39 | 17 | 319 | 40832 | 694144 | 0.87% | 2 | 576 |
| 40 | 16 | 339 | 43392 | 694272 | 0.89% | 2 | 704 |
| 41 | 543 | 10 | 1280 | 695040 | 1.00% | 3 | 396 |
| 42 | 453 | 12 | 1536 | 695808 | 1.12% | 3 | 1338 |
| 43 | 388 | 14 | 1792 | 695296 | 1.04% | 3 | 960 |
| 44 | 339 | 16 | 2048 | 694272 | 0.89% | 3 | 42 |
| 45 | 302 | 18 | 2304 | 695808 | 1.12% | 3 | 1640 |
| 46 | 272 | 20 | 2560 | 696320 | 1.19% | 3 | 2208 |
| 47 | 247 | 22 | 2816 | 695552 | 1.08% | 3 | 1496 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 48 | 226 | 24 | 3072 | 694272 | 0.89% | 3 | 268 |
| 49 | 209 | 26 | 3328 | 695552 | 1.08% | 3 | 1572 |
| 50 | 194 | 28 | 3584 | 695296 | 1.04% | 3 | 1348 |
| 51 | 181 | 30 | 3840 | 695040 | 1.00% | 3 | 1120 |
| 52 | 170 | 32 | 4096 | 696320 | 1.19% | 3 | 2412 |
| 53 | 160 | 34 | 4352 | 696320 | 1.19% | 3 | 2432 |
| 54 | 151 | 36 | 4608 | 695808 | 1.12% | 3 | 1942 |
| 55 | 143 | 38 | 4864 | 695552 | 1.08% | 3 | 1704 |
| 56 | 136 | 40 | 5120 | 696320 | 1.19% | 3 | 2480 |
| 57 | 118 | 46 | 5888 | 694784 | 0.97% | 3 | 992 |
| 58 | 113 | 48 | 6144 | 694272 | 0.89% | 3 | 494 |
| 59 | 97 | 56 | 7168 | 695296 | 1.04% | 3 | 1542 |
| 60 | 85 | 64 | 8192 | 696320 | 1.19% | 3 | 2582 |
| 61 | 80 | 68 | 8704 | 696320 | 1.19% | 3 | 2592 |
| 62 | 68 | 80 | 10240 | 696320 | 1.19% | 3 | 2616 |
| 63 | 59 | 92 | 11776 | 694784 | 0.97% | 3 | 1110 |
| 64 | 46 | 118 | 15104 | 694784 | 0.97% | 3 | 1136 |
| 65 | 40 | 136 | 17408 | 696320 | 1.19% | 3 | 2672 |
| 66 | 34 | 160 | 20480 | 696320 | 1.19% | 3 | 2684 |
| 67 | 32 | 170 | 21760 | 696320 | 1.19% | 3 | 2688 |
| 68 | 28 | 194 | 24832 | 695296 | 1.04% | 3 | 1680 |
| 69 | 24 | 226 | 28928 | 694272 | 0.89% | 3 | 672 |
| 70 | 23 | 236 | 30208 | 694784 | 0.97% | 3 | 1182 |
| 71 | 20 | 272 | 34816 | 696320 | 1.19% | 3 | 2712 |
| 72 | 19 | 286 | 36608 | 695552 | 1.08% | 3 | 1952 |
| 73 | 18 | 302 | 38656 | 695808 | 1.12% | 3 | 2208 |
| 74 | 17 | 320 | 40960 | 696320 | 1.19% | 3 | 2718 |
| 75 | 16 | 340 | 43520 | 696320 | 1.19% | 3 | 2720 |
| 76 | 15 | 362 | 46336 | 695040 | 1.00% | 3 | 1452 |
| 77 | 14 | 388 | 49664 | 695296 | 1.04% | 3 | 1708 |
| 78 | 494 | 11 | 1408 | 695552 | 1.08% | 4 | 508 |
| 79 | 418 | 13 | 1664 | 695552 | 1.08% | 4 | 736 |
| 80 | 362 | 15 | 1920 | 695040 | 1.00% | 4 | 396 |
| 81 | 320 | 17 | 2176 | 696320 | 1.19% | 4 | 1792 |
| 82 | 286 | 19 | 2432 | 695552 | 1.08% | 4 | 1132 |
| 83 | 259 | 21 | 2688 | 696192 | 1.17% | 4 | 1848 |
| 84 | 236 | 23 | 2944 | 694784 | 0.97% | 4 | 520 |
| 85 | 217 | 25 | 3200 | 694400 | 0.91% | 4 | 196 |
| 86 | 201 | 27 | 3456 | 694656 | 0.95% | 4 | 498 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 87 | 187 | 29 | 3712 | 694144 | 0.87% | 4 | 32 |
| 88 | 175 | 31 | 3968 | 694400 | 0.91% | 4 | 322 |
| 89 | 155 | 35 | 4480 | 694400 | 0.91% | 4 | 382 |
| 90 | 147 | 37 | 4736 | 696192 | 1.17% | 4 | 2184 |
| 91 | 111 | 49 | 6272 | 696192 | 1.17% | 4 | 2292 |
| 92 | 92 | 59 | 7552 | 694784 | 0.97% | 4 | 952 |
| 93 | 89 | 61 | 7808 | 694912 | 0.99% | 4 | 1088 |
| 94 | 81 | 67 | 8576 | 694656 | 0.95% | 4 | 858 |
| 95 | 67 | 81 | 10368 | 694656 | 0.95% | 4 | 900 |
| 96 | 64 | 85 | 10880 | 696320 | 1.19% | 4 | 2560 |
| 97 | 61 | 89 | 11392 | 694912 | 0.99% | 4 | 1172 |
| 98 | 56 | 97 | 12416 | 695296 | 1.04% | 4 | 1568 |
| 99 | 49 | 111 | 14208 | 696192 | 1.17% | 4 | 2478 |
| 100 | 48 | 113 | 14464 | 694272 | 0.89% | 4 | 576 |
| 101 | 39 | 139 | 17792 | 693888 | 0.84% | 4 | 222 |
| 102 | 38 | 143 | 18304 | 695552 | 1.08% | 4 | 1876 |
| 103 | 37 | 147 | 18816 | 696192 | 1.17% | 4 | 2514 |
| 104 | 36 | 151 | 19328 | 695808 | 1.12% | 4 | 2136 |
| 105 | 35 | 155 | 19840 | 694400 | 0.91% | 4 | 742 |
| 106 | 31 | 175 | 22400 | 694400 | 0.91% | 4 | 754 |
| 107 | 30 | 181 | 23168 | 695040 | 1.00% | 4 | 1392 |
| 108 | 29 | 187 | 23936 | 694144 | 0.87% | 4 | 506 |
| 109 | 27 | 201 | 25728 | 694656 | 0.95% | 4 | 1020 |
| 110 | 26 | 209 | 26752 | 695552 | 1.08% | 4 | 1912 |
| 111 | 25 | 217 | 27776 | 694400 | 0.91% | 4 | 772 |
| 112 | 22 | 247 | 31616 | 695552 | 1.08% | 4 | 1924 |
| 113 | 21 | 259 | 33152 | 696192 | 1.17% | 4 | 2562 |
| 114 | 20 | 271 | 34688 | 693760 | 0.82% | 4 | 152 |
| 115 | 17 | 319 | 40832 | 694144 | 0.87% | 4 | 542 |
| 116 | 16 | 339 | 43392 | 694272 | 0.89% | 4 | 672 |
| 117 | 544 | 10 | 1280 | 696320 | 1.19% | 5 | 576 |
| 118 | 453 | 12 | 1536 | 695808 | 1.12% | 5 | 432 |
| 119 | 388 | 14 | 1792 | 695296 | 1.04% | 5 | 184 |
| 120 | 340 | 16 | 2048 | 696320 | 1.19% | 5 | 1392 |
| 121 | 302 | 18 | 2304 | 695808 | 1.12% | 5 | 1036 |
| 122 | 272 | 20 | 2560 | 696320 | 1.19% | 5 | 1664 |
| 123 | 247 | 22 | 2816 | 695552 | 1.08% | 5 | 1002 |
| 124 | 209 | 26 | 3328 | 695552 | 1.08% | 5 | 1154 |
| 125 | 194 | 28 | 3584 | 695296 | 1.04% | 5 | 960 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 126 | 181 | 30 | 3840 | 695040 | 1.00% | 5 | 758 |
| 127 | 170 | 32 | 4096 | 696320 | 1.19% | 5 | 2072 |
| 128 | 160 | 34 | 4352 | 696320 | 1.19% | 5 | 2112 |
| 129 | 151 | 36 | 4608 | 695808 | 1.12% | 5 | 1640 |
| 130 | 143 | 38 | 4864 | 695552 | 1.08% | 5 | 1418 |
| 131 | 136 | 40 | 5120 | 696320 | 1.19% | 5 | 2208 |
| 132 | 118 | 46 | 5888 | 694784 | 0.97% | 5 | 756 |
| 133 | 113 | 48 | 6144 | 694272 | 0.89% | 5 | 268 |
| 134 | 97 | 56 | 7168 | 695296 | 1.04% | 5 | 1348 |
| 135 | 85 | 64 | 8192 | 696320 | 1.19% | 5 | 2412 |
| 136 | 80 | 68 | 8704 | 696320 | 1.19% | 5 | 2432 |
| 137 | 68 | 80 | 10240 | 696320 | 1.19% | 5 | 2480 |
| 138 | 59 | 92 | 11776 | 694784 | 0.97% | 5 | 992 |
| 139 | 46 | 118 | 15104 | 694784 | 0.97% | 5 | 1044 |
| 140 | 40 | 136 | 17408 | 696320 | 1.19% | 5 | 2592 |
| 141 | 34 | 160 | 20480 | 696320 | 1.19% | 5 | 2616 |
| 142 | 32 | 170 | 21760 | 696320 | 1.19% | 5 | 2624 |
| 143 | 28 | 194 | 24832 | 695296 | 1.04% | 5 | 1624 |
| 144 | 24 | 226 | 28928 | 694272 | 0.89% | 5 | 624 |
| 145 | 23 | 236 | 30208 | 694784 | 0.97% | 5 | 1136 |
| 146 | 20 | 272 | 34816 | 696320 | 1.19% | 5 | 2672 |
| 147 | 19 | 286 | 36608 | 695552 | 1.08% | 5 | 1914 |
| 148 | 18 | 302 | 38656 | 695808 | 1.12% | 5 | 2172 |
| 149 | 17 | 320 | 40960 | 696320 | 1.19% | 5 | 2684 |
| 150 | 16 | 340 | 43520 | 696320 | 1.19% | 5 | 2688 |
| 151 | 15 | 362 | 46336 | 695040 | 1.00% | 5 | 1422 |
| 152 | 14 | 388 | 49664 | 695296 | 1.04% | 5 | 1680 |
| 153 | 320 | 17 | 2176 | 696320 | 1.19% | 6 | 1152 |
| 154 | 286 | 19 | 2432 | 695552 | 1.08% | 6 | 560 |
| 155 | 259 | 21 | 2688 | 696192 | 1.17% | 6 | 1330 |
| 156 | 236 | 23 | 2944 | 694784 | 0.97% | 6 | 48 |
| 157 | 201 | 27 | 3456 | 694656 | 0.95% | 6 | 96 |
| 158 | 155 | 35 | 4480 | 694400 | 0.91% | 6 | 72 |
| 159 | 147 | 37 | 4736 | 696192 | 1.17% | 6 | 1890 |
| 160 | 111 | 49 | 6272 | 696192 | 1.17% | 6 | 2070 |
| 161 | 92 | 59 | 7552 | 694784 | 0.97% | 6 | 768 |
| 162 | 89 | 61 | 7808 | 694912 | 0.99% | 6 | 910 |
| 163 | 81 | 67 | 8576 | 694656 | 0.95% | 6 | 696 |
| 164 | 67 | 81 | 10368 | 694656 | 0.95% | 6 | 766 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 165 | 64 | 85 | 10880 | 696320 | 1.19% | 6 | 2432 |
| 166 | 61 | 89 | 11392 | 694912 | 0.99% | 6 | 1050 |
| 167 | 56 | 97 | 12416 | 695296 | 1.04% | 6 | 1456 |
| 168 | 49 | 111 | 14208 | 696192 | 1.17% | 6 | 2380 |
| 169 | 48 | 113 | 14464 | 694272 | 0.89% | 6 | 480 |
| 170 | 39 | 139 | 17792 | 693888 | 0.84% | 6 | 144 |
| 171 | 38 | 143 | 18304 | 695552 | 1.08% | 6 | 1800 |
| 172 | 37 | 147 | 18816 | 696192 | 1.17% | 6 | 2440 |
| 173 | 36 | 151 | 19328 | 695808 | 1.12% | 6 | 2064 |
| 174 | 35 | 155 | 19840 | 694400 | 0.91% | 6 | 672 |
| 175 | 31 | 175 | 22400 | 694400 | 0.91% | 6 | 692 |
| 176 | 30 | 181 | 23168 | 695040 | 1.00% | 6 | 1332 |
| 177 | 29 | 187 | 23936 | 694144 | 0.87% | 6 | 448 |
| 178 | 27 | 201 | 25728 | 694656 | 0.95% | 6 | 966 |
| 179 | 26 | 209 | 26752 | 695552 | 1.08% | 6 | 1860 |
| 180 | 25 | 217 | 27776 | 694400 | 0.91% | 6 | 722 |
| 181 | 22 | 247 | 31616 | 695552 | 1.08% | 6 | 1880 |
| 182 | 21 | 259 | 33152 | 696192 | 1.17% | 6 | 2520 |
| 183 | 20 | 271 | 34688 | 693760 | 0.82% | 6 | 112 |
| 184 | 17 | 319 | 40832 | 694144 | 0.87% | 6 | 508 |
| 185 | 16 | 339 | 43392 | 694272 | 0.89% | 6 | 640 |
| 186 | 340 | 16 | 2048 | 696320 | 1.19% | 7 | 712 |
| 187 | 302 | 18 | 2304 | 695808 | 1.12% | 7 | 432 |
| 188 | 272 | 20 | 2560 | 696320 | 1.19% | 7 | 1120 |
| 189 | 247 | 22 | 2816 | 695552 | 1.08% | 7 | 508 |
| 190 | 209 | 26 | 3328 | 695552 | 1.08% | 7 | 736 |
| 191 | 194 | 28 | 3584 | 695296 | 1.04% | 7 | 572 |
| 192 | 181 | 30 | 3840 | 695040 | 1.00% | 7 | 396 |
| 193 | 170 | 32 | 4096 | 696320 | 1.19% | 7 | 1732 |
| 194 | 160 | 34 | 4352 | 696320 | 1.19% | 7 | 1792 |
| 195 | 151 | 36 | 4608 | 695808 | 1.12% | 7 | 1338 |
| 196 | 143 | 38 | 4864 | 695552 | 1.08% | 7 | 1132 |
| 197 | 136 | 40 | 5120 | 696320 | 1.19% | 7 | 1936 |
| 198 | 118 | 46 | 5888 | 694784 | 0.97% | 7 | 520 |
| 199 | 113 | 48 | 6144 | 694272 | 0.89% | 7 | 42 |
| 200 | 97 | 56 | 7168 | 695296 | 1.04% | 7 | 1154 |
| 201 | 85 | 64 | 8192 | 696320 | 1.19% | 7 | 2242 |
| 202 | 80 | 68 | 8704 | 696320 | 1.19% | 7 | 2272 |
| 203 | 68 | 80 | 10240 | 696320 | 1.19% | 7 | 2344 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 204 | 59 | 92 | 11776 | 694784 | 0.97% | 7 | 874 |
| 205 | 46 | 118 | 15104 | 694784 | 0.97% | 7 | 952 |
| 206 | 40 | 136 | 17408 | 696320 | 1.19% | 7 | 2512 |
| 207 | 34 | 160 | 20480 | 696320 | 1.19% | 7 | 2548 |
| 208 | 32 | 170 | 21760 | 696320 | 1.19% | 7 | 2560 |
| 209 | 28 | 194 | 24832 | 695296 | 1.04% | 7 | 1568 |
| 210 | 24 | 226 | 28928 | 694272 | 0.89% | 7 | 576 |
| 211 | 23 | 236 | 30208 | 694784 | 0.97% | 7 | 1090 |
| 212 | 20 | 272 | 34816 | 696320 | 1.19% | 7 | 2632 |
| 213 | 19 | 286 | 36608 | 695552 | 1.08% | 7 | 1876 |
| 214 | 18 | 302 | 38656 | 695808 | 1.12% | 7 | 2136 |
| 215 | 17 | 320 | 40960 | 696320 | 1.19% | 7 | 2650 |
| 216 | 16 | 340 | 43520 | 696320 | 1.19% | 7 | 2656 |
| 217 | 15 | 362 | 46336 | 695040 | 1.00% | 7 | 1392 |
| 218 | 14 | 388 | 49664 | 695296 | 1.04% | 7 | 1652 |
| 219 | 320 | 17 | 2176 | 696320 | 1.19% | 8 | 512 |
| 220 | 259 | 21 | 2688 | 696192 | 1.17% | 8 | 812 |
| 221 | 147 | 37 | 4736 | 696192 | 1.17% | 8 | 1596 |
| 222 | 111 | 49 | 6272 | 696192 | 1.17% | 8 | 1848 |
| 223 | 92 | 59 | 7552 | 694784 | 0.97% | 8 | 584 |
| 224 | 89 | 61 | 7808 | 694912 | 0.99% | 8 | 732 |
| 225 | 81 | 67 | 8576 | 694656 | 0.95% | 8 | 534 |
| 226 | 67 | 81 | 10368 | 694656 | 0.95% | 8 | 632 |
| 227 | 64 | 85 | 10880 | 696320 | 1.19% | 8 | 2304 |
| 228 | 61 | 89 | 11392 | 694912 | 0.99% | 8 | 928 |
| 229 | 56 | 97 | 12416 | 695296 | 1.04% | 8 | 1344 |
| 230 | 49 | 111 | 14208 | 696192 | 1.17% | 8 | 2282 |
| 231 | 48 | 113 | 14464 | 694272 | 0.89% | 8 | 384 |
| 232 | 39 | 139 | 17792 | 693888 | 0.84% | 8 | 66 |
| 233 | 38 | 143 | 18304 | 695552 | 1.08% | 8 | 1724 |
| 234 | 37 | 147 | 18816 | 696192 | 1.17% | 8 | 2366 |
| 235 | 36 | 151 | 19328 | 695808 | 1.12% | 8 | 1992 |
| 236 | 35 | 155 | 19840 | 694400 | 0.91% | 8 | 602 |
| 237 | 31 | 175 | 22400 | 694400 | 0.91% | 8 | 630 |
| 238 | 30 | 181 | 23168 | 695040 | 1.00% | 8 | 1272 |
| 239 | 29 | 187 | 23936 | 694144 | 0.87% | 8 | 390 |
| 240 | 27 | 201 | 25728 | 694656 | 0.95% | 8 | 912 |
| 241 | 26 | 209 | 26752 | 695552 | 1.08% | 8 | 1808 |
| 242 | 25 | 217 | 27776 | 694400 | 0.91% | 8 | 672 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 243 | 22 | 247 | 31616 | 695552 | 1.08% | 8 | 1836 |
| 244 | 21 | 259 | 33152 | 696192 | 1.17% | 8 | 2478 |
| 245 | 20 | 271 | 34688 | 693760 | 0.82% | 8 | 72 |
| 246 | 17 | 319 | 40832 | 694144 | 0.87% | 8 | 474 |
| 247 | 16 | 339 | 43392 | 694272 | 0.89% | 8 | 608 |
| 248 | 340 | 16 | 2048 | 696320 | 1.19% | 9 | 32 |
| 249 | 272 | 20 | 2560 | 696320 | 1.19% | 9 | 576 |
| 250 | 209 | 26 | 3328 | 695552 | 1.08% | 9 | 318 |
| 251 | 194 | 28 | 3584 | 695296 | 1.04% | 9 | 184 |
| 252 | 181 | 30 | 3840 | 695040 | 1.00% | 9 | 34 |
| 253 | 170 | 32 | 4096 | 696320 | 1.19% | 9 | 1392 |
| 254 | 160 | 34 | 4352 | 696320 | 1.19% | 9 | 1472 |
| 255 | 151 | 36 | 4608 | 695808 | 1.12% | 9 | 1036 |
| 256 | 143 | 38 | 4864 | 695552 | 1.08% | 9 | 846 |
| 257 | 136 | 40 | 5120 | 696320 | 1.19% | 9 | 1664 |
| 258 | 118 | 46 | 5888 | 694784 | 0.97% | 9 | 284 |
| 259 | 97 | 56 | 7168 | 695296 | 1.04% | 9 | 960 |
| 260 | 85 | 64 | 8192 | 696320 | 1.19% | 9 | 2072 |
| 261 | 80 | 68 | 8704 | 696320 | 1.19% | 9 | 2112 |
| 262 | 68 | 80 | 10240 | 696320 | 1.19% | 9 | 2208 |
| 263 | 59 | 92 | 11776 | 694784 | 0.97% | 9 | 756 |
| 264 | 46 | 118 | 15104 | 694784 | 0.97% | 9 | 860 |
| 265 | 40 | 136 | 17408 | 696320 | 1.19% | 9 | 2432 |
| 266 | 34 | 160 | 20480 | 696320 | 1.19% | 9 | 2480 |
| 267 | 32 | 170 | 21760 | 696320 | 1.19% | 9 | 2496 |
| 268 | 28 | 194 | 24832 | 695296 | 1.04% | 9 | 1512 |
| 269 | 24 | 226 | 28928 | 694272 | 0.89% | 9 | 528 |
| 270 | 23 | 236 | 30208 | 694784 | 0.97% | 9 | 1044 |
| 271 | 20 | 272 | 34816 | 696320 | 1.19% | 9 | 2592 |
| 272 | 19 | 286 | 36608 | 695552 | 1.08% | 9 | 1838 |
| 273 | 18 | 302 | 38656 | 695808 | 1.12% | 9 | 2100 |
| 274 | 17 | 320 | 40960 | 696320 | 1.19% | 9 | 2616 |
| 275 | 16 | 340 | 43520 | 696320 | 1.19% | 9 | 2624 |
| 276 | 15 | 362 | 46336 | 695040 | 1.00% | 9 | 1362 |
| 277 | 14 | 388 | 49664 | 695296 | 1.04% | 9 | 1624 |
| 278 | 259 | 21 | 2688 | 696192 | 1.17% | 10 | 294 |
| 279 | 147 | 37 | 4736 | 696192 | 1.17% | 10 | 1302 |
| 280 | 111 | 49 | 6272 | 696192 | 1.17% | 10 | 1626 |
| 281 | 92 | 59 | 7552 | 694784 | 0.97% | 10 | 400 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 282 | 89 | 61 | 7808 | 694912 | 0.99% | 10 | 554 |
| 283 | 81 | 67 | 8576 | 694656 | 0.95% | 10 | 372 |
| 284 | 67 | 81 | 10368 | 694656 | 0.95% | 10 | 498 |
| 285 | 64 | 85 | 10880 | 696320 | 1.19% | 10 | 2176 |
| 286 | 61 | 89 | 11392 | 694912 | 0.99% | 10 | 806 |
| 287 | 56 | 97 | 12416 | 695296 | 1.04% | 10 | 1232 |
| 288 | 49 | 111 | 14208 | 696192 | 1.17% | 10 | 2184 |
| 289 | 48 | 113 | 14464 | 694272 | 0.89% | 10 | 288 |
| 290 | 38 | 143 | 18304 | 695552 | 1.08% | 10 | 1648 |
| 291 | 37 | 147 | 18816 | 696192 | 1.17% | 10 | 2292 |
| 292 | 36 | 151 | 19328 | 695808 | 1.12% | 10 | 1920 |
| 293 | 35 | 155 | 19840 | 694400 | 0.91% | 10 | 532 |
| 294 | 31 | 175 | 22400 | 694400 | 0.91% | 10 | 568 |
| 295 | 30 | 181 | 23168 | 695040 | 1.00% | 10 | 1212 |
| 296 | 29 | 187 | 23936 | 694144 | 0.87% | 10 | 332 |
| 297 | 27 | 201 | 25728 | 694656 | 0.95% | 10 | 858 |
| 298 | 26 | 209 | 26752 | 695552 | 1.08% | 10 | 1756 |
| 299 | 25 | 217 | 27776 | 694400 | 0.91% | 10 | 622 |
| 300 | 22 | 247 | 31616 | 695552 | 1.08% | 10 | 1792 |
| 301 | 21 | 259 | 33152 | 696192 | 1.17% | 10 | 2436 |
| 302 | 20 | 271 | 34688 | 693760 | 0.82% | 10 | 32 |
| 303 | 17 | 319 | 40832 | 694144 | 0.87% | 10 | 440 |
| 304 | 16 | 339 | 43392 | 694272 | 0.89% | 10 | 576 |
| 305 | 272 | 20 | 2560 | 696320 | 1.19% | 11 | 32 |
| 306 | 170 | 32 | 4096 | 696320 | 1.19% | 11 | 1052 |
| 307 | 160 | 34 | 4352 | 696320 | 1.19% | 11 | 1152 |
| 308 | 151 | 36 | 4608 | 695808 | 1.12% | 11 | 734 |
| 309 | 143 | 38 | 4864 | 695552 | 1.08% | 11 | 560 |
| 310 | 136 | 40 | 5120 | 696320 | 1.19% | 11 | 1392 |
| 311 | 118 | 46 | 5888 | 694784 | 0.97% | 11 | 48 |
| 312 | 97 | 56 | 7168 | 695296 | 1.04% | 11 | 766 |
| 313 | 85 | 64 | 8192 | 696320 | 1.19% | 11 | 1902 |
| 314 | 80 | 68 | 8704 | 696320 | 1.19% | 11 | 1952 |
| 315 | 68 | 80 | 10240 | 696320 | 1.19% | 11 | 2072 |
| 316 | 59 | 92 | 11776 | 694784 | 0.97% | 11 | 638 |
| 317 | 46 | 118 | 15104 | 694784 | 0.97% | 11 | 768 |
| 318 | 40 | 136 | 17408 | 696320 | 1.19% | 11 | 2352 |
| 319 | 34 | 160 | 20480 | 696320 | 1.19% | 11 | 2412 |
| 320 | 32 | 170 | 21760 | 696320 | 1.19% | 11 | 2432 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 321 | 28 | 194 | 24832 | 695296 | 1.04% | 11 | 1456 |
| 322 | 24 | 226 | 28928 | 694272 | 0.89% | 11 | 480 |
| 323 | 23 | 236 | 30208 | 694784 | 0.97% | 11 | 998 |
| 324 | 20 | 272 | 34816 | 696320 | 1.19% | 11 | 2552 |
| 325 | 19 | 286 | 36608 | 695552 | 1.08% | 11 | 1800 |
| 326 | 18 | 302 | 38656 | 695808 | 1.12% | 11 | 2064 |
| 327 | 17 | 320 | 40960 | 696320 | 1.19% | 11 | 2582 |
| 328 | 16 | 340 | 43520 | 696320 | 1.19% | 11 | 2592 |
| 329 | 15 | 362 | 46336 | 695040 | 1.00% | 11 | 1332 |
| 330 | 14 | 388 | 49664 | 695296 | 1.04% | 11 | 1596 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 15 may be obtained with reference to Table 14. In this case, the frame overhead OH in cases listed in Table 15 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 15.

Table 15

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 362 | 15 | 1920 | 695040 | 1.00% | 2 | 1120 |
| 2 | 259 | 21 | 2688 | 696192 | 1.17% | 2 | 2366 |
| 3 | 201 | 27 | 3456 | 694656 | 0.95% | 2 | 900 |
| 4 | 147 | 37 | 4736 | 696192 | 1.17% | 2 | 2478 |
| 5 | 139 | 39 | 4992 | 693888 | 0.84% | 2 | 200 |
| 6 | 111 | 49 | 6272 | 696192 | 1.17% | 2 | 2514 |
| 7 | 81 | 67 | 8576 | 694656 | 0.95% | 2 | 1020 |
| 8 | 67 | 81 | 10368 | 694656 | 0.95% | 2 | 1034 |
| 9 | 49 | 111 | 14208 | 696192 | 1.17% | 2 | 2576 |
| 10 | 48 | 113 | 14464 | 694272 | 0.89% | 2 | 672 |
| 11 | 39 | 139 | 17792 | 693888 | 0.84% | 2 | 300 |
| 12 | 37 | 147 | 18816 | 696192 | 1.17% | 2 | 2588 |
| 13 | 36 | 151 | 19328 | 695808 | 1.12% | 2 | 2208 |
| 14 | 30 | 181 | 23168 | 695040 | 1.00% | 2 | 1452 |
| 15 | 27 | 201 | 25728 | 694656 | 0.95% | 2 | 1074 |
| 16 | 21 | 259 | 33152 | 696192 | 1.17% | 2 | 2604 |
| 17 | 16 | 339 | 43392 | 694272 | 0.89% | 2 | 704 |
| 18 | 543 | 10 | 1280 | 695040 | 1.00% | 3 | 396 |
| 19 | 453 | 12 | 1536 | 695808 | 1.12% | 3 | 1338 |
| 20 | 339 | 16 | 2048 | 694272 | 0.89% | 3 | 42 |
| 21 | 302 | 18 | 2304 | 695808 | 1.12% | 3 | 1640 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 22 | 226 | 24 | 3072 | 694272 | 0.89% | 3 | 268 |
| 23 | 181 | 30 | 3840 | 695040 | 1.00% | 3 | 1120 |
| 24 | 151 | 36 | 4608 | 695808 | 1.12% | 3 | 1942 |
| 25 | 113 | 48 | 6144 | 694272 | 0.89% | 3 | 494 |
| 26 | 24 | 226 | 28928 | 694272 | 0.89% | 3 | 672 |
| 27 | 18 | 302 | 38656 | 695808 | 1.12% | 3 | 2208 |
| 28 | 15 | 362 | 46336 | 695040 | 1.00% | 3 | 1452 |
| 29 | 362 | 15 | 1920 | 695040 | 1.00% | 4 | 396 |
| 30 | 259 | 21 | 2688 | 696192 | 1.17% | 4 | 1848 |
| 31 | 201 | 27 | 3456 | 694656 | 0.95% | 4 | 498 |
| 32 | 147 | 37 | 4736 | 696192 | 1.17% | 4 | 2184 |
| 33 | 111 | 49 | 6272 | 696192 | 1.17% | 4 | 2292 |
| 34 | 81 | 67 | 8576 | 694656 | 0.95% | 4 | 858 |
| 35 | 67 | 81 | 10368 | 694656 | 0.95% | 4 | 900 |
| 36 | 49 | 111 | 14208 | 696192 | 1.17% | 4 | 2478 |
| 37 | 48 | 113 | 14464 | 694272 | 0.89% | 4 | 576 |
| 38 | 39 | 139 | 17792 | 693888 | 0.84% | 4 | 222 |
| 39 | 37 | 147 | 18816 | 696192 | 1.17% | 4 | 2514 |
| 40 | 36 | 151 | 19328 | 695808 | 1.12% | 4 | 2136 |
| 41 | 30 | 181 | 23168 | 695040 | 1.00% | 4 | 1392 |
| 42 | 27 | 201 | 25728 | 694656 | 0.95% | 4 | 1020 |
| 43 | 21 | 259 | 33152 | 696192 | 1.17% | 4 | 2562 |
| 44 | 16 | 339 | 43392 | 694272 | 0.89% | 4 | 672 |
| 45 | 453 | 12 | 1536 | 695808 | 1.12% | 5 | 432 |
| 46 | 302 | 18 | 2304 | 695808 | 1.12% | 5 | 1036 |
| 47 | 181 | 30 | 3840 | 695040 | 1.00% | 5 | 758 |
| 48 | 151 | 36 | 4608 | 695808 | 1.12% | 5 | 1640 |
| 49 | 113 | 48 | 6144 | 694272 | 0.89% | 5 | 268 |
| 50 | 24 | 226 | 28928 | 694272 | 0.89% | 5 | 624 |
| 51 | 18 | 302 | 38656 | 695808 | 1.12% | 5 | 2172 |
| 52 | 15 | 362 | 46336 | 695040 | 1.00% | 5 | 1422 |
| 53 | 259 | 21 | 2688 | 696192 | 1.17% | 6 | 1330 |
| 54 | 201 | 27 | 3456 | 694656 | 0.95% | 6 | 96 |
| 55 | 147 | 37 | 4736 | 696192 | 1.17% | 6 | 1890 |
| 56 | 111 | 49 | 6272 | 696192 | 1.17% | 6 | 2070 |
| 57 | 81 | 67 | 8576 | 694656 | 0.95% | 6 | 696 |
| 58 | 67 | 81 | 10368 | 694656 | 0.95% | 6 | 766 |
| 59 | 49 | 111 | 14208 | 696192 | 1.17% | 6 | 2380 |
| 60 | 48 | 113 | 14464 | 694272 | 0.89% | 6 | 480 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 61 | 39 | 139 | 17792 | 693888 | 0.84% | 6 | 144 |
| 62 | 37 | 147 | 18816 | 696192 | 1.17% | 6 | 2440 |
| 63 | 36 | 151 | 19328 | 695808 | 1.12% | 6 | 2064 |
| 64 | 30 | 181 | 23168 | 695040 | 1.00% | 6 | 1332 |
| 65 | 27 | 201 | 25728 | 694656 | 0.95% | 6 | 966 |
| 66 | 21 | 259 | 33152 | 696192 | 1.17% | 6 | 2520 |
| 67 | 16 | 339 | 43392 | 694272 | 0.89% | 6 | 640 |
| 68 | 302 | 18 | 2304 | 695808 | 1.12% | 7 | 432 |
| 69 | 181 | 30 | 3840 | 695040 | 1.00% | 7 | 396 |
| 70 | 151 | 36 | 4608 | 695808 | 1.12% | 7 | 1338 |
| 71 | 113 | 48 | 6144 | 694272 | 0.89% | 7 | 42 |
| 72 | 24 | 226 | 28928 | 694272 | 0.89% | 7 | 576 |
| 73 | 18 | 302 | 38656 | 695808 | 1.12% | 7 | 2136 |
| 74 | 15 | 362 | 46336 | 695040 | 1.00% | 7 | 1392 |
| 75 | 259 | 21 | 2688 | 696192 | 1.17% | 8 | 812 |
| 76 | 147 | 37 | 4736 | 696192 | 1.17% | 8 | 1596 |
| 77 | 111 | 49 | 6272 | 696192 | 1.17% | 8 | 1848 |
| 78 | 81 | 67 | 8576 | 694656 | 0.95% | 8 | 534 |
| 79 | 67 | 81 | 10368 | 694656 | 0.95% | 8 | 632 |
| 80 | 49 | 111 | 14208 | 696192 | 1.17% | 8 | 2282 |
| 81 | 48 | 113 | 14464 | 694272 | 0.89% | 8 | 384 |
| 82 | 39 | 139 | 17792 | 693888 | 0.84% | 8 | 66 |
| 83 | 37 | 147 | 18816 | 696192 | 1.17% | 8 | 2366 |
| 84 | 36 | 151 | 19328 | 695808 | 1.12% | 8 | 1992 |
| 85 | 30 | 181 | 23168 | 695040 | 1.00% | 8 | 1272 |
| 86 | 27 | 201 | 25728 | 694656 | 0.95% | 8 | 912 |
| 87 | 21 | 259 | 33152 | 696192 | 1.17% | 8 | 2478 |
| 88 | 16 | 339 | 43392 | 694272 | 0.89% | 8 | 608 |
| 89 | 181 | 30 | 3840 | 695040 | 1.00% | 9 | 34 |
| 90 | 151 | 36 | 4608 | 695808 | 1.12% | 9 | 1036 |
| 91 | 24 | 226 | 28928 | 694272 | 0.89% | 9 | 528 |
| 92 | 18 | 302 | 38656 | 695808 | 1.12% | 9 | 2100 |
| 93 | 15 | 362 | 46336 | 695040 | 1.00% | 9 | 1362 |
| 94 | 259 | 21 | 2688 | 696192 | 1.17% | 10 | 294 |
| 95 | 147 | 37 | 4736 | 696192 | 1.17% | 10 | 1302 |
| 96 | 111 | 49 | 6272 | 696192 | 1.17% | 10 | 1626 |
| 97 | 81 | 67 | 8576 | 694656 | 0.95% | 10 | 372 |
| 98 | 67 | 81 | 10368 | 694656 | 0.95% | 10 | 498 |
| 99 | 49 | 111 | 14208 | 696192 | 1.17% | 10 | 2184 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 100 | 48 | 113 | 14464 | 694272 | 0.89% | 10 | 288 |
| 101 | 37 | 147 | 18816 | 696192 | 1.17% | 10 | 2292 |
| 102 | 36 | 151 | 19328 | 695808 | 1.12% | 10 | 1920 |
| 103 | 30 | 181 | 23168 | 695040 | 1.00% | 10 | 1212 |
| 104 | 27 | 201 | 25728 | 694656 | 0.95% | 10 | 858 |
| 105 | 21 | 259 | 33152 | 696192 | 1.17% | 10 | 2436 |
| 106 | 16 | 339 | 43392 | 694272 | 0.89% | 10 | 576 |
| 107 | 151 | 36 | 4608 | 695808 | 1.12% | 11 | 734 |
| 108 | 24 | 226 | 28928 | 694272 | 0.89% | 11 | 480 |
| 109 | 18 | 302 | 38656 | 695808 | 1.12% | 11 | 2064 |
| 110 | 15 | 362 | 46336 | 695040 | 1.00% | 11 | 1332 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 16 may be obtained with reference to Table 15. In this case, a frame overhead OH in cases listed in Table 16 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 16

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 362 | 15 | 1920 | 695040 | 1.00% | 2 | 1120 |
| 2 | 259 | 21 | 2688 | 696192 | 1.17% | 2 | 2366 |
| 3 | 201 | 27 | 3456 | 694656 | 0.95% | 2 | 900 |
| 4 | 139 | 39 | 4992 | 693888 | 0.84% | 2 | 200 |
| 5 | 67 | 81 | 10368 | 694656 | 0.95% | 2 | 1034 |
| 6 | 49 | 111 | 14208 | 696192 | 1.17% | 2 | 2576 |
| 7 | 37 | 147 | 18816 | 696192 | 1.17% | 2 | 2588 |
| 8 | 27 | 201 | 25728 | 694656 | 0.95% | 2 | 1074 |
| 9 | 16 | 339 | 43392 | 694272 | 0.89% | 2 | 704 |
| 10 | 453 | 12 | 1536 | 695808 | 1.12% | 3 | 1338 |
| 11 | 302 | 18 | 2304 | 695808 | 1.12% | 3 | 1640 |
| 12 | 226 | 24 | 3072 | 694272 | 0.89% | 3 | 268 |
| 13 | 181 | 30 | 3840 | 695040 | 1.00% | 3 | 1120 |
| 14 | 151 | 36 | 4608 | 695808 | 1.12% | 3 | 1942 |
| 15 | 113 | 48 | 6144 | 694272 | 0.89% | 3 | 494 |
| 16 | 362 | 15 | 1920 | 695040 | 1.00% | 4 | 396 |
| 17 | 259 | 21 | 2688 | 696192 | 1.17% | 4 | 1848 |
| 18 | 201 | 27 | 3456 | 694656 | 0.95% | 4 | 498 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 19 | 67 | 81 | 10368 | 694656 | 0.95% | 4 | 900 |
| 20 | 49 | 111 | 14208 | 696192 | 1.17% | 4 | 2478 |
| 21 | 37 | 147 | 18816 | 696192 | 1.17% | 4 | 2514 |
| 22 | 27 | 201 | 25728 | 694656 | 0.95% | 4 | 1020 |
| 23 | 16 | 339 | 43392 | 694272 | 0.89% | 4 | 672 |
| 24 | 453 | 12 | 1536 | 695808 | 1.12% | 5 | 432 |
| 25 | 302 | 18 | 2304 | 695808 | 1.12% | 5 | 1036 |
| 26 | 181 | 30 | 3840 | 695040 | 1.00% | 5 | 758 |
| 27 | 151 | 36 | 4608 | 695808 | 1.12% | 5 | 1640 |
| 28 | 113 | 48 | 6144 | 694272 | 0.89% | 5 | 268 |
| 29 | 259 | 21 | 2688 | 696192 | 1.17% | 6 | 1330 |
| 30 | 201 | 27 | 3456 | 694656 | 0.95% | 6 | 96 |
| 31 | 67 | 81 | 10368 | 694656 | 0.95% | 6 | 766 |
| 32 | 49 | 111 | 14208 | 696192 | 1.17% | 6 | 2380 |
| 33 | 37 | 147 | 18816 | 696192 | 1.17% | 6 | 2440 |
| 34 | 27 | 201 | 25728 | 694656 | 0.95% | 6 | 966 |
| 35 | 16 | 339 | 43392 | 694272 | 0.89% | 6 | 640 |
| 36 | 302 | 18 | 2304 | 695808 | 1.12% | 7 | 432 |
| 37 | 181 | 30 | 3840 | 695040 | 1.00% | 7 | 396 |
| 38 | 151 | 36 | 4608 | 695808 | 1.12% | 7 | 1338 |
| 39 | 113 | 48 | 6144 | 694272 | 0.89% | 7 | 42 |
| 40 | 259 | 21 | 2688 | 696192 | 1.17% | 8 | 812 |
| 41 | 67 | 81 | 10368 | 694656 | 0.95% | 8 | 632 |
| 42 | 49 | 111 | 14208 | 696192 | 1.17% | 8 | 2282 |
| 43 | 37 | 147 | 18816 | 696192 | 1.17% | 8 | 2366 |
| 44 | 27 | 201 | 25728 | 694656 | 0.95% | 8 | 912 |
| 45 | 16 | 339 | 43392 | 694272 | 0.89% | 8 | 608 |
| 46 | 181 | 30 | 3840 | 695040 | 1.00% | 9 | 34 |
| 47 | 151 | 36 | 4608 | 695808 | 1.12% | 9 | 1036 |
| 48 | 259 | 21 | 2688 | 696192 | 1.17% | 10 | 294 |
| 49 | 67 | 81 | 10368 | 694656 | 0.95% | 10 | 498 |
| 50 | 49 | 111 | 14208 | 696192 | 1.17% | 10 | 2184 |
| 51 | 37 | 147 | 18816 | 696192 | 1.17% | 10 | 2292 |
| 52 | 27 | 201 | 25728 | 694656 | 0.95% | 10 | 858 |
| 53 | 16 | 339 | 43392 | 694272 | 0.89% | 10 | 576 |
| 54 | 151 | 36 | 4608 | 695808 | 1.12% | 11 | 734 |

(5) The quantity $N_{CW}$ of symbols before framing is 150528. For example, an open FEC (Open FEC, OFEC) encoding scheme with an encoding overhead of approximately 17.9% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 17. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 17 is low: OH<1.20%. In Table 17, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 17.

Table 17

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 119 | 10 | 1280 | 152320 | 1.19% | 602 |
| 2 | 108 | 11 | 1408 | 152064 | 1.02% | 348 |
| 3 | 99 | 12 | 1536 | 152064 | 1.02% | 348 |
| 4 | 85 | 14 | 1792 | 152320 | 1.19% | 602 |
| 5 | 70 | 17 | 2176 | 152320 | 1.19% | 602 |
| 6 | 66 | 18 | 2304 | 152064 | 1.02% | 348 |
| 7 | 54 | 22 | 2816 | 152064 | 1.02% | 348 |
| 8 | 44 | 27 | 3456 | 152064 | 1.02% | 348 |
| 9 | 41 | 29 | 3712 | 152192 | 1.11% | 475 |
| 10 | 36 | 33 | 4224 | 152064 | 1.02% | 348 |
| 11 | 35 | 34 | 4352 | 152320 | 1.19% | 602 |
| 12 | 34 | 35 | 4480 | 152320 | 1.19% | 602 |
| 13 | 33 | 36 | 4608 | 152064 | 1.02% | 348 |
| 14 | 29 | 41 | 5248 | 152192 | 1.11% | 475 |
| 15 | 27 | 44 | 5632 | 152064 | 1.02% | 348 |
| 16 | 22 | 54 | 6912 | 152064 | 1.02% | 348 |
| 17 | 18 | 66 | 8448 | 152064 | 1.02% | 348 |
| 18 | 17 | 70 | 8960 | 152320 | 1.19% | 602 |
| 19 | 14 | 85 | 10880 | 152320 | 1.19% | 602 |
| 20 | 12 | 99 | 12672 | 152064 | 1.02% | 348 |
| 21 | 11 | 108 | 13824 | 152064 | 1.02% | 348 |
| 22 | 10 | 119 | 15232 | 152320 | 1.19% | 602 |
| 23 | 9 | 132 | 16896 | 152064 | 1.02% | 348 |
| 24 | 7 | 170 | 21760 | 152320 | 1.19% | 602 |
| 25 | 6 | 198 | 25344 | 152064 | 1.02% | 348 |
| 26 | 5 | 238 | 30464 | 152320 | 1.19% | 602 |
| 27 | 4 | 297 | 38016 | 152064 | 1.02% | 348 |
| 28 | 3 | 396 | 50688 | 152064 | 1.02% | 348 |

Considering that the quantity $N_{TS}$ of training symbols is not greater than 11, Table 18 may be obtained with reference to Table 17. In this case, a frame overhead OH of a super-frame architecture in cases listed in Table 18 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 18.

Table 18

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 108 | 11 | 1408 | 152064 | 1.02% | 2 | 240 |
| 2 | 70 | 17 | 2176 | 152320 | 1.19% | 2 | 532 |
| 3 | 44 | 27 | 3456 | 152064 | 1.02% | 2 | 304 |
| 4 | 41 | 29 | 3712 | 152192 | 1.11% | 2 | 434 |
| 5 | 36 | 33 | 4224 | 152064 | 1.02% | 2 | 312 |
| 6 | 34 | 35 | 4480 | 152320 | 1.19% | 2 | 568 |
| 7 | 29 | 41 | 5248 | 152192 | 1.11% | 2 | 446 |
| 8 | 14 | 85 | 10880 | 152320 | 1.19% | 2 | 588 |
| 9 | 12 | 99 | 12672 | 152064 | 1.02% | 2 | 336 |
| 10 | 10 | 119 | 15232 | 152320 | 1.19% | 2 | 592 |
| 11 | 4 | 297 | 38016 | 152064 | 1.02% | 2 | 344 |
| 12 | 119 | 10 | 1280 | 152320 | 1.19% | 3 | 364 |
| 13 | 99 | 12 | 1536 | 152064 | 1.02% | 3 | 150 |
| 14 | 85 | 14 | 1792 | 152320 | 1.19% | 3 | 432 |
| 15 | 66 | 18 | 2304 | 152064 | 1.02% | 3 | 216 |
| 16 | 54 | 22 | 2816 | 152064 | 1.02% | 3 | 240 |
| 17 | 35 | 34 | 4352 | 152320 | 1.19% | 3 | 532 |
| 18 | 33 | 36 | 4608 | 152064 | 1.02% | 3 | 282 |
| 19 | 27 | 44 | 5632 | 152064 | 1.02% | 3 | 294 |
| 20 | 22 | 54 | 6912 | 152064 | 1.02% | 3 | 304 |
| 21 | 18 | 66 | 8448 | 152064 | 1.02% | 3 | 312 |
| 22 | 17 | 70 | 8960 | 152320 | 1.19% | 3 | 568 |
| 23 | 11 | 108 | 13824 | 152064 | 1.02% | 3 | 326 |
| 24 | 9 | 132 | 16896 | 152064 | 1.02% | 3 | 330 |
| 25 | 7 | 170 | 21760 | 152320 | 1.19% | 3 | 588 |
| 26 | 6 | 198 | 25344 | 152064 | 1.02% | 3 | 336 |
| 27 | 5 | 238 | 30464 | 152320 | 1.19% | 3 | 592 |
| 28 | 3 | 396 | 50688 | 152064 | 1.02% | 3 | 342 |
| 29 | 108 | 11 | 1408 | 152064 | 1.02% | 4 | 24 |
| 30 | 70 | 17 | 2176 | 152320 | 1.19% | 4 | 392 |
| 31 | 44 | 27 | 3456 | 152064 | 1.02% | 4 | 216 |
| 32 | 41 | 29 | 3712 | 152192 | 1.11% | 4 | 352 |
| 33 | 36 | 33 | 4224 | 152064 | 1.02% | 4 | 240 |
| 34 | 34 | 35 | 4480 | 152320 | 1.19% | 4 | 500 |
| 35 | 29 | 41 | 5248 | 152192 | 1.11% | 4 | 388 |
| 36 | 14 | 85 | 10880 | 152320 | 1.19% | 4 | 560 |
| 37 | 12 | 99 | 12672 | 152064 | 1.02% | 4 | 312 |
| 38 | 10 | 119 | 15232 | 152320 | 1.19% | 4 | 572 |
| 39 | 4 | 297 | 38016 | 152064 | 1.02% | 4 | 336 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 40 | 119 | 10 | 1280 | 152320 | 1.19% | 5 | 126 |
| 41 | 85 | 14 | 1792 | 152320 | 1.19% | 5 | 262 |
| 42 | 66 | 18 | 2304 | 152064 | 1.02% | 5 | 84 |
| 43 | 54 | 22 | 2816 | 152064 | 1.02% | 5 | 132 |
| 44 | 35 | 34 | 4352 | 152320 | 1.19% | 5 | 462 |
| 45 | 33 | 36 | 4608 | 152064 | 1.02% | 5 | 216 |
| 46 | 27 | 44 | 5632 | 152064 | 1.02% | 5 | 240 |
| 47 | 22 | 54 | 6912 | 152064 | 1.02% | 5 | 260 |
| 48 | 18 | 66 | 8448 | 152064 | 1.02% | 5 | 276 |
| 49 | 17 | 70 | 8960 | 152320 | 1.19% | 5 | 534 |
| 50 | 11 | 108 | 13824 | 152064 | 1.02% | 5 | 304 |
| 51 | 9 | 132 | 16896 | 152064 | 1.02% | 5 | 312 |
| 52 | 7 | 170 | 21760 | 152320 | 1.19% | 5 | 574 |
| 53 | 6 | 198 | 25344 | 152064 | 1.02% | 5 | 324 |
| 54 | 5 | 238 | 30464 | 152320 | 1.19% | 5 | 582 |
| 55 | 3 | 396 | 50688 | 152064 | 1.02% | 5 | 336 |
| 56 | 70 | 17 | 2176 | 152320 | 1.19% | 6 | 252 |
| 57 | 44 | 27 | 3456 | 152064 | 1.02% | 6 | 128 |
| 58 | 41 | 29 | 3712 | 152192 | 1.11% | 6 | 270 |
| 59 | 36 | 33 | 4224 | 152064 | 1.02% | 6 | 168 |
| 60 | 34 | 35 | 4480 | 152320 | 1.19% | 6 | 432 |
| 61 | 29 | 41 | 5248 | 152192 | 1.11% | 6 | 330 |
| 62 | 14 | 85 | 10880 | 152320 | 1.19% | 6 | 532 |
| 63 | 12 | 99 | 12672 | 152064 | 1.02% | 6 | 288 |
| 64 | 10 | 119 | 15232 | 152320 | 1.19% | 6 | 552 |
| 65 | 4 | 297 | 38016 | 152064 | 1.02% | 6 | 328 |
| 66 | 85 | 14 | 1792 | 152320 | 1.19% | 7 | 92 |
| 67 | 54 | 22 | 2816 | 152064 | 1.02% | 7 | 24 |
| 68 | 35 | 34 | 4352 | 152320 | 1.19% | 7 | 392 |
| 69 | 33 | 36 | 4608 | 152064 | 1.02% | 7 | 150 |
| 70 | 27 | 44 | 5632 | 152064 | 1.02% | 7 | 186 |
| 71 | 22 | 54 | 6912 | 152064 | 1.02% | 7 | 216 |
| 72 | 18 | 66 | 8448 | 152064 | 1.02% | 7 | 240 |
| 73 | 17 | 70 | 8960 | 152320 | 1.19% | 7 | 500 |
| 74 | 11 | 108 | 13824 | 152064 | 1.02% | 7 | 282 |
| 75 | 9 | 132 | 16896 | 152064 | 1.02% | 7 | 294 |
| 76 | 7 | 170 | 21760 | 152320 | 1.19% | 7 | 560 |
| 77 | 6 | 198 | 25344 | 152064 | 1.02% | 7 | 312 |
| 78 | 5 | 238 | 30464 | 152320 | 1.19% | 7 | 572 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 79 | 3 | 396 | 50688 | 152064 | 1.02% | 7 | 330 |
| 80 | 70 | 17 | 2176 | 152320 | 1.19% | 8 | 112 |
| 81 | 44 | 27 | 3456 | 152064 | 1.02% | 8 | 40 |
| 82 | 41 | 29 | 3712 | 152192 | 1.11% | 8 | 188 |
| 83 | 36 | 33 | 4224 | 152064 | 1.02% | 8 | 96 |
| 84 | 34 | 35 | 4480 | 152320 | 1.19% | 8 | 364 |
| 85 | 29 | 41 | 5248 | 152192 | 1.11% | 8 | 272 |
| 86 | 14 | 85 | 10880 | 152320 | 1.19% | 8 | 504 |
| 87 | 12 | 99 | 12672 | 152064 | 1.02% | 8 | 264 |
| 88 | 10 | 119 | 15232 | 152320 | 1.19% | 8 | 532 |
| 89 | 4 | 297 | 38016 | 152064 | 1.02% | 8 | 320 |
| 90 | 35 | 34 | 4352 | 152320 | 1.19% | 9 | 322 |
| 91 | 33 | 36 | 4608 | 152064 | 1.02% | 9 | 84 |
| 92 | 27 | 44 | 5632 | 152064 | 1.02% | 9 | 132 |
| 93 | 22 | 54 | 6912 | 152064 | 1.02% | 9 | 172 |
| 94 | 18 | 66 | 8448 | 152064 | 1.02% | 9 | 204 |
| 95 | 17 | 70 | 8960 | 152320 | 1.19% | 9 | 466 |
| 96 | 11 | 108 | 13824 | 152064 | 1.02% | 9 | 260 |
| 97 | 9 | 132 | 16896 | 152064 | 1.02% | 9 | 276 |
| 98 | 7 | 170 | 21760 | 152320 | 1.19% | 9 | 546 |
| 99 | 6 | 198 | 25344 | 152064 | 1.02% | 9 | 300 |
| 100 | 5 | 238 | 30464 | 152320 | 1.19% | 9 | 562 |
| 101 | 3 | 396 | 50688 | 152064 | 1.02% | 9 | 324 |
| 102 | 41 | 29 | 3712 | 152192 | 1.11% | 10 | 106 |
| 103 | 36 | 33 | 4224 | 152064 | 1.02% | 10 | 24 |
| 104 | 34 | 35 | 4480 | 152320 | 1.19% | 10 | 296 |
| 105 | 29 | 41 | 5248 | 152192 | 1.11% | 10 | 214 |
| 106 | 14 | 85 | 10880 | 152320 | 1.19% | 10 | 476 |
| 107 | 12 | 99 | 12672 | 152064 | 1.02% | 10 | 240 |
| 108 | 10 | 119 | 15232 | 152320 | 1.19% | 10 | 512 |
| 109 | 4 | 297 | 38016 | 152064 | 1.02% | 10 | 312 |
| 110 | 35 | 34 | 4352 | 152320 | 1.19% | 11 | 252 |
| 111 | 27 | 44 | 5632 | 152064 | 1.02% | 11 | 78 |
| 112 | 22 | 54 | 6912 | 152064 | 1.02% | 11 | 128 |
| 113 | 18 | 66 | 8448 | 152064 | 1.02% | 11 | 168 |
| 114 | 17 | 70 | 8960 | 152320 | 1.19% | 11 | 432 |
| 115 | 11 | 108 | 13824 | 152064 | 1.02% | 11 | 238 |
| 116 | 9 | 132 | 16896 | 152064 | 1.02% | 11 | 258 |
| 117 | 7 | 170 | 21760 | 152320 | 1.19% | 11 | 532 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 118 | 6 | 198 | 25344 | 152064 | 1.02% | 11 | 288 |
| 119 | 5 | 238 | 30464 | 152320 | 1.19% | 11 | 552 |
| 120 | 3 | 396 | 50688 | 152064 | 1.02% | 11 | 318 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 19 may be obtained with reference to Table 18. In this case, a frame overhead OH in cases listed in Table 19 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 19.

Table 19

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 108 | 11 | 1408 | 152064 | 1.02% | 2 | 240 |
| 2 | 44 | 27 | 3456 | 152064 | 1.02% | 2 | 304 |
| 3 | 36 | 33 | 4224 | 152064 | 1.02% | 2 | 312 |
| 4 | 12 | 99 | 12672 | 152064 | 1.02% | 2 | 336 |
| 5 | 4 | 297 | 38016 | 152064 | 1.02% | 2 | 344 |
| 6 | 99 | 12 | 1536 | 152064 | 1.02% | 3 | 150 |
| 7 | 66 | 18 | 2304 | 152064 | 1.02% | 3 | 216 |
| 8 | 54 | 22 | 2816 | 152064 | 1.02% | 3 | 240 |
| 9 | 33 | 36 | 4608 | 152064 | 1.02% | 3 | 282 |
| 10 | 27 | 44 | 5632 | 152064 | 1.02% | 3 | 294 |
| 11 | 22 | 54 | 6912 | 152064 | 1.02% | 3 | 304 |
| 12 | 18 | 66 | 8448 | 152064 | 1.02% | 3 | 312 |
| 13 | 11 | 108 | 13824 | 152064 | 1.02% | 3 | 326 |
| 14 | 9 | 132 | 16896 | 152064 | 1.02% | 3 | 330 |
| 15 | 6 | 198 | 25344 | 152064 | 1.02% | 3 | 336 |
| 16 | 3 | 396 | 50688 | 152064 | 1.02% | 3 | 342 |
| 17 | 108 | 11 | 1408 | 152064 | 1.02% | 4 | 24 |
| 18 | 44 | 27 | 3456 | 152064 | 1.02% | 4 | 216 |
| 19 | 36 | 33 | 4224 | 152064 | 1.02% | 4 | 240 |
| 20 | 12 | 99 | 12672 | 152064 | 1.02% | 4 | 312 |
| 21 | 4 | 297 | 38016 | 152064 | 1.02% | 4 | 336 |
| 22 | 66 | 18 | 2304 | 152064 | 1.02% | 5 | 84 |
| 23 | 54 | 22 | 2816 | 152064 | 1.02% | 5 | 132 |
| 24 | 33 | 36 | 4608 | 152064 | 1.02% | 5 | 216 |
| 25 | 27 | 44 | 5632 | 152064 | 1.02% | 5 | 240 |
| 26 | 22 | 54 | 6912 | 152064 | 1.02% | 5 | 260 |
| 27 | 18 | 66 | 8448 | 152064 | 1.02% | 5 | 276 |
| 28 | 11 | 108 | 13824 | 152064 | 1.02% | 5 | 304 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 29 | 9 | 132 | 16896 | 152064 | 1.02% | 5 | 312 |
| 30 | 6 | 198 | 25344 | 152064 | 1.02% | 5 | 324 |
| 31 | 3 | 396 | 50688 | 152064 | 1.02% | 5 | 336 |
| 32 | 44 | 27 | 3456 | 152064 | 1.02% | 6 | 128 |
| 33 | 36 | 33 | 4224 | 152064 | 1.02% | 6 | 168 |
| 34 | 12 | 99 | 12672 | 152064 | 1.02% | 6 | 288 |
| 35 | 4 | 297 | 38016 | 152064 | 1.02% | 6 | 328 |
| 36 | 54 | 22 | 2816 | 152064 | 1.02% | 7 | 24 |
| 37 | 33 | 36 | 4608 | 152064 | 1.02% | 7 | 150 |
| 38 | 27 | 44 | 5632 | 152064 | 1.02% | 7 | 186 |
| 39 | 22 | 54 | 6912 | 152064 | 1.02% | 7 | 216 |
| 40 | 18 | 66 | 8448 | 152064 | 1.02% | 7 | 240 |
| 41 | 11 | 108 | 13824 | 152064 | 1.02% | 7 | 282 |
| 42 | 9 | 132 | 16896 | 152064 | 1.02% | 7 | 294 |
| 43 | 6 | 198 | 25344 | 152064 | 1.02% | 7 | 312 |
| 44 | 3 | 396 | 50688 | 152064 | 1.02% | 7 | 330 |
| 45 | 44 | 27 | 3456 | 152064 | 1.02% | 8 | 40 |
| 46 | 36 | 33 | 4224 | 152064 | 1.02% | 8 | 96 |
| 47 | 12 | 99 | 12672 | 152064 | 1.02% | 8 | 264 |
| 48 | 4 | 297 | 38016 | 152064 | 1.02% | 8 | 320 |
| 49 | 33 | 36 | 4608 | 152064 | 1.02% | 9 | 84 |
| 50 | 27 | 44 | 5632 | 152064 | 1.02% | 9 | 132 |
| 51 | 22 | 54 | 6912 | 152064 | 1.02% | 9 | 172 |
| 52 | 18 | 66 | 8448 | 152064 | 1.02% | 9 | 204 |
| 53 | 11 | 108 | 13824 | 152064 | 1.02% | 9 | 260 |
| 54 | 9 | 132 | 16896 | 152064 | 1.02% | 9 | 276 |
| 55 | 6 | 198 | 25344 | 152064 | 1.02% | 9 | 300 |
| 56 | 3 | 396 | 50688 | 152064 | 1.02% | 9 | 324 |
| 57 | 36 | 33 | 4224 | 152064 | 1.02% | 10 | 24 |
| 58 | 12 | 99 | 12672 | 152064 | 1.02% | 10 | 240 |
| 59 | 4 | 297 | 38016 | 152064 | 1.02% | 10 | 312 |
| 60 | 27 | 44 | 5632 | 152064 | 1.02% | 11 | 78 |
| 61 | 22 | 54 | 6912 | 152064 | 1.02% | 11 | 128 |
| 62 | 18 | 66 | 8448 | 152064 | 1.02% | 11 | 168 |
| 63 | 11 | 108 | 13824 | 152064 | 1.02% | 11 | 238 |
| 64 | 9 | 132 | 16896 | 152064 | 1.02% | 11 | 258 |
| 65 | 6 | 198 | 25344 | 152064 | 1.02% | 11 | 288 |
| 66 | 3 | 396 | 50688 | 152064 | 1.02% | 11 | 318 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 20 may be obtained with reference to Table 19. In this case, a frame overhead OH in cases listed in Table 20 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 20

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 44 | 27 | 3456 | 152064 | 1.02% | 2 | 304 |
| 2 | 36 | 33 | 4224 | 152064 | 1.02% | 2 | 312 |
| 3 | 12 | 99 | 12672 | 152064 | 1.02% | 2 | 336 |
| 4 | 4 | 297 | 38016 | 152064 | 1.02% | 2 | 344 |
| 5 | 99 | 12 | 1536 | 152064 | 1.02% | 3 | 150 |
| 6 | 66 | 18 | 2304 | 152064 | 1.02% | 3 | 216 |
| 7 | 33 | 36 | 4608 | 152064 | 1.02% | 3 | 282 |
| 8 | 22 | 54 | 6912 | 152064 | 1.02% | 3 | 304 |
| 9 | 18 | 66 | 8448 | 152064 | 1.02% | 3 | 312 |
| 10 | 11 | 108 | 13824 | 152064 | 1.02% | 3 | 326 |
| 11 | 9 | 132 | 16896 | 152064 | 1.02% | 3 | 330 |
| 12 | 6 | 198 | 25344 | 152064 | 1.02% | 3 | 336 |
| 13 | 3 | 396 | 50688 | 152064 | 1.02% | 3 | 342 |
| 14 | 44 | 27 | 3456 | 152064 | 1.02% | 4 | 216 |
| 15 | 36 | 33 | 4224 | 152064 | 1.02% | 4 | 240 |
| 16 | 12 | 99 | 12672 | 152064 | 1.02% | 4 | 312 |
| 17 | 4 | 297 | 38016 | 152064 | 1.02% | 4 | 336 |
| 18 | 66 | 18 | 2304 | 152064 | 1.02% | 5 | 84 |
| 19 | 33 | 36 | 4608 | 152064 | 1.02% | 5 | 216 |
| 20 | 22 | 54 | 6912 | 152064 | 1.02% | 5 | 260 |
| 21 | 18 | 66 | 8448 | 152064 | 1.02% | 5 | 276 |
| 22 | 11 | 108 | 13824 | 152064 | 1.02% | 5 | 304 |
| 23 | 9 | 132 | 16896 | 152064 | 1.02% | 5 | 312 |
| 24 | 6 | 198 | 25344 | 152064 | 1.02% | 5 | 324 |
| 25 | 3 | 396 | 50688 | 152064 | 1.02% | 5 | 336 |
| 26 | 44 | 27 | 3456 | 152064 | 1.02% | 6 | 128 |
| 27 | 36 | 33 | 4224 | 152064 | 1.02% | 6 | 168 |
| 28 | 12 | 99 | 12672 | 152064 | 1.02% | 6 | 288 |
| 29 | 4 | 297 | 38016 | 152064 | 1.02% | 6 | 328 |
| 30 | 33 | 36 | 4608 | 152064 | 1.02% | 7 | 150 |
| 31 | 22 | 54 | 6912 | 152064 | 1.02% | 7 | 216 |
| 32 | 18 | 66 | 8448 | 152064 | 1.02% | 7 | 240 |
| 33 | 11 | 108 | 13824 | 152064 | 1.02% | 7 | 282 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 34 | 9 | 132 | 16896 | 152064 | 1.02% | 7 | 294 |
| 35 | 6 | 198 | 25344 | 152064 | 1.02% | 7 | 312 |
| 36 | 3 | 396 | 50688 | 152064 | 1.02% | 7 | 330 |
| 37 | 44 | 27 | 3456 | 152064 | 1.02% | 8 | 40 |
| 38 | 36 | 33 | 4224 | 152064 | 1.02% | 8 | 96 |
| 39 | 12 | 99 | 12672 | 152064 | 1.02% | 8 | 264 |
| 40 | 4 | 297 | 38016 | 152064 | 1.02% | 8 | 320 |
| 41 | 33 | 36 | 4608 | 152064 | 1.02% | 9 | 84 |
| 42 | 22 | 54 | 6912 | 152064 | 1.02% | 9 | 172 |
| 43 | 18 | 66 | 8448 | 152064 | 1.02% | 9 | 204 |
| 44 | 11 | 108 | 13824 | 152064 | 1.02% | 9 | 260 |
| 45 | 9 | 132 | 16896 | 152064 | 1.02% | 9 | 276 |
| 46 | 6 | 198 | 25344 | 152064 | 1.02% | 9 | 300 |
| 47 | 3 | 396 | 50688 | 152064 | 1.02% | 9 | 324 |
| 48 | 36 | 33 | 4224 | 152064 | 1.02% | 10 | 24 |
| 49 | 12 | 99 | 12672 | 152064 | 1.02% | 10 | 240 |
| 50 | 4 | 297 | 38016 | 152064 | 1.02% | 10 | 312 |
| 51 | 22 | 54 | 6912 | 152064 | 1.02% | 11 | 128 |
| 52 | 18 | 66 | 8448 | 152064 | 1.02% | 11 | 168 |
| 53 | 11 | 108 | 13824 | 152064 | 1.02% | 11 | 238 |
| 54 | 9 | 132 | 16896 | 152064 | 1.02% | 11 | 258 |
| 55 | 6 | 198 | 25344 | 152064 | 1.02% | 11 | 288 |
| 56 | 3 | 396 | 50688 | 152064 | 1.02% | 11 | 318 |

(6) The quantity $N_{CW}$ of symbols before framing is 129024. For example, an open FEC (Open FEC, OFEC) encoding scheme with an encoding overhead of approximately 21.5% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 21. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 21 is low: OH<1.20%. In Table 21, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 21.

Table 21

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 102 | 10 | 1280 | 130560 | 1.19% | 516 |
| 2 | 85 | 12 | 1536 | 130560 | 1.19% | 516 |
| 3 | 68 | 15 | 1920 | 130560 | 1.19% | 516 |
| 4 | 60 | 17 | 2176 | 130560 | 1.19% | 516 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 5 | 51 | 20 | 2560 | 130560 | 1.19% | 516 |
| 6 | 34 | 30 | 3840 | 130560 | 1.19% | 516 |
| 7 | 30 | 34 | 4352 | 130560 | 1.19% | 516 |
| 8 | 20 | 51 | 6528 | 130560 | 1.19% | 516 |
| 9 | 17 | 60 | 7680 | 130560 | 1.19% | 516 |
| 10 | 15 | 68 | 8704 | 130560 | 1.19% | 516 |
| 11 | 12 | 85 | 10880 | 130560 | 1.19% | 516 |
| 12 | 10 | 102 | 13056 | 130560 | 1.19% | 516 |
| 13 | 9 | 113 | 14464 | 130176 | 0.89% | 135 |
| 14 | 8 | 127 | 16256 | 130048 | 0.79% | 8 |
| 15 | 6 | 170 | 21760 | 130560 | 1.19% | 516 |
| 16 | 5 | 204 | 26112 | 130560 | 1.19% | 516 |
| 17 | 4 | 254 | 32512 | 130048 | 0.79% | 8 |
| 18 | 4 | 255 | 32640 | 130560 | 1.19% | 516 |
| 19 | 3 | 339 | 43392 | 130176 | 0.89% | 135 |
| 20 | 3 | 340 | 43520 | 130560 | 1.19% | 516 |

Considering that the quantity $N_{TS}$ of training symbols is not greater than 11, Table 22 may be obtained with reference to Table 21. In this case, a frame overhead OH of a super-frame architecture in cases listed in Table 22 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 22. In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. It should be noted that the quantity $N_F$ of symbols in the super-frame in all cases listed in Table 22 is an integer multiple of 192 and 128.

Table 22

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 68 | 15 | 1920 | 130560 | 1.19% | 2 | 448 |
| 2 | 60 | 17 | 2176 | 130560 | 1.19% | 2 | 456 |
| 3 | 20 | 51 | 6528 | 130560 | 1.19% | 2 | 496 |
| 4 | 12 | 85 | 10880 | 130560 | 1.19% | 2 | 504 |
| 5 | 9 | 113 | 14464 | 130176 | 0.89% | 2 | 126 |
| 6 | 4 | 255 | 32640 | 130560 | 1.19% | 2 | 512 |
| 7 | 3 | 339 | 43392 | 130176 | 0.89% | 2 | 132 |
| 8 | 102 | 10 | 1280 | 130560 | 1.19% | 3 | 312 |
| 9 | 85 | 12 | 1536 | 130560 | 1.19% | 3 | 346 |
| 10 | 51 | 20 | 2560 | 130560 | 1.19% | 3 | 414 |
| 11 | 34 | 30 | 3840 | 130560 | 1.19% | 3 | 448 |
| 12 | 30 | 34 | 4352 | 130560 | 1.19% | 3 | 456 |
| 13 | 17 | 60 | 7680 | 130560 | 1.19% | 3 | 482 |
| 14 | 15 | 68 | 8704 | 130560 | 1.19% | 3 | 486 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 15 | 10 | 102 | 13056 | 130560 | 1.19% | 3 | 496 |
| 16 | 6 | 170 | 21760 | 130560 | 1.19% | 3 | 504 |
| 17 | 5 | 204 | 26112 | 130560 | 1.19% | 3 | 506 |
| 18 | 3 | 340 | 43520 | 130560 | 1.19% | 3 | 510 |
| 19 | 68 | 15 | 1920 | 130560 | 1.19% | 4 | 312 |
| 20 | 60 | 17 | 2176 | 130560 | 1.19% | 4 | 336 |
| 21 | 20 | 51 | 6528 | 130560 | 1.19% | 4 | 456 |
| 22 | 12 | 85 | 10880 | 130560 | 1.19% | 4 | 480 |
| 23 | 9 | 113 | 14464 | 130176 | 0.89% | 4 | 108 |
| 24 | 4 | 255 | 32640 | 130560 | 1.19% | 4 | 504 |
| 25 | 3 | 339 | 43392 | 130176 | 0.89% | 4 | 126 |
| 26 | 102 | 10 | 1280 | 130560 | 1.19% | 5 | 108 |
| 27 | 85 | 12 | 1536 | 130560 | 1.19% | 5 | 176 |
| 28 | 51 | 20 | 2560 | 130560 | 1.19% | 5 | 312 |
| 29 | 34 | 30 | 3840 | 130560 | 1.19% | 5 | 380 |
| 30 | 30 | 34 | 4352 | 130560 | 1.19% | 5 | 396 |
| 31 | 17 | 60 | 7680 | 130560 | 1.19% | 5 | 448 |
| 32 | 15 | 68 | 8704 | 130560 | 1.19% | 5 | 456 |
| 33 | 10 | 102 | 13056 | 130560 | 1.19% | 5 | 476 |
| 34 | 6 | 170 | 21760 | 130560 | 1.19% | 5 | 492 |
| 35 | 5 | 204 | 26112 | 130560 | 1.19% | 5 | 496 |
| 36 | 3 | 340 | 43520 | 130560 | 1.19% | 5 | 504 |
| 37 | 68 | 15 | 1920 | 130560 | 1.19% | 6 | 176 |
| 38 | 60 | 17 | 2176 | 130560 | 1.19% | 6 | 216 |
| 39 | 20 | 51 | 6528 | 130560 | 1.19% | 6 | 416 |
| 40 | 12 | 85 | 10880 | 130560 | 1.19% | 6 | 456 |
| 41 | 9 | 113 | 14464 | 130176 | 0.89% | 6 | 90 |
| 42 | 4 | 255 | 32640 | 130560 | 1.19% | 6 | 496 |
| 43 | 3 | 339 | 43392 | 130176 | 0.89% | 6 | 120 |
| 44 | 51 | 20 | 2560 | 130560 | 1.19% | 7 | 210 |
| 45 | 34 | 30 | 3840 | 130560 | 1.19% | 7 | 312 |
| 46 | 30 | 34 | 4352 | 130560 | 1.19% | 7 | 336 |
| 47 | 17 | 60 | 7680 | 130560 | 1.19% | 7 | 414 |
| 48 | 15 | 68 | 8704 | 130560 | 1.19% | 7 | 426 |
| 49 | 10 | 102 | 13056 | 130560 | 1.19% | 7 | 456 |
| 50 | 6 | 170 | 21760 | 130560 | 1.19% | 7 | 480 |
| 51 | 5 | 204 | 26112 | 130560 | 1.19% | 7 | 486 |
| 52 | 3 | 340 | 43520 | 130560 | 1.19% | 7 | 498 |
| 53 | 68 | 15 | 1920 | 130560 | 1.19% | 8 | 40 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 54 | 60 | 17 | 2176 | 130560 | 1.19% | 8 | 96 |
| 55 | 20 | 51 | 6528 | 130560 | 1.19% | 8 | 376 |
| 56 | 12 | 85 | 10880 | 130560 | 1.19% | 8 | 432 |
| 57 | 9 | 113 | 14464 | 130176 | 0.89% | 8 | 72 |
| 58 | 4 | 255 | 32640 | 130560 | 1.19% | 8 | 488 |
| 59 | 3 | 339 | 43392 | 130176 | 0.89% | 8 | 114 |
| 60 | 51 | 20 | 2560 | 130560 | 1.19% | 9 | 108 |
| 61 | 34 | 30 | 3840 | 130560 | 1.19% | 9 | 244 |
| 62 | 30 | 34 | 4352 | 130560 | 1.19% | 9 | 276 |
| 63 | 17 | 60 | 7680 | 130560 | 1.19% | 9 | 380 |
| 64 | 15 | 68 | 8704 | 130560 | 1.19% | 9 | 396 |
| 65 | 10 | 102 | 13056 | 130560 | 1.19% | 9 | 436 |
| 66 | 6 | 170 | 21760 | 130560 | 1.19% | 9 | 468 |
| 67 | 5 | 204 | 26112 | 130560 | 1.19% | 9 | 476 |
| 68 | 3 | 340 | 43520 | 130560 | 1.19% | 9 | 492 |
| 69 | 20 | 51 | 6528 | 130560 | 1.19% | 10 | 336 |
| 70 | 12 | 85 | 10880 | 130560 | 1.19% | 10 | 408 |
| 71 | 9 | 113 | 14464 | 130176 | 0.89% | 10 | 54 |
| 72 | 4 | 255 | 32640 | 130560 | 1.19% | 10 | 480 |
| 73 | 3 | 339 | 43392 | 130176 | 0.89% | 10 | 108 |
| 74 | 34 | 30 | 3840 | 130560 | 1.19% | 11 | 176 |
| 75 | 30 | 34 | 4352 | 130560 | 1.19% | 11 | 216 |
| 76 | 17 | 60 | 7680 | 130560 | 1.19% | 11 | 346 |
| 77 | 15 | 68 | 8704 | 130560 | 1.19% | 11 | 366 |
| 78 | 10 | 102 | 13056 | 130560 | 1.19% | 11 | 416 |
| 79 | 6 | 170 | 21760 | 130560 | 1.19% | 11 | 456 |
| 80 | 5 | 204 | 26112 | 130560 | 1.19% | 11 | 466 |
| 81 | 3 | 340 | 43520 | 130560 | 1.19% | 11 | 486 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 23 may be obtained with reference to Table 22. In this case, a frame overhead OH in cases listed in Table 23 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 23

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 68 | 15 | 1920 | 130560 | 1.19% | 2 | 448 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 2 | 20 | 51 | 6528 | 130560 | 1.19% | 2 | 496 |
| 3 | 4 | 255 | 32640 | 130560 | 1.19% | 2 | 512 |
| 4 | 3 | 339 | 43392 | 130176 | 0.89% | 2 | 132 |
| 5 | 85 | 12 | 1536 | 130560 | 1.19% | 3 | 346 |
| 6 | 34 | 30 | 3840 | 130560 | 1.19% | 3 | 448 |
| 7 | 17 | 60 | 7680 | 130560 | 1.19% | 3 | 482 |
| 8 | 10 | 102 | 13056 | 130560 | 1.19% | 3 | 496 |
| 9 | 5 | 204 | 26112 | 130560 | 1.19% | 3 | 506 |
| 10 | 68 | 15 | 1920 | 130560 | 1.19% | 4 | 312 |
| 11 | 20 | 51 | 6528 | 130560 | 1.19% | 4 | 456 |
| 12 | 4 | 255 | 32640 | 130560 | 1.19% | 4 | 504 |
| 13 | 3 | 339 | 43392 | 130176 | 0.89% | 4 | 126 |
| 14 | 85 | 12 | 1536 | 130560 | 1.19% | 5 | 176 |
| 15 | 34 | 30 | 3840 | 130560 | 1.19% | 5 | 380 |
| 16 | 17 | 60 | 7680 | 130560 | 1.19% | 5 | 448 |
| 17 | 10 | 102 | 13056 | 130560 | 1.19% | 5 | 476 |
| 18 | 5 | 204 | 26112 | 130560 | 1.19% | 5 | 496 |
| 19 | 68 | 15 | 1920 | 130560 | 1.19% | 6 | 176 |
| 20 | 20 | 51 | 6528 | 130560 | 1.19% | 6 | 416 |
| 21 | 4 | 255 | 32640 | 130560 | 1.19% | 6 | 496 |
| 22 | 3 | 339 | 43392 | 130176 | 0.89% | 6 | 120 |
| 23 | 34 | 30 | 3840 | 130560 | 1.19% | 7 | 312 |
| 24 | 17 | 60 | 7680 | 130560 | 1.19% | 7 | 414 |
| 25 | 10 | 102 | 13056 | 130560 | 1.19% | 7 | 456 |
| 26 | 5 | 204 | 26112 | 130560 | 1.19% | 7 | 486 |
| 27 | 68 | 15 | 1920 | 130560 | 1.19% | 8 | 40 |
| 28 | 20 | 51 | 6528 | 130560 | 1.19% | 8 | 376 |
| 29 | 4 | 255 | 32640 | 130560 | 1.19% | 8 | 488 |
| 30 | 3 | 339 | 43392 | 130176 | 0.89% | 8 | 114 |
| 31 | 34 | 30 | 3840 | 130560 | 1.19% | 9 | 244 |
| 32 | 17 | 60 | 7680 | 130560 | 1.19% | 9 | 380 |
| 33 | 10 | 102 | 13056 | 130560 | 1.19% | 9 | 436 |
| 34 | 5 | 204 | 26112 | 130560 | 1.19% | 9 | 476 |
| 35 | 20 | 51 | 6528 | 130560 | 1.19% | 10 | 336 |
| 36 | 4 | 255 | 32640 | 130560 | 1.19% | 10 | 480 |
| 37 | 3 | 339 | 43392 | 130176 | 0.89% | 10 | 108 |
| 38 | 34 | 30 | 3840 | 130560 | 1.19% | 11 | 176 |
| 39 | 17 | 60 | 7680 | 130560 | 1.19% | 11 | 346 |
| 40 | 10 | 102 | 13056 | 130560 | 1.19% | 11 | 416 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 41 | 5 | 204 | 26112 | 130560 | 1.19% | 11 | 466 |

(7) The quantity $N_{CW}$ of symbols before framing is 107520. For example, an open FEC (Open FEC, OFEC) encoding scheme with an encoding overhead of approximately 27.0% is used, or another encoding scheme may be used. A 1st symbol in every $N_{PG}=128$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 24. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 24 is low: OH<1.20%. In Table 24, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 24.

Table 24

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 85 | 10 | 1280 | 108800 | 1.19% | 430 |
| 2 | 77 | 11 | 1408 | 108416 | 0.83% | 49 |
| 3 | 53 | 16 | 2048 | 108544 | 0.95% | 176 |
| 4 | 50 | 17 | 2176 | 108800 | 1.19% | 430 |
| 5 | 34 | 25 | 3200 | 108800 | 1.19% | 430 |
| 6 | 25 | 34 | 4352 | 108800 | 1.19% | 430 |
| 7 | 17 | 50 | 6400 | 108800 | 1.19% | 430 |
| 8 | 16 | 53 | 6784 | 108544 | 0.95% | 176 |
| 9 | 11 | 77 | 9856 | 108416 | 0.83% | 49 |
| 10 | 10 | 85 | 10880 | 108800 | 1.19% | 430 |
| 11 | 8 | 106 | 13568 | 108544 | 0.95% | 176 |
| 12 | 7 | 121 | 15488 | 108416 | 0.83% | 49 |
| 13 | 5 | 170 | 21760 | 108800 | 1.19% | 430 |
| 14 | 4 | 212 | 27136 | 108544 | 0.95% | 176 |
| 15 | 3 | 283 | 36224 | 108672 | 1.07% | 303 |

Considering that the quantity $N_{TS}$ of training symbols is not greater than 11, Table 25 may be obtained with reference to Table 24. In this case, a frame overhead OH of a super-frame architecture in cases listed in Table 25 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 25.

Table 25

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 50 | 17 | 2176 | 108800 | 1.19% | 2 | 380 |
| 2 | 34 | 25 | 3200 | 108800 | 1.19% | 2 | 396 |
| 3 | 16 | 53 | 6784 | 108544 | 0.95% | 2 | 160 |
| 4 | 11 | 77 | 9856 | 108416 | 0.83% | 2 | 38 |
| 5 | 10 | 85 | 10880 | 108800 | 1.19% | 2 | 420 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 6 | 7 | 121 | 15488 | 108416 | 0.83% | 2 | 42 |
| 7 | 3 | 283 | 36224 | 108672 | 1.07% | 2 | 300 |
| 8 | 85 | 10 | 1280 | 108800 | 1.19% | 3 | 260 |
| 9 | 53 | 16 | 2048 | 108544 | 0.95% | 3 | 70 |
| 10 | 25 | 34 | 4352 | 108800 | 1.19% | 3 | 380 |
| 11 | 17 | 50 | 6400 | 108800 | 1.19% | 3 | 396 |
| 12 | 8 | 106 | 13568 | 108544 | 0.95% | 3 | 160 |
| 13 | 5 | 170 | 21760 | 108800 | 1.19% | 3 | 420 |
| 14 | 4 | 212 | 27136 | 108544 | 0.95% | 3 | 168 |
| 15 | 50 | 17 | 2176 | 108800 | 1.19% | 4 | 280 |
| 16 | 34 | 25 | 3200 | 108800 | 1.19% | 4 | 328 |
| 17 | 16 | 53 | 6784 | 108544 | 0.95% | 4 | 128 |
| 18 | 10 | 85 | 10880 | 108800 | 1.19% | 4 | 400 |
| 19 | 7 | 121 | 15488 | 108416 | 0.83% | 4 | 28 |
| 20 | 3 | 283 | 36224 | 108672 | 1.07% | 4 | 294 |
| 21 | 85 | 10 | 1280 | 108800 | 1.19% | 5 | 90 |
| 22 | 25 | 34 | 4352 | 108800 | 1.19% | 5 | 330 |
| 23 | 17 | 50 | 6400 | 108800 | 1.19% | 5 | 362 |
| 24 | 8 | 106 | 13568 | 108544 | 0.95% | 5 | 144 |
| 25 | 5 | 170 | 21760 | 108800 | 1.19% | 5 | 410 |
| 26 | 4 | 212 | 27136 | 108544 | 0.95% | 5 | 160 |
| 27 | 50 | 17 | 2176 | 108800 | 1.19% | 6 | 180 |
| 28 | 34 | 25 | 3200 | 108800 | 1.19% | 6 | 260 |
| 29 | 16 | 53 | 6784 | 108544 | 0.95% | 6 | 96 |
| 30 | 10 | 85 | 10880 | 108800 | 1.19% | 6 | 380 |
| 31 | 3 | 283 | 36224 | 108672 | 1.07% | 6 | 288 |
| 32 | 25 | 34 | 4352 | 108800 | 1.19% | 7 | 280 |
| 33 | 17 | 50 | 6400 | 108800 | 1.19% | 7 | 328 |
| 34 | 8 | 106 | 13568 | 108544 | 0.95% | 7 | 128 |
| 35 | 5 | 170 | 21760 | 108800 | 1.19% | 7 | 400 |
| 36 | 4 | 212 | 27136 | 108544 | 0.95% | 7 | 152 |
| 37 | 50 | 17 | 2176 | 108800 | 1.19% | 8 | 80 |
| 38 | 34 | 25 | 3200 | 108800 | 1.19% | 8 | 192 |
| 39 | 16 | 53 | 6784 | 108544 | 0.95% | 8 | 64 |
| 40 | 10 | 85 | 10880 | 108800 | 1.19% | 8 | 360 |
| 41 | 3 | 283 | 36224 | 108672 | 1.07% | 8 | 282 |
| 42 | 25 | 34 | 4352 | 108800 | 1.19% | 9 | 230 |
| 43 | 17 | 50 | 6400 | 108800 | 1.19% | 9 | 294 |
| 44 | 8 | 106 | 13568 | 108544 | 0.95% | 9 | 112 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 45 | 5 | 170 | 21760 | 108800 | 1.19% | 9 | 390 |
| 46 | 4 | 212 | 27136 | 108544 | 0.95% | 9 | 144 |
| 47 | 34 | 25 | 3200 | 108800 | 1.19% | 10 | 124 |
| 48 | 16 | 53 | 6784 | 108544 | 0.95% | 10 | 32 |
| 49 | 10 | 85 | 10880 | 108800 | 1.19% | 10 | 340 |
| 50 | 3 | 283 | 36224 | 108672 | 1.07% | 10 | 276 |
| 51 | 25 | 34 | 4352 | 108800 | 1.19% | 11 | 180 |
| 52 | 17 | 50 | 6400 | 108800 | 1.19% | 11 | 260 |
| 53 | 8 | 106 | 13568 | 108544 | 0.95% | 11 | 96 |
| 54 | 5 | 170 | 21760 | 108800 | 1.19% | 11 | 380 |
| 55 | 4 | 212 | 27136 | 108544 | 0.95% | 11 | 136 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 26 may be obtained with reference to Table 25. In this case, a frame overhead OH in cases listed in Table 26 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 26. It should be noted that, in this case (7), a case in which the quantity $N_F$ of symbols in the super-frame is an integer multiple of 192 and 128 and the quantity $N_S$ of symbols in each sub-frame is also an integer multiple of 192 and 128 does not exist.

Table 26

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 3 | 283 | 36224 | 108672 | 1.07% | 2 | 300 |
| 2 | 3 | 283 | 36224 | 108672 | 1.07% | 4 | 294 |
| 3 | 3 | 283 | 36224 | 108672 | 1.07% | 6 | 288 |
| 4 | 3 | 283 | 36224 | 108672 | 1.07% | 8 | 282 |
| 5 | 3 | 283 | 36224 | 108672 | 1.07% | 10 | 276 |

(8) The quantity $N_{CW}$ of symbols before framing is 175616. For example, a CFEC encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 27. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 27 is low: OH<1.20%. In Table 27, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 27.

Table 27

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 126 | 11 | 1408 | 177408 | 1.02% | 406 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 2 | 99 | 14 | 1792 | 177408 | 1.02% | 406 |
| 3 | 77 | 18 | 2304 | 177408 | 1.02% | 406 |
| 4 | 73 | 19 | 2432 | 177536 | 1.09% | 533 |
| 5 | 66 | 21 | 2688 | 177408 | 1.02% | 406 |
| 6 | 63 | 22 | 2816 | 177408 | 1.02% | 406 |
| 7 | 42 | 33 | 4224 | 177408 | 1.02% | 406 |
| 8 | 33 | 42 | 5376 | 177408 | 1.02% | 406 |
| 9 | 22 | 63 | 8064 | 177408 | 1.02% | 406 |
| 10 | 21 | 66 | 8448 | 177408 | 1.02% | 406 |
| 11 | 19 | 73 | 9344 | 177536 | 1.09% | 533 |
| 12 | 18 | 77 | 9856 | 177408 | 1.02% | 406 |
| 13 | 14 | 99 | 12672 | 177408 | 1.02% | 406 |
| 14 | 11 | 126 | 16128 | 177408 | 1.02% | 406 |
| 15 | 9 | 154 | 19712 | 177408 | 1.02% | 406 |
| 16 | 8 | 173 | 22144 | 177152 | 0.87% | 152 |
| 17 | 7 | 198 | 25344 | 177408 | 1.02% | 406 |
| 18 | 6 | 231 | 29568 | 177408 | 1.02% | 406 |
| 19 | 5 | 277 | 35456 | 177280 | 0.95% | 279 |
| 20 | 4 | 346 | 44288 | 177152 | 0.87% | 152 |
| 21 | 4 | 347 | 44416 | 177664 | 1.17% | 660 |

Considering that the quantity $N_{TS}$ of training symbols is not greater than 11, Table 28 may be obtained with reference to Table 27. In this case, a frame overhead OH of a super-frame architecture in cases listed in Table 28 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 28.

Table 28

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 126 | 11 | 1408 | 177408 | 1.02% | 2 | 280 |
| 2 | 73 | 19 | 2432 | 177536 | 1.09% | 2 | 460 |
| 3 | 66 | 21 | 2688 | 177408 | 1.02% | 2 | 340 |
| 4 | 42 | 33 | 4224 | 177408 | 1.02% | 2 | 364 |
| 5 | 22 | 63 | 8064 | 177408 | 1.02% | 2 | 384 |
| 6 | 19 | 73 | 9344 | 177536 | 1.09% | 2 | 514 |
| 7 | 18 | 77 | 9856 | 177408 | 1.02% | 2 | 388 |
| 8 | 14 | 99 | 12672 | 177408 | 1.02% | 2 | 392 |
| 9 | 8 | 173 | 22144 | 177152 | 0.87% | 2 | 144 |
| 10 | 6 | 231 | 29568 | 177408 | 1.02% | 2 | 400 |
| 11 | 5 | 277 | 35456 | 177280 | 0.95% | 2 | 274 |
| 12 | 4 | 347 | 44416 | 177664 | 1.17% | 2 | 656 |
| 13 | 99 | 14 | 1792 | 177408 | 1.02% | 3 | 208 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 14 | 77 | 18 | 2304 | 177408 | 1.02% | 3 | 252 |
| 15 | 63 | 22 | 2816 | 177408 | 1.02% | 3 | 280 |
| 16 | 33 | 42 | 5376 | 177408 | 1.02% | 3 | 340 |
| 17 | 21 | 66 | 8448 | 177408 | 1.02% | 3 | 364 |
| 18 | 11 | 126 | 16128 | 177408 | 1.02% | 3 | 384 |
| 19 | 9 | 154 | 19712 | 177408 | 1.02% | 3 | 388 |
| 20 | 7 | 198 | 25344 | 177408 | 1.02% | 3 | 392 |
| 21 | 4 | 346 | 44288 | 177152 | 0.87% | 3 | 144 |
| 22 | 126 | 11 | 1408 | 177408 | 1.02% | 4 | 28 |
| 23 | 73 | 19 | 2432 | 177536 | 1.09% | 4 | 314 |
| 24 | 66 | 21 | 2688 | 177408 | 1.02% | 4 | 208 |
| 25 | 42 | 33 | 4224 | 177408 | 1.02% | 4 | 280 |
| 26 | 22 | 63 | 8064 | 177408 | 1.02% | 4 | 340 |
| 27 | 19 | 73 | 9344 | 177536 | 1.09% | 4 | 476 |
| 28 | 18 | 77 | 9856 | 177408 | 1.02% | 4 | 352 |
| 29 | 14 | 99 | 12672 | 177408 | 1.02% | 4 | 364 |
| 30 | 8 | 173 | 22144 | 177152 | 0.87% | 4 | 128 |
| 31 | 6 | 231 | 29568 | 177408 | 1.02% | 4 | 388 |
| 32 | 5 | 277 | 35456 | 177280 | 0.95% | 4 | 264 |
| 33 | 4 | 347 | 44416 | 177664 | 1.17% | 4 | 648 |
| 34 | 77 | 18 | 2304 | 177408 | 1.02% | 5 | 98 |
| 35 | 63 | 22 | 2816 | 177408 | 1.02% | 5 | 154 |
| 36 | 33 | 42 | 5376 | 177408 | 1.02% | 5 | 274 |
| 37 | 21 | 66 | 8448 | 177408 | 1.02% | 5 | 322 |
| 38 | 11 | 126 | 16128 | 177408 | 1.02% | 5 | 362 |
| 39 | 9 | 154 | 19712 | 177408 | 1.02% | 5 | 370 |
| 40 | 7 | 198 | 25344 | 177408 | 1.02% | 5 | 378 |
| 41 | 4 | 346 | 44288 | 177152 | 0.87% | 5 | 136 |
| 42 | 73 | 19 | 2432 | 177536 | 1.09% | 6 | 168 |
| 43 | 66 | 21 | 2688 | 177408 | 1.02% | 6 | 76 |
| 44 | 42 | 33 | 4224 | 177408 | 1.02% | 6 | 196 |
| 45 | 22 | 63 | 8064 | 177408 | 1.02% | 6 | 296 |
| 46 | 19 | 73 | 9344 | 177536 | 1.09% | 6 | 438 |
| 47 | 18 | 77 | 9856 | 177408 | 1.02% | 6 | 316 |
| 48 | 14 | 99 | 12672 | 177408 | 1.02% | 6 | 336 |
| 49 | 8 | 173 | 22144 | 177152 | 0.87% | 6 | 112 |
| 50 | 6 | 231 | 29568 | 177408 | 1.02% | 6 | 376 |
| 51 | 5 | 277 | 35456 | 177280 | 0.95% | 6 | 254 |
| 52 | 4 | 347 | 44416 | 177664 | 1.17% | 6 | 640 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 53 | 63 | 22 | 2816 | 177408 | 1.02% | 7 | 28 |
| 54 | 33 | 42 | 5376 | 177408 | 1.02% | 7 | 208 |
| 55 | 21 | 66 | 8448 | 177408 | 1.02% | 7 | 280 |
| 56 | 11 | 126 | 16128 | 177408 | 1.02% | 7 | 340 |
| 57 | 9 | 154 | 19712 | 177408 | 1.02% | 7 | 352 |
| 58 | 7 | 198 | 25344 | 177408 | 1.02% | 7 | 364 |
| 59 | 4 | 346 | 44288 | 177152 | 0.87% | 7 | 128 |
| 60 | 73 | 19 | 2432 | 177536 | 1.09% | 8 | 22 |
| 61 | 42 | 33 | 4224 | 177408 | 1.02% | 8 | 112 |
| 62 | 22 | 63 | 8064 | 177408 | 1.02% | 8 | 252 |
| 63 | 19 | 73 | 9344 | 177536 | 1.09% | 8 | 400 |
| 64 | 18 | 77 | 9856 | 177408 | 1.02% | 8 | 280 |
| 65 | 14 | 99 | 12672 | 177408 | 1.02% | 8 | 308 |
| 66 | 8 | 173 | 22144 | 177152 | 0.87% | 8 | 96 |
| 67 | 6 | 231 | 29568 | 177408 | 1.02% | 8 | 364 |
| 68 | 5 | 277 | 35456 | 177280 | 0.95% | 8 | 244 |
| 69 | 4 | 347 | 44416 | 177664 | 1.17% | 8 | 632 |
| 70 | 33 | 42 | 5376 | 177408 | 1.02% | 9 | 142 |
| 71 | 21 | 66 | 8448 | 177408 | 1.02% | 9 | 238 |
| 72 | 11 | 126 | 16128 | 177408 | 1.02% | 9 | 318 |
| 73 | 9 | 154 | 19712 | 177408 | 1.02% | 9 | 334 |
| 74 | 7 | 198 | 25344 | 177408 | 1.02% | 9 | 350 |
| 75 | 4 | 346 | 44288 | 177152 | 0.87% | 9 | 120 |
| 76 | 42 | 33 | 4224 | 177408 | 1.02% | 10 | 28 |
| 77 | 22 | 63 | 8064 | 177408 | 1.02% | 10 | 208 |
| 78 | 19 | 73 | 9344 | 177536 | 1.09% | 10 | 362 |
| 79 | 18 | 77 | 9856 | 177408 | 1.02% | 10 | 244 |
| 80 | 14 | 99 | 12672 | 177408 | 1.02% | 10 | 280 |
| 81 | 8 | 173 | 22144 | 177152 | 0.87% | 10 | 80 |
| 82 | 6 | 231 | 29568 | 177408 | 1.02% | 10 | 352 |
| 83 | 5 | 277 | 35456 | 177280 | 0.95% | 10 | 234 |
| 84 | 4 | 347 | 44416 | 177664 | 1.17% | 10 | 624 |
| 85 | 33 | 42 | 5376 | 177408 | 1.02% | 11 | 76 |
| 86 | 21 | 66 | 8448 | 177408 | 1.02% | 11 | 196 |
| 87 | 11 | 126 | 16128 | 177408 | 1.02% | 11 | 296 |
| 88 | 9 | 154 | 19712 | 177408 | 1.02% | 11 | 316 |
| 89 | 7 | 198 | 25344 | 177408 | 1.02% | 11 | 336 |
| 90 | 4 | 346 | 44288 | 177152 | 0.87% | 11 | 112 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 29 may be obtained with reference to Table 28. In this case, a frame overhead OH in cases listed in Table 29 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 29.

Table 29

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 126 | 11 | 1408 | 177408 | 1.02% | 2 | 280 |
| 2 | 66 | 21 | 2688 | 177408 | 1.02% | 2 | 340 |
| 3 | 42 | 33 | 4224 | 177408 | 1.02% | 2 | 364 |
| 4 | 22 | 63 | 8064 | 177408 | 1.02% | 2 | 384 |
| 5 | 18 | 77 | 9856 | 177408 | 1.02% | 2 | 388 |
| 6 | 14 | 99 | 12672 | 177408 | 1.02% | 2 | 392 |
| 7 | 6 | 231 | 29568 | 177408 | 1.02% | 2 | 400 |
| 8 | 99 | 14 | 1792 | 177408 | 1.02% | 3 | 208 |
| 9 | 77 | 18 | 2304 | 177408 | 1.02% | 3 | 252 |
| 10 | 63 | 22 | 2816 | 177408 | 1.02% | 3 | 280 |
| 11 | 33 | 42 | 5376 | 177408 | 1.02% | 3 | 340 |
| 12 | 21 | 66 | 8448 | 177408 | 1.02% | 3 | 364 |
| 13 | 11 | 126 | 16128 | 177408 | 1.02% | 3 | 384 |
| 14 | 9 | 154 | 19712 | 177408 | 1.02% | 3 | 388 |
| 15 | 7 | 198 | 25344 | 177408 | 1.02% | 3 | 392 |
| 16 | 126 | 11 | 1408 | 177408 | 1.02% | 4 | 28 |
| 17 | 66 | 21 | 2688 | 177408 | 1.02% | 4 | 208 |
| 18 | 42 | 33 | 4224 | 177408 | 1.02% | 4 | 280 |
| 19 | 22 | 63 | 8064 | 177408 | 1.02% | 4 | 340 |
| 20 | 18 | 77 | 9856 | 177408 | 1.02% | 4 | 352 |
| 21 | 14 | 99 | 12672 | 177408 | 1.02% | 4 | 364 |
| 22 | 6 | 231 | 29568 | 177408 | 1.02% | 4 | 388 |
| 23 | 77 | 18 | 2304 | 177408 | 1.02% | 5 | 98 |
| 24 | 63 | 22 | 2816 | 177408 | 1.02% | 5 | 154 |
| 25 | 33 | 42 | 5376 | 177408 | 1.02% | 5 | 274 |
| 26 | 21 | 66 | 8448 | 177408 | 1.02% | 5 | 322 |
| 27 | 11 | 126 | 16128 | 177408 | 1.02% | 5 | 362 |
| 28 | 9 | 154 | 19712 | 177408 | 1.02% | 5 | 370 |
| 29 | 7 | 198 | 25344 | 177408 | 1.02% | 5 | 378 |
| 30 | 66 | 21 | 2688 | 177408 | 1.02% | 6 | 76 |
| 31 | 42 | 33 | 4224 | 177408 | 1.02% | 6 | 196 |
| 32 | 22 | 63 | 8064 | 177408 | 1.02% | 6 | 296 |
| 33 | 18 | 77 | 9856 | 177408 | 1.02% | 6 | 316 |
| 34 | 14 | 99 | 12672 | 177408 | 1.02% | 6 | 336 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 35 | 6 | 231 | 29568 | 177408 | 1.02% | 6 | 376 |
| 36 | 63 | 22 | 2816 | 177408 | 1.02% | 7 | 28 |
| 37 | 33 | 42 | 5376 | 177408 | 1.02% | 7 | 208 |
| 38 | 21 | 66 | 8448 | 177408 | 1.02% | 7 | 280 |
| 39 | 11 | 126 | 16128 | 177408 | 1.02% | 7 | 340 |
| 40 | 9 | 154 | 19712 | 177408 | 1.02% | 7 | 352 |
| 41 | 7 | 198 | 25344 | 177408 | 1.02% | 7 | 364 |
| 42 | 42 | 33 | 4224 | 177408 | 1.02% | 8 | 112 |
| 43 | 22 | 63 | 8064 | 177408 | 1.02% | 8 | 252 |
| 44 | 18 | 77 | 9856 | 177408 | 1.02% | 8 | 280 |
| 45 | 14 | 99 | 12672 | 177408 | 1.02% | 8 | 308 |
| 46 | 6 | 231 | 29568 | 177408 | 1.02% | 8 | 364 |
| 47 | 33 | 42 | 5376 | 177408 | 1.02% | 9 | 142 |
| 48 | 21 | 66 | 8448 | 177408 | 1.02% | 9 | 238 |
| 49 | 11 | 126 | 16128 | 177408 | 1.02% | 9 | 318 |
| 50 | 9 | 154 | 19712 | 177408 | 1.02% | 9 | 334 |
| 51 | 7 | 198 | 25344 | 177408 | 1.02% | 9 | 350 |
| 52 | 42 | 33 | 4224 | 177408 | 1.02% | 10 | 28 |
| 53 | 22 | 63 | 8064 | 177408 | 1.02% | 10 | 208 |
| 54 | 18 | 77 | 9856 | 177408 | 1.02% | 10 | 244 |
| 55 | 14 | 99 | 12672 | 177408 | 1.02% | 10 | 280 |
| 56 | 6 | 231 | 29568 | 177408 | 1.02% | 10 | 352 |
| 57 | 33 | 42 | 5376 | 177408 | 1.02% | 11 | 76 |
| 58 | 21 | 66 | 8448 | 177408 | 1.02% | 11 | 196 |
| 59 | 11 | 126 | 16128 | 177408 | 1.02% | 11 | 296 |
| 60 | 9 | 154 | 19712 | 177408 | 1.02% | 11 | 316 |
| 61 | 7 | 198 | 25344 | 177408 | 1.02% | 11 | 336 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 30 may be obtained with reference to Table 29. In this case, a frame overhead OH in cases listed in Table 30 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 30

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 66 | 21 | 2688 | 177408 | 1.02% | 2 | 340 |
| 2 | 42 | 33 | 4224 | 177408 | 1.02% | 2 | 364 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 3 | 22 | 63 | 8064 | 177408 | 1.02% | 2 | 384 |
| 4 | 14 | 99 | 12672 | 177408 | 1.02% | 2 | 392 |
| 5 | 6 | 231 | 29568 | 177408 | 1.02% | 2 | 400 |
| 6 | 77 | 18 | 2304 | 177408 | 1.02% | 3 | 252 |
| 7 | 33 | 42 | 5376 | 177408 | 1.02% | 3 | 340 |
| 8 | 21 | 66 | 8448 | 177408 | 1.02% | 3 | 364 |
| 9 | 11 | 126 | 16128 | 177408 | 1.02% | 3 | 384 |
| 10 | 7 | 198 | 25344 | 177408 | 1.02% | 3 | 392 |
| 11 | 66 | 21 | 2688 | 177408 | 1.02% | 4 | 208 |
| 12 | 42 | 33 | 4224 | 177408 | 1.02% | 4 | 280 |
| 13 | 22 | 63 | 8064 | 177408 | 1.02% | 4 | 340 |
| 14 | 14 | 99 | 12672 | 177408 | 1.02% | 4 | 364 |
| 15 | 6 | 231 | 29568 | 177408 | 1.02% | 4 | 388 |
| 16 | 77 | 18 | 2304 | 177408 | 1.02% | 5 | 98 |
| 17 | 33 | 42 | 5376 | 177408 | 1.02% | 5 | 274 |
| 18 | 21 | 66 | 8448 | 177408 | 1.02% | 5 | 322 |
| 19 | 11 | 126 | 16128 | 177408 | 1.02% | 5 | 362 |
| 20 | 7 | 198 | 25344 | 177408 | 1.02% | 5 | 378 |
| 21 | 66 | 21 | 2688 | 177408 | 1.02% | 6 | 76 |
| 22 | 42 | 33 | 4224 | 177408 | 1.02% | 6 | 196 |
| 23 | 22 | 63 | 8064 | 177408 | 1.02% | 6 | 296 |
| 24 | 14 | 99 | 12672 | 177408 | 1.02% | 6 | 336 |
| 25 | 6 | 231 | 29568 | 177408 | 1.02% | 6 | 376 |
| 26 | 33 | 42 | 5376 | 177408 | 1.02% | 7 | 208 |
| 27 | 21 | 66 | 8448 | 177408 | 1.02% | 7 | 280 |
| 28 | 11 | 126 | 16128 | 177408 | 1.02% | 7 | 340 |
| 29 | 7 | 198 | 25344 | 177408 | 1.02% | 7 | 364 |
| 30 | 42 | 33 | 4224 | 177408 | 1.02% | 8 | 112 |
| 31 | 22 | 63 | 8064 | 177408 | 1.02% | 8 | 252 |
| 32 | 14 | 99 | 12672 | 177408 | 1.02% | 8 | 308 |
| 33 | 6 | 231 | 29568 | 177408 | 1.02% | 8 | 364 |
| 34 | 33 | 42 | 5376 | 177408 | 1.02% | 9 | 142 |
| 35 | 21 | 66 | 8448 | 177408 | 1.02% | 9 | 238 |
| 36 | 11 | 126 | 16128 | 177408 | 1.02% | 9 | 318 |
| 37 | 7 | 198 | 25344 | 177408 | 1.02% | 9 | 350 |
| 38 | 42 | 33 | 4224 | 177408 | 1.02% | 10 | 28 |
| 39 | 22 | 63 | 8064 | 177408 | 1.02% | 10 | 208 |
| 40 | 14 | 99 | 12672 | 177408 | 1.02% | 10 | 280 |
| 41 | 6 | 231 | 29568 | 177408 | 1.02% | 10 | 352 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 42 | 33 | 42 | 5376 | 177408 | 1.02% | 11 | 76 |
| 43 | 21 | 66 | 8448 | 177408 | 1.02% | 11 | 196 |
| 44 | 11 | 126 | 16128 | 177408 | 1.02% | 11 | 296 |
| 45 | 7 | 198 | 25344 | 177408 | 1.02% | 11 | 336 |

(9) The quantity $N_{CW}$ of symbols before framing is 351232. For example, a CFEC encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 31. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 31 is low: OH<1.20%. In Table 31, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 31.

Table 31

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 277 | 10 | 1280 | 354560 | 0.95% | 558 |
| 2 | 252 | 11 | 1408 | 354816 | 1.02% | 812 |
| 3 | 231 | 12 | 1536 | 354816 | 1.02% | 812 |
| 4 | 213 | 13 | 1664 | 354432 | 0.91% | 431 |
| 5 | 198 | 14 | 1792 | 354816 | 1.02% | 812 |
| 6 | 185 | 15 | 1920 | 355200 | 1.13% | 1193 |
| 7 | 173 | 16 | 2048 | 354304 | 0.87% | 304 |
| 8 | 163 | 17 | 2176 | 354688 | 0.98% | 685 |
| 9 | 154 | 18 | 2304 | 354816 | 1.02% | 812 |
| 10 | 146 | 19 | 2432 | 355072 | 1.09% | 1066 |
| 11 | 132 | 21 | 2688 | 354816 | 1.02% | 812 |
| 12 | 126 | 22 | 2816 | 354816 | 1.02% | 812 |
| 13 | 111 | 25 | 3200 | 355200 | 1.13% | 1193 |
| 14 | 99 | 28 | 3584 | 354816 | 1.02% | 812 |
| 15 | 84 | 33 | 4224 | 354816 | 1.02% | 812 |
| 16 | 77 | 36 | 4608 | 354816 | 1.02% | 812 |
| 17 | 75 | 37 | 4736 | 355200 | 1.13% | 1193 |
| 18 | 73 | 38 | 4864 | 355072 | 1.09% | 1066 |
| 19 | 71 | 39 | 4992 | 354432 | 0.91% | 431 |
| 20 | 66 | 42 | 5376 | 354816 | 1.02% | 812 |
| 21 | 63 | 44 | 5632 | 354816 | 1.02% | 812 |
| 22 | 59 | 47 | 6016 | 354944 | 1.06% | 939 |
| 23 | 47 | 59 | 7552 | 354944 | 1.06% | 939 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 24 | 44 | 63 | 8064 | 354816 | 1.02% | 812 |
| 25 | 42 | 66 | 8448 | 354816 | 1.02% | 812 |
| 26 | 39 | 71 | 9088 | 354432 | 0.91% | 431 |
| 27 | 38 | 73 | 9344 | 355072 | 1.09% | 1066 |
| 28 | 37 | 75 | 9600 | 355200 | 1.13% | 1193 |
| 29 | 36 | 77 | 9856 | 354816 | 1.02% | 812 |
| 30 | 33 | 84 | 10752 | 354816 | 1.02% | 812 |
| 31 | 28 | 99 | 12672 | 354816 | 1.02% | 812 |
| 32 | 25 | 111 | 14208 | 355200 | 1.13% | 1193 |
| 33 | 22 | 126 | 16128 | 354816 | 1.02% | 812 |
| 34 | 21 | 132 | 16896 | 354816 | 1.02% | 812 |
| 35 | 19 | 146 | 18688 | 355072 | 1.09% | 1066 |
| 36 | 18 | 154 | 19712 | 354816 | 1.02% | 812 |
| 37 | 17 | 163 | 20864 | 354688 | 0.98% | 685 |
| 38 | 16 | 173 | 22144 | 354304 | 0.87% | 304 |
| 39 | 15 | 185 | 23680 | 355200 | 1.13% | 1193 |
| 40 | 14 | 198 | 25344 | 354816 | 1.02% | 812 |
| 41 | 13 | 213 | 27264 | 354432 | 0.91% | 431 |
| 42 | 12 | 231 | 29568 | 354816 | 1.02% | 812 |
| 43 | 11 | 252 | 32256 | 354816 | 1.02% | 812 |
| 44 | 10 | 277 | 35456 | 354560 | 0.95% | 558 |
| 45 | 9 | 308 | 39424 | 354816 | 1.02% | 812 |
| 46 | 8 | 346 | 44288 | 354304 | 0.87% | 304 |
| 47 | 8 | 347 | 44416 | 355328 | 1.17% | 1320 |
| 48 | 7 | 396 | 50688 | 354816 | 1.02% | 812 |

Considering that the quantity $N_{TS}$ of training symbols is not greater than 11, Table 32 may be obtained with reference to Table 31. In this case, a frame overhead OH of a super-frame architecture in cases listed in Table 32 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 32.

Table 32

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 252 | 11 | 1408 | 354816 | 1.02% | 2 | 560 |
| 2 | 213 | 13 | 1664 | 354432 | 0.91% | 2 | 218 |
| 3 | 185 | 15 | 1920 | 355200 | 1.13% | 2 | 1008 |
| 4 | 163 | 17 | 2176 | 354688 | 0.98% | 2 | 522 |
| 5 | 146 | 19 | 2432 | 355072 | 1.09% | 2 | 920 |
| 6 | 132 | 21 | 2688 | 354816 | 1.02% | 2 | 680 |
| 7 | 111 | 25 | 3200 | 355200 | 1.13% | 2 | 1082 |
| 8 | 84 | 33 | 4224 | 354816 | 1.02% | 2 | 728 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 9 | 75 | 37 | 4736 | 355200 | 1.13% | 2 | 1118 |
| 10 | 71 | 39 | 4992 | 354432 | 0.91% | 2 | 360 |
| 11 | 59 | 47 | 6016 | 354944 | 1.06% | 2 | 880 |
| 12 | 47 | 59 | 7552 | 354944 | 1.06% | 2 | 892 |
| 13 | 44 | 63 | 8064 | 354816 | 1.02% | 2 | 768 |
| 14 | 39 | 71 | 9088 | 354432 | 0.91% | 2 | 392 |
| 15 | 38 | 73 | 9344 | 355072 | 1.09% | 2 | 1028 |
| 16 | 37 | 75 | 9600 | 355200 | 1.13% | 2 | 1156 |
| 17 | 36 | 77 | 9856 | 354816 | 1.02% | 2 | 776 |
| 18 | 28 | 99 | 12672 | 354816 | 1.02% | 2 | 784 |
| 19 | 25 | 111 | 14208 | 355200 | 1.13% | 2 | 1168 |
| 20 | 17 | 163 | 20864 | 354688 | 0.98% | 2 | 668 |
| 21 | 16 | 173 | 22144 | 354304 | 0.87% | 2 | 288 |
| 22 | 15 | 185 | 23680 | 355200 | 1.13% | 2 | 1178 |
| 23 | 13 | 213 | 27264 | 354432 | 0.91% | 2 | 418 |
| 24 | 12 | 231 | 29568 | 354816 | 1.02% | 2 | 800 |
| 25 | 10 | 277 | 35456 | 354560 | 0.95% | 2 | 548 |
| 26 | 8 | 347 | 44416 | 355328 | 1.17% | 2 | 1312 |
| 27 | 231 | 12 | 1536 | 354816 | 1.02% | 3 | 350 |
| 28 | 198 | 14 | 1792 | 354816 | 1.02% | 3 | 416 |
| 29 | 154 | 18 | 2304 | 354816 | 1.02% | 3 | 504 |
| 30 | 126 | 22 | 2816 | 354816 | 1.02% | 3 | 560 |
| 31 | 99 | 28 | 3584 | 354816 | 1.02% | 3 | 614 |
| 32 | 77 | 36 | 4608 | 354816 | 1.02% | 3 | 658 |
| 33 | 73 | 38 | 4864 | 355072 | 1.09% | 3 | 920 |
| 34 | 66 | 42 | 5376 | 354816 | 1.02% | 3 | 680 |
| 35 | 63 | 44 | 5632 | 354816 | 1.02% | 3 | 686 |
| 36 | 42 | 66 | 8448 | 354816 | 1.02% | 3 | 728 |
| 37 | 33 | 84 | 10752 | 354816 | 1.02% | 3 | 746 |
| 38 | 22 | 126 | 16128 | 354816 | 1.02% | 3 | 768 |
| 39 | 21 | 132 | 16896 | 354816 | 1.02% | 3 | 770 |
| 40 | 19 | 146 | 18688 | 355072 | 1.09% | 3 | 1028 |
| 41 | 18 | 154 | 19712 | 354816 | 1.02% | 3 | 776 |
| 42 | 14 | 198 | 25344 | 354816 | 1.02% | 3 | 784 |
| 43 | 11 | 252 | 32256 | 354816 | 1.02% | 3 | 790 |
| 44 | 9 | 308 | 39424 | 354816 | 1.02% | 3 | 794 |
| 45 | 8 | 346 | 44288 | 354304 | 0.87% | 3 | 288 |
| 46 | 7 | 396 | 50688 | 354816 | 1.02% | 3 | 798 |
| 47 | 252 | 11 | 1408 | 354816 | 1.02% | 4 | 56 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 48 | 185 | 15 | 1920 | 355200 | 1.13% | 4 | 638 |
| 49 | 163 | 17 | 2176 | 354688 | 0.98% | 4 | 196 |
| 50 | 146 | 19 | 2432 | 355072 | 1.09% | 4 | 628 |
| 51 | 132 | 21 | 2688 | 354816 | 1.02% | 4 | 416 |
| 52 | 111 | 25 | 3200 | 355200 | 1.13% | 4 | 860 |
| 53 | 84 | 33 | 4224 | 354816 | 1.02% | 4 | 560 |
| 54 | 75 | 37 | 4736 | 355200 | 1.13% | 4 | 968 |
| 55 | 71 | 39 | 4992 | 354432 | 0.91% | 4 | 218 |
| 56 | 59 | 47 | 6016 | 354944 | 1.06% | 4 | 762 |
| 57 | 47 | 59 | 7552 | 354944 | 1.06% | 4 | 798 |
| 58 | 44 | 63 | 8064 | 354816 | 1.02% | 4 | 680 |
| 59 | 39 | 71 | 9088 | 354432 | 0.91% | 4 | 314 |
| 60 | 38 | 73 | 9344 | 355072 | 1.09% | 4 | 952 |
| 61 | 37 | 75 | 9600 | 355200 | 1.13% | 4 | 1082 |
| 62 | 36 | 77 | 9856 | 354816 | 1.02% | 4 | 704 |
| 63 | 28 | 99 | 12672 | 354816 | 1.02% | 4 | 728 |
| 64 | 25 | 111 | 14208 | 355200 | 1.13% | 4 | 1118 |
| 65 | 17 | 163 | 20864 | 354688 | 0.98% | 4 | 634 |
| 66 | 16 | 173 | 22144 | 354304 | 0.87% | 4 | 256 |
| 67 | 15 | 185 | 23680 | 355200 | 1.13% | 4 | 1148 |
| 68 | 13 | 213 | 27264 | 354432 | 0.91% | 4 | 392 |
| 69 | 12 | 231 | 29568 | 354816 | 1.02% | 4 | 776 |
| 70 | 10 | 277 | 35456 | 354560 | 0.95% | 4 | 528 |
| 71 | 8 | 347 | 44416 | 355328 | 1.17% | 4 | 1296 |
| 72 | 154 | 18 | 2304 | 354816 | 1.02% | 5 | 196 |
| 73 | 126 | 22 | 2816 | 354816 | 1.02% | 5 | 308 |
| 74 | 99 | 28 | 3584 | 354816 | 1.02% | 5 | 416 |
| 75 | 77 | 36 | 4608 | 354816 | 1.02% | 5 | 504 |
| 76 | 73 | 38 | 4864 | 355072 | 1.09% | 5 | 774 |
| 77 | 66 | 42 | 5376 | 354816 | 1.02% | 5 | 548 |
| 78 | 63 | 44 | 5632 | 354816 | 1.02% | 5 | 560 |
| 79 | 42 | 66 | 8448 | 354816 | 1.02% | 5 | 644 |
| 80 | 33 | 84 | 10752 | 354816 | 1.02% | 5 | 680 |
| 81 | 22 | 126 | 16128 | 354816 | 1.02% | 5 | 724 |
| 82 | 21 | 132 | 16896 | 354816 | 1.02% | 5 | 728 |
| 83 | 19 | 146 | 18688 | 355072 | 1.09% | 5 | 990 |
| 84 | 18 | 154 | 19712 | 354816 | 1.02% | 5 | 740 |
| 85 | 14 | 198 | 25344 | 354816 | 1.02% | 5 | 756 |
| 86 | 11 | 252 | 32256 | 354816 | 1.02% | 5 | 768 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 87 | 9 | 308 | 39424 | 354816 | 1.02% | 5 | 776 |
| 88 | 8 | 346 | 44288 | 354304 | 0.87% | 5 | 272 |
| 89 | 7 | 396 | 50688 | 354816 | 1.02% | 5 | 784 |
| 90 | 185 | 15 | 1920 | 355200 | 1.13% | 6 | 268 |
| 91 | 146 | 19 | 2432 | 355072 | 1.09% | 6 | 336 |
| 92 | 132 | 21 | 2688 | 354816 | 1.02% | 6 | 152 |
| 93 | 111 | 25 | 3200 | 355200 | 1.13% | 6 | 638 |
| 94 | 84 | 33 | 4224 | 354816 | 1.02% | 6 | 392 |
| 95 | 75 | 37 | 4736 | 355200 | 1.13% | 6 | 818 |
| 96 | 71 | 39 | 4992 | 354432 | 0.91% | 6 | 76 |
| 97 | 59 | 47 | 6016 | 354944 | 1.06% | 6 | 644 |
| 98 | 47 | 59 | 7552 | 354944 | 1.06% | 6 | 704 |
| 99 | 44 | 63 | 8064 | 354816 | 1.02% | 6 | 592 |
| 100 | 39 | 71 | 9088 | 354432 | 0.91% | 6 | 236 |
| 101 | 38 | 73 | 9344 | 355072 | 1.09% | 6 | 876 |
| 102 | 37 | 75 | 9600 | 355200 | 1.13% | 6 | 1008 |
| 103 | 36 | 77 | 9856 | 354816 | 1.02% | 6 | 632 |
| 104 | 28 | 99 | 12672 | 354816 | 1.02% | 6 | 672 |
| 105 | 25 | 111 | 14208 | 355200 | 1.13% | 6 | 1068 |
| 106 | 17 | 163 | 20864 | 354688 | 0.98% | 6 | 600 |
| 107 | 16 | 173 | 22144 | 354304 | 0.87% | 6 | 224 |
| 108 | 15 | 185 | 23680 | 355200 | 1.13% | 6 | 1118 |
| 109 | 13 | 213 | 27264 | 354432 | 0.91% | 6 | 366 |
| 110 | 12 | 231 | 29568 | 354816 | 1.02% | 6 | 752 |
| 111 | 10 | 277 | 35456 | 354560 | 0.95% | 6 | 508 |
| 112 | 8 | 347 | 44416 | 355328 | 1.17% | 6 | 1280 |
| 113 | 126 | 22 | 2816 | 354816 | 1.02% | 7 | 56 |
| 114 | 99 | 28 | 3584 | 354816 | 1.02% | 7 | 218 |
| 115 | 77 | 36 | 4608 | 354816 | 1.02% | 7 | 350 |
| 116 | 73 | 38 | 4864 | 355072 | 1.09% | 7 | 628 |
| 117 | 66 | 42 | 5376 | 354816 | 1.02% | 7 | 416 |
| 118 | 63 | 44 | 5632 | 354816 | 1.02% | 7 | 434 |
| 119 | 42 | 66 | 8448 | 354816 | 1.02% | 7 | 560 |
| 120 | 33 | 84 | 10752 | 354816 | 1.02% | 7 | 614 |
| 121 | 22 | 126 | 16128 | 354816 | 1.02% | 7 | 680 |
| 122 | 21 | 132 | 16896 | 354816 | 1.02% | 7 | 686 |
| 123 | 19 | 146 | 18688 | 355072 | 1.09% | 7 | 952 |
| 124 | 18 | 154 | 19712 | 354816 | 1.02% | 7 | 704 |
| 125 | 14 | 198 | 25344 | 354816 | 1.02% | 7 | 728 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 126 | 11 | 252 | 32256 | 354816 | 1.02% | 7 | 746 |
| 127 | 9 | 308 | 39424 | 354816 | 1.02% | 7 | 758 |
| 128 | 8 | 346 | 44288 | 354304 | 0.87% | 7 | 256 |
| 129 | 7 | 396 | 50688 | 354816 | 1.02% | 7 | 770 |
| 130 | 146 | 19 | 2432 | 355072 | 1.09% | 8 | 44 |
| 131 | 111 | 25 | 3200 | 355200 | 1.13% | 8 | 416 |
| 132 | 84 | 33 | 4224 | 354816 | 1.02% | 8 | 224 |
| 133 | 75 | 37 | 4736 | 355200 | 1.13% | 8 | 668 |
| 134 | 59 | 47 | 6016 | 354944 | 1.06% | 8 | 526 |
| 135 | 47 | 59 | 7552 | 354944 | 1.06% | 8 | 610 |
| 136 | 44 | 63 | 8064 | 354816 | 1.02% | 8 | 504 |
| 137 | 39 | 71 | 9088 | 354432 | 0.91% | 8 | 158 |
| 138 | 38 | 73 | 9344 | 355072 | 1.09% | 8 | 800 |
| 139 | 37 | 75 | 9600 | 355200 | 1.13% | 8 | 934 |
| 140 | 36 | 77 | 9856 | 354816 | 1.02% | 8 | 560 |
| 141 | 28 | 99 | 12672 | 354816 | 1.02% | 8 | 616 |
| 142 | 25 | 111 | 14208 | 355200 | 1.13% | 8 | 1018 |
| 143 | 17 | 163 | 20864 | 354688 | 0.98% | 8 | 566 |
| 144 | 16 | 173 | 22144 | 354304 | 0.87% | 8 | 192 |
| 145 | 15 | 185 | 23680 | 355200 | 1.13% | 8 | 1088 |
| 146 | 13 | 213 | 27264 | 354432 | 0.91% | 8 | 340 |
| 147 | 12 | 231 | 29568 | 354816 | 1.02% | 8 | 728 |
| 148 | 10 | 277 | 35456 | 354560 | 0.95% | 8 | 488 |
| 149 | 8 | 347 | 44416 | 355328 | 1.17% | 8 | 1264 |
| 150 | 77 | 36 | 4608 | 354816 | 1.02% | 9 | 196 |
| 151 | 73 | 38 | 4864 | 355072 | 1.09% | 9 | 482 |
| 152 | 66 | 42 | 5376 | 354816 | 1.02% | 9 | 284 |
| 153 | 63 | 44 | 5632 | 354816 | 1.02% | 9 | 308 |
| 154 | 42 | 66 | 8448 | 354816 | 1.02% | 9 | 476 |
| 155 | 33 | 84 | 10752 | 354816 | 1.02% | 9 | 548 |
| 156 | 22 | 126 | 16128 | 354816 | 1.02% | 9 | 636 |
| 157 | 21 | 132 | 16896 | 354816 | 1.02% | 9 | 644 |
| 158 | 19 | 146 | 18688 | 355072 | 1.09% | 9 | 914 |
| 159 | 18 | 154 | 19712 | 354816 | 1.02% | 9 | 668 |
| 160 | 14 | 198 | 25344 | 354816 | 1.02% | 9 | 700 |
| 161 | 11 | 252 | 32256 | 354816 | 1.02% | 9 | 724 |
| 162 | 9 | 308 | 39424 | 354816 | 1.02% | 9 | 740 |
| 163 | 8 | 346 | 44288 | 354304 | 0.87% | 9 | 240 |
| 164 | 7 | 396 | 50688 | 354816 | 1.02% | 9 | 756 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 165 | 111 | 25 | 3200 | 355200 | 1.13% | 10 | 194 |
| 166 | 84 | 33 | 4224 | 354816 | 1.02% | 10 | 56 |
| 167 | 75 | 37 | 4736 | 355200 | 1.13% | 10 | 518 |
| 168 | 59 | 47 | 6016 | 354944 | 1.06% | 10 | 408 |
| 169 | 47 | 59 | 7552 | 354944 | 1.06% | 10 | 516 |
| 170 | 44 | 63 | 8064 | 354816 | 1.02% | 10 | 416 |
| 171 | 39 | 71 | 9088 | 354432 | 0.91% | 10 | 80 |
| 172 | 38 | 73 | 9344 | 355072 | 1.09% | 10 | 724 |
| 173 | 37 | 75 | 9600 | 355200 | 1.13% | 10 | 860 |
| 174 | 36 | 77 | 9856 | 354816 | 1.02% | 10 | 488 |
| 175 | 28 | 99 | 12672 | 354816 | 1.02% | 10 | 560 |
| 176 | 25 | 111 | 14208 | 355200 | 1.13% | 10 | 968 |
| 177 | 17 | 163 | 20864 | 354688 | 0.98% | 10 | 532 |
| 178 | 16 | 173 | 22144 | 354304 | 0.87% | 10 | 160 |
| 179 | 15 | 185 | 23680 | 355200 | 1.13% | 10 | 1058 |
| 180 | 13 | 213 | 27264 | 354432 | 0.91% | 10 | 314 |
| 181 | 12 | 231 | 29568 | 354816 | 1.02% | 10 | 704 |
| 182 | 10 | 277 | 35456 | 354560 | 0.95% | 10 | 468 |
| 183 | 8 | 347 | 44416 | 355328 | 1.17% | 10 | 1248 |
| 184 | 77 | 36 | 4608 | 354816 | 1.02% | 11 | 42 |
| 185 | 73 | 38 | 4864 | 355072 | 1.09% | 11 | 336 |
| 186 | 66 | 42 | 5376 | 354816 | 1.02% | 11 | 152 |
| 187 | 63 | 44 | 5632 | 354816 | 1.02% | 11 | 182 |
| 188 | 42 | 66 | 8448 | 354816 | 1.02% | 11 | 392 |
| 189 | 33 | 84 | 10752 | 354816 | 1.02% | 11 | 482 |
| 190 | 22 | 126 | 16128 | 354816 | 1.02% | 11 | 592 |
| 191 | 21 | 132 | 16896 | 354816 | 1.02% | 11 | 602 |
| 192 | 19 | 146 | 18688 | 355072 | 1.09% | 11 | 876 |
| 193 | 18 | 154 | 19712 | 354816 | 1.02% | 11 | 632 |
| 194 | 14 | 198 | 25344 | 354816 | 1.02% | 11 | 672 |
| 195 | 11 | 252 | 32256 | 354816 | 1.02% | 11 | 702 |
| 196 | 9 | 308 | 39424 | 354816 | 1.02% | 11 | 722 |
| 197 | 8 | 346 | 44288 | 354304 | 0.87% | 11 | 224 |
| 198 | 7 | 396 | 50688 | 354816 | 1.02% | 11 | 742 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 33 may be obtained with reference to Table 32. In this case, a frame overhead OH in cases listed in Table 33 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 33.

Table 33

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 252 | 11 | 1408 | 354816 | 1.02% | 2 | 560 |
| 2 | 213 | 13 | 1664 | 354432 | 0.91% | 2 | 218 |
| 3 | 185 | 15 | 1920 | 355200 | 1.13% | 2 | 1008 |
| 4 | 132 | 21 | 2688 | 354816 | 1.02% | 2 | 680 |
| 5 | 111 | 25 | 3200 | 355200 | 1.13% | 2 | 1082 |
| 6 | 84 | 33 | 4224 | 354816 | 1.02% | 2 | 728 |
| 7 | 75 | 37 | 4736 | 355200 | 1.13% | 2 | 1118 |
| 8 | 71 | 39 | 4992 | 354432 | 0.91% | 2 | 360 |
| 9 | 44 | 63 | 8064 | 354816 | 1.02% | 2 | 768 |
| 10 | 39 | 71 | 9088 | 354432 | 0.91% | 2 | 392 |
| 11 | 37 | 75 | 9600 | 355200 | 1.13% | 2 | 1156 |
| 12 | 36 | 77 | 9856 | 354816 | 1.02% | 2 | 776 |
| 13 | 28 | 99 | 12672 | 354816 | 1.02% | 2 | 784 |
| 14 | 25 | 111 | 14208 | 355200 | 1.13% | 2 | 1168 |
| 15 | 15 | 185 | 23680 | 355200 | 1.13% | 2 | 1178 |
| 16 | 13 | 213 | 27264 | 354432 | 0.91% | 2 | 418 |
| 17 | 12 | 231 | 29568 | 354816 | 1.02% | 2 | 800 |
| 18 | 231 | 12 | 1536 | 354816 | 1.02% | 3 | 350 |
| 19 | 198 | 14 | 1792 | 354816 | 1.02% | 3 | 416 |
| 20 | 154 | 18 | 2304 | 354816 | 1.02% | 3 | 504 |
| 21 | 126 | 22 | 2816 | 354816 | 1.02% | 3 | 560 |
| 22 | 99 | 28 | 3584 | 354816 | 1.02% | 3 | 614 |
| 23 | 77 | 36 | 4608 | 354816 | 1.02% | 3 | 658 |
| 24 | 66 | 42 | 5376 | 354816 | 1.02% | 3 | 680 |
| 25 | 63 | 44 | 5632 | 354816 | 1.02% | 3 | 686 |
| 26 | 42 | 66 | 8448 | 354816 | 1.02% | 3 | 728 |
| 27 | 33 | 84 | 10752 | 354816 | 1.02% | 3 | 746 |
| 28 | 22 | 126 | 16128 | 354816 | 1.02% | 3 | 768 |
| 29 | 21 | 132 | 16896 | 354816 | 1.02% | 3 | 770 |
| 30 | 18 | 154 | 19712 | 354816 | 1.02% | 3 | 776 |
| 31 | 14 | 198 | 25344 | 354816 | 1.02% | 3 | 784 |
| 32 | 11 | 252 | 32256 | 354816 | 1.02% | 3 | 790 |
| 33 | 9 | 308 | 39424 | 354816 | 1.02% | 3 | 794 |
| 34 | 7 | 396 | 50688 | 354816 | 1.02% | 3 | 798 |
| 35 | 252 | 11 | 1408 | 354816 | 1.02% | 4 | 56 |
| 36 | 185 | 15 | 1920 | 355200 | 1.13% | 4 | 638 |
| 37 | 132 | 21 | 2688 | 354816 | 1.02% | 4 | 416 |
| 38 | 111 | 25 | 3200 | 355200 | 1.13% | 4 | 860 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 39 | 84 | 33 | 4224 | 354816 | 1.02% | 4 | 560 |
| 40 | 75 | 37 | 4736 | 355200 | 1.13% | 4 | 968 |
| 41 | 71 | 39 | 4992 | 354432 | 0.91% | 4 | 218 |
| 42 | 44 | 63 | 8064 | 354816 | 1.02% | 4 | 680 |
| 43 | 39 | 71 | 9088 | 354432 | 0.91% | 4 | 314 |
| 44 | 37 | 75 | 9600 | 355200 | 1.13% | 4 | 1082 |
| 45 | 36 | 77 | 9856 | 354816 | 1.02% | 4 | 704 |
| 46 | 28 | 99 | 12672 | 354816 | 1.02% | 4 | 728 |
| 47 | 25 | 111 | 14208 | 355200 | 1.13% | 4 | 1118 |
| 48 | 15 | 185 | 23680 | 355200 | 1.13% | 4 | 1148 |
| 49 | 13 | 213 | 27264 | 354432 | 0.91% | 4 | 392 |
| 50 | 12 | 231 | 29568 | 354816 | 1.02% | 4 | 776 |
| 51 | 154 | 18 | 2304 | 354816 | 1.02% | 5 | 196 |
| 52 | 126 | 22 | 2816 | 354816 | 1.02% | 5 | 308 |
| 53 | 99 | 28 | 3584 | 354816 | 1.02% | 5 | 416 |
| 54 | 77 | 36 | 4608 | 354816 | 1.02% | 5 | 504 |
| 55 | 66 | 42 | 5376 | 354816 | 1.02% | 5 | 548 |
| 56 | 63 | 44 | 5632 | 354816 | 1.02% | 5 | 560 |
| 57 | 42 | 66 | 8448 | 354816 | 1.02% | 5 | 644 |
| 58 | 33 | 84 | 10752 | 354816 | 1.02% | 5 | 680 |
| 59 | 22 | 126 | 16128 | 354816 | 1.02% | 5 | 724 |
| 60 | 21 | 132 | 16896 | 354816 | 1.02% | 5 | 728 |
| 61 | 18 | 154 | 19712 | 354816 | 1.02% | 5 | 740 |
| 62 | 14 | 198 | 25344 | 354816 | 1.02% | 5 | 756 |
| 63 | 11 | 252 | 32256 | 354816 | 1.02% | 5 | 768 |
| 64 | 9 | 308 | 39424 | 354816 | 1.02% | 5 | 776 |
| 65 | 7 | 396 | 50688 | 354816 | 1.02% | 5 | 784 |
| 66 | 185 | 15 | 1920 | 355200 | 1.13% | 6 | 268 |
| 67 | 132 | 21 | 2688 | 354816 | 1.02% | 6 | 152 |
| 68 | 111 | 25 | 3200 | 355200 | 1.13% | 6 | 638 |
| 69 | 84 | 33 | 4224 | 354816 | 1.02% | 6 | 392 |
| 70 | 75 | 37 | 4736 | 355200 | 1.13% | 6 | 818 |
| 71 | 71 | 39 | 4992 | 354432 | 0.91% | 6 | 76 |
| 72 | 44 | 63 | 8064 | 354816 | 1.02% | 6 | 592 |
| 73 | 39 | 71 | 9088 | 354432 | 0.91% | 6 | 236 |
| 74 | 37 | 75 | 9600 | 355200 | 1.13% | 6 | 1008 |
| 75 | 36 | 77 | 9856 | 354816 | 1.02% | 6 | 632 |
| 76 | 28 | 99 | 12672 | 354816 | 1.02% | 6 | 672 |
| 77 | 25 | 111 | 14208 | 355200 | 1.13% | 6 | 1068 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 78 | 15 | 185 | 23680 | 355200 | 1.13% | 6 | 1118 |
| 79 | 13 | 213 | 27264 | 354432 | 0.91% | 6 | 366 |
| 80 | 12 | 231 | 29568 | 354816 | 1.02% | 6 | 752 |
| 81 | 126 | 22 | 2816 | 354816 | 1.02% | 7 | 56 |
| 82 | 99 | 28 | 3584 | 354816 | 1.02% | 7 | 218 |
| 83 | 77 | 36 | 4608 | 354816 | 1.02% | 7 | 350 |
| 84 | 66 | 42 | 5376 | 354816 | 1.02% | 7 | 416 |
| 85 | 63 | 44 | 5632 | 354816 | 1.02% | 7 | 434 |
| 86 | 42 | 66 | 8448 | 354816 | 1.02% | 7 | 560 |
| 87 | 33 | 84 | 10752 | 354816 | 1.02% | 7 | 614 |
| 88 | 22 | 126 | 16128 | 354816 | 1.02% | 7 | 680 |
| 89 | 21 | 132 | 16896 | 354816 | 1.02% | 7 | 686 |
| 90 | 18 | 154 | 19712 | 354816 | 1.02% | 7 | 704 |
| 91 | 14 | 198 | 25344 | 354816 | 1.02% | 7 | 728 |
| 92 | 11 | 252 | 32256 | 354816 | 1.02% | 7 | 746 |
| 93 | 9 | 308 | 39424 | 354816 | 1.02% | 7 | 758 |
| 94 | 7 | 396 | 50688 | 354816 | 1.02% | 7 | 770 |
| 95 | 111 | 25 | 3200 | 355200 | 1.13% | 8 | 416 |
| 96 | 84 | 33 | 4224 | 354816 | 1.02% | 8 | 224 |
| 97 | 75 | 37 | 4736 | 355200 | 1.13% | 8 | 668 |
| 98 | 44 | 63 | 8064 | 354816 | 1.02% | 8 | 504 |
| 99 | 39 | 71 | 9088 | 354432 | 0.91% | 8 | 158 |
| 100 | 37 | 75 | 9600 | 355200 | 1.13% | 8 | 934 |
| 101 | 36 | 77 | 9856 | 354816 | 1.02% | 8 | 560 |
| 102 | 28 | 99 | 12672 | 354816 | 1.02% | 8 | 616 |
| 103 | 25 | 111 | 14208 | 355200 | 1.13% | 8 | 1018 |
| 104 | 15 | 185 | 23680 | 355200 | 1.13% | 8 | 1088 |
| 105 | 13 | 213 | 27264 | 354432 | 0.91% | 8 | 340 |
| 106 | 12 | 231 | 29568 | 354816 | 1.02% | 8 | 728 |
| 107 | 77 | 36 | 4608 | 354816 | 1.02% | 9 | 196 |
| 108 | 66 | 42 | 5376 | 354816 | 1.02% | 9 | 284 |
| 109 | 63 | 44 | 5632 | 354816 | 1.02% | 9 | 308 |
| 110 | 42 | 66 | 8448 | 354816 | 1.02% | 9 | 476 |
| 111 | 33 | 84 | 10752 | 354816 | 1.02% | 9 | 548 |
| 112 | 22 | 126 | 16128 | 354816 | 1.02% | 9 | 636 |
| 113 | 21 | 132 | 16896 | 354816 | 1.02% | 9 | 644 |
| 114 | 18 | 154 | 19712 | 354816 | 1.02% | 9 | 668 |
| 115 | 14 | 198 | 25344 | 354816 | 1.02% | 9 | 700 |
| 116 | 11 | 252 | 32256 | 354816 | 1.02% | 9 | 724 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 117 | 9 | 308 | 39424 | 354816 | 1.02% | 9 | 740 |
| 118 | 7 | 396 | 50688 | 354816 | 1.02% | 9 | 756 |
| 119 | 111 | 25 | 3200 | 355200 | 1.13% | 10 | 194 |
| 120 | 84 | 33 | 4224 | 354816 | 1.02% | 10 | 56 |
| 121 | 75 | 37 | 4736 | 355200 | 1.13% | 10 | 518 |
| 122 | 44 | 63 | 8064 | 354816 | 1.02% | 10 | 416 |
| 123 | 39 | 71 | 9088 | 354432 | 0.91% | 10 | 80 |
| 124 | 37 | 75 | 9600 | 355200 | 1.13% | 10 | 860 |
| 125 | 36 | 77 | 9856 | 354816 | 1.02% | 10 | 488 |
| 126 | 28 | 99 | 12672 | 354816 | 1.02% | 10 | 560 |
| 127 | 25 | 111 | 14208 | 355200 | 1.13% | 10 | 968 |
| 128 | 15 | 185 | 23680 | 355200 | 1.13% | 10 | 1058 |
| 129 | 13 | 213 | 27264 | 354432 | 0.91% | 10 | 314 |
| 130 | 12 | 231 | 29568 | 354816 | 1.02% | 10 | 704 |
| 131 | 77 | 36 | 4608 | 354816 | 1.02% | 11 | 42 |
| 132 | 66 | 42 | 5376 | 354816 | 1.02% | 11 | 152 |
| 133 | 63 | 44 | 5632 | 354816 | 1.02% | 11 | 182 |
| 134 | 42 | 66 | 8448 | 354816 | 1.02% | 11 | 392 |
| 135 | 33 | 84 | 10752 | 354816 | 1.02% | 11 | 482 |
| 136 | 22 | 126 | 16128 | 354816 | 1.02% | 11 | 592 |
| 137 | 21 | 132 | 16896 | 354816 | 1.02% | 11 | 602 |
| 138 | 18 | 154 | 19712 | 354816 | 1.02% | 11 | 632 |
| 139 | 14 | 198 | 25344 | 354816 | 1.02% | 11 | 672 |
| 140 | 11 | 252 | 32256 | 354816 | 1.02% | 11 | 702 |
| 141 | 9 | 308 | 39424 | 354816 | 1.02% | 11 | 722 |
| 142 | 7 | 396 | 50688 | 354816 | 1.02% | 11 | 742 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 34 may be obtained with reference to Table 33. In this case, a frame overhead OH in cases listed in Table 34 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 34

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 185 | 15 | 1920 | 355200 | 1.13% | 2 | 1008 |
| 2 | 132 | 21 | 2688 | 354816 | 1.02% | 2 | 680 |
| 3 | 84 | 33 | 4224 | 354816 | 1.02% | 2 | 728 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 4 | 71 | 39 | 4992 | 354432 | 0.91% | 2 | 360 |
| 5 | 44 | 63 | 8064 | 354816 | 1.02% | 2 | 768 |
| 6 | 37 | 75 | 9600 | 355200 | 1.13% | 2 | 1156 |
| 7 | 28 | 99 | 12672 | 354816 | 1.02% | 2 | 784 |
| 8 | 25 | 111 | 14208 | 355200 | 1.13% | 2 | 1168 |
| 9 | 13 | 213 | 27264 | 354432 | 0.91% | 2 | 418 |
| 10 | 12 | 231 | 29568 | 354816 | 1.02% | 2 | 800 |
| 11 | 231 | 12 | 1536 | 354816 | 1.02% | 3 | 350 |
| 12 | 154 | 18 | 2304 | 354816 | 1.02% | 3 | 504 |
| 13 | 77 | 36 | 4608 | 354816 | 1.02% | 3 | 658 |
| 14 | 66 | 42 | 5376 | 354816 | 1.02% | 3 | 680 |
| 15 | 42 | 66 | 8448 | 354816 | 1.02% | 3 | 728 |
| 16 | 33 | 84 | 10752 | 354816 | 1.02% | 3 | 746 |
| 17 | 22 | 126 | 16128 | 354816 | 1.02% | 3 | 768 |
| 18 | 21 | 132 | 16896 | 354816 | 1.02% | 3 | 770 |
| 19 | 14 | 198 | 25344 | 354816 | 1.02% | 3 | 784 |
| 20 | 11 | 252 | 32256 | 354816 | 1.02% | 3 | 790 |
| 21 | 7 | 396 | 50688 | 354816 | 1.02% | 3 | 798 |
| 22 | 185 | 15 | 1920 | 355200 | 1.13% | 4 | 638 |
| 23 | 132 | 21 | 2688 | 354816 | 1.02% | 4 | 416 |
| 24 | 84 | 33 | 4224 | 354816 | 1.02% | 4 | 560 |
| 25 | 71 | 39 | 4992 | 354432 | 0.91% | 4 | 218 |
| 26 | 44 | 63 | 8064 | 354816 | 1.02% | 4 | 680 |
| 27 | 37 | 75 | 9600 | 355200 | 1.13% | 4 | 1082 |
| 28 | 28 | 99 | 12672 | 354816 | 1.02% | 4 | 728 |
| 29 | 25 | 111 | 14208 | 355200 | 1.13% | 4 | 1118 |
| 30 | 13 | 213 | 27264 | 354432 | 0.91% | 4 | 392 |
| 31 | 12 | 231 | 29568 | 354816 | 1.02% | 4 | 776 |
| 32 | 154 | 18 | 2304 | 354816 | 1.02% | 5 | 196 |
| 33 | 77 | 36 | 4608 | 354816 | 1.02% | 5 | 504 |
| 34 | 66 | 42 | 5376 | 354816 | 1.02% | 5 | 548 |
| 35 | 42 | 66 | 8448 | 354816 | 1.02% | 5 | 644 |
| 36 | 33 | 84 | 10752 | 354816 | 1.02% | 5 | 680 |
| 37 | 22 | 126 | 16128 | 354816 | 1.02% | 5 | 724 |
| 38 | 21 | 132 | 16896 | 354816 | 1.02% | 5 | 728 |
| 39 | 14 | 198 | 25344 | 354816 | 1.02% | 5 | 756 |
| 40 | 11 | 252 | 32256 | 354816 | 1.02% | 5 | 768 |
| 41 | 7 | 396 | 50688 | 354816 | 1.02% | 5 | 784 |
| 42 | 185 | 15 | 1920 | 355200 | 1.13% | 6 | 268 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 43 | 132 | 21 | 2688 | 354816 | 1.02% | 6 | 152 |
| 44 | 84 | 33 | 4224 | 354816 | 1.02% | 6 | 392 |
| 45 | 71 | 39 | 4992 | 354432 | 0.91% | 6 | 76 |
| 46 | 44 | 63 | 8064 | 354816 | 1.02% | 6 | 592 |
| 47 | 37 | 75 | 9600 | 355200 | 1.13% | 6 | 1008 |
| 48 | 28 | 99 | 12672 | 354816 | 1.02% | 6 | 672 |
| 49 | 25 | 111 | 14208 | 355200 | 1.13% | 6 | 1068 |
| 50 | 13 | 213 | 27264 | 354432 | 0.91% | 6 | 366 |
| 51 | 12 | 231 | 29568 | 354816 | 1.02% | 6 | 752 |
| 52 | 77 | 36 | 4608 | 354816 | 1.02% | 7 | 350 |
| 53 | 66 | 42 | 5376 | 354816 | 1.02% | 7 | 416 |
| 54 | 42 | 66 | 8448 | 354816 | 1.02% | 7 | 560 |
| 55 | 33 | 84 | 10752 | 354816 | 1.02% | 7 | 614 |
| 56 | 22 | 126 | 16128 | 354816 | 1.02% | 7 | 680 |
| 57 | 21 | 132 | 16896 | 354816 | 1.02% | 7 | 686 |
| 58 | 14 | 198 | 25344 | 354816 | 1.02% | 7 | 728 |
| 59 | 11 | 252 | 32256 | 354816 | 1.02% | 7 | 746 |
| 60 | 7 | 396 | 50688 | 354816 | 1.02% | 7 | 770 |
| 61 | 84 | 33 | 4224 | 354816 | 1.02% | 8 | 224 |
| 62 | 44 | 63 | 8064 | 354816 | 1.02% | 8 | 504 |
| 63 | 37 | 75 | 9600 | 355200 | 1.13% | 8 | 934 |
| 64 | 28 | 99 | 12672 | 354816 | 1.02% | 8 | 616 |
| 65 | 25 | 111 | 14208 | 355200 | 1.13% | 8 | 1018 |
| 66 | 13 | 213 | 27264 | 354432 | 0.91% | 8 | 340 |
| 67 | 12 | 231 | 29568 | 354816 | 1.02% | 8 | 728 |
| 68 | 77 | 36 | 4608 | 354816 | 1.02% | 9 | 196 |
| 69 | 66 | 42 | 5376 | 354816 | 1.02% | 9 | 284 |
| 70 | 42 | 66 | 8448 | 354816 | 1.02% | 9 | 476 |
| 71 | 33 | 84 | 10752 | 354816 | 1.02% | 9 | 548 |
| 72 | 22 | 126 | 16128 | 354816 | 1.02% | 9 | 636 |
| 73 | 21 | 132 | 16896 | 354816 | 1.02% | 9 | 644 |
| 74 | 14 | 198 | 25344 | 354816 | 1.02% | 9 | 700 |
| 75 | 11 | 252 | 32256 | 354816 | 1.02% | 9 | 724 |
| 76 | 7 | 396 | 50688 | 354816 | 1.02% | 9 | 756 |
| 77 | 84 | 33 | 4224 | 354816 | 1.02% | 10 | 56 |
| 78 | 44 | 63 | 8064 | 354816 | 1.02% | 10 | 416 |
| 79 | 37 | 75 | 9600 | 355200 | 1.13% | 10 | 860 |
| 80 | 28 | 99 | 12672 | 354816 | 1.02% | 10 | 560 |
| 81 | 25 | 111 | 14208 | 355200 | 1.13% | 10 | 968 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 82 | 13 | 213 | 27264 | 354432 | 0.91% | 10 | 314 |
| 83 | 12 | 231 | 29568 | 354816 | 1.02% | 10 | 704 |
| 84 | 77 | 36 | 4608 | 354816 | 1.02% | 11 | 42 |
| 85 | 66 | 42 | 5376 | 354816 | 1.02% | 11 | 152 |
| 86 | 42 | 66 | 8448 | 354816 | 1.02% | 11 | 392 |
| 87 | 33 | 84 | 10752 | 354816 | 1.02% | 11 | 482 |
| 88 | 22 | 126 | 16128 | 354816 | 1.02% | 11 | 592 |
| 89 | 21 | 132 | 16896 | 354816 | 1.02% | 11 | 602 |
| 90 | 14 | 198 | 25344 | 354816 | 1.02% | 11 | 672 |
| 91 | 11 | 252 | 32256 | 354816 | 1.02% | 11 | 702 |
| 92 | 7 | 396 | 50688 | 354816 | 1.02% | 11 | 742 |

(10) The quantity $N_{CW}$ of symbols before framing is 526848. For example, a CFEC encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 35. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 35 is low: OH<1.20%. In Table 35, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 35.

Table 35

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 415 | 10 | 1280 | 531200 | 0.83% | 202 |
| 2 | 378 | 11 | 1408 | 532224 | 1.02% | 1218 |
| 3 | 346 | 12 | 1536 | 531456 | 0.87% | 456 |
| 4 | 320 | 13 | 1664 | 532480 | 1.07% | 1472 |
| 5 | 297 | 14 | 1792 | 532224 | 1.02% | 1218 |
| 6 | 277 | 15 | 1920 | 531840 | 0.95% | 837 |
| 7 | 260 | 16 | 2048 | 532480 | 1.07% | 1472 |
| 8 | 245 | 17 | 2176 | 533120 | 1.19% | 2107 |
| 9 | 231 | 18 | 2304 | 532224 | 1.02% | 1218 |
| 10 | 219 | 19 | 2432 | 532608 | 1.09% | 1599 |
| 11 | 208 | 20 | 2560 | 532480 | 1.07% | 1472 |
| 12 | 198 | 21 | 2688 | 532224 | 1.02% | 1218 |
| 13 | 189 | 22 | 2816 | 532224 | 1.02% | 1218 |
| 14 | 181 | 23 | 2944 | 532864 | 1.14% | 1853 |
| 15 | 173 | 24 | 3072 | 531456 | 0.87% | 456 |
| 16 | 166 | 25 | 3200 | 531200 | 0.83% | 202 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 17 | 160 | 26 | 3328 | 532480 | 1.07% | 1472 |
| 18 | 154 | 27 | 3456 | 532224 | 1.02% | 1218 |
| 19 | 134 | 31 | 3968 | 531712 | 0.92% | 710 |
| 20 | 130 | 32 | 4096 | 532480 | 1.07% | 1472 |
| 21 | 126 | 33 | 4224 | 532224 | 1.02% | 1218 |
| 22 | 119 | 35 | 4480 | 533120 | 1.19% | 2107 |
| 23 | 104 | 40 | 5120 | 532480 | 1.07% | 1472 |
| 24 | 99 | 42 | 5376 | 532224 | 1.02% | 1218 |
| 25 | 85 | 49 | 6272 | 533120 | 1.19% | 2107 |
| 26 | 83 | 50 | 6400 | 531200 | 0.83% | 202 |
| 27 | 80 | 52 | 6656 | 532480 | 1.07% | 1472 |
| 28 | 77 | 54 | 6912 | 532224 | 1.02% | 1218 |
| 29 | 73 | 57 | 7296 | 532608 | 1.09% | 1599 |
| 30 | 67 | 62 | 7936 | 531712 | 0.92% | 710 |
| 31 | 66 | 63 | 8064 | 532224 | 1.02% | 1218 |
| 32 | 65 | 64 | 8192 | 532480 | 1.07% | 1472 |
| 33 | 64 | 65 | 8320 | 532480 | 1.07% | 1472 |
| 34 | 63 | 66 | 8448 | 532224 | 1.02% | 1218 |
| 35 | 62 | 67 | 8576 | 531712 | 0.92% | 710 |
| 36 | 57 | 73 | 9344 | 532608 | 1.09% | 1599 |
| 37 | 54 | 77 | 9856 | 532224 | 1.02% | 1218 |
| 38 | 52 | 80 | 10240 | 532480 | 1.07% | 1472 |
| 39 | 50 | 83 | 10624 | 531200 | 0.83% | 202 |
| 40 | 49 | 85 | 10880 | 533120 | 1.19% | 2107 |
| 41 | 42 | 99 | 12672 | 532224 | 1.02% | 1218 |
| 42 | 40 | 104 | 13312 | 532480 | 1.07% | 1472 |
| 43 | 35 | 119 | 15232 | 533120 | 1.19% | 2107 |
| 44 | 33 | 126 | 16128 | 532224 | 1.02% | 1218 |
| 45 | 32 | 130 | 16640 | 532480 | 1.07% | 1472 |
| 46 | 31 | 134 | 17152 | 531712 | 0.92% | 710 |
| 47 | 27 | 154 | 19712 | 532224 | 1.02% | 1218 |
| 48 | 26 | 160 | 20480 | 532480 | 1.07% | 1472 |
| 49 | 25 | 166 | 21248 | 531200 | 0.83% | 202 |
| 50 | 24 | 173 | 22144 | 531456 | 0.87% | 456 |
| 51 | 23 | 181 | 23168 | 532864 | 1.14% | 1853 |
| 52 | 22 | 189 | 24192 | 532224 | 1.02% | 1218 |
| 53 | 21 | 198 | 25344 | 532224 | 1.02% | 1218 |
| 54 | 20 | 208 | 26624 | 532480 | 1.07% | 1472 |
| 55 | 19 | 219 | 28032 | 532608 | 1.09% | 1599 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 56 | 18 | 231 | 29568 | 532224 | 1.02% | 1218 |
| 57 | 17 | 245 | 31360 | 533120 | 1.19% | 2107 |
| 58 | 16 | 260 | 33280 | 532480 | 1.07% | 1472 |
| 59 | 15 | 277 | 35456 | 531840 | 0.95% | 837 |
| 60 | 14 | 297 | 38016 | 532224 | 1.02% | 1218 |
| 61 | 13 | 320 | 40960 | 532480 | 1.07% | 1472 |
| 62 | 12 | 346 | 44288 | 531456 | 0.87% | 456 |
| 63 | 12 | 347 | 44416 | 532992 | 1.17% | 1980 |
| 64 | 11 | 378 | 48384 | 532224 | 1.02% | 1218 |

Considering that the quantity $N_{TS}$ of training symbols is not greater than 11, Table 36 may be obtained with reference to Table 35. In this case, a frame overhead OH of a super-frame architecture in cases listed in Table 36 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 36.

Table 36

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 378 | 11 | 1408 | 532224 | 1.02% | 2 | 840 |
| 2 | 320 | 13 | 1664 | 532480 | 1.07% | 2 | 1152 |
| 3 | 277 | 15 | 1920 | 531840 | 0.95% | 2 | 560 |
| 4 | 245 | 17 | 2176 | 533120 | 1.19% | 2 | 1862 |
| 5 | 219 | 19 | 2432 | 532608 | 1.09% | 2 | 1380 |
| 6 | 198 | 21 | 2688 | 532224 | 1.02% | 2 | 1020 |
| 7 | 181 | 23 | 2944 | 532864 | 1.14% | 2 | 1672 |
| 8 | 166 | 25 | 3200 | 531200 | 0.83% | 2 | 36 |
| 9 | 154 | 27 | 3456 | 532224 | 1.02% | 2 | 1064 |
| 10 | 134 | 31 | 3968 | 531712 | 0.92% | 2 | 576 |
| 11 | 126 | 33 | 4224 | 532224 | 1.02% | 2 | 1092 |
| 12 | 119 | 35 | 4480 | 533120 | 1.19% | 2 | 1988 |
| 13 | 85 | 49 | 6272 | 533120 | 1.19% | 2 | 2022 |
| 14 | 73 | 57 | 7296 | 532608 | 1.09% | 2 | 1526 |
| 15 | 66 | 63 | 8064 | 532224 | 1.02% | 2 | 1152 |
| 16 | 64 | 65 | 8320 | 532480 | 1.07% | 2 | 1408 |
| 17 | 62 | 67 | 8576 | 531712 | 0.92% | 2 | 648 |
| 18 | 57 | 73 | 9344 | 532608 | 1.09% | 2 | 1542 |
| 19 | 54 | 77 | 9856 | 532224 | 1.02% | 2 | 1164 |
| 20 | 50 | 83 | 10624 | 531200 | 0.83% | 2 | 152 |
| 21 | 49 | 85 | 10880 | 533120 | 1.19% | 2 | 2058 |
| 22 | 42 | 99 | 12672 | 532224 | 1.02% | 2 | 1176 |
| 23 | 35 | 119 | 15232 | 533120 | 1.19% | 2 | 2072 |
| 24 | 24 | 173 | 22144 | 531456 | 0.87% | 2 | 432 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 25 | 23 | 181 | 23168 | 532864 | 1.14% | 2 | 1830 |
| 26 | 22 | 189 | 24192 | 532224 | 1.02% | 2 | 1196 |
| 27 | 19 | 219 | 28032 | 532608 | 1.09% | 2 | 1580 |
| 28 | 18 | 231 | 29568 | 532224 | 1.02% | 2 | 1200 |
| 29 | 17 | 245 | 31360 | 533120 | 1.19% | 2 | 2090 |
| 30 | 15 | 277 | 35456 | 531840 | 0.95% | 2 | 822 |
| 31 | 14 | 297 | 38016 | 532224 | 1.02% | 2 | 1204 |
| 32 | 12 | 347 | 44416 | 532992 | 1.17% | 2 | 1968 |
| 33 | 416 | 10 | 1280 | 532480 | 1.07% | 3 | 640 |
| 34 | 347 | 12 | 1536 | 532992 | 1.17% | 3 | 1286 |
| 35 | 297 | 14 | 1792 | 532224 | 1.02% | 3 | 624 |
| 36 | 260 | 16 | 2048 | 532480 | 1.07% | 3 | 952 |
| 37 | 231 | 18 | 2304 | 532224 | 1.02% | 3 | 756 |
| 38 | 208 | 20 | 2560 | 532480 | 1.07% | 3 | 1056 |
| 39 | 189 | 22 | 2816 | 532224 | 1.02% | 3 | 840 |
| 40 | 173 | 24 | 3072 | 531456 | 0.87% | 3 | 110 |
| 41 | 160 | 26 | 3328 | 532480 | 1.07% | 3 | 1152 |
| 42 | 130 | 32 | 4096 | 532480 | 1.07% | 3 | 1212 |
| 43 | 104 | 40 | 5120 | 532480 | 1.07% | 3 | 1264 |
| 44 | 99 | 42 | 5376 | 532224 | 1.02% | 3 | 1020 |
| 45 | 83 | 50 | 6400 | 531200 | 0.83% | 3 | 36 |
| 46 | 80 | 52 | 6656 | 532480 | 1.07% | 3 | 1312 |
| 47 | 77 | 54 | 6912 | 532224 | 1.02% | 3 | 1064 |
| 48 | 67 | 62 | 7936 | 531712 | 0.92% | 3 | 576 |
| 49 | 65 | 64 | 8192 | 532480 | 1.07% | 3 | 1342 |
| 50 | 63 | 66 | 8448 | 532224 | 1.02% | 3 | 1092 |
| 51 | 52 | 80 | 10240 | 532480 | 1.07% | 3 | 1368 |
| 52 | 40 | 104 | 13312 | 532480 | 1.07% | 3 | 1392 |
| 53 | 33 | 126 | 16128 | 532224 | 1.02% | 3 | 1152 |
| 54 | 32 | 130 | 16640 | 532480 | 1.07% | 3 | 1408 |
| 55 | 31 | 134 | 17152 | 531712 | 0.92% | 3 | 648 |
| 56 | 27 | 154 | 19712 | 532224 | 1.02% | 3 | 1164 |
| 57 | 26 | 160 | 20480 | 532480 | 1.07% | 3 | 1420 |
| 58 | 25 | 166 | 21248 | 531200 | 0.83% | 3 | 152 |
| 59 | 21 | 198 | 25344 | 532224 | 1.02% | 3 | 1176 |
| 60 | 20 | 208 | 26624 | 532480 | 1.07% | 3 | 1432 |
| 61 | 16 | 260 | 33280 | 532480 | 1.07% | 3 | 1440 |
| 62 | 13 | 320 | 40960 | 532480 | 1.07% | 3 | 1446 |
| 63 | 12 | 346 | 44288 | 531456 | 0.87% | 3 | 432 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 64 | 11 | 378 | 48384 | 532224 | 1.02% | 3 | 1196 |
| 65 | 378 | 11 | 1408 | 532224 | 1.02% | 4 | 84 |
| 66 | 320 | 13 | 1664 | 532480 | 1.07% | 4 | 512 |
| 67 | 245 | 17 | 2176 | 533120 | 1.19% | 4 | 1372 |
| 68 | 219 | 19 | 2432 | 532608 | 1.09% | 4 | 942 |
| 69 | 198 | 21 | 2688 | 532224 | 1.02% | 4 | 624 |
| 70 | 181 | 23 | 2944 | 532864 | 1.14% | 4 | 1310 |
| 71 | 154 | 27 | 3456 | 532224 | 1.02% | 4 | 756 |
| 72 | 134 | 31 | 3968 | 531712 | 0.92% | 4 | 308 |
| 73 | 126 | 33 | 4224 | 532224 | 1.02% | 4 | 840 |
| 74 | 119 | 35 | 4480 | 533120 | 1.19% | 4 | 1750 |
| 75 | 85 | 49 | 6272 | 533120 | 1.19% | 4 | 1852 |
| 76 | 73 | 57 | 7296 | 532608 | 1.09% | 4 | 1380 |
| 77 | 66 | 63 | 8064 | 532224 | 1.02% | 4 | 1020 |
| 78 | 64 | 65 | 8320 | 532480 | 1.07% | 4 | 1280 |
| 79 | 62 | 67 | 8576 | 531712 | 0.92% | 4 | 524 |
| 80 | 57 | 73 | 9344 | 532608 | 1.09% | 4 | 1428 |
| 81 | 54 | 77 | 9856 | 532224 | 1.02% | 4 | 1056 |
| 82 | 50 | 83 | 10624 | 531200 | 0.83% | 4 | 52 |
| 83 | 49 | 85 | 10880 | 533120 | 1.19% | 4 | 1960 |
| 84 | 42 | 99 | 12672 | 532224 | 1.02% | 4 | 1092 |
| 85 | 35 | 119 | 15232 | 533120 | 1.19% | 4 | 2002 |
| 86 | 24 | 173 | 22144 | 531456 | 0.87% | 4 | 384 |
| 87 | 23 | 181 | 23168 | 532864 | 1.14% | 4 | 1784 |
| 88 | 22 | 189 | 24192 | 532224 | 1.02% | 4 | 1152 |
| 89 | 19 | 219 | 28032 | 532608 | 1.09% | 4 | 1542 |
| 90 | 18 | 231 | 29568 | 532224 | 1.02% | 4 | 1164 |
| 91 | 17 | 245 | 31360 | 533120 | 1.19% | 4 | 2056 |
| 92 | 15 | 277 | 35456 | 531840 | 0.95% | 4 | 792 |
| 93 | 14 | 297 | 38016 | 532224 | 1.02% | 4 | 1176 |
| 94 | 12 | 347 | 44416 | 532992 | 1.17% | 4 | 1944 |
| 95 | 347 | 12 | 1536 | 532992 | 1.17% | 5 | 592 |
| 96 | 297 | 14 | 1792 | 532224 | 1.02% | 5 | 30 |
| 97 | 260 | 16 | 2048 | 532480 | 1.07% | 5 | 432 |
| 98 | 231 | 18 | 2304 | 532224 | 1.02% | 5 | 294 |
| 99 | 208 | 20 | 2560 | 532480 | 1.07% | 5 | 640 |
| 100 | 189 | 22 | 2816 | 532224 | 1.02% | 5 | 462 |
| 101 | 160 | 26 | 3328 | 532480 | 1.07% | 5 | 832 |
| 102 | 130 | 32 | 4096 | 532480 | 1.07% | 5 | 952 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 103 | 104 | 40 | 5120 | 532480 | 1.07% | 5 | 1056 |
| 104 | 99 | 42 | 5376 | 532224 | 1.02% | 5 | 822 |
| 105 | 80 | 52 | 6656 | 532480 | 1.07% | 5 | 1152 |
| 106 | 77 | 54 | 6912 | 532224 | 1.02% | 5 | 910 |
| 107 | 67 | 62 | 7936 | 531712 | 0.92% | 5 | 442 |
| 108 | 65 | 64 | 8192 | 532480 | 1.07% | 5 | 1212 |
| 109 | 63 | 66 | 8448 | 532224 | 1.02% | 5 | 966 |
| 110 | 52 | 80 | 10240 | 532480 | 1.07% | 5 | 1264 |
| 111 | 40 | 104 | 13312 | 532480 | 1.07% | 5 | 1312 |
| 112 | 33 | 126 | 16128 | 532224 | 1.02% | 5 | 1086 |
| 113 | 32 | 130 | 16640 | 532480 | 1.07% | 5 | 1344 |
| 114 | 31 | 134 | 17152 | 531712 | 0.92% | 5 | 586 |
| 115 | 27 | 154 | 19712 | 532224 | 1.02% | 5 | 1110 |
| 116 | 26 | 160 | 20480 | 532480 | 1.07% | 5 | 1368 |
| 117 | 25 | 166 | 21248 | 531200 | 0.83% | 5 | 102 |
| 118 | 21 | 198 | 25344 | 532224 | 1.02% | 5 | 1134 |
| 119 | 20 | 208 | 26624 | 532480 | 1.07% | 5 | 1392 |
| 120 | 16 | 260 | 33280 | 532480 | 1.07% | 5 | 1408 |
| 121 | 13 | 320 | 40960 | 532480 | 1.07% | 5 | 1420 |
| 122 | 12 | 346 | 44288 | 531456 | 0.87% | 5 | 408 |
| 123 | 11 | 378 | 48384 | 532224 | 1.02% | 5 | 1174 |
| 124 | 245 | 17 | 2176 | 533120 | 1.19% | 6 | 882 |
| 125 | 219 | 19 | 2432 | 532608 | 1.09% | 6 | 504 |
| 126 | 198 | 21 | 2688 | 532224 | 1.02% | 6 | 228 |
| 127 | 181 | 23 | 2944 | 532864 | 1.14% | 6 | 948 |
| 128 | 154 | 27 | 3456 | 532224 | 1.02% | 6 | 448 |
| 129 | 134 | 31 | 3968 | 531712 | 0.92% | 6 | 40 |
| 130 | 126 | 33 | 4224 | 532224 | 1.02% | 6 | 588 |
| 131 | 119 | 35 | 4480 | 533120 | 1.19% | 6 | 1512 |
| 132 | 85 | 49 | 6272 | 533120 | 1.19% | 6 | 1682 |
| 133 | 73 | 57 | 7296 | 532608 | 1.09% | 6 | 1234 |
| 134 | 66 | 63 | 8064 | 532224 | 1.02% | 6 | 888 |
| 135 | 64 | 65 | 8320 | 532480 | 1.07% | 6 | 1152 |
| 136 | 62 | 67 | 8576 | 531712 | 0.92% | 6 | 400 |
| 137 | 57 | 73 | 9344 | 532608 | 1.09% | 6 | 1314 |
| 138 | 54 | 77 | 9856 | 532224 | 1.02% | 6 | 948 |
| 139 | 49 | 85 | 10880 | 533120 | 1.19% | 6 | 1862 |
| 140 | 42 | 99 | 12672 | 532224 | 1.02% | 6 | 1008 |
| 141 | 35 | 119 | 15232 | 533120 | 1.19% | 6 | 1932 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 142 | 24 | 173 | 22144 | 531456 | 0.87% | 6 | 336 |
| 143 | 23 | 181 | 23168 | 532864 | 1.14% | 6 | 1738 |
| 144 | 22 | 189 | 24192 | 532224 | 1.02% | 6 | 1108 |
| 145 | 19 | 219 | 28032 | 532608 | 1.09% | 6 | 1504 |
| 146 | 18 | 231 | 29568 | 532224 | 1.02% | 6 | 1128 |
| 147 | 17 | 245 | 31360 | 533120 | 1.19% | 6 | 2022 |
| 148 | 15 | 277 | 35456 | 531840 | 0.95% | 6 | 762 |
| 149 | 14 | 297 | 38016 | 532224 | 1.02% | 6 | 1148 |
| 150 | 12 | 347 | 44416 | 532992 | 1.17% | 6 | 1920 |
| 151 | 208 | 20 | 2560 | 532480 | 1.07% | 7 | 224 |
| 152 | 189 | 22 | 2816 | 532224 | 1.02% | 7 | 84 |
| 153 | 160 | 26 | 3328 | 532480 | 1.07% | 7 | 512 |
| 154 | 130 | 32 | 4096 | 532480 | 1.07% | 7 | 692 |
| 155 | 104 | 40 | 5120 | 532480 | 1.07% | 7 | 848 |
| 156 | 99 | 42 | 5376 | 532224 | 1.02% | 7 | 624 |
| 157 | 80 | 52 | 6656 | 532480 | 1.07% | 7 | 992 |
| 158 | 77 | 54 | 6912 | 532224 | 1.02% | 7 | 756 |
| 159 | 67 | 62 | 7936 | 531712 | 0.92% | 7 | 308 |
| 160 | 65 | 64 | 8192 | 532480 | 1.07% | 7 | 1082 |
| 161 | 63 | 66 | 8448 | 532224 | 1.02% | 7 | 840 |
| 162 | 52 | 80 | 10240 | 532480 | 1.07% | 7 | 1160 |
| 163 | 40 | 104 | 13312 | 532480 | 1.07% | 7 | 1232 |
| 164 | 33 | 126 | 16128 | 532224 | 1.02% | 7 | 1020 |
| 165 | 32 | 130 | 16640 | 532480 | 1.07% | 7 | 1280 |
| 166 | 31 | 134 | 17152 | 531712 | 0.92% | 7 | 524 |
| 167 | 27 | 154 | 19712 | 532224 | 1.02% | 7 | 1056 |
| 168 | 26 | 160 | 20480 | 532480 | 1.07% | 7 | 1316 |
| 169 | 25 | 166 | 21248 | 531200 | 0.83% | 7 | 52 |
| 170 | 21 | 198 | 25344 | 532224 | 1.02% | 7 | 1092 |
| 171 | 20 | 208 | 26624 | 532480 | 1.07% | 7 | 1352 |
| 172 | 16 | 260 | 33280 | 532480 | 1.07% | 7 | 1376 |
| 173 | 13 | 320 | 40960 | 532480 | 1.07% | 7 | 1394 |
| 174 | 12 | 346 | 44288 | 531456 | 0.87% | 7 | 384 |
| 175 | 11 | 378 | 48384 | 532224 | 1.02% | 7 | 1152 |
| 176 | 245 | 17 | 2176 | 533120 | 1.19% | 8 | 392 |
| 177 | 219 | 19 | 2432 | 532608 | 1.09% | 8 | 66 |
| 178 | 181 | 23 | 2944 | 532864 | 1.14% | 8 | 586 |
| 179 | 154 | 27 | 3456 | 532224 | 1.02% | 8 | 140 |
| 180 | 126 | 33 | 4224 | 532224 | 1.02% | 8 | 336 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 181 | 119 | 35 | 4480 | 533120 | 1.19% | 8 | 1274 |
| 182 | 85 | 49 | 6272 | 533120 | 1.19% | 8 | 1512 |
| 183 | 73 | 57 | 7296 | 532608 | 1.09% | 8 | 1088 |
| 184 | 66 | 63 | 8064 | 532224 | 1.02% | 8 | 756 |
| 185 | 64 | 65 | 8320 | 532480 | 1.07% | 8 | 1024 |
| 186 | 62 | 67 | 8576 | 531712 | 0.92% | 8 | 276 |
| 187 | 57 | 73 | 9344 | 532608 | 1.09% | 8 | 1200 |
| 188 | 54 | 77 | 9856 | 532224 | 1.02% | 8 | 840 |
| 189 | 49 | 85 | 10880 | 533120 | 1.19% | 8 | 1764 |
| 190 | 42 | 99 | 12672 | 532224 | 1.02% | 8 | 924 |
| 191 | 35 | 119 | 15232 | 533120 | 1.19% | 8 | 1862 |
| 192 | 24 | 173 | 22144 | 531456 | 0.87% | 8 | 288 |
| 193 | 23 | 181 | 23168 | 532864 | 1.14% | 8 | 1692 |
| 194 | 22 | 189 | 24192 | 532224 | 1.02% | 8 | 1064 |
| 195 | 19 | 219 | 28032 | 532608 | 1.09% | 8 | 1466 |
| 196 | 18 | 231 | 29568 | 532224 | 1.02% | 8 | 1092 |
| 197 | 17 | 245 | 31360 | 533120 | 1.19% | 8 | 1988 |
| 198 | 15 | 277 | 35456 | 531840 | 0.95% | 8 | 732 |
| 199 | 14 | 297 | 38016 | 532224 | 1.02% | 8 | 1120 |
| 200 | 12 | 347 | 44416 | 532992 | 1.17% | 8 | 1896 |
| 201 | 160 | 26 | 3328 | 532480 | 1.07% | 9 | 192 |
| 202 | 130 | 32 | 4096 | 532480 | 1.07% | 9 | 432 |
| 203 | 104 | 40 | 5120 | 532480 | 1.07% | 9 | 640 |
| 204 | 99 | 42 | 5376 | 532224 | 1.02% | 9 | 426 |
| 205 | 80 | 52 | 6656 | 532480 | 1.07% | 9 | 832 |
| 206 | 77 | 54 | 6912 | 532224 | 1.02% | 9 | 602 |
| 207 | 67 | 62 | 7936 | 531712 | 0.92% | 9 | 174 |
| 208 | 65 | 64 | 8192 | 532480 | 1.07% | 9 | 952 |
| 209 | 63 | 66 | 8448 | 532224 | 1.02% | 9 | 714 |
| 210 | 52 | 80 | 10240 | 532480 | 1.07% | 9 | 1056 |
| 211 | 40 | 104 | 13312 | 532480 | 1.07% | 9 | 1152 |
| 212 | 33 | 126 | 16128 | 532224 | 1.02% | 9 | 954 |
| 213 | 32 | 130 | 16640 | 532480 | 1.07% | 9 | 1216 |
| 214 | 31 | 134 | 17152 | 531712 | 0.92% | 9 | 462 |
| 215 | 27 | 154 | 19712 | 532224 | 1.02% | 9 | 1002 |
| 216 | 26 | 160 | 20480 | 532480 | 1.07% | 9 | 1264 |
| 217 | 21 | 198 | 25344 | 532224 | 1.02% | 9 | 1050 |
| 218 | 20 | 208 | 26624 | 532480 | 1.07% | 9 | 1312 |
| 219 | 16 | 260 | 33280 | 532480 | 1.07% | 9 | 1344 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 220 | 13 | 320 | 40960 | 532480 | 1.07% | 9 | 1368 |
| 221 | 12 | 346 | 44288 | 531456 | 0.87% | 9 | 360 |
| 222 | 11 | 378 | 48384 | 532224 | 1.02% | 9 | 1130 |
| 223 | 181 | 23 | 2944 | 532864 | 1.14% | 10 | 224 |
| 224 | 126 | 33 | 4224 | 532224 | 1.02% | 10 | 84 |
| 225 | 119 | 35 | 4480 | 533120 | 1.19% | 10 | 1036 |
| 226 | 85 | 49 | 6272 | 533120 | 1.19% | 10 | 1342 |
| 227 | 73 | 57 | 7296 | 532608 | 1.09% | 10 | 942 |
| 228 | 66 | 63 | 8064 | 532224 | 1.02% | 10 | 624 |
| 229 | 64 | 65 | 8320 | 532480 | 1.07% | 10 | 896 |
| 230 | 62 | 67 | 8576 | 531712 | 0.92% | 10 | 152 |
| 231 | 57 | 73 | 9344 | 532608 | 1.09% | 10 | 1086 |
| 232 | 54 | 77 | 9856 | 532224 | 1.02% | 10 | 732 |
| 233 | 49 | 85 | 10880 | 533120 | 1.19% | 10 | 1666 |
| 234 | 42 | 99 | 12672 | 532224 | 1.02% | 10 | 840 |
| 235 | 35 | 119 | 15232 | 533120 | 1.19% | 10 | 1792 |
| 236 | 24 | 173 | 22144 | 531456 | 0.87% | 10 | 240 |
| 237 | 23 | 181 | 23168 | 532864 | 1.14% | 10 | 1646 |
| 238 | 22 | 189 | 24192 | 532224 | 1.02% | 10 | 1020 |
| 239 | 19 | 219 | 28032 | 532608 | 1.09% | 10 | 1428 |
| 240 | 18 | 231 | 29568 | 532224 | 1.02% | 10 | 1056 |
| 241 | 17 | 245 | 31360 | 533120 | 1.19% | 10 | 1954 |
| 242 | 15 | 277 | 35456 | 531840 | 0.95% | 10 | 702 |
| 243 | 14 | 297 | 38016 | 532224 | 1.02% | 10 | 1092 |
| 244 | 12 | 347 | 44416 | 532992 | 1.17% | 10 | 1872 |
| 245 | 130 | 32 | 4096 | 532480 | 1.07% | 11 | 172 |
| 246 | 104 | 40 | 5120 | 532480 | 1.07% | 11 | 432 |
| 247 | 99 | 42 | 5376 | 532224 | 1.02% | 11 | 228 |
| 248 | 80 | 52 | 6656 | 532480 | 1.07% | 11 | 672 |
| 249 | 77 | 54 | 6912 | 532224 | 1.02% | 11 | 448 |
| 250 | 67 | 62 | 7936 | 531712 | 0.92% | 11 | 40 |
| 251 | 65 | 64 | 8192 | 532480 | 1.07% | 11 | 822 |
| 252 | 63 | 66 | 8448 | 532224 | 1.02% | 11 | 588 |
| 253 | 52 | 80 | 10240 | 532480 | 1.07% | 11 | 952 |
| 254 | 40 | 104 | 13312 | 532480 | 1.07% | 11 | 1072 |
| 255 | 33 | 126 | 16128 | 532224 | 1.02% | 11 | 888 |
| 256 | 32 | 130 | 16640 | 532480 | 1.07% | 11 | 1152 |
| 257 | 31 | 134 | 17152 | 531712 | 0.92% | 11 | 400 |
| 258 | 27 | 154 | 19712 | 532224 | 1.02% | 11 | 948 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 259 | 26 | 160 | 20480 | 532480 | 1.07% | 11 | 1212 |
| 260 | 21 | 198 | 25344 | 532224 | 1.02% | 11 | 1008 |
| 261 | 20 | 208 | 26624 | 532480 | 1.07% | 11 | 1272 |
| 262 | 16 | 260 | 33280 | 532480 | 1.07% | 11 | 1312 |
| 263 | 13 | 320 | 40960 | 532480 | 1.07% | 11 | 1342 |
| 264 | 12 | 346 | 44288 | 531456 | 0.87% | 11 | 336 |
| 265 | 11 | 378 | 48384 | 532224 | 1.02% | 11 | 1108 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 37 may be obtained with reference to Table 36. In this case, a frame overhead OH in cases listed in Table 37 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 37.

Table 37

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 378 | 11 | 1408 | 532224 | 1.02% | 2 | 840 |
| 2 | 277 | 15 | 1920 | 531840 | 0.95% | 2 | 560 |
| 3 | 219 | 19 | 2432 | 532608 | 1.09% | 2 | 1380 |
| 4 | 198 | 21 | 2688 | 532224 | 1.02% | 2 | 1020 |
| 5 | 154 | 27 | 3456 | 532224 | 1.02% | 2 | 1064 |
| 6 | 126 | 33 | 4224 | 532224 | 1.02% | 2 | 1092 |
| 7 | 73 | 57 | 7296 | 532608 | 1.09% | 2 | 1526 |
| 8 | 66 | 63 | 8064 | 532224 | 1.02% | 2 | 1152 |
| 9 | 57 | 73 | 9344 | 532608 | 1.09% | 2 | 1542 |
| 10 | 54 | 77 | 9856 | 532224 | 1.02% | 2 | 1164 |
| 11 | 42 | 99 | 12672 | 532224 | 1.02% | 2 | 1176 |
| 12 | 24 | 173 | 22144 | 531456 | 0.87% | 2 | 432 |
| 13 | 22 | 189 | 24192 | 532224 | 1.02% | 2 | 1196 |
| 14 | 19 | 219 | 28032 | 532608 | 1.09% | 2 | 1580 |
| 15 | 18 | 231 | 29568 | 532224 | 1.02% | 2 | 1200 |
| 16 | 15 | 277 | 35456 | 531840 | 0.95% | 2 | 822 |
| 17 | 14 | 297 | 38016 | 532224 | 1.02% | 2 | 1204 |
| 18 | 12 | 347 | 44416 | 532992 | 1.17% | 2 | 1968 |
| 19 | 347 | 12 | 1536 | 532992 | 1.17% | 3 | 1286 |
| 20 | 297 | 14 | 1792 | 532224 | 1.02% | 3 | 624 |
| 21 | 231 | 18 | 2304 | 532224 | 1.02% | 3 | 756 |
| 22 | 189 | 22 | 2816 | 532224 | 1.02% | 3 | 840 |
| 23 | 173 | 24 | 3072 | 531456 | 0.87% | 3 | 110 |
| 24 | 99 | 42 | 5376 | 532224 | 1.02% | 3 | 1020 |

102

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 25 | 77 | 54 | 6912 | 532224 | 1.02% | 3 | 1064 |
| 26 | 63 | 66 | 8448 | 532224 | 1.02% | 3 | 1092 |
| 27 | 33 | 126 | 16128 | 532224 | 1.02% | 3 | 1152 |
| 28 | 27 | 154 | 19712 | 532224 | 1.02% | 3 | 1164 |
| 29 | 21 | 198 | 25344 | 532224 | 1.02% | 3 | 1176 |
| 30 | 12 | 346 | 44288 | 531456 | 0.87% | 3 | 432 |
| 31 | 11 | 378 | 48384 | 532224 | 1.02% | 3 | 1196 |
| 32 | 378 | 11 | 1408 | 532224 | 1.02% | 4 | 84 |
| 33 | 219 | 19 | 2432 | 532608 | 1.09% | 4 | 942 |
| 34 | 198 | 21 | 2688 | 532224 | 1.02% | 4 | 624 |
| 35 | 154 | 27 | 3456 | 532224 | 1.02% | 4 | 756 |
| 36 | 126 | 33 | 4224 | 532224 | 1.02% | 4 | 840 |
| 37 | 73 | 57 | 7296 | 532608 | 1.09% | 4 | 1380 |
| 38 | 66 | 63 | 8064 | 532224 | 1.02% | 4 | 1020 |
| 39 | 57 | 73 | 9344 | 532608 | 1.09% | 4 | 1428 |
| 40 | 54 | 77 | 9856 | 532224 | 1.02% | 4 | 1056 |
| 41 | 42 | 99 | 12672 | 532224 | 1.02% | 4 | 1092 |
| 42 | 24 | 173 | 22144 | 531456 | 0.87% | 4 | 384 |
| 43 | 22 | 189 | 24192 | 532224 | 1.02% | 4 | 1152 |
| 44 | 19 | 219 | 28032 | 532608 | 1.09% | 4 | 1542 |
| 45 | 18 | 231 | 29568 | 532224 | 1.02% | 4 | 1164 |
| 46 | 15 | 277 | 35456 | 531840 | 0.95% | 4 | 792 |
| 47 | 14 | 297 | 38016 | 532224 | 1.02% | 4 | 1176 |
| 48 | 12 | 347 | 44416 | 532992 | 1.17% | 4 | 1944 |
| 49 | 347 | 12 | 1536 | 532992 | 1.17% | 5 | 592 |
| 50 | 297 | 14 | 1792 | 532224 | 1.02% | 5 | 30 |
| 51 | 231 | 18 | 2304 | 532224 | 1.02% | 5 | 294 |
| 52 | 189 | 22 | 2816 | 532224 | 1.02% | 5 | 462 |
| 53 | 99 | 42 | 5376 | 532224 | 1.02% | 5 | 822 |
| 54 | 77 | 54 | 6912 | 532224 | 1.02% | 5 | 910 |
| 55 | 63 | 66 | 8448 | 532224 | 1.02% | 5 | 966 |
| 56 | 33 | 126 | 16128 | 532224 | 1.02% | 5 | 1086 |
| 57 | 27 | 154 | 19712 | 532224 | 1.02% | 5 | 1110 |
| 58 | 21 | 198 | 25344 | 532224 | 1.02% | 5 | 1134 |
| 59 | 12 | 346 | 44288 | 531456 | 0.87% | 5 | 408 |
| 60 | 11 | 378 | 48384 | 532224 | 1.02% | 5 | 1174 |
| 61 | 219 | 19 | 2432 | 532608 | 1.09% | 6 | 504 |
| 62 | 198 | 21 | 2688 | 532224 | 1.02% | 6 | 228 |
| 63 | 154 | 27 | 3456 | 532224 | 1.02% | 6 | 448 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 64 | 126 | 33 | 4224 | 532224 | 1.02% | 6 | 588 |
| 65 | 73 | 57 | 7296 | 532608 | 1.09% | 6 | 1234 |
| 66 | 66 | 63 | 8064 | 532224 | 1.02% | 6 | 888 |
| 67 | 57 | 73 | 9344 | 532608 | 1.09% | 6 | 1314 |
| 68 | 54 | 77 | 9856 | 532224 | 1.02% | 6 | 948 |
| 69 | 42 | 99 | 12672 | 532224 | 1.02% | 6 | 1008 |
| 70 | 24 | 173 | 22144 | 531456 | 0.87% | 6 | 336 |
| 71 | 22 | 189 | 24192 | 532224 | 1.02% | 6 | 1108 |
| 72 | 19 | 219 | 28032 | 532608 | 1.09% | 6 | 1504 |
| 73 | 18 | 231 | 29568 | 532224 | 1.02% | 6 | 1128 |
| 74 | 15 | 277 | 35456 | 531840 | 0.95% | 6 | 762 |
| 75 | 14 | 297 | 38016 | 532224 | 1.02% | 6 | 1148 |
| 76 | 12 | 347 | 44416 | 532992 | 1.17% | 6 | 1920 |
| 77 | 189 | 22 | 2816 | 532224 | 1.02% | 7 | 84 |
| 78 | 99 | 42 | 5376 | 532224 | 1.02% | 7 | 624 |
| 79 | 77 | 54 | 6912 | 532224 | 1.02% | 7 | 756 |
| 80 | 63 | 66 | 8448 | 532224 | 1.02% | 7 | 840 |
| 81 | 33 | 126 | 16128 | 532224 | 1.02% | 7 | 1020 |
| 82 | 27 | 154 | 19712 | 532224 | 1.02% | 7 | 1056 |
| 83 | 21 | 198 | 25344 | 532224 | 1.02% | 7 | 1092 |
| 84 | 12 | 346 | 44288 | 531456 | 0.87% | 7 | 384 |
| 85 | 11 | 378 | 48384 | 532224 | 1.02% | 7 | 1152 |
| 86 | 219 | 19 | 2432 | 532608 | 1.09% | 8 | 66 |
| 87 | 154 | 27 | 3456 | 532224 | 1.02% | 8 | 140 |
| 88 | 126 | 33 | 4224 | 532224 | 1.02% | 8 | 336 |
| 89 | 73 | 57 | 7296 | 532608 | 1.09% | 8 | 1088 |
| 90 | 66 | 63 | 8064 | 532224 | 1.02% | 8 | 756 |
| 91 | 57 | 73 | 9344 | 532608 | 1.09% | 8 | 1200 |
| 92 | 54 | 77 | 9856 | 532224 | 1.02% | 8 | 840 |
| 93 | 42 | 99 | 12672 | 532224 | 1.02% | 8 | 924 |
| 94 | 24 | 173 | 22144 | 531456 | 0.87% | 8 | 288 |
| 95 | 22 | 189 | 24192 | 532224 | 1.02% | 8 | 1064 |
| 96 | 19 | 219 | 28032 | 532608 | 1.09% | 8 | 1466 |
| 97 | 18 | 231 | 29568 | 532224 | 1.02% | 8 | 1092 |
| 98 | 15 | 277 | 35456 | 531840 | 0.95% | 8 | 732 |
| 99 | 14 | 297 | 38016 | 532224 | 1.02% | 8 | 1120 |
| 100 | 12 | 347 | 44416 | 532992 | 1.17% | 8 | 1896 |
| 101 | 99 | 42 | 5376 | 532224 | 1.02% | 9 | 426 |
| 102 | 77 | 54 | 6912 | 532224 | 1.02% | 9 | 602 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 103 | 63 | 66 | 8448 | 532224 | 1.02% | 9 | 714 |
| 104 | 33 | 126 | 16128 | 532224 | 1.02% | 9 | 954 |
| 105 | 27 | 154 | 19712 | 532224 | 1.02% | 9 | 1002 |
| 106 | 21 | 198 | 25344 | 532224 | 1.02% | 9 | 1050 |
| 107 | 12 | 346 | 44288 | 531456 | 0.87% | 9 | 360 |
| 108 | 11 | 378 | 48384 | 532224 | 1.02% | 9 | 1130 |
| 109 | 126 | 33 | 4224 | 532224 | 1.02% | 10 | 84 |
| 110 | 73 | 57 | 7296 | 532608 | 1.09% | 10 | 942 |
| 111 | 66 | 63 | 8064 | 532224 | 1.02% | 10 | 624 |
| 112 | 57 | 73 | 9344 | 532608 | 1.09% | 10 | 1086 |
| 113 | 54 | 77 | 9856 | 532224 | 1.02% | 10 | 732 |
| 114 | 42 | 99 | 12672 | 532224 | 1.02% | 10 | 840 |
| 115 | 24 | 173 | 22144 | 531456 | 0.87% | 10 | 240 |
| 116 | 22 | 189 | 24192 | 532224 | 1.02% | 10 | 1020 |
| 117 | 19 | 219 | 28032 | 532608 | 1.09% | 10 | 1428 |
| 118 | 18 | 231 | 29568 | 532224 | 1.02% | 10 | 1056 |
| 119 | 15 | 277 | 35456 | 531840 | 0.95% | 10 | 702 |
| 120 | 14 | 297 | 38016 | 532224 | 1.02% | 10 | 1092 |
| 121 | 12 | 347 | 44416 | 532992 | 1.17% | 10 | 1872 |
| 122 | 99 | 42 | 5376 | 532224 | 1.02% | 11 | 228 |
| 123 | 77 | 54 | 6912 | 532224 | 1.02% | 11 | 448 |
| 124 | 63 | 66 | 8448 | 532224 | 1.02% | 11 | 588 |
| 125 | 33 | 126 | 16128 | 532224 | 1.02% | 11 | 888 |
| 126 | 27 | 154 | 19712 | 532224 | 1.02% | 11 | 948 |
| 127 | 21 | 198 | 25344 | 532224 | 1.02% | 11 | 1008 |
| 128 | 12 | 346 | 44288 | 531456 | 0.87% | 11 | 336 |
| 129 | 11 | 378 | 48384 | 532224 | 1.02% | 11 | 1108 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 38 may be obtained with reference to Table 37. In this case, a frame overhead OH in cases listed in Table 38 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 38

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 277 | 15 | 1920 | 531840 | 0.95% | 2 | 560 |
| 2 | 198 | 21 | 2688 | 532224 | 1.02% | 2 | 1020 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 3 | 154 | 27 | 3456 | 532224 | 1.02% | 2 | 1064 |
| 4 | 126 | 33 | 4224 | 532224 | 1.02% | 2 | 1092 |
| 5 | 73 | 57 | 7296 | 532608 | 1.09% | 2 | 1526 |
| 6 | 66 | 63 | 8064 | 532224 | 1.02% | 2 | 1152 |
| 7 | 42 | 99 | 12672 | 532224 | 1.02% | 2 | 1176 |
| 8 | 22 | 189 | 24192 | 532224 | 1.02% | 2 | 1196 |
| 9 | 19 | 219 | 28032 | 532608 | 1.09% | 2 | 1580 |
| 10 | 18 | 231 | 29568 | 532224 | 1.02% | 2 | 1200 |
| 11 | 14 | 297 | 38016 | 532224 | 1.02% | 2 | 1204 |
| 12 | 347 | 12 | 1536 | 532992 | 1.17% | 3 | 1286 |
| 13 | 231 | 18 | 2304 | 532224 | 1.02% | 3 | 756 |
| 14 | 173 | 24 | 3072 | 531456 | 0.87% | 3 | 110 |
| 15 | 99 | 42 | 5376 | 532224 | 1.02% | 3 | 1020 |
| 16 | 77 | 54 | 6912 | 532224 | 1.02% | 3 | 1064 |
| 17 | 63 | 66 | 8448 | 532224 | 1.02% | 3 | 1092 |
| 18 | 33 | 126 | 16128 | 532224 | 1.02% | 3 | 1152 |
| 19 | 21 | 198 | 25344 | 532224 | 1.02% | 3 | 1176 |
| 20 | 11 | 378 | 48384 | 532224 | 1.02% | 3 | 1196 |
| 21 | 198 | 21 | 2688 | 532224 | 1.02% | 4 | 624 |
| 22 | 154 | 27 | 3456 | 532224 | 1.02% | 4 | 756 |
| 23 | 126 | 33 | 4224 | 532224 | 1.02% | 4 | 840 |
| 24 | 73 | 57 | 7296 | 532608 | 1.09% | 4 | 1380 |
| 25 | 66 | 63 | 8064 | 532224 | 1.02% | 4 | 1020 |
| 26 | 42 | 99 | 12672 | 532224 | 1.02% | 4 | 1092 |
| 27 | 22 | 189 | 24192 | 532224 | 1.02% | 4 | 1152 |
| 28 | 19 | 219 | 28032 | 532608 | 1.09% | 4 | 1542 |
| 29 | 18 | 231 | 29568 | 532224 | 1.02% | 4 | 1164 |
| 30 | 14 | 297 | 38016 | 532224 | 1.02% | 4 | 1176 |
| 31 | 347 | 12 | 1536 | 532992 | 1.17% | 5 | 592 |
| 32 | 231 | 18 | 2304 | 532224 | 1.02% | 5 | 294 |
| 33 | 99 | 42 | 5376 | 532224 | 1.02% | 5 | 822 |
| 34 | 77 | 54 | 6912 | 532224 | 1.02% | 5 | 910 |
| 35 | 63 | 66 | 8448 | 532224 | 1.02% | 5 | 966 |
| 36 | 33 | 126 | 16128 | 532224 | 1.02% | 5 | 1086 |
| 37 | 21 | 198 | 25344 | 532224 | 1.02% | 5 | 1134 |
| 38 | 11 | 378 | 48384 | 532224 | 1.02% | 5 | 1174 |
| 39 | 198 | 21 | 2688 | 532224 | 1.02% | 6 | 228 |
| 40 | 154 | 27 | 3456 | 532224 | 1.02% | 6 | 448 |
| 41 | 126 | 33 | 4224 | 532224 | 1.02% | 6 | 588 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 42 | 73 | 57 | 7296 | 532608 | 1.09% | 6 | 1234 |
| 43 | 66 | 63 | 8064 | 532224 | 1.02% | 6 | 888 |
| 44 | 42 | 99 | 12672 | 532224 | 1.02% | 6 | 1008 |
| 45 | 22 | 189 | 24192 | 532224 | 1.02% | 6 | 1108 |
| 46 | 19 | 219 | 28032 | 532608 | 1.09% | 6 | 1504 |
| 47 | 18 | 231 | 29568 | 532224 | 1.02% | 6 | 1128 |
| 48 | 14 | 297 | 38016 | 532224 | 1.02% | 6 | 1148 |
| 49 | 99 | 42 | 5376 | 532224 | 1.02% | 7 | 624 |
| 50 | 77 | 54 | 6912 | 532224 | 1.02% | 7 | 756 |
| 51 | 63 | 66 | 8448 | 532224 | 1.02% | 7 | 840 |
| 52 | 33 | 126 | 16128 | 532224 | 1.02% | 7 | 1020 |
| 53 | 21 | 198 | 25344 | 532224 | 1.02% | 7 | 1092 |
| 54 | 11 | 378 | 48384 | 532224 | 1.02% | 7 | 1152 |
| 55 | 154 | 27 | 3456 | 532224 | 1.02% | 8 | 140 |
| 56 | 126 | 33 | 4224 | 532224 | 1.02% | 8 | 336 |
| 57 | 73 | 57 | 7296 | 532608 | 1.09% | 8 | 1088 |
| 58 | 66 | 63 | 8064 | 532224 | 1.02% | 8 | 756 |
| 59 | 42 | 99 | 12672 | 532224 | 1.02% | 8 | 924 |
| 60 | 22 | 189 | 24192 | 532224 | 1.02% | 8 | 1064 |
| 61 | 19 | 219 | 28032 | 532608 | 1.09% | 8 | 1466 |
| 62 | 18 | 231 | 29568 | 532224 | 1.02% | 8 | 1092 |
| 63 | 14 | 297 | 38016 | 532224 | 1.02% | 8 | 1120 |
| 64 | 99 | 42 | 5376 | 532224 | 1.02% | 9 | 426 |
| 65 | 77 | 54 | 6912 | 532224 | 1.02% | 9 | 602 |
| 66 | 63 | 66 | 8448 | 532224 | 1.02% | 9 | 714 |
| 67 | 33 | 126 | 16128 | 532224 | 1.02% | 9 | 954 |
| 68 | 21 | 198 | 25344 | 532224 | 1.02% | 9 | 1050 |
| 69 | 11 | 378 | 48384 | 532224 | 1.02% | 9 | 1130 |
| 70 | 126 | 33 | 4224 | 532224 | 1.02% | 10 | 84 |
| 71 | 73 | 57 | 7296 | 532608 | 1.09% | 10 | 942 |
| 72 | 66 | 63 | 8064 | 532224 | 1.02% | 10 | 624 |
| 73 | 42 | 99 | 12672 | 532224 | 1.02% | 10 | 840 |
| 74 | 22 | 189 | 24192 | 532224 | 1.02% | 10 | 1020 |
| 75 | 19 | 219 | 28032 | 532608 | 1.09% | 10 | 1428 |
| 76 | 18 | 231 | 29568 | 532224 | 1.02% | 10 | 1056 |
| 77 | 14 | 297 | 38016 | 532224 | 1.02% | 10 | 1092 |
| 78 | 99 | 42 | 5376 | 532224 | 1.02% | 11 | 228 |
| 79 | 77 | 54 | 6912 | 532224 | 1.02% | 11 | 448 |
| 80 | 63 | 66 | 8448 | 532224 | 1.02% | 11 | 588 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 81 | 33 | 126 | 16128 | 532224 | 1.02% | 11 | 888 |
| 82 | 21 | 198 | 25344 | 532224 | 1.02% | 11 | 1008 |
| 83 | 11 | 378 | 48384 | 532224 | 1.02% | 11 | 1108 |

(11) The quantity $N_{CW}$ of symbols before framing is 702464. For example, a CFEC encoding scheme with an encoding overhead of approximately 15.3% is used, or another encoding scheme may be used. A 1st symbol in every $N_{PG}$=128 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 39. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 39 is low: OH<1.20%. In Table 39, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 39.

Table 39

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 554 | 10 | 1280 | 709120 | 0.95% | 1116 |
| 2 | 503 | 11 | 1408 | 708224 | 0.82% | 227 |
| 3 | 461 | 12 | 1536 | 708096 | 0.80% | 100 |
| 4 | 426 | 13 | 1664 | 708864 | 0.91% | 862 |
| 5 | 396 | 14 | 1792 | 709632 | 1.02% | 1624 |
| 6 | 369 | 15 | 1920 | 708480 | 0.86% | 481 |
| 7 | 346 | 16 | 2048 | 708608 | 0.87% | 608 |
| 8 | 326 | 17 | 2176 | 709376 | 0.98% | 1370 |
| 9 | 308 | 18 | 2304 | 709632 | 1.02% | 1624 |
| 10 | 292 | 19 | 2432 | 710144 | 1.09% | 2132 |
| 11 | 277 | 20 | 2560 | 709120 | 0.95% | 1116 |
| 12 | 264 | 21 | 2688 | 709632 | 1.02% | 1624 |
| 13 | 252 | 22 | 2816 | 709632 | 1.02% | 1624 |
| 14 | 241 | 23 | 2944 | 709504 | 1.00% | 1497 |
| 15 | 231 | 24 | 3072 | 709632 | 1.02% | 1624 |
| 16 | 222 | 25 | 3200 | 710400 | 1.13% | 2386 |
| 17 | 213 | 26 | 3328 | 708864 | 0.91% | 862 |
| 18 | 205 | 27 | 3456 | 708480 | 0.86% | 481 |
| 19 | 198 | 28 | 3584 | 709632 | 1.02% | 1624 |
| 20 | 191 | 29 | 3712 | 708992 | 0.93% | 989 |
| 21 | 185 | 30 | 3840 | 710400 | 1.13% | 2386 |
| 22 | 179 | 31 | 3968 | 710272 | 1.11% | 2259 |
| 23 | 173 | 32 | 4096 | 708608 | 0.87% | 608 |
| 24 | 168 | 33 | 4224 | 709632 | 1.02% | 1624 |

(continued)

| Sequence number | $N_{SF}$ | $N_{PS}$ | $N_S$ | $N_F$ | OH | $N_{TS,TOT}+N_{FAW}+N_{RES}$ |
|---|---|---|---|---|---|---|
| 25 | 163 | 34 | 4352 | 709376 | 0.98% | 1370 |
| 26 | 154 | 36 | 4608 | 709632 | 1.02% | 1624 |
| 27 | 150 | 37 | 4736 | 710400 | 1.13% | 2386 |
| 28 | 146 | 38 | 4864 | 710144 | 1.09% | 2132 |
| 29 | 142 | 39 | 4992 | 708864 | 0.91% | 862 |
| 30 | 135 | 41 | 5248 | 708480 | 0.86% | 481 |
| 31 | 132 | 42 | 5376 | 709632 | 1.02% | 1624 |
| 32 | 129 | 43 | 5504 | 710016 | 1.08% | 2005 |
| 33 | 126 | 44 | 5632 | 709632 | 1.02% | 1624 |
| 34 | 123 | 45 | 5760 | 708480 | 0.86% | 481 |
| 35 | 118 | 47 | 6016 | 709888 | 1.06% | 1878 |
| 36 | 113 | 49 | 6272 | 708736 | 0.89% | 735 |
| 37 | 111 | 50 | 6400 | 710400 | 1.13% | 2386 |
| 38 | 99 | 56 | 7168 | 709632 | 1.02% | 1624 |
| 39 | 94 | 59 | 7552 | 709888 | 1.06% | 1878 |
| 40 | 91 | 61 | 7808 | 710528 | 1.15% | 2513 |
| 41 | 88 | 63 | 8064 | 709632 | 1.02% | 1624 |
| 42 | 84 | 66 | 8448 | 709632 | 1.02% | 1624 |
| 43 | 78 | 71 | 9088 | 708864 | 0.91% | 862 |
| 44 | 77 | 72 | 9216 | 709632 | 1.02% | 1624 |
| 45 | 76 | 73 | 9344 | 710144 | 1.09% | 2132 |
| 46 | 75 | 74 | 9472 | 710400 | 1.13% | 2386 |
| 47 | 74 | 75 | 9600 | 710400 | 1.13% | 2386 |
| 48 | 73 | 76 | 9728 | 710144 | 1.09% | 2132 |
| 49 | 72 | 77 | 9856 | 709632 | 1.02% | 1624 |
| 50 | 71 | 78 | 9984 | 708864 | 0.91% | 862 |
| 51 | 66 | 84 | 10752 | 709632 | 1.02% | 1624 |
| 52 | 63 | 88 | 11264 | 709632 | 1.02% | 1624 |
| 53 | 61 | 91 | 11648 | 710528 | 1.15% | 2513 |
| 54 | 59 | 94 | 12032 | 709888 | 1.06% | 1878 |
| 55 | 56 | 99 | 12672 | 709632 | 1.02% | 1624 |
| 56 | 50 | 111 | 14208 | 710400 | 1.13% | 2386 |
| 57 | 49 | 113 | 14464 | 708736 | 0.89% | 735 |
| 58 | 47 | 118 | 15104 | 709888 | 1.06% | 1878 |
| 59 | 45 | 123 | 15744 | 708480 | 0.86% | 481 |
| 60 | 44 | 126 | 16128 | 709632 | 1.02% | 1624 |
| 61 | 43 | 129 | 16512 | 710016 | 1.08% | 2005 |
| 62 | 42 | 132 | 16896 | 709632 | 1.02% | 1624 |
| 63 | 41 | 135 | 17280 | 708480 | 0.86% | 481 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 64 | 39 | 142 | 18176 | 708864 | 0.91% | 862 |
| 65 | 38 | 146 | 18688 | 710144 | 1.09% | 2132 |
| 66 | 37 | 150 | 19200 | 710400 | 1.13% | 2386 |
| 67 | 36 | 154 | 19712 | 709632 | 1.02% | 1624 |
| 68 | 34 | 163 | 20864 | 709376 | 0.98% | 1370 |
| 69 | 33 | 168 | 21504 | 709632 | 1.02% | 1624 |
| 70 | 32 | 173 | 22144 | 708608 | 0.87% | 608 |
| 71 | 31 | 179 | 22912 | 710272 | 1.11% | 2259 |
| 72 | 30 | 185 | 23680 | 710400 | 1.13% | 2386 |
| 73 | 29 | 191 | 24448 | 708992 | 0.93% | 989 |
| 74 | 28 | 198 | 25344 | 709632 | 1.02% | 1624 |
| 75 | 27 | 205 | 26240 | 708480 | 0.86% | 481 |
| 76 | 26 | 213 | 27264 | 708864 | 0.91% | 862 |
| 77 | 25 | 222 | 28416 | 710400 | 1.13% | 2386 |
| 78 | 24 | 231 | 29568 | 709632 | 1.02% | 1624 |
| 79 | 23 | 241 | 30848 | 709504 | 1.00% | 1497 |
| 80 | 22 | 252 | 32256 | 709632 | 1.02% | 1624 |
| 81 | 21 | 264 | 33792 | 709632 | 1.02% | 1624 |
| 82 | 20 | 277 | 35456 | 709120 | 0.95% | 1116 |
| 83 | 19 | 292 | 37376 | 710144 | 1.09% | 2132 |
| 84 | 18 | 308 | 39424 | 709632 | 1.02% | 1624 |
| 85 | 17 | 326 | 41728 | 709376 | 0.98% | 1370 |
| 86 | 16 | 346 | 44288 | 708608 | 0.87% | 608 |
| 87 | 16 | 347 | 44416 | 710656 | 1.17% | 2640 |
| 88 | 15 | 369 | 47232 | 708480 | 0.86% | 481 |
| 89 | 15 | 370 | 47360 | 710400 | 1.13% | 2386 |
| 90 | 14 | 396 | 50688 | 709632 | 1.02% | 1624 |

Considering that the quantity $N_{TS}$ of training symbols is not greater than 11, Table 40 may be obtained with reference to Table 39. In this case, a frame overhead OH of a super-frame architecture in cases listed in Table 40 is less than 1.20%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 40.

Table 40

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 504 | 11 | 1408 | 709632 | 1.02% | 2 | 1120 |
| 2 | 426 | 13 | 1664 | 708864 | 0.91% | 2 | 436 |
| 3 | 369 | 15 | 1920 | 708480 | 0.86% | 2 | 112 |
| 4 | 326 | 17 | 2176 | 709376 | 0.98% | 2 | 1044 |
| 5 | 292 | 19 | 2432 | 710144 | 1.09% | 2 | 1840 |
| 6 | 264 | 21 | 2688 | 709632 | 1.02% | 2 | 1360 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 7 | 241 | 23 | 2944 | 709504 | 1.00% | 2 | 1256 |
| 8 | 222 | 25 | 3200 | 710400 | 1.13% | 2 | 2164 |
| 9 | 205 | 27 | 3456 | 708480 | 0.86% | 2 | 276 |
| 10 | 191 | 29 | 3712 | 708992 | 0.93% | 2 | 798 |
| 11 | 179 | 31 | 3968 | 710272 | 1.11% | 2 | 2080 |
| 12 | 168 | 33 | 4224 | 709632 | 1.02% | 2 | 1456 |
| 13 | 150 | 37 | 4736 | 710400 | 1.13% | 2 | 2236 |
| 14 | 142 | 39 | 4992 | 708864 | 0.91% | 2 | 720 |
| 15 | 135 | 41 | 5248 | 708480 | 0.86% | 2 | 346 |
| 16 | 129 | 43 | 5504 | 710016 | 1.08% | 2 | 1876 |
| 17 | 123 | 45 | 5760 | 708480 | 0.86% | 2 | 358 |
| 18 | 118 | 47 | 6016 | 709888 | 1.06% | 2 | 1760 |
| 19 | 113 | 49 | 6272 | 708736 | 0.89% | 2 | 622 |
| 20 | 94 | 59 | 7552 | 709888 | 1.06% | 2 | 1784 |
| 21 | 91 | 61 | 7808 | 710528 | 1.15% | 2 | 2422 |
| 22 | 88 | 63 | 8064 | 709632 | 1.02% | 2 | 1536 |
| 23 | 78 | 71 | 9088 | 708864 | 0.91% | 2 | 784 |
| 24 | 76 | 73 | 9344 | 710144 | 1.09% | 2 | 2056 |
| 25 | 74 | 75 | 9600 | 710400 | 1.13% | 2 | 2312 |
| 26 | 72 | 77 | 9856 | 709632 | 1.02% | 2 | 1552 |
| 27 | 61 | 91 | 11648 | 710528 | 1.15% | 2 | 2452 |
| 28 | 56 | 99 | 12672 | 709632 | 1.02% | 2 | 1568 |
| 29 | 50 | 111 | 14208 | 710400 | 1.13% | 2 | 2336 |
| 30 | 49 | 113 | 14464 | 708736 | 0.89% | 2 | 686 |
| 31 | 45 | 123 | 15744 | 708480 | 0.86% | 2 | 436 |
| 32 | 43 | 129 | 16512 | 710016 | 1.08% | 2 | 1962 |
| 33 | 41 | 135 | 17280 | 708480 | 0.86% | 2 | 440 |
| 34 | 34 | 163 | 20864 | 709376 | 0.98% | 2 | 1336 |
| 35 | 32 | 173 | 22144 | 708608 | 0.87% | 2 | 576 |
| 36 | 31 | 179 | 22912 | 710272 | 1.11% | 2 | 2228 |
| 37 | 30 | 185 | 23680 | 710400 | 1.13% | 2 | 2356 |
| 38 | 29 | 191 | 24448 | 708992 | 0.93% | 2 | 960 |
| 39 | 27 | 205 | 26240 | 708480 | 0.86% | 2 | 454 |
| 40 | 26 | 213 | 27264 | 708864 | 0.91% | 2 | 836 |
| 41 | 24 | 231 | 29568 | 709632 | 1.02% | 2 | 1600 |
| 42 | 23 | 241 | 30848 | 709504 | 1.00% | 2 | 1474 |
| 43 | 20 | 277 | 35456 | 709120 | 0.95% | 2 | 1096 |
| 44 | 16 | 347 | 44416 | 710656 | 1.17% | 2 | 2624 |
| 45 | 15 | 369 | 47232 | 708480 | 0.86% | 2 | 466 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 46 | 555 | 10 | 1280 | 710400 | 1.13% | 3 | 1276 |
| 47 | 462 | 12 | 1536 | 709632 | 1.02% | 3 | 700 |
| 48 | 396 | 14 | 1792 | 709632 | 1.02% | 3 | 832 |
| 49 | 347 | 16 | 2048 | 710656 | 1.17% | 3 | 1946 |
| 50 | 308 | 18 | 2304 | 709632 | 1.02% | 3 | 1008 |
| 51 | 277 | 20 | 2560 | 709120 | 0.95% | 3 | 562 |
| 52 | 252 | 22 | 2816 | 709632 | 1.02% | 3 | 1120 |
| 53 | 231 | 24 | 3072 | 709632 | 1.02% | 3 | 1162 |
| 54 | 213 | 26 | 3328 | 708864 | 0.91% | 3 | 436 |
| 55 | 198 | 28 | 3584 | 709632 | 1.02% | 3 | 1228 |
| 56 | 185 | 30 | 3840 | 710400 | 1.13% | 3 | 2016 |
| 57 | 173 | 32 | 4096 | 708608 | 0.87% | 3 | 262 |
| 58 | 163 | 34 | 4352 | 709376 | 0.98% | 3 | 1044 |
| 59 | 154 | 36 | 4608 | 709632 | 1.02% | 3 | 1316 |
| 60 | 146 | 38 | 4864 | 710144 | 1.09% | 3 | 1840 |
| 61 | 132 | 42 | 5376 | 709632 | 1.02% | 3 | 1360 |
| 62 | 126 | 44 | 5632 | 709632 | 1.02% | 3 | 1372 |
| 63 | 111 | 50 | 6400 | 710400 | 1.13% | 3 | 2164 |
| 64 | 99 | 56 | 7168 | 709632 | 1.02% | 3 | 1426 |
| 65 | 84 | 66 | 8448 | 709632 | 1.02% | 3 | 1456 |
| 66 | 77 | 72 | 9216 | 709632 | 1.02% | 3 | 1470 |
| 67 | 75 | 74 | 9472 | 710400 | 1.13% | 3 | 2236 |
| 68 | 73 | 76 | 9728 | 710144 | 1.09% | 3 | 1986 |
| 69 | 71 | 78 | 9984 | 708864 | 0.91% | 3 | 720 |
| 70 | 66 | 84 | 10752 | 709632 | 1.02% | 3 | 1492 |
| 71 | 63 | 88 | 11264 | 709632 | 1.02% | 3 | 1498 |
| 72 | 59 | 94 | 12032 | 709888 | 1.06% | 3 | 1760 |
| 73 | 47 | 118 | 15104 | 709888 | 1.06% | 3 | 1784 |
| 74 | 44 | 126 | 16128 | 709632 | 1.02% | 3 | 1536 |
| 75 | 42 | 132 | 16896 | 709632 | 1.02% | 3 | 1540 |
| 76 | 39 | 142 | 18176 | 708864 | 0.91% | 3 | 784 |
| 77 | 38 | 146 | 18688 | 710144 | 1.09% | 3 | 2056 |
| 78 | 37 | 150 | 19200 | 710400 | 1.13% | 3 | 2312 |
| 79 | 36 | 154 | 19712 | 709632 | 1.02% | 3 | 1552 |
| 80 | 33 | 168 | 21504 | 709632 | 1.02% | 3 | 1558 |
| 81 | 28 | 198 | 25344 | 709632 | 1.02% | 3 | 1568 |
| 82 | 25 | 222 | 28416 | 710400 | 1.13% | 3 | 2336 |
| 83 | 22 | 252 | 32256 | 709632 | 1.02% | 3 | 1580 |
| 84 | 21 | 264 | 33792 | 709632 | 1.02% | 3 | 1582 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 85 | 19 | 292 | 37376 | 710144 | 1.09% | 3 | 2094 |
| 86 | 18 | 308 | 39424 | 709632 | 1.02% | 3 | 1588 |
| 87 | 17 | 326 | 41728 | 709376 | 0.98% | 3 | 1336 |
| 88 | 16 | 346 | 44288 | 708608 | 0.87% | 3 | 576 |
| 89 | 15 | 370 | 47360 | 710400 | 1.13% | 3 | 2356 |
| 90 | 14 | 396 | 50688 | 709632 | 1.02% | 3 | 1596 |
| 91 | 504 | 11 | 1408 | 709632 | 1.02% | 4 | 112 |
| 92 | 427 | 13 | 1664 | 710528 | 1.15% | 4 | 1232 |
| 93 | 370 | 15 | 1920 | 710400 | 1.13% | 4 | 1276 |
| 94 | 326 | 17 | 2176 | 709376 | 0.98% | 4 | 392 |
| 95 | 292 | 19 | 2432 | 710144 | 1.09% | 4 | 1256 |
| 96 | 264 | 21 | 2688 | 709632 | 1.02% | 4 | 832 |
| 97 | 241 | 23 | 2944 | 709504 | 1.00% | 4 | 774 |
| 98 | 222 | 25 | 3200 | 710400 | 1.13% | 4 | 1720 |
| 99 | 191 | 29 | 3712 | 708992 | 0.93% | 4 | 416 |
| 100 | 179 | 31 | 3968 | 710272 | 1.11% | 4 | 1722 |
| 101 | 168 | 33 | 4224 | 709632 | 1.02% | 4 | 1120 |
| 102 | 150 | 37 | 4736 | 710400 | 1.13% | 4 | 1936 |
| 103 | 142 | 39 | 4992 | 708864 | 0.91% | 4 | 436 |
| 104 | 135 | 41 | 5248 | 708480 | 0.86% | 4 | 76 |
| 105 | 129 | 43 | 5504 | 710016 | 1.08% | 4 | 1618 |
| 106 | 123 | 45 | 5760 | 708480 | 0.86% | 4 | 112 |
| 107 | 118 | 47 | 6016 | 709888 | 1.06% | 4 | 1524 |
| 108 | 113 | 49 | 6272 | 708736 | 0.89% | 4 | 396 |
| 109 | 94 | 59 | 7552 | 709888 | 1.06% | 4 | 1596 |
| 110 | 91 | 61 | 7808 | 710528 | 1.15% | 4 | 2240 |
| 111 | 88 | 63 | 8064 | 709632 | 1.02% | 4 | 1360 |
| 112 | 78 | 71 | 9088 | 708864 | 0.91% | 4 | 628 |
| 113 | 76 | 73 | 9344 | 710144 | 1.09% | 4 | 1904 |
| 114 | 74 | 75 | 9600 | 710400 | 1.13% | 4 | 2164 |
| 115 | 72 | 77 | 9856 | 709632 | 1.02% | 4 | 1408 |
| 116 | 61 | 91 | 11648 | 710528 | 1.15% | 4 | 2330 |
| 117 | 56 | 99 | 12672 | 709632 | 1.02% | 4 | 1456 |
| 118 | 50 | 111 | 14208 | 710400 | 1.13% | 4 | 2236 |
| 119 | 49 | 113 | 14464 | 708736 | 0.89% | 4 | 588 |
| 120 | 45 | 123 | 15744 | 708480 | 0.86% | 4 | 346 |
| 121 | 43 | 129 | 16512 | 710016 | 1.08% | 4 | 1876 |
| 122 | 41 | 135 | 17280 | 708480 | 0.86% | 4 | 358 |
| 123 | 34 | 163 | 20864 | 709376 | 0.98% | 4 | 1268 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 124 | 32 | 173 | 22144 | 708608 | 0.87% | 4 | 512 |
| 125 | 31 | 179 | 22912 | 710272 | 1.11% | 4 | 2166 |
| 126 | 30 | 185 | 23680 | 710400 | 1.13% | 4 | 2296 |
| 127 | 29 | 191 | 24448 | 708992 | 0.93% | 4 | 902 |
| 128 | 27 | 205 | 26240 | 708480 | 0.86% | 4 | 400 |
| 129 | 26 | 213 | 27264 | 708864 | 0.91% | 4 | 784 |
| 130 | 24 | 231 | 29568 | 709632 | 1.02% | 4 | 1552 |
| 131 | 23 | 241 | 30848 | 709504 | 1.00% | 4 | 1428 |
| 132 | 20 | 277 | 35456 | 709120 | 0.95% | 4 | 1056 |
| 133 | 16 | 347 | 44416 | 710656 | 1.17% | 4 | 2592 |
| 134 | 15 | 369 | 47232 | 708480 | 0.86% | 4 | 436 |
| 135 | 555 | 10 | 1280 | 710400 | 1.13% | 5 | 166 |
| 136 | 396 | 14 | 1792 | 709632 | 1.02% | 5 | 40 |
| 137 | 347 | 16 | 2048 | 710656 | 1.17% | 5 | 1252 |
| 138 | 308 | 18 | 2304 | 709632 | 1.02% | 5 | 392 |
| 139 | 252 | 22 | 2816 | 709632 | 1.02% | 5 | 616 |
| 140 | 231 | 24 | 3072 | 709632 | 1.02% | 5 | 700 |
| 141 | 198 | 28 | 3584 | 709632 | 1.02% | 5 | 832 |
| 142 | 185 | 30 | 3840 | 710400 | 1.13% | 5 | 1646 |
| 143 | 163 | 34 | 4352 | 709376 | 0.98% | 5 | 718 |
| 144 | 154 | 36 | 4608 | 709632 | 1.02% | 5 | 1008 |
| 145 | 146 | 38 | 4864 | 710144 | 1.09% | 5 | 1548 |
| 146 | 132 | 42 | 5376 | 709632 | 1.02% | 5 | 1096 |
| 147 | 126 | 44 | 5632 | 709632 | 1.02% | 5 | 1120 |
| 148 | 111 | 50 | 6400 | 710400 | 1.13% | 5 | 1942 |
| 149 | 99 | 56 | 7168 | 709632 | 1.02% | 5 | 1228 |
| 150 | 84 | 66 | 8448 | 709632 | 1.02% | 5 | 1288 |
| 151 | 77 | 72 | 9216 | 709632 | 1.02% | 5 | 1316 |
| 152 | 75 | 74 | 9472 | 710400 | 1.13% | 5 | 2086 |
| 153 | 73 | 76 | 9728 | 710144 | 1.09% | 5 | 1840 |
| 154 | 71 | 78 | 9984 | 708864 | 0.91% | 5 | 578 |
| 155 | 66 | 84 | 10752 | 709632 | 1.02% | 5 | 1360 |
| 156 | 63 | 88 | 11264 | 709632 | 1.02% | 5 | 1372 |
| 157 | 59 | 94 | 12032 | 709888 | 1.06% | 5 | 1642 |
| 158 | 47 | 118 | 15104 | 709888 | 1.06% | 5 | 1690 |
| 159 | 44 | 126 | 16128 | 709632 | 1.02% | 5 | 1448 |
| 160 | 42 | 132 | 16896 | 709632 | 1.02% | 5 | 1456 |
| 161 | 39 | 142 | 18176 | 708864 | 0.91% | 5 | 706 |
| 162 | 38 | 146 | 18688 | 710144 | 1.09% | 5 | 1980 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 163 | 37 | 150 | 19200 | 710400 | 1.13% | 5 | 2238 |
| 164 | 36 | 154 | 19712 | 709632 | 1.02% | 5 | 1480 |
| 165 | 33 | 168 | 21504 | 709632 | 1.02% | 5 | 1492 |
| 166 | 28 | 198 | 25344 | 709632 | 1.02% | 5 | 1512 |
| 167 | 25 | 222 | 28416 | 710400 | 1.13% | 5 | 2286 |
| 168 | 22 | 252 | 32256 | 709632 | 1.02% | 5 | 1536 |
| 169 | 21 | 264 | 33792 | 709632 | 1.02% | 5 | 1540 |
| 170 | 19 | 292 | 37376 | 710144 | 1.09% | 5 | 2056 |
| 171 | 18 | 308 | 39424 | 709632 | 1.02% | 5 | 1552 |
| 172 | 17 | 326 | 41728 | 709376 | 0.98% | 5 | 1302 |
| 173 | 16 | 346 | 44288 | 708608 | 0.87% | 5 | 544 |
| 174 | 15 | 370 | 47360 | 710400 | 1.13% | 5 | 2326 |
| 175 | 14 | 396 | 50688 | 709632 | 1.02% | 5 | 1568 |
| 176 | 427 | 13 | 1664 | 710528 | 1.15% | 6 | 378 |
| 177 | 370 | 15 | 1920 | 710400 | 1.13% | 6 | 536 |
| 178 | 292 | 19 | 2432 | 710144 | 1.09% | 6 | 672 |
| 179 | 264 | 21 | 2688 | 709632 | 1.02% | 6 | 304 |
| 180 | 241 | 23 | 2944 | 709504 | 1.00% | 6 | 292 |
| 181 | 222 | 25 | 3200 | 710400 | 1.13% | 6 | 1276 |
| 182 | 191 | 29 | 3712 | 708992 | 0.93% | 6 | 34 |
| 183 | 179 | 31 | 3968 | 710272 | 1.11% | 6 | 1364 |
| 184 | 168 | 33 | 4224 | 709632 | 1.02% | 6 | 784 |
| 185 | 150 | 37 | 4736 | 710400 | 1.13% | 6 | 1636 |
| 186 | 142 | 39 | 4992 | 708864 | 0.91% | 6 | 152 |
| 187 | 129 | 43 | 5504 | 710016 | 1.08% | 6 | 1360 |
| 188 | 118 | 47 | 6016 | 709888 | 1.06% | 6 | 1288 |
| 189 | 113 | 49 | 6272 | 708736 | 0.89% | 6 | 170 |
| 190 | 94 | 59 | 7552 | 709888 | 1.06% | 6 | 1408 |
| 191 | 91 | 61 | 7808 | 710528 | 1.15% | 6 | 2058 |
| 192 | 88 | 63 | 8064 | 709632 | 1.02% | 6 | 1184 |
| 193 | 78 | 71 | 9088 | 708864 | 0.91% | 6 | 472 |
| 194 | 76 | 73 | 9344 | 710144 | 1.09% | 6 | 1752 |
| 195 | 74 | 75 | 9600 | 710400 | 1.13% | 6 | 2016 |
| 196 | 72 | 77 | 9856 | 709632 | 1.02% | 6 | 1264 |
| 197 | 61 | 91 | 11648 | 710528 | 1.15% | 6 | 2208 |
| 198 | 56 | 99 | 12672 | 709632 | 1.02% | 6 | 1344 |
| 199 | 50 | 111 | 14208 | 710400 | 1.13% | 6 | 2136 |
| 200 | 49 | 113 | 14464 | 708736 | 0.89% | 6 | 490 |
| 201 | 45 | 123 | 15744 | 708480 | 0.86% | 6 | 256 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 202 | 43 | 129 | 16512 | 710016 | 1.08% | 6 | 1790 |
| 203 | 41 | 135 | 17280 | 708480 | 0.86% | 6 | 276 |
| 204 | 34 | 163 | 20864 | 709376 | 0.98% | 6 | 1200 |
| 205 | 32 | 173 | 22144 | 708608 | 0.87% | 6 | 448 |
| 206 | 31 | 179 | 22912 | 710272 | 1.11% | 6 | 2104 |
| 207 | 30 | 185 | 23680 | 710400 | 1.13% | 6 | 2236 |
| 208 | 29 | 191 | 24448 | 708992 | 0.93% | 6 | 844 |
| 209 | 27 | 205 | 26240 | 708480 | 0.86% | 6 | 346 |
| 210 | 26 | 213 | 27264 | 708864 | 0.91% | 6 | 732 |
| 211 | 24 | 231 | 29568 | 709632 | 1.02% | 6 | 1504 |
| 212 | 23 | 241 | 30848 | 709504 | 1.00% | 6 | 1382 |
| 213 | 20 | 277 | 35456 | 709120 | 0.95% | 6 | 1016 |
| 214 | 16 | 347 | 44416 | 710656 | 1.17% | 6 | 2560 |
| 215 | 15 | 369 | 47232 | 708480 | 0.86% | 6 | 406 |
| 216 | 347 | 16 | 2048 | 710656 | 1.17% | 7 | 558 |
| 217 | 252 | 22 | 2816 | 709632 | 1.02% | 7 | 112 |
| 218 | 231 | 24 | 3072 | 709632 | 1.02% | 7 | 238 |
| 219 | 198 | 28 | 3584 | 709632 | 1.02% | 7 | 436 |
| 220 | 185 | 30 | 3840 | 710400 | 1.13% | 7 | 1276 |
| 221 | 163 | 34 | 4352 | 709376 | 0.98% | 7 | 392 |
| 222 | 154 | 36 | 4608 | 709632 | 1.02% | 7 | 700 |
| 223 | 146 | 38 | 4864 | 710144 | 1.09% | 7 | 1256 |
| 224 | 132 | 42 | 5376 | 709632 | 1.02% | 7 | 832 |
| 225 | 126 | 44 | 5632 | 709632 | 1.02% | 7 | 868 |
| 226 | 111 | 50 | 6400 | 710400 | 1.13% | 7 | 1720 |
| 227 | 99 | 56 | 7168 | 709632 | 1.02% | 7 | 1030 |
| 228 | 84 | 66 | 8448 | 709632 | 1.02% | 7 | 1120 |
| 229 | 77 | 72 | 9216 | 709632 | 1.02% | 7 | 1162 |
| 230 | 75 | 74 | 9472 | 710400 | 1.13% | 7 | 1936 |
| 231 | 73 | 76 | 9728 | 710144 | 1.09% | 7 | 1694 |
| 232 | 71 | 78 | 9984 | 708864 | 0.91% | 7 | 436 |
| 233 | 66 | 84 | 10752 | 709632 | 1.02% | 7 | 1228 |
| 234 | 63 | 88 | 11264 | 709632 | 1.02% | 7 | 1246 |
| 235 | 59 | 94 | 12032 | 709888 | 1.06% | 7 | 1524 |
| 236 | 47 | 118 | 15104 | 709888 | 1.06% | 7 | 1596 |
| 237 | 44 | 126 | 16128 | 709632 | 1.02% | 7 | 1360 |
| 238 | 42 | 132 | 16896 | 709632 | 1.02% | 7 | 1372 |
| 239 | 39 | 142 | 18176 | 708864 | 0.91% | 7 | 628 |
| 240 | 38 | 146 | 18688 | 710144 | 1.09% | 7 | 1904 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 241 | 37 | 150 | 19200 | 710400 | 1.13% | 7 | 2164 |
| 242 | 36 | 154 | 19712 | 709632 | 1.02% | 7 | 1408 |
| 243 | 33 | 168 | 21504 | 709632 | 1.02% | 7 | 1426 |
| 244 | 28 | 198 | 25344 | 709632 | 1.02% | 7 | 1456 |
| 245 | 25 | 222 | 28416 | 710400 | 1.13% | 7 | 2236 |
| 246 | 22 | 252 | 32256 | 709632 | 1.02% | 7 | 1492 |
| 247 | 21 | 264 | 33792 | 709632 | 1.02% | 7 | 1498 |
| 248 | 19 | 292 | 37376 | 710144 | 1.09% | 7 | 2018 |
| 249 | 18 | 308 | 39424 | 709632 | 1.02% | 7 | 1516 |
| 250 | 17 | 326 | 41728 | 709376 | 0.98% | 7 | 1268 |
| 251 | 16 | 346 | 44288 | 708608 | 0.87% | 7 | 512 |
| 252 | 15 | 370 | 47360 | 710400 | 1.13% | 7 | 2296 |
| 253 | 14 | 396 | 50688 | 709632 | 1.02% | 7 | 1540 |
| 254 | 292 | 19 | 2432 | 710144 | 1.09% | 8 | 88 |
| 255 | 222 | 25 | 3200 | 710400 | 1.13% | 8 | 832 |
| 256 | 179 | 31 | 3968 | 710272 | 1.11% | 8 | 1006 |
| 257 | 168 | 33 | 4224 | 709632 | 1.02% | 8 | 448 |
| 258 | 150 | 37 | 4736 | 710400 | 1.13% | 8 | 1336 |
| 259 | 129 | 43 | 5504 | 710016 | 1.08% | 8 | 1102 |
| 260 | 118 | 47 | 6016 | 709888 | 1.06% | 8 | 1052 |
| 261 | 94 | 59 | 7552 | 709888 | 1.06% | 8 | 1220 |
| 262 | 91 | 61 | 7808 | 710528 | 1.15% | 8 | 1876 |
| 263 | 88 | 63 | 8064 | 709632 | 1.02% | 8 | 1008 |
| 264 | 78 | 71 | 9088 | 708864 | 0.91% | 8 | 316 |
| 265 | 76 | 73 | 9344 | 710144 | 1.09% | 8 | 1600 |
| 266 | 74 | 75 | 9600 | 710400 | 1.13% | 8 | 1868 |
| 267 | 72 | 77 | 9856 | 709632 | 1.02% | 8 | 1120 |
| 268 | 61 | 91 | 11648 | 710528 | 1.15% | 8 | 2086 |
| 269 | 56 | 99 | 12672 | 709632 | 1.02% | 8 | 1232 |
| 270 | 50 | 111 | 14208 | 710400 | 1.13% | 8 | 2036 |
| 271 | 49 | 113 | 14464 | 708736 | 0.89% | 8 | 392 |
| 272 | 45 | 123 | 15744 | 708480 | 0.86% | 8 | 166 |
| 273 | 43 | 129 | 16512 | 710016 | 1.08% | 8 | 1704 |
| 274 | 41 | 135 | 17280 | 708480 | 0.86% | 8 | 194 |
| 275 | 34 | 163 | 20864 | 709376 | 0.98% | 8 | 1132 |
| 276 | 32 | 173 | 22144 | 708608 | 0.87% | 8 | 384 |
| 277 | 31 | 179 | 22912 | 710272 | 1.11% | 8 | 2042 |
| 278 | 30 | 185 | 23680 | 710400 | 1.13% | 8 | 2176 |
| 279 | 29 | 191 | 24448 | 708992 | 0.93% | 8 | 786 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 280 | 27 | 205 | 26240 | 708480 | 0.86% | 8 | 292 |
| 281 | 26 | 213 | 27264 | 708864 | 0.91% | 8 | 680 |
| 282 | 24 | 231 | 29568 | 709632 | 1.02% | 8 | 1456 |
| 283 | 23 | 241 | 30848 | 709504 | 1.00% | 8 | 1336 |
| 284 | 20 | 277 | 35456 | 709120 | 0.95% | 8 | 976 |
| 285 | 16 | 347 | 44416 | 710656 | 1.17% | 8 | 2528 |
| 286 | 15 | 369 | 47232 | 708480 | 0.86% | 8 | 376 |
| 287 | 198 | 28 | 3584 | 709632 | 1.02% | 9 | 40 |
| 288 | 185 | 30 | 3840 | 710400 | 1.13% | 9 | 906 |
| 289 | 163 | 34 | 4352 | 709376 | 0.98% | 9 | 66 |
| 290 | 154 | 36 | 4608 | 709632 | 1.02% | 9 | 392 |
| 291 | 146 | 38 | 4864 | 710144 | 1.09% | 9 | 964 |
| 292 | 132 | 42 | 5376 | 709632 | 1.02% | 9 | 568 |
| 293 | 126 | 44 | 5632 | 709632 | 1.02% | 9 | 616 |
| 294 | 111 | 50 | 6400 | 710400 | 1.13% | 9 | 1498 |
| 295 | 99 | 56 | 7168 | 709632 | 1.02% | 9 | 832 |
| 296 | 84 | 66 | 8448 | 709632 | 1.02% | 9 | 952 |
| 297 | 77 | 72 | 9216 | 709632 | 1.02% | 9 | 1008 |
| 298 | 75 | 74 | 9472 | 710400 | 1.13% | 9 | 1786 |
| 299 | 73 | 76 | 9728 | 710144 | 1.09% | 9 | 1548 |
| 300 | 71 | 78 | 9984 | 708864 | 0.91% | 9 | 294 |
| 301 | 66 | 84 | 10752 | 709632 | 1.02% | 9 | 1096 |
| 302 | 63 | 88 | 11264 | 709632 | 1.02% | 9 | 1120 |
| 303 | 59 | 94 | 12032 | 709888 | 1.06% | 9 | 1406 |
| 304 | 47 | 118 | 15104 | 709888 | 1.06% | 9 | 1502 |
| 305 | 44 | 126 | 16128 | 709632 | 1.02% | 9 | 1272 |
| 306 | 42 | 132 | 16896 | 709632 | 1.02% | 9 | 1288 |
| 307 | 39 | 142 | 18176 | 708864 | 0.91% | 9 | 550 |
| 308 | 38 | 146 | 18688 | 710144 | 1.09% | 9 | 1828 |
| 309 | 37 | 150 | 19200 | 710400 | 1.13% | 9 | 2090 |
| 310 | 36 | 154 | 19712 | 709632 | 1.02% | 9 | 1336 |
| 311 | 33 | 168 | 21504 | 709632 | 1.02% | 9 | 1360 |
| 312 | 28 | 198 | 25344 | 709632 | 1.02% | 9 | 1400 |
| 313 | 25 | 222 | 28416 | 710400 | 1.13% | 9 | 2186 |
| 314 | 22 | 252 | 32256 | 709632 | 1.02% | 9 | 1448 |
| 315 | 21 | 264 | 33792 | 709632 | 1.02% | 9 | 1456 |
| 316 | 19 | 292 | 37376 | 710144 | 1.09% | 9 | 1980 |
| 317 | 18 | 308 | 39424 | 709632 | 1.02% | 9 | 1480 |
| 318 | 17 | 326 | 41728 | 709376 | 0.98% | 9 | 1234 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 319 | 16 | 346 | 44288 | 708608 | 0.87% | 9 | 480 |
| 320 | 15 | 370 | 47360 | 710400 | 1.13% | 9 | 2266 |
| 321 | 14 | 396 | 50688 | 709632 | 1.02% | 9 | 1512 |
| 322 | 222 | 25 | 3200 | 710400 | 1.13% | 10 | 388 |
| 323 | 179 | 31 | 3968 | 710272 | 1.11% | 10 | 648 |
| 324 | 168 | 33 | 4224 | 709632 | 1.02% | 10 | 112 |
| 325 | 150 | 37 | 4736 | 710400 | 1.13% | 10 | 1036 |
| 326 | 129 | 43 | 5504 | 710016 | 1.08% | 10 | 844 |
| 327 | 118 | 47 | 6016 | 709888 | 1.06% | 10 | 816 |
| 328 | 94 | 59 | 7552 | 709888 | 1.06% | 10 | 1032 |
| 329 | 91 | 61 | 7808 | 710528 | 1.15% | 10 | 1694 |
| 330 | 88 | 63 | 8064 | 709632 | 1.02% | 10 | 832 |
| 331 | 78 | 71 | 9088 | 708864 | 0.91% | 10 | 160 |
| 332 | 76 | 73 | 9344 | 710144 | 1.09% | 10 | 1448 |
| 333 | 74 | 75 | 9600 | 710400 | 1.13% | 10 | 1720 |
| 334 | 72 | 77 | 9856 | 709632 | 1.02% | 10 | 976 |
| 335 | 61 | 91 | 11648 | 710528 | 1.15% | 10 | 1964 |
| 336 | 56 | 99 | 12672 | 709632 | 1.02% | 10 | 1120 |
| 337 | 50 | 111 | 14208 | 710400 | 1.13% | 10 | 1936 |
| 338 | 49 | 113 | 14464 | 708736 | 0.89% | 10 | 294 |
| 339 | 45 | 123 | 15744 | 708480 | 0.86% | 10 | 76 |
| 340 | 43 | 129 | 16512 | 710016 | 1.08% | 10 | 1618 |
| 341 | 41 | 135 | 17280 | 708480 | 0.86% | 10 | 112 |
| 342 | 34 | 163 | 20864 | 709376 | 0.98% | 10 | 1064 |
| 343 | 32 | 173 | 22144 | 708608 | 0.87% | 10 | 320 |
| 344 | 31 | 179 | 22912 | 710272 | 1.11% | 10 | 1980 |
| 345 | 30 | 185 | 23680 | 710400 | 1.13% | 10 | 2116 |
| 346 | 29 | 191 | 24448 | 708992 | 0.93% | 10 | 728 |
| 347 | 27 | 205 | 26240 | 708480 | 0.86% | 10 | 238 |
| 348 | 26 | 213 | 27264 | 708864 | 0.91% | 10 | 628 |
| 349 | 24 | 231 | 29568 | 709632 | 1.02% | 10 | 1408 |
| 350 | 23 | 241 | 30848 | 709504 | 1.00% | 10 | 1290 |
| 351 | 20 | 277 | 35456 | 709120 | 0.95% | 10 | 936 |
| 352 | 16 | 347 | 44416 | 710656 | 1.17% | 10 | 2496 |
| 353 | 15 | 369 | 47232 | 708480 | 0.86% | 10 | 346 |
| 354 | 185 | 30 | 3840 | 710400 | 1.13% | 11 | 536 |
| 355 | 154 | 36 | 4608 | 709632 | 1.02% | 11 | 84 |
| 356 | 146 | 38 | 4864 | 710144 | 1.09% | 11 | 672 |
| 357 | 132 | 42 | 5376 | 709632 | 1.02% | 11 | 304 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 358 | 126 | 44 | 5632 | 709632 | 1.02% | 11 | 364 |
| 359 | 111 | 50 | 6400 | 710400 | 1.13% | 11 | 1276 |
| 360 | 99 | 56 | 7168 | 709632 | 1.02% | 11 | 634 |
| 361 | 84 | 66 | 8448 | 709632 | 1.02% | 11 | 784 |
| 362 | 77 | 72 | 9216 | 709632 | 1.02% | 11 | 854 |
| 363 | 75 | 74 | 9472 | 710400 | 1.13% | 11 | 1636 |
| 364 | 73 | 76 | 9728 | 710144 | 1.09% | 11 | 1402 |
| 365 | 71 | 78 | 9984 | 708864 | 0.91% | 11 | 152 |
| 366 | 66 | 84 | 10752 | 709632 | 1.02% | 11 | 964 |
| 367 | 63 | 88 | 11264 | 709632 | 1.02% | 11 | 994 |
| 368 | 59 | 94 | 12032 | 709888 | 1.06% | 11 | 1288 |
| 369 | 47 | 118 | 15104 | 709888 | 1.06% | 11 | 1408 |
| 370 | 44 | 126 | 16128 | 709632 | 1.02% | 11 | 1184 |
| 371 | 42 | 132 | 16896 | 709632 | 1.02% | 11 | 1204 |
| 372 | 39 | 142 | 18176 | 708864 | 0.91% | 11 | 472 |
| 373 | 38 | 146 | 18688 | 710144 | 1.09% | 11 | 1752 |
| 374 | 37 | 150 | 19200 | 710400 | 1.13% | 11 | 2016 |
| 375 | 36 | 154 | 19712 | 709632 | 1.02% | 11 | 1264 |
| 376 | 33 | 168 | 21504 | 709632 | 1.02% | 11 | 1294 |
| 377 | 28 | 198 | 25344 | 709632 | 1.02% | 11 | 1344 |
| 378 | 25 | 222 | 28416 | 710400 | 1.13% | 11 | 2136 |
| 379 | 22 | 252 | 32256 | 709632 | 1.02% | 11 | 1404 |
| 380 | 21 | 264 | 33792 | 709632 | 1.02% | 11 | 1414 |
| 381 | 19 | 292 | 37376 | 710144 | 1.09% | 11 | 1942 |
| 382 | 18 | 308 | 39424 | 709632 | 1.02% | 11 | 1444 |
| 383 | 17 | 326 | 41728 | 709376 | 0.98% | 11 | 1200 |
| 384 | 16 | 346 | 44288 | 708608 | 0.87% | 11 | 448 |
| 385 | 15 | 370 | 47360 | 710400 | 1.13% | 11 | 2236 |
| 386 | 14 | 396 | 50688 | 709632 | 1.02% | 11 | 1484 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192, Table 41 may be obtained with reference to Table 40. In this case, a frame overhead OH in cases listed in Table 41 is less than 1.20%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 41.

Table 41

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 504 | 11 | 1408 | 709632 | 1.02% | 2 | 1120 |
| 2 | 426 | 13 | 1664 | 708864 | 0.91% | 2 | 436 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 3 | 369 | 15 | 1920 | 708480 | 0.86% | 2 | 112 |
| 4 | 264 | 21 | 2688 | 709632 | 1.02% | 2 | 1360 |
| 5 | 222 | 25 | 3200 | 710400 | 1.13% | 2 | 2164 |
| 6 | 205 | 27 | 3456 | 708480 | 0.86% | 2 | 276 |
| 7 | 168 | 33 | 4224 | 709632 | 1.02% | 2 | 1456 |
| 8 | 150 | 37 | 4736 | 710400 | 1.13% | 2 | 2236 |
| 9 | 142 | 39 | 4992 | 708864 | 0.91% | 2 | 720 |
| 10 | 135 | 41 | 5248 | 708480 | 0.86% | 2 | 346 |
| 11 | 129 | 43 | 5504 | 710016 | 1.08% | 2 | 1876 |
| 12 | 123 | 45 | 5760 | 708480 | 0.86% | 2 | 358 |
| 13 | 88 | 63 | 8064 | 709632 | 1.02% | 2 | 1536 |
| 14 | 78 | 71 | 9088 | 708864 | 0.91% | 2 | 784 |
| 15 | 74 | 75 | 9600 | 710400 | 1.13% | 2 | 2312 |
| 16 | 72 | 77 | 9856 | 709632 | 1.02% | 2 | 1552 |
| 17 | 56 | 99 | 12672 | 709632 | 1.02% | 2 | 1568 |
| 18 | 50 | 111 | 14208 | 710400 | 1.13% | 2 | 2336 |
| 19 | 45 | 123 | 15744 | 708480 | 0.86% | 2 | 436 |
| 20 | 43 | 129 | 16512 | 710016 | 1.08% | 2 | 1962 |
| 21 | 41 | 135 | 17280 | 708480 | 0.86% | 2 | 440 |
| 22 | 30 | 185 | 23680 | 710400 | 1.13% | 2 | 2356 |
| 23 | 27 | 205 | 26240 | 708480 | 0.86% | 2 | 454 |
| 24 | 26 | 213 | 27264 | 708864 | 0.91% | 2 | 836 |
| 25 | 24 | 231 | 29568 | 709632 | 1.02% | 2 | 1600 |
| 26 | 15 | 369 | 47232 | 708480 | 0.86% | 2 | 466 |
| 27 | 555 | 10 | 1280 | 710400 | 1.13% | 3 | 1276 |
| 28 | 462 | 12 | 1536 | 709632 | 1.02% | 3 | 700 |
| 29 | 396 | 14 | 1792 | 709632 | 1.02% | 3 | 832 |
| 30 | 308 | 18 | 2304 | 709632 | 1.02% | 3 | 1008 |
| 31 | 252 | 22 | 2816 | 709632 | 1.02% | 3 | 1120 |
| 32 | 231 | 24 | 3072 | 709632 | 1.02% | 3 | 1162 |
| 33 | 213 | 26 | 3328 | 708864 | 0.91% | 3 | 436 |
| 34 | 198 | 28 | 3584 | 709632 | 1.02% | 3 | 1228 |
| 35 | 185 | 30 | 3840 | 710400 | 1.13% | 3 | 2016 |
| 36 | 154 | 36 | 4608 | 709632 | 1.02% | 3 | 1316 |
| 37 | 132 | 42 | 5376 | 709632 | 1.02% | 3 | 1360 |
| 38 | 126 | 44 | 5632 | 709632 | 1.02% | 3 | 1372 |
| 39 | 111 | 50 | 6400 | 710400 | 1.13% | 3 | 2164 |
| 40 | 99 | 56 | 7168 | 709632 | 1.02% | 3 | 1426 |
| 41 | 84 | 66 | 8448 | 709632 | 1.02% | 3 | 1456 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 42 | 77 | 72 | 9216 | 709632 | 1.02% | 3 | 1470 |
| 43 | 75 | 74 | 9472 | 710400 | 1.13% | 3 | 2236 |
| 44 | 71 | 78 | 9984 | 708864 | 0.91% | 3 | 720 |
| 45 | 66 | 84 | 10752 | 709632 | 1.02% | 3 | 1492 |
| 46 | 63 | 88 | 11264 | 709632 | 1.02% | 3 | 1498 |
| 47 | 44 | 126 | 16128 | 709632 | 1.02% | 3 | 1536 |
| 48 | 42 | 132 | 16896 | 709632 | 1.02% | 3 | 1540 |
| 49 | 39 | 142 | 18176 | 708864 | 0.91% | 3 | 784 |
| 50 | 37 | 150 | 19200 | 710400 | 1.13% | 3 | 2312 |
| 51 | 36 | 154 | 19712 | 709632 | 1.02% | 3 | 1552 |
| 52 | 33 | 168 | 21504 | 709632 | 1.02% | 3 | 1558 |
| 53 | 28 | 198 | 25344 | 709632 | 1.02% | 3 | 1568 |
| 54 | 25 | 222 | 28416 | 710400 | 1.13% | 3 | 2336 |
| 55 | 22 | 252 | 32256 | 709632 | 1.02% | 3 | 1580 |
| 56 | 21 | 264 | 33792 | 709632 | 1.02% | 3 | 1582 |
| 57 | 18 | 308 | 39424 | 709632 | 1.02% | 3 | 1588 |
| 58 | 15 | 370 | 47360 | 710400 | 1.13% | 3 | 2356 |
| 59 | 14 | 396 | 50688 | 709632 | 1.02% | 3 | 1596 |
| 60 | 504 | 11 | 1408 | 709632 | 1.02% | 4 | 112 |
| 61 | 370 | 15 | 1920 | 710400 | 1.13% | 4 | 1276 |
| 62 | 264 | 21 | 2688 | 709632 | 1.02% | 4 | 832 |
| 63 | 222 | 25 | 3200 | 710400 | 1.13% | 4 | 1720 |
| 64 | 168 | 33 | 4224 | 709632 | 1.02% | 4 | 1120 |
| 65 | 150 | 37 | 4736 | 710400 | 1.13% | 4 | 1936 |
| 66 | 142 | 39 | 4992 | 708864 | 0.91% | 4 | 436 |
| 67 | 135 | 41 | 5248 | 708480 | 0.86% | 4 | 76 |
| 68 | 129 | 43 | 5504 | 710016 | 1.08% | 4 | 1618 |
| 69 | 123 | 45 | 5760 | 708480 | 0.86% | 4 | 112 |
| 70 | 88 | 63 | 8064 | 709632 | 1.02% | 4 | 1360 |
| 71 | 78 | 71 | 9088 | 708864 | 0.91% | 4 | 628 |
| 72 | 74 | 75 | 9600 | 710400 | 1.13% | 4 | 2164 |
| 73 | 72 | 77 | 9856 | 709632 | 1.02% | 4 | 1408 |
| 74 | 56 | 99 | 12672 | 709632 | 1.02% | 4 | 1456 |
| 75 | 50 | 111 | 14208 | 710400 | 1.13% | 4 | 2236 |
| 76 | 45 | 123 | 15744 | 708480 | 0.86% | 4 | 346 |
| 77 | 43 | 129 | 16512 | 710016 | 1.08% | 4 | 1876 |
| 78 | 41 | 135 | 17280 | 708480 | 0.86% | 4 | 358 |
| 79 | 30 | 185 | 23680 | 710400 | 1.13% | 4 | 2296 |
| 80 | 27 | 205 | 26240 | 708480 | 0.86% | 4 | 400 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 81 | 26 | 213 | 27264 | 708864 | 0.91% | 4 | 784 |
| 82 | 24 | 231 | 29568 | 709632 | 1.02% | 4 | 1552 |
| 83 | 15 | 369 | 47232 | 708480 | 0.86% | 4 | 436 |
| 84 | 555 | 10 | 1280 | 710400 | 1.13% | 5 | 166 |
| 85 | 396 | 14 | 1792 | 709632 | 1.02% | 5 | 40 |
| 86 | 308 | 18 | 2304 | 709632 | 1.02% | 5 | 392 |
| 87 | 252 | 22 | 2816 | 709632 | 1.02% | 5 | 616 |
| 88 | 231 | 24 | 3072 | 709632 | 1.02% | 5 | 700 |
| 89 | 198 | 28 | 3584 | 709632 | 1.02% | 5 | 832 |
| 90 | 185 | 30 | 3840 | 710400 | 1.13% | 5 | 1646 |
| 91 | 154 | 36 | 4608 | 709632 | 1.02% | 5 | 1008 |
| 92 | 132 | 42 | 5376 | 709632 | 1.02% | 5 | 1096 |
| 93 | 126 | 44 | 5632 | 709632 | 1.02% | 5 | 1120 |
| 94 | 111 | 50 | 6400 | 710400 | 1.13% | 5 | 1942 |
| 95 | 99 | 56 | 7168 | 709632 | 1.02% | 5 | 1228 |
| 96 | 84 | 66 | 8448 | 709632 | 1.02% | 5 | 1288 |
| 97 | 77 | 72 | 9216 | 709632 | 1.02% | 5 | 1316 |
| 98 | 75 | 74 | 9472 | 710400 | 1.13% | 5 | 2086 |
| 99 | 71 | 78 | 9984 | 708864 | 0.91% | 5 | 578 |
| 100 | 66 | 84 | 10752 | 709632 | 1.02% | 5 | 1360 |
| 101 | 63 | 88 | 11264 | 709632 | 1.02% | 5 | 1372 |
| 102 | 44 | 126 | 16128 | 709632 | 1.02% | 5 | 1448 |
| 103 | 42 | 132 | 16896 | 709632 | 1.02% | 5 | 1456 |
| 104 | 39 | 142 | 18176 | 708864 | 0.91% | 5 | 706 |
| 105 | 37 | 150 | 19200 | 710400 | 1.13% | 5 | 2238 |
| 106 | 36 | 154 | 19712 | 709632 | 1.02% | 5 | 1480 |
| 107 | 33 | 168 | 21504 | 709632 | 1.02% | 5 | 1492 |
| 108 | 28 | 198 | 25344 | 709632 | 1.02% | 5 | 1512 |
| 109 | 25 | 222 | 28416 | 710400 | 1.13% | 5 | 2286 |
| 110 | 22 | 252 | 32256 | 709632 | 1.02% | 5 | 1536 |
| 111 | 21 | 264 | 33792 | 709632 | 1.02% | 5 | 1540 |
| 112 | 18 | 308 | 39424 | 709632 | 1.02% | 5 | 1552 |
| 113 | 15 | 370 | 47360 | 710400 | 1.13% | 5 | 2326 |
| 114 | 14 | 396 | 50688 | 709632 | 1.02% | 5 | 1568 |
| 115 | 370 | 15 | 1920 | 710400 | 1.13% | 6 | 536 |
| 116 | 264 | 21 | 2688 | 709632 | 1.02% | 6 | 304 |
| 117 | 222 | 25 | 3200 | 710400 | 1.13% | 6 | 1276 |
| 118 | 168 | 33 | 4224 | 709632 | 1.02% | 6 | 784 |
| 119 | 150 | 37 | 4736 | 710400 | 1.13% | 6 | 1636 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 120 | 142 | 39 | 4992 | 708864 | 0.91% | 6 | 152 |
| 121 | 129 | 43 | 5504 | 710016 | 1.08% | 6 | 1360 |
| 122 | 88 | 63 | 8064 | 709632 | 1.02% | 6 | 1184 |
| 123 | 78 | 71 | 9088 | 708864 | 0.91% | 6 | 472 |
| 124 | 74 | 75 | 9600 | 710400 | 1.13% | 6 | 2016 |
| 125 | 72 | 77 | 9856 | 709632 | 1.02% | 6 | 1264 |
| 126 | 56 | 99 | 12672 | 709632 | 1.02% | 6 | 1344 |
| 127 | 50 | 111 | 14208 | 710400 | 1.13% | 6 | 2136 |
| 128 | 45 | 123 | 15744 | 708480 | 0.86% | 6 | 256 |
| 129 | 43 | 129 | 16512 | 710016 | 1.08% | 6 | 1790 |
| 130 | 41 | 135 | 17280 | 708480 | 0.86% | 6 | 276 |
| 131 | 30 | 185 | 23680 | 710400 | 1.13% | 6 | 2236 |
| 132 | 27 | 205 | 26240 | 708480 | 0.86% | 6 | 346 |
| 133 | 26 | 213 | 27264 | 708864 | 0.91% | 6 | 732 |
| 134 | 24 | 231 | 29568 | 709632 | 1.02% | 6 | 1504 |
| 135 | 15 | 369 | 47232 | 708480 | 0.86% | 6 | 406 |
| 136 | 252 | 22 | 2816 | 709632 | 1.02% | 7 | 112 |
| 137 | 231 | 24 | 3072 | 709632 | 1.02% | 7 | 238 |
| 138 | 198 | 28 | 3584 | 709632 | 1.02% | 7 | 436 |
| 139 | 185 | 30 | 3840 | 710400 | 1.13% | 7 | 1276 |
| 140 | 154 | 36 | 4608 | 709632 | 1.02% | 7 | 700 |
| 141 | 132 | 42 | 5376 | 709632 | 1.02% | 7 | 832 |
| 142 | 126 | 44 | 5632 | 709632 | 1.02% | 7 | 868 |
| 143 | 111 | 50 | 6400 | 710400 | 1.13% | 7 | 1720 |
| 144 | 99 | 56 | 7168 | 709632 | 1.02% | 7 | 1030 |
| 145 | 84 | 66 | 8448 | 709632 | 1.02% | 7 | 1120 |
| 146 | 77 | 72 | 9216 | 709632 | 1.02% | 7 | 1162 |
| 147 | 75 | 74 | 9472 | 710400 | 1.13% | 7 | 1936 |
| 148 | 71 | 78 | 9984 | 708864 | 0.91% | 7 | 436 |
| 149 | 66 | 84 | 10752 | 709632 | 1.02% | 7 | 1228 |
| 150 | 63 | 88 | 11264 | 709632 | 1.02% | 7 | 1246 |
| 151 | 44 | 126 | 16128 | 709632 | 1.02% | 7 | 1360 |
| 152 | 42 | 132 | 16896 | 709632 | 1.02% | 7 | 1372 |
| 153 | 39 | 142 | 18176 | 708864 | 0.91% | 7 | 628 |
| 154 | 37 | 150 | 19200 | 710400 | 1.13% | 7 | 2164 |
| 155 | 36 | 154 | 19712 | 709632 | 1.02% | 7 | 1408 |
| 156 | 33 | 168 | 21504 | 709632 | 1.02% | 7 | 1426 |
| 157 | 28 | 198 | 25344 | 709632 | 1.02% | 7 | 1456 |
| 158 | 25 | 222 | 28416 | 710400 | 1.13% | 7 | 2236 |

**EP 4 773 530 A1**

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 159 | 22 | 252 | 32256 | 709632 | 1.02% | 7 | 1492 |
| 160 | 21 | 264 | 33792 | 709632 | 1.02% | 7 | 1498 |
| 161 | 18 | 308 | 39424 | 709632 | 1.02% | 7 | 1516 |
| 162 | 15 | 370 | 47360 | 710400 | 1.13% | 7 | 2296 |
| 163 | 14 | 396 | 50688 | 709632 | 1.02% | 7 | 1540 |
| 164 | 222 | 25 | 3200 | 710400 | 1.13% | 8 | 832 |
| 165 | 168 | 33 | 4224 | 709632 | 1.02% | 8 | 448 |
| 166 | 150 | 37 | 4736 | 710400 | 1.13% | 8 | 1336 |
| 167 | 129 | 43 | 5504 | 710016 | 1.08% | 8 | 1102 |
| 168 | 88 | 63 | 8064 | 709632 | 1.02% | 8 | 1008 |
| 169 | 78 | 71 | 9088 | 708864 | 0.91% | 8 | 316 |
| 170 | 74 | 75 | 9600 | 710400 | 1.13% | 8 | 1868 |
| 171 | 72 | 77 | 9856 | 709632 | 1.02% | 8 | 1120 |
| 172 | 56 | 99 | 12672 | 709632 | 1.02% | 8 | 1232 |
| 173 | 50 | 111 | 14208 | 710400 | 1.13% | 8 | 2036 |
| 174 | 45 | 123 | 15744 | 708480 | 0.86% | 8 | 166 |
| 175 | 43 | 129 | 16512 | 710016 | 1.08% | 8 | 1704 |
| 176 | 41 | 135 | 17280 | 708480 | 0.86% | 8 | 194 |
| 177 | 30 | 185 | 23680 | 710400 | 1.13% | 8 | 2176 |
| 178 | 27 | 205 | 26240 | 708480 | 0.86% | 8 | 292 |
| 179 | 26 | 213 | 27264 | 708864 | 0.91% | 8 | 680 |
| 180 | 24 | 231 | 29568 | 709632 | 1.02% | 8 | 1456 |
| 181 | 15 | 369 | 47232 | 708480 | 0.86% | 8 | 376 |
| 182 | 198 | 28 | 3584 | 709632 | 1.02% | 9 | 40 |
| 183 | 185 | 30 | 3840 | 710400 | 1.13% | 9 | 906 |
| 184 | 154 | 36 | 4608 | 709632 | 1.02% | 9 | 392 |
| 185 | 132 | 42 | 5376 | 709632 | 1.02% | 9 | 568 |
| 186 | 126 | 44 | 5632 | 709632 | 1.02% | 9 | 616 |
| 187 | 111 | 50 | 6400 | 710400 | 1.13% | 9 | 1498 |
| 188 | 99 | 56 | 7168 | 709632 | 1.02% | 9 | 832 |
| 189 | 84 | 66 | 8448 | 709632 | 1.02% | 9 | 952 |
| 190 | 77 | 72 | 9216 | 709632 | 1.02% | 9 | 1008 |
| 191 | 75 | 74 | 9472 | 710400 | 1.13% | 9 | 1786 |
| 192 | 71 | 78 | 9984 | 708864 | 0.91% | 9 | 294 |
| 193 | 66 | 84 | 10752 | 709632 | 1.02% | 9 | 1096 |
| 194 | 63 | 88 | 11264 | 709632 | 1.02% | 9 | 1120 |
| 195 | 44 | 126 | 16128 | 709632 | 1.02% | 9 | 1272 |
| 196 | 42 | 132 | 16896 | 709632 | 1.02% | 9 | 1288 |
| 197 | 39 | 142 | 18176 | 708864 | 0.91% | 9 | 550 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 198 | 37 | 150 | 19200 | 710400 | 1.13% | 9 | 2090 |
| 199 | 36 | 154 | 19712 | 709632 | 1.02% | 9 | 1336 |
| 200 | 33 | 168 | 21504 | 709632 | 1.02% | 9 | 1360 |
| 201 | 28 | 198 | 25344 | 709632 | 1.02% | 9 | 1400 |
| 202 | 25 | 222 | 28416 | 710400 | 1.13% | 9 | 2186 |
| 203 | 22 | 252 | 32256 | 709632 | 1.02% | 9 | 1448 |
| 204 | 21 | 264 | 33792 | 709632 | 1.02% | 9 | 1456 |
| 205 | 18 | 308 | 39424 | 709632 | 1.02% | 9 | 1480 |
| 206 | 15 | 370 | 47360 | 710400 | 1.13% | 9 | 2266 |
| 207 | 14 | 396 | 50688 | 709632 | 1.02% | 9 | 1512 |
| 208 | 222 | 25 | 3200 | 710400 | 1.13% | 10 | 388 |
| 209 | 168 | 33 | 4224 | 709632 | 1.02% | 10 | 112 |
| 210 | 150 | 37 | 4736 | 710400 | 1.13% | 10 | 1036 |
| 211 | 129 | 43 | 5504 | 710016 | 1.08% | 10 | 844 |
| 212 | 88 | 63 | 8064 | 709632 | 1.02% | 10 | 832 |
| 213 | 78 | 71 | 9088 | 708864 | 0.91% | 10 | 160 |
| 214 | 74 | 75 | 9600 | 710400 | 1.13% | 10 | 1720 |
| 215 | 72 | 77 | 9856 | 709632 | 1.02% | 10 | 976 |
| 216 | 56 | 99 | 12672 | 709632 | 1.02% | 10 | 1120 |
| 217 | 50 | 111 | 14208 | 710400 | 1.13% | 10 | 1936 |
| 218 | 45 | 123 | 15744 | 708480 | 0.86% | 10 | 76 |
| 219 | 43 | 129 | 16512 | 710016 | 1.08% | 10 | 1618 |
| 220 | 41 | 135 | 17280 | 708480 | 0.86% | 10 | 112 |
| 221 | 30 | 185 | 23680 | 710400 | 1.13% | 10 | 2116 |
| 222 | 27 | 205 | 26240 | 708480 | 0.86% | 10 | 238 |
| 223 | 26 | 213 | 27264 | 708864 | 0.91% | 10 | 628 |
| 224 | 24 | 231 | 29568 | 709632 | 1.02% | 10 | 1408 |
| 225 | 15 | 369 | 47232 | 708480 | 0.86% | 10 | 346 |
| 226 | 185 | 30 | 3840 | 710400 | 1.13% | 11 | 536 |
| 227 | 154 | 36 | 4608 | 709632 | 1.02% | 11 | 84 |
| 228 | 132 | 42 | 5376 | 709632 | 1.02% | 11 | 304 |
| 229 | 126 | 44 | 5632 | 709632 | 1.02% | 11 | 364 |
| 230 | 111 | 50 | 6400 | 710400 | 1.13% | 11 | 1276 |
| 231 | 99 | 56 | 7168 | 709632 | 1.02% | 11 | 634 |
| 232 | 84 | 66 | 8448 | 709632 | 1.02% | 11 | 784 |
| 233 | 77 | 72 | 9216 | 709632 | 1.02% | 11 | 854 |
| 234 | 75 | 74 | 9472 | 710400 | 1.13% | 11 | 1636 |
| 235 | 71 | 78 | 9984 | 708864 | 0.91% | 11 | 152 |
| 236 | 66 | 84 | 10752 | 709632 | 1.02% | 11 | 964 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 237 | 63 | 88 | 11264 | 709632 | 1.02% | 11 | 994 |
| 238 | 44 | 126 | 16128 | 709632 | 1.02% | 11 | 1184 |
| 239 | 42 | 132 | 16896 | 709632 | 1.02% | 11 | 1204 |
| 240 | 39 | 142 | 18176 | 708864 | 0.91% | 11 | 472 |
| 241 | 37 | 150 | 19200 | 710400 | 1.13% | 11 | 2016 |
| 242 | 36 | 154 | 19712 | 709632 | 1.02% | 11 | 1264 |
| 243 | 33 | 168 | 21504 | 709632 | 1.02% | 11 | 1294 |
| 244 | 28 | 198 | 25344 | 709632 | 1.02% | 11 | 1344 |
| 245 | 25 | 222 | 28416 | 710400 | 1.13% | 11 | 2136 |
| 246 | 22 | 252 | 32256 | 709632 | 1.02% | 11 | 1404 |
| 247 | 21 | 264 | 33792 | 709632 | 1.02% | 11 | 1414 |
| 248 | 18 | 308 | 39424 | 709632 | 1.02% | 11 | 1444 |
| 249 | 15 | 370 | 47360 | 710400 | 1.13% | 11 | 2236 |
| 250 | 14 | 396 | 50688 | 709632 | 1.02% | 11 | 1484 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192, Table 42 may be obtained with reference to Table 41. In this case, a frame overhead OH in cases listed in Table 42 is less than 1.20%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 42

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 369 | 15 | 1920 | 708480 | 0.86% | 2 | 112 |
| 2 | 264 | 21 | 2688 | 709632 | 1.02% | 2 | 1360 |
| 3 | 205 | 27 | 3456 | 708480 | 0.86% | 2 | 276 |
| 4 | 168 | 33 | 4224 | 709632 | 1.02% | 2 | 1456 |
| 5 | 142 | 39 | 4992 | 708864 | 0.91% | 2 | 720 |
| 6 | 123 | 45 | 5760 | 708480 | 0.86% | 2 | 358 |
| 7 | 88 | 63 | 8064 | 709632 | 1.02% | 2 | 1536 |
| 8 | 74 | 75 | 9600 | 710400 | 1.13% | 2 | 2312 |
| 9 | 56 | 99 | 12672 | 709632 | 1.02% | 2 | 1568 |
| 10 | 50 | 111 | 14208 | 710400 | 1.13% | 2 | 2336 |
| 11 | 45 | 123 | 15744 | 708480 | 0.86% | 2 | 436 |
| 12 | 43 | 129 | 16512 | 710016 | 1.08% | 2 | 1962 |
| 13 | 41 | 135 | 17280 | 708480 | 0.86% | 2 | 440 |
| 14 | 26 | 213 | 27264 | 708864 | 0.91% | 2 | 836 |
| 15 | 24 | 231 | 29568 | 709632 | 1.02% | 2 | 1600 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 16 | 15 | 369 | 47232 | 708480 | 0.86% | 2 | 466 |
| 17 | 462 | 12 | 1536 | 709632 | 1.02% | 3 | 700 |
| 18 | 308 | 18 | 2304 | 709632 | 1.02% | 3 | 1008 |
| 19 | 231 | 24 | 3072 | 709632 | 1.02% | 3 | 1162 |
| 20 | 185 | 30 | 3840 | 710400 | 1.13% | 3 | 2016 |
| 21 | 154 | 36 | 4608 | 709632 | 1.02% | 3 | 1316 |
| 22 | 132 | 42 | 5376 | 709632 | 1.02% | 3 | 1360 |
| 23 | 84 | 66 | 8448 | 709632 | 1.02% | 3 | 1456 |
| 24 | 77 | 72 | 9216 | 709632 | 1.02% | 3 | 1470 |
| 25 | 71 | 78 | 9984 | 708864 | 0.91% | 3 | 720 |
| 26 | 66 | 84 | 10752 | 709632 | 1.02% | 3 | 1492 |
| 27 | 44 | 126 | 16128 | 709632 | 1.02% | 3 | 1536 |
| 28 | 42 | 132 | 16896 | 709632 | 1.02% | 3 | 1540 |
| 29 | 37 | 150 | 19200 | 710400 | 1.13% | 3 | 2312 |
| 30 | 33 | 168 | 21504 | 709632 | 1.02% | 3 | 1558 |
| 31 | 28 | 198 | 25344 | 709632 | 1.02% | 3 | 1568 |
| 32 | 25 | 222 | 28416 | 710400 | 1.13% | 3 | 2336 |
| 33 | 22 | 252 | 32256 | 709632 | 1.02% | 3 | 1580 |
| 34 | 21 | 264 | 33792 | 709632 | 1.02% | 3 | 1582 |
| 35 | 14 | 396 | 50688 | 709632 | 1.02% | 3 | 1596 |
| 36 | 370 | 15 | 1920 | 710400 | 1.13% | 4 | 1276 |
| 37 | 264 | 21 | 2688 | 709632 | 1.02% | 4 | 832 |
| 38 | 168 | 33 | 4224 | 709632 | 1.02% | 4 | 1120 |
| 39 | 142 | 39 | 4992 | 708864 | 0.91% | 4 | 436 |
| 40 | 123 | 45 | 5760 | 708480 | 0.86% | 4 | 112 |
| 41 | 88 | 63 | 8064 | 709632 | 1.02% | 4 | 1360 |
| 42 | 74 | 75 | 9600 | 710400 | 1.13% | 4 | 2164 |
| 43 | 56 | 99 | 12672 | 709632 | 1.02% | 4 | 1456 |
| 44 | 50 | 111 | 14208 | 710400 | 1.13% | 4 | 2236 |
| 45 | 45 | 123 | 15744 | 708480 | 0.86% | 4 | 346 |
| 46 | 43 | 129 | 16512 | 710016 | 1.08% | 4 | 1876 |
| 47 | 41 | 135 | 17280 | 708480 | 0.86% | 4 | 358 |
| 48 | 26 | 213 | 27264 | 708864 | 0.91% | 4 | 784 |
| 49 | 24 | 231 | 29568 | 709632 | 1.02% | 4 | 1552 |
| 50 | 15 | 369 | 47232 | 708480 | 0.86% | 4 | 436 |
| 51 | 308 | 18 | 2304 | 709632 | 1.02% | 5 | 392 |
| 52 | 231 | 24 | 3072 | 709632 | 1.02% | 5 | 700 |
| 53 | 185 | 30 | 3840 | 710400 | 1.13% | 5 | 1646 |
| 54 | 154 | 36 | 4608 | 709632 | 1.02% | 5 | 1008 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 55 | 132 | 42 | 5376 | 709632 | 1.02% | 5 | 1096 |
| 56 | 84 | 66 | 8448 | 709632 | 1.02% | 5 | 1288 |
| 57 | 77 | 72 | 9216 | 709632 | 1.02% | 5 | 1316 |
| 58 | 71 | 78 | 9984 | 708864 | 0.91% | 5 | 578 |
| 59 | 66 | 84 | 10752 | 709632 | 1.02% | 5 | 1360 |
| 60 | 44 | 126 | 16128 | 709632 | 1.02% | 5 | 1448 |
| 61 | 42 | 132 | 16896 | 709632 | 1.02% | 5 | 1456 |
| 62 | 37 | 150 | 19200 | 710400 | 1.13% | 5 | 2238 |
| 63 | 33 | 168 | 21504 | 709632 | 1.02% | 5 | 1492 |
| 64 | 28 | 198 | 25344 | 709632 | 1.02% | 5 | 1512 |
| 65 | 25 | 222 | 28416 | 710400 | 1.13% | 5 | 2286 |
| 66 | 22 | 252 | 32256 | 709632 | 1.02% | 5 | 1536 |
| 67 | 21 | 264 | 33792 | 709632 | 1.02% | 5 | 1540 |
| 68 | 14 | 396 | 50688 | 709632 | 1.02% | 5 | 1568 |
| 69 | 370 | 15 | 1920 | 710400 | 1.13% | 6 | 536 |
| 70 | 264 | 21 | 2688 | 709632 | 1.02% | 6 | 304 |
| 71 | 168 | 33 | 4224 | 709632 | 1.02% | 6 | 784 |
| 72 | 142 | 39 | 4992 | 708864 | 0.91% | 6 | 152 |
| 73 | 88 | 63 | 8064 | 709632 | 1.02% | 6 | 1184 |
| 74 | 74 | 75 | 9600 | 710400 | 1.13% | 6 | 2016 |
| 75 | 56 | 99 | 12672 | 709632 | 1.02% | 6 | 1344 |
| 76 | 50 | 111 | 14208 | 710400 | 1.13% | 6 | 2136 |
| 77 | 45 | 123 | 15744 | 708480 | 0.86% | 6 | 256 |
| 78 | 43 | 129 | 16512 | 710016 | 1.08% | 6 | 1790 |
| 79 | 41 | 135 | 17280 | 708480 | 0.86% | 6 | 276 |
| 80 | 26 | 213 | 27264 | 708864 | 0.91% | 6 | 732 |
| 81 | 24 | 231 | 29568 | 709632 | 1.02% | 6 | 1504 |
| 82 | 15 | 369 | 47232 | 708480 | 0.86% | 6 | 406 |
| 83 | 231 | 24 | 3072 | 709632 | 1.02% | 7 | 238 |
| 84 | 185 | 30 | 3840 | 710400 | 1.13% | 7 | 1276 |
| 85 | 154 | 36 | 4608 | 709632 | 1.02% | 7 | 700 |
| 86 | 132 | 42 | 5376 | 709632 | 1.02% | 7 | 832 |
| 87 | 84 | 66 | 8448 | 709632 | 1.02% | 7 | 1120 |
| 88 | 77 | 72 | 9216 | 709632 | 1.02% | 7 | 1162 |
| 89 | 71 | 78 | 9984 | 708864 | 0.91% | 7 | 436 |
| 90 | 66 | 84 | 10752 | 709632 | 1.02% | 7 | 1228 |
| 91 | 44 | 126 | 16128 | 709632 | 1.02% | 7 | 1360 |
| 92 | 42 | 132 | 16896 | 709632 | 1.02% | 7 | 1372 |
| 93 | 37 | 150 | 19200 | 710400 | 1.13% | 7 | 2164 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 94 | 33 | 168 | 21504 | 709632 | 1.02% | 7 | 1426 |
| 95 | 28 | 198 | 25344 | 709632 | 1.02% | 7 | 1456 |
| 96 | 25 | 222 | 28416 | 710400 | 1.13% | 7 | 2236 |
| 97 | 22 | 252 | 32256 | 709632 | 1.02% | 7 | 1492 |
| 98 | 21 | 264 | 33792 | 709632 | 1.02% | 7 | 1498 |
| 99 | 14 | 396 | 50688 | 709632 | 1.02% | 7 | 1540 |
| 100 | 168 | 33 | 4224 | 709632 | 1.02% | 8 | 448 |
| 101 | 88 | 63 | 8064 | 709632 | 1.02% | 8 | 1008 |
| 102 | 74 | 75 | 9600 | 710400 | 1.13% | 8 | 1868 |
| 103 | 56 | 99 | 12672 | 709632 | 1.02% | 8 | 1232 |
| 104 | 50 | 111 | 14208 | 710400 | 1.13% | 8 | 2036 |
| 105 | 45 | 123 | 15744 | 708480 | 0.86% | 8 | 166 |
| 106 | 43 | 129 | 16512 | 710016 | 1.08% | 8 | 1704 |
| 107 | 41 | 135 | 17280 | 708480 | 0.86% | 8 | 194 |
| 108 | 26 | 213 | 27264 | 708864 | 0.91% | 8 | 680 |
| 109 | 24 | 231 | 29568 | 709632 | 1.02% | 8 | 1456 |
| 110 | 15 | 369 | 47232 | 708480 | 0.86% | 8 | 376 |
| 111 | 185 | 30 | 3840 | 710400 | 1.13% | 9 | 906 |
| 112 | 154 | 36 | 4608 | 709632 | 1.02% | 9 | 392 |
| 113 | 132 | 42 | 5376 | 709632 | 1.02% | 9 | 568 |
| 114 | 84 | 66 | 8448 | 709632 | 1.02% | 9 | 952 |
| 115 | 77 | 72 | 9216 | 709632 | 1.02% | 9 | 1008 |
| 116 | 71 | 78 | 9984 | 708864 | 0.91% | 9 | 294 |
| 117 | 66 | 84 | 10752 | 709632 | 1.02% | 9 | 1096 |
| 118 | 44 | 126 | 16128 | 709632 | 1.02% | 9 | 1272 |
| 119 | 42 | 132 | 16896 | 709632 | 1.02% | 9 | 1288 |
| 120 | 37 | 150 | 19200 | 710400 | 1.13% | 9 | 2090 |
| 121 | 33 | 168 | 21504 | 709632 | 1.02% | 9 | 1360 |
| 122 | 28 | 198 | 25344 | 709632 | 1.02% | 9 | 1400 |
| 123 | 25 | 222 | 28416 | 710400 | 1.13% | 9 | 2186 |
| 124 | 22 | 252 | 32256 | 709632 | 1.02% | 9 | 1448 |
| 125 | 21 | 264 | 33792 | 709632 | 1.02% | 9 | 1456 |
| 126 | 14 | 396 | 50688 | 709632 | 1.02% | 9 | 1512 |
| 127 | 168 | 33 | 4224 | 709632 | 1.02% | 10 | 112 |
| 128 | 88 | 63 | 8064 | 709632 | 1.02% | 10 | 832 |
| 129 | 74 | 75 | 9600 | 710400 | 1.13% | 10 | 1720 |
| 130 | 56 | 99 | 12672 | 709632 | 1.02% | 10 | 1120 |
| 131 | 50 | 111 | 14208 | 710400 | 1.13% | 10 | 1936 |
| 132 | 45 | 123 | 15744 | 708480 | 0.86% | 10 | 76 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 133 | 43 | 129 | 16512 | 710016 | 1.08% | 10 | 1618 |
| 134 | 41 | 135 | 17280 | 708480 | 0.86% | 10 | 112 |
| 135 | 26 | 213 | 27264 | 708864 | 0.91% | 10 | 628 |
| 136 | 24 | 231 | 29568 | 709632 | 1.02% | 10 | 1408 |
| 137 | 15 | 369 | 47232 | 708480 | 0.86% | 10 | 346 |
| 138 | 185 | 30 | 3840 | 710400 | 1.13% | 11 | 536 |
| 139 | 154 | 36 | 4608 | 709632 | 1.02% | 11 | 84 |
| 140 | 132 | 42 | 5376 | 709632 | 1.02% | 11 | 304 |
| 141 | 84 | 66 | 8448 | 709632 | 1.02% | 11 | 784 |
| 142 | 77 | 72 | 9216 | 709632 | 1.02% | 11 | 854 |
| 143 | 71 | 78 | 9984 | 708864 | 0.91% | 11 | 152 |
| 144 | 66 | 84 | 10752 | 709632 | 1.02% | 11 | 964 |
| 145 | 44 | 126 | 16128 | 709632 | 1.02% | 11 | 1184 |
| 146 | 42 | 132 | 16896 | 709632 | 1.02% | 11 | 1204 |
| 147 | 37 | 150 | 19200 | 710400 | 1.13% | 11 | 2016 |
| 148 | 33 | 168 | 21504 | 709632 | 1.02% | 11 | 1294 |
| 149 | 28 | 198 | 25344 | 709632 | 1.02% | 11 | 1344 |
| 150 | 25 | 222 | 28416 | 710400 | 1.13% | 11 | 2136 |
| 151 | 22 | 252 | 32256 | 709632 | 1.02% | 11 | 1404 |
| 152 | 21 | 264 | 33792 | 709632 | 1.02% | 11 | 1414 |
| 153 | 14 | 396 | 50688 | 709632 | 1.02% | 11 | 1484 |

(12) The quantity $N_{CW}$ of symbols before framing is 172032. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 43. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 43 is low: OH<1.50%. In Table 43, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 43.

Table 43

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 165 | 11 | 1056 | 174240 | 1.28% | 393 |
| 2 | 151 | 12 | 1152 | 173952 | 1.12% | 108 |
| 3 | 121 | 15 | 1440 | 174240 | 1.28% | 393 |
| 4 | 101 | 18 | 1728 | 174528 | 1.45% | 678 |
| 5 | 79 | 23 | 2208 | 174432 | 1.40% | 583 |
| 6 | 55 | 33 | 3168 | 174240 | 1.28% | 393 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 7 | 49 | 37 | 3552 | 174048 | 1.17% | 203 |
| 8 | 37 | 49 | 4704 | 174048 | 1.17% | 203 |
| 9 | 33 | 55 | 5280 | 174240 | 1.28% | 393 |
| 10 | 23 | 79 | 7584 | 174432 | 1.40% | 583 |
| 11 | 18 | 101 | 9696 | 174528 | 1.45% | 678 |
| 12 | 15 | 121 | 11616 | 174240 | 1.28% | 393 |
| 13 | 12 | 151 | 14496 | 173952 | 1.12% | 108 |
| 14 | 11 | 165 | 15840 | 174240 | 1.28% | 393 |
| 15 | 9 | 202 | 19392 | 174528 | 1.45% | 678 |
| 16 | 8 | 227 | 21792 | 174336 | 1.34% | 488 |
| 17 | 7 | 259 | 24864 | 174048 | 1.17% | 203 |
| 18 | 6 | 302 | 28992 | 173952 | 1.12% | 108 |
| 19 | 6 | 303 | 29088 | 174528 | 1.45% | 678 |
| 20 | 5 | 363 | 34848 | 174240 | 1.28% | 393 |

Considering that the quantity $N_{TS}$ of training symbols is not greater than 11, Table 44 may be obtained with reference to Table 43. In this case, a frame overhead OH of a super-frame architecture in cases listed in Table 44 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 44.

Table 44

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 165 | 11 | 1056 | 174240 | 1.28% | 2 | 228 |
| 2 | 121 | 15 | 1440 | 174240 | 1.28% | 2 | 272 |
| 3 | 79 | 23 | 2208 | 174432 | 1.40% | 2 | 504 |
| 4 | 55 | 33 | 3168 | 174240 | 1.28% | 2 | 338 |
| 5 | 49 | 37 | 3552 | 174048 | 1.17% | 2 | 154 |
| 6 | 37 | 49 | 4704 | 174048 | 1.17% | 2 | 166 |
| 7 | 33 | 55 | 5280 | 174240 | 1.28% | 2 | 360 |
| 8 | 23 | 79 | 7584 | 174432 | 1.40% | 2 | 560 |
| 9 | 18 | 101 | 9696 | 174528 | 1.45% | 2 | 660 |
| 10 | 15 | 121 | 11616 | 174240 | 1.28% | 2 | 378 |
| 11 | 12 | 151 | 14496 | 173952 | 1.12% | 2 | 96 |
| 12 | 11 | 165 | 15840 | 174240 | 1.28% | 2 | 382 |
| 13 | 8 | 227 | 21792 | 174336 | 1.34% | 2 | 480 |
| 14 | 7 | 259 | 24864 | 174048 | 1.17% | 2 | 196 |
| 15 | 6 | 303 | 29088 | 174528 | 1.45% | 2 | 672 |
| 16 | 5 | 363 | 34848 | 174240 | 1.28% | 2 | 388 |
| 17 | 101 | 18 | 1728 | 174528 | 1.45% | 3 | 476 |
| 18 | 9 | 202 | 19392 | 174528 | 1.45% | 3 | 660 |
| 19 | 6 | 302 | 28992 | 173952 | 1.12% | 3 | 96 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 20 | 121 | 15 | 1440 | 174240 | 1.28% | 4 | 30 |
| 21 | 79 | 23 | 2208 | 174432 | 1.40% | 4 | 346 |
| 22 | 55 | 33 | 3168 | 174240 | 1.28% | 4 | 228 |
| 23 | 49 | 37 | 3552 | 174048 | 1.17% | 4 | 56 |
| 24 | 37 | 49 | 4704 | 174048 | 1.17% | 4 | 92 |
| 25 | 33 | 55 | 5280 | 174240 | 1.28% | 4 | 294 |
| 26 | 23 | 79 | 7584 | 174432 | 1.40% | 4 | 514 |
| 27 | 18 | 101 | 9696 | 174528 | 1.45% | 4 | 624 |
| 28 | 15 | 121 | 11616 | 174240 | 1.28% | 4 | 348 |
| 29 | 12 | 151 | 14496 | 173952 | 1.12% | 4 | 72 |
| 30 | 11 | 165 | 15840 | 174240 | 1.28% | 4 | 360 |
| 31 | 8 | 227 | 21792 | 174336 | 1.34% | 4 | 464 |
| 32 | 7 | 259 | 24864 | 174048 | 1.17% | 4 | 182 |
| 33 | 6 | 303 | 29088 | 174528 | 1.45% | 4 | 660 |
| 34 | 5 | 363 | 34848 | 174240 | 1.28% | 4 | 378 |
| 35 | 101 | 18 | 1728 | 174528 | 1.45% | 5 | 274 |
| 36 | 9 | 202 | 19392 | 174528 | 1.45% | 5 | 642 |
| 37 | 6 | 302 | 28992 | 173952 | 1.12% | 5 | 84 |
| 38 | 79 | 23 | 2208 | 174432 | 1.40% | 6 | 188 |
| 39 | 55 | 33 | 3168 | 174240 | 1.28% | 6 | 118 |
| 40 | 33 | 55 | 5280 | 174240 | 1.28% | 6 | 228 |
| 41 | 23 | 79 | 7584 | 174432 | 1.40% | 6 | 468 |
| 42 | 18 | 101 | 9696 | 174528 | 1.45% | 6 | 588 |
| 43 | 15 | 121 | 11616 | 174240 | 1.28% | 6 | 318 |
| 44 | 12 | 151 | 14496 | 173952 | 1.12% | 6 | 48 |
| 45 | 11 | 165 | 15840 | 174240 | 1.28% | 6 | 338 |
| 46 | 8 | 227 | 21792 | 174336 | 1.34% | 6 | 448 |
| 47 | 7 | 259 | 24864 | 174048 | 1.17% | 6 | 168 |
| 48 | 6 | 303 | 29088 | 174528 | 1.45% | 6 | 648 |
| 49 | 5 | 363 | 34848 | 174240 | 1.28% | 6 | 368 |
| 50 | 101 | 18 | 1728 | 174528 | 1.45% | 7 | 72 |
| 51 | 9 | 202 | 19392 | 174528 | 1.45% | 7 | 624 |
| 52 | 6 | 302 | 28992 | 173952 | 1.12% | 7 | 72 |
| 53 | 79 | 23 | 2208 | 174432 | 1.40% | 8 | 30 |
| 54 | 33 | 55 | 5280 | 174240 | 1.28% | 8 | 162 |
| 55 | 23 | 79 | 7584 | 174432 | 1.40% | 8 | 422 |
| 56 | 18 | 101 | 9696 | 174528 | 1.45% | 8 | 552 |
| 57 | 15 | 121 | 11616 | 174240 | 1.28% | 8 | 288 |
| 58 | 12 | 151 | 14496 | 173952 | 1.12% | 8 | 24 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 59 | 11 | 165 | 15840 | 174240 | 1.28% | 8 | 316 |
| 60 | 8 | 227 | 21792 | 174336 | 1.34% | 8 | 432 |
| 61 | 7 | 259 | 24864 | 174048 | 1.17% | 8 | 154 |
| 62 | 6 | 303 | 29088 | 174528 | 1.45% | 8 | 636 |
| 63 | 5 | 363 | 34848 | 174240 | 1.28% | 8 | 358 |
| 64 | 9 | 202 | 19392 | 174528 | 1.45% | 9 | 606 |
| 65 | 6 | 302 | 28992 | 173952 | 1.12% | 9 | 60 |
| 66 | 33 | 55 | 5280 | 174240 | 1.28% | 10 | 96 |
| 67 | 23 | 79 | 7584 | 174432 | 1.40% | 10 | 376 |
| 68 | 18 | 101 | 9696 | 174528 | 1.45% | 10 | 516 |
| 69 | 15 | 121 | 11616 | 174240 | 1.28% | 10 | 258 |
| 70 | 11 | 165 | 15840 | 174240 | 1.28% | 10 | 294 |
| 71 | 8 | 227 | 21792 | 174336 | 1.34% | 10 | 416 |
| 72 | 7 | 259 | 24864 | 174048 | 1.17% | 10 | 140 |
| 73 | 6 | 303 | 29088 | 174528 | 1.45% | 10 | 624 |
| 74 | 5 | 363 | 34848 | 174240 | 1.28% | 10 | 348 |
| 75 | 9 | 202 | 19392 | 174528 | 1.45% | 11 | 588 |
| 76 | 6 | 302 | 28992 | 173952 | 1.12% | 11 | 48 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 45 may be obtained with reference to Table 44. In this case, a frame overhead OH in cases listed in Table 45 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 45. It should be noted that, in this case (12), a case in which the quantity $N_F$ of symbols in the super-frame is an integer multiple of 192 and 128 and the quantity $N_S$ of symbols in each sub-frame is also an integer multiple of 192 and 128 does not exist.

Table 45

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 12 | 151 | 14496 | 173952 | 1.12% | 2 | 96 |
| 2 | 8 | 227 | 21792 | 174336 | 1.34% | 2 | 480 |
| 3 | 6 | 302 | 28992 | 173952 | 1.12% | 3 | 96 |
| 4 | 12 | 151 | 14496 | 173952 | 1.12% | 4 | 72 |
| 5 | 8 | 227 | 21792 | 174336 | 1.34% | 4 | 464 |
| 6 | 6 | 302 | 28992 | 173952 | 1.12% | 5 | 84 |
| 7 | 12 | 151 | 14496 | 173952 | 1.12% | 6 | 48 |
| 8 | 8 | 227 | 21792 | 174336 | 1.34% | 6 | 448 |
| 9 | 6 | 302 | 28992 | 173952 | 1.12% | 7 | 72 |
| 10 | 12 | 151 | 14496 | 173952 | 1.12% | 8 | 24 |
| 11 | 8 | 227 | 21792 | 174336 | 1.34% | 8 | 432 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 12 | 6 | 302 | 28992 | 173952 | 1.12% | 9 | 60 |
| 13 | 8 | 227 | 21792 | 174336 | 1.34% | 10 | 416 |
| 14 | 6 | 302 | 28992 | 173952 | 1.12% | 11 | 48 |

(13) The quantity $N_{CW}$ of symbols before framing is 344064. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 45. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 46 is low: OH<1.50%. In Table 46, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 46.

Table 46

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 363 | 10 | 960 | 348480 | 1.28% | 786 |
| 2 | 330 | 11 | 1056 | 348480 | 1.28% | 786 |
| 3 | 302 | 12 | 1152 | 347904 | 1.12% | 216 |
| 4 | 279 | 13 | 1248 | 348192 | 1.20% | 501 |
| 5 | 259 | 14 | 1344 | 348096 | 1.17% | 406 |
| 6 | 242 | 15 | 1440 | 348480 | 1.28% | 786 |
| 7 | 227 | 16 | 1536 | 348672 | 1.34% | 976 |
| 8 | 202 | 18 | 1728 | 349056 | 1.45% | 1356 |
| 9 | 191 | 19 | 1824 | 348384 | 1.26% | 691 |
| 10 | 173 | 21 | 2016 | 348768 | 1.37% | 1071 |
| 11 | 165 | 22 | 2112 | 348480 | 1.28% | 786 |
| 12 | 158 | 23 | 2208 | 348864 | 1.40% | 1166 |
| 13 | 151 | 24 | 2304 | 347904 | 1.12% | 216 |
| 14 | 145 | 25 | 2400 | 348000 | 1.14% | 311 |
| 15 | 125 | 29 | 2784 | 348000 | 1.14% | 311 |
| 16 | 121 | 30 | 2880 | 348480 | 1.28% | 786 |
| 17 | 117 | 31 | 2976 | 348192 | 1.20% | 501 |
| 18 | 110 | 33 | 3168 | 348480 | 1.28% | 786 |
| 19 | 101 | 36 | 3456 | 349056 | 1.45% | 1356 |
| 20 | 98 | 37 | 3552 | 348096 | 1.17% | 406 |
| 21 | 93 | 39 | 3744 | 348192 | 1.20% | 501 |
| 22 | 79 | 46 | 4416 | 348864 | 1.40% | 1166 |

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 23 | 74 | 49 | 4704 | 348096 | 1.17% | 406 |
| 24 | 66 | 55 | 5280 | 348480 | 1.28% | 786 |
| 25 | 55 | 66 | 6336 | 348480 | 1.28% | 786 |
| 26 | 49 | 74 | 7104 | 348096 | 1.17% | 406 |
| 27 | 46 | 79 | 7584 | 348864 | 1.40% | 1166 |
| 28 | 39 | 93 | 8928 | 348192 | 1.20% | 501 |
| 29 | 37 | 98 | 9408 | 348096 | 1.17% | 406 |
| 30 | 36 | 101 | 9696 | 349056 | 1.45% | 1356 |
| 31 | 33 | 110 | 10560 | 348480 | 1.28% | 786 |
| 32 | 31 | 117 | 11232 | 348192 | 1.20% | 501 |
| 33 | 30 | 121 | 11616 | 348480 | 1.28% | 786 |
| 34 | 29 | 125 | 12000 | 348000 | 1.14% | 311 |
| 35 | 25 | 145 | 13920 | 348000 | 1.14% | 311 |
| 36 | 24 | 151 | 14496 | 347904 | 1.12% | 216 |
| 37 | 23 | 158 | 15168 | 348864 | 1.40% | 1166 |
| 38 | 22 | 165 | 15840 | 348480 | 1.28% | 786 |
| 39 | 21 | 173 | 16608 | 348768 | 1.37% | 1071 |
| 40 | 19 | 191 | 18336 | 348384 | 1.26% | 691 |
| 41 | 18 | 202 | 19392 | 349056 | 1.45% | 1356 |
| 42 | 16 | 227 | 21792 | 348672 | 1.34% | 976 |
| 43 | 15 | 242 | 23232 | 348480 | 1.28% | 786 |
| 44 | 14 | 259 | 24864 | 348096 | 1.17% | 406 |
| 45 | 13 | 279 | 26784 | 348192 | 1.20% | 501 |
| 46 | 12 | 302 | 28992 | 347904 | 1.12% | 216 |
| 47 | 12 | 303 | 29088 | 349056 | 1.45% | 1356 |
| 48 | 11 | 330 | 31680 | 348480 | 1.28% | 786 |
| 49 | 10 | 363 | 34848 | 348480 | 1.28% | 786 |

Considering that the quantity $N_{TS}$ of training symbols is not greater than 11, Table 47 may be obtained with reference to Table 46. In this case, a frame overhead OH of a super-frame architecture in cases listed in Table 47 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 47.

Table 47

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 330 | 11 | 1056 | 348480 | 1.28% | 2 | 456 |
| 2 | 279 | 13 | 1248 | 348192 | 1.20% | 2 | 222 |
| 3 | 242 | 15 | 1440 | 348480 | 1.28% | 2 | 544 |
| 4 | 191 | 19 | 1824 | 348384 | 1.26% | 2 | 500 |
| 5 | 173 | 21 | 2016 | 348768 | 1.37% | 2 | 898 |
| 6 | 158 | 23 | 2208 | 348864 | 1.40% | 2 | 1008 |
| 7 | 145 | 25 | 2400 | 348000 | 1.14% | 2 | 166 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 8 | 125 | 29 | 2784 | 348000 | 1.14% | 2 | 186 |
| 9 | 117 | 31 | 2976 | 348192 | 1.20% | 2 | 384 |
| 10 | 110 | 33 | 3168 | 348480 | 1.28% | 2 | 676 |
| 11 | 98 | 37 | 3552 | 348096 | 1.17% | 2 | 308 |
| 12 | 93 | 39 | 3744 | 348192 | 1.20% | 2 | 408 |
| 13 | 74 | 49 | 4704 | 348096 | 1.17% | 2 | 332 |
| 14 | 66 | 55 | 5280 | 348480 | 1.28% | 2 | 720 |
| 15 | 46 | 79 | 7584 | 348864 | 1.40% | 2 | 1120 |
| 16 | 39 | 93 | 8928 | 348192 | 1.20% | 2 | 462 |
| 17 | 36 | 101 | 9696 | 349056 | 1.45% | 2 | 1320 |
| 18 | 31 | 117 | 11232 | 348192 | 1.20% | 2 | 470 |
| 19 | 30 | 121 | 11616 | 348480 | 1.28% | 2 | 756 |
| 20 | 29 | 125 | 12000 | 348000 | 1.14% | 2 | 282 |
| 21 | 25 | 145 | 13920 | 348000 | 1.14% | 2 | 286 |
| 22 | 24 | 151 | 14496 | 347904 | 1.12% | 2 | 192 |
| 23 | 22 | 165 | 15840 | 348480 | 1.28% | 2 | 764 |
| 24 | 21 | 173 | 16608 | 348768 | 1.37% | 2 | 1050 |
| 25 | 19 | 191 | 18336 | 348384 | 1.26% | 2 | 672 |
| 26 | 16 | 227 | 21792 | 348672 | 1.34% | 2 | 960 |
| 27 | 14 | 259 | 24864 | 348096 | 1.17% | 2 | 392 |
| 28 | 13 | 279 | 26784 | 348192 | 1.20% | 2 | 488 |
| 29 | 12 | 303 | 29088 | 349056 | 1.45% | 2 | 1344 |
| 30 | 10 | 363 | 34848 | 348480 | 1.28% | 2 | 776 |
| 31 | 363 | 10 | 960 | 348480 | 1.28% | 3 | 60 |
| 32 | 303 | 12 | 1152 | 349056 | 1.45% | 3 | 750 |
| 33 | 227 | 16 | 1536 | 348672 | 1.34% | 3 | 522 |
| 34 | 202 | 18 | 1728 | 349056 | 1.45% | 3 | 952 |
| 35 | 165 | 22 | 2112 | 348480 | 1.28% | 3 | 456 |
| 36 | 121 | 30 | 2880 | 348480 | 1.28% | 3 | 544 |
| 37 | 101 | 36 | 3456 | 349056 | 1.45% | 3 | 1154 |
| 38 | 79 | 46 | 4416 | 348864 | 1.40% | 3 | 1008 |
| 39 | 55 | 66 | 6336 | 348480 | 1.28% | 3 | 676 |
| 40 | 49 | 74 | 7104 | 348096 | 1.17% | 3 | 308 |
| 41 | 37 | 98 | 9408 | 348096 | 1.17% | 3 | 332 |
| 42 | 33 | 110 | 10560 | 348480 | 1.28% | 3 | 720 |
| 43 | 23 | 158 | 15168 | 348864 | 1.40% | 3 | 1120 |
| 44 | 18 | 202 | 19392 | 349056 | 1.45% | 3 | 1320 |
| 45 | 15 | 242 | 23232 | 348480 | 1.28% | 3 | 756 |
| 46 | 12 | 302 | 28992 | 347904 | 1.12% | 3 | 192 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 47 | 11 | 330 | 31680 | 348480 | 1.28% | 3 | 764 |
| 48 | 242 | 15 | 1440 | 348480 | 1.28% | 4 | 60 |
| 49 | 191 | 19 | 1824 | 348384 | 1.26% | 4 | 118 |
| 50 | 173 | 21 | 2016 | 348768 | 1.37% | 4 | 552 |
| 51 | 158 | 23 | 2208 | 348864 | 1.40% | 4 | 692 |
| 52 | 117 | 31 | 2976 | 348192 | 1.20% | 4 | 150 |
| 53 | 110 | 33 | 3168 | 348480 | 1.28% | 4 | 456 |
| 54 | 98 | 37 | 3552 | 348096 | 1.17% | 4 | 112 |
| 55 | 93 | 39 | 3744 | 348192 | 1.20% | 4 | 222 |
| 56 | 74 | 49 | 4704 | 348096 | 1.17% | 4 | 184 |
| 57 | 66 | 55 | 5280 | 348480 | 1.28% | 4 | 588 |
| 58 | 46 | 79 | 7584 | 348864 | 1.40% | 4 | 1028 |
| 59 | 39 | 93 | 8928 | 348192 | 1.20% | 4 | 384 |
| 60 | 36 | 101 | 9696 | 349056 | 1.45% | 4 | 1248 |
| 61 | 31 | 117 | 11232 | 348192 | 1.20% | 4 | 408 |
| 62 | 30 | 121 | 11616 | 348480 | 1.28% | 4 | 696 |
| 63 | 29 | 125 | 12000 | 348000 | 1.14% | 4 | 224 |
| 64 | 25 | 145 | 13920 | 348000 | 1.14% | 4 | 236 |
| 65 | 24 | 151 | 14496 | 347904 | 1.12% | 4 | 144 |
| 66 | 22 | 165 | 15840 | 348480 | 1.28% | 4 | 720 |
| 67 | 21 | 173 | 16608 | 348768 | 1.37% | 4 | 1008 |
| 68 | 19 | 191 | 18336 | 348384 | 1.26% | 4 | 634 |
| 69 | 16 | 227 | 21792 | 348672 | 1.34% | 4 | 928 |
| 70 | 14 | 259 | 24864 | 348096 | 1.17% | 4 | 364 |
| 71 | 13 | 279 | 26784 | 348192 | 1.20% | 4 | 462 |
| 72 | 12 | 303 | 29088 | 349056 | 1.45% | 4 | 1320 |
| 73 | 10 | 363 | 34848 | 348480 | 1.28% | 4 | 756 |
| 74 | 303 | 12 | 1152 | 349056 | 1.45% | 5 | 144 |
| 75 | 227 | 16 | 1536 | 348672 | 1.34% | 5 | 68 |
| 76 | 202 | 18 | 1728 | 349056 | 1.45% | 5 | 548 |
| 77 | 165 | 22 | 2112 | 348480 | 1.28% | 5 | 126 |
| 78 | 121 | 30 | 2880 | 348480 | 1.28% | 5 | 302 |
| 79 | 101 | 36 | 3456 | 349056 | 1.45% | 5 | 952 |
| 80 | 79 | 46 | 4416 | 348864 | 1.40% | 5 | 850 |
| 81 | 55 | 66 | 6336 | 348480 | 1.28% | 5 | 566 |
| 82 | 49 | 74 | 7104 | 348096 | 1.17% | 5 | 210 |
| 83 | 37 | 98 | 9408 | 348096 | 1.17% | 5 | 258 |
| 84 | 33 | 110 | 10560 | 348480 | 1.28% | 5 | 654 |
| 85 | 23 | 158 | 15168 | 348864 | 1.40% | 5 | 1074 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 86 | 18 | 202 | 19392 | 349056 | 1.45% | 5 | 1284 |
| 87 | 15 | 242 | 23232 | 348480 | 1.28% | 5 | 726 |
| 88 | 12 | 302 | 28992 | 347904 | 1.12% | 5 | 168 |
| 89 | 11 | 330 | 31680 | 348480 | 1.28% | 5 | 742 |
| 90 | 173 | 21 | 2016 | 348768 | 1.37% | 6 | 206 |
| 91 | 158 | 23 | 2208 | 348864 | 1.40% | 6 | 376 |
| 92 | 110 | 33 | 3168 | 348480 | 1.28% | 6 | 236 |
| 93 | 93 | 39 | 3744 | 348192 | 1.20% | 6 | 36 |
| 94 | 74 | 49 | 4704 | 348096 | 1.17% | 6 | 36 |
| 95 | 66 | 55 | 5280 | 348480 | 1.28% | 6 | 456 |
| 96 | 46 | 79 | 7584 | 348864 | 1.40% | 6 | 936 |
| 97 | 39 | 93 | 8928 | 348192 | 1.20% | 6 | 306 |
| 98 | 36 | 101 | 9696 | 349056 | 1.45% | 6 | 1176 |
| 99 | 31 | 117 | 11232 | 348192 | 1.20% | 6 | 346 |
| 100 | 30 | 121 | 11616 | 348480 | 1.28% | 6 | 636 |
| 101 | 29 | 125 | 12000 | 348000 | 1.14% | 6 | 166 |
| 102 | 25 | 145 | 13920 | 348000 | 1.14% | 6 | 186 |
| 103 | 24 | 151 | 14496 | 347904 | 1.12% | 6 | 96 |
| 104 | 22 | 165 | 15840 | 348480 | 1.28% | 6 | 676 |
| 105 | 21 | 173 | 16608 | 348768 | 1.37% | 6 | 966 |
| 106 | 19 | 191 | 18336 | 348384 | 1.26% | 6 | 596 |
| 107 | 16 | 227 | 21792 | 348672 | 1.34% | 6 | 896 |
| 108 | 14 | 259 | 24864 | 348096 | 1.17% | 6 | 336 |
| 109 | 13 | 279 | 26784 | 348192 | 1.20% | 6 | 436 |
| 110 | 12 | 303 | 29088 | 349056 | 1.45% | 6 | 1296 |
| 111 | 10 | 363 | 34848 | 348480 | 1.28% | 6 | 736 |
| 112 | 202 | 18 | 1728 | 349056 | 1.45% | 7 | 144 |
| 113 | 121 | 30 | 2880 | 348480 | 1.28% | 7 | 60 |
| 114 | 101 | 36 | 3456 | 349056 | 1.45% | 7 | 750 |
| 115 | 79 | 46 | 4416 | 348864 | 1.40% | 7 | 692 |
| 116 | 55 | 66 | 6336 | 348480 | 1.28% | 7 | 456 |
| 117 | 49 | 74 | 7104 | 348096 | 1.17% | 7 | 112 |
| 118 | 37 | 98 | 9408 | 348096 | 1.17% | 7 | 184 |
| 119 | 33 | 110 | 10560 | 348480 | 1.28% | 7 | 588 |
| 120 | 23 | 158 | 15168 | 348864 | 1.40% | 7 | 1028 |
| 121 | 18 | 202 | 19392 | 349056 | 1.45% | 7 | 1248 |
| 122 | 15 | 242 | 23232 | 348480 | 1.28% | 7 | 696 |
| 123 | 12 | 302 | 28992 | 347904 | 1.12% | 7 | 144 |
| 124 | 11 | 330 | 31680 | 348480 | 1.28% | 7 | 720 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 125 | 158 | 23 | 2208 | 348864 | 1.40% | 8 | 60 |
| 126 | 66 | 55 | 5280 | 348480 | 1.28% | 8 | 324 |
| 127 | 46 | 79 | 7584 | 348864 | 1.40% | 8 | 844 |
| 128 | 39 | 93 | 8928 | 348192 | 1.20% | 8 | 228 |
| 129 | 36 | 101 | 9696 | 349056 | 1.45% | 8 | 1104 |
| 130 | 31 | 117 | 11232 | 348192 | 1.20% | 8 | 284 |
| 131 | 30 | 121 | 11616 | 348480 | 1.28% | 8 | 576 |
| 132 | 29 | 125 | 12000 | 348000 | 1.14% | 8 | 108 |
| 133 | 25 | 145 | 13920 | 348000 | 1.14% | 8 | 136 |
| 134 | 24 | 151 | 14496 | 347904 | 1.12% | 8 | 48 |
| 135 | 22 | 165 | 15840 | 348480 | 1.28% | 8 | 632 |
| 136 | 21 | 173 | 16608 | 348768 | 1.37% | 8 | 924 |
| 137 | 19 | 191 | 18336 | 348384 | 1.26% | 8 | 558 |
| 138 | 16 | 227 | 21792 | 348672 | 1.34% | 8 | 864 |
| 139 | 14 | 259 | 24864 | 348096 | 1.17% | 8 | 308 |
| 140 | 13 | 279 | 26784 | 348192 | 1.20% | 8 | 410 |
| 141 | 12 | 303 | 29088 | 349056 | 1.45% | 8 | 1272 |
| 142 | 10 | 363 | 34848 | 348480 | 1.28% | 8 | 716 |
| 143 | 101 | 36 | 3456 | 349056 | 1.45% | 9 | 548 |
| 144 | 79 | 46 | 4416 | 348864 | 1.40% | 9 | 534 |
| 145 | 55 | 66 | 6336 | 348480 | 1.28% | 9 | 346 |
| 146 | 37 | 98 | 9408 | 348096 | 1.17% | 9 | 110 |
| 147 | 33 | 110 | 10560 | 348480 | 1.28% | 9 | 522 |
| 148 | 23 | 158 | 15168 | 348864 | 1.40% | 9 | 982 |
| 149 | 18 | 202 | 19392 | 349056 | 1.45% | 9 | 1212 |
| 150 | 15 | 242 | 23232 | 348480 | 1.28% | 9 | 666 |
| 151 | 12 | 302 | 28992 | 347904 | 1.12% | 9 | 120 |
| 152 | 11 | 330 | 31680 | 348480 | 1.28% | 9 | 698 |
| 153 | 66 | 55 | 5280 | 348480 | 1.28% | 10 | 192 |
| 154 | 46 | 79 | 7584 | 348864 | 1.40% | 10 | 752 |
| 155 | 39 | 93 | 8928 | 348192 | 1.20% | 10 | 150 |
| 156 | 36 | 101 | 9696 | 349056 | 1.45% | 10 | 1032 |
| 157 | 31 | 117 | 11232 | 348192 | 1.20% | 10 | 222 |
| 158 | 30 | 121 | 11616 | 348480 | 1.28% | 10 | 516 |
| 159 | 29 | 125 | 12000 | 348000 | 1.14% | 10 | 50 |
| 160 | 25 | 145 | 13920 | 348000 | 1.14% | 10 | 86 |
| 161 | 22 | 165 | 15840 | 348480 | 1.28% | 10 | 588 |
| 162 | 21 | 173 | 16608 | 348768 | 1.37% | 10 | 882 |
| 163 | 19 | 191 | 18336 | 348384 | 1.26% | 10 | 520 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 164 | 16 | 227 | 21792 | 348672 | 1.34% | 10 | 832 |
| 165 | 14 | 259 | 24864 | 348096 | 1.17% | 10 | 280 |
| 166 | 13 | 279 | 26784 | 348192 | 1.20% | 10 | 384 |
| 167 | 12 | 303 | 29088 | 349056 | 1.45% | 10 | 1248 |
| 168 | 10 | 363 | 34848 | 348480 | 1.28% | 10 | 696 |
| 169 | 101 | 36 | 3456 | 349056 | 1.45% | 11 | 346 |
| 170 | 79 | 46 | 4416 | 348864 | 1.40% | 11 | 376 |
| 171 | 55 | 66 | 6336 | 348480 | 1.28% | 11 | 236 |
| 172 | 37 | 98 | 9408 | 348096 | 1.17% | 11 | 36 |
| 173 | 33 | 110 | 10560 | 348480 | 1.28% | 11 | 456 |
| 174 | 23 | 158 | 15168 | 348864 | 1.40% | 11 | 936 |
| 175 | 18 | 202 | 19392 | 349056 | 1.45% | 11 | 1176 |
| 176 | 15 | 242 | 23232 | 348480 | 1.28% | 11 | 636 |
| 177 | 12 | 302 | 28992 | 347904 | 1.12% | 11 | 96 |
| 178 | 11 | 330 | 31680 | 348480 | 1.28% | 11 | 676 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 48 may be obtained with reference to Table 47. In this case, a frame overhead OH in cases listed in Table 48 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 48.

Table 48

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 36 | 101 | 9696 | 349056 | 1.45% | 2 | 1320 |
| 2 | 24 | 151 | 14496 | 347904 | 1.12% | 2 | 192 |
| 3 | 16 | 227 | 21792 | 348672 | 1.34% | 2 | 960 |
| 4 | 12 | 303 | 29088 | 349056 | 1.45% | 2 | 1344 |
| 5 | 303 | 12 | 1152 | 349056 | 1.45% | 3 | 750 |
| 6 | 227 | 16 | 1536 | 348672 | 1.34% | 3 | 522 |
| 7 | 202 | 18 | 1728 | 349056 | 1.45% | 3 | 952 |
| 8 | 101 | 36 | 3456 | 349056 | 1.45% | 3 | 1154 |
| 9 | 18 | 202 | 19392 | 349056 | 1.45% | 3 | 1320 |
| 10 | 12 | 302 | 28992 | 347904 | 1.12% | 3 | 192 |
| 11 | 36 | 101 | 9696 | 349056 | 1.45% | 4 | 1248 |
| 12 | 24 | 151 | 14496 | 347904 | 1.12% | 4 | 144 |
| 13 | 16 | 227 | 21792 | 348672 | 1.34% | 4 | 928 |
| 14 | 12 | 303 | 29088 | 349056 | 1.45% | 4 | 1320 |
| 15 | 303 | 12 | 1152 | 349056 | 1.45% | 5 | 144 |
| 16 | 227 | 16 | 1536 | 348672 | 1.34% | 5 | 68 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 17 | 202 | 18 | 1728 | 349056 | 1.45% | 5 | 548 |
| 18 | 101 | 36 | 3456 | 349056 | 1.45% | 5 | 952 |
| 19 | 18 | 202 | 19392 | 349056 | 1.45% | 5 | 1284 |
| 20 | 12 | 302 | 28992 | 347904 | 1.12% | 5 | 168 |
| 21 | 36 | 101 | 9696 | 349056 | 1.45% | 6 | 1176 |
| 22 | 24 | 151 | 14496 | 347904 | 1.12% | 6 | 96 |
| 23 | 16 | 227 | 21792 | 348672 | 1.34% | 6 | 896 |
| 24 | 12 | 303 | 29088 | 349056 | 1.45% | 6 | 1296 |
| 25 | 202 | 18 | 1728 | 349056 | 1.45% | 7 | 144 |
| 26 | 101 | 36 | 3456 | 349056 | 1.45% | 7 | 750 |
| 27 | 18 | 202 | 19392 | 349056 | 1.45% | 7 | 1248 |
| 28 | 12 | 302 | 28992 | 347904 | 1.12% | 7 | 144 |
| 29 | 36 | 101 | 9696 | 349056 | 1.45% | 8 | 1104 |
| 30 | 24 | 151 | 14496 | 347904 | 1.12% | 8 | 48 |
| 31 | 16 | 227 | 21792 | 348672 | 1.34% | 8 | 864 |
| 32 | 12 | 303 | 29088 | 349056 | 1.45% | 8 | 1272 |
| 33 | 101 | 36 | 3456 | 349056 | 1.45% | 9 | 548 |
| 34 | 18 | 202 | 19392 | 349056 | 1.45% | 9 | 1212 |
| 35 | 12 | 302 | 28992 | 347904 | 1.12% | 9 | 120 |
| 36 | 36 | 101 | 9696 | 349056 | 1.45% | 10 | 1032 |
| 37 | 16 | 227 | 21792 | 348672 | 1.34% | 10 | 832 |
| 38 | 12 | 303 | 29088 | 349056 | 1.45% | 10 | 1248 |
| 39 | 101 | 36 | 3456 | 349056 | 1.45% | 11 | 346 |
| 40 | 18 | 202 | 19392 | 349056 | 1.45% | 11 | 1176 |
| 41 | 12 | 302 | 28992 | 347904 | 1.12% | 11 | 96 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 49 may be obtained with reference to Table 48. In this case, a frame overhead OH in cases listed in Table 49 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 49

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 303 | 12 | 1152 | 349056 | 1.45% | 3 | 750 |
| 2 | 227 | 16 | 1536 | 348672 | 1.34% | 3 | 522 |
| 3 | 101 | 36 | 3456 | 349056 | 1.45% | 3 | 1154 |
| 4 | 303 | 12 | 1152 | 349056 | 1.45% | 5 | 144 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 5 | 227 | 16 | 1536 | 348672 | 1.34% | 5 | 68 |
| 6 | 101 | 36 | 3456 | 349056 | 1.45% | 5 | 952 |
| 7 | 101 | 36 | 3456 | 349056 | 1.45% | 7 | 750 |
| 8 | 101 | 36 | 3456 | 349056 | 1.45% | 9 | 548 |
| 9 | 101 | 36 | 3456 | 349056 | 1.45% | 11 | 346 |

(14) The quantity $N_{CW}$ of symbols before framing is 516096. For example, an open FEC (Open FEC, OFEC) encoding scheme with an encoding overhead of approximately 15.3% is used, or another encoding scheme may be used. A 1st symbol in every $N_{PG}=96$ consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each each are as listed in one entry of Table 50. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 50 is low: OH<1.50%. In Table 50, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 50.

Table 50

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 544 | 10 | 960 | 522240 | 1.19% | 704 |
| 2 | 494 | 11 | 1056 | 521664 | 1.08% | 134 |
| 3 | 453 | 12 | 1152 | 521856 | 1.12% | 324 |
| 4 | 418 | 13 | 1248 | 521664 | 1.08% | 134 |
| 5 | 389 | 14 | 1344 | 522816 | 1.30% | 1274 |
| 6 | 363 | 15 | 1440 | 522720 | 1.28% | 1179 |
| 7 | 340 | 16 | 1536 | 522240 | 1.19% | 704 |
| 8 | 320 | 17 | 1632 | 522240 | 1.19% | 704 |
| 9 | 302 | 18 | 1728 | 521856 | 1.12% | 324 |
| 10 | 286 | 19 | 1824 | 521664 | 1.08% | 134 |
| 11 | 272 | 20 | 1920 | 522240 | 1.19% | 704 |
| 12 | 259 | 21 | 2016 | 522144 | 1.17% | 609 |
| 13 | 247 | 22 | 2112 | 521664 | 1.08% | 134 |
| 14 | 237 | 23 | 2208 | 523296 | 1.40% | 1749 |
| 15 | 227 | 24 | 2304 | 523008 | 1.34% | 1464 |
| 16 | 218 | 25 | 2400 | 523200 | 1.38% | 1654 |
| 17 | 209 | 26 | 2496 | 521664 | 1.08% | 134 |
| 18 | 202 | 27 | 2592 | 523584 | 1.45% | 2034 |
| 19 | 188 | 29 | 2784 | 523392 | 1.41% | 1844 |
| 20 | 176 | 31 | 2976 | 523776 | 1.49% | 2224 |
| 21 | 170 | 32 | 3072 | 522240 | 1.19% | 704 |
| 22 | 165 | 33 | 3168 | 522720 | 1.28% | 1179 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 23 | 160 | 34 | 3264 | 522240 | 1.19% | 704 |
| 24 | 151 | 36 | 3456 | 521856 | 1.12% | 324 |
| 25 | 147 | 37 | 3552 | 522144 | 1.17% | 609 |
| 26 | 143 | 38 | 3648 | 521664 | 1.08% | 134 |
| 27 | 136 | 40 | 3840 | 522240 | 1.19% | 704 |
| 28 | 133 | 41 | 3936 | 523488 | 1.43% | 1939 |
| 29 | 124 | 44 | 4224 | 523776 | 1.49% | 2224 |
| 30 | 121 | 45 | 4320 | 522720 | 1.28% | 1179 |
| 31 | 116 | 47 | 4512 | 523392 | 1.41% | 1844 |
| 32 | 111 | 49 | 4704 | 522144 | 1.17% | 609 |
| 33 | 109 | 50 | 4800 | 523200 | 1.38% | 1654 |
| 34 | 101 | 54 | 5184 | 523584 | 1.45% | 2034 |
| 35 | 99 | 55 | 5280 | 522720 | 1.28% | 1179 |
| 36 | 94 | 58 | 5568 | 523392 | 1.41% | 1844 |
| 37 | 88 | 62 | 5952 | 523776 | 1.49% | 2224 |
| 38 | 85 | 64 | 6144 | 522240 | 1.19% | 704 |
| 39 | 80 | 68 | 6528 | 522240 | 1.19% | 704 |
| 40 | 79 | 69 | 6624 | 523296 | 1.40% | 1749 |
| 41 | 69 | 79 | 7584 | 523296 | 1.40% | 1749 |
| 42 | 68 | 80 | 7680 | 522240 | 1.19% | 704 |
| 43 | 64 | 85 | 8160 | 522240 | 1.19% | 704 |
| 44 | 62 | 88 | 8448 | 523776 | 1.49% | 2224 |
| 45 | 58 | 94 | 9024 | 523392 | 1.41% | 1844 |
| 46 | 55 | 99 | 9504 | 522720 | 1.28% | 1179 |
| 47 | 54 | 101 | 9696 | 523584 | 1.45% | 2034 |
| 48 | 50 | 109 | 10464 | 523200 | 1.38% | 1654 |
| 49 | 49 | 111 | 10656 | 522144 | 1.17% | 609 |
| 50 | 47 | 116 | 11136 | 523392 | 1.41% | 1844 |
| 51 | 45 | 121 | 11616 | 522720 | 1.28% | 1179 |
| 52 | 44 | 124 | 11904 | 523776 | 1.49% | 2224 |
| 53 | 41 | 133 | 12768 | 523488 | 1.43% | 1939 |
| 54 | 40 | 136 | 13056 | 522240 | 1.19% | 704 |
| 55 | 38 | 143 | 13728 | 521664 | 1.08% | 134 |
| 56 | 37 | 147 | 14112 | 522144 | 1.17% | 609 |
| 57 | 36 | 151 | 14496 | 521856 | 1.12% | 324 |
| 58 | 34 | 160 | 15360 | 522240 | 1.19% | 704 |
| 59 | 33 | 165 | 15840 | 522720 | 1.28% | 1179 |
| 60 | 32 | 170 | 16320 | 522240 | 1.19% | 704 |
| 61 | 31 | 176 | 16896 | 523776 | 1.49% | 2224 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 62 | 29 | 188 | 18048 | 523392 | 1.41% | 1844 |
| 63 | 27 | 202 | 19392 | 523584 | 1.45% | 2034 |
| 64 | 26 | 209 | 20064 | 521664 | 1.08% | 134 |
| 65 | 25 | 218 | 20928 | 523200 | 1.38% | 1654 |
| 66 | 24 | 227 | 21792 | 523008 | 1.34% | 1464 |
| 67 | 23 | 237 | 22752 | 523296 | 1.40% | 1749 |
| 68 | 22 | 247 | 23712 | 521664 | 1.08% | 134 |
| 69 | 22 | 248 | 23808 | 523776 | 1.49% | 2224 |
| 70 | 21 | 259 | 24864 | 522144 | 1.17% | 609 |
| 71 | 20 | 272 | 26112 | 522240 | 1.19% | 704 |
| 72 | 19 | 286 | 27456 | 521664 | 1.08% | 134 |
| 73 | 19 | 287 | 27552 | 523488 | 1.43% | 1939 |
| 74 | 18 | 302 | 28992 | 521856 | 1.12% | 324 |
| 75 | 18 | 303 | 29088 | 523584 | 1.45% | 2034 |
| 76 | 17 | 320 | 30720 | 522240 | 1.19% | 704 |
| 77 | 16 | 340 | 32640 | 522240 | 1.19% | 704 |
| 78 | 16 | 341 | 32736 | 523776 | 1.49% | 2224 |
| 79 | 15 | 363 | 34848 | 522720 | 1.28% | 1179 |
| 80 | 14 | 389 | 37344 | 522816 | 1.30% | 1274 |

Considering that the quantity $N_{TS}$ of training symbols is not greater than 11, Table 51 may be obtained with reference to Table 50. In this case, a frame overhead OH of a super-frame architecture in cases listed in Table 51 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 51.

Table 51

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 495 | 11 | 1056 | 522720 | 1.28% | 2 | 684 |
| 2 | 419 | 13 | 1248 | 522912 | 1.32% | 2 | 950 |
| 3 | 363 | 15 | 1440 | 522720 | 1.28% | 2 | 816 |
| 4 | 320 | 17 | 1632 | 522240 | 1.19% | 2 | 384 |
| 5 | 287 | 19 | 1824 | 523488 | 1.43% | 2 | 1652 |
| 6 | 259 | 21 | 2016 | 522144 | 1.17% | 2 | 350 |
| 7 | 237 | 23 | 2208 | 523296 | 1.40% | 2 | 1512 |
| 8 | 218 | 25 | 2400 | 523200 | 1.38% | 2 | 1436 |
| 9 | 202 | 27 | 2592 | 523584 | 1.45% | 2 | 1832 |
| 10 | 188 | 29 | 2784 | 523392 | 1.41% | 2 | 1656 |
| 11 | 176 | 31 | 2976 | 523776 | 1.49% | 2 | 2048 |
| 12 | 165 | 33 | 3168 | 522720 | 1.28% | 2 | 1014 |
| 13 | 147 | 37 | 3552 | 522144 | 1.17% | 2 | 462 |
| 14 | 133 | 41 | 3936 | 523488 | 1.43% | 2 | 1806 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 15 | 121 | 45 | 4320 | 522720 | 1.28% | 2 | 1058 |
| 16 | 116 | 47 | 4512 | 523392 | 1.41% | 2 | 1728 |
| 17 | 111 | 49 | 4704 | 522144 | 1.17% | 2 | 498 |
| 18 | 99 | 55 | 5280 | 522720 | 1.28% | 2 | 1080 |
| 19 | 79 | 69 | 6624 | 523296 | 1.40% | 2 | 1670 |
| 20 | 69 | 79 | 7584 | 523296 | 1.40% | 2 | 1680 |
| 21 | 64 | 85 | 8160 | 522240 | 1.19% | 2 | 640 |
| 22 | 55 | 99 | 9504 | 522720 | 1.28% | 2 | 1124 |
| 23 | 54 | 101 | 9696 | 523584 | 1.45% | 2 | 1980 |
| 24 | 50 | 109 | 10464 | 523200 | 1.38% | 2 | 1604 |
| 25 | 49 | 111 | 10656 | 522144 | 1.17% | 2 | 560 |
| 26 | 45 | 121 | 11616 | 522720 | 1.28% | 2 | 1134 |
| 27 | 41 | 133 | 12768 | 523488 | 1.43% | 2 | 1898 |
| 28 | 38 | 143 | 13728 | 521664 | 1.08% | 2 | 96 |
| 29 | 37 | 147 | 14112 | 522144 | 1.17% | 2 | 572 |
| 30 | 36 | 151 | 14496 | 521856 | 1.12% | 2 | 288 |
| 31 | 33 | 165 | 15840 | 522720 | 1.28% | 2 | 1146 |
| 32 | 26 | 209 | 20064 | 521664 | 1.08% | 2 | 108 |
| 33 | 24 | 227 | 21792 | 523008 | 1.34% | 2 | 1440 |
| 34 | 23 | 237 | 22752 | 523296 | 1.40% | 2 | 1726 |
| 35 | 22 | 247 | 23712 | 521664 | 1.08% | 2 | 112 |
| 36 | 21 | 259 | 24864 | 522144 | 1.17% | 2 | 588 |
| 37 | 19 | 287 | 27552 | 523488 | 1.43% | 2 | 1920 |
| 38 | 18 | 303 | 29088 | 523584 | 1.45% | 2 | 2016 |
| 39 | 16 | 341 | 32736 | 523776 | 1.49% | 2 | 2208 |
| 40 | 15 | 363 | 34848 | 522720 | 1.28% | 2 | 1164 |
| 41 | 14 | 389 | 37344 | 522816 | 1.30% | 2 | 1260 |
| 42 | 545 | 10 | 960 | 523200 | 1.38% | 3 | 564 |
| 43 | 454 | 12 | 1152 | 523008 | 1.34% | 3 | 556 |
| 44 | 389 | 14 | 1344 | 522816 | 1.30% | 3 | 496 |
| 45 | 340 | 16 | 1536 | 522240 | 1.19% | 3 | 24 |
| 46 | 303 | 18 | 1728 | 523584 | 1.45% | 3 | 1428 |
| 47 | 272 | 20 | 1920 | 522240 | 1.19% | 3 | 160 |
| 48 | 248 | 22 | 2112 | 523776 | 1.49% | 3 | 1728 |
| 49 | 227 | 24 | 2304 | 523008 | 1.34% | 3 | 1010 |
| 50 | 170 | 32 | 3072 | 522240 | 1.19% | 3 | 364 |
| 51 | 160 | 34 | 3264 | 522240 | 1.19% | 3 | 384 |
| 52 | 151 | 36 | 3456 | 521856 | 1.12% | 3 | 22 |
| 53 | 136 | 40 | 3840 | 522240 | 1.19% | 3 | 432 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 54 | 124 | 44 | 4224 | 523776 | 1.49% | 3 | 1976 |
| 55 | 109 | 50 | 4800 | 523200 | 1.38% | 3 | 1436 |
| 56 | 101 | 54 | 5184 | 523584 | 1.45% | 3 | 1832 |
| 57 | 94 | 58 | 5568 | 523392 | 1.41% | 3 | 1656 |
| 58 | 88 | 62 | 5952 | 523776 | 1.49% | 3 | 2048 |
| 59 | 85 | 64 | 6144 | 522240 | 1.19% | 3 | 534 |
| 60 | 80 | 68 | 6528 | 522240 | 1.19% | 3 | 544 |
| 61 | 68 | 80 | 7680 | 522240 | 1.19% | 3 | 568 |
| 62 | 62 | 88 | 8448 | 523776 | 1.49% | 3 | 2100 |
| 63 | 58 | 94 | 9024 | 523392 | 1.41% | 3 | 1728 |
| 64 | 47 | 116 | 11136 | 523392 | 1.41% | 3 | 1750 |
| 65 | 44 | 124 | 11904 | 523776 | 1.49% | 3 | 2136 |
| 66 | 40 | 136 | 13056 | 522240 | 1.19% | 3 | 624 |
| 67 | 34 | 160 | 15360 | 522240 | 1.19% | 3 | 636 |
| 68 | 32 | 170 | 16320 | 522240 | 1.19% | 3 | 640 |
| 69 | 31 | 176 | 16896 | 523776 | 1.49% | 3 | 2162 |
| 70 | 29 | 188 | 18048 | 523392 | 1.41% | 3 | 1786 |
| 71 | 27 | 202 | 19392 | 523584 | 1.45% | 3 | 1980 |
| 72 | 25 | 218 | 20928 | 523200 | 1.38% | 3 | 1604 |
| 73 | 22 | 248 | 23808 | 523776 | 1.49% | 3 | 2180 |
| 74 | 20 | 272 | 26112 | 522240 | 1.19% | 3 | 664 |
| 75 | 19 | 286 | 27456 | 521664 | 1.08% | 3 | 96 |
| 76 | 18 | 302 | 28992 | 521856 | 1.12% | 3 | 288 |
| 77 | 17 | 320 | 30720 | 522240 | 1.19% | 3 | 670 |
| 78 | 16 | 340 | 32640 | 522240 | 1.19% | 3 | 672 |
| 79 | 496 | 11 | 1056 | 523776 | 1.49% | 4 | 736 |
| 80 | 419 | 13 | 1248 | 522912 | 1.32% | 4 | 112 |
| 81 | 363 | 15 | 1440 | 522720 | 1.28% | 4 | 90 |
| 82 | 287 | 19 | 1824 | 523488 | 1.43% | 4 | 1078 |
| 83 | 237 | 23 | 2208 | 523296 | 1.40% | 4 | 1038 |
| 84 | 218 | 25 | 2400 | 523200 | 1.38% | 4 | 1000 |
| 85 | 202 | 27 | 2592 | 523584 | 1.45% | 4 | 1428 |
| 86 | 188 | 29 | 2784 | 523392 | 1.41% | 4 | 1280 |
| 87 | 176 | 31 | 2976 | 523776 | 1.49% | 4 | 1696 |
| 88 | 165 | 33 | 3168 | 522720 | 1.28% | 4 | 684 |
| 89 | 147 | 37 | 3552 | 522144 | 1.17% | 4 | 168 |
| 90 | 133 | 41 | 3936 | 523488 | 1.43% | 4 | 1540 |
| 91 | 121 | 45 | 4320 | 522720 | 1.28% | 4 | 816 |
| 92 | 116 | 47 | 4512 | 523392 | 1.41% | 4 | 1496 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 93 | 111 | 49 | 4704 | 522144 | 1.17% | 4 | 276 |
| 94 | 99 | 55 | 5280 | 522720 | 1.28% | 4 | 882 |
| 95 | 79 | 69 | 6624 | 523296 | 1.40% | 4 | 1512 |
| 96 | 69 | 79 | 7584 | 523296 | 1.40% | 4 | 1542 |
| 97 | 64 | 85 | 8160 | 522240 | 1.19% | 4 | 512 |
| 98 | 55 | 99 | 9504 | 522720 | 1.28% | 4 | 1014 |
| 99 | 54 | 101 | 9696 | 523584 | 1.45% | 4 | 1872 |
| 100 | 50 | 109 | 10464 | 523200 | 1.38% | 4 | 1504 |
| 101 | 49 | 111 | 10656 | 522144 | 1.17% | 4 | 462 |
| 102 | 45 | 121 | 11616 | 522720 | 1.28% | 4 | 1044 |
| 103 | 41 | 133 | 12768 | 523488 | 1.43% | 4 | 1816 |
| 104 | 37 | 147 | 14112 | 522144 | 1.17% | 4 | 498 |
| 105 | 36 | 151 | 14496 | 521856 | 1.12% | 4 | 216 |
| 106 | 33 | 165 | 15840 | 522720 | 1.28% | 4 | 1080 |
| 107 | 26 | 209 | 20064 | 521664 | 1.08% | 4 | 56 |
| 108 | 24 | 227 | 21792 | 523008 | 1.34% | 4 | 1392 |
| 109 | 23 | 237 | 22752 | 523296 | 1.40% | 4 | 1680 |
| 110 | 22 | 247 | 23712 | 521664 | 1.08% | 4 | 68 |
| 111 | 21 | 259 | 24864 | 522144 | 1.17% | 4 | 546 |
| 112 | 19 | 287 | 27552 | 523488 | 1.43% | 4 | 1882 |
| 113 | 18 | 303 | 29088 | 523584 | 1.45% | 4 | 1980 |
| 114 | 16 | 341 | 32736 | 523776 | 1.49% | 4 | 2176 |
| 115 | 15 | 363 | 34848 | 522720 | 1.28% | 4 | 1134 |
| 116 | 14 | 389 | 37344 | 522816 | 1.30% | 4 | 1232 |
| 117 | 341 | 16 | 1536 | 523776 | 1.49% | 5 | 860 |
| 118 | 303 | 18 | 1728 | 523584 | 1.45% | 5 | 822 |
| 119 | 248 | 22 | 2112 | 523776 | 1.49% | 5 | 1232 |
| 120 | 227 | 24 | 2304 | 523008 | 1.34% | 5 | 556 |
| 121 | 170 | 32 | 3072 | 522240 | 1.19% | 5 | 24 |
| 122 | 160 | 34 | 3264 | 522240 | 1.19% | 5 | 64 |
| 123 | 136 | 40 | 3840 | 522240 | 1.19% | 5 | 160 |
| 124 | 124 | 44 | 4224 | 523776 | 1.49% | 5 | 1728 |
| 125 | 109 | 50 | 4800 | 523200 | 1.38% | 5 | 1218 |
| 126 | 101 | 54 | 5184 | 523584 | 1.45% | 5 | 1630 |
| 127 | 94 | 58 | 5568 | 523392 | 1.41% | 5 | 1468 |
| 128 | 88 | 62 | 5952 | 523776 | 1.49% | 5 | 1872 |
| 129 | 85 | 64 | 6144 | 522240 | 1.19% | 5 | 364 |
| 130 | 80 | 68 | 6528 | 522240 | 1.19% | 5 | 384 |
| 131 | 68 | 80 | 7680 | 522240 | 1.19% | 5 | 432 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 132 | 62 | 88 | 8448 | 523776 | 1.49% | 5 | 1976 |
| 133 | 58 | 94 | 9024 | 523392 | 1.41% | 5 | 1612 |
| 134 | 47 | 116 | 11136 | 523392 | 1.41% | 5 | 1656 |
| 135 | 44 | 124 | 11904 | 523776 | 1.49% | 5 | 2048 |
| 136 | 40 | 136 | 13056 | 522240 | 1.19% | 5 | 544 |
| 137 | 34 | 160 | 15360 | 522240 | 1.19% | 5 | 568 |
| 138 | 32 | 170 | 16320 | 522240 | 1.19% | 5 | 576 |
| 139 | 31 | 176 | 16896 | 523776 | 1.49% | 5 | 2100 |
| 140 | 29 | 188 | 18048 | 523392 | 1.41% | 5 | 1728 |
| 141 | 27 | 202 | 19392 | 523584 | 1.45% | 5 | 1926 |
| 142 | 25 | 218 | 20928 | 523200 | 1.38% | 5 | 1554 |
| 143 | 22 | 248 | 23808 | 523776 | 1.49% | 5 | 2136 |
| 144 | 20 | 272 | 26112 | 522240 | 1.19% | 5 | 624 |
| 145 | 19 | 286 | 27456 | 521664 | 1.08% | 5 | 58 |
| 146 | 18 | 302 | 28992 | 521856 | 1.12% | 5 | 252 |
| 147 | 17 | 320 | 30720 | 522240 | 1.19% | 5 | 636 |
| 148 | 16 | 340 | 32640 | 522240 | 1.19% | 5 | 640 |
| 149 | 287 | 19 | 1824 | 523488 | 1.43% | 6 | 504 |
| 150 | 237 | 23 | 2208 | 523296 | 1.40% | 6 | 564 |
| 151 | 218 | 25 | 2400 | 523200 | 1.38% | 6 | 564 |
| 152 | 202 | 27 | 2592 | 523584 | 1.45% | 6 | 1024 |
| 153 | 188 | 29 | 2784 | 523392 | 1.41% | 6 | 904 |
| 154 | 176 | 31 | 2976 | 523776 | 1.49% | 6 | 1344 |
| 155 | 165 | 33 | 3168 | 522720 | 1.28% | 6 | 354 |
| 156 | 133 | 41 | 3936 | 523488 | 1.43% | 6 | 1274 |
| 157 | 121 | 45 | 4320 | 522720 | 1.28% | 6 | 574 |
| 158 | 116 | 47 | 4512 | 523392 | 1.41% | 6 | 1264 |
| 159 | 111 | 49 | 4704 | 522144 | 1.17% | 6 | 54 |
| 160 | 99 | 55 | 5280 | 522720 | 1.28% | 6 | 684 |
| 161 | 79 | 69 | 6624 | 523296 | 1.40% | 6 | 1354 |
| 162 | 69 | 79 | 7584 | 523296 | 1.40% | 6 | 1404 |
| 163 | 64 | 85 | 8160 | 522240 | 1.19% | 6 | 384 |
| 164 | 55 | 99 | 9504 | 522720 | 1.28% | 6 | 904 |
| 165 | 54 | 101 | 9696 | 523584 | 1.45% | 6 | 1764 |
| 166 | 50 | 109 | 10464 | 523200 | 1.38% | 6 | 1404 |
| 167 | 49 | 111 | 10656 | 522144 | 1.17% | 6 | 364 |
| 168 | 45 | 121 | 11616 | 522720 | 1.28% | 6 | 954 |
| 169 | 41 | 133 | 12768 | 523488 | 1.43% | 6 | 1734 |
| 170 | 37 | 147 | 14112 | 522144 | 1.17% | 6 | 424 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 171 | 36 | 151 | 14496 | 521856 | 1.12% | 6 | 144 |
| 172 | 33 | 165 | 15840 | 522720 | 1.28% | 6 | 1014 |
| 173 | 24 | 227 | 21792 | 523008 | 1.34% | 6 | 1344 |
| 174 | 23 | 237 | 22752 | 523296 | 1.40% | 6 | 1634 |
| 175 | 22 | 247 | 23712 | 521664 | 1.08% | 6 | 24 |
| 176 | 21 | 259 | 24864 | 522144 | 1.17% | 6 | 504 |
| 177 | 19 | 287 | 27552 | 523488 | 1.43% | 6 | 1844 |
| 178 | 18 | 303 | 29088 | 523584 | 1.45% | 6 | 1944 |
| 179 | 16 | 341 | 32736 | 523776 | 1.49% | 6 | 2144 |
| 180 | 15 | 363 | 34848 | 522720 | 1.28% | 6 | 1104 |
| 181 | 14 | 389 | 37344 | 522816 | 1.30% | 6 | 1204 |
| 182 | 341 | 16 | 1536 | 523776 | 1.49% | 7 | 178 |
| 183 | 303 | 18 | 1728 | 523584 | 1.45% | 7 | 216 |
| 184 | 248 | 22 | 2112 | 523776 | 1.49% | 7 | 736 |
| 185 | 227 | 24 | 2304 | 523008 | 1.34% | 7 | 102 |
| 186 | 124 | 44 | 4224 | 523776 | 1.49% | 7 | 1480 |
| 187 | 109 | 50 | 4800 | 523200 | 1.38% | 7 | 1000 |
| 188 | 101 | 54 | 5184 | 523584 | 1.45% | 7 | 1428 |
| 189 | 94 | 58 | 5568 | 523392 | 1.41% | 7 | 1280 |
| 190 | 88 | 62 | 5952 | 523776 | 1.49% | 7 | 1696 |
| 191 | 85 | 64 | 6144 | 522240 | 1.19% | 7 | 194 |
| 192 | 80 | 68 | 6528 | 522240 | 1.19% | 7 | 224 |
| 193 | 68 | 80 | 7680 | 522240 | 1.19% | 7 | 296 |
| 194 | 62 | 88 | 8448 | 523776 | 1.49% | 7 | 1852 |
| 195 | 58 | 94 | 9024 | 523392 | 1.41% | 7 | 1496 |
| 196 | 47 | 116 | 11136 | 523392 | 1.41% | 7 | 1562 |
| 197 | 44 | 124 | 11904 | 523776 | 1.49% | 7 | 1960 |
| 198 | 40 | 136 | 13056 | 522240 | 1.19% | 7 | 464 |
| 199 | 34 | 160 | 15360 | 522240 | 1.19% | 7 | 500 |
| 200 | 32 | 170 | 16320 | 522240 | 1.19% | 7 | 512 |
| 201 | 31 | 176 | 16896 | 523776 | 1.49% | 7 | 2038 |
| 202 | 29 | 188 | 18048 | 523392 | 1.41% | 7 | 1670 |
| 203 | 27 | 202 | 19392 | 523584 | 1.45% | 7 | 1872 |
| 204 | 25 | 218 | 20928 | 523200 | 1.38% | 7 | 1504 |
| 205 | 22 | 248 | 23808 | 523776 | 1.49% | 7 | 2092 |
| 206 | 20 | 272 | 26112 | 522240 | 1.19% | 7 | 584 |
| 207 | 18 | 302 | 28992 | 521856 | 1.12% | 7 | 216 |
| 208 | 17 | 320 | 30720 | 522240 | 1.19% | 7 | 602 |
| 209 | 16 | 340 | 32640 | 522240 | 1.19% | 7 | 608 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 210 | 237 | 23 | 2208 | 523296 | 1.40% | 8 | 90 |
| 211 | 218 | 25 | 2400 | 523200 | 1.38% | 8 | 128 |
| 212 | 202 | 27 | 2592 | 523584 | 1.45% | 8 | 620 |
| 213 | 188 | 29 | 2784 | 523392 | 1.41% | 8 | 528 |
| 214 | 176 | 31 | 2976 | 523776 | 1.49% | 8 | 992 |
| 215 | 165 | 33 | 3168 | 522720 | 1.28% | 8 | 24 |
| 216 | 133 | 41 | 3936 | 523488 | 1.43% | 8 | 1008 |
| 217 | 121 | 45 | 4320 | 522720 | 1.28% | 8 | 332 |
| 218 | 116 | 47 | 4512 | 523392 | 1.41% | 8 | 1032 |
| 219 | 99 | 55 | 5280 | 522720 | 1.28% | 8 | 486 |
| 220 | 79 | 69 | 6624 | 523296 | 1.40% | 8 | 1196 |
| 221 | 69 | 79 | 7584 | 523296 | 1.40% | 8 | 1266 |
| 222 | 64 | 85 | 8160 | 522240 | 1.19% | 8 | 256 |
| 223 | 55 | 99 | 9504 | 522720 | 1.28% | 8 | 794 |
| 224 | 54 | 101 | 9696 | 523584 | 1.45% | 8 | 1656 |
| 225 | 50 | 109 | 10464 | 523200 | 1.38% | 8 | 1304 |
| 226 | 49 | 111 | 10656 | 522144 | 1.17% | 8 | 266 |
| 227 | 45 | 121 | 11616 | 522720 | 1.28% | 8 | 864 |
| 228 | 41 | 133 | 12768 | 523488 | 1.43% | 8 | 1652 |
| 229 | 37 | 147 | 14112 | 522144 | 1.17% | 8 | 350 |
| 230 | 36 | 151 | 14496 | 521856 | 1.12% | 8 | 72 |
| 231 | 33 | 165 | 15840 | 522720 | 1.28% | 8 | 948 |
| 232 | 24 | 227 | 21792 | 523008 | 1.34% | 8 | 1296 |
| 233 | 23 | 237 | 22752 | 523296 | 1.40% | 8 | 1588 |
| 234 | 21 | 259 | 24864 | 522144 | 1.17% | 8 | 462 |
| 235 | 19 | 287 | 27552 | 523488 | 1.43% | 8 | 1806 |
| 236 | 18 | 303 | 29088 | 523584 | 1.45% | 8 | 1908 |
| 237 | 16 | 341 | 32736 | 523776 | 1.49% | 8 | 2112 |
| 238 | 15 | 363 | 34848 | 522720 | 1.28% | 8 | 1074 |
| 239 | 14 | 389 | 37344 | 522816 | 1.30% | 8 | 1176 |
| 240 | 248 | 22 | 2112 | 523776 | 1.49% | 9 | 240 |
| 241 | 124 | 44 | 4224 | 523776 | 1.49% | 9 | 1232 |
| 242 | 109 | 50 | 4800 | 523200 | 1.38% | 9 | 782 |
| 243 | 101 | 54 | 5184 | 523584 | 1.45% | 9 | 1226 |
| 244 | 94 | 58 | 5568 | 523392 | 1.41% | 9 | 1092 |
| 245 | 88 | 62 | 5952 | 523776 | 1.49% | 9 | 1520 |
| 246 | 85 | 64 | 6144 | 522240 | 1.19% | 9 | 24 |
| 247 | 80 | 68 | 6528 | 522240 | 1.19% | 9 | 64 |
| 248 | 68 | 80 | 7680 | 522240 | 1.19% | 9 | 160 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 249 | 62 | 88 | 8448 | 523776 | 1.49% | 9 | 1728 |
| 250 | 58 | 94 | 9024 | 523392 | 1.41% | 9 | 1380 |
| 251 | 47 | 116 | 11136 | 523392 | 1.41% | 9 | 1468 |
| 252 | 44 | 124 | 11904 | 523776 | 1.49% | 9 | 1872 |
| 253 | 40 | 136 | 13056 | 522240 | 1.19% | 9 | 384 |
| 254 | 34 | 160 | 15360 | 522240 | 1.19% | 9 | 432 |
| 255 | 32 | 170 | 16320 | 522240 | 1.19% | 9 | 448 |
| 256 | 31 | 176 | 16896 | 523776 | 1.49% | 9 | 1976 |
| 257 | 29 | 188 | 18048 | 523392 | 1.41% | 9 | 1612 |
| 258 | 27 | 202 | 19392 | 523584 | 1.45% | 9 | 1818 |
| 259 | 25 | 218 | 20928 | 523200 | 1.38% | 9 | 1454 |
| 260 | 22 | 248 | 23808 | 523776 | 1.49% | 9 | 2048 |
| 261 | 20 | 272 | 26112 | 522240 | 1.19% | 9 | 544 |
| 262 | 18 | 302 | 28992 | 521856 | 1.12% | 9 | 180 |
| 263 | 17 | 320 | 30720 | 522240 | 1.19% | 9 | 568 |
| 264 | 16 | 340 | 32640 | 522240 | 1.19% | 9 | 576 |
| 265 | 202 | 27 | 2592 | 523584 | 1.45% | 10 | 216 |
| 266 | 188 | 29 | 2784 | 523392 | 1.41% | 10 | 152 |
| 267 | 176 | 31 | 2976 | 523776 | 1.49% | 10 | 640 |
| 268 | 133 | 41 | 3936 | 523488 | 1.43% | 10 | 742 |
| 269 | 121 | 45 | 4320 | 522720 | 1.28% | 10 | 90 |
| 270 | 116 | 47 | 4512 | 523392 | 1.41% | 10 | 800 |
| 271 | 99 | 55 | 5280 | 522720 | 1.28% | 10 | 288 |
| 272 | 79 | 69 | 6624 | 523296 | 1.40% | 10 | 1038 |
| 273 | 69 | 79 | 7584 | 523296 | 1.40% | 10 | 1128 |
| 274 | 64 | 85 | 8160 | 522240 | 1.19% | 10 | 128 |
| 275 | 55 | 99 | 9504 | 522720 | 1.28% | 10 | 684 |
| 276 | 54 | 101 | 9696 | 523584 | 1.45% | 10 | 1548 |
| 277 | 50 | 109 | 10464 | 523200 | 1.38% | 10 | 1204 |
| 278 | 49 | 111 | 10656 | 522144 | 1.17% | 10 | 168 |
| 279 | 45 | 121 | 11616 | 522720 | 1.28% | 10 | 774 |
| 280 | 41 | 133 | 12768 | 523488 | 1.43% | 10 | 1570 |
| 281 | 37 | 147 | 14112 | 522144 | 1.17% | 10 | 276 |
| 282 | 33 | 165 | 15840 | 522720 | 1.28% | 10 | 882 |
| 283 | 24 | 227 | 21792 | 523008 | 1.34% | 10 | 1248 |
| 284 | 23 | 237 | 22752 | 523296 | 1.40% | 10 | 1542 |
| 285 | 21 | 259 | 24864 | 522144 | 1.17% | 10 | 420 |
| 286 | 19 | 287 | 27552 | 523488 | 1.43% | 10 | 1768 |
| 287 | 18 | 303 | 29088 | 523584 | 1.45% | 10 | 1872 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 288 | 16 | 341 | 32736 | 523776 | 1.49% | 10 | 2080 |
| 289 | 15 | 363 | 34848 | 522720 | 1.28% | 10 | 1044 |
| 290 | 14 | 389 | 37344 | 522816 | 1.30% | 10 | 1148 |
| 291 | 124 | 44 | 4224 | 523776 | 1.49% | 11 | 984 |
| 292 | 109 | 50 | 4800 | 523200 | 1.38% | 11 | 564 |
| 293 | 101 | 54 | 5184 | 523584 | 1.45% | 11 | 1024 |
| 294 | 94 | 58 | 5568 | 523392 | 1.41% | 11 | 904 |
| 295 | 88 | 62 | 5952 | 523776 | 1.49% | 11 | 1344 |
| 296 | 68 | 80 | 7680 | 522240 | 1.19% | 11 | 24 |
| 297 | 62 | 88 | 8448 | 523776 | 1.49% | 11 | 1604 |
| 298 | 58 | 94 | 9024 | 523392 | 1.41% | 11 | 1264 |
| 299 | 47 | 116 | 11136 | 523392 | 1.41% | 11 | 1374 |
| 300 | 44 | 124 | 11904 | 523776 | 1.49% | 11 | 1784 |
| 301 | 40 | 136 | 13056 | 522240 | 1.19% | 11 | 304 |
| 302 | 34 | 160 | 15360 | 522240 | 1.19% | 11 | 364 |
| 303 | 32 | 170 | 16320 | 522240 | 1.19% | 11 | 384 |
| 304 | 31 | 176 | 16896 | 523776 | 1.49% | 11 | 1914 |
| 305 | 29 | 188 | 18048 | 523392 | 1.41% | 11 | 1554 |
| 306 | 27 | 202 | 19392 | 523584 | 1.45% | 11 | 1764 |
| 307 | 25 | 218 | 20928 | 523200 | 1.38% | 11 | 1404 |
| 308 | 22 | 248 | 23808 | 523776 | 1.49% | 11 | 2004 |
| 309 | 20 | 272 | 26112 | 522240 | 1.19% | 11 | 504 |
| 310 | 18 | 302 | 28992 | 521856 | 1.12% | 11 | 144 |
| 311 | 17 | 320 | 30720 | 522240 | 1.19% | 11 | 534 |
| 312 | 16 | 340 | 32640 | 522240 | 1.19% | 11 | 544 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 52 may be obtained with reference to Table 51. In this case, a frame overhead OH in cases listed in Table 52 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 52.

Table 52

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 320 | 17 | 1632 | 522240 | 1.19% | 2 | 384 |
| 2 | 188 | 29 | 2784 | 523392 | 1.41% | 2 | 1656 |
| 3 | 176 | 31 | 2976 | 523776 | 1.49% | 2 | 2048 |
| 4 | 116 | 47 | 4512 | 523392 | 1.41% | 2 | 1728 |
| 5 | 64 | 85 | 8160 | 522240 | 1.19% | 2 | 640 |
| 6 | 36 | 151 | 14496 | 521856 | 1.12% | 2 | 288 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 7 | 24 | 227 | 21792 | 523008 | 1.34% | 2 | 1440 |
| 8 | 16 | 341 | 32736 | 523776 | 1.49% | 2 | 2208 |
| 9 | 454 | 12 | 1152 | 523008 | 1.34% | 3 | 556 |
| 10 | 340 | 16 | 1536 | 522240 | 1.19% | 3 | 24 |
| 11 | 272 | 20 | 1920 | 522240 | 1.19% | 3 | 160 |
| 12 | 248 | 22 | 2112 | 523776 | 1.49% | 3 | 1728 |
| 13 | 227 | 24 | 2304 | 523008 | 1.34% | 3 | 1010 |
| 14 | 170 | 32 | 3072 | 522240 | 1.19% | 3 | 364 |
| 15 | 160 | 34 | 3264 | 522240 | 1.19% | 3 | 384 |
| 16 | 151 | 36 | 3456 | 521856 | 1.12% | 3 | 22 |
| 17 | 136 | 40 | 3840 | 522240 | 1.19% | 3 | 432 |
| 18 | 124 | 44 | 4224 | 523776 | 1.49% | 3 | 1976 |
| 19 | 94 | 58 | 5568 | 523392 | 1.41% | 3 | 1656 |
| 20 | 88 | 62 | 5952 | 523776 | 1.49% | 3 | 2048 |
| 21 | 85 | 64 | 6144 | 522240 | 1.19% | 3 | 534 |
| 22 | 80 | 68 | 6528 | 522240 | 1.19% | 3 | 544 |
| 23 | 68 | 80 | 7680 | 522240 | 1.19% | 3 | 568 |
| 24 | 62 | 88 | 8448 | 523776 | 1.49% | 3 | 2100 |
| 25 | 58 | 94 | 9024 | 523392 | 1.41% | 3 | 1728 |
| 26 | 47 | 116 | 11136 | 523392 | 1.41% | 3 | 1750 |
| 27 | 44 | 124 | 11904 | 523776 | 1.49% | 3 | 2136 |
| 28 | 40 | 136 | 13056 | 522240 | 1.19% | 3 | 624 |
| 29 | 34 | 160 | 15360 | 522240 | 1.19% | 3 | 636 |
| 30 | 32 | 170 | 16320 | 522240 | 1.19% | 3 | 640 |
| 31 | 31 | 176 | 16896 | 523776 | 1.49% | 3 | 2162 |
| 32 | 29 | 188 | 18048 | 523392 | 1.41% | 3 | 1786 |
| 33 | 22 | 248 | 23808 | 523776 | 1.49% | 3 | 2180 |
| 34 | 20 | 272 | 26112 | 522240 | 1.19% | 3 | 664 |
| 35 | 18 | 302 | 28992 | 521856 | 1.12% | 3 | 288 |
| 36 | 17 | 320 | 30720 | 522240 | 1.19% | 3 | 670 |
| 37 | 16 | 340 | 32640 | 522240 | 1.19% | 3 | 672 |
| 38 | 496 | 11 | 1056 | 523776 | 1.49% | 4 | 736 |
| 39 | 188 | 29 | 2784 | 523392 | 1.41% | 4 | 1280 |
| 40 | 176 | 31 | 2976 | 523776 | 1.49% | 4 | 1696 |
| 41 | 116 | 47 | 4512 | 523392 | 1.41% | 4 | 1496 |
| 42 | 64 | 85 | 8160 | 522240 | 1.19% | 4 | 512 |
| 43 | 36 | 151 | 14496 | 521856 | 1.12% | 4 | 216 |
| 44 | 24 | 227 | 21792 | 523008 | 1.34% | 4 | 1392 |
| 45 | 16 | 341 | 32736 | 523776 | 1.49% | 4 | 2176 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 46 | 341 | 16 | 1536 | 523776 | 1.49% | 5 | 860 |
| 47 | 248 | 22 | 2112 | 523776 | 1.49% | 5 | 1232 |
| 48 | 227 | 24 | 2304 | 523008 | 1.34% | 5 | 556 |
| 49 | 170 | 32 | 3072 | 522240 | 1.19% | 5 | 24 |
| 50 | 160 | 34 | 3264 | 522240 | 1.19% | 5 | 64 |
| 51 | 136 | 40 | 3840 | 522240 | 1.19% | 5 | 160 |
| 52 | 124 | 44 | 4224 | 523776 | 1.49% | 5 | 1728 |
| 53 | 94 | 58 | 5568 | 523392 | 1.41% | 5 | 1468 |
| 54 | 88 | 62 | 5952 | 523776 | 1.49% | 5 | 1872 |
| 55 | 85 | 64 | 6144 | 522240 | 1.19% | 5 | 364 |
| 56 | 80 | 68 | 6528 | 522240 | 1.19% | 5 | 384 |
| 57 | 68 | 80 | 7680 | 522240 | 1.19% | 5 | 432 |
| 58 | 62 | 88 | 8448 | 523776 | 1.49% | 5 | 1976 |
| 59 | 58 | 94 | 9024 | 523392 | 1.41% | 5 | 1612 |
| 60 | 47 | 116 | 11136 | 523392 | 1.41% | 5 | 1656 |
| 61 | 44 | 124 | 11904 | 523776 | 1.49% | 5 | 2048 |
| 62 | 40 | 136 | 13056 | 522240 | 1.19% | 5 | 544 |
| 63 | 34 | 160 | 15360 | 522240 | 1.19% | 5 | 568 |
| 64 | 32 | 170 | 16320 | 522240 | 1.19% | 5 | 576 |
| 65 | 31 | 176 | 16896 | 523776 | 1.49% | 5 | 2100 |
| 66 | 29 | 188 | 18048 | 523392 | 1.41% | 5 | 1728 |
| 67 | 22 | 248 | 23808 | 523776 | 1.49% | 5 | 2136 |
| 68 | 20 | 272 | 26112 | 522240 | 1.19% | 5 | 624 |
| 69 | 18 | 302 | 28992 | 521856 | 1.12% | 5 | 252 |
| 70 | 17 | 320 | 30720 | 522240 | 1.19% | 5 | 636 |
| 71 | 16 | 340 | 32640 | 522240 | 1.19% | 5 | 640 |
| 72 | 188 | 29 | 2784 | 523392 | 1.41% | 6 | 904 |
| 73 | 176 | 31 | 2976 | 523776 | 1.49% | 6 | 1344 |
| 74 | 116 | 47 | 4512 | 523392 | 1.41% | 6 | 1264 |
| 75 | 64 | 85 | 8160 | 522240 | 1.19% | 6 | 384 |
| 76 | 36 | 151 | 14496 | 521856 | 1.12% | 6 | 144 |
| 77 | 24 | 227 | 21792 | 523008 | 1.34% | 6 | 1344 |
| 78 | 16 | 341 | 32736 | 523776 | 1.49% | 6 | 2144 |
| 79 | 341 | 16 | 1536 | 523776 | 1.49% | 7 | 178 |
| 80 | 248 | 22 | 2112 | 523776 | 1.49% | 7 | 736 |
| 81 | 227 | 24 | 2304 | 523008 | 1.34% | 7 | 102 |
| 82 | 124 | 44 | 4224 | 523776 | 1.49% | 7 | 1480 |
| 83 | 94 | 58 | 5568 | 523392 | 1.41% | 7 | 1280 |
| 84 | 88 | 62 | 5952 | 523776 | 1.49% | 7 | 1696 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 85 | 85 | 64 | 6144 | 522240 | 1.19% | 7 | 194 |
| 86 | 80 | 68 | 6528 | 522240 | 1.19% | 7 | 224 |
| 87 | 68 | 80 | 7680 | 522240 | 1.19% | 7 | 296 |
| 88 | 62 | 88 | 8448 | 523776 | 1.49% | 7 | 1852 |
| 89 | 58 | 94 | 9024 | 523392 | 1.41% | 7 | 1496 |
| 90 | 47 | 116 | 11136 | 523392 | 1.41% | 7 | 1562 |
| 91 | 44 | 124 | 11904 | 523776 | 1.49% | 7 | 1960 |
| 92 | 40 | 136 | 13056 | 522240 | 1.19% | 7 | 464 |
| 93 | 34 | 160 | 15360 | 522240 | 1.19% | 7 | 500 |
| 94 | 32 | 170 | 16320 | 522240 | 1.19% | 7 | 512 |
| 95 | 31 | 176 | 16896 | 523776 | 1.49% | 7 | 2038 |
| 96 | 29 | 188 | 18048 | 523392 | 1.41% | 7 | 1670 |
| 97 | 22 | 248 | 23808 | 523776 | 1.49% | 7 | 2092 |
| 98 | 20 | 272 | 26112 | 522240 | 1.19% | 7 | 584 |
| 99 | 18 | 302 | 28992 | 521856 | 1.12% | 7 | 216 |
| 100 | 17 | 320 | 30720 | 522240 | 1.19% | 7 | 602 |
| 101 | 16 | 340 | 32640 | 522240 | 1.19% | 7 | 608 |
| 102 | 188 | 29 | 2784 | 523392 | 1.41% | 8 | 528 |
| 103 | 176 | 31 | 2976 | 523776 | 1.49% | 8 | 992 |
| 104 | 116 | 47 | 4512 | 523392 | 1.41% | 8 | 1032 |
| 105 | 64 | 85 | 8160 | 522240 | 1.19% | 8 | 256 |
| 106 | 36 | 151 | 14496 | 521856 | 1.12% | 8 | 72 |
| 107 | 24 | 227 | 21792 | 523008 | 1.34% | 8 | 1296 |
| 108 | 16 | 341 | 32736 | 523776 | 1.49% | 8 | 2112 |
| 109 | 248 | 22 | 2112 | 523776 | 1.49% | 9 | 240 |
| 110 | 124 | 44 | 4224 | 523776 | 1.49% | 9 | 1232 |
| 111 | 94 | 58 | 5568 | 523392 | 1.41% | 9 | 1092 |
| 112 | 88 | 62 | 5952 | 523776 | 1.49% | 9 | 1520 |
| 113 | 85 | 64 | 6144 | 522240 | 1.19% | 9 | 24 |
| 114 | 80 | 68 | 6528 | 522240 | 1.19% | 9 | 64 |
| 115 | 68 | 80 | 7680 | 522240 | 1.19% | 9 | 160 |
| 116 | 62 | 88 | 8448 | 523776 | 1.49% | 9 | 1728 |
| 117 | 58 | 94 | 9024 | 523392 | 1.41% | 9 | 1380 |
| 118 | 47 | 116 | 11136 | 523392 | 1.41% | 9 | 1468 |
| 119 | 44 | 124 | 11904 | 523776 | 1.49% | 9 | 1872 |
| 120 | 40 | 136 | 13056 | 522240 | 1.19% | 9 | 384 |
| 121 | 34 | 160 | 15360 | 522240 | 1.19% | 9 | 432 |
| 122 | 32 | 170 | 16320 | 522240 | 1.19% | 9 | 448 |
| 123 | 31 | 176 | 16896 | 523776 | 1.49% | 9 | 1976 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 124 | 29 | 188 | 18048 | 523392 | 1.41% | 9 | 1612 |
| 125 | 22 | 248 | 23808 | 523776 | 1.49% | 9 | 2048 |
| 126 | 20 | 272 | 26112 | 522240 | 1.19% | 9 | 544 |
| 127 | 18 | 302 | 28992 | 521856 | 1.12% | 9 | 180 |
| 128 | 17 | 320 | 30720 | 522240 | 1.19% | 9 | 568 |
| 129 | 16 | 340 | 32640 | 522240 | 1.19% | 9 | 576 |
| 130 | 188 | 29 | 2784 | 523392 | 1.41% | 10 | 152 |
| 131 | 176 | 31 | 2976 | 523776 | 1.49% | 10 | 640 |
| 132 | 116 | 47 | 4512 | 523392 | 1.41% | 10 | 800 |
| 133 | 64 | 85 | 8160 | 522240 | 1.19% | 10 | 128 |
| 134 | 24 | 227 | 21792 | 523008 | 1.34% | 10 | 1248 |
| 135 | 16 | 341 | 32736 | 523776 | 1.49% | 10 | 2080 |
| 136 | 124 | 44 | 4224 | 523776 | 1.49% | 11 | 984 |
| 137 | 94 | 58 | 5568 | 523392 | 1.41% | 11 | 904 |
| 138 | 88 | 62 | 5952 | 523776 | 1.49% | 11 | 1344 |
| 139 | 68 | 80 | 7680 | 522240 | 1.19% | 11 | 24 |
| 140 | 62 | 88 | 8448 | 523776 | 1.49% | 11 | 1604 |
| 141 | 58 | 94 | 9024 | 523392 | 1.41% | 11 | 1264 |
| 142 | 47 | 116 | 11136 | 523392 | 1.41% | 11 | 1374 |
| 143 | 44 | 124 | 11904 | 523776 | 1.49% | 11 | 1784 |
| 144 | 40 | 136 | 13056 | 522240 | 1.19% | 11 | 304 |
| 145 | 34 | 160 | 15360 | 522240 | 1.19% | 11 | 364 |
| 146 | 32 | 170 | 16320 | 522240 | 1.19% | 11 | 384 |
| 147 | 31 | 176 | 16896 | 523776 | 1.49% | 11 | 1914 |
| 148 | 29 | 188 | 18048 | 523392 | 1.41% | 11 | 1554 |
| 149 | 22 | 248 | 23808 | 523776 | 1.49% | 11 | 2004 |
| 150 | 20 | 272 | 26112 | 522240 | 1.19% | 11 | 504 |
| 151 | 18 | 302 | 28992 | 521856 | 1.12% | 11 | 144 |
| 152 | 17 | 320 | 30720 | 522240 | 1.19% | 11 | 534 |
| 153 | 16 | 340 | 32640 | 522240 | 1.19% | 11 | 544 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 53 may be obtained with reference to Table 52. In this case, a frame overhead OH in cases listed in Table 53 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 53

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 454 | 12 | 1152 | 523008 | 1.34% | 3 | 556 |
| 2 | 340 | 16 | 1536 | 522240 | 1.19% | 3 | 24 |
| 3 | 272 | 20 | 1920 | 522240 | 1.19% | 3 | 160 |
| 4 | 227 | 24 | 2304 | 523008 | 1.34% | 3 | 1010 |
| 5 | 170 | 32 | 3072 | 522240 | 1.19% | 3 | 364 |
| 6 | 151 | 36 | 3456 | 521856 | 1.12% | 3 | 22 |
| 7 | 136 | 40 | 3840 | 522240 | 1.19% | 3 | 432 |
| 8 | 124 | 44 | 4224 | 523776 | 1.49% | 3 | 1976 |
| 9 | 85 | 64 | 6144 | 522240 | 1.19% | 3 | 534 |
| 10 | 80 | 68 | 6528 | 522240 | 1.19% | 3 | 544 |
| 11 | 68 | 80 | 7680 | 522240 | 1.19% | 3 | 568 |
| 12 | 62 | 88 | 8448 | 523776 | 1.49% | 3 | 2100 |
| 13 | 47 | 116 | 11136 | 523392 | 1.41% | 3 | 1750 |
| 14 | 44 | 124 | 11904 | 523776 | 1.49% | 3 | 2136 |
| 15 | 40 | 136 | 13056 | 522240 | 1.19% | 3 | 624 |
| 16 | 34 | 160 | 15360 | 522240 | 1.19% | 3 | 636 |
| 17 | 31 | 176 | 16896 | 523776 | 1.49% | 3 | 2162 |
| 18 | 29 | 188 | 18048 | 523392 | 1.41% | 3 | 1786 |
| 19 | 22 | 248 | 23808 | 523776 | 1.49% | 3 | 2180 |
| 20 | 20 | 272 | 26112 | 522240 | 1.19% | 3 | 664 |
| 21 | 17 | 320 | 30720 | 522240 | 1.19% | 3 | 670 |
| 22 | 16 | 340 | 32640 | 522240 | 1.19% | 3 | 672 |
| 23 | 341 | 16 | 1536 | 523776 | 1.49% | 5 | 860 |
| 24 | 227 | 24 | 2304 | 523008 | 1.34% | 5 | 556 |
| 25 | 170 | 32 | 3072 | 522240 | 1.19% | 5 | 24 |
| 26 | 136 | 40 | 3840 | 522240 | 1.19% | 5 | 160 |
| 27 | 124 | 44 | 4224 | 523776 | 1.49% | 5 | 1728 |
| 28 | 85 | 64 | 6144 | 522240 | 1.19% | 5 | 364 |
| 29 | 80 | 68 | 6528 | 522240 | 1.19% | 5 | 384 |
| 30 | 68 | 80 | 7680 | 522240 | 1.19% | 5 | 432 |
| 31 | 62 | 88 | 8448 | 523776 | 1.49% | 5 | 1976 |
| 32 | 47 | 116 | 11136 | 523392 | 1.41% | 5 | 1656 |
| 33 | 44 | 124 | 11904 | 523776 | 1.49% | 5 | 2048 |
| 34 | 40 | 136 | 13056 | 522240 | 1.19% | 5 | 544 |
| 35 | 34 | 160 | 15360 | 522240 | 1.19% | 5 | 568 |
| 36 | 31 | 176 | 16896 | 523776 | 1.49% | 5 | 2100 |
| 37 | 29 | 188 | 18048 | 523392 | 1.41% | 5 | 1728 |
| 38 | 22 | 248 | 23808 | 523776 | 1.49% | 5 | 2136 |
| 39 | 20 | 272 | 26112 | 522240 | 1.19% | 5 | 624 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 40 | 17 | 320 | 30720 | 522240 | 1.19% | 5 | 636 |
| 41 | 16 | 340 | 32640 | 522240 | 1.19% | 5 | 640 |
| 42 | 341 | 16 | 1536 | 523776 | 1.49% | 7 | 178 |
| 43 | 227 | 24 | 2304 | 523008 | 1.34% | 7 | 102 |
| 44 | 124 | 44 | 4224 | 523776 | 1.49% | 7 | 1480 |
| 45 | 85 | 64 | 6144 | 522240 | 1.19% | 7 | 194 |
| 46 | 80 | 68 | 6528 | 522240 | 1.19% | 7 | 224 |
| 47 | 68 | 80 | 7680 | 522240 | 1.19% | 7 | 296 |
| 48 | 62 | 88 | 8448 | 523776 | 1.49% | 7 | 1852 |
| 49 | 47 | 116 | 11136 | 523392 | 1.41% | 7 | 1562 |
| 50 | 44 | 124 | 11904 | 523776 | 1.49% | 7 | 1960 |
| 51 | 40 | 136 | 13056 | 522240 | 1.19% | 7 | 464 |
| 52 | 34 | 160 | 15360 | 522240 | 1.19% | 7 | 500 |
| 53 | 31 | 176 | 16896 | 523776 | 1.49% | 7 | 2038 |
| 54 | 29 | 188 | 18048 | 523392 | 1.41% | 7 | 1670 |
| 55 | 22 | 248 | 23808 | 523776 | 1.49% | 7 | 2092 |
| 56 | 20 | 272 | 26112 | 522240 | 1.19% | 7 | 584 |
| 57 | 17 | 320 | 30720 | 522240 | 1.19% | 7 | 602 |
| 58 | 16 | 340 | 32640 | 522240 | 1.19% | 7 | 608 |
| 59 | 124 | 44 | 4224 | 523776 | 1.49% | 9 | 1232 |
| 60 | 85 | 64 | 6144 | 522240 | 1.19% | 9 | 24 |
| 61 | 80 | 68 | 6528 | 522240 | 1.19% | 9 | 64 |
| 62 | 68 | 80 | 7680 | 522240 | 1.19% | 9 | 160 |
| 63 | 62 | 88 | 8448 | 523776 | 1.49% | 9 | 1728 |
| 64 | 47 | 116 | 11136 | 523392 | 1.41% | 9 | 1468 |
| 65 | 44 | 124 | 11904 | 523776 | 1.49% | 9 | 1872 |
| 66 | 40 | 136 | 13056 | 522240 | 1.19% | 9 | 384 |
| 67 | 34 | 160 | 15360 | 522240 | 1.19% | 9 | 432 |
| 68 | 31 | 176 | 16896 | 523776 | 1.49% | 9 | 1976 |
| 69 | 29 | 188 | 18048 | 523392 | 1.41% | 9 | 1612 |
| 70 | 22 | 248 | 23808 | 523776 | 1.49% | 9 | 2048 |
| 71 | 20 | 272 | 26112 | 522240 | 1.19% | 9 | 544 |
| 72 | 17 | 320 | 30720 | 522240 | 1.19% | 9 | 568 |
| 73 | 16 | 340 | 32640 | 522240 | 1.19% | 9 | 576 |
| 74 | 124 | 44 | 4224 | 523776 | 1.49% | 11 | 984 |
| 75 | 68 | 80 | 7680 | 522240 | 1.19% | 11 | 24 |
| 76 | 62 | 88 | 8448 | 523776 | 1.49% | 11 | 1604 |
| 77 | 47 | 116 | 11136 | 523392 | 1.41% | 11 | 1374 |
| 78 | 44 | 124 | 11904 | 523776 | 1.49% | 11 | 1784 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 79 | 40 | 136 | 13056 | 522240 | 1.19% | 11 | 304 |
| 80 | 34 | 160 | 15360 | 522240 | 1.19% | 11 | 364 |
| 81 | 31 | 176 | 16896 | 523776 | 1.49% | 11 | 1914 |
| 82 | 29 | 188 | 18048 | 523392 | 1.41% | 11 | 1554 |
| 83 | 22 | 248 | 23808 | 523776 | 1.49% | 11 | 2004 |
| 84 | 20 | 272 | 26112 | 522240 | 1.19% | 11 | 504 |
| 85 | 17 | 320 | 30720 | 522240 | 1.19% | 11 | 534 |
| 86 | 16 | 340 | 32640 | 522240 | 1.19% | 11 | 544 |

(15) The quantity $N_{CW}$ of symbols before framing is 688128. For example, an open FEC (Open FEC, OFEC) encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 54. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 54 is low: OH<1.50%. In Table 54, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 54.

Table 54

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 725 | 10 | 960 | 696000 | 1.14% | 622 |
| 2 | 659 | 11 | 1056 | 695904 | 1.13% | 527 |
| 3 | 604 | 12 | 1152 | 695808 | 1.12% | 432 |
| 4 | 558 | 13 | 1248 | 696384 | 1.20% | 1002 |
| 5 | 518 | 14 | 1344 | 696192 | 1.17% | 812 |
| 6 | 483 | 15 | 1440 | 695520 | 1.07% | 147 |
| 7 | 453 | 16 | 1536 | 695808 | 1.12% | 432 |
| 8 | 427 | 17 | 1632 | 696864 | 1.27% | 1477 |
| 9 | 403 | 18 | 1728 | 696384 | 1.20% | 1002 |
| 10 | 382 | 19 | 1824 | 696768 | 1.26% | 1382 |
| 11 | 363 | 20 | 1920 | 696960 | 1.28% | 1572 |
| 12 | 345 | 21 | 2016 | 695520 | 1.07% | 147 |
| 13 | 330 | 22 | 2112 | 696960 | 1.28% | 1572 |
| 14 | 315 | 23 | 2208 | 695520 | 1.07% | 147 |
| 15 | 302 | 24 | 2304 | 695808 | 1.12% | 432 |
| 16 | 290 | 25 | 2400 | 696000 | 1.14% | 622 |
| 17 | 279 | 26 | 2496 | 696384 | 1.20% | 1002 |
| 18 | 269 | 27 | 2592 | 697248 | 1.33% | 1857 |
| 19 | 259 | 28 | 2688 | 696192 | 1.17% | 812 |

(continued)

| Sequence number | $N_{SF}$ | $N_{PS}$ | $N_S$ | $N_F$ | OH | $N_{TS,TOT}+N_{FAW}+N_{RES}$ |
|---|---|---|---|---|---|---|
| 20 | 250 | 29 | 2784 | 696000 | 1.14% | 622 |
| 21 | 242 | 30 | 2880 | 696960 | 1.28% | 1572 |
| 22 | 234 | 31 | 2976 | 696384 | 1.20% | 1002 |
| 23 | 227 | 32 | 3072 | 697344 | 1.34% | 1952 |
| 24 | 220 | 33 | 3168 | 696960 | 1.28% | 1572 |
| 25 | 207 | 35 | 3360 | 695520 | 1.07% | 147 |
| 26 | 202 | 36 | 3456 | 698112 | 1.45% | 2712 |
| 27 | 196 | 37 | 3552 | 696192 | 1.17% | 812 |
| 28 | 191 | 38 | 3648 | 696768 | 1.26% | 1382 |
| 29 | 186 | 39 | 3744 | 696384 | 1.20% | 1002 |
| 30 | 177 | 41 | 3936 | 696672 | 1.24% | 1287 |
| 31 | 173 | 42 | 4032 | 697536 | 1.37% | 2142 |
| 32 | 169 | 43 | 4128 | 697632 | 1.38% | 2237 |
| 33 | 165 | 44 | 4224 | 696960 | 1.28% | 1572 |
| 34 | 161 | 45 | 4320 | 695520 | 1.07% | 147 |
| 35 | 158 | 46 | 4416 | 697728 | 1.40% | 2332 |
| 36 | 151 | 48 | 4608 | 695808 | 1.12% | 432 |
| 37 | 148 | 49 | 4704 | 696192 | 1.17% | 812 |
| 38 | 145 | 50 | 4800 | 696000 | 1.14% | 622 |
| 39 | 137 | 53 | 5088 | 697056 | 1.30% | 1667 |
| 40 | 132 | 55 | 5280 | 696960 | 1.28% | 1572 |
| 41 | 125 | 58 | 5568 | 696000 | 1.14% | 622 |
| 42 | 123 | 59 | 5664 | 696672 | 1.24% | 1287 |
| 43 | 121 | 60 | 5760 | 696960 | 1.28% | 1572 |
| 44 | 119 | 61 | 5856 | 696864 | 1.27% | 1477 |
| 45 | 117 | 62 | 5952 | 696384 | 1.20% | 1002 |
| 46 | 115 | 63 | 6048 | 695520 | 1.07% | 147 |
| 47 | 110 | 66 | 6336 | 696960 | 1.28% | 1572 |
| 48 | 105 | 69 | 6624 | 695520 | 1.07% | 147 |
| 49 | 101 | 72 | 6912 | 698112 | 1.45% | 2712 |
| 50 | 98 | 74 | 7104 | 696192 | 1.17% | 812 |
| 51 | 97 | 75 | 7200 | 698400 | 1.49% | 2997 |
| 52 | 93 | 78 | 7488 | 696384 | 1.20% | 1002 |
| 53 | 92 | 79 | 7584 | 697728 | 1.40% | 2332 |
| 54 | 79 | 92 | 8832 | 697728 | 1.40% | 2332 |
| 55 | 78 | 93 | 8928 | 696384 | 1.20% | 1002 |
| 56 | 75 | 97 | 9312 | 698400 | 1.49% | 2997 |
| 57 | 74 | 98 | 9408 | 696192 | 1.17% | 812 |
| 58 | 72 | 101 | 9696 | 698112 | 1.45% | 2712 |

(continued)

| Sequence number | $N_{SF}$ | $N_{PS}$ | $N_S$ | $N_F$ | OH | $N_{TS,TOT}+N_{FAW}+N_{RES}$ |
|---|---|---|---|---|---|---|
| 59 | 69 | 105 | 10080 | 695520 | 1.07% | 147 |
| 60 | 66 | 110 | 10560 | 696960 | 1.28% | 1572 |
| 61 | 63 | 115 | 11040 | 695520 | 1.07% | 147 |
| 62 | 62 | 117 | 11232 | 696384 | 1.20% | 1002 |
| 63 | 61 | 119 | 11424 | 696864 | 1.27% | 1477 |
| 64 | 60 | 121 | 11616 | 696960 | 1.28% | 1572 |
| 65 | 59 | 123 | 11808 | 696672 | 1.24% | 1287 |
| 66 | 58 | 125 | 12000 | 696000 | 1.14% | 622 |
| 67 | 55 | 132 | 12672 | 696960 | 1.28% | 1572 |
| 68 | 53 | 137 | 13152 | 697056 | 1.30% | 1667 |
| 69 | 50 | 145 | 13920 | 696000 | 1.14% | 622 |
| 70 | 49 | 148 | 14208 | 696192 | 1.17% | 812 |
| 71 | 48 | 151 | 14496 | 695808 | 1.12% | 432 |
| 72 | 46 | 158 | 15168 | 697728 | 1.40% | 2332 |
| 73 | 45 | 161 | 15456 | 695520 | 1.07% | 147 |
| 74 | 44 | 165 | 15840 | 696960 | 1.28% | 1572 |
| 75 | 43 | 169 | 16224 | 697632 | 1.38% | 2237 |
| 76 | 42 | 173 | 16608 | 697536 | 1.37% | 2142 |
| 77 | 41 | 177 | 16992 | 696672 | 1.24% | 1287 |
| 78 | 39 | 186 | 17856 | 696384 | 1.20% | 1002 |
| 79 | 38 | 191 | 18336 | 696768 | 1.26% | 1382 |
| 80 | 37 | 196 | 18816 | 696192 | 1.17% | 812 |
| 81 | 36 | 202 | 19392 | 698112 | 1.45% | 2712 |
| 82 | 35 | 207 | 19872 | 695520 | 1.07% | 147 |
| 83 | 33 | 220 | 21120 | 696960 | 1.28% | 1572 |
| 84 | 32 | 227 | 21792 | 697344 | 1.34% | 1952 |
| 85 | 31 | 234 | 22464 | 696384 | 1.20% | 1002 |
| 86 | 30 | 242 | 23232 | 696960 | 1.28% | 1572 |
| 87 | 29 | 250 | 24000 | 696000 | 1.14% | 622 |
| 88 | 28 | 259 | 24864 | 696192 | 1.17% | 812 |
| 89 | 27 | 269 | 25824 | 697248 | 1.33% | 1857 |
| 90 | 26 | 279 | 26784 | 696384 | 1.20% | 1002 |
| 91 | 25 | 290 | 27840 | 696000 | 1.14% | 622 |
| 92 | 25 | 291 | 27936 | 698400 | 1.49% | 2997 |
| 93 | 24 | 302 | 28992 | 695808 | 1.12% | 432 |
| 94 | 24 | 303 | 29088 | 698112 | 1.45% | 2712 |
| 95 | 23 | 315 | 30240 | 695520 | 1.07% | 147 |
| 96 | 23 | 316 | 30336 | 697728 | 1.40% | 2332 |
| 97 | 22 | 330 | 31680 | 696960 | 1.28% | 1572 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 98 | 21 | 345 | 33120 | 695520 | 1.07% | 147 |
| 99 | 21 | 346 | 33216 | 697536 | 1.37% | 2142 |
| 100 | 20 | 363 | 34848 | 696960 | 1.28% | 1572 |
| 101 | 19 | 382 | 36672 | 696768 | 1.26% | 1382 |

Considering that the quantity $N_{TS}$ of training symbols is not greater than 11, Table 55 may be obtained with reference to Table 54. In this case, a frame overhead OH of a super-frame architecture in cases listed in Table 55 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 55.

Table 55

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 660 | 11 | 1056 | 696960 | 1.28% | 2 | 912 |
| 2 | 558 | 13 | 1248 | 696384 | 1.20% | 2 | 444 |
| 3 | 484 | 15 | 1440 | 696960 | 1.28% | 2 | 1088 |
| 4 | 427 | 17 | 1632 | 696864 | 1.27% | 2 | 1050 |
| 5 | 382 | 19 | 1824 | 696768 | 1.26% | 2 | 1000 |
| 6 | 346 | 21 | 2016 | 697536 | 1.37% | 2 | 1796 |
| 7 | 316 | 23 | 2208 | 697728 | 1.40% | 2 | 2016 |
| 8 | 290 | 25 | 2400 | 696000 | 1.14% | 2 | 332 |
| 9 | 269 | 27 | 2592 | 697248 | 1.33% | 2 | 1588 |
| 10 | 250 | 29 | 2784 | 696000 | 1.14% | 2 | 372 |
| 11 | 234 | 31 | 2976 | 696384 | 1.20% | 2 | 768 |
| 12 | 220 | 33 | 3168 | 696960 | 1.28% | 2 | 1352 |
| 13 | 196 | 37 | 3552 | 696192 | 1.17% | 2 | 616 |
| 14 | 186 | 39 | 3744 | 696384 | 1.20% | 2 | 816 |
| 15 | 177 | 41 | 3936 | 696672 | 1.24% | 2 | 1110 |
| 16 | 169 | 43 | 4128 | 697632 | 1.38% | 2 | 2068 |
| 17 | 148 | 49 | 4704 | 696192 | 1.17% | 2 | 664 |
| 18 | 137 | 53 | 5088 | 697056 | 1.30% | 2 | 1530 |
| 19 | 132 | 55 | 5280 | 696960 | 1.28% | 2 | 1440 |
| 20 | 123 | 59 | 5664 | 696672 | 1.24% | 2 | 1164 |
| 21 | 119 | 61 | 5856 | 696864 | 1.27% | 2 | 1358 |
| 22 | 115 | 63 | 6048 | 695520 | 1.07% | 2 | 32 |
| 23 | 105 | 69 | 6624 | 695520 | 1.07% | 2 | 42 |
| 24 | 97 | 75 | 7200 | 698400 | 1.49% | 2 | 2900 |
| 25 | 92 | 79 | 7584 | 697728 | 1.40% | 2 | 2240 |
| 26 | 78 | 93 | 8928 | 696384 | 1.20% | 2 | 924 |
| 27 | 75 | 97 | 9312 | 698400 | 1.49% | 2 | 2922 |
| 28 | 72 | 101 | 9696 | 698112 | 1.45% | 2 | 2640 |
| 29 | 69 | 105 | 10080 | 695520 | 1.07% | 2 | 78 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 30 | 63 | 115 | 11040 | 695520 | 1.07% | 2 | 84 |
| 31 | 62 | 117 | 11232 | 696384 | 1.20% | 2 | 940 |
| 32 | 61 | 119 | 11424 | 696864 | 1.27% | 2 | 1416 |
| 33 | 60 | 121 | 11616 | 696960 | 1.28% | 2 | 1512 |
| 34 | 59 | 123 | 11808 | 696672 | 1.24% | 2 | 1228 |
| 35 | 58 | 125 | 12000 | 696000 | 1.14% | 2 | 564 |
| 36 | 53 | 137 | 13152 | 697056 | 1.30% | 2 | 1614 |
| 37 | 50 | 145 | 13920 | 696000 | 1.14% | 2 | 572 |
| 38 | 48 | 151 | 14496 | 695808 | 1.12% | 2 | 384 |
| 39 | 45 | 161 | 15456 | 695520 | 1.07% | 2 | 102 |
| 40 | 44 | 165 | 15840 | 696960 | 1.28% | 2 | 1528 |
| 41 | 43 | 169 | 16224 | 697632 | 1.38% | 2 | 2194 |
| 42 | 42 | 173 | 16608 | 697536 | 1.37% | 2 | 2100 |
| 43 | 41 | 177 | 16992 | 696672 | 1.24% | 2 | 1246 |
| 44 | 38 | 191 | 18336 | 696768 | 1.26% | 2 | 1344 |
| 45 | 35 | 207 | 19872 | 695520 | 1.07% | 2 | 112 |
| 46 | 32 | 227 | 21792 | 697344 | 1.34% | 2 | 1920 |
| 47 | 28 | 259 | 24864 | 696192 | 1.17% | 2 | 784 |
| 48 | 27 | 269 | 25824 | 697248 | 1.33% | 2 | 1830 |
| 49 | 26 | 279 | 26784 | 696384 | 1.20% | 2 | 976 |
| 50 | 25 | 291 | 27936 | 698400 | 1.49% | 2 | 2972 |
| 51 | 24 | 303 | 29088 | 698112 | 1.45% | 2 | 2688 |
| 52 | 23 | 315 | 30240 | 695520 | 1.07% | 2 | 124 |
| 53 | 21 | 345 | 33120 | 695520 | 1.07% | 2 | 126 |
| 54 | 20 | 363 | 34848 | 696960 | 1.28% | 2 | 1552 |
| 55 | 726 | 10 | 960 | 696960 | 1.28% | 3 | 120 |
| 56 | 605 | 12 | 1152 | 696960 | 1.28% | 3 | 362 |
| 57 | 519 | 14 | 1344 | 697536 | 1.37% | 3 | 1104 |
| 58 | 454 | 16 | 1536 | 697344 | 1.34% | 3 | 1044 |
| 59 | 403 | 18 | 1728 | 696384 | 1.20% | 3 | 196 |
| 60 | 363 | 20 | 1920 | 696960 | 1.28% | 3 | 846 |
| 61 | 330 | 22 | 2112 | 696960 | 1.28% | 3 | 912 |
| 62 | 303 | 24 | 2304 | 698112 | 1.45% | 3 | 2106 |
| 63 | 279 | 26 | 2496 | 696384 | 1.20% | 3 | 444 |
| 64 | 259 | 28 | 2688 | 696192 | 1.17% | 3 | 294 |
| 65 | 242 | 30 | 2880 | 696960 | 1.28% | 3 | 1088 |
| 66 | 227 | 32 | 3072 | 697344 | 1.34% | 3 | 1498 |
| 67 | 202 | 36 | 3456 | 698112 | 1.45% | 3 | 2308 |
| 68 | 191 | 38 | 3648 | 696768 | 1.26% | 3 | 1000 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 69 | 173 | 42 | 4032 | 697536 | 1.37% | 3 | 1796 |
| 70 | 165 | 44 | 4224 | 696960 | 1.28% | 3 | 1242 |
| 71 | 158 | 46 | 4416 | 697728 | 1.40% | 3 | 2016 |
| 72 | 151 | 48 | 4608 | 695808 | 1.12% | 3 | 130 |
| 73 | 145 | 50 | 4800 | 696000 | 1.14% | 3 | 332 |
| 74 | 125 | 58 | 5568 | 696000 | 1.14% | 3 | 372 |
| 75 | 121 | 60 | 5760 | 696960 | 1.28% | 3 | 1330 |
| 76 | 117 | 62 | 5952 | 696384 | 1.20% | 3 | 768 |
| 77 | 110 | 66 | 6336 | 696960 | 1.28% | 3 | 1352 |
| 78 | 101 | 72 | 6912 | 698112 | 1.45% | 3 | 2510 |
| 79 | 98 | 74 | 7104 | 696192 | 1.17% | 3 | 616 |
| 80 | 93 | 78 | 7488 | 696384 | 1.20% | 3 | 816 |
| 81 | 79 | 92 | 8832 | 697728 | 1.40% | 3 | 2174 |
| 82 | 74 | 98 | 9408 | 696192 | 1.17% | 3 | 664 |
| 83 | 66 | 110 | 10560 | 696960 | 1.28% | 3 | 1440 |
| 84 | 55 | 132 | 12672 | 696960 | 1.28% | 3 | 1462 |
| 85 | 49 | 148 | 14208 | 696192 | 1.17% | 3 | 714 |
| 86 | 46 | 158 | 15168 | 697728 | 1.40% | 3 | 2240 |
| 87 | 39 | 186 | 17856 | 696384 | 1.20% | 3 | 924 |
| 88 | 37 | 196 | 18816 | 696192 | 1.17% | 3 | 738 |
| 89 | 36 | 202 | 19392 | 698112 | 1.45% | 3 | 2640 |
| 90 | 33 | 220 | 21120 | 696960 | 1.28% | 3 | 1506 |
| 91 | 31 | 234 | 22464 | 696384 | 1.20% | 3 | 940 |
| 92 | 30 | 242 | 23232 | 696960 | 1.28% | 3 | 1512 |
| 93 | 29 | 250 | 24000 | 696000 | 1.14% | 3 | 564 |
| 94 | 25 | 290 | 27840 | 696000 | 1.14% | 3 | 572 |
| 95 | 24 | 302 | 28992 | 695808 | 1.12% | 3 | 384 |
| 96 | 23 | 316 | 30336 | 697728 | 1.40% | 3 | 2286 |
| 97 | 22 | 330 | 31680 | 696960 | 1.28% | 3 | 1528 |
| 98 | 21 | 346 | 33216 | 697536 | 1.37% | 3 | 2100 |
| 99 | 19 | 382 | 36672 | 696768 | 1.26% | 3 | 1344 |
| 100 | 661 | 11 | 1056 | 698016 | 1.44% | 4 | 634 |
| 101 | 559 | 13 | 1248 | 697632 | 1.38% | 4 | 560 |
| 102 | 484 | 15 | 1440 | 696960 | 1.28% | 4 | 120 |
| 103 | 427 | 17 | 1632 | 696864 | 1.27% | 4 | 196 |
| 104 | 382 | 19 | 1824 | 696768 | 1.26% | 4 | 236 |
| 105 | 346 | 21 | 2016 | 697536 | 1.37% | 4 | 1104 |
| 106 | 316 | 23 | 2208 | 697728 | 1.40% | 4 | 1384 |
| 107 | 291 | 25 | 2400 | 698400 | 1.49% | 4 | 2124 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 108 | 269 | 27 | 2592 | 697248 | 1.33% | 4 | 1050 |
| 109 | 234 | 31 | 2976 | 696384 | 1.20% | 4 | 300 |
| 110 | 220 | 33 | 3168 | 696960 | 1.28% | 4 | 912 |
| 111 | 196 | 37 | 3552 | 696192 | 1.17% | 4 | 224 |
| 112 | 186 | 39 | 3744 | 696384 | 1.20% | 4 | 444 |
| 113 | 177 | 41 | 3936 | 696672 | 1.24% | 4 | 756 |
| 114 | 169 | 43 | 4128 | 697632 | 1.38% | 4 | 1730 |
| 115 | 148 | 49 | 4704 | 696192 | 1.17% | 4 | 368 |
| 116 | 137 | 53 | 5088 | 697056 | 1.30% | 4 | 1256 |
| 117 | 132 | 55 | 5280 | 696960 | 1.28% | 4 | 1176 |
| 118 | 123 | 59 | 5664 | 696672 | 1.24% | 4 | 918 |
| 119 | 119 | 61 | 5856 | 696864 | 1.27% | 4 | 1120 |
| 120 | 97 | 75 | 7200 | 698400 | 1.49% | 4 | 2706 |
| 121 | 92 | 79 | 7584 | 697728 | 1.40% | 4 | 2056 |
| 122 | 78 | 93 | 8928 | 696384 | 1.20% | 4 | 768 |
| 123 | 75 | 97 | 9312 | 698400 | 1.49% | 4 | 2772 |
| 124 | 72 | 101 | 9696 | 698112 | 1.45% | 4 | 2496 |
| 125 | 62 | 117 | 11232 | 696384 | 1.20% | 4 | 816 |
| 126 | 61 | 119 | 11424 | 696864 | 1.27% | 4 | 1294 |
| 127 | 60 | 121 | 11616 | 696960 | 1.28% | 4 | 1392 |
| 128 | 59 | 123 | 11808 | 696672 | 1.24% | 4 | 1110 |
| 129 | 58 | 125 | 12000 | 696000 | 1.14% | 4 | 448 |
| 130 | 53 | 137 | 13152 | 697056 | 1.30% | 4 | 1508 |
| 131 | 50 | 145 | 13920 | 696000 | 1.14% | 4 | 472 |
| 132 | 48 | 151 | 14496 | 695808 | 1.12% | 4 | 288 |
| 133 | 44 | 165 | 15840 | 696960 | 1.28% | 4 | 1440 |
| 134 | 43 | 169 | 16224 | 697632 | 1.38% | 4 | 2108 |
| 135 | 42 | 173 | 16608 | 697536 | 1.37% | 4 | 2016 |
| 136 | 41 | 177 | 16992 | 696672 | 1.24% | 4 | 1164 |
| 137 | 38 | 191 | 18336 | 696768 | 1.26% | 4 | 1268 |
| 138 | 35 | 207 | 19872 | 695520 | 1.07% | 4 | 42 |
| 139 | 32 | 227 | 21792 | 697344 | 1.34% | 4 | 1856 |
| 140 | 28 | 259 | 24864 | 696192 | 1.17% | 4 | 728 |
| 141 | 27 | 269 | 25824 | 697248 | 1.33% | 4 | 1776 |
| 142 | 26 | 279 | 26784 | 696384 | 1.20% | 4 | 924 |
| 143 | 25 | 291 | 27936 | 698400 | 1.49% | 4 | 2922 |
| 144 | 24 | 303 | 29088 | 698112 | 1.45% | 4 | 2640 |
| 145 | 23 | 315 | 30240 | 695520 | 1.07% | 4 | 78 |
| 146 | 21 | 345 | 33120 | 695520 | 1.07% | 4 | 84 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 147 | 20 | 363 | 34848 | 696960 | 1.28% | 4 | 1512 |
| 148 | 606 | 12 | 1152 | 698112 | 1.45% | 5 | 288 |
| 149 | 519 | 14 | 1344 | 697536 | 1.37% | 5 | 66 |
| 150 | 454 | 16 | 1536 | 697344 | 1.34% | 5 | 136 |
| 151 | 404 | 18 | 1728 | 698112 | 1.45% | 5 | 1096 |
| 152 | 363 | 20 | 1920 | 696960 | 1.28% | 5 | 120 |
| 153 | 330 | 22 | 2112 | 696960 | 1.28% | 5 | 252 |
| 154 | 303 | 24 | 2304 | 698112 | 1.45% | 5 | 1500 |
| 155 | 242 | 30 | 2880 | 696960 | 1.28% | 5 | 604 |
| 156 | 227 | 32 | 3072 | 697344 | 1.34% | 5 | 1044 |
| 157 | 202 | 36 | 3456 | 698112 | 1.45% | 5 | 1904 |
| 158 | 191 | 38 | 3648 | 696768 | 1.26% | 5 | 618 |
| 159 | 173 | 42 | 4032 | 697536 | 1.37% | 5 | 1450 |
| 160 | 165 | 44 | 4224 | 696960 | 1.28% | 5 | 912 |
| 161 | 158 | 46 | 4416 | 697728 | 1.40% | 5 | 1700 |
| 162 | 145 | 50 | 4800 | 696000 | 1.14% | 5 | 42 |
| 163 | 125 | 58 | 5568 | 696000 | 1.14% | 5 | 122 |
| 164 | 121 | 60 | 5760 | 696960 | 1.28% | 5 | 1088 |
| 165 | 117 | 62 | 5952 | 696384 | 1.20% | 5 | 534 |
| 166 | 110 | 66 | 6336 | 696960 | 1.28% | 5 | 1132 |
| 167 | 101 | 72 | 6912 | 698112 | 1.45% | 5 | 2308 |
| 168 | 98 | 74 | 7104 | 696192 | 1.17% | 5 | 420 |
| 169 | 93 | 78 | 7488 | 696384 | 1.20% | 5 | 630 |
| 170 | 79 | 92 | 8832 | 697728 | 1.40% | 5 | 2016 |
| 171 | 74 | 98 | 9408 | 696192 | 1.17% | 5 | 516 |
| 172 | 66 | 110 | 10560 | 696960 | 1.28% | 5 | 1308 |
| 173 | 55 | 132 | 12672 | 696960 | 1.28% | 5 | 1352 |
| 174 | 49 | 148 | 14208 | 696192 | 1.17% | 5 | 616 |
| 175 | 46 | 158 | 15168 | 697728 | 1.40% | 5 | 2148 |
| 176 | 39 | 186 | 17856 | 696384 | 1.20% | 5 | 846 |
| 177 | 37 | 196 | 18816 | 696192 | 1.17% | 5 | 664 |
| 178 | 36 | 202 | 19392 | 698112 | 1.45% | 5 | 2568 |
| 179 | 33 | 220 | 21120 | 696960 | 1.28% | 5 | 1440 |
| 180 | 31 | 234 | 22464 | 696384 | 1.20% | 5 | 878 |
| 181 | 30 | 242 | 23232 | 696960 | 1.28% | 5 | 1452 |
| 182 | 29 | 250 | 24000 | 696000 | 1.14% | 5 | 506 |
| 183 | 25 | 290 | 27840 | 696000 | 1.14% | 5 | 522 |
| 184 | 24 | 302 | 28992 | 695808 | 1.12% | 5 | 336 |
| 185 | 23 | 316 | 30336 | 697728 | 1.40% | 5 | 2240 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 186 | 22 | 330 | 31680 | 696960 | 1.28% | 5 | 1484 |
| 187 | 21 | 346 | 33216 | 697536 | 1.37% | 5 | 2058 |
| 188 | 19 | 382 | 36672 | 696768 | 1.26% | 5 | 1306 |
| 189 | 485 | 15 | 1440 | 698400 | 1.49% | 6 | 572 |
| 190 | 346 | 21 | 2016 | 697536 | 1.37% | 6 | 412 |
| 191 | 316 | 23 | 2208 | 697728 | 1.40% | 6 | 752 |
| 192 | 291 | 25 | 2400 | 698400 | 1.49% | 6 | 1542 |
| 193 | 269 | 27 | 2592 | 697248 | 1.33% | 6 | 512 |
| 194 | 220 | 33 | 3168 | 696960 | 1.28% | 6 | 472 |
| 195 | 186 | 39 | 3744 | 696384 | 1.20% | 6 | 72 |
| 196 | 177 | 41 | 3936 | 696672 | 1.24% | 6 | 402 |
| 197 | 169 | 43 | 4128 | 697632 | 1.38% | 6 | 1392 |
| 198 | 148 | 49 | 4704 | 696192 | 1.17% | 6 | 72 |
| 199 | 137 | 53 | 5088 | 697056 | 1.30% | 6 | 982 |
| 200 | 132 | 55 | 5280 | 696960 | 1.28% | 6 | 912 |
| 201 | 123 | 59 | 5664 | 696672 | 1.24% | 6 | 672 |
| 202 | 119 | 61 | 5856 | 696864 | 1.27% | 6 | 882 |
| 203 | 97 | 75 | 7200 | 698400 | 1.49% | 6 | 2512 |
| 204 | 92 | 79 | 7584 | 697728 | 1.40% | 6 | 1872 |
| 205 | 78 | 93 | 8928 | 696384 | 1.20% | 6 | 612 |
| 206 | 75 | 97 | 9312 | 698400 | 1.49% | 6 | 2622 |
| 207 | 72 | 101 | 9696 | 698112 | 1.45% | 6 | 2352 |
| 208 | 62 | 117 | 11232 | 696384 | 1.20% | 6 | 692 |
| 209 | 61 | 119 | 11424 | 696864 | 1.27% | 6 | 1172 |
| 210 | 60 | 121 | 11616 | 696960 | 1.28% | 6 | 1272 |
| 211 | 59 | 123 | 11808 | 696672 | 1.24% | 6 | 992 |
| 212 | 58 | 125 | 12000 | 696000 | 1.14% | 6 | 332 |
| 213 | 53 | 137 | 13152 | 697056 | 1.30% | 6 | 1402 |
| 214 | 50 | 145 | 13920 | 696000 | 1.14% | 6 | 372 |
| 215 | 48 | 151 | 14496 | 695808 | 1.12% | 6 | 192 |
| 216 | 44 | 165 | 15840 | 696960 | 1.28% | 6 | 1352 |
| 217 | 43 | 169 | 16224 | 697632 | 1.38% | 6 | 2022 |
| 218 | 42 | 173 | 16608 | 697536 | 1.37% | 6 | 1932 |
| 219 | 41 | 177 | 16992 | 696672 | 1.24% | 6 | 1082 |
| 220 | 38 | 191 | 18336 | 696768 | 1.26% | 6 | 1192 |
| 221 | 32 | 227 | 21792 | 697344 | 1.34% | 6 | 1792 |
| 222 | 28 | 259 | 24864 | 696192 | 1.17% | 6 | 672 |
| 223 | 27 | 269 | 25824 | 697248 | 1.33% | 6 | 1722 |
| 224 | 26 | 279 | 26784 | 696384 | 1.20% | 6 | 872 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 225 | 25 | 291 | 27936 | 698400 | 1.49% | 6 | 2872 |
| 226 | 24 | 303 | 29088 | 698112 | 1.45% | 6 | 2592 |
| 227 | 23 | 315 | 30240 | 695520 | 1.07% | 6 | 32 |
| 228 | 21 | 345 | 33120 | 695520 | 1.07% | 6 | 42 |
| 229 | 20 | 363 | 34848 | 696960 | 1.28% | 6 | 1472 |
| 230 | 404 | 18 | 1728 | 698112 | 1.45% | 7 | 288 |
| 231 | 303 | 24 | 2304 | 698112 | 1.45% | 7 | 894 |
| 232 | 242 | 30 | 2880 | 696960 | 1.28% | 7 | 120 |
| 233 | 227 | 32 | 3072 | 697344 | 1.34% | 7 | 590 |
| 234 | 202 | 36 | 3456 | 698112 | 1.45% | 7 | 1500 |
| 235 | 191 | 38 | 3648 | 696768 | 1.26% | 7 | 236 |
| 236 | 173 | 42 | 4032 | 697536 | 1.37% | 7 | 1104 |
| 237 | 165 | 44 | 4224 | 696960 | 1.28% | 7 | 582 |
| 238 | 158 | 46 | 4416 | 697728 | 1.40% | 7 | 1384 |
| 239 | 121 | 60 | 5760 | 696960 | 1.28% | 7 | 846 |
| 240 | 117 | 62 | 5952 | 696384 | 1.20% | 7 | 300 |
| 241 | 110 | 66 | 6336 | 696960 | 1.28% | 7 | 912 |
| 242 | 101 | 72 | 6912 | 698112 | 1.45% | 7 | 2106 |
| 243 | 98 | 74 | 7104 | 696192 | 1.17% | 7 | 224 |
| 244 | 93 | 78 | 7488 | 696384 | 1.20% | 7 | 444 |
| 245 | 79 | 92 | 8832 | 697728 | 1.40% | 7 | 1858 |
| 246 | 74 | 98 | 9408 | 696192 | 1.17% | 7 | 368 |
| 247 | 66 | 110 | 10560 | 696960 | 1.28% | 7 | 1176 |
| 248 | 55 | 132 | 12672 | 696960 | 1.28% | 7 | 1242 |
| 249 | 49 | 148 | 14208 | 696192 | 1.17% | 7 | 518 |
| 250 | 46 | 158 | 15168 | 697728 | 1.40% | 7 | 2056 |
| 251 | 39 | 186 | 17856 | 696384 | 1.20% | 7 | 768 |
| 252 | 37 | 196 | 18816 | 696192 | 1.17% | 7 | 590 |
| 253 | 36 | 202 | 19392 | 698112 | 1.45% | 7 | 2496 |
| 254 | 33 | 220 | 21120 | 696960 | 1.28% | 7 | 1374 |
| 255 | 31 | 234 | 22464 | 696384 | 1.20% | 7 | 816 |
| 256 | 30 | 242 | 23232 | 696960 | 1.28% | 7 | 1392 |
| 257 | 29 | 250 | 24000 | 696000 | 1.14% | 7 | 448 |
| 258 | 25 | 290 | 27840 | 696000 | 1.14% | 7 | 472 |
| 259 | 24 | 302 | 28992 | 695808 | 1.12% | 7 | 288 |
| 260 | 23 | 316 | 30336 | 697728 | 1.40% | 7 | 2194 |
| 261 | 22 | 330 | 31680 | 696960 | 1.28% | 7 | 1440 |
| 262 | 21 | 346 | 33216 | 697536 | 1.37% | 7 | 2016 |
| 263 | 19 | 382 | 36672 | 696768 | 1.26% | 7 | 1268 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 264 | 316 | 23 | 2208 | 697728 | 1.40% | 8 | 120 |
| 265 | 291 | 25 | 2400 | 698400 | 1.49% | 8 | 960 |
| 266 | 220 | 33 | 3168 | 696960 | 1.28% | 8 | 32 |
| 267 | 177 | 41 | 3936 | 696672 | 1.24% | 8 | 48 |
| 268 | 169 | 43 | 4128 | 697632 | 1.38% | 8 | 1054 |
| 269 | 137 | 53 | 5088 | 697056 | 1.30% | 8 | 708 |
| 270 | 132 | 55 | 5280 | 696960 | 1.28% | 8 | 648 |
| 271 | 123 | 59 | 5664 | 696672 | 1.24% | 8 | 426 |
| 272 | 119 | 61 | 5856 | 696864 | 1.27% | 8 | 644 |
| 273 | 97 | 75 | 7200 | 698400 | 1.49% | 8 | 2318 |
| 274 | 92 | 79 | 7584 | 697728 | 1.40% | 8 | 1688 |
| 275 | 78 | 93 | 8928 | 696384 | 1.20% | 8 | 456 |
| 276 | 75 | 97 | 9312 | 698400 | 1.49% | 8 | 2472 |
| 277 | 72 | 101 | 9696 | 698112 | 1.45% | 8 | 2208 |
| 278 | 62 | 117 | 11232 | 696384 | 1.20% | 8 | 568 |
| 279 | 61 | 119 | 11424 | 696864 | 1.27% | 8 | 1050 |
| 280 | 60 | 121 | 11616 | 696960 | 1.28% | 8 | 1152 |
| 281 | 59 | 123 | 11808 | 696672 | 1.24% | 8 | 874 |
| 282 | 58 | 125 | 12000 | 696000 | 1.14% | 8 | 216 |
| 283 | 53 | 137 | 13152 | 697056 | 1.30% | 8 | 1296 |
| 284 | 50 | 145 | 13920 | 696000 | 1.14% | 8 | 272 |
| 285 | 48 | 151 | 14496 | 695808 | 1.12% | 8 | 96 |
| 286 | 44 | 165 | 15840 | 696960 | 1.28% | 8 | 1264 |
| 287 | 43 | 169 | 16224 | 697632 | 1.38% | 8 | 1936 |
| 288 | 42 | 173 | 16608 | 697536 | 1.37% | 8 | 1848 |
| 289 | 41 | 177 | 16992 | 696672 | 1.24% | 8 | 1000 |
| 290 | 38 | 191 | 18336 | 696768 | 1.26% | 8 | 1116 |
| 291 | 32 | 227 | 21792 | 697344 | 1.34% | 8 | 1728 |
| 292 | 28 | 259 | 24864 | 696192 | 1.17% | 8 | 616 |
| 293 | 27 | 269 | 25824 | 697248 | 1.33% | 8 | 1668 |
| 294 | 26 | 279 | 26784 | 696384 | 1.20% | 8 | 820 |
| 295 | 25 | 291 | 27936 | 698400 | 1.49% | 8 | 2822 |
| 296 | 24 | 303 | 29088 | 698112 | 1.45% | 8 | 2544 |
| 297 | 20 | 363 | 34848 | 696960 | 1.28% | 8 | 1432 |
| 298 | 303 | 24 | 2304 | 698112 | 1.45% | 9 | 288 |
| 299 | 227 | 32 | 3072 | 697344 | 1.34% | 9 | 136 |
| 300 | 202 | 36 | 3456 | 698112 | 1.45% | 9 | 1096 |
| 301 | 173 | 42 | 4032 | 697536 | 1.37% | 9 | 758 |
| 302 | 165 | 44 | 4224 | 696960 | 1.28% | 9 | 252 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 303 | 158 | 46 | 4416 | 697728 | 1.40% | 9 | 1068 |
| 304 | 121 | 60 | 5760 | 696960 | 1.28% | 9 | 604 |
| 305 | 117 | 62 | 5952 | 696384 | 1.20% | 9 | 66 |
| 306 | 110 | 66 | 6336 | 696960 | 1.28% | 9 | 692 |
| 307 | 101 | 72 | 6912 | 698112 | 1.45% | 9 | 1904 |
| 308 | 98 | 74 | 7104 | 696192 | 1.17% | 9 | 28 |
| 309 | 93 | 78 | 7488 | 696384 | 1.20% | 9 | 258 |
| 310 | 79 | 92 | 8832 | 697728 | 1.40% | 9 | 1700 |
| 311 | 74 | 98 | 9408 | 696192 | 1.17% | 9 | 220 |
| 312 | 66 | 110 | 10560 | 696960 | 1.28% | 9 | 1044 |
| 313 | 55 | 132 | 12672 | 696960 | 1.28% | 9 | 1132 |
| 314 | 49 | 148 | 14208 | 696192 | 1.17% | 9 | 420 |
| 315 | 46 | 158 | 15168 | 697728 | 1.40% | 9 | 1964 |
| 316 | 39 | 186 | 17856 | 696384 | 1.20% | 9 | 690 |
| 317 | 37 | 196 | 18816 | 696192 | 1.17% | 9 | 516 |
| 318 | 36 | 202 | 19392 | 698112 | 1.45% | 9 | 2424 |
| 319 | 33 | 220 | 21120 | 696960 | 1.28% | 9 | 1308 |
| 320 | 31 | 234 | 22464 | 696384 | 1.20% | 9 | 754 |
| 321 | 30 | 242 | 23232 | 696960 | 1.28% | 9 | 1332 |
| 322 | 29 | 250 | 24000 | 696000 | 1.14% | 9 | 390 |
| 323 | 25 | 290 | 27840 | 696000 | 1.14% | 9 | 422 |
| 324 | 24 | 302 | 28992 | 695808 | 1.12% | 9 | 240 |
| 325 | 23 | 316 | 30336 | 697728 | 1.40% | 9 | 2148 |
| 326 | 22 | 330 | 31680 | 696960 | 1.28% | 9 | 1396 |
| 327 | 21 | 346 | 33216 | 697536 | 1.37% | 9 | 1974 |
| 328 | 19 | 382 | 36672 | 696768 | 1.26% | 9 | 1230 |
| 329 | 291 | 25 | 2400 | 698400 | 1.49% | 10 | 378 |
| 330 | 169 | 43 | 4128 | 697632 | 1.38% | 10 | 716 |
| 331 | 137 | 53 | 5088 | 697056 | 1.30% | 10 | 434 |
| 332 | 132 | 55 | 5280 | 696960 | 1.28% | 10 | 384 |
| 333 | 123 | 59 | 5664 | 696672 | 1.24% | 10 | 180 |
| 334 | 119 | 61 | 5856 | 696864 | 1.27% | 10 | 406 |
| 335 | 97 | 75 | 7200 | 698400 | 1.49% | 10 | 2124 |
| 336 | 92 | 79 | 7584 | 697728 | 1.40% | 10 | 1504 |
| 337 | 78 | 93 | 8928 | 696384 | 1.20% | 10 | 300 |
| 338 | 75 | 97 | 9312 | 698400 | 1.49% | 10 | 2322 |
| 339 | 72 | 101 | 9696 | 698112 | 1.45% | 10 | 2064 |
| 340 | 62 | 117 | 11232 | 696384 | 1.20% | 10 | 444 |
| 341 | 61 | 119 | 11424 | 696864 | 1.27% | 10 | 928 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 342 | 60 | 121 | 11616 | 696960 | 1.28% | 10 | 1032 |
| 343 | 59 | 123 | 11808 | 696672 | 1.24% | 10 | 756 |
| 344 | 58 | 125 | 12000 | 696000 | 1.14% | 10 | 100 |
| 345 | 53 | 137 | 13152 | 697056 | 1.30% | 10 | 1190 |
| 346 | 50 | 145 | 13920 | 696000 | 1.14% | 10 | 172 |
| 347 | 44 | 165 | 15840 | 696960 | 1.28% | 10 | 1176 |
| 348 | 43 | 169 | 16224 | 697632 | 1.38% | 10 | 1850 |
| 349 | 42 | 173 | 16608 | 697536 | 1.37% | 10 | 1764 |
| 350 | 41 | 177 | 16992 | 696672 | 1.24% | 10 | 918 |
| 351 | 38 | 191 | 18336 | 696768 | 1.26% | 10 | 1040 |
| 352 | 32 | 227 | 21792 | 697344 | 1.34% | 10 | 1664 |
| 353 | 28 | 259 | 24864 | 696192 | 1.17% | 10 | 560 |
| 354 | 27 | 269 | 25824 | 697248 | 1.33% | 10 | 1614 |
| 355 | 26 | 279 | 26784 | 696384 | 1.20% | 10 | 768 |
| 356 | 25 | 291 | 27936 | 698400 | 1.49% | 10 | 2772 |
| 357 | 24 | 303 | 29088 | 698112 | 1.45% | 10 | 2496 |
| 358 | 20 | 363 | 34848 | 696960 | 1.28% | 10 | 1392 |
| 359 | 202 | 36 | 3456 | 698112 | 1.45% | 11 | 692 |
| 360 | 173 | 42 | 4032 | 697536 | 1.37% | 11 | 412 |
| 361 | 158 | 46 | 4416 | 697728 | 1.40% | 11 | 752 |
| 362 | 121 | 60 | 5760 | 696960 | 1.28% | 11 | 362 |
| 363 | 110 | 66 | 6336 | 696960 | 1.28% | 11 | 472 |
| 364 | 101 | 72 | 6912 | 698112 | 1.45% | 11 | 1702 |
| 365 | 93 | 78 | 7488 | 696384 | 1.20% | 11 | 72 |
| 366 | 79 | 92 | 8832 | 697728 | 1.40% | 11 | 1542 |
| 367 | 74 | 98 | 9408 | 696192 | 1.17% | 11 | 72 |
| 368 | 66 | 110 | 10560 | 696960 | 1.28% | 11 | 912 |
| 369 | 55 | 132 | 12672 | 696960 | 1.28% | 11 | 1022 |
| 370 | 49 | 148 | 14208 | 696192 | 1.17% | 11 | 322 |
| 371 | 46 | 158 | 15168 | 697728 | 1.40% | 11 | 1872 |
| 372 | 39 | 186 | 17856 | 696384 | 1.20% | 11 | 612 |
| 373 | 37 | 196 | 18816 | 696192 | 1.17% | 11 | 442 |
| 374 | 36 | 202 | 19392 | 698112 | 1.45% | 11 | 2352 |
| 375 | 33 | 220 | 21120 | 696960 | 1.28% | 11 | 1242 |
| 376 | 31 | 234 | 22464 | 696384 | 1.20% | 11 | 692 |
| 377 | 30 | 242 | 23232 | 696960 | 1.28% | 11 | 1272 |
| 378 | 29 | 250 | 24000 | 696000 | 1.14% | 11 | 332 |
| 379 | 25 | 290 | 27840 | 696000 | 1.14% | 11 | 372 |
| 380 | 24 | 302 | 28992 | 695808 | 1.12% | 11 | 192 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 381 | 23 | 316 | 30336 | 697728 | 1.40% | 11 | 2102 |
| 382 | 22 | 330 | 31680 | 696960 | 1.28% | 11 | 1352 |
| 383 | 21 | 346 | 33216 | 697536 | 1.37% | 11 | 1932 |
| 384 | 19 | 382 | 36672 | 696768 | 1.26% | 11 | 1192 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 56 may be obtained with reference to Table 55. In this case, a frame overhead OH in cases listed in Table 56 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 56.

Table 56

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 660 | 11 | 1056 | 696960 | 1.28% | 2 | 912 |
| 2 | 484 | 15 | 1440 | 696960 | 1.28% | 2 | 1088 |
| 3 | 316 | 23 | 2208 | 697728 | 1.40% | 2 | 2016 |
| 4 | 220 | 33 | 3168 | 696960 | 1.28% | 2 | 1352 |
| 5 | 196 | 37 | 3552 | 696192 | 1.17% | 2 | 616 |
| 6 | 148 | 49 | 4704 | 696192 | 1.17% | 2 | 664 |
| 7 | 132 | 55 | 5280 | 696960 | 1.28% | 2 | 1440 |
| 8 | 92 | 79 | 7584 | 697728 | 1.40% | 2 | 2240 |
| 9 | 72 | 101 | 9696 | 698112 | 1.45% | 2 | 2640 |
| 10 | 60 | 121 | 11616 | 696960 | 1.28% | 2 | 1512 |
| 11 | 48 | 151 | 14496 | 695808 | 1.12% | 2 | 384 |
| 12 | 44 | 165 | 15840 | 696960 | 1.28% | 2 | 1528 |
| 13 | 32 | 227 | 21792 | 697344 | 1.34% | 2 | 1920 |
| 14 | 28 | 259 | 24864 | 696192 | 1.17% | 2 | 784 |
| 15 | 24 | 303 | 29088 | 698112 | 1.45% | 2 | 2688 |
| 16 | 20 | 363 | 34848 | 696960 | 1.28% | 2 | 1552 |
| 17 | 726 | 10 | 960 | 696960 | 1.28% | 3 | 120 |
| 18 | 605 | 12 | 1152 | 696960 | 1.28% | 3 | 362 |
| 19 | 454 | 16 | 1536 | 697344 | 1.34% | 3 | 1044 |
| 20 | 363 | 20 | 1920 | 696960 | 1.28% | 3 | 846 |
| 21 | 330 | 22 | 2112 | 696960 | 1.28% | 3 | 912 |
| 22 | 303 | 24 | 2304 | 698112 | 1.45% | 3 | 2106 |
| 23 | 259 | 28 | 2688 | 696192 | 1.17% | 3 | 294 |
| 24 | 242 | 30 | 2880 | 696960 | 1.28% | 3 | 1088 |
| 25 | 227 | 32 | 3072 | 697344 | 1.34% | 3 | 1498 |
| 26 | 202 | 36 | 3456 | 698112 | 1.45% | 3 | 2308 |
| 27 | 165 | 44 | 4224 | 696960 | 1.28% | 3 | 1242 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 28 | 158 | 46 | 4416 | 697728 | 1.40% | 3 | 2016 |
| 29 | 151 | 48 | 4608 | 695808 | 1.12% | 3 | 130 |
| 30 | 121 | 60 | 5760 | 696960 | 1.28% | 3 | 1330 |
| 31 | 110 | 66 | 6336 | 696960 | 1.28% | 3 | 1352 |
| 32 | 101 | 72 | 6912 | 698112 | 1.45% | 3 | 2510 |
| 33 | 98 | 74 | 7104 | 696192 | 1.17% | 3 | 616 |
| 34 | 79 | 92 | 8832 | 697728 | 1.40% | 3 | 2174 |
| 35 | 74 | 98 | 9408 | 696192 | 1.17% | 3 | 664 |
| 36 | 66 | 110 | 10560 | 696960 | 1.28% | 3 | 1440 |
| 37 | 55 | 132 | 12672 | 696960 | 1.28% | 3 | 1462 |
| 38 | 49 | 148 | 14208 | 696192 | 1.17% | 3 | 714 |
| 39 | 46 | 158 | 15168 | 697728 | 1.40% | 3 | 2240 |
| 40 | 37 | 196 | 18816 | 696192 | 1.17% | 3 | 738 |
| 41 | 36 | 202 | 19392 | 698112 | 1.45% | 3 | 2640 |
| 42 | 33 | 220 | 21120 | 696960 | 1.28% | 3 | 1506 |
| 43 | 30 | 242 | 23232 | 696960 | 1.28% | 3 | 1512 |
| 44 | 24 | 302 | 28992 | 695808 | 1.12% | 3 | 384 |
| 45 | 23 | 316 | 30336 | 697728 | 1.40% | 3 | 2286 |
| 46 | 22 | 330 | 31680 | 696960 | 1.28% | 3 | 1528 |
| 47 | 484 | 15 | 1440 | 696960 | 1.28% | 4 | 120 |
| 48 | 316 | 23 | 2208 | 697728 | 1.40% | 4 | 1384 |
| 49 | 220 | 33 | 3168 | 696960 | 1.28% | 4 | 912 |
| 50 | 196 | 37 | 3552 | 696192 | 1.17% | 4 | 224 |
| 51 | 148 | 49 | 4704 | 696192 | 1.17% | 4 | 368 |
| 52 | 132 | 55 | 5280 | 696960 | 1.28% | 4 | 1176 |
| 53 | 92 | 79 | 7584 | 697728 | 1.40% | 4 | 2056 |
| 54 | 72 | 101 | 9696 | 698112 | 1.45% | 4 | 2496 |
| 55 | 60 | 121 | 11616 | 696960 | 1.28% | 4 | 1392 |
| 56 | 48 | 151 | 14496 | 695808 | 1.12% | 4 | 288 |
| 57 | 44 | 165 | 15840 | 696960 | 1.28% | 4 | 1440 |
| 58 | 32 | 227 | 21792 | 697344 | 1.34% | 4 | 1856 |
| 59 | 28 | 259 | 24864 | 696192 | 1.17% | 4 | 728 |
| 60 | 24 | 303 | 29088 | 698112 | 1.45% | 4 | 2640 |
| 61 | 20 | 363 | 34848 | 696960 | 1.28% | 4 | 1512 |
| 62 | 606 | 12 | 1152 | 698112 | 1.45% | 5 | 288 |
| 63 | 454 | 16 | 1536 | 697344 | 1.34% | 5 | 136 |
| 64 | 404 | 18 | 1728 | 698112 | 1.45% | 5 | 1096 |
| 65 | 363 | 20 | 1920 | 696960 | 1.28% | 5 | 120 |
| 66 | 330 | 22 | 2112 | 696960 | 1.28% | 5 | 252 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 67 | 303 | 24 | 2304 | 698112 | 1.45% | 5 | 1500 |
| 68 | 242 | 30 | 2880 | 696960 | 1.28% | 5 | 604 |
| 69 | 227 | 32 | 3072 | 697344 | 1.34% | 5 | 1044 |
| 70 | 202 | 36 | 3456 | 698112 | 1.45% | 5 | 1904 |
| 71 | 165 | 44 | 4224 | 696960 | 1.28% | 5 | 912 |
| 72 | 158 | 46 | 4416 | 697728 | 1.40% | 5 | 1700 |
| 73 | 121 | 60 | 5760 | 696960 | 1.28% | 5 | 1088 |
| 74 | 110 | 66 | 6336 | 696960 | 1.28% | 5 | 1132 |
| 75 | 101 | 72 | 6912 | 698112 | 1.45% | 5 | 2308 |
| 76 | 98 | 74 | 7104 | 696192 | 1.17% | 5 | 420 |
| 77 | 79 | 92 | 8832 | 697728 | 1.40% | 5 | 2016 |
| 78 | 74 | 98 | 9408 | 696192 | 1.17% | 5 | 516 |
| 79 | 66 | 110 | 10560 | 696960 | 1.28% | 5 | 1308 |
| 80 | 55 | 132 | 12672 | 696960 | 1.28% | 5 | 1352 |
| 81 | 49 | 148 | 14208 | 696192 | 1.17% | 5 | 616 |
| 82 | 46 | 158 | 15168 | 697728 | 1.40% | 5 | 2148 |
| 83 | 37 | 196 | 18816 | 696192 | 1.17% | 5 | 664 |
| 84 | 36 | 202 | 19392 | 698112 | 1.45% | 5 | 2568 |
| 85 | 33 | 220 | 21120 | 696960 | 1.28% | 5 | 1440 |
| 86 | 30 | 242 | 23232 | 696960 | 1.28% | 5 | 1452 |
| 87 | 24 | 302 | 28992 | 695808 | 1.12% | 5 | 336 |
| 88 | 23 | 316 | 30336 | 697728 | 1.40% | 5 | 2240 |
| 89 | 22 | 330 | 31680 | 696960 | 1.28% | 5 | 1484 |
| 90 | 316 | 23 | 2208 | 697728 | 1.40% | 6 | 752 |
| 91 | 220 | 33 | 3168 | 696960 | 1.28% | 6 | 472 |
| 92 | 148 | 49 | 4704 | 696192 | 1.17% | 6 | 72 |
| 93 | 132 | 55 | 5280 | 696960 | 1.28% | 6 | 912 |
| 94 | 92 | 79 | 7584 | 697728 | 1.40% | 6 | 1872 |
| 95 | 72 | 101 | 9696 | 698112 | 1.45% | 6 | 2352 |
| 96 | 60 | 121 | 11616 | 696960 | 1.28% | 6 | 1272 |
| 97 | 48 | 151 | 14496 | 695808 | 1.12% | 6 | 192 |
| 98 | 44 | 165 | 15840 | 696960 | 1.28% | 6 | 1352 |
| 99 | 32 | 227 | 21792 | 697344 | 1.34% | 6 | 1792 |
| 100 | 28 | 259 | 24864 | 696192 | 1.17% | 6 | 672 |
| 101 | 24 | 303 | 29088 | 698112 | 1.45% | 6 | 2592 |
| 102 | 20 | 363 | 34848 | 696960 | 1.28% | 6 | 1472 |
| 103 | 404 | 18 | 1728 | 698112 | 1.45% | 7 | 288 |
| 104 | 303 | 24 | 2304 | 698112 | 1.45% | 7 | 894 |
| 105 | 242 | 30 | 2880 | 696960 | 1.28% | 7 | 120 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 106 | 227 | 32 | 3072 | 697344 | 1.34% | 7 | 590 |
| 107 | 202 | 36 | 3456 | 698112 | 1.45% | 7 | 1500 |
| 108 | 165 | 44 | 4224 | 696960 | 1.28% | 7 | 582 |
| 109 | 158 | 46 | 4416 | 697728 | 1.40% | 7 | 1384 |
| 110 | 121 | 60 | 5760 | 696960 | 1.28% | 7 | 846 |
| 111 | 110 | 66 | 6336 | 696960 | 1.28% | 7 | 912 |
| 112 | 101 | 72 | 6912 | 698112 | 1.45% | 7 | 2106 |
| 113 | 98 | 74 | 7104 | 696192 | 1.17% | 7 | 224 |
| 114 | 79 | 92 | 8832 | 697728 | 1.40% | 7 | 1858 |
| 115 | 74 | 98 | 9408 | 696192 | 1.17% | 7 | 368 |
| 116 | 66 | 110 | 10560 | 696960 | 1.28% | 7 | 1176 |
| 117 | 55 | 132 | 12672 | 696960 | 1.28% | 7 | 1242 |
| 118 | 49 | 148 | 14208 | 696192 | 1.17% | 7 | 518 |
| 119 | 46 | 158 | 15168 | 697728 | 1.40% | 7 | 2056 |
| 120 | 37 | 196 | 18816 | 696192 | 1.17% | 7 | 590 |
| 121 | 36 | 202 | 19392 | 698112 | 1.45% | 7 | 2496 |
| 122 | 33 | 220 | 21120 | 696960 | 1.28% | 7 | 1374 |
| 123 | 30 | 242 | 23232 | 696960 | 1.28% | 7 | 1392 |
| 124 | 24 | 302 | 28992 | 695808 | 1.12% | 7 | 288 |
| 125 | 23 | 316 | 30336 | 697728 | 1.40% | 7 | 2194 |
| 126 | 22 | 330 | 31680 | 696960 | 1.28% | 7 | 1440 |
| 127 | 316 | 23 | 2208 | 697728 | 1.40% | 8 | 120 |
| 128 | 220 | 33 | 3168 | 696960 | 1.28% | 8 | 32 |
| 129 | 132 | 55 | 5280 | 696960 | 1.28% | 8 | 648 |
| 130 | 92 | 79 | 7584 | 697728 | 1.40% | 8 | 1688 |
| 131 | 72 | 101 | 9696 | 698112 | 1.45% | 8 | 2208 |
| 132 | 60 | 121 | 11616 | 696960 | 1.28% | 8 | 1152 |
| 133 | 48 | 151 | 14496 | 695808 | 1.12% | 8 | 96 |
| 134 | 44 | 165 | 15840 | 696960 | 1.28% | 8 | 1264 |
| 135 | 32 | 227 | 21792 | 697344 | 1.34% | 8 | 1728 |
| 136 | 28 | 259 | 24864 | 696192 | 1.17% | 8 | 616 |
| 137 | 24 | 303 | 29088 | 698112 | 1.45% | 8 | 2544 |
| 138 | 20 | 363 | 34848 | 696960 | 1.28% | 8 | 1432 |
| 139 | 303 | 24 | 2304 | 698112 | 1.45% | 9 | 288 |
| 140 | 227 | 32 | 3072 | 697344 | 1.34% | 9 | 136 |
| 141 | 202 | 36 | 3456 | 698112 | 1.45% | 9 | 1096 |
| 142 | 165 | 44 | 4224 | 696960 | 1.28% | 9 | 252 |
| 143 | 158 | 46 | 4416 | 697728 | 1.40% | 9 | 1068 |
| 144 | 121 | 60 | 5760 | 696960 | 1.28% | 9 | 604 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 145 | 110 | 66 | 6336 | 696960 | 1.28% | 9 | 692 |
| 146 | 101 | 72 | 6912 | 698112 | 1.45% | 9 | 1904 |
| 147 | 98 | 74 | 7104 | 696192 | 1.17% | 9 | 28 |
| 148 | 79 | 92 | 8832 | 697728 | 1.40% | 9 | 1700 |
| 149 | 74 | 98 | 9408 | 696192 | 1.17% | 9 | 220 |
| 150 | 66 | 110 | 10560 | 696960 | 1.28% | 9 | 1044 |
| 151 | 55 | 132 | 12672 | 696960 | 1.28% | 9 | 1132 |
| 152 | 49 | 148 | 14208 | 696192 | 1.17% | 9 | 420 |
| 153 | 46 | 158 | 15168 | 697728 | 1.40% | 9 | 1964 |
| 154 | 37 | 196 | 18816 | 696192 | 1.17% | 9 | 516 |
| 155 | 36 | 202 | 19392 | 698112 | 1.45% | 9 | 2424 |
| 156 | 33 | 220 | 21120 | 696960 | 1.28% | 9 | 1308 |
| 157 | 30 | 242 | 23232 | 696960 | 1.28% | 9 | 1332 |
| 158 | 24 | 302 | 28992 | 695808 | 1.12% | 9 | 240 |
| 159 | 23 | 316 | 30336 | 697728 | 1.40% | 9 | 2148 |
| 160 | 22 | 330 | 31680 | 696960 | 1.28% | 9 | 1396 |
| 161 | 132 | 55 | 5280 | 696960 | 1.28% | 10 | 384 |
| 162 | 92 | 79 | 7584 | 697728 | 1.40% | 10 | 1504 |
| 163 | 72 | 101 | 9696 | 698112 | 1.45% | 10 | 2064 |
| 164 | 60 | 121 | 11616 | 696960 | 1.28% | 10 | 1032 |
| 165 | 44 | 165 | 15840 | 696960 | 1.28% | 10 | 1176 |
| 166 | 32 | 227 | 21792 | 697344 | 1.34% | 10 | 1664 |
| 167 | 28 | 259 | 24864 | 696192 | 1.17% | 10 | 560 |
| 168 | 24 | 303 | 29088 | 698112 | 1.45% | 10 | 2496 |
| 169 | 20 | 363 | 34848 | 696960 | 1.28% | 10 | 1392 |
| 170 | 202 | 36 | 3456 | 698112 | 1.45% | 11 | 692 |
| 171 | 158 | 46 | 4416 | 697728 | 1.40% | 11 | 752 |
| 172 | 121 | 60 | 5760 | 696960 | 1.28% | 11 | 362 |
| 173 | 110 | 66 | 6336 | 696960 | 1.28% | 11 | 472 |
| 174 | 101 | 72 | 6912 | 698112 | 1.45% | 11 | 1702 |
| 175 | 79 | 92 | 8832 | 697728 | 1.40% | 11 | 1542 |
| 176 | 74 | 98 | 9408 | 696192 | 1.17% | 11 | 72 |
| 177 | 66 | 110 | 10560 | 696960 | 1.28% | 11 | 912 |
| 178 | 55 | 132 | 12672 | 696960 | 1.28% | 11 | 1022 |
| 179 | 49 | 148 | 14208 | 696192 | 1.17% | 11 | 322 |
| 180 | 46 | 158 | 15168 | 697728 | 1.40% | 11 | 1872 |
| 181 | 37 | 196 | 18816 | 696192 | 1.17% | 11 | 442 |
| 182 | 36 | 202 | 19392 | 698112 | 1.45% | 11 | 2352 |
| 183 | 33 | 220 | 21120 | 696960 | 1.28% | 11 | 1242 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 184 | 30 | 242 | 23232 | 696960 | 1.28% | 11 | 1272 |
| 185 | 24 | 302 | 28992 | 695808 | 1.12% | 11 | 192 |
| 186 | 23 | 316 | 30336 | 697728 | 1.40% | 11 | 2102 |
| 187 | 22 | 330 | 31680 | 696960 | 1.28% | 11 | 1352 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 57 may be obtained with reference to Table 56. In this case, a frame overhead OH in cases listed in Table 57 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 57

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 605 | 12 | 1152 | 696960 | 1.28% | 3 | 362 |
| 2 | 454 | 16 | 1536 | 697344 | 1.34% | 3 | 1044 |
| 3 | 363 | 20 | 1920 | 696960 | 1.28% | 3 | 846 |
| 4 | 303 | 24 | 2304 | 698112 | 1.45% | 3 | 2106 |
| 5 | 259 | 28 | 2688 | 696192 | 1.17% | 3 | 294 |
| 6 | 227 | 32 | 3072 | 697344 | 1.34% | 3 | 1498 |
| 7 | 202 | 36 | 3456 | 698112 | 1.45% | 3 | 2308 |
| 8 | 165 | 44 | 4224 | 696960 | 1.28% | 3 | 1242 |
| 9 | 151 | 48 | 4608 | 695808 | 1.12% | 3 | 130 |
| 10 | 121 | 60 | 5760 | 696960 | 1.28% | 3 | 1330 |
| 11 | 101 | 72 | 6912 | 698112 | 1.45% | 3 | 2510 |
| 12 | 79 | 92 | 8832 | 697728 | 1.40% | 3 | 2174 |
| 13 | 55 | 132 | 12672 | 696960 | 1.28% | 3 | 1462 |
| 14 | 49 | 148 | 14208 | 696192 | 1.17% | 3 | 714 |
| 15 | 37 | 196 | 18816 | 696192 | 1.17% | 3 | 738 |
| 16 | 33 | 220 | 21120 | 696960 | 1.28% | 3 | 1506 |
| 17 | 23 | 316 | 30336 | 697728 | 1.40% | 3 | 2286 |
| 18 | 606 | 12 | 1152 | 698112 | 1.45% | 5 | 288 |
| 19 | 454 | 16 | 1536 | 697344 | 1.34% | 5 | 136 |
| 20 | 363 | 20 | 1920 | 696960 | 1.28% | 5 | 120 |
| 21 | 303 | 24 | 2304 | 698112 | 1.45% | 5 | 1500 |
| 22 | 227 | 32 | 3072 | 697344 | 1.34% | 5 | 1044 |
| 23 | 202 | 36 | 3456 | 698112 | 1.45% | 5 | 1904 |
| 24 | 165 | 44 | 4224 | 696960 | 1.28% | 5 | 912 |
| 25 | 121 | 60 | 5760 | 696960 | 1.28% | 5 | 1088 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 26 | 101 | 72 | 6912 | 698112 | 1.45% | 5 | 2308 |
| 27 | 79 | 92 | 8832 | 697728 | 1.40% | 5 | 2016 |
| 28 | 55 | 132 | 12672 | 696960 | 1.28% | 5 | 1352 |
| 29 | 49 | 148 | 14208 | 696192 | 1.17% | 5 | 616 |
| 30 | 37 | 196 | 18816 | 696192 | 1.17% | 5 | 664 |
| 31 | 33 | 220 | 21120 | 696960 | 1.28% | 5 | 1440 |
| 32 | 23 | 316 | 30336 | 697728 | 1.40% | 5 | 2240 |
| 33 | 303 | 24 | 2304 | 698112 | 1.45% | 7 | 894 |
| 34 | 227 | 32 | 3072 | 697344 | 1.34% | 7 | 590 |
| 35 | 202 | 36 | 3456 | 698112 | 1.45% | 7 | 1500 |
| 36 | 165 | 44 | 4224 | 696960 | 1.28% | 7 | 582 |
| 37 | 121 | 60 | 5760 | 696960 | 1.28% | 7 | 846 |
| 38 | 101 | 72 | 6912 | 698112 | 1.45% | 7 | 2106 |
| 39 | 79 | 92 | 8832 | 697728 | 1.40% | 7 | 1858 |
| 40 | 55 | 132 | 12672 | 696960 | 1.28% | 7 | 1242 |
| 41 | 49 | 148 | 14208 | 696192 | 1.17% | 7 | 518 |
| 42 | 37 | 196 | 18816 | 696192 | 1.17% | 7 | 590 |
| 43 | 33 | 220 | 21120 | 696960 | 1.28% | 7 | 1374 |
| 44 | 23 | 316 | 30336 | 697728 | 1.40% | 7 | 2194 |
| 45 | 303 | 24 | 2304 | 698112 | 1.45% | 9 | 288 |
| 46 | 227 | 32 | 3072 | 697344 | 1.34% | 9 | 136 |
| 47 | 202 | 36 | 3456 | 698112 | 1.45% | 9 | 1096 |
| 48 | 165 | 44 | 4224 | 696960 | 1.28% | 9 | 252 |
| 49 | 121 | 60 | 5760 | 696960 | 1.28% | 9 | 604 |
| 50 | 101 | 72 | 6912 | 698112 | 1.45% | 9 | 1904 |
| 51 | 79 | 92 | 8832 | 697728 | 1.40% | 9 | 1700 |
| 52 | 55 | 132 | 12672 | 696960 | 1.28% | 9 | 1132 |
| 53 | 49 | 148 | 14208 | 696192 | 1.17% | 9 | 420 |
| 54 | 37 | 196 | 18816 | 696192 | 1.17% | 9 | 516 |
| 55 | 33 | 220 | 21120 | 696960 | 1.28% | 9 | 1308 |
| 56 | 23 | 316 | 30336 | 697728 | 1.40% | 9 | 2148 |
| 57 | 202 | 36 | 3456 | 698112 | 1.45% | 11 | 692 |
| 58 | 121 | 60 | 5760 | 696960 | 1.28% | 11 | 362 |
| 59 | 101 | 72 | 6912 | 698112 | 1.45% | 11 | 1702 |
| 60 | 79 | 92 | 8832 | 697728 | 1.40% | 11 | 1542 |
| 61 | 55 | 132 | 12672 | 696960 | 1.28% | 11 | 1022 |
| 62 | 49 | 148 | 14208 | 696192 | 1.17% | 11 | 322 |
| 63 | 37 | 196 | 18816 | 696192 | 1.17% | 11 | 442 |
| 64 | 33 | 220 | 21120 | 696960 | 1.28% | 11 | 1242 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 65 | 23 | 316 | 30336 | 697728 | 1.40% | 11 | 2102 |

(16) The quantity $N_{CW}$ of symbols before framing is 150528. For example, an open FEC (Open FEC, OFEC) encoding scheme with an encoding overhead of approximately 17.9% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 58. $N_{TS}+N_{PS}$ is an odd number, and $N_{FAW}$ is an even number. Correspondingly, $N_{RES}>0$, OH = $(N_F = N_{CW})/N_{CW}$, $N_F = N_S \times N_{SF}$, and $N_{TS,TOT} = N_{TS} \times N_{SF}$.

A frame overhead of a super-frame architecture in cases listed in Table 58 is low: OH<1.50%. In Table 58, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 58.

Table 58

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 159 | 10 | 960 | 152640 | 1.40% | 522 |
| 2 | 122 | 13 | 1248 | 152256 | 1.15% | 142 |
| 3 | 106 | 15 | 1440 | 152640 | 1.40% | 522 |
| 4 | 69 | 23 | 2208 | 152352 | 1.21% | 237 |
| 5 | 61 | 26 | 2496 | 152256 | 1.15% | 142 |
| 6 | 53 | 30 | 2880 | 152640 | 1.40% | 522 |
| 7 | 43 | 37 | 3552 | 152736 | 1.47% | 617 |
| 8 | 37 | 43 | 4128 | 152736 | 1.47% | 617 |
| 9 | 30 | 53 | 5088 | 152640 | 1.40% | 522 |
| 10 | 26 | 61 | 5856 | 152256 | 1.15% | 142 |
| 11 | 23 | 69 | 6624 | 152352 | 1.21% | 237 |
| 12 | 15 | 106 | 10176 | 152640 | 1.40% | 522 |
| 13 | 13 | 122 | 11712 | 152256 | 1.15% | 142 |
| 14 | 10 | 159 | 15264 | 152640 | 1.40% | 522 |
| 15 | 7 | 227 | 21792 | 152544 | 1.34% | 427 |
| 16 | 6 | 265 | 25440 | 152640 | 1.40% | 522 |
| 17 | 5 | 317 | 30432 | 152160 | 1.08% | 47 |
| 18 | 5 | 318 | 30528 | 152640 | 1.40% | 522 |
| 19 | 4 | 397 | 38112 | 152448 | 1.28% | 332 |

Considering that the quantity $N_{TS}$ of training symbols is not greater than 11, Table 59 may be obtained with reference to Table 58. In this case, a frame overhead OH of a super-frame architecture in cases listed in Table 59 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 59.

Table 59

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 106 | 15 | 1440 | 152640 | 1.40% | 2 | 416 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 2 | 69 | 23 | 2208 | 152352 | 1.21% | 2 | 168 |
| 3 | 43 | 37 | 3552 | 152736 | 1.47% | 2 | 574 |
| 4 | 37 | 43 | 4128 | 152736 | 1.47% | 2 | 580 |
| 5 | 30 | 53 | 5088 | 152640 | 1.40% | 2 | 492 |
| 6 | 26 | 61 | 5856 | 152256 | 1.15% | 2 | 116 |
| 7 | 23 | 69 | 6624 | 152352 | 1.21% | 2 | 214 |
| 8 | 10 | 159 | 15264 | 152640 | 1.40% | 2 | 512 |
| 9 | 7 | 227 | 21792 | 152544 | 1.34% | 2 | 420 |
| 10 | 6 | 265 | 25440 | 152640 | 1.40% | 2 | 516 |
| 11 | 5 | 317 | 30432 | 152160 | 1.08% | 2 | 42 |
| 12 | 4 | 397 | 38112 | 152448 | 1.28% | 2 | 328 |
| 13 | 159 | 10 | 960 | 152640 | 1.40% | 3 | 204 |
| 14 | 53 | 30 | 2880 | 152640 | 1.40% | 3 | 416 |
| 15 | 15 | 106 | 10176 | 152640 | 1.40% | 3 | 492 |
| 16 | 13 | 122 | 11712 | 152256 | 1.15% | 3 | 116 |
| 17 | 5 | 318 | 30528 | 152640 | 1.40% | 3 | 512 |
| 18 | 106 | 15 | 1440 | 152640 | 1.40% | 4 | 204 |
| 19 | 69 | 23 | 2208 | 152352 | 1.21% | 4 | 30 |
| 20 | 43 | 37 | 3552 | 152736 | 1.47% | 4 | 488 |
| 21 | 37 | 43 | 4128 | 152736 | 1.47% | 4 | 506 |
| 22 | 30 | 53 | 5088 | 152640 | 1.40% | 4 | 432 |
| 23 | 26 | 61 | 5856 | 152256 | 1.15% | 4 | 64 |
| 24 | 23 | 69 | 6624 | 152352 | 1.21% | 4 | 168 |
| 25 | 10 | 159 | 15264 | 152640 | 1.40% | 4 | 492 |
| 26 | 7 | 227 | 21792 | 152544 | 1.34% | 4 | 406 |
| 27 | 6 | 265 | 25440 | 152640 | 1.40% | 4 | 504 |
| 28 | 5 | 317 | 30432 | 152160 | 1.08% | 4 | 32 |
| 29 | 4 | 397 | 38112 | 152448 | 1.28% | 4 | 320 |
| 30 | 53 | 30 | 2880 | 152640 | 1.40% | 5 | 310 |
| 31 | 15 | 106 | 10176 | 152640 | 1.40% | 5 | 462 |
| 32 | 13 | 122 | 11712 | 152256 | 1.15% | 5 | 90 |
| 33 | 5 | 318 | 30528 | 152640 | 1.40% | 5 | 502 |
| 34 | 43 | 37 | 3552 | 152736 | 1.47% | 6 | 402 |
| 35 | 37 | 43 | 4128 | 152736 | 1.47% | 6 | 432 |
| 36 | 30 | 53 | 5088 | 152640 | 1.40% | 6 | 372 |
| 37 | 23 | 69 | 6624 | 152352 | 1.21% | 6 | 122 |
| 38 | 10 | 159 | 15264 | 152640 | 1.40% | 6 | 472 |
| 39 | 7 | 227 | 21792 | 152544 | 1.34% | 6 | 392 |
| 40 | 6 | 265 | 25440 | 152640 | 1.40% | 6 | 492 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 41 | 5 | 317 | 30432 | 152160 | 1.08% | 6 | 22 |
| 42 | 4 | 397 | 38112 | 152448 | 1.28% | 6 | 312 |
| 43 | 53 | 30 | 2880 | 152640 | 1.40% | 7 | 204 |
| 44 | 15 | 106 | 10176 | 152640 | 1.40% | 7 | 432 |
| 45 | 13 | 122 | 11712 | 152256 | 1.15% | 7 | 64 |
| 46 | 5 | 318 | 30528 | 152640 | 1.40% | 7 | 492 |
| 47 | 43 | 37 | 3552 | 152736 | 1.47% | 8 | 316 |
| 48 | 37 | 43 | 4128 | 152736 | 1.47% | 8 | 358 |
| 49 | 30 | 53 | 5088 | 152640 | 1.40% | 8 | 312 |
| 50 | 23 | 69 | 6624 | 152352 | 1.21% | 8 | 76 |
| 51 | 10 | 159 | 15264 | 152640 | 1.40% | 8 | 452 |
| 52 | 7 | 227 | 21792 | 152544 | 1.34% | 8 | 378 |
| 53 | 6 | 265 | 25440 | 152640 | 1.40% | 8 | 480 |
| 54 | 4 | 397 | 38112 | 152448 | 1.28% | 8 | 304 |
| 55 | 53 | 30 | 2880 | 152640 | 1.40% | 9 | 98 |
| 56 | 15 | 106 | 10176 | 152640 | 1.40% | 9 | 402 |
| 57 | 13 | 122 | 11712 | 152256 | 1.15% | 9 | 38 |
| 58 | 5 | 318 | 30528 | 152640 | 1.40% | 9 | 482 |
| 59 | 43 | 37 | 3552 | 152736 | 1.47% | 10 | 230 |
| 60 | 37 | 43 | 4128 | 152736 | 1.47% | 10 | 284 |
| 61 | 30 | 53 | 5088 | 152640 | 1.40% | 10 | 252 |
| 62 | 23 | 69 | 6624 | 152352 | 1.21% | 10 | 30 |
| 63 | 10 | 159 | 15264 | 152640 | 1.40% | 10 | 432 |
| 64 | 7 | 227 | 21792 | 152544 | 1.34% | 10 | 364 |
| 65 | 6 | 265 | 25440 | 152640 | 1.40% | 10 | 468 |
| 66 | 4 | 397 | 38112 | 152448 | 1.28% | 10 | 296 |
| 67 | 15 | 106 | 10176 | 152640 | 1.40% | 11 | 372 |
| 68 | 5 | 318 | 30528 | 152640 | 1.40% | 11 | 472 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 60 may be obtained with reference to Table 59. In this case, a frame overhead OH in cases listed in Table 60 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 60. It should be noted that, in this case (16), a case in which the quantity $N_F$ of symbols in the super-frame is an integer multiple of 192 and 128 and the quantity $N_S$ of symbols in each sub-frame is also an integer multiple of 192 and 128 does not exist.

Table 60

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 4 | 397 | 38112 | 152448 | 1.28% | 2 | 328 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 2 | 4 | 397 | 38112 | 152448 | 1.28% | 4 | 320 |
| 3 | 4 | 397 | 38112 | 152448 | 1.28% | 6 | 312 |
| 4 | 4 | 397 | 38112 | 152448 | 1.28% | 8 | 304 |
| 5 | 4 | 397 | 38112 | 152448 | 1.28% | 10 | 296 |

(17) The quantity $N_{CW}$ of symbols before framing is 129024. For example, an open FEC (Open FEC, OFEC) encoding scheme with an encoding overhead of approximately 21.5% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 61. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 61 is low: OH<1.50%. In Table 61, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 61.

Table 61

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 136 | 10 | 960 | 130560 | 1.19% | 176 |
| 2 | 124 | 11 | 1056 | 130944 | 1.49% | 556 |
| 3 | 85 | 16 | 1536 | 130560 | 1.19% | 176 |
| 4 | 80 | 17 | 1632 | 130560 | 1.19% | 176 |
| 5 | 68 | 20 | 1920 | 130560 | 1.19% | 176 |
| 6 | 62 | 22 | 2112 | 130944 | 1.49% | 556 |
| 7 | 47 | 29 | 2784 | 130848 | 1.41% | 461 |
| 8 | 44 | 31 | 2976 | 130944 | 1.49% | 556 |
| 9 | 40 | 34 | 3264 | 130560 | 1.19% | 176 |
| 10 | 34 | 40 | 3840 | 130560 | 1.19% | 176 |
| 11 | 31 | 44 | 4224 | 130944 | 1.49% | 556 |
| 12 | 29 | 47 | 4512 | 130848 | 1.41% | 461 |
| 13 | 22 | 62 | 5952 | 130944 | 1.49% | 556 |
| 14 | 20 | 68 | 6528 | 130560 | 1.19% | 176 |
| 15 | 17 | 80 | 7680 | 130560 | 1.19% | 176 |
| 16 | 16 | 85 | 8160 | 130560 | 1.19% | 176 |
| 17 | 11 | 124 | 11904 | 130944 | 1.49% | 556 |
| 18 | 10 | 136 | 13056 | 130560 | 1.19% | 176 |
| 19 | 9 | 151 | 14496 | 130464 | 1.12% | 81 |
| 20 | 8 | 170 | 16320 | 130560 | 1.19% | 176 |
| 21 | 6 | 227 | 21792 | 130752 | 1.34% | 366 |
| 22 | 5 | 272 | 26112 | 130560 | 1.19% | 176 |
| 23 | 4 | 340 | 32640 | 130560 | 1.19% | 176 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 24 | 4 | 341 | 32736 | 130944 | 1.49% | 556 |

Considering that the quantity $N_{TS}$ of training symbols is not greater than 11, Table 62 may be obtained with reference to Table 61. In this case, a frame overhead OH of a super-frame architecture in cases listed in Table 62 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 62.

Table 62

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 124 | 11 | 1056 | 130944 | 1.49% | 2 | 432 |
| 2 | 80 | 17 | 1632 | 130560 | 1.19% | 2 | 96 |
| 3 | 47 | 29 | 2784 | 130848 | 1.41% | 2 | 414 |
| 4 | 44 | 31 | 2976 | 130944 | 1.49% | 2 | 512 |
| 5 | 29 | 47 | 4512 | 130848 | 1.41% | 2 | 432 |
| 6 | 16 | 85 | 8160 | 130560 | 1.19% | 2 | 160 |
| 7 | 9 | 151 | 14496 | 130464 | 1.12% | 2 | 72 |
| 8 | 6 | 227 | 21792 | 130752 | 1.34% | 2 | 360 |
| 9 | 4 | 341 | 32736 | 130944 | 1.49% | 2 | 552 |
| 10 | 68 | 20 | 1920 | 130560 | 1.19% | 3 | 40 |
| 11 | 62 | 22 | 2112 | 130944 | 1.49% | 3 | 432 |
| 12 | 40 | 34 | 3264 | 130560 | 1.19% | 3 | 96 |
| 13 | 34 | 40 | 3840 | 130560 | 1.19% | 3 | 108 |
| 14 | 31 | 44 | 4224 | 130944 | 1.49% | 3 | 494 |
| 15 | 22 | 62 | 5952 | 130944 | 1.49% | 3 | 512 |
| 16 | 20 | 68 | 6528 | 130560 | 1.19% | 3 | 136 |
| 17 | 17 | 80 | 7680 | 130560 | 1.19% | 3 | 142 |
| 18 | 11 | 124 | 11904 | 130944 | 1.49% | 3 | 534 |
| 19 | 10 | 136 | 13056 | 130560 | 1.19% | 3 | 156 |
| 20 | 8 | 170 | 16320 | 130560 | 1.19% | 3 | 160 |
| 21 | 5 | 272 | 26112 | 130560 | 1.19% | 3 | 166 |
| 22 | 4 | 340 | 32640 | 130560 | 1.19% | 3 | 168 |
| 23 | 124 | 11 | 1056 | 130944 | 1.49% | 4 | 184 |
| 24 | 47 | 29 | 2784 | 130848 | 1.41% | 4 | 320 |
| 25 | 44 | 31 | 2976 | 130944 | 1.49% | 4 | 424 |
| 26 | 29 | 47 | 4512 | 130848 | 1.41% | 4 | 374 |
| 27 | 16 | 85 | 8160 | 130560 | 1.19% | 4 | 128 |
| 28 | 9 | 151 | 14496 | 130464 | 1.12% | 4 | 54 |
| 29 | 6 | 227 | 21792 | 130752 | 1.34% | 4 | 348 |
| 30 | 4 | 341 | 32736 | 130944 | 1.49% | 4 | 544 |
| 31 | 62 | 22 | 2112 | 130944 | 1.49% | 5 | 308 |
| 32 | 34 | 40 | 3840 | 130560 | 1.19% | 5 | 40 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 33 | 31 | 44 | 4224 | 130944 | 1.49% | 5 | 432 |
| 34 | 22 | 62 | 5952 | 130944 | 1.49% | 5 | 468 |
| 35 | 20 | 68 | 6528 | 130560 | 1.19% | 5 | 96 |
| 36 | 17 | 80 | 7680 | 130560 | 1.19% | 5 | 108 |
| 37 | 11 | 124 | 11904 | 130944 | 1.49% | 5 | 512 |
| 38 | 10 | 136 | 13056 | 130560 | 1.19% | 5 | 136 |
| 39 | 8 | 170 | 16320 | 130560 | 1.19% | 5 | 144 |
| 40 | 5 | 272 | 26112 | 130560 | 1.19% | 5 | 156 |
| 41 | 4 | 340 | 32640 | 130560 | 1.19% | 5 | 160 |
| 42 | 47 | 29 | 2784 | 130848 | 1.41% | 6 | 226 |
| 43 | 44 | 31 | 2976 | 130944 | 1.49% | 6 | 336 |
| 44 | 29 | 47 | 4512 | 130848 | 1.41% | 6 | 316 |
| 45 | 16 | 85 | 8160 | 130560 | 1.19% | 6 | 96 |
| 46 | 9 | 151 | 14496 | 130464 | 1.12% | 6 | 36 |
| 47 | 6 | 227 | 21792 | 130752 | 1.34% | 6 | 336 |
| 48 | 4 | 341 | 32736 | 130944 | 1.49% | 6 | 536 |
| 49 | 62 | 22 | 2112 | 130944 | 1.49% | 7 | 184 |
| 50 | 31 | 44 | 4224 | 130944 | 1.49% | 7 | 370 |
| 51 | 22 | 62 | 5952 | 130944 | 1.49% | 7 | 424 |
| 52 | 20 | 68 | 6528 | 130560 | 1.19% | 7 | 56 |
| 53 | 17 | 80 | 7680 | 130560 | 1.19% | 7 | 74 |
| 54 | 11 | 124 | 11904 | 130944 | 1.49% | 7 | 490 |
| 55 | 10 | 136 | 13056 | 130560 | 1.19% | 7 | 116 |
| 56 | 8 | 170 | 16320 | 130560 | 1.19% | 7 | 128 |
| 57 | 5 | 272 | 26112 | 130560 | 1.19% | 7 | 146 |
| 58 | 4 | 340 | 32640 | 130560 | 1.19% | 7 | 152 |
| 59 | 47 | 29 | 2784 | 130848 | 1.41% | 8 | 132 |
| 60 | 44 | 31 | 2976 | 130944 | 1.49% | 8 | 248 |
| 61 | 29 | 47 | 4512 | 130848 | 1.41% | 8 | 258 |
| 62 | 16 | 85 | 8160 | 130560 | 1.19% | 8 | 64 |
| 63 | 6 | 227 | 21792 | 130752 | 1.34% | 8 | 324 |
| 64 | 4 | 341 | 32736 | 130944 | 1.49% | 8 | 528 |
| 65 | 62 | 22 | 2112 | 130944 | 1.49% | 9 | 60 |
| 66 | 31 | 44 | 4224 | 130944 | 1.49% | 9 | 308 |
| 67 | 22 | 62 | 5952 | 130944 | 1.49% | 9 | 380 |
| 68 | 17 | 80 | 7680 | 130560 | 1.19% | 9 | 40 |
| 69 | 11 | 124 | 11904 | 130944 | 1.49% | 9 | 468 |
| 70 | 10 | 136 | 13056 | 130560 | 1.19% | 9 | 96 |
| 71 | 8 | 170 | 16320 | 130560 | 1.19% | 9 | 112 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 72 | 5 | 272 | 26112 | 130560 | 1.19% | 9 | 136 |
| 73 | 4 | 340 | 32640 | 130560 | 1.19% | 9 | 144 |
| 74 | 47 | 29 | 2784 | 130848 | 1.41% | 10 | 38 |
| 75 | 44 | 31 | 2976 | 130944 | 1.49% | 10 | 160 |
| 76 | 29 | 47 | 4512 | 130848 | 1.41% | 10 | 200 |
| 77 | 16 | 85 | 8160 | 130560 | 1.19% | 10 | 32 |
| 78 | 6 | 227 | 21792 | 130752 | 1.34% | 10 | 312 |
| 79 | 4 | 341 | 32736 | 130944 | 1.49% | 10 | 520 |
| 80 | 31 | 44 | 4224 | 130944 | 1.49% | 11 | 246 |
| 81 | 22 | 62 | 5952 | 130944 | 1.49% | 11 | 336 |
| 82 | 11 | 124 | 11904 | 130944 | 1.49% | 11 | 446 |
| 83 | 10 | 136 | 13056 | 130560 | 1.19% | 11 | 76 |
| 84 | 8 | 170 | 16320 | 130560 | 1.19% | 11 | 96 |
| 85 | 5 | 272 | 26112 | 130560 | 1.19% | 11 | 126 |
| 86 | 4 | 340 | 32640 | 130560 | 1.19% | 11 | 136 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 63 may be obtained with reference to Table 62. In this case, a frame overhead OH in cases listed in Table 63 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 63.

Table 63

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 124 | 11 | 1056 | 130944 | 1.49% | 2 | 432 |
| 2 | 80 | 17 | 1632 | 130560 | 1.19% | 2 | 96 |
| 3 | 44 | 31 | 2976 | 130944 | 1.49% | 2 | 512 |
| 4 | 16 | 85 | 8160 | 130560 | 1.19% | 2 | 160 |
| 5 | 4 | 341 | 32736 | 130944 | 1.49% | 2 | 552 |
| 6 | 68 | 20 | 1920 | 130560 | 1.19% | 3 | 40 |
| 7 | 62 | 22 | 2112 | 130944 | 1.49% | 3 | 432 |
| 8 | 40 | 34 | 3264 | 130560 | 1.19% | 3 | 96 |
| 9 | 34 | 40 | 3840 | 130560 | 1.19% | 3 | 108 |
| 10 | 31 | 44 | 4224 | 130944 | 1.49% | 3 | 494 |
| 11 | 22 | 62 | 5952 | 130944 | 1.49% | 3 | 512 |
| 12 | 20 | 68 | 6528 | 130560 | 1.19% | 3 | 136 |
| 13 | 17 | 80 | 7680 | 130560 | 1.19% | 3 | 142 |
| 14 | 11 | 124 | 11904 | 130944 | 1.49% | 3 | 534 |
| 15 | 10 | 136 | 13056 | 130560 | 1.19% | 3 | 156 |
| 16 | 8 | 170 | 16320 | 130560 | 1.19% | 3 | 160 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 17 | 5 | 272 | 26112 | 130560 | 1.19% | 3 | 166 |
| 18 | 4 | 340 | 32640 | 130560 | 1.19% | 3 | 168 |
| 19 | 124 | 11 | 1056 | 130944 | 1.49% | 4 | 184 |
| 20 | 44 | 31 | 2976 | 130944 | 1.49% | 4 | 424 |
| 21 | 16 | 85 | 8160 | 130560 | 1.19% | 4 | 128 |
| 22 | 4 | 341 | 32736 | 130944 | 1.49% | 4 | 544 |
| 23 | 62 | 22 | 2112 | 130944 | 1.49% | 5 | 308 |
| 24 | 34 | 40 | 3840 | 130560 | 1.19% | 5 | 40 |
| 25 | 31 | 44 | 4224 | 130944 | 1.49% | 5 | 432 |
| 26 | 22 | 62 | 5952 | 130944 | 1.49% | 5 | 468 |
| 27 | 20 | 68 | 6528 | 130560 | 1.19% | 5 | 96 |
| 28 | 17 | 80 | 7680 | 130560 | 1.19% | 5 | 108 |
| 29 | 11 | 124 | 11904 | 130944 | 1.49% | 5 | 512 |
| 30 | 10 | 136 | 13056 | 130560 | 1.19% | 5 | 136 |
| 31 | 8 | 170 | 16320 | 130560 | 1.19% | 5 | 144 |
| 32 | 5 | 272 | 26112 | 130560 | 1.19% | 5 | 156 |
| 33 | 4 | 340 | 32640 | 130560 | 1.19% | 5 | 160 |
| 34 | 44 | 31 | 2976 | 130944 | 1.49% | 6 | 336 |
| 35 | 16 | 85 | 8160 | 130560 | 1.19% | 6 | 96 |
| 36 | 4 | 341 | 32736 | 130944 | 1.49% | 6 | 536 |
| 37 | 62 | 22 | 2112 | 130944 | 1.49% | 7 | 184 |
| 38 | 31 | 44 | 4224 | 130944 | 1.49% | 7 | 370 |
| 39 | 22 | 62 | 5952 | 130944 | 1.49% | 7 | 424 |
| 40 | 20 | 68 | 6528 | 130560 | 1.19% | 7 | 56 |
| 41 | 17 | 80 | 7680 | 130560 | 1.19% | 7 | 74 |
| 42 | 11 | 124 | 11904 | 130944 | 1.49% | 7 | 490 |
| 43 | 10 | 136 | 13056 | 130560 | 1.19% | 7 | 116 |
| 44 | 8 | 170 | 16320 | 130560 | 1.19% | 7 | 128 |
| 45 | 5 | 272 | 26112 | 130560 | 1.19% | 7 | 146 |
| 46 | 4 | 340 | 32640 | 130560 | 1.19% | 7 | 152 |
| 47 | 44 | 31 | 2976 | 130944 | 1.49% | 8 | 248 |
| 48 | 16 | 85 | 8160 | 130560 | 1.19% | 8 | 64 |
| 49 | 4 | 341 | 32736 | 130944 | 1.49% | 8 | 528 |
| 50 | 62 | 22 | 2112 | 130944 | 1.49% | 9 | 60 |
| 51 | 31 | 44 | 4224 | 130944 | 1.49% | 9 | 308 |
| 52 | 22 | 62 | 5952 | 130944 | 1.49% | 9 | 380 |
| 53 | 17 | 80 | 7680 | 130560 | 1.19% | 9 | 40 |
| 54 | 11 | 124 | 11904 | 130944 | 1.49% | 9 | 468 |
| 55 | 10 | 136 | 13056 | 130560 | 1.19% | 9 | 96 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 56 | 8 | 170 | 16320 | 130560 | 1.19% | 9 | 112 |
| 57 | 5 | 272 | 26112 | 130560 | 1.19% | 9 | 136 |
| 58 | 4 | 340 | 32640 | 130560 | 1.19% | 9 | 144 |
| 59 | 44 | 31 | 2976 | 130944 | 1.49% | 10 | 160 |
| 60 | 16 | 85 | 8160 | 130560 | 1.19% | 10 | 32 |
| 61 | 4 | 341 | 32736 | 130944 | 1.49% | 10 | 520 |
| 62 | 31 | 44 | 4224 | 130944 | 1.49% | 11 | 246 |
| 63 | 22 | 62 | 5952 | 130944 | 1.49% | 11 | 336 |
| 64 | 11 | 124 | 11904 | 130944 | 1.49% | 11 | 446 |
| 65 | 10 | 136 | 13056 | 130560 | 1.19% | 11 | 76 |
| 66 | 8 | 170 | 16320 | 130560 | 1.19% | 11 | 96 |
| 67 | 5 | 272 | 26112 | 130560 | 1.19% | 11 | 126 |
| 68 | 4 | 340 | 32640 | 130560 | 1.19% | 11 | 136 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 64 may be obtained with reference to Table 63. In this case, a frame overhead OH in cases listed in Table 64 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 64

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 68 | 20 | 1920 | 130560 | 1.19% | 3 | 40 |
| 2 | 34 | 40 | 3840 | 130560 | 1.19% | 3 | 108 |
| 3 | 31 | 44 | 4224 | 130944 | 1.49% | 3 | 494 |
| 4 | 20 | 68 | 6528 | 130560 | 1.19% | 3 | 136 |
| 5 | 17 | 80 | 7680 | 130560 | 1.19% | 3 | 142 |
| 6 | 11 | 124 | 11904 | 130944 | 1.49% | 3 | 534 |
| 7 | 10 | 136 | 13056 | 130560 | 1.19% | 3 | 156 |
| 8 | 5 | 272 | 26112 | 130560 | 1.19% | 3 | 166 |
| 9 | 4 | 340 | 32640 | 130560 | 1.19% | 3 | 168 |
| 10 | 34 | 40 | 3840 | 130560 | 1.19% | 5 | 40 |
| 11 | 31 | 44 | 4224 | 130944 | 1.49% | 5 | 432 |
| 12 | 20 | 68 | 6528 | 130560 | 1.19% | 5 | 96 |
| 13 | 17 | 80 | 7680 | 130560 | 1.19% | 5 | 108 |
| 14 | 11 | 124 | 11904 | 130944 | 1.49% | 5 | 512 |
| 15 | 10 | 136 | 13056 | 130560 | 1.19% | 5 | 136 |
| 16 | 5 | 272 | 26112 | 130560 | 1.19% | 5 | 156 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 17 | 4 | 340 | 32640 | 130560 | 1.19% | 5 | 160 |
| 18 | 31 | 44 | 4224 | 130944 | 1.49% | 7 | 370 |
| 19 | 20 | 68 | 6528 | 130560 | 1.19% | 7 | 56 |
| 20 | 17 | 80 | 7680 | 130560 | 1.19% | 7 | 74 |
| 21 | 11 | 124 | 11904 | 130944 | 1.49% | 7 | 490 |
| 22 | 10 | 136 | 13056 | 130560 | 1.19% | 7 | 116 |
| 23 | 5 | 272 | 26112 | 130560 | 1.19% | 7 | 146 |
| 24 | 4 | 340 | 32640 | 130560 | 1.19% | 7 | 152 |
| 25 | 31 | 44 | 4224 | 130944 | 1.49% | 9 | 308 |
| 26 | 17 | 80 | 7680 | 130560 | 1.19% | 9 | 40 |
| 27 | 11 | 124 | 11904 | 130944 | 1.49% | 9 | 468 |
| 28 | 10 | 136 | 13056 | 130560 | 1.19% | 9 | 96 |
| 29 | 5 | 272 | 26112 | 130560 | 1.19% | 9 | 136 |
| 30 | 4 | 340 | 32640 | 130560 | 1.19% | 9 | 144 |
| 31 | 31 | 44 | 4224 | 130944 | 1.49% | 11 | 246 |
| 32 | 11 | 124 | 11904 | 130944 | 1.49% | 11 | 446 |
| 33 | 10 | 136 | 13056 | 130560 | 1.19% | 11 | 76 |
| 34 | 5 | 272 | 26112 | 130560 | 1.19% | 11 | 126 |
| 35 | 4 | 340 | 32640 | 130560 | 1.19% | 11 | 136 |

(18) The quantity $N_{CW}$ of symbols before framing is 107520. For example, an open FEC (Open FEC, OFEC) encoding scheme with an encoding overhead of approximately 26.9% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 65. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 65 is low: OH<1.50%. In Table 65, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 65.

Table 65

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 103 | 11 | 1056 | 108768 | 1.16% | 115 |
| 2 | 81 | 14 | 1344 | 108864 | 1.25% | 210 |
| 3 | 71 | 16 | 1536 | 109056 | 1.43% | 400 |
| 4 | 63 | 18 | 1728 | 108864 | 1.25% | 210 |
| 5 | 54 | 21 | 2016 | 108864 | 1.25% | 210 |
| 6 | 42 | 27 | 2592 | 108864 | 1.25% | 210 |
| 7 | 27 | 42 | 4032 | 108864 | 1.25% | 210 |
| 8 | 21 | 54 | 5184 | 108864 | 1.25% | 210 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 9 | 18 | 63 | 6048 | 108864 | 1.25% | 210 |
| 10 | 16 | 71 | 6816 | 109056 | 1.43% | 400 |
| 11 | 14 | 81 | 7776 | 108864 | 1.25% | 210 |
| 12 | 11 | 103 | 9888 | 108768 | 1.16% | 115 |
| 13 | 9 | 126 | 12096 | 108864 | 1.25% | 210 |
| 14 | 8 | 142 | 13632 | 109056 | 1.43% | 400 |
| 15 | 7 | 162 | 15552 | 108864 | 1.25% | 210 |
| 16 | 6 | 189 | 18144 | 108864 | 1.25% | 210 |
| 17 | 5 | 227 | 21792 | 108960 | 1.34% | 305 |
| 18 | 4 | 283 | 27168 | 108672 | 1.07% | 20 |
| 19 | 4 | 284 | 27264 | 109056 | 1.43% | 400 |
| 20 | 3 | 378 | 36288 | 108864 | 1.25% | 210 |

Considering that the quantity $N_{TS}$ of training symbols is not greater than 11, Table 66 may be obtained with reference to Table 65. In this case, a frame overhead OH of a super-frame architecture in cases listed in Table 66 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 66.

Table 66

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 54 | 21 | 2016 | 108864 | 1.25% | 2 | 156 |
| 2 | 42 | 27 | 2592 | 108864 | 1.25% | 2 | 168 |
| 3 | 18 | 63 | 6048 | 108864 | 1.25% | 2 | 192 |
| 4 | 16 | 71 | 6816 | 109056 | 1.43% | 2 | 384 |
| 5 | 14 | 81 | 7776 | 108864 | 1.25% | 2 | 196 |
| 6 | 11 | 103 | 9888 | 108768 | 1.16% | 2 | 104 |
| 7 | 6 | 189 | 18144 | 108864 | 1.25% | 2 | 204 |
| 8 | 5 | 227 | 21792 | 108960 | 1.34% | 2 | 300 |
| 9 | 81 | 14 | 1344 | 108864 | 1.25% | 3 | 48 |
| 10 | 71 | 16 | 1536 | 109056 | 1.43% | 3 | 258 |
| 11 | 63 | 18 | 1728 | 108864 | 1.25% | 3 | 84 |
| 12 | 27 | 42 | 4032 | 108864 | 1.25% | 3 | 156 |
| 13 | 21 | 54 | 5184 | 108864 | 1.25% | 3 | 168 |
| 14 | 9 | 126 | 12096 | 108864 | 1.25% | 3 | 192 |
| 15 | 8 | 142 | 13632 | 109056 | 1.43% | 3 | 384 |
| 16 | 7 | 162 | 15552 | 108864 | 1.25% | 3 | 196 |
| 17 | 4 | 284 | 27264 | 109056 | 1.43% | 3 | 392 |
| 18 | 3 | 378 | 36288 | 108864 | 1.25% | 3 | 204 |
| 19 | 54 | 21 | 2016 | 108864 | 1.25% | 4 | 48 |
| 20 | 42 | 27 | 2592 | 108864 | 1.25% | 4 | 84 |
| 21 | 18 | 63 | 6048 | 108864 | 1.25% | 4 | 156 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 22 | 16 | 71 | 6816 | 109056 | 1.43% | 4 | 352 |
| 23 | 14 | 81 | 7776 | 108864 | 1.25% | 4 | 168 |
| 24 | 11 | 103 | 9888 | 108768 | 1.16% | 4 | 82 |
| 25 | 6 | 189 | 18144 | 108864 | 1.25% | 4 | 192 |
| 26 | 5 | 227 | 21792 | 108960 | 1.34% | 4 | 290 |
| 27 | 71 | 16 | 1536 | 109056 | 1.43% | 5 | 116 |
| 28 | 27 | 42 | 4032 | 108864 | 1.25% | 5 | 102 |
| 29 | 21 | 54 | 5184 | 108864 | 1.25% | 5 | 126 |
| 30 | 9 | 126 | 12096 | 108864 | 1.25% | 5 | 174 |
| 31 | 8 | 142 | 13632 | 109056 | 1.43% | 5 | 368 |
| 32 | 7 | 162 | 15552 | 108864 | 1.25% | 5 | 182 |
| 33 | 4 | 284 | 27264 | 109056 | 1.43% | 5 | 384 |
| 34 | 3 | 378 | 36288 | 108864 | 1.25% | 5 | 198 |
| 35 | 18 | 63 | 6048 | 108864 | 1.25% | 6 | 120 |
| 36 | 16 | 71 | 6816 | 109056 | 1.43% | 6 | 320 |
| 37 | 14 | 81 | 7776 | 108864 | 1.25% | 6 | 140 |
| 38 | 11 | 103 | 9888 | 108768 | 1.16% | 6 | 60 |
| 39 | 6 | 189 | 18144 | 108864 | 1.25% | 6 | 180 |
| 40 | 5 | 227 | 21792 | 108960 | 1.34% | 6 | 280 |
| 41 | 27 | 42 | 4032 | 108864 | 1.25% | 7 | 48 |
| 42 | 21 | 54 | 5184 | 108864 | 1.25% | 7 | 84 |
| 43 | 9 | 126 | 12096 | 108864 | 1.25% | 7 | 156 |
| 44 | 8 | 142 | 13632 | 109056 | 1.43% | 7 | 352 |
| 45 | 7 | 162 | 15552 | 108864 | 1.25% | 7 | 168 |
| 46 | 4 | 284 | 27264 | 109056 | 1.43% | 7 | 376 |
| 47 | 3 | 378 | 36288 | 108864 | 1.25% | 7 | 192 |
| 48 | 18 | 63 | 6048 | 108864 | 1.25% | 8 | 84 |
| 49 | 16 | 71 | 6816 | 109056 | 1.43% | 8 | 288 |
| 50 | 14 | 81 | 7776 | 108864 | 1.25% | 8 | 112 |
| 51 | 11 | 103 | 9888 | 108768 | 1.16% | 8 | 38 |
| 52 | 6 | 189 | 18144 | 108864 | 1.25% | 8 | 168 |
| 53 | 5 | 227 | 21792 | 108960 | 1.34% | 8 | 270 |
| 54 | 21 | 54 | 5184 | 108864 | 1.25% | 9 | 42 |
| 55 | 9 | 126 | 12096 | 108864 | 1.25% | 9 | 138 |
| 56 | 8 | 142 | 13632 | 109056 | 1.43% | 9 | 336 |
| 57 | 7 | 162 | 15552 | 108864 | 1.25% | 9 | 154 |
| 58 | 4 | 284 | 27264 | 109056 | 1.43% | 9 | 368 |
| 59 | 3 | 378 | 36288 | 108864 | 1.25% | 9 | 186 |
| 60 | 18 | 63 | 6048 | 108864 | 1.25% | 10 | 48 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 61 | 16 | 71 | 6816 | 109056 | 1.43% | 10 | 256 |
| 62 | 14 | 81 | 7776 | 108864 | 1.25% | 10 | 84 |
| 63 | 6 | 189 | 18144 | 108864 | 1.25% | 10 | 156 |
| 64 | 5 | 227 | 21792 | 108960 | 1.34% | 10 | 260 |
| 65 | 9 | 126 | 12096 | 108864 | 1.25% | 11 | 120 |
| 66 | 8 | 142 | 13632 | 109056 | 1.43% | 11 | 320 |
| 67 | 7 | 162 | 15552 | 108864 | 1.25% | 11 | 140 |
| 68 | 4 | 284 | 27264 | 109056 | 1.43% | 11 | 360 |
| 69 | 3 | 378 | 36288 | 108864 | 1.25% | 11 | 180 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 67 may be obtained with reference to Table 66. In this case, a frame overhead OH in cases listed in Table 67 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 67.

Table 67

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 16 | 71 | 6816 | 109056 | 1.43% | 2 | 384 |
| 2 | 71 | 16 | 1536 | 109056 | 1.43% | 3 | 258 |
| 3 | 8 | 142 | 13632 | 109056 | 1.43% | 3 | 384 |
| 4 | 4 | 284 | 27264 | 109056 | 1.43% | 3 | 392 |
| 5 | 16 | 71 | 6816 | 109056 | 1.43% | 4 | 352 |
| 6 | 71 | 16 | 1536 | 109056 | 1.43% | 5 | 116 |
| 7 | 8 | 142 | 13632 | 109056 | 1.43% | 5 | 368 |
| 8 | 4 | 284 | 27264 | 109056 | 1.43% | 5 | 384 |
| 9 | 16 | 71 | 6816 | 109056 | 1.43% | 6 | 320 |
| 10 | 8 | 142 | 13632 | 109056 | 1.43% | 7 | 352 |
| 11 | 4 | 284 | 27264 | 109056 | 1.43% | 7 | 376 |
| 12 | 16 | 71 | 6816 | 109056 | 1.43% | 8 | 288 |
| 13 | 8 | 142 | 13632 | 109056 | 1.43% | 9 | 336 |
| 14 | 4 | 284 | 27264 | 109056 | 1.43% | 9 | 368 |
| 15 | 16 | 71 | 6816 | 109056 | 1.43% | 10 | 256 |
| 16 | 8 | 142 | 13632 | 109056 | 1.43% | 11 | 320 |
| 17 | 4 | 284 | 27264 | 109056 | 1.43% | 11 | 360 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of

EP 4 773 530 A1

192 or 128. Considering that the quantity $N_S$ of symbols in each sub-frame is an integer multiple of 192 and 128, Table 68 may be obtained with reference to Table 67. In this case, a frame overhead OH in cases listed in Table 68 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 68

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 71 | 16 | 1536 | 109056 | 1.43% | 3 | 258 |
| 2 | 4 | 284 | 27264 | 109056 | 1.43% | 3 | 392 |
| 3 | 71 | 16 | 1536 | 109056 | 1.43% | 5 | 116 |
| 4 | 4 | 284 | 27264 | 109056 | 1.43% | 5 | 384 |
| 5 | 4 | 284 | 27264 | 109056 | 1.43% | 7 | 376 |
| 6 | 4 | 284 | 27264 | 109056 | 1.43% | 9 | 368 |
| 7 | 4 | 284 | 27264 | 109056 | 1.43% | 11 | 360 |

(19) The quantity $N_{CW}$ of symbols before framing is 175616. For example, a CFEC encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 68. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 69 is low: OH<1.50%. In Table 69, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 69.

Table 69

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 185 | 10 | 960 | 177600 | 1.13% | 134 |
| 2 | 116 | 16 | 1536 | 178176 | 1.46% | 704 |
| 3 | 109 | 17 | 1632 | 177888 | 1.29% | 419 |
| 4 | 103 | 18 | 1728 | 177984 | 1.35% | 514 |
| 5 | 74 | 25 | 2400 | 177600 | 1.13% | 134 |
| 6 | 64 | 29 | 2784 | 178176 | 1.46% | 704 |
| 7 | 58 | 32 | 3072 | 178176 | 1.46% | 704 |
| 8 | 53 | 35 | 3360 | 178080 | 1.40% | 609 |
| 9 | 50 | 37 | 3552 | 177600 | 1.13% | 134 |
| 10 | 43 | 43 | 4128 | 177504 | 1.08% | 39 |
| 11 | 37 | 50 | 4800 | 177600 | 1.13% | 134 |
| 12 | 35 | 53 | 5088 | 178080 | 1.40% | 609 |
| 13 | 32 | 58 | 5568 | 178176 | 1.46% | 704 |
| 14 | 29 | 64 | 6144 | 178176 | 1.46% | 704 |
| 15 | 25 | 74 | 7104 | 177600 | 1.13% | 134 |
| 16 | 18 | 103 | 9888 | 177984 | 1.35% | 514 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 17 | 17 | 109 | 10464 | 177888 | 1.29% | 419 |
| 18 | 16 | 116 | 11136 | 178176 | 1.46% | 704 |
| 19 | 10 | 185 | 17760 | 177600 | 1.13% | 134 |
| 20 | 9 | 206 | 19776 | 177984 | 1.35% | 514 |
| 21 | 8 | 232 | 22272 | 178176 | 1.46% | 704 |
| 22 | 7 | 265 | 25440 | 178080 | 1.40% | 609 |
| 23 | 6 | 309 | 29664 | 177984 | 1.35% | 514 |
| 24 | 5 | 370 | 35520 | 177600 | 1.13% | 134 |
| 25 | 5 | 371 | 35616 | 178080 | 1.40% | 609 |

Considering that the quantity $N_{TS}$ of training symbols is not greater than 11, Table 70 may be obtained with reference to Table 69. In this case, a frame overhead OH of a super-frame architecture in cases listed in Table 70 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 70.

Table 70

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 109 | 17 | 1632 | 177888 | 1.29% | 2 | 310 |
| 2 | 74 | 25 | 2400 | 177600 | 1.13% | 2 | 60 |
| 3 | 64 | 29 | 2784 | 178176 | 1.46% | 2 | 640 |
| 4 | 53 | 35 | 3360 | 178080 | 1.40% | 2 | 556 |
| 5 | 50 | 37 | 3552 | 177600 | 1.13% | 2 | 84 |
| 6 | 35 | 53 | 5088 | 178080 | 1.40% | 2 | 574 |
| 7 | 18 | 103 | 9888 | 177984 | 1.35% | 2 | 496 |
| 8 | 17 | 109 | 10464 | 177888 | 1.29% | 2 | 402 |
| 9 | 10 | 185 | 17760 | 177600 | 1.13% | 2 | 124 |
| 10 | 7 | 265 | 25440 | 178080 | 1.40% | 2 | 602 |
| 11 | 6 | 309 | 29664 | 177984 | 1.35% | 2 | 508 |
| 12 | 5 | 371 | 35616 | 178080 | 1.40% | 2 | 604 |
| 13 | 116 | 16 | 1536 | 178176 | 1.46% | 3 | 472 |
| 14 | 103 | 18 | 1728 | 177984 | 1.35% | 3 | 308 |
| 15 | 58 | 32 | 3072 | 178176 | 1.46% | 3 | 588 |
| 16 | 37 | 50 | 4800 | 177600 | 1.13% | 3 | 60 |
| 17 | 32 | 58 | 5568 | 178176 | 1.46% | 3 | 640 |
| 18 | 29 | 64 | 6144 | 178176 | 1.46% | 3 | 646 |
| 19 | 25 | 74 | 7104 | 177600 | 1.13% | 3 | 84 |
| 20 | 16 | 116 | 11136 | 178176 | 1.46% | 3 | 672 |
| 21 | 9 | 206 | 19776 | 177984 | 1.35% | 3 | 496 |
| 22 | 8 | 232 | 22272 | 178176 | 1.46% | 3 | 688 |
| 23 | 5 | 370 | 35520 | 177600 | 1.13% | 3 | 124 |
| 24 | 109 | 17 | 1632 | 177888 | 1.29% | 4 | 92 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 25 | 64 | 29 | 2784 | 178176 | 1.46% | 4 | 512 |
| 26 | 53 | 35 | 3360 | 178080 | 1.40% | 4 | 450 |
| 27 | 35 | 53 | 5088 | 178080 | 1.40% | 4 | 504 |
| 28 | 18 | 103 | 9888 | 177984 | 1.35% | 4 | 460 |
| 29 | 17 | 109 | 10464 | 177888 | 1.29% | 4 | 368 |
| 30 | 10 | 185 | 17760 | 177600 | 1.13% | 4 | 104 |
| 31 | 7 | 265 | 25440 | 178080 | 1.40% | 4 | 588 |
| 32 | 6 | 309 | 29664 | 177984 | 1.35% | 4 | 496 |
| 33 | 5 | 371 | 35616 | 178080 | 1.40% | 4 | 594 |
| 34 | 116 | 16 | 1536 | 178176 | 1.46% | 5 | 240 |
| 35 | 103 | 18 | 1728 | 177984 | 1.35% | 5 | 102 |
| 36 | 58 | 32 | 3072 | 178176 | 1.46% | 5 | 472 |
| 37 | 32 | 58 | 5568 | 178176 | 1.46% | 5 | 576 |
| 38 | 29 | 64 | 6144 | 178176 | 1.46% | 5 | 588 |
| 39 | 25 | 74 | 7104 | 177600 | 1.13% | 5 | 34 |
| 40 | 16 | 116 | 11136 | 178176 | 1.46% | 5 | 640 |
| 41 | 9 | 206 | 19776 | 177984 | 1.35% | 5 | 478 |
| 42 | 8 | 232 | 22272 | 178176 | 1.46% | 5 | 672 |
| 43 | 5 | 370 | 35520 | 177600 | 1.13% | 5 | 114 |
| 44 | 64 | 29 | 2784 | 178176 | 1.46% | 6 | 384 |
| 45 | 53 | 35 | 3360 | 178080 | 1.40% | 6 | 344 |
| 46 | 35 | 53 | 5088 | 178080 | 1.40% | 6 | 434 |
| 47 | 18 | 103 | 9888 | 177984 | 1.35% | 6 | 424 |
| 48 | 17 | 109 | 10464 | 177888 | 1.29% | 6 | 334 |
| 49 | 10 | 185 | 17760 | 177600 | 1.13% | 6 | 84 |
| 50 | 7 | 265 | 25440 | 178080 | 1.40% | 6 | 574 |
| 51 | 6 | 309 | 29664 | 177984 | 1.35% | 6 | 484 |
| 52 | 5 | 371 | 35616 | 178080 | 1.40% | 6 | 584 |
| 53 | 58 | 32 | 3072 | 178176 | 1.46% | 7 | 356 |
| 54 | 32 | 58 | 5568 | 178176 | 1.46% | 7 | 512 |
| 55 | 29 | 64 | 6144 | 178176 | 1.46% | 7 | 530 |
| 56 | 16 | 116 | 11136 | 178176 | 1.46% | 7 | 608 |
| 57 | 9 | 206 | 19776 | 177984 | 1.35% | 7 | 460 |
| 58 | 8 | 232 | 22272 | 178176 | 1.46% | 7 | 656 |
| 59 | 5 | 370 | 35520 | 177600 | 1.13% | 7 | 104 |
| 60 | 64 | 29 | 2784 | 178176 | 1.46% | 8 | 256 |
| 61 | 53 | 35 | 3360 | 178080 | 1.40% | 8 | 238 |
| 62 | 35 | 53 | 5088 | 178080 | 1.40% | 8 | 364 |
| 63 | 18 | 103 | 9888 | 177984 | 1.35% | 8 | 388 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 64 | 17 | 109 | 10464 | 177888 | 1.29% | 8 | 300 |
| 65 | 10 | 185 | 17760 | 177600 | 1.13% | 8 | 64 |
| 66 | 7 | 265 | 25440 | 178080 | 1.40% | 8 | 560 |
| 67 | 6 | 309 | 29664 | 177984 | 1.35% | 8 | 472 |
| 68 | 5 | 371 | 35616 | 178080 | 1.40% | 8 | 574 |
| 69 | 58 | 32 | 3072 | 178176 | 1.46% | 9 | 240 |
| 70 | 32 | 58 | 5568 | 178176 | 1.46% | 9 | 448 |
| 71 | 29 | 64 | 6144 | 178176 | 1.46% | 9 | 472 |
| 72 | 16 | 116 | 11136 | 178176 | 1.46% | 9 | 576 |
| 73 | 9 | 206 | 19776 | 177984 | 1.35% | 9 | 442 |
| 74 | 8 | 232 | 22272 | 178176 | 1.46% | 9 | 640 |
| 75 | 5 | 370 | 35520 | 177600 | 1.13% | 9 | 94 |
| 76 | 64 | 29 | 2784 | 178176 | 1.46% | 10 | 128 |
| 77 | 53 | 35 | 3360 | 178080 | 1.40% | 10 | 132 |
| 78 | 35 | 53 | 5088 | 178080 | 1.40% | 10 | 294 |
| 79 | 18 | 103 | 9888 | 177984 | 1.35% | 10 | 352 |
| 80 | 17 | 109 | 10464 | 177888 | 1.29% | 10 | 266 |
| 81 | 10 | 185 | 17760 | 177600 | 1.13% | 10 | 44 |
| 82 | 7 | 265 | 25440 | 178080 | 1.40% | 10 | 546 |
| 83 | 6 | 309 | 29664 | 177984 | 1.35% | 10 | 460 |
| 84 | 5 | 371 | 35616 | 178080 | 1.40% | 10 | 564 |
| 85 | 58 | 32 | 3072 | 178176 | 1.46% | 11 | 124 |
| 86 | 32 | 58 | 5568 | 178176 | 1.46% | 11 | 384 |
| 87 | 29 | 64 | 6144 | 178176 | 1.46% | 11 | 414 |
| 88 | 16 | 116 | 11136 | 178176 | 1.46% | 11 | 544 |
| 89 | 9 | 206 | 19776 | 177984 | 1.35% | 11 | 424 |
| 90 | 8 | 232 | 22272 | 178176 | 1.46% | 11 | 624 |
| 91 | 5 | 370 | 35520 | 177600 | 1.13% | 11 | 84 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 71 may be obtained with reference to Table 70. In this case, a frame overhead OH in cases listed in Table 71 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 71.

Table 71

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 64 | 29 | 2784 | 178176 | 1.46% | 2 | 640 |
| 2 | 116 | 16 | 1536 | 178176 | 1.46% | 3 | 472 |
| 3 | 58 | 32 | 3072 | 178176 | 1.46% | 3 | 588 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 4 | 32 | 58 | 5568 | 178176 | 1.46% | 3 | 640 |
| 5 | 29 | 64 | 6144 | 178176 | 1.46% | 3 | 646 |
| 6 | 16 | 116 | 11136 | 178176 | 1.46% | 3 | 672 |
| 7 | 8 | 232 | 22272 | 178176 | 1.46% | 3 | 688 |
| 8 | 64 | 29 | 2784 | 178176 | 1.46% | 4 | 512 |
| 9 | 116 | 16 | 1536 | 178176 | 1.46% | 5 | 240 |
| 10 | 58 | 32 | 3072 | 178176 | 1.46% | 5 | 472 |
| 11 | 32 | 58 | 5568 | 178176 | 1.46% | 5 | 576 |
| 12 | 29 | 64 | 6144 | 178176 | 1.46% | 5 | 588 |
| 13 | 16 | 116 | 11136 | 178176 | 1.46% | 5 | 640 |
| 14 | 8 | 232 | 22272 | 178176 | 1.46% | 5 | 672 |
| 15 | 64 | 29 | 2784 | 178176 | 1.46% | 6 | 384 |
| 16 | 58 | 32 | 3072 | 178176 | 1.46% | 7 | 356 |
| 17 | 32 | 58 | 5568 | 178176 | 1.46% | 7 | 512 |
| 18 | 29 | 64 | 6144 | 178176 | 1.46% | 7 | 530 |
| 19 | 16 | 116 | 11136 | 178176 | 1.46% | 7 | 608 |
| 20 | 8 | 232 | 22272 | 178176 | 1.46% | 7 | 656 |
| 21 | 64 | 29 | 2784 | 178176 | 1.46% | 8 | 256 |
| 22 | 58 | 32 | 3072 | 178176 | 1.46% | 9 | 240 |
| 23 | 32 | 58 | 5568 | 178176 | 1.46% | 9 | 448 |
| 24 | 29 | 64 | 6144 | 178176 | 1.46% | 9 | 472 |
| 25 | 16 | 116 | 11136 | 178176 | 1.46% | 9 | 576 |
| 26 | 8 | 232 | 22272 | 178176 | 1.46% | 9 | 640 |
| 27 | 64 | 29 | 2784 | 178176 | 1.46% | 10 | 128 |
| 28 | 58 | 32 | 3072 | 178176 | 1.46% | 11 | 124 |
| 29 | 32 | 58 | 5568 | 178176 | 1.46% | 11 | 384 |
| 30 | 29 | 64 | 6144 | 178176 | 1.46% | 11 | 414 |
| 31 | 16 | 116 | 11136 | 178176 | 1.46% | 11 | 544 |
| 32 | 8 | 232 | 22272 | 178176 | 1.46% | 11 | 624 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 72 may be obtained with reference to Table 71. In this case, a frame overhead OH in cases listed in Table 72 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 72

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 116 | 16 | 1536 | 178176 | 1.46% | 3 | 472 |
| 2 | 58 | 32 | 3072 | 178176 | 1.46% | 3 | 588 |
| 3 | 29 | 64 | 6144 | 178176 | 1.46% | 3 | 646 |
| 4 | 16 | 116 | 11136 | 178176 | 1.46% | 3 | 672 |
| 5 | 8 | 232 | 22272 | 178176 | 1.46% | 3 | 688 |
| 6 | 116 | 16 | 1536 | 178176 | 1.46% | 5 | 240 |
| 7 | 58 | 32 | 3072 | 178176 | 1.46% | 5 | 472 |
| 8 | 29 | 64 | 6144 | 178176 | 1.46% | 5 | 588 |
| 9 | 16 | 116 | 11136 | 178176 | 1.46% | 5 | 640 |
| 10 | 8 | 232 | 22272 | 178176 | 1.46% | 5 | 672 |
| 11 | 58 | 32 | 3072 | 178176 | 1.46% | 7 | 356 |
| 12 | 29 | 64 | 6144 | 178176 | 1.46% | 7 | 530 |
| 13 | 16 | 116 | 11136 | 178176 | 1.46% | 7 | 608 |
| 14 | 8 | 232 | 22272 | 178176 | 1.46% | 7 | 656 |
| 15 | 58 | 32 | 3072 | 178176 | 1.46% | 9 | 240 |
| 16 | 29 | 64 | 6144 | 178176 | 1.46% | 9 | 472 |
| 17 | 16 | 116 | 11136 | 178176 | 1.46% | 9 | 576 |
| 18 | 8 | 232 | 22272 | 178176 | 1.46% | 9 | 640 |
| 19 | 58 | 32 | 3072 | 178176 | 1.46% | 11 | 124 |
| 20 | 29 | 64 | 6144 | 178176 | 1.46% | 11 | 414 |
| 21 | 16 | 116 | 11136 | 178176 | 1.46% | 11 | 544 |
| 22 | 8 | 232 | 22272 | 178176 | 1.46% | 11 | 624 |

(20) The quantity $N_{CW}$ of symbols before framing is 351232. For example, a CFEC encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 73. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 73 is low: OH<1.50%. In Table 73, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 73.

Table 73

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 370 | 10 | 960 | 355200 | 1.13% | 268 |
| 2 | 337 | 11 | 1056 | 355872 | 1.32% | 933 |
| 3 | 309 | 12 | 1152 | 355968 | 1.35% | 1028 |
| 4 | 285 | 13 | 1248 | 355680 | 1.27% | 743 |
| 5 | 265 | 14 | 1344 | 356160 | 1.40% | 1218 |

(continued)

| Sequence number | $N_{SF}$ | $N_{PS}$ | $N_S$ | $N_F$ | OH | $N_{TS,TOT}+N_{FAW}+N_{RES}$ |
|---|---|---|---|---|---|---|
| 6 | 247 | 15 | 1440 | 355680 | 1.27% | 743 |
| 7 | 232 | 16 | 1536 | 356352 | 1.46% | 1408 |
| 8 | 218 | 17 | 1632 | 355776 | 1.29% | 838 |
| 9 | 206 | 18 | 1728 | 355968 | 1.35% | 1028 |
| 10 | 195 | 19 | 1824 | 355680 | 1.27% | 743 |
| 11 | 185 | 20 | 1920 | 355200 | 1.13% | 268 |
| 12 | 161 | 23 | 2208 | 355488 | 1.21% | 553 |
| 13 | 148 | 25 | 2400 | 355200 | 1.13% | 268 |
| 14 | 137 | 27 | 2592 | 355104 | 1.10% | 173 |
| 15 | 128 | 29 | 2784 | 356352 | 1.46% | 1408 |
| 16 | 116 | 32 | 3072 | 356352 | 1.46% | 1408 |
| 17 | 109 | 34 | 3264 | 355776 | 1.29% | 838 |
| 18 | 106 | 35 | 3360 | 356160 | 1.40% | 1218 |
| 19 | 103 | 36 | 3456 | 355968 | 1.35% | 1028 |
| 20 | 100 | 37 | 3552 | 355200 | 1.13% | 268 |
| 21 | 95 | 39 | 3744 | 355680 | 1.27% | 743 |
| 22 | 86 | 43 | 4128 | 355008 | 1.08% | 78 |
| 23 | 79 | 47 | 4512 | 356448 | 1.49% | 1503 |
| 24 | 74 | 50 | 4800 | 355200 | 1.13% | 268 |
| 25 | 70 | 53 | 5088 | 356160 | 1.40% | 1218 |
| 26 | 65 | 57 | 5472 | 355680 | 1.27% | 743 |
| 27 | 64 | 58 | 5568 | 356352 | 1.46% | 1408 |
| 28 | 58 | 64 | 6144 | 356352 | 1.46% | 1408 |
| 29 | 57 | 65 | 6240 | 355680 | 1.27% | 743 |
| 30 | 53 | 70 | 6720 | 356160 | 1.40% | 1218 |
| 31 | 50 | 74 | 7104 | 355200 | 1.13% | 268 |
| 32 | 47 | 79 | 7584 | 356448 | 1.49% | 1503 |
| 33 | 43 | 86 | 8256 | 355008 | 1.08% | 78 |
| 34 | 39 | 95 | 9120 | 355680 | 1.27% | 743 |
| 35 | 37 | 100 | 9600 | 355200 | 1.13% | 268 |
| 36 | 36 | 103 | 9888 | 355968 | 1.35% | 1028 |
| 37 | 35 | 106 | 10176 | 356160 | 1.40% | 1218 |
| 38 | 34 | 109 | 10464 | 355776 | 1.29% | 838 |
| 39 | 32 | 116 | 11136 | 356352 | 1.46% | 1408 |
| 40 | 29 | 128 | 12288 | 356352 | 1.46% | 1408 |
| 41 | 27 | 137 | 13152 | 355104 | 1.10% | 173 |
| 42 | 25 | 148 | 14208 | 355200 | 1.13% | 268 |
| 43 | 23 | 161 | 15456 | 355488 | 1.21% | 553 |
| 44 | 20 | 185 | 17760 | 355200 | 1.13% | 268 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 45 | 19 | 195 | 18720 | 355680 | 1.27% | 743 |
| 46 | 18 | 206 | 19776 | 355968 | 1.35% | 1028 |
| 47 | 17 | 218 | 20928 | 355776 | 1.29% | 838 |
| 48 | 16 | 232 | 22272 | 356352 | 1.46% | 1408 |
| 49 | 15 | 247 | 23712 | 355680 | 1.27% | 743 |
| 50 | 14 | 265 | 25440 | 356160 | 1.40% | 1218 |
| 51 | 13 | 285 | 27360 | 355680 | 1.27% | 743 |
| 52 | 12 | 309 | 29664 | 355968 | 1.35% | 1028 |
| 53 | 11 | 337 | 32352 | 355872 | 1.32% | 933 |
| 54 | 10 | 370 | 35520 | 355200 | 1.13% | 268 |
| 55 | 10 | 371 | 35616 | 356160 | 1.40% | 1218 |

Considering that the quantity $N_{TS}$ of training symbols is not greater than 11, Table 74 may be obtained with reference to Table 73. In this case, a frame overhead OH of a super-frame architecture in cases listed in Table 74 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 74.

Table 74

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 337 | 11 | 1056 | 355872 | 1.32% | 2 | 596 |
| 2 | 285 | 13 | 1248 | 355680 | 1.27% | 2 | 458 |
| 3 | 247 | 15 | 1440 | 355680 | 1.27% | 2 | 496 |
| 4 | 218 | 17 | 1632 | 355776 | 1.29% | 2 | 620 |
| 5 | 195 | 19 | 1824 | 355680 | 1.27% | 2 | 548 |
| 6 | 161 | 23 | 2208 | 355488 | 1.21% | 2 | 392 |
| 7 | 148 | 25 | 2400 | 355200 | 1.13% | 2 | 120 |
| 8 | 137 | 27 | 2592 | 355104 | 1.10% | 2 | 36 |
| 9 | 128 | 29 | 2784 | 356352 | 1.46% | 2 | 1280 |
| 10 | 106 | 35 | 3360 | 356160 | 1.40% | 2 | 1112 |
| 11 | 100 | 37 | 3552 | 355200 | 1.13% | 2 | 168 |
| 12 | 95 | 39 | 3744 | 355680 | 1.27% | 2 | 648 |
| 13 | 79 | 47 | 4512 | 356448 | 1.49% | 2 | 1424 |
| 14 | 70 | 53 | 5088 | 356160 | 1.40% | 2 | 1148 |
| 15 | 65 | 57 | 5472 | 355680 | 1.27% | 2 | 678 |
| 16 | 57 | 65 | 6240 | 355680 | 1.27% | 2 | 686 |
| 17 | 47 | 79 | 7584 | 356448 | 1.49% | 2 | 1456 |
| 18 | 39 | 95 | 9120 | 355680 | 1.27% | 2 | 704 |
| 19 | 36 | 103 | 9888 | 355968 | 1.35% | 2 | 992 |
| 20 | 34 | 109 | 10464 | 355776 | 1.29% | 2 | 804 |
| 21 | 27 | 137 | 13152 | 355104 | 1.10% | 2 | 146 |
| 22 | 23 | 161 | 15456 | 355488 | 1.21% | 2 | 530 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 23 | 20 | 185 | 17760 | 355200 | 1.13% | 2 | 248 |
| 24 | 19 | 195 | 18720 | 355680 | 1.27% | 2 | 724 |
| 25 | 15 | 247 | 23712 | 355680 | 1.27% | 2 | 728 |
| 26 | 14 | 265 | 25440 | 356160 | 1.40% | 2 | 1204 |
| 27 | 13 | 285 | 27360 | 355680 | 1.27% | 2 | 730 |
| 28 | 12 | 309 | 29664 | 355968 | 1.35% | 2 | 1016 |
| 29 | 11 | 337 | 32352 | 355872 | 1.32% | 2 | 922 |
| 30 | 10 | 371 | 35616 | 356160 | 1.40% | 2 | 1208 |
| 31 | 371 | 10 | 960 | 356160 | 1.40% | 3 | 476 |
| 32 | 309 | 12 | 1152 | 355968 | 1.35% | 3 | 410 |
| 33 | 265 | 14 | 1344 | 356160 | 1.40% | 3 | 688 |
| 34 | 232 | 16 | 1536 | 356352 | 1.46% | 3 | 944 |
| 35 | 206 | 18 | 1728 | 355968 | 1.35% | 3 | 616 |
| 36 | 116 | 32 | 3072 | 356352 | 1.46% | 3 | 1176 |
| 37 | 109 | 34 | 3264 | 355776 | 1.29% | 3 | 620 |
| 38 | 103 | 36 | 3456 | 355968 | 1.35% | 3 | 822 |
| 39 | 74 | 50 | 4800 | 355200 | 1.13% | 3 | 120 |
| 40 | 64 | 58 | 5568 | 356352 | 1.46% | 3 | 1280 |
| 41 | 58 | 64 | 6144 | 356352 | 1.46% | 3 | 1292 |
| 42 | 53 | 70 | 6720 | 356160 | 1.40% | 3 | 1112 |
| 43 | 50 | 74 | 7104 | 355200 | 1.13% | 3 | 168 |
| 44 | 37 | 100 | 9600 | 355200 | 1.13% | 3 | 194 |
| 45 | 35 | 106 | 10176 | 356160 | 1.40% | 3 | 1148 |
| 46 | 32 | 116 | 11136 | 356352 | 1.46% | 3 | 1344 |
| 47 | 29 | 128 | 12288 | 356352 | 1.46% | 3 | 1350 |
| 48 | 25 | 148 | 14208 | 355200 | 1.13% | 3 | 218 |
| 49 | 18 | 206 | 19776 | 355968 | 1.35% | 3 | 992 |
| 50 | 17 | 218 | 20928 | 355776 | 1.29% | 3 | 804 |
| 51 | 16 | 232 | 22272 | 356352 | 1.46% | 3 | 1376 |
| 52 | 10 | 370 | 35520 | 355200 | 1.13% | 3 | 248 |
| 53 | 218 | 17 | 1632 | 355776 | 1.29% | 4 | 184 |
| 54 | 195 | 19 | 1824 | 355680 | 1.27% | 4 | 158 |
| 55 | 161 | 23 | 2208 | 355488 | 1.21% | 4 | 70 |
| 56 | 128 | 29 | 2784 | 356352 | 1.46% | 4 | 1024 |
| 57 | 106 | 35 | 3360 | 356160 | 1.40% | 4 | 900 |
| 58 | 95 | 39 | 3744 | 355680 | 1.27% | 4 | 458 |
| 59 | 79 | 47 | 4512 | 356448 | 1.49% | 4 | 1266 |
| 60 | 70 | 53 | 5088 | 356160 | 1.40% | 4 | 1008 |
| 61 | 65 | 57 | 5472 | 355680 | 1.27% | 4 | 548 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 62 | 57 | 65 | 6240 | 355680 | 1.27% | 4 | 572 |
| 63 | 47 | 79 | 7584 | 356448 | 1.49% | 4 | 1362 |
| 64 | 39 | 95 | 9120 | 355680 | 1.27% | 4 | 626 |
| 65 | 36 | 103 | 9888 | 355968 | 1.35% | 4 | 920 |
| 66 | 34 | 109 | 10464 | 355776 | 1.29% | 4 | 736 |
| 67 | 27 | 137 | 13152 | 355104 | 1.10% | 4 | 92 |
| 68 | 23 | 161 | 15456 | 355488 | 1.21% | 4 | 484 |
| 69 | 20 | 185 | 17760 | 355200 | 1.13% | 4 | 208 |
| 70 | 19 | 195 | 18720 | 355680 | 1.27% | 4 | 686 |
| 71 | 15 | 247 | 23712 | 355680 | 1.27% | 4 | 698 |
| 72 | 14 | 265 | 25440 | 356160 | 1.40% | 4 | 1176 |
| 73 | 13 | 285 | 27360 | 355680 | 1.27% | 4 | 704 |
| 74 | 12 | 309 | 29664 | 355968 | 1.35% | 4 | 992 |
| 75 | 11 | 337 | 32352 | 355872 | 1.32% | 4 | 900 |
| 76 | 10 | 371 | 35616 | 356160 | 1.40% | 4 | 1188 |
| 77 | 265 | 14 | 1344 | 356160 | 1.40% | 5 | 158 |
| 78 | 232 | 16 | 1536 | 356352 | 1.46% | 5 | 480 |
| 79 | 206 | 18 | 1728 | 355968 | 1.35% | 5 | 204 |
| 80 | 116 | 32 | 3072 | 356352 | 1.46% | 5 | 944 |
| 81 | 109 | 34 | 3264 | 355776 | 1.29% | 5 | 402 |
| 82 | 103 | 36 | 3456 | 355968 | 1.35% | 5 | 616 |
| 83 | 64 | 58 | 5568 | 356352 | 1.46% | 5 | 1152 |
| 84 | 58 | 64 | 6144 | 356352 | 1.46% | 5 | 1176 |
| 85 | 53 | 70 | 6720 | 356160 | 1.40% | 5 | 1006 |
| 86 | 50 | 74 | 7104 | 355200 | 1.13% | 5 | 68 |
| 87 | 37 | 100 | 9600 | 355200 | 1.13% | 5 | 120 |
| 88 | 35 | 106 | 10176 | 356160 | 1.40% | 5 | 1078 |
| 89 | 32 | 116 | 11136 | 356352 | 1.46% | 5 | 1280 |
| 90 | 29 | 128 | 12288 | 356352 | 1.46% | 5 | 1292 |
| 91 | 25 | 148 | 14208 | 355200 | 1.13% | 5 | 168 |
| 92 | 18 | 206 | 19776 | 355968 | 1.35% | 5 | 956 |
| 93 | 17 | 218 | 20928 | 355776 | 1.29% | 5 | 770 |
| 94 | 16 | 232 | 22272 | 356352 | 1.46% | 5 | 1344 |
| 95 | 10 | 370 | 35520 | 355200 | 1.13% | 5 | 228 |
| 96 | 128 | 29 | 2784 | 356352 | 1.46% | 6 | 768 |
| 97 | 106 | 35 | 3360 | 356160 | 1.40% | 6 | 688 |
| 98 | 95 | 39 | 3744 | 355680 | 1.27% | 6 | 268 |
| 99 | 79 | 47 | 4512 | 356448 | 1.49% | 6 | 1108 |
| 100 | 70 | 53 | 5088 | 356160 | 1.40% | 6 | 868 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 101 | 65 | 57 | 5472 | 355680 | 1.27% | 6 | 418 |
| 102 | 57 | 65 | 6240 | 355680 | 1.27% | 6 | 458 |
| 103 | 47 | 79 | 7584 | 356448 | 1.49% | 6 | 1268 |
| 104 | 39 | 95 | 9120 | 355680 | 1.27% | 6 | 548 |
| 105 | 36 | 103 | 9888 | 355968 | 1.35% | 6 | 848 |
| 106 | 34 | 109 | 10464 | 355776 | 1.29% | 6 | 668 |
| 107 | 27 | 137 | 13152 | 355104 | 1.10% | 6 | 38 |
| 108 | 23 | 161 | 15456 | 355488 | 1.21% | 6 | 438 |
| 109 | 20 | 185 | 17760 | 355200 | 1.13% | 6 | 168 |
| 110 | 19 | 195 | 18720 | 355680 | 1.27% | 6 | 648 |
| 111 | 15 | 247 | 23712 | 355680 | 1.27% | 6 | 668 |
| 112 | 14 | 265 | 25440 | 356160 | 1.40% | 6 | 1148 |
| 113 | 13 | 285 | 27360 | 355680 | 1.27% | 6 | 678 |
| 114 | 12 | 309 | 29664 | 355968 | 1.35% | 6 | 968 |
| 115 | 11 | 337 | 32352 | 355872 | 1.32% | 6 | 878 |
| 116 | 10 | 371 | 35616 | 356160 | 1.40% | 6 | 1168 |
| 117 | 116 | 32 | 3072 | 356352 | 1.46% | 7 | 712 |
| 118 | 109 | 34 | 3264 | 355776 | 1.29% | 7 | 184 |
| 119 | 103 | 36 | 3456 | 355968 | 1.35% | 7 | 410 |
| 120 | 64 | 58 | 5568 | 356352 | 1.46% | 7 | 1024 |
| 121 | 58 | 64 | 6144 | 356352 | 1.46% | 7 | 1060 |
| 122 | 53 | 70 | 6720 | 356160 | 1.40% | 7 | 900 |
| 123 | 37 | 100 | 9600 | 355200 | 1.13% | 7 | 46 |
| 124 | 35 | 106 | 10176 | 356160 | 1.40% | 7 | 1008 |
| 125 | 32 | 116 | 11136 | 356352 | 1.46% | 7 | 1216 |
| 126 | 29 | 128 | 12288 | 356352 | 1.46% | 7 | 1234 |
| 127 | 25 | 148 | 14208 | 355200 | 1.13% | 7 | 118 |
| 128 | 18 | 206 | 19776 | 355968 | 1.35% | 7 | 920 |
| 129 | 17 | 218 | 20928 | 355776 | 1.29% | 7 | 736 |
| 130 | 16 | 232 | 22272 | 356352 | 1.46% | 7 | 1312 |
| 131 | 10 | 370 | 35520 | 355200 | 1.13% | 7 | 208 |
| 132 | 128 | 29 | 2784 | 356352 | 1.46% | 8 | 512 |
| 133 | 106 | 35 | 3360 | 356160 | 1.40% | 8 | 476 |
| 134 | 95 | 39 | 3744 | 355680 | 1.27% | 8 | 78 |
| 135 | 79 | 47 | 4512 | 356448 | 1.49% | 8 | 950 |
| 136 | 70 | 53 | 5088 | 356160 | 1.40% | 8 | 728 |
| 137 | 65 | 57 | 5472 | 355680 | 1.27% | 8 | 288 |
| 138 | 57 | 65 | 6240 | 355680 | 1.27% | 8 | 344 |
| 139 | 47 | 79 | 7584 | 356448 | 1.49% | 8 | 1174 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 140 | 39 | 95 | 9120 | 355680 | 1.27% | 8 | 470 |
| 141 | 36 | 103 | 9888 | 355968 | 1.35% | 8 | 776 |
| 142 | 34 | 109 | 10464 | 355776 | 1.29% | 8 | 600 |
| 143 | 23 | 161 | 15456 | 355488 | 1.21% | 8 | 392 |
| 144 | 20 | 185 | 17760 | 355200 | 1.13% | 8 | 128 |
| 145 | 19 | 195 | 18720 | 355680 | 1.27% | 8 | 610 |
| 146 | 15 | 247 | 23712 | 355680 | 1.27% | 8 | 638 |
| 147 | 14 | 265 | 25440 | 356160 | 1.40% | 8 | 1120 |
| 148 | 13 | 285 | 27360 | 355680 | 1.27% | 8 | 652 |
| 149 | 12 | 309 | 29664 | 355968 | 1.35% | 8 | 944 |
| 150 | 11 | 337 | 32352 | 355872 | 1.32% | 8 | 856 |
| 151 | 10 | 371 | 35616 | 356160 | 1.40% | 8 | 1148 |
| 152 | 116 | 32 | 3072 | 356352 | 1.46% | 9 | 480 |
| 153 | 103 | 36 | 3456 | 355968 | 1.35% | 9 | 204 |
| 154 | 64 | 58 | 5568 | 356352 | 1.46% | 9 | 896 |
| 155 | 58 | 64 | 6144 | 356352 | 1.46% | 9 | 944 |
| 156 | 53 | 70 | 6720 | 356160 | 1.40% | 9 | 794 |
| 157 | 35 | 106 | 10176 | 356160 | 1.40% | 9 | 938 |
| 158 | 32 | 116 | 11136 | 356352 | 1.46% | 9 | 1152 |
| 159 | 29 | 128 | 12288 | 356352 | 1.46% | 9 | 1176 |
| 160 | 25 | 148 | 14208 | 355200 | 1.13% | 9 | 68 |
| 161 | 18 | 206 | 19776 | 355968 | 1.35% | 9 | 884 |
| 162 | 17 | 218 | 20928 | 355776 | 1.29% | 9 | 702 |
| 163 | 16 | 232 | 22272 | 356352 | 1.46% | 9 | 1280 |
| 164 | 10 | 370 | 35520 | 355200 | 1.13% | 9 | 188 |
| 165 | 128 | 29 | 2784 | 356352 | 1.46% | 10 | 256 |
| 166 | 106 | 35 | 3360 | 356160 | 1.40% | 10 | 264 |
| 167 | 79 | 47 | 4512 | 356448 | 1.49% | 10 | 792 |
| 168 | 70 | 53 | 5088 | 356160 | 1.40% | 10 | 588 |
| 169 | 65 | 57 | 5472 | 355680 | 1.27% | 10 | 158 |
| 170 | 57 | 65 | 6240 | 355680 | 1.27% | 10 | 230 |
| 171 | 47 | 79 | 7584 | 356448 | 1.49% | 10 | 1080 |
| 172 | 39 | 95 | 9120 | 355680 | 1.27% | 10 | 392 |
| 173 | 36 | 103 | 9888 | 355968 | 1.35% | 10 | 704 |
| 174 | 34 | 109 | 10464 | 355776 | 1.29% | 10 | 532 |
| 175 | 23 | 161 | 15456 | 355488 | 1.21% | 10 | 346 |
| 176 | 20 | 185 | 17760 | 355200 | 1.13% | 10 | 88 |
| 177 | 19 | 195 | 18720 | 355680 | 1.27% | 10 | 572 |
| 178 | 15 | 247 | 23712 | 355680 | 1.27% | 10 | 608 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 179 | 14 | 265 | 25440 | 356160 | 1.40% | 10 | 1092 |
| 180 | 13 | 285 | 27360 | 355680 | 1.27% | 10 | 626 |
| 181 | 12 | 309 | 29664 | 355968 | 1.35% | 10 | 920 |
| 182 | 11 | 337 | 32352 | 355872 | 1.32% | 10 | 834 |
| 183 | 10 | 371 | 35616 | 356160 | 1.40% | 10 | 1128 |
| 184 | 116 | 32 | 3072 | 356352 | 1.46% | 11 | 248 |
| 185 | 64 | 58 | 5568 | 356352 | 1.46% | 11 | 768 |
| 186 | 58 | 64 | 6144 | 356352 | 1.46% | 11 | 828 |
| 187 | 53 | 70 | 6720 | 356160 | 1.40% | 11 | 688 |
| 188 | 35 | 106 | 10176 | 356160 | 1.40% | 11 | 868 |
| 189 | 32 | 116 | 11136 | 356352 | 1.46% | 11 | 1088 |
| 190 | 29 | 128 | 12288 | 356352 | 1.46% | 11 | 1118 |
| 191 | 18 | 206 | 19776 | 355968 | 1.35% | 11 | 848 |
| 192 | 17 | 218 | 20928 | 355776 | 1.29% | 11 | 668 |
| 193 | 16 | 232 | 22272 | 356352 | 1.46% | 11 | 1248 |
| 194 | 10 | 370 | 35520 | 355200 | 1.13% | 11 | 168 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 75 may be obtained with reference to Table 74. In this case, a frame overhead OH in cases listed in Table 75 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 75.

Table 75

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 148 | 25 | 2400 | 355200 | 1.13% | 2 | 120 |
| 2 | 128 | 29 | 2784 | 356352 | 1.46% | 2 | 1280 |
| 3 | 100 | 37 | 3552 | 355200 | 1.13% | 2 | 168 |
| 4 | 36 | 103 | 9888 | 355968 | 1.35% | 2 | 992 |
| 5 | 20 | 185 | 17760 | 355200 | 1.13% | 2 | 248 |
| 6 | 12 | 309 | 29664 | 355968 | 1.35% | 2 | 1016 |
| 7 | 309 | 12 | 1152 | 355968 | 1.35% | 3 | 410 |
| 8 | 232 | 16 | 1536 | 356352 | 1.46% | 3 | 944 |
| 9 | 206 | 18 | 1728 | 355968 | 1.35% | 3 | 616 |
| 10 | 116 | 32 | 3072 | 356352 | 1.46% | 3 | 1176 |
| 11 | 103 | 36 | 3456 | 355968 | 1.35% | 3 | 822 |
| 12 | 74 | 50 | 4800 | 355200 | 1.13% | 3 | 120 |
| 13 | 64 | 58 | 5568 | 356352 | 1.46% | 3 | 1280 |
| 14 | 58 | 64 | 6144 | 356352 | 1.46% | 3 | 1292 |
| 15 | 50 | 74 | 7104 | 355200 | 1.13% | 3 | 168 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 16 | 37 | 100 | 9600 | 355200 | 1.13% | 3 | 194 |
| 17 | 32 | 116 | 11136 | 356352 | 1.46% | 3 | 1344 |
| 18 | 29 | 128 | 12288 | 356352 | 1.46% | 3 | 1350 |
| 19 | 25 | 148 | 14208 | 355200 | 1.13% | 3 | 218 |
| 20 | 18 | 206 | 19776 | 355968 | 1.35% | 3 | 992 |
| 21 | 16 | 232 | 22272 | 356352 | 1.46% | 3 | 1376 |
| 22 | 10 | 370 | 35520 | 355200 | 1.13% | 3 | 248 |
| 23 | 128 | 29 | 2784 | 356352 | 1.46% | 4 | 1024 |
| 24 | 36 | 103 | 9888 | 355968 | 1.35% | 4 | 920 |
| 25 | 20 | 185 | 17760 | 355200 | 1.13% | 4 | 208 |
| 26 | 12 | 309 | 29664 | 355968 | 1.35% | 4 | 992 |
| 27 | 232 | 16 | 1536 | 356352 | 1.46% | 5 | 480 |
| 28 | 206 | 18 | 1728 | 355968 | 1.35% | 5 | 204 |
| 29 | 116 | 32 | 3072 | 356352 | 1.46% | 5 | 944 |
| 30 | 103 | 36 | 3456 | 355968 | 1.35% | 5 | 616 |
| 31 | 64 | 58 | 5568 | 356352 | 1.46% | 5 | 1152 |
| 32 | 58 | 64 | 6144 | 356352 | 1.46% | 5 | 1176 |
| 33 | 50 | 74 | 7104 | 355200 | 1.13% | 5 | 68 |
| 34 | 37 | 100 | 9600 | 355200 | 1.13% | 5 | 120 |
| 35 | 32 | 116 | 11136 | 356352 | 1.46% | 5 | 1280 |
| 36 | 29 | 128 | 12288 | 356352 | 1.46% | 5 | 1292 |
| 37 | 25 | 148 | 14208 | 355200 | 1.13% | 5 | 168 |
| 38 | 18 | 206 | 19776 | 355968 | 1.35% | 5 | 956 |
| 39 | 16 | 232 | 22272 | 356352 | 1.46% | 5 | 1344 |
| 40 | 10 | 370 | 35520 | 355200 | 1.13% | 5 | 228 |
| 41 | 128 | 29 | 2784 | 356352 | 1.46% | 6 | 768 |
| 42 | 36 | 103 | 9888 | 355968 | 1.35% | 6 | 848 |
| 43 | 20 | 185 | 17760 | 355200 | 1.13% | 6 | 168 |
| 44 | 12 | 309 | 29664 | 355968 | 1.35% | 6 | 968 |
| 45 | 116 | 32 | 3072 | 356352 | 1.46% | 7 | 712 |
| 46 | 103 | 36 | 3456 | 355968 | 1.35% | 7 | 410 |
| 47 | 64 | 58 | 5568 | 356352 | 1.46% | 7 | 1024 |
| 48 | 58 | 64 | 6144 | 356352 | 1.46% | 7 | 1060 |
| 49 | 37 | 100 | 9600 | 355200 | 1.13% | 7 | 46 |
| 50 | 32 | 116 | 11136 | 356352 | 1.46% | 7 | 1216 |
| 51 | 29 | 128 | 12288 | 356352 | 1.46% | 7 | 1234 |
| 52 | 25 | 148 | 14208 | 355200 | 1.13% | 7 | 118 |
| 53 | 18 | 206 | 19776 | 355968 | 1.35% | 7 | 920 |
| 54 | 16 | 232 | 22272 | 356352 | 1.46% | 7 | 1312 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 55 | 10 | 370 | 35520 | 355200 | 1.13% | 7 | 208 |
| 56 | 128 | 29 | 2784 | 356352 | 1.46% | 8 | 512 |
| 57 | 36 | 103 | 9888 | 355968 | 1.35% | 8 | 776 |
| 58 | 20 | 185 | 17760 | 355200 | 1.13% | 8 | 128 |
| 59 | 12 | 309 | 29664 | 355968 | 1.35% | 8 | 944 |
| 60 | 116 | 32 | 3072 | 356352 | 1.46% | 9 | 480 |
| 61 | 103 | 36 | 3456 | 355968 | 1.35% | 9 | 204 |
| 62 | 64 | 58 | 5568 | 356352 | 1.46% | 9 | 896 |
| 63 | 58 | 64 | 6144 | 356352 | 1.46% | 9 | 944 |
| 64 | 32 | 116 | 11136 | 356352 | 1.46% | 9 | 1152 |
| 65 | 29 | 128 | 12288 | 356352 | 1.46% | 9 | 1176 |
| 66 | 25 | 148 | 14208 | 355200 | 1.13% | 9 | 68 |
| 67 | 18 | 206 | 19776 | 355968 | 1.35% | 9 | 884 |
| 68 | 16 | 232 | 22272 | 356352 | 1.46% | 9 | 1280 |
| 69 | 10 | 370 | 35520 | 355200 | 1.13% | 9 | 188 |
| 70 | 128 | 29 | 2784 | 356352 | 1.46% | 10 | 256 |
| 71 | 36 | 103 | 9888 | 355968 | 1.35% | 10 | 704 |
| 72 | 20 | 185 | 17760 | 355200 | 1.13% | 10 | 88 |
| 73 | 12 | 309 | 29664 | 355968 | 1.35% | 10 | 920 |
| 74 | 116 | 32 | 3072 | 356352 | 1.46% | 11 | 248 |
| 75 | 64 | 58 | 5568 | 356352 | 1.46% | 11 | 768 |
| 76 | 58 | 64 | 6144 | 356352 | 1.46% | 11 | 828 |
| 77 | 32 | 116 | 11136 | 356352 | 1.46% | 11 | 1088 |
| 78 | 29 | 128 | 12288 | 356352 | 1.46% | 11 | 1118 |
| 79 | 18 | 206 | 19776 | 355968 | 1.35% | 11 | 848 |
| 80 | 16 | 232 | 22272 | 356352 | 1.46% | 11 | 1248 |
| 81 | 10 | 370 | 35520 | 355200 | 1.13% | 11 | 168 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 76 may be obtained with reference to Table 75. In this case, a frame overhead OH in cases listed in Table 76 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 76

| Sequence number | $N_{SF}$ | $N_{PS}$ | $N_S$ | $N_F$ | OH | $N_{TS}$ | $N_{FAW}+N_{RES}$ |
|---|---|---|---|---|---|---|---|
| 1 | 309 | 12 | 1152 | 355968 | 1.35% | 3 | 410 |
| 2 | 232 | 16 | 1536 | 356352 | 1.46% | 3 | 944 |

(continued)

| Sequence number | $N_{SF}$ | $N_{PS}$ | $N_S$ | $N_F$ | OH | $N_{TS}$ | $N_{FAW}+N_{RES}$ |
|---|---|---|---|---|---|---|---|
| 3 | 116 | 32 | 3072 | 356352 | 1.46% | 3 | 1176 |
| 4 | 103 | 36 | 3456 | 355968 | 1.35% | 3 | 822 |
| 5 | 58 | 64 | 6144 | 356352 | 1.46% | 3 | 1292 |
| 6 | 37 | 100 | 9600 | 355200 | 1.13% | 3 | 194 |
| 7 | 32 | 116 | 11136 | 356352 | 1.46% | 3 | 1344 |
| 8 | 29 | 128 | 12288 | 356352 | 1.46% | 3 | 1350 |
| 9 | 25 | 148 | 14208 | 355200 | 1.13% | 3 | 218 |
| 10 | 16 | 232 | 22272 | 356352 | 1.46% | 3 | 1376 |
| 11 | 232 | 16 | 1536 | 356352 | 1.46% | 5 | 480 |
| 12 | 116 | 32 | 3072 | 356352 | 1.46% | 5 | 944 |
| 13 | 103 | 36 | 3456 | 355968 | 1.35% | 5 | 616 |
| 14 | 58 | 64 | 6144 | 356352 | 1.46% | 5 | 1176 |
| 15 | 37 | 100 | 9600 | 355200 | 1.13% | 5 | 120 |
| 16 | 32 | 116 | 11136 | 356352 | 1.46% | 5 | 1280 |
| 17 | 29 | 128 | 12288 | 356352 | 1.46% | 5 | 1292 |
| 18 | 25 | 148 | 14208 | 355200 | 1.13% | 5 | 168 |
| 19 | 16 | 232 | 22272 | 356352 | 1.46% | 5 | 1344 |
| 20 | 116 | 32 | 3072 | 356352 | 1.46% | 7 | 712 |
| 21 | 103 | 36 | 3456 | 355968 | 1.35% | 7 | 410 |
| 22 | 58 | 64 | 6144 | 356352 | 1.46% | 7 | 1060 |
| 23 | 37 | 100 | 9600 | 355200 | 1.13% | 7 | 46 |
| 24 | 32 | 116 | 11136 | 356352 | 1.46% | 7 | 1216 |
| 25 | 29 | 128 | 12288 | 356352 | 1.46% | 7 | 1234 |
| 26 | 25 | 148 | 14208 | 355200 | 1.13% | 7 | 118 |
| 27 | 16 | 232 | 22272 | 356352 | 1.46% | 7 | 1312 |
| 28 | 116 | 32 | 3072 | 356352 | 1.46% | 9 | 480 |
| 29 | 103 | 36 | 3456 | 355968 | 1.35% | 9 | 204 |
| 30 | 58 | 64 | 6144 | 356352 | 1.46% | 9 | 944 |
| 31 | 32 | 116 | 11136 | 356352 | 1.46% | 9 | 1152 |
| 32 | 29 | 128 | 12288 | 356352 | 1.46% | 9 | 1176 |
| 33 | 25 | 148 | 14208 | 355200 | 1.13% | 9 | 68 |
| 34 | 16 | 232 | 22272 | 356352 | 1.46% | 9 | 1280 |
| 35 | 116 | 32 | 3072 | 356352 | 1.46% | 11 | 248 |
| 36 | 58 | 64 | 6144 | 356352 | 1.46% | 11 | 828 |
| 37 | 32 | 116 | 11136 | 356352 | 1.46% | 11 | 1088 |
| 38 | 29 | 128 | 12288 | 356352 | 1.46% | 11 | 1118 |
| 39 | 16 | 232 | 22272 | 356352 | 1.46% | 11 | 1248 |

(21) The quantity $N_{CW}$ of symbols before framing is 526848. For example, a CFEC encoding scheme with an encoding overhead of approximately 15.3% is used, or another encoding scheme may be used. A 1$^{st}$ symbol in every

$N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 77. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 77 is low: OH<1.50%. In Table 77, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 77.

Table 77

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 555 | 10 | 960 | 532800 | 1.13% | 402 |
| 2 | 505 | 11 | 1056 | 533280 | 1.22% | 877 |
| 3 | 463 | 12 | 1152 | 533376 | 1.24% | 972 |
| 4 | 427 | 13 | 1248 | 532896 | 1.15% | 497 |
| 5 | 397 | 14 | 1344 | 533568 | 1.28% | 1162 |
| 6 | 370 | 15 | 1440 | 532800 | 1.13% | 402 |
| 7 | 347 | 16 | 1536 | 532992 | 1.17% | 592 |
| 8 | 327 | 17 | 1632 | 533664 | 1.29% | 1257 |
| 9 | 309 | 18 | 1728 | 533952 | 1.35% | 1542 |
| 10 | 292 | 19 | 1824 | 532608 | 1.09% | 212 |
| 11 | 278 | 20 | 1920 | 533760 | 1.31% | 1352 |
| 12 | 265 | 21 | 2016 | 534240 | 1.40% | 1827 |
| 13 | 253 | 22 | 2112 | 534336 | 1.42% | 1922 |
| 14 | 242 | 23 | 2208 | 534336 | 1.42% | 1922 |
| 15 | 232 | 24 | 2304 | 534528 | 1.46% | 2112 |
| 16 | 222 | 25 | 2400 | 532800 | 1.13% | 402 |
| 17 | 214 | 26 | 2496 | 534144 | 1.38% | 1732 |
| 18 | 206 | 27 | 2592 | 533952 | 1.35% | 1542 |
| 19 | 192 | 29 | 2784 | 534528 | 1.46% | 2112 |
| 20 | 185 | 30 | 2880 | 532800 | 1.13% | 402 |
| 21 | 179 | 31 | 2976 | 532704 | 1.11% | 307 |
| 22 | 174 | 32 | 3072 | 534528 | 1.46% | 2112 |
| 23 | 159 | 35 | 3360 | 534240 | 1.40% | 1827 |
| 24 | 150 | 37 | 3552 | 532800 | 1.13% | 402 |
| 25 | 146 | 38 | 3648 | 532608 | 1.09% | 212 |
| 26 | 139 | 40 | 3840 | 533760 | 1.31% | 1352 |
| 27 | 129 | 43 | 4128 | 532512 | 1.08% | 117 |
| 28 | 121 | 46 | 4416 | 534336 | 1.42% | 1922 |
| 29 | 118 | 47 | 4512 | 532416 | 1.06% | 22 |
| 30 | 116 | 48 | 4608 | 534528 | 1.46% | 2112 |
| 31 | 111 | 50 | 4800 | 532800 | 1.13% | 402 |

(continued)

| Sequence number | $N_{SF}$ | $N_{PS}$ | $N_S$ | $N_F$ | OH | $N_{TS,TOT}+N_{FAW}+N_{RES}$ |
|---|---|---|---|---|---|---|
| 32 | 109 | 51 | 4896 | 533664 | 1.29% | 1257 |
| 33 | 107 | 52 | 4992 | 534144 | 1.38% | 1732 |
| 34 | 105 | 53 | 5088 | 534240 | 1.40% | 1827 |
| 35 | 103 | 54 | 5184 | 533952 | 1.35% | 1542 |
| 36 | 101 | 55 | 5280 | 533280 | 1.22% | 877 |
| 37 | 96 | 58 | 5568 | 534528 | 1.46% | 2112 |
| 38 | 94 | 59 | 5664 | 532416 | 1.06% | 22 |
| 39 | 91 | 61 | 5856 | 532896 | 1.15% | 497 |
| 40 | 87 | 64 | 6144 | 534528 | 1.46% | 2112 |
| 41 | 83 | 67 | 6432 | 533856 | 1.33% | 1447 |
| 42 | 76 | 73 | 7008 | 532608 | 1.09% | 212 |
| 43 | 75 | 74 | 7104 | 532800 | 1.13% | 402 |
| 44 | 74 | 75 | 7200 | 532800 | 1.13% | 402 |
| 45 | 73 | 76 | 7296 | 532608 | 1.09% | 212 |
| 46 | 67 | 83 | 7968 | 533856 | 1.33% | 1447 |
| 47 | 64 | 87 | 8352 | 534528 | 1.46% | 2112 |
| 48 | 61 | 91 | 8736 | 532896 | 1.15% | 497 |
| 49 | 59 | 94 | 9024 | 532416 | 1.06% | 22 |
| 50 | 58 | 96 | 9216 | 534528 | 1.46% | 2112 |
| 51 | 55 | 101 | 9696 | 533280 | 1.22% | 877 |
| 52 | 54 | 103 | 9888 | 533952 | 1.35% | 1542 |
| 53 | 53 | 105 | 10080 | 534240 | 1.40% | 1827 |
| 54 | 52 | 107 | 10272 | 534144 | 1.38% | 1732 |
| 55 | 51 | 109 | 10464 | 533664 | 1.29% | 1257 |
| 56 | 50 | 111 | 10656 | 532800 | 1.13% | 402 |
| 57 | 48 | 116 | 11136 | 534528 | 1.46% | 2112 |
| 58 | 47 | 118 | 11328 | 532416 | 1.06% | 22 |
| 59 | 46 | 121 | 11616 | 534336 | 1.42% | 1922 |
| 60 | 43 | 129 | 12384 | 532512 | 1.08% | 117 |
| 61 | 40 | 139 | 13344 | 533760 | 1.31% | 1352 |
| 62 | 38 | 146 | 14016 | 532608 | 1.09% | 212 |
| 63 | 37 | 150 | 14400 | 532800 | 1.13% | 402 |
| 64 | 35 | 159 | 15264 | 534240 | 1.40% | 1827 |
| 65 | 32 | 174 | 16704 | 534528 | 1.46% | 2112 |
| 66 | 31 | 179 | 17184 | 532704 | 1.11% | 307 |
| 67 | 30 | 185 | 17760 | 532800 | 1.13% | 402 |
| 68 | 29 | 192 | 18432 | 534528 | 1.46% | 2112 |
| 69 | 27 | 206 | 19776 | 533952 | 1.35% | 1542 |
| 70 | 26 | 214 | 20544 | 534144 | 1.38% | 1732 |

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 71 | 25 | 222 | 21312 | 532800 | 1.13% | 402 |
| 72 | 24 | 232 | 22272 | 534528 | 1.46% | 2112 |
| 73 | 23 | 242 | 23232 | 534336 | 1.42% | 1922 |
| 74 | 22 | 253 | 24288 | 534336 | 1.42% | 1922 |
| 75 | 21 | 265 | 25440 | 534240 | 1.40% | 1827 |
| 76 | 20 | 278 | 26688 | 533760 | 1.31% | 1352 |
| 77 | 19 | 292 | 28032 | 532608 | 1.09% | 212 |
| 78 | 19 | 293 | 28128 | 534432 | 1.44% | 2017 |
| 79 | 18 | 309 | 29664 | 533952 | 1.35% | 1542 |
| 80 | 17 | 327 | 31392 | 533664 | 1.29% | 1257 |
| 81 | 16 | 347 | 33312 | 532992 | 1.17% | 592 |
| 82 | 16 | 348 | 33408 | 534528 | 1.46% | 2112 |
| 83 | 15 | 370 | 35520 | 532800 | 1.13% | 402 |
| 84 | 15 | 371 | 35616 | 534240 | 1.40% | 1827 |
| 85 | 14 | 397 | 38112 | 533568 | 1.28% | 1162 |

Considering that the quantity $N_{TS}$ of training symbols is not greater than 11, Table 78 may be obtained with reference to Table 77. In this case, a frame overhead OH of a super-frame architecture in cases listed in Table 78 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 78.

Table 78

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 505 | 11 | 1056 | 533280 | 1.22% | 2 | 372 |
| 2 | 427 | 13 | 1248 | 532896 | 1.15% | 2 | 70 |
| 3 | 370 | 15 | 1440 | 532800 | 1.13% | 2 | 32 |
| 4 | 327 | 17 | 1632 | 533664 | 1.29% | 2 | 930 |
| 5 | 293 | 19 | 1824 | 534432 | 1.44% | 2 | 1724 |
| 6 | 265 | 21 | 2016 | 534240 | 1.40% | 2 | 1562 |
| 7 | 242 | 23 | 2208 | 534336 | 1.42% | 2 | 1680 |
| 8 | 222 | 25 | 2400 | 532800 | 1.13% | 2 | 180 |
| 9 | 206 | 27 | 2592 | 533952 | 1.35% | 2 | 1336 |
| 10 | 192 | 29 | 2784 | 534528 | 1.46% | 2 | 1920 |
| 11 | 179 | 31 | 2976 | 532704 | 1.11% | 2 | 128 |
| 12 | 159 | 35 | 3360 | 534240 | 1.40% | 2 | 1668 |
| 13 | 150 | 37 | 3552 | 532800 | 1.13% | 2 | 252 |
| 14 | 109 | 51 | 4896 | 533664 | 1.29% | 2 | 1148 |
| 15 | 105 | 53 | 5088 | 534240 | 1.40% | 2 | 1722 |
| 16 | 101 | 55 | 5280 | 533280 | 1.22% | 2 | 776 |
| 17 | 91 | 61 | 5856 | 532896 | 1.15% | 2 | 406 |
| 18 | 83 | 67 | 6432 | 533856 | 1.33% | 2 | 1364 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 19 | 76 | 73 | 7008 | 532608 | 1.09% | 2 | 136 |
| 20 | 74 | 75 | 7200 | 532800 | 1.13% | 2 | 328 |
| 21 | 67 | 83 | 7968 | 533856 | 1.33% | 2 | 1380 |
| 22 | 64 | 87 | 8352 | 534528 | 1.46% | 2 | 2048 |
| 23 | 61 | 91 | 8736 | 532896 | 1.15% | 2 | 436 |
| 24 | 55 | 101 | 9696 | 533280 | 1.22% | 2 | 822 |
| 25 | 54 | 103 | 9888 | 533952 | 1.35% | 2 | 1488 |
| 26 | 53 | 105 | 10080 | 534240 | 1.40% | 2 | 1774 |
| 27 | 52 | 107 | 10272 | 534144 | 1.38% | 2 | 1680 |
| 28 | 51 | 109 | 10464 | 533664 | 1.29% | 2 | 1206 |
| 29 | 50 | 111 | 10656 | 532800 | 1.13% | 2 | 352 |
| 30 | 46 | 121 | 11616 | 534336 | 1.42% | 2 | 1876 |
| 31 | 43 | 129 | 12384 | 532512 | 1.08% | 2 | 74 |
| 32 | 40 | 139 | 13344 | 533760 | 1.31% | 2 | 1312 |
| 33 | 35 | 159 | 15264 | 534240 | 1.40% | 2 | 1792 |
| 34 | 31 | 179 | 17184 | 532704 | 1.11% | 2 | 276 |
| 35 | 30 | 185 | 17760 | 532800 | 1.13% | 2 | 372 |
| 36 | 22 | 253 | 24288 | 534336 | 1.42% | 2 | 1900 |
| 37 | 21 | 265 | 25440 | 534240 | 1.40% | 2 | 1806 |
| 38 | 19 | 293 | 28128 | 534432 | 1.44% | 2 | 1998 |
| 39 | 18 | 309 | 29664 | 533952 | 1.35% | 2 | 1524 |
| 40 | 17 | 327 | 31392 | 533664 | 1.29% | 2 | 1240 |
| 41 | 16 | 347 | 33312 | 532992 | 1.17% | 2 | 576 |
| 42 | 15 | 371 | 35616 | 534240 | 1.40% | 2 | 1812 |
| 43 | 14 | 397 | 38112 | 533568 | 1.28% | 2 | 1148 |
| 44 | 556 | 10 | 960 | 533760 | 1.31% | 3 | 240 |
| 45 | 463 | 12 | 1152 | 533376 | 1.24% | 3 | 46 |
| 46 | 397 | 14 | 1344 | 533568 | 1.28% | 3 | 368 |
| 47 | 348 | 16 | 1536 | 534528 | 1.46% | 3 | 1416 |
| 48 | 309 | 18 | 1728 | 533952 | 1.35% | 3 | 924 |
| 49 | 278 | 20 | 1920 | 533760 | 1.31% | 3 | 796 |
| 50 | 253 | 22 | 2112 | 534336 | 1.42% | 3 | 1416 |
| 51 | 232 | 24 | 2304 | 534528 | 1.46% | 3 | 1648 |
| 52 | 214 | 26 | 2496 | 534144 | 1.38% | 3 | 1304 |
| 53 | 185 | 30 | 2880 | 532800 | 1.13% | 3 | 32 |
| 54 | 174 | 32 | 3072 | 534528 | 1.46% | 3 | 1764 |
| 55 | 139 | 40 | 3840 | 533760 | 1.31% | 3 | 1074 |
| 56 | 121 | 46 | 4416 | 534336 | 1.42% | 3 | 1680 |
| 57 | 116 | 48 | 4608 | 534528 | 1.46% | 3 | 1880 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 58 | 111 | 50 | 4800 | 532800 | 1.13% | 3 | 180 |
| 59 | 107 | 52 | 4992 | 534144 | 1.38% | 3 | 1518 |
| 60 | 103 | 54 | 5184 | 533952 | 1.35% | 3 | 1336 |
| 61 | 96 | 58 | 5568 | 534528 | 1.46% | 3 | 1920 |
| 62 | 87 | 64 | 6144 | 534528 | 1.46% | 3 | 1938 |
| 63 | 75 | 74 | 7104 | 532800 | 1.13% | 3 | 252 |
| 64 | 73 | 76 | 7296 | 532608 | 1.09% | 3 | 66 |
| 65 | 58 | 96 | 9216 | 534528 | 1.46% | 3 | 1996 |
| 66 | 48 | 116 | 11136 | 534528 | 1.46% | 3 | 2016 |
| 67 | 38 | 146 | 14016 | 532608 | 1.09% | 3 | 136 |
| 68 | 37 | 150 | 14400 | 532800 | 1.13% | 3 | 328 |
| 69 | 32 | 174 | 16704 | 534528 | 1.46% | 3 | 2048 |
| 70 | 29 | 192 | 18432 | 534528 | 1.46% | 3 | 2054 |
| 71 | 27 | 206 | 19776 | 533952 | 1.35% | 3 | 1488 |
| 72 | 26 | 214 | 20544 | 534144 | 1.38% | 3 | 1680 |
| 73 | 25 | 222 | 21312 | 532800 | 1.13% | 3 | 352 |
| 74 | 24 | 232 | 22272 | 534528 | 1.46% | 3 | 2064 |
| 75 | 23 | 242 | 23232 | 534336 | 1.42% | 3 | 1876 |
| 76 | 20 | 278 | 26688 | 533760 | 1.31% | 3 | 1312 |
| 77 | 19 | 292 | 28032 | 532608 | 1.09% | 3 | 174 |
| 78 | 16 | 348 | 33408 | 534528 | 1.46% | 3 | 2080 |
| 79 | 15 | 370 | 35520 | 532800 | 1.13% | 3 | 372 |
| 80 | 506 | 11 | 1056 | 534336 | 1.42% | 4 | 404 |
| 81 | 428 | 13 | 1248 | 534144 | 1.38% | 4 | 448 |
| 82 | 371 | 15 | 1440 | 534240 | 1.40% | 4 | 714 |
| 83 | 327 | 17 | 1632 | 533664 | 1.29% | 4 | 276 |
| 84 | 293 | 19 | 1824 | 534432 | 1.44% | 4 | 1138 |
| 85 | 265 | 21 | 2016 | 534240 | 1.40% | 4 | 1032 |
| 86 | 242 | 23 | 2208 | 534336 | 1.42% | 4 | 1196 |
| 87 | 206 | 27 | 2592 | 533952 | 1.35% | 4 | 924 |
| 88 | 192 | 29 | 2784 | 534528 | 1.46% | 4 | 1536 |
| 89 | 159 | 35 | 3360 | 534240 | 1.40% | 4 | 1350 |
| 90 | 109 | 51 | 4896 | 533664 | 1.29% | 4 | 930 |
| 91 | 105 | 53 | 5088 | 534240 | 1.40% | 4 | 1512 |
| 92 | 101 | 55 | 5280 | 533280 | 1.22% | 4 | 574 |
| 93 | 91 | 61 | 5856 | 532896 | 1.15% | 4 | 224 |
| 94 | 83 | 67 | 6432 | 533856 | 1.33% | 4 | 1198 |
| 95 | 74 | 75 | 7200 | 532800 | 1.13% | 4 | 180 |
| 96 | 67 | 83 | 7968 | 533856 | 1.33% | 4 | 1246 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 97 | 64 | 87 | 8352 | 534528 | 1.46% | 4 | 1920 |
| 98 | 61 | 91 | 8736 | 532896 | 1.15% | 4 | 314 |
| 99 | 55 | 101 | 9696 | 533280 | 1.22% | 4 | 712 |
| 100 | 54 | 103 | 9888 | 533952 | 1.35% | 4 | 1380 |
| 101 | 53 | 105 | 10080 | 534240 | 1.40% | 4 | 1668 |
| 102 | 52 | 107 | 10272 | 534144 | 1.38% | 4 | 1576 |
| 103 | 51 | 109 | 10464 | 533664 | 1.29% | 4 | 1104 |
| 104 | 50 | 111 | 10656 | 532800 | 1.13% | 4 | 252 |
| 105 | 46 | 121 | 11616 | 534336 | 1.42% | 4 | 1784 |
| 106 | 40 | 139 | 13344 | 533760 | 1.31% | 4 | 1232 |
| 107 | 35 | 159 | 15264 | 534240 | 1.40% | 4 | 1722 |
| 108 | 31 | 179 | 17184 | 532704 | 1.11% | 4 | 214 |
| 109 | 30 | 185 | 17760 | 532800 | 1.13% | 4 | 312 |
| 110 | 22 | 253 | 24288 | 534336 | 1.42% | 4 | 1856 |
| 111 | 21 | 265 | 25440 | 534240 | 1.40% | 4 | 1764 |
| 112 | 19 | 293 | 28128 | 534432 | 1.44% | 4 | 1960 |
| 113 | 18 | 309 | 29664 | 533952 | 1.35% | 4 | 1488 |
| 114 | 17 | 327 | 31392 | 533664 | 1.29% | 4 | 1206 |
| 115 | 16 | 347 | 33312 | 532992 | 1.17% | 4 | 544 |
| 116 | 15 | 371 | 35616 | 534240 | 1.40% | 4 | 1782 |
| 117 | 14 | 397 | 38112 | 533568 | 1.28% | 4 | 1120 |
| 118 | 557 | 10 | 960 | 534720 | 1.49% | 5 | 74 |
| 119 | 464 | 12 | 1152 | 534528 | 1.46% | 5 | 256 |
| 120 | 348 | 16 | 1536 | 534528 | 1.46% | 5 | 720 |
| 121 | 309 | 18 | 1728 | 533952 | 1.35% | 5 | 306 |
| 122 | 278 | 20 | 1920 | 533760 | 1.31% | 5 | 240 |
| 123 | 253 | 22 | 2112 | 534336 | 1.42% | 5 | 910 |
| 124 | 232 | 24 | 2304 | 534528 | 1.46% | 5 | 1184 |
| 125 | 214 | 26 | 2496 | 534144 | 1.38% | 5 | 876 |
| 126 | 174 | 32 | 3072 | 534528 | 1.46% | 5 | 1416 |
| 127 | 139 | 40 | 3840 | 533760 | 1.31% | 5 | 796 |
| 128 | 121 | 46 | 4416 | 534336 | 1.42% | 5 | 1438 |
| 129 | 116 | 48 | 4608 | 534528 | 1.46% | 5 | 1648 |
| 130 | 107 | 52 | 4992 | 534144 | 1.38% | 5 | 1304 |
| 131 | 103 | 54 | 5184 | 533952 | 1.35% | 5 | 1130 |
| 132 | 96 | 58 | 5568 | 534528 | 1.46% | 5 | 1728 |
| 133 | 87 | 64 | 6144 | 534528 | 1.46% | 5 | 1764 |
| 134 | 75 | 74 | 7104 | 532800 | 1.13% | 5 | 102 |
| 135 | 58 | 96 | 9216 | 534528 | 1.46% | 5 | 1880 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 136 | 48 | 116 | 11136 | 534528 | 1.46% | 5 | 1920 |
| 137 | 38 | 146 | 14016 | 532608 | 1.09% | 5 | 60 |
| 138 | 37 | 150 | 14400 | 532800 | 1.13% | 5 | 254 |
| 139 | 32 | 174 | 16704 | 534528 | 1.46% | 5 | 1984 |
| 140 | 29 | 192 | 18432 | 534528 | 1.46% | 5 | 1996 |
| 141 | 27 | 206 | 19776 | 533952 | 1.35% | 5 | 1434 |
| 142 | 26 | 214 | 20544 | 534144 | 1.38% | 5 | 1628 |
| 143 | 25 | 222 | 21312 | 532800 | 1.13% | 5 | 302 |
| 144 | 24 | 232 | 22272 | 534528 | 1.46% | 5 | 2016 |
| 145 | 23 | 242 | 23232 | 534336 | 1.42% | 5 | 1830 |
| 146 | 20 | 278 | 26688 | 533760 | 1.31% | 5 | 1272 |
| 147 | 19 | 292 | 28032 | 532608 | 1.09% | 5 | 136 |
| 148 | 16 | 348 | 33408 | 534528 | 1.46% | 5 | 2048 |
| 149 | 15 | 370 | 35520 | 532800 | 1.13% | 5 | 342 |
| 150 | 293 | 19 | 1824 | 534432 | 1.44% | 6 | 552 |
| 151 | 265 | 21 | 2016 | 534240 | 1.40% | 6 | 502 |
| 152 | 242 | 23 | 2208 | 534336 | 1.42% | 6 | 712 |
| 153 | 206 | 27 | 2592 | 533952 | 1.35% | 6 | 512 |
| 154 | 192 | 29 | 2784 | 534528 | 1.46% | 6 | 1152 |
| 155 | 159 | 35 | 3360 | 534240 | 1.40% | 6 | 1032 |
| 156 | 109 | 51 | 4896 | 533664 | 1.29% | 6 | 712 |
| 157 | 105 | 53 | 5088 | 534240 | 1.40% | 6 | 1302 |
| 158 | 101 | 55 | 5280 | 533280 | 1.22% | 6 | 372 |
| 159 | 91 | 61 | 5856 | 532896 | 1.15% | 6 | 42 |
| 160 | 83 | 67 | 6432 | 533856 | 1.33% | 6 | 1032 |
| 161 | 74 | 75 | 7200 | 532800 | 1.13% | 6 | 32 |
| 162 | 67 | 83 | 7968 | 533856 | 1.33% | 6 | 1112 |
| 163 | 64 | 87 | 8352 | 534528 | 1.46% | 6 | 1792 |
| 164 | 61 | 91 | 8736 | 532896 | 1.15% | 6 | 192 |
| 165 | 55 | 101 | 9696 | 533280 | 1.22% | 6 | 602 |
| 166 | 54 | 103 | 9888 | 533952 | 1.35% | 6 | 1272 |
| 167 | 53 | 105 | 10080 | 534240 | 1.40% | 6 | 1562 |
| 168 | 52 | 107 | 10272 | 534144 | 1.38% | 6 | 1472 |
| 169 | 51 | 109 | 10464 | 533664 | 1.29% | 6 | 1002 |
| 170 | 50 | 111 | 10656 | 532800 | 1.13% | 6 | 152 |
| 171 | 46 | 121 | 11616 | 534336 | 1.42% | 6 | 1692 |
| 172 | 40 | 139 | 13344 | 533760 | 1.31% | 6 | 1152 |
| 173 | 35 | 159 | 15264 | 534240 | 1.40% | 6 | 1652 |
| 174 | 31 | 179 | 17184 | 532704 | 1.11% | 6 | 152 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 175 | 30 | 185 | 17760 | 532800 | 1.13% | 6 | 252 |
| 176 | 22 | 253 | 24288 | 534336 | 1.42% | 6 | 1812 |
| 177 | 21 | 265 | 25440 | 534240 | 1.40% | 6 | 1722 |
| 178 | 19 | 293 | 28128 | 534432 | 1.44% | 6 | 1922 |
| 179 | 18 | 309 | 29664 | 533952 | 1.35% | 6 | 1452 |
| 180 | 17 | 327 | 31392 | 533664 | 1.29% | 6 | 1172 |
| 181 | 16 | 347 | 33312 | 532992 | 1.17% | 6 | 512 |
| 182 | 15 | 371 | 35616 | 534240 | 1.40% | 6 | 1752 |
| 183 | 14 | 397 | 38112 | 533568 | 1.28% | 6 | 1092 |
| 184 | 348 | 16 | 1536 | 534528 | 1.46% | 7 | 24 |
| 185 | 253 | 22 | 2112 | 534336 | 1.42% | 7 | 404 |
| 186 | 232 | 24 | 2304 | 534528 | 1.46% | 7 | 720 |
| 187 | 214 | 26 | 2496 | 534144 | 1.38% | 7 | 448 |
| 188 | 174 | 32 | 3072 | 534528 | 1.46% | 7 | 1068 |
| 189 | 139 | 40 | 3840 | 533760 | 1.31% | 7 | 518 |
| 190 | 121 | 46 | 4416 | 534336 | 1.42% | 7 | 1196 |
| 191 | 116 | 48 | 4608 | 534528 | 1.46% | 7 | 1416 |
| 192 | 107 | 52 | 4992 | 534144 | 1.38% | 7 | 1090 |
| 193 | 103 | 54 | 5184 | 533952 | 1.35% | 7 | 924 |
| 194 | 96 | 58 | 5568 | 534528 | 1.46% | 7 | 1536 |
| 195 | 87 | 64 | 6144 | 534528 | 1.46% | 7 | 1590 |
| 196 | 58 | 96 | 9216 | 534528 | 1.46% | 7 | 1764 |
| 197 | 48 | 116 | 11136 | 534528 | 1.46% | 7 | 1824 |
| 198 | 37 | 150 | 14400 | 532800 | 1.13% | 7 | 180 |
| 199 | 32 | 174 | 16704 | 534528 | 1.46% | 7 | 1920 |
| 200 | 29 | 192 | 18432 | 534528 | 1.46% | 7 | 1938 |
| 201 | 27 | 206 | 19776 | 533952 | 1.35% | 7 | 1380 |
| 202 | 26 | 214 | 20544 | 534144 | 1.38% | 7 | 1576 |
| 203 | 25 | 222 | 21312 | 532800 | 1.13% | 7 | 252 |
| 204 | 24 | 232 | 22272 | 534528 | 1.46% | 7 | 1968 |
| 205 | 23 | 242 | 23232 | 534336 | 1.42% | 7 | 1784 |
| 206 | 20 | 278 | 26688 | 533760 | 1.31% | 7 | 1232 |
| 207 | 19 | 292 | 28032 | 532608 | 1.09% | 7 | 98 |
| 208 | 16 | 348 | 33408 | 534528 | 1.46% | 7 | 2016 |
| 209 | 15 | 370 | 35520 | 532800 | 1.13% | 7 | 312 |
| 210 | 242 | 23 | 2208 | 534336 | 1.42% | 8 | 228 |
| 211 | 206 | 27 | 2592 | 533952 | 1.35% | 8 | 100 |
| 212 | 192 | 29 | 2784 | 534528 | 1.46% | 8 | 768 |
| 213 | 159 | 35 | 3360 | 534240 | 1.40% | 8 | 714 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 214 | 109 | 51 | 4896 | 533664 | 1.29% | 8 | 494 |
| 215 | 105 | 53 | 5088 | 534240 | 1.40% | 8 | 1092 |
| 216 | 101 | 55 | 5280 | 533280 | 1.22% | 8 | 170 |
| 217 | 83 | 67 | 6432 | 533856 | 1.33% | 8 | 866 |
| 218 | 67 | 83 | 7968 | 533856 | 1.33% | 8 | 978 |
| 219 | 64 | 87 | 8352 | 534528 | 1.46% | 8 | 1664 |
| 220 | 61 | 91 | 8736 | 532896 | 1.15% | 8 | 70 |
| 221 | 55 | 101 | 9696 | 533280 | 1.22% | 8 | 492 |
| 222 | 54 | 103 | 9888 | 533952 | 1.35% | 8 | 1164 |
| 223 | 53 | 105 | 10080 | 534240 | 1.40% | 8 | 1456 |
| 224 | 52 | 107 | 10272 | 534144 | 1.38% | 8 | 1368 |
| 225 | 51 | 109 | 10464 | 533664 | 1.29% | 8 | 900 |
| 226 | 50 | 111 | 10656 | 532800 | 1.13% | 8 | 52 |
| 227 | 46 | 121 | 11616 | 534336 | 1.42% | 8 | 1600 |
| 228 | 40 | 139 | 13344 | 533760 | 1.31% | 8 | 1072 |
| 229 | 35 | 159 | 15264 | 534240 | 1.40% | 8 | 1582 |
| 230 | 31 | 179 | 17184 | 532704 | 1.11% | 8 | 90 |
| 231 | 30 | 185 | 17760 | 532800 | 1.13% | 8 | 192 |
| 232 | 22 | 253 | 24288 | 534336 | 1.42% | 8 | 1768 |
| 233 | 21 | 265 | 25440 | 534240 | 1.40% | 8 | 1680 |
| 234 | 19 | 293 | 28128 | 534432 | 1.44% | 8 | 1884 |
| 235 | 18 | 309 | 29664 | 533952 | 1.35% | 8 | 1416 |
| 236 | 17 | 327 | 31392 | 533664 | 1.29% | 8 | 1138 |
| 237 | 16 | 347 | 33312 | 532992 | 1.17% | 8 | 480 |
| 238 | 15 | 371 | 35616 | 534240 | 1.40% | 8 | 1722 |
| 239 | 14 | 397 | 38112 | 533568 | 1.28% | 8 | 1064 |
| 240 | 232 | 24 | 2304 | 534528 | 1.46% | 9 | 256 |
| 241 | 174 | 32 | 3072 | 534528 | 1.46% | 9 | 720 |
| 242 | 139 | 40 | 3840 | 533760 | 1.31% | 9 | 240 |
| 243 | 121 | 46 | 4416 | 534336 | 1.42% | 9 | 954 |
| 244 | 116 | 48 | 4608 | 534528 | 1.46% | 9 | 1184 |
| 245 | 107 | 52 | 4992 | 534144 | 1.38% | 9 | 876 |
| 246 | 103 | 54 | 5184 | 533952 | 1.35% | 9 | 718 |
| 247 | 96 | 58 | 5568 | 534528 | 1.46% | 9 | 1344 |
| 248 | 87 | 64 | 6144 | 534528 | 1.46% | 9 | 1416 |
| 249 | 58 | 96 | 9216 | 534528 | 1.46% | 9 | 1648 |
| 250 | 48 | 116 | 11136 | 534528 | 1.46% | 9 | 1728 |
| 251 | 37 | 150 | 14400 | 532800 | 1.13% | 9 | 106 |
| 252 | 32 | 174 | 16704 | 534528 | 1.46% | 9 | 1856 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 253 | 29 | 192 | 18432 | 534528 | 1.46% | 9 | 1880 |
| 254 | 27 | 206 | 19776 | 533952 | 1.35% | 9 | 1326 |
| 255 | 26 | 214 | 20544 | 534144 | 1.38% | 9 | 1524 |
| 256 | 25 | 222 | 21312 | 532800 | 1.13% | 9 | 202 |
| 257 | 24 | 232 | 22272 | 534528 | 1.46% | 9 | 1920 |
| 258 | 23 | 242 | 23232 | 534336 | 1.42% | 9 | 1738 |
| 259 | 20 | 278 | 26688 | 533760 | 1.31% | 9 | 1192 |
| 260 | 19 | 292 | 28032 | 532608 | 1.09% | 9 | 60 |
| 261 | 16 | 348 | 33408 | 534528 | 1.46% | 9 | 1984 |
| 262 | 15 | 370 | 35520 | 532800 | 1.13% | 9 | 282 |
| 263 | 192 | 29 | 2784 | 534528 | 1.46% | 10 | 384 |
| 264 | 159 | 35 | 3360 | 534240 | 1.40% | 10 | 396 |
| 265 | 109 | 51 | 4896 | 533664 | 1.29% | 10 | 276 |
| 266 | 105 | 53 | 5088 | 534240 | 1.40% | 10 | 882 |
| 267 | 83 | 67 | 6432 | 533856 | 1.33% | 10 | 700 |
| 268 | 67 | 83 | 7968 | 533856 | 1.33% | 10 | 844 |
| 269 | 64 | 87 | 8352 | 534528 | 1.46% | 10 | 1536 |
| 270 | 55 | 101 | 9696 | 533280 | 1.22% | 10 | 382 |
| 271 | 54 | 103 | 9888 | 533952 | 1.35% | 10 | 1056 |
| 272 | 53 | 105 | 10080 | 534240 | 1.40% | 10 | 1350 |
| 273 | 52 | 107 | 10272 | 534144 | 1.38% | 10 | 1264 |
| 274 | 51 | 109 | 10464 | 533664 | 1.29% | 10 | 798 |
| 275 | 46 | 121 | 11616 | 534336 | 1.42% | 10 | 1508 |
| 276 | 40 | 139 | 13344 | 533760 | 1.31% | 10 | 992 |
| 277 | 35 | 159 | 15264 | 534240 | 1.40% | 10 | 1512 |
| 278 | 31 | 179 | 17184 | 532704 | 1.11% | 10 | 28 |
| 279 | 30 | 185 | 17760 | 532800 | 1.13% | 10 | 132 |
| 280 | 22 | 253 | 24288 | 534336 | 1.42% | 10 | 1724 |
| 281 | 21 | 265 | 25440 | 534240 | 1.40% | 10 | 1638 |
| 282 | 19 | 293 | 28128 | 534432 | 1.44% | 10 | 1846 |
| 283 | 18 | 309 | 29664 | 533952 | 1.35% | 10 | 1380 |
| 284 | 17 | 327 | 31392 | 533664 | 1.29% | 10 | 1104 |
| 285 | 16 | 347 | 33312 | 532992 | 1.17% | 10 | 448 |
| 286 | 15 | 371 | 35616 | 534240 | 1.40% | 10 | 1692 |
| 287 | 14 | 397 | 38112 | 533568 | 1.28% | 10 | 1036 |
| 288 | 174 | 32 | 3072 | 534528 | 1.46% | 11 | 372 |
| 289 | 121 | 46 | 4416 | 534336 | 1.42% | 11 | 712 |
| 290 | 116 | 48 | 4608 | 534528 | 1.46% | 11 | 952 |
| 291 | 107 | 52 | 4992 | 534144 | 1.38% | 11 | 662 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 292 | 103 | 54 | 5184 | 533952 | 1.35% | 11 | 512 |
| 293 | 96 | 58 | 5568 | 534528 | 1.46% | 11 | 1152 |
| 294 | 87 | 64 | 6144 | 534528 | 1.46% | 11 | 1242 |
| 295 | 58 | 96 | 9216 | 534528 | 1.46% | 11 | 1532 |
| 296 | 48 | 116 | 11136 | 534528 | 1.46% | 11 | 1632 |
| 297 | 37 | 150 | 14400 | 532800 | 1.13% | 11 | 32 |
| 298 | 32 | 174 | 16704 | 534528 | 1.46% | 11 | 1792 |
| 299 | 29 | 192 | 18432 | 534528 | 1.46% | 11 | 1822 |
| 300 | 27 | 206 | 19776 | 533952 | 1.35% | 11 | 1272 |
| 301 | 26 | 214 | 20544 | 534144 | 1.38% | 11 | 1472 |
| 302 | 25 | 222 | 21312 | 532800 | 1.13% | 11 | 152 |
| 303 | 24 | 232 | 22272 | 534528 | 1.46% | 11 | 1872 |
| 304 | 23 | 242 | 23232 | 534336 | 1.42% | 11 | 1692 |
| 305 | 20 | 278 | 26688 | 533760 | 1.31% | 11 | 1152 |
| 306 | 19 | 292 | 28032 | 532608 | 1.09% | 11 | 22 |
| 307 | 16 | 348 | 33408 | 534528 | 1.46% | 11 | 1952 |
| 308 | 15 | 370 | 35520 | 532800 | 1.13% | 11 | 252 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 79 may be obtained with reference to Table 78. In this case, a frame overhead OH in cases listed in Table 79 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 79.

Table 79

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 192 | 29 | 2784 | 534528 | 1.46% | 2 | 1920 |
| 2 | 76 | 73 | 7008 | 532608 | 1.09% | 2 | 136 |
| 3 | 64 | 87 | 8352 | 534528 | 1.46% | 2 | 2048 |
| 4 | 52 | 107 | 10272 | 534144 | 1.38% | 2 | 1680 |
| 5 | 40 | 139 | 13344 | 533760 | 1.31% | 2 | 1312 |
| 6 | 16 | 347 | 33312 | 532992 | 1.17% | 2 | 576 |
| 7 | 556 | 10 | 960 | 533760 | 1.31% | 3 | 240 |
| 8 | 463 | 12 | 1152 | 533376 | 1.24% | 3 | 46 |
| 9 | 348 | 16 | 1536 | 534528 | 1.46% | 3 | 1416 |
| 10 | 278 | 20 | 1920 | 533760 | 1.31% | 3 | 796 |
| 11 | 232 | 24 | 2304 | 534528 | 1.46% | 3 | 1648 |
| 12 | 214 | 26 | 2496 | 534144 | 1.38% | 3 | 1304 |
| 13 | 174 | 32 | 3072 | 534528 | 1.46% | 3 | 1764 |
| 14 | 139 | 40 | 3840 | 533760 | 1.31% | 3 | 1074 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 15 | 116 | 48 | 4608 | 534528 | 1.46% | 3 | 1880 |
| 16 | 107 | 52 | 4992 | 534144 | 1.38% | 3 | 1518 |
| 17 | 96 | 58 | 5568 | 534528 | 1.46% | 3 | 1920 |
| 18 | 87 | 64 | 6144 | 534528 | 1.46% | 3 | 1938 |
| 19 | 73 | 76 | 7296 | 532608 | 1.09% | 3 | 66 |
| 20 | 58 | 96 | 9216 | 534528 | 1.46% | 3 | 1996 |
| 21 | 48 | 116 | 11136 | 534528 | 1.46% | 3 | 2016 |
| 22 | 38 | 146 | 14016 | 532608 | 1.09% | 3 | 136 |
| 23 | 32 | 174 | 16704 | 534528 | 1.46% | 3 | 2048 |
| 24 | 29 | 192 | 18432 | 534528 | 1.46% | 3 | 2054 |
| 25 | 26 | 214 | 20544 | 534144 | 1.38% | 3 | 1680 |
| 26 | 24 | 232 | 22272 | 534528 | 1.46% | 3 | 2064 |
| 27 | 20 | 278 | 26688 | 533760 | 1.31% | 3 | 1312 |
| 28 | 19 | 292 | 28032 | 532608 | 1.09% | 3 | 174 |
| 29 | 16 | 348 | 33408 | 534528 | 1.46% | 3 | 2080 |
| 30 | 428 | 13 | 1248 | 534144 | 1.38% | 4 | 448 |
| 31 | 192 | 29 | 2784 | 534528 | 1.46% | 4 | 1536 |
| 32 | 64 | 87 | 8352 | 534528 | 1.46% | 4 | 1920 |
| 33 | 52 | 107 | 10272 | 534144 | 1.38% | 4 | 1576 |
| 34 | 40 | 139 | 13344 | 533760 | 1.31% | 4 | 1232 |
| 35 | 16 | 347 | 33312 | 532992 | 1.17% | 4 | 544 |
| 36 | 464 | 12 | 1152 | 534528 | 1.46% | 5 | 256 |
| 37 | 348 | 16 | 1536 | 534528 | 1.46% | 5 | 720 |
| 38 | 278 | 20 | 1920 | 533760 | 1.31% | 5 | 240 |
| 39 | 232 | 24 | 2304 | 534528 | 1.46% | 5 | 1184 |
| 40 | 214 | 26 | 2496 | 534144 | 1.38% | 5 | 876 |
| 41 | 174 | 32 | 3072 | 534528 | 1.46% | 5 | 1416 |
| 42 | 139 | 40 | 3840 | 533760 | 1.31% | 5 | 796 |
| 43 | 116 | 48 | 4608 | 534528 | 1.46% | 5 | 1648 |
| 44 | 107 | 52 | 4992 | 534144 | 1.38% | 5 | 1304 |
| 45 | 96 | 58 | 5568 | 534528 | 1.46% | 5 | 1728 |
| 46 | 87 | 64 | 6144 | 534528 | 1.46% | 5 | 1764 |
| 47 | 58 | 96 | 9216 | 534528 | 1.46% | 5 | 1880 |
| 48 | 48 | 116 | 11136 | 534528 | 1.46% | 5 | 1920 |
| 49 | 38 | 146 | 14016 | 532608 | 1.09% | 5 | 60 |
| 50 | 32 | 174 | 16704 | 534528 | 1.46% | 5 | 1984 |
| 51 | 29 | 192 | 18432 | 534528 | 1.46% | 5 | 1996 |
| 52 | 26 | 214 | 20544 | 534144 | 1.38% | 5 | 1628 |
| 53 | 24 | 232 | 22272 | 534528 | 1.46% | 5 | 2016 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 54 | 20 | 278 | 26688 | 533760 | 1.31% | 5 | 1272 |
| 55 | 19 | 292 | 28032 | 532608 | 1.09% | 5 | 136 |
| 56 | 16 | 348 | 33408 | 534528 | 1.46% | 5 | 2048 |
| 57 | 192 | 29 | 2784 | 534528 | 1.46% | 6 | 1152 |
| 58 | 64 | 87 | 8352 | 534528 | 1.46% | 6 | 1792 |
| 59 | 52 | 107 | 10272 | 534144 | 1.38% | 6 | 1472 |
| 60 | 40 | 139 | 13344 | 533760 | 1.31% | 6 | 1152 |
| 61 | 16 | 347 | 33312 | 532992 | 1.17% | 6 | 512 |
| 62 | 348 | 16 | 1536 | 534528 | 1.46% | 7 | 24 |
| 63 | 232 | 24 | 2304 | 534528 | 1.46% | 7 | 720 |
| 64 | 214 | 26 | 2496 | 534144 | 1.38% | 7 | 448 |
| 65 | 174 | 32 | 3072 | 534528 | 1.46% | 7 | 1068 |
| 66 | 139 | 40 | 3840 | 533760 | 1.31% | 7 | 518 |
| 67 | 116 | 48 | 4608 | 534528 | 1.46% | 7 | 1416 |
| 68 | 107 | 52 | 4992 | 534144 | 1.38% | 7 | 1090 |
| 69 | 96 | 58 | 5568 | 534528 | 1.46% | 7 | 1536 |
| 70 | 87 | 64 | 6144 | 534528 | 1.46% | 7 | 1590 |
| 71 | 58 | 96 | 9216 | 534528 | 1.46% | 7 | 1764 |
| 72 | 48 | 116 | 11136 | 534528 | 1.46% | 7 | 1824 |
| 73 | 32 | 174 | 16704 | 534528 | 1.46% | 7 | 1920 |
| 74 | 29 | 192 | 18432 | 534528 | 1.46% | 7 | 1938 |
| 75 | 26 | 214 | 20544 | 534144 | 1.38% | 7 | 1576 |
| 76 | 24 | 232 | 22272 | 534528 | 1.46% | 7 | 1968 |
| 77 | 20 | 278 | 26688 | 533760 | 1.31% | 7 | 1232 |
| 78 | 19 | 292 | 28032 | 532608 | 1.09% | 7 | 98 |
| 79 | 16 | 348 | 33408 | 534528 | 1.46% | 7 | 2016 |
| 80 | 192 | 29 | 2784 | 534528 | 1.46% | 8 | 768 |
| 81 | 64 | 87 | 8352 | 534528 | 1.46% | 8 | 1664 |
| 82 | 52 | 107 | 10272 | 534144 | 1.38% | 8 | 1368 |
| 83 | 40 | 139 | 13344 | 533760 | 1.31% | 8 | 1072 |
| 84 | 16 | 347 | 33312 | 532992 | 1.17% | 8 | 480 |
| 85 | 232 | 24 | 2304 | 534528 | 1.46% | 9 | 256 |
| 86 | 174 | 32 | 3072 | 534528 | 1.46% | 9 | 720 |
| 87 | 139 | 40 | 3840 | 533760 | 1.31% | 9 | 240 |
| 88 | 116 | 48 | 4608 | 534528 | 1.46% | 9 | 1184 |
| 89 | 107 | 52 | 4992 | 534144 | 1.38% | 9 | 876 |
| 90 | 96 | 58 | 5568 | 534528 | 1.46% | 9 | 1344 |
| 91 | 87 | 64 | 6144 | 534528 | 1.46% | 9 | 1416 |
| 92 | 58 | 96 | 9216 | 534528 | 1.46% | 9 | 1648 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 93 | 48 | 116 | 11136 | 534528 | 1.46% | 9 | 1728 |
| 94 | 32 | 174 | 16704 | 534528 | 1.46% | 9 | 1856 |
| 95 | 29 | 192 | 18432 | 534528 | 1.46% | 9 | 1880 |
| 96 | 26 | 214 | 20544 | 534144 | 1.38% | 9 | 1524 |
| 97 | 24 | 232 | 22272 | 534528 | 1.46% | 9 | 1920 |
| 98 | 20 | 278 | 26688 | 533760 | 1.31% | 9 | 1192 |
| 99 | 19 | 292 | 28032 | 532608 | 1.09% | 9 | 60 |
| 100 | 16 | 348 | 33408 | 534528 | 1.46% | 9 | 1984 |
| 101 | 192 | 29 | 2784 | 534528 | 1.46% | 10 | 384 |
| 102 | 64 | 87 | 8352 | 534528 | 1.46% | 10 | 1536 |
| 103 | 52 | 107 | 10272 | 534144 | 1.38% | 10 | 1264 |
| 104 | 40 | 139 | 13344 | 533760 | 1.31% | 10 | 992 |
| 105 | 16 | 347 | 33312 | 532992 | 1.17% | 10 | 448 |
| 106 | 174 | 32 | 3072 | 534528 | 1.46% | 11 | 372 |
| 107 | 116 | 48 | 4608 | 534528 | 1.46% | 11 | 952 |
| 108 | 107 | 52 | 4992 | 534144 | 1.38% | 11 | 662 |
| 109 | 96 | 58 | 5568 | 534528 | 1.46% | 11 | 1152 |
| 110 | 87 | 64 | 6144 | 534528 | 1.46% | 11 | 1242 |
| 111 | 58 | 96 | 9216 | 534528 | 1.46% | 11 | 1532 |
| 112 | 48 | 116 | 11136 | 534528 | 1.46% | 11 | 1632 |
| 113 | 32 | 174 | 16704 | 534528 | 1.46% | 11 | 1792 |
| 114 | 29 | 192 | 18432 | 534528 | 1.46% | 11 | 1822 |
| 115 | 26 | 214 | 20544 | 534144 | 1.38% | 11 | 1472 |
| 116 | 24 | 232 | 22272 | 534528 | 1.46% | 11 | 1872 |
| 117 | 20 | 278 | 26688 | 533760 | 1.31% | 11 | 1152 |
| 118 | 19 | 292 | 28032 | 532608 | 1.09% | 11 | 22 |
| 119 | 16 | 348 | 33408 | 534528 | 1.46% | 11 | 1952 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 80 may be obtained with reference to Table 79. In this case, a frame overhead OH in cases listed in Table 80 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 80

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 463 | 12 | 1152 | 533376 | 1.24% | 3 | 46 |
| 2 | 348 | 16 | 1536 | 534528 | 1.46% | 3 | 1416 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 3 | 278 | 20 | 1920 | 533760 | 1.31% | 3 | 796 |
| 4 | 232 | 24 | 2304 | 534528 | 1.46% | 3 | 1648 |
| 5 | 174 | 32 | 3072 | 534528 | 1.46% | 3 | 1764 |
| 6 | 139 | 40 | 3840 | 533760 | 1.31% | 3 | 1074 |
| 7 | 116 | 48 | 4608 | 534528 | 1.46% | 3 | 1880 |
| 8 | 107 | 52 | 4992 | 534144 | 1.38% | 3 | 1518 |
| 9 | 87 | 64 | 6144 | 534528 | 1.46% | 3 | 1938 |
| 10 | 73 | 76 | 7296 | 532608 | 1.09% | 3 | 66 |
| 11 | 58 | 96 | 9216 | 534528 | 1.46% | 3 | 1996 |
| 12 | 48 | 116 | 11136 | 534528 | 1.46% | 3 | 2016 |
| 13 | 29 | 192 | 18432 | 534528 | 1.46% | 3 | 2054 |
| 14 | 24 | 232 | 22272 | 534528 | 1.46% | 3 | 2064 |
| 15 | 19 | 292 | 28032 | 532608 | 1.09% | 3 | 174 |
| 16 | 16 | 348 | 33408 | 534528 | 1.46% | 3 | 2080 |
| 17 | 464 | 12 | 1152 | 534528 | 1.46% | 5 | 256 |
| 18 | 348 | 16 | 1536 | 534528 | 1.46% | 5 | 720 |
| 19 | 278 | 20 | 1920 | 533760 | 1.31% | 5 | 240 |
| 20 | 232 | 24 | 2304 | 534528 | 1.46% | 5 | 1184 |
| 21 | 174 | 32 | 3072 | 534528 | 1.46% | 5 | 1416 |
| 22 | 139 | 40 | 3840 | 533760 | 1.31% | 5 | 796 |
| 23 | 116 | 48 | 4608 | 534528 | 1.46% | 5 | 1648 |
| 24 | 107 | 52 | 4992 | 534144 | 1.38% | 5 | 1304 |
| 25 | 87 | 64 | 6144 | 534528 | 1.46% | 5 | 1764 |
| 26 | 58 | 96 | 9216 | 534528 | 1.46% | 5 | 1880 |
| 27 | 48 | 116 | 11136 | 534528 | 1.46% | 5 | 1920 |
| 28 | 29 | 192 | 18432 | 534528 | 1.46% | 5 | 1996 |
| 29 | 24 | 232 | 22272 | 534528 | 1.46% | 5 | 2016 |
| 30 | 19 | 292 | 28032 | 532608 | 1.09% | 5 | 136 |
| 31 | 16 | 348 | 33408 | 534528 | 1.46% | 5 | 2048 |
| 32 | 348 | 16 | 1536 | 534528 | 1.46% | 7 | 24 |
| 33 | 232 | 24 | 2304 | 534528 | 1.46% | 7 | 720 |
| 34 | 174 | 32 | 3072 | 534528 | 1.46% | 7 | 1068 |
| 35 | 139 | 40 | 3840 | 533760 | 1.31% | 7 | 518 |
| 36 | 116 | 48 | 4608 | 534528 | 1.46% | 7 | 1416 |
| 37 | 107 | 52 | 4992 | 534144 | 1.38% | 7 | 1090 |
| 38 | 87 | 64 | 6144 | 534528 | 1.46% | 7 | 1590 |
| 39 | 58 | 96 | 9216 | 534528 | 1.46% | 7 | 1764 |
| 40 | 48 | 116 | 11136 | 534528 | 1.46% | 7 | 1824 |
| 41 | 29 | 192 | 18432 | 534528 | 1.46% | 7 | 1938 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 42 | 24 | 232 | 22272 | 534528 | 1.46% | 7 | 1968 |
| 43 | 19 | 292 | 28032 | 532608 | 1.09% | 7 | 98 |
| 44 | 16 | 348 | 33408 | 534528 | 1.46% | 7 | 2016 |
| 45 | 232 | 24 | 2304 | 534528 | 1.46% | 9 | 256 |
| 46 | 174 | 32 | 3072 | 534528 | 1.46% | 9 | 720 |
| 47 | 139 | 40 | 3840 | 533760 | 1.31% | 9 | 240 |
| 48 | 116 | 48 | 4608 | 534528 | 1.46% | 9 | 1184 |
| 49 | 107 | 52 | 4992 | 534144 | 1.38% | 9 | 876 |
| 50 | 87 | 64 | 6144 | 534528 | 1.46% | 9 | 1416 |
| 51 | 58 | 96 | 9216 | 534528 | 1.46% | 9 | 1648 |
| 52 | 48 | 116 | 11136 | 534528 | 1.46% | 9 | 1728 |
| 53 | 29 | 192 | 18432 | 534528 | 1.46% | 9 | 1880 |
| 54 | 24 | 232 | 22272 | 534528 | 1.46% | 9 | 1920 |
| 55 | 19 | 292 | 28032 | 532608 | 1.09% | 9 | 60 |
| 56 | 16 | 348 | 33408 | 534528 | 1.46% | 9 | 1984 |
| 57 | 174 | 32 | 3072 | 534528 | 1.46% | 11 | 372 |
| 58 | 116 | 48 | 4608 | 534528 | 1.46% | 11 | 952 |
| 59 | 107 | 52 | 4992 | 534144 | 1.38% | 11 | 662 |
| 60 | 87 | 64 | 6144 | 534528 | 1.46% | 11 | 1242 |
| 61 | 58 | 96 | 9216 | 534528 | 1.46% | 11 | 1532 |
| 62 | 48 | 116 | 11136 | 534528 | 1.46% | 11 | 1632 |
| 63 | 29 | 192 | 18432 | 534528 | 1.46% | 11 | 1822 |
| 64 | 24 | 232 | 22272 | 534528 | 1.46% | 11 | 1872 |
| 65 | 19 | 292 | 28032 | 532608 | 1.09% | 11 | 22 |
| 66 | 16 | 348 | 33408 | 534528 | 1.46% | 11 | 1952 |

(22) The quantity $N_{CW}$ of symbols before framing is 702464. For example, a CFEC encoding scheme with an encoding overhead of approximately 15.3% is used, or another encoding scheme may be used. A 1st symbol in every $N_{PG}$=96 consecutive symbols is a pilot symbol. In this case, parameters such as a quantity $N_{SF}$ of sub-frames, a quantity $N_{PS}$ of pilot symbols in each sub-frame, a quantity $N_S$ of symbols in each sub-frame, a quantity $N_F$ of symbols in a super-frame, a super-frame overhead OH, and a sum of a quantity $N_{TS,TOT}$ of training symbols in the super-frame, a quantity $N_{FAW}$ of frame alignment word symbols in the super-frame, and a quantity $N_{RES}$ of reserved symbols in the super-frame each are as listed in one entry of Table 81. $N_{TS}+N_{PS}$ is an odd number, and $N_{FAW}$ is an even number. Correspondingly, $N_{RES}>0$, OH = $(N_F - N_{CW})/N_{CW}$, $N_F = N_S \times N_{SF}$, and $N_{TS,TOT} = N_{TS} \times N_{SF}$.

A frame overhead of a super-frame architecture in cases listed in Table 81 is low: OH<1.50%. In Table 81, only $N_{TS,TOT}+N_{FAW}+N_{RES}$ is limited, and a quantity $N_{TS}$ of training symbols in each sub-frame is not separately limited. In addition, neither the quantity $N_S$ of symbols in each sub-frame nor the quantity $N_F$ of symbols in the super-frame is limited in Table 81.

Table 81

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 1 | 740 | 10 | 960 | 710400 | 1.13% | 536 |
| 2 | 673 | 11 | 1056 | 710688 | 1.17% | 821 |

(continued)

| Sequence number | $N_{SF}$ | $N_{PS}$ | $N_S$ | $N_F$ | OH | $N_{TS,TOT}+N_{FAW}+N_{RES}$ |
|---|---|---|---|---|---|---|
| 3 | 617 | 12 | 1152 | 710784 | 1.18% | 916 |
| 4 | 569 | 13 | 1248 | 710112 | 1.09% | 251 |
| 5 | 529 | 14 | 1344 | 710976 | 1.21% | 1106 |
| 6 | 493 | 15 | 1440 | 709920 | 1.06% | 61 |
| 7 | 463 | 16 | 1536 | 711168 | 1.24% | 1296 |
| 8 | 435 | 17 | 1632 | 709920 | 1.06% | 61 |
| 9 | 411 | 18 | 1728 | 710208 | 1.10% | 346 |
| 10 | 390 | 19 | 1824 | 711360 | 1.27% | 1486 |
| 11 | 370 | 20 | 1920 | 710400 | 1.13% | 536 |
| 12 | 353 | 21 | 2016 | 711648 | 1.31% | 1771 |
| 13 | 337 | 22 | 2112 | 711744 | 1.32% | 1866 |
| 14 | 322 | 23 | 2208 | 710976 | 1.21% | 1106 |
| 15 | 309 | 24 | 2304 | 711936 | 1.35% | 2056 |
| 16 | 296 | 25 | 2400 | 710400 | 1.13% | 536 |
| 17 | 285 | 26 | 2496 | 711360 | 1.27% | 1486 |
| 18 | 274 | 27 | 2592 | 710208 | 1.10% | 346 |
| 19 | 265 | 28 | 2688 | 712320 | 1.40% | 2436 |
| 20 | 255 | 29 | 2784 | 709920 | 1.06% | 61 |
| 21 | 247 | 30 | 2880 | 711360 | 1.27% | 1486 |
| 22 | 239 | 31 | 2976 | 711264 | 1.25% | 1391 |
| 23 | 232 | 32 | 3072 | 712704 | 1.46% | 2816 |
| 24 | 225 | 33 | 3168 | 712800 | 1.47% | 2911 |
| 25 | 218 | 34 | 3264 | 711552 | 1.29% | 1676 |
| 26 | 212 | 35 | 3360 | 712320 | 1.40% | 2436 |
| 27 | 206 | 36 | 3456 | 711936 | 1.35% | 2056 |
| 28 | 200 | 37 | 3552 | 710400 | 1.13% | 536 |
| 29 | 195 | 38 | 3648 | 711360 | 1.27% | 1486 |
| 30 | 190 | 39 | 3744 | 711360 | 1.27% | 1486 |
| 31 | 185 | 40 | 3840 | 710400 | 1.13% | 536 |
| 32 | 181 | 41 | 3936 | 712416 | 1.42% | 2531 |
| 33 | 172 | 43 | 4128 | 710016 | 1.08% | 156 |
| 34 | 165 | 45 | 4320 | 712800 | 1.47% | 2911 |
| 35 | 161 | 46 | 4416 | 710976 | 1.21% | 1106 |
| 36 | 158 | 47 | 4512 | 712896 | 1.49% | 3006 |
| 37 | 151 | 49 | 4704 | 710304 | 1.12% | 441 |
| 38 | 148 | 50 | 4800 | 710400 | 1.13% | 536 |
| 39 | 145 | 51 | 4896 | 709920 | 1.06% | 61 |
| 40 | 140 | 53 | 5088 | 712320 | 1.40% | 2436 |
| 41 | 137 | 54 | 5184 | 710208 | 1.10% | 346 |

(continued)

| Sequence number | $N_{SF}$ | $N_{PS}$ | $N_S$ | $N_F$ | OH | $N_{TS,TOT}+N_{FAW}+N_{RES}$ |
|---|---|---|---|---|---|---|
| 42 | 135 | 55 | 5280 | 712800 | 1.47% | 2911 |
| 43 | 130 | 57 | 5472 | 711360 | 1.27% | 1486 |
| 44 | 128 | 58 | 5568 | 712704 | 1.46% | 2816 |
| 45 | 116 | 64 | 6144 | 712704 | 1.46% | 2816 |
| 46 | 114 | 65 | 6240 | 711360 | 1.27% | 1486 |
| 47 | 109 | 68 | 6528 | 711552 | 1.29% | 1676 |
| 48 | 106 | 70 | 6720 | 712320 | 1.40% | 2436 |
| 49 | 103 | 72 | 6912 | 711936 | 1.35% | 2056 |
| 50 | 100 | 74 | 7104 | 710400 | 1.13% | 536 |
| 51 | 99 | 75 | 7200 | 712800 | 1.47% | 2911 |
| 52 | 95 | 78 | 7488 | 711360 | 1.27% | 1486 |
| 53 | 94 | 79 | 7584 | 712896 | 1.49% | 3006 |
| 54 | 87 | 85 | 8160 | 709920 | 1.06% | 61 |
| 55 | 86 | 86 | 8256 | 710016 | 1.08% | 156 |
| 56 | 85 | 87 | 8352 | 709920 | 1.06% | 61 |
| 57 | 79 | 94 | 9024 | 712896 | 1.49% | 3006 |
| 58 | 78 | 95 | 9120 | 711360 | 1.27% | 1486 |
| 59 | 75 | 99 | 9504 | 712800 | 1.47% | 2911 |
| 60 | 74 | 100 | 9600 | 710400 | 1.13% | 536 |
| 61 | 72 | 103 | 9888 | 711936 | 1.35% | 2056 |
| 62 | 70 | 106 | 10176 | 712320 | 1.40% | 2436 |
| 63 | 68 | 109 | 10464 | 711552 | 1.29% | 1676 |
| 64 | 65 | 114 | 10944 | 711360 | 1.27% | 1486 |
| 65 | 64 | 116 | 11136 | 712704 | 1.46% | 2816 |
| 66 | 58 | 128 | 12288 | 712704 | 1.46% | 2816 |
| 67 | 57 | 130 | 12480 | 711360 | 1.27% | 1486 |
| 68 | 55 | 135 | 12960 | 712800 | 1.47% | 2911 |
| 69 | 54 | 137 | 13152 | 710208 | 1.10% | 346 |
| 70 | 53 | 140 | 13440 | 712320 | 1.40% | 2436 |
| 71 | 51 | 145 | 13920 | 709920 | 1.06% | 61 |
| 72 | 50 | 148 | 14208 | 710400 | 1.13% | 536 |
| 73 | 49 | 151 | 14496 | 710304 | 1.12% | 441 |
| 74 | 47 | 158 | 15168 | 712896 | 1.49% | 3006 |
| 75 | 46 | 161 | 15456 | 710976 | 1.21% | 1106 |
| 76 | 45 | 165 | 15840 | 712800 | 1.47% | 2911 |
| 77 | 43 | 172 | 16512 | 710016 | 1.08% | 156 |
| 78 | 41 | 181 | 17376 | 712416 | 1.42% | 2531 |
| 79 | 40 | 185 | 17760 | 710400 | 1.13% | 536 |
| 80 | 39 | 190 | 18240 | 711360 | 1.27% | 1486 |

226

(continued)

| Sequence number | $N_{SF}$ | $N_{PS}$ | $N_S$ | $N_F$ | OH | $N_{TS,TOT}+N_{FAW} + N_{RES}$ |
|---|---|---|---|---|---|---|
| 81 | 38 | 195 | 18720 | 711360 | 1.27% | 1486 |
| 82 | 37 | 200 | 19200 | 710400 | 1.13% | 536 |
| 83 | 36 | 206 | 19776 | 711936 | 1.35% | 2056 |
| 84 | 35 | 212 | 20352 | 712320 | 1.40% | 2436 |
| 85 | 34 | 218 | 20928 | 711552 | 1.29% | 1676 |
| 86 | 33 | 225 | 21600 | 712800 | 1.47% | 2911 |
| 87 | 32 | 232 | 22272 | 712704 | 1.46% | 2816 |
| 88 | 31 | 239 | 22944 | 711264 | 1.25% | 1391 |
| 89 | 30 | 247 | 23712 | 711360 | 1.27% | 1486 |
| 90 | 29 | 255 | 24480 | 709920 | 1.06% | 61 |
| 91 | 29 | 256 | 24576 | 712704 | 1.46% | 2816 |
| 92 | 28 | 265 | 25440 | 712320 | 1.40% | 2436 |
| 93 | 27 | 274 | 26304 | 710208 | 1.10% | 346 |
| 94 | 27 | 275 | 26400 | 712800 | 1.47% | 2911 |
| 95 | 26 | 285 | 27360 | 711360 | 1.27% | 1486 |
| 96 | 25 | 296 | 28416 | 710400 | 1.13% | 536 |
| 97 | 25 | 297 | 28512 | 712800 | 1.47% | 2911 |
| 98 | 24 | 309 | 29664 | 711936 | 1.35% | 2056 |
| 99 | 23 | 322 | 30912 | 710976 | 1.21% | 1106 |
| 100 | 22 | 337 | 32352 | 711744 | 1.32% | 1866 |
| 101 | 21 | 353 | 33888 | 711648 | 1.31% | 1771 |
| 102 | 20 | 370 | 35520 | 710400 | 1.13% | 536 |
| 103 | 20 | 371 | 35616 | 712320 | 1.40% | 2436 |
| 104 | 19 | 390 | 37440 | 711360 | 1.27% | 1486 |

Considering that the quantity $N_{TS}$ of training symbols is not greater than 11, Table 82 may be obtained with reference to Table 81. In this case, a frame overhead OH of a super-frame architecture in cases listed in Table 82 is less than 1.50%, and a value range of the quantity $N_{TS}$ of training symbols in each sub-frame is 2 to 11 symbols. Neither the quantity $N_S$ of symbols in each sub-frame nor the quantity $N_F$ of symbols in the super-frame is limited in Table 82.

Table 82

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 673 | 11 | 1056 | 710688 | 1.17% | 2 | 148 |
| 2 | 570 | 13 | 1248 | 711360 | 1.27% | 2 | 916 |
| 3 | 494 | 15 | 1440 | 711360 | 1.27% | 2 | 992 |
| 4 | 436 | 17 | 1632 | 711552 | 1.29% | 2 | 1240 |
| 5 | 390 | 19 | 1824 | 711360 | 1.27% | 2 | 1096 |
| 6 | 353 | 21 | 2016 | 711648 | 1.31% | 2 | 1418 |
| 7 | 322 | 23 | 2208 | 710976 | 1.21% | 2 | 784 |
| 8 | 296 | 25 | 2400 | 710400 | 1.13% | 2 | 240 |
| 9 | 274 | 27 | 2592 | 710208 | 1.10% | 2 | 72 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 10 | 256 | 29 | 2784 | 712704 | 1.46% | 2 | 2560 |
| 11 | 239 | 31 | 2976 | 711264 | 1.25% | 2 | 1152 |
| 12 | 225 | 33 | 3168 | 712800 | 1.47% | 2 | 2686 |
| 13 | 212 | 35 | 3360 | 712320 | 1.40% | 2 | 2224 |
| 14 | 200 | 37 | 3552 | 710400 | 1.13% | 2 | 336 |
| 15 | 190 | 39 | 3744 | 711360 | 1.27% | 2 | 1296 |
| 16 | 181 | 41 | 3936 | 712416 | 1.42% | 2 | 2350 |
| 17 | 165 | 45 | 4320 | 712800 | 1.47% | 2 | 2746 |
| 18 | 158 | 47 | 4512 | 712896 | 1.49% | 2 | 2848 |
| 19 | 151 | 49 | 4704 | 710304 | 1.12% | 2 | 290 |
| 20 | 140 | 53 | 5088 | 712320 | 1.40% | 2 | 2296 |
| 21 | 135 | 55 | 5280 | 712800 | 1.47% | 2 | 2776 |
| 22 | 130 | 57 | 5472 | 711360 | 1.27% | 2 | 1356 |
| 23 | 114 | 65 | 6240 | 711360 | 1.27% | 2 | 1372 |
| 24 | 99 | 75 | 7200 | 712800 | 1.47% | 2 | 2812 |
| 25 | 94 | 79 | 7584 | 712896 | 1.49% | 2 | 2912 |
| 26 | 78 | 95 | 9120 | 711360 | 1.27% | 2 | 1408 |
| 27 | 75 | 99 | 9504 | 712800 | 1.47% | 2 | 2836 |
| 28 | 72 | 103 | 9888 | 711936 | 1.35% | 2 | 1984 |
| 29 | 68 | 109 | 10464 | 711552 | 1.29% | 2 | 1608 |
| 30 | 55 | 135 | 12960 | 712800 | 1.47% | 2 | 2856 |
| 31 | 54 | 137 | 13152 | 710208 | 1.10% | 2 | 292 |
| 32 | 49 | 151 | 14496 | 710304 | 1.12% | 2 | 392 |
| 33 | 46 | 161 | 15456 | 710976 | 1.21% | 2 | 1060 |
| 34 | 45 | 165 | 15840 | 712800 | 1.47% | 2 | 2866 |
| 35 | 41 | 181 | 17376 | 712416 | 1.42% | 2 | 2490 |
| 36 | 40 | 185 | 17760 | 710400 | 1.13% | 2 | 496 |
| 37 | 38 | 195 | 18720 | 711360 | 1.27% | 2 | 1448 |
| 38 | 33 | 225 | 21600 | 712800 | 1.47% | 2 | 2878 |
| 39 | 31 | 239 | 22944 | 711264 | 1.25% | 2 | 1360 |
| 40 | 30 | 247 | 23712 | 711360 | 1.27% | 2 | 1456 |
| 41 | 29 | 255 | 24480 | 709920 | 1.06% | 2 | 32 |
| 42 | 28 | 265 | 25440 | 712320 | 1.40% | 2 | 2408 |
| 43 | 27 | 275 | 26400 | 712800 | 1.47% | 2 | 2884 |
| 44 | 26 | 285 | 27360 | 711360 | 1.27% | 2 | 1460 |
| 45 | 25 | 297 | 28512 | 712800 | 1.47% | 2 | 2886 |
| 46 | 24 | 309 | 29664 | 711936 | 1.35% | 2 | 2032 |
| 47 | 22 | 337 | 32352 | 711744 | 1.32% | 2 | 1844 |
| 48 | 21 | 353 | 33888 | 711648 | 1.31% | 2 | 1750 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 49 | 20 | 371 | 35616 | 712320 | 1.40% | 2 | 2416 |
| 50 | 742 | 10 | 960 | 712320 | 1.40% | 3 | 952 |
| 51 | 618 | 12 | 1152 | 711936 | 1.35% | 3 | 820 |
| 52 | 529 | 14 | 1344 | 710976 | 1.21% | 3 | 48 |
| 53 | 463 | 16 | 1536 | 711168 | 1.24% | 3 | 370 |
| 54 | 412 | 18 | 1728 | 711936 | 1.35% | 3 | 1232 |
| 55 | 371 | 20 | 1920 | 712320 | 1.40% | 3 | 1694 |
| 56 | 337 | 22 | 2112 | 711744 | 1.32% | 3 | 1192 |
| 57 | 309 | 24 | 2304 | 711936 | 1.35% | 3 | 1438 |
| 58 | 285 | 26 | 2496 | 711360 | 1.27% | 3 | 916 |
| 59 | 265 | 28 | 2688 | 712320 | 1.40% | 3 | 1906 |
| 60 | 247 | 30 | 2880 | 711360 | 1.27% | 3 | 992 |
| 61 | 232 | 32 | 3072 | 712704 | 1.46% | 3 | 2352 |
| 62 | 218 | 34 | 3264 | 711552 | 1.29% | 3 | 1240 |
| 63 | 206 | 36 | 3456 | 711936 | 1.35% | 3 | 1644 |
| 64 | 195 | 38 | 3648 | 711360 | 1.27% | 3 | 1096 |
| 65 | 185 | 40 | 3840 | 710400 | 1.13% | 3 | 166 |
| 66 | 161 | 46 | 4416 | 710976 | 1.21% | 3 | 784 |
| 67 | 148 | 50 | 4800 | 710400 | 1.13% | 3 | 240 |
| 68 | 137 | 54 | 5184 | 710208 | 1.10% | 3 | 72 |
| 69 | 128 | 58 | 5568 | 712704 | 1.46% | 3 | 2560 |
| 70 | 116 | 64 | 6144 | 712704 | 1.46% | 3 | 2584 |
| 71 | 109 | 68 | 6528 | 711552 | 1.29% | 3 | 1458 |
| 72 | 106 | 70 | 6720 | 712320 | 1.40% | 3 | 2224 |
| 73 | 103 | 72 | 6912 | 711936 | 1.35% | 3 | 1850 |
| 74 | 100 | 74 | 7104 | 710400 | 1.13% | 3 | 336 |
| 75 | 95 | 78 | 7488 | 711360 | 1.27% | 3 | 1296 |
| 76 | 79 | 94 | 9024 | 712896 | 1.49% | 3 | 2848 |
| 77 | 74 | 100 | 9600 | 710400 | 1.13% | 3 | 388 |
| 78 | 70 | 106 | 10176 | 712320 | 1.40% | 3 | 2296 |
| 79 | 65 | 114 | 10944 | 711360 | 1.27% | 3 | 1356 |
| 80 | 64 | 116 | 11136 | 712704 | 1.46% | 3 | 2688 |
| 81 | 58 | 128 | 12288 | 712704 | 1.46% | 3 | 2700 |
| 82 | 57 | 130 | 12480 | 711360 | 1.27% | 3 | 1372 |
| 83 | 53 | 140 | 13440 | 712320 | 1.40% | 3 | 2330 |
| 84 | 50 | 148 | 14208 | 710400 | 1.13% | 3 | 436 |
| 85 | 47 | 158 | 15168 | 712896 | 1.49% | 3 | 2912 |
| 86 | 43 | 172 | 16512 | 710016 | 1.08% | 3 | 70 |
| 87 | 39 | 190 | 18240 | 711360 | 1.27% | 3 | 1408 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 88 | 37 | 200 | 19200 | 710400 | 1.13% | 3 | 462 |
| 89 | 36 | 206 | 19776 | 711936 | 1.35% | 3 | 1984 |
| 90 | 35 | 212 | 20352 | 712320 | 1.40% | 3 | 2366 |
| 91 | 34 | 218 | 20928 | 711552 | 1.29% | 3 | 1608 |
| 92 | 32 | 232 | 22272 | 712704 | 1.46% | 3 | 2752 |
| 93 | 29 | 256 | 24576 | 712704 | 1.46% | 3 | 2758 |
| 94 | 27 | 274 | 26304 | 710208 | 1.10% | 3 | 292 |
| 95 | 25 | 296 | 28416 | 710400 | 1.13% | 3 | 486 |
| 96 | 23 | 322 | 30912 | 710976 | 1.21% | 3 | 1060 |
| 97 | 20 | 370 | 35520 | 710400 | 1.13% | 3 | 496 |
| 98 | 19 | 390 | 37440 | 711360 | 1.27% | 3 | 1448 |
| 99 | 675 | 11 | 1056 | 712800 | 1.47% | 4 | 886 |
| 100 | 571 | 13 | 1248 | 712608 | 1.44% | 4 | 1008 |
| 101 | 495 | 15 | 1440 | 712800 | 1.47% | 4 | 1426 |
| 102 | 436 | 17 | 1632 | 711552 | 1.29% | 4 | 368 |
| 103 | 390 | 19 | 1824 | 711360 | 1.27% | 4 | 316 |
| 104 | 353 | 21 | 2016 | 711648 | 1.31% | 4 | 712 |
| 105 | 322 | 23 | 2208 | 710976 | 1.21% | 4 | 140 |
| 106 | 297 | 25 | 2400 | 712800 | 1.47% | 4 | 2020 |
| 107 | 275 | 27 | 2592 | 712800 | 1.47% | 4 | 2086 |
| 108 | 256 | 29 | 2784 | 712704 | 1.46% | 4 | 2048 |
| 109 | 239 | 31 | 2976 | 711264 | 1.25% | 4 | 674 |
| 110 | 225 | 33 | 3168 | 712800 | 1.47% | 4 | 2236 |
| 111 | 212 | 35 | 3360 | 712320 | 1.40% | 4 | 1800 |
| 112 | 190 | 39 | 3744 | 711360 | 1.27% | 4 | 916 |
| 113 | 181 | 41 | 3936 | 712416 | 1.42% | 4 | 1988 |
| 114 | 165 | 45 | 4320 | 712800 | 1.47% | 4 | 2416 |
| 115 | 158 | 47 | 4512 | 712896 | 1.49% | 4 | 2532 |
| 116 | 140 | 53 | 5088 | 712320 | 1.40% | 4 | 2016 |
| 117 | 135 | 55 | 5280 | 712800 | 1.47% | 4 | 2506 |
| 118 | 130 | 57 | 5472 | 711360 | 1.27% | 4 | 1096 |
| 119 | 114 | 65 | 6240 | 711360 | 1.27% | 4 | 1144 |
| 120 | 99 | 75 | 7200 | 712800 | 1.47% | 4 | 2614 |
| 121 | 94 | 79 | 7584 | 712896 | 1.49% | 4 | 2724 |
| 122 | 78 | 95 | 9120 | 711360 | 1.27% | 4 | 1252 |
| 123 | 75 | 99 | 9504 | 712800 | 1.47% | 4 | 2686 |
| 124 | 72 | 103 | 9888 | 711936 | 1.35% | 4 | 1840 |
| 125 | 68 | 109 | 10464 | 711552 | 1.29% | 4 | 1472 |
| 126 | 55 | 135 | 12960 | 712800 | 1.47% | 4 | 2746 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 127 | 54 | 137 | 13152 | 710208 | 1.10% | 4 | 184 |
| 128 | 49 | 151 | 14496 | 710304 | 1.12% | 4 | 294 |
| 129 | 46 | 161 | 15456 | 710976 | 1.21% | 4 | 968 |
| 130 | 45 | 165 | 15840 | 712800 | 1.47% | 4 | 2776 |
| 131 | 41 | 181 | 17376 | 712416 | 1.42% | 4 | 2408 |
| 132 | 40 | 185 | 17760 | 710400 | 1.13% | 4 | 416 |
| 133 | 38 | 195 | 18720 | 711360 | 1.27% | 4 | 1372 |
| 134 | 33 | 225 | 21600 | 712800 | 1.47% | 4 | 2812 |
| 135 | 31 | 239 | 22944 | 711264 | 1.25% | 4 | 1298 |
| 136 | 30 | 247 | 23712 | 711360 | 1.27% | 4 | 1396 |
| 137 | 28 | 265 | 25440 | 712320 | 1.40% | 4 | 2352 |
| 138 | 27 | 275 | 26400 | 712800 | 1.47% | 4 | 2830 |
| 139 | 26 | 285 | 27360 | 711360 | 1.27% | 4 | 1408 |
| 140 | 25 | 297 | 28512 | 712800 | 1.47% | 4 | 2836 |
| 141 | 24 | 309 | 29664 | 711936 | 1.35% | 4 | 1984 |
| 142 | 22 | 337 | 32352 | 711744 | 1.32% | 4 | 1800 |
| 143 | 21 | 353 | 33888 | 711648 | 1.31% | 4 | 1708 |
| 144 | 20 | 371 | 35616 | 712320 | 1.40% | 4 | 2376 |
| 145 | 530 | 14 | 1344 | 712320 | 1.40% | 5 | 316 |
| 146 | 464 | 16 | 1536 | 712704 | 1.46% | 5 | 960 |
| 147 | 412 | 18 | 1728 | 711936 | 1.35% | 5 | 408 |
| 148 | 371 | 20 | 1920 | 712320 | 1.40% | 5 | 952 |
| 149 | 337 | 22 | 2112 | 711744 | 1.32% | 5 | 518 |
| 150 | 309 | 24 | 2304 | 711936 | 1.35% | 5 | 820 |
| 151 | 285 | 26 | 2496 | 711360 | 1.27% | 5 | 346 |
| 152 | 265 | 28 | 2688 | 712320 | 1.40% | 5 | 1376 |
| 153 | 247 | 30 | 2880 | 711360 | 1.27% | 5 | 498 |
| 154 | 232 | 32 | 3072 | 712704 | 1.46% | 5 | 1888 |
| 155 | 218 | 34 | 3264 | 711552 | 1.29% | 5 | 804 |
| 156 | 206 | 36 | 3456 | 711936 | 1.35% | 5 | 1232 |
| 157 | 195 | 38 | 3648 | 711360 | 1.27% | 5 | 706 |
| 158 | 161 | 46 | 4416 | 710976 | 1.21% | 5 | 462 |
| 159 | 128 | 58 | 5568 | 712704 | 1.46% | 5 | 2304 |
| 160 | 116 | 64 | 6144 | 712704 | 1.46% | 5 | 2352 |
| 161 | 109 | 68 | 6528 | 711552 | 1.29% | 5 | 1240 |
| 162 | 106 | 70 | 6720 | 712320 | 1.40% | 5 | 2012 |
| 163 | 103 | 72 | 6912 | 711936 | 1.35% | 5 | 1644 |
| 164 | 100 | 74 | 7104 | 710400 | 1.13% | 5 | 136 |
| 165 | 95 | 78 | 7488 | 711360 | 1.27% | 5 | 1106 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 166 | 79 | 94 | 9024 | 712896 | 1.49% | 5 | 2690 |
| 167 | 74 | 100 | 9600 | 710400 | 1.13% | 5 | 240 |
| 168 | 70 | 106 | 10176 | 712320 | 1.40% | 5 | 2156 |
| 169 | 65 | 114 | 10944 | 711360 | 1.27% | 5 | 1226 |
| 170 | 64 | 116 | 11136 | 712704 | 1.46% | 5 | 2560 |
| 171 | 58 | 128 | 12288 | 712704 | 1.46% | 5 | 2584 |
| 172 | 57 | 130 | 12480 | 711360 | 1.27% | 5 | 1258 |
| 173 | 53 | 140 | 13440 | 712320 | 1.40% | 5 | 2224 |
| 174 | 50 | 148 | 14208 | 710400 | 1.13% | 5 | 336 |
| 175 | 47 | 158 | 15168 | 712896 | 1.49% | 5 | 2818 |
| 176 | 39 | 190 | 18240 | 711360 | 1.27% | 5 | 1330 |
| 177 | 37 | 200 | 19200 | 710400 | 1.13% | 5 | 388 |
| 178 | 36 | 206 | 19776 | 711936 | 1.35% | 5 | 1912 |
| 179 | 35 | 212 | 20352 | 712320 | 1.40% | 5 | 2296 |
| 180 | 34 | 218 | 20928 | 711552 | 1.29% | 5 | 1540 |
| 181 | 32 | 232 | 22272 | 712704 | 1.46% | 5 | 2688 |
| 182 | 29 | 256 | 24576 | 712704 | 1.46% | 5 | 2700 |
| 183 | 27 | 274 | 26304 | 710208 | 1.10% | 5 | 238 |
| 184 | 25 | 296 | 28416 | 710400 | 1.13% | 5 | 436 |
| 185 | 23 | 322 | 30912 | 710976 | 1.21% | 5 | 1014 |
| 186 | 20 | 370 | 35520 | 710400 | 1.13% | 5 | 456 |
| 187 | 19 | 390 | 37440 | 711360 | 1.27% | 5 | 1410 |
| 188 | 495 | 15 | 1440 | 712800 | 1.47% | 6 | 436 |
| 189 | 297 | 25 | 2400 | 712800 | 1.47% | 6 | 1426 |
| 190 | 275 | 27 | 2592 | 712800 | 1.47% | 6 | 1536 |
| 191 | 256 | 29 | 2784 | 712704 | 1.46% | 6 | 1536 |
| 192 | 239 | 31 | 2976 | 711264 | 1.25% | 6 | 196 |
| 193 | 225 | 33 | 3168 | 712800 | 1.47% | 6 | 1786 |
| 194 | 212 | 35 | 3360 | 712320 | 1.40% | 6 | 1376 |
| 195 | 190 | 39 | 3744 | 711360 | 1.27% | 6 | 536 |
| 196 | 181 | 41 | 3936 | 712416 | 1.42% | 6 | 1626 |
| 197 | 165 | 45 | 4320 | 712800 | 1.47% | 6 | 2086 |
| 198 | 158 | 47 | 4512 | 712896 | 1.49% | 6 | 2216 |
| 199 | 140 | 53 | 5088 | 712320 | 1.40% | 6 | 1736 |
| 200 | 135 | 55 | 5280 | 712800 | 1.47% | 6 | 2236 |
| 201 | 130 | 57 | 5472 | 711360 | 1.27% | 6 | 836 |
| 202 | 114 | 65 | 6240 | 711360 | 1.27% | 6 | 916 |
| 203 | 99 | 75 | 7200 | 712800 | 1.47% | 6 | 2416 |
| 204 | 94 | 79 | 7584 | 712896 | 1.49% | 6 | 2536 |

232

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 205 | 78 | 95 | 9120 | 711360 | 1.27% | 6 | 1096 |
| 206 | 75 | 99 | 9504 | 712800 | 1.47% | 6 | 2536 |
| 207 | 72 | 103 | 9888 | 711936 | 1.35% | 6 | 1696 |
| 208 | 68 | 109 | 10464 | 711552 | 1.29% | 6 | 1336 |
| 209 | 55 | 135 | 12960 | 712800 | 1.47% | 6 | 2636 |
| 210 | 54 | 137 | 13152 | 710208 | 1.10% | 6 | 76 |
| 211 | 49 | 151 | 14496 | 710304 | 1.12% | 6 | 196 |
| 212 | 46 | 161 | 15456 | 710976 | 1.21% | 6 | 876 |
| 213 | 45 | 165 | 15840 | 712800 | 1.47% | 6 | 2686 |
| 214 | 41 | 181 | 17376 | 712416 | 1.42% | 6 | 2326 |
| 215 | 40 | 185 | 17760 | 710400 | 1.13% | 6 | 336 |
| 216 | 38 | 195 | 18720 | 711360 | 1.27% | 6 | 1296 |
| 217 | 33 | 225 | 21600 | 712800 | 1.47% | 6 | 2746 |
| 218 | 31 | 239 | 22944 | 711264 | 1.25% | 6 | 1236 |
| 219 | 30 | 247 | 23712 | 711360 | 1.27% | 6 | 1336 |
| 220 | 28 | 265 | 25440 | 712320 | 1.40% | 6 | 2296 |
| 221 | 27 | 275 | 26400 | 712800 | 1.47% | 6 | 2776 |
| 222 | 26 | 285 | 27360 | 711360 | 1.27% | 6 | 1356 |
| 223 | 25 | 297 | 28512 | 712800 | 1.47% | 6 | 2786 |
| 224 | 24 | 309 | 29664 | 711936 | 1.35% | 6 | 1936 |
| 225 | 22 | 337 | 32352 | 711744 | 1.32% | 6 | 1756 |
| 226 | 21 | 353 | 33888 | 711648 | 1.31% | 6 | 1666 |
| 227 | 20 | 371 | 35616 | 712320 | 1.40% | 6 | 2336 |
| 228 | 464 | 16 | 1536 | 712704 | 1.46% | 7 | 32 |
| 229 | 371 | 20 | 1920 | 712320 | 1.40% | 7 | 210 |
| 230 | 309 | 24 | 2304 | 711936 | 1.35% | 7 | 202 |
| 231 | 265 | 28 | 2688 | 712320 | 1.40% | 7 | 846 |
| 232 | 232 | 32 | 3072 | 712704 | 1.46% | 7 | 1424 |
| 233 | 218 | 34 | 3264 | 711552 | 1.29% | 7 | 368 |
| 234 | 206 | 36 | 3456 | 711936 | 1.35% | 7 | 820 |
| 235 | 195 | 38 | 3648 | 711360 | 1.27% | 7 | 316 |
| 236 | 161 | 46 | 4416 | 710976 | 1.21% | 7 | 140 |
| 237 | 128 | 58 | 5568 | 712704 | 1.46% | 7 | 2048 |
| 238 | 116 | 64 | 6144 | 712704 | 1.46% | 7 | 2120 |
| 239 | 109 | 68 | 6528 | 711552 | 1.29% | 7 | 1022 |
| 240 | 106 | 70 | 6720 | 712320 | 1.40% | 7 | 1800 |
| 241 | 103 | 72 | 6912 | 711936 | 1.35% | 7 | 1438 |
| 242 | 95 | 78 | 7488 | 711360 | 1.27% | 7 | 916 |
| 243 | 79 | 94 | 9024 | 712896 | 1.49% | 7 | 2532 |

EP 4 773 530 A1

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 244 | 74 | 100 | 9600 | 710400 | 1.13% | 7 | 92 |
| 245 | 70 | 106 | 10176 | 712320 | 1.40% | 7 | 2016 |
| 246 | 65 | 114 | 10944 | 711360 | 1.27% | 7 | 1096 |
| 247 | 64 | 116 | 11136 | 712704 | 1.46% | 7 | 2432 |
| 248 | 58 | 128 | 12288 | 712704 | 1.46% | 7 | 2468 |
| 249 | 57 | 130 | 12480 | 711360 | 1.27% | 7 | 1144 |
| 250 | 53 | 140 | 13440 | 712320 | 1.40% | 7 | 2118 |
| 251 | 50 | 148 | 14208 | 710400 | 1.13% | 7 | 236 |
| 252 | 47 | 158 | 15168 | 712896 | 1.49% | 7 | 2724 |
| 253 | 39 | 190 | 18240 | 711360 | 1.27% | 7 | 1252 |
| 254 | 37 | 200 | 19200 | 710400 | 1.13% | 7 | 314 |
| 255 | 36 | 206 | 19776 | 711936 | 1.35% | 7 | 1840 |
| 256 | 35 | 212 | 20352 | 712320 | 1.40% | 7 | 2226 |
| 257 | 34 | 218 | 20928 | 711552 | 1.29% | 7 | 1472 |
| 258 | 32 | 232 | 22272 | 712704 | 1.46% | 7 | 2624 |
| 259 | 29 | 256 | 24576 | 712704 | 1.46% | 7 | 2642 |
| 260 | 27 | 274 | 26304 | 710208 | 1.10% | 7 | 184 |
| 261 | 25 | 296 | 28416 | 710400 | 1.13% | 7 | 386 |
| 262 | 23 | 322 | 30912 | 710976 | 1.21% | 7 | 968 |
| 263 | 20 | 370 | 35520 | 710400 | 1.13% | 7 | 416 |
| 264 | 19 | 390 | 37440 | 711360 | 1.27% | 7 | 1372 |
| 265 | 297 | 25 | 2400 | 712800 | 1.47% | 8 | 832 |
| 266 | 275 | 27 | 2592 | 712800 | 1.47% | 8 | 986 |
| 267 | 256 | 29 | 2784 | 712704 | 1.46% | 8 | 1024 |
| 268 | 225 | 33 | 3168 | 712800 | 1.47% | 8 | 1336 |
| 269 | 212 | 35 | 3360 | 712320 | 1.40% | 8 | 952 |
| 270 | 190 | 39 | 3744 | 711360 | 1.27% | 8 | 156 |
| 271 | 181 | 41 | 3936 | 712416 | 1.42% | 8 | 1264 |
| 272 | 165 | 45 | 4320 | 712800 | 1.47% | 8 | 1756 |
| 273 | 158 | 47 | 4512 | 712896 | 1.49% | 8 | 1900 |
| 274 | 140 | 53 | 5088 | 712320 | 1.40% | 8 | 1456 |
| 275 | 135 | 55 | 5280 | 712800 | 1.47% | 8 | 1966 |
| 276 | 130 | 57 | 5472 | 711360 | 1.27% | 8 | 576 |
| 277 | 114 | 65 | 6240 | 711360 | 1.27% | 8 | 688 |
| 278 | 99 | 75 | 7200 | 712800 | 1.47% | 8 | 2218 |
| 279 | 94 | 79 | 7584 | 712896 | 1.49% | 8 | 2348 |
| 280 | 78 | 95 | 9120 | 711360 | 1.27% | 8 | 940 |
| 281 | 75 | 99 | 9504 | 712800 | 1.47% | 8 | 2386 |
| 282 | 72 | 103 | 9888 | 711936 | 1.35% | 8 | 1552 |

234

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 283 | 68 | 109 | 10464 | 711552 | 1.29% | 8 | 1200 |
| 284 | 55 | 135 | 12960 | 712800 | 1.47% | 8 | 2526 |
| 285 | 49 | 151 | 14496 | 710304 | 1.12% | 8 | 98 |
| 286 | 46 | 161 | 15456 | 710976 | 1.21% | 8 | 784 |
| 287 | 45 | 165 | 15840 | 712800 | 1.47% | 8 | 2596 |
| 288 | 41 | 181 | 17376 | 712416 | 1.42% | 8 | 2244 |
| 289 | 40 | 185 | 17760 | 710400 | 1.13% | 8 | 256 |
| 290 | 38 | 195 | 18720 | 711360 | 1.27% | 8 | 1220 |
| 291 | 33 | 225 | 21600 | 712800 | 1.47% | 8 | 2680 |
| 292 | 31 | 239 | 22944 | 711264 | 1.25% | 8 | 1174 |
| 293 | 30 | 247 | 23712 | 711360 | 1.27% | 8 | 1276 |
| 294 | 28 | 265 | 25440 | 712320 | 1.40% | 8 | 2240 |
| 295 | 27 | 275 | 26400 | 712800 | 1.47% | 8 | 2722 |
| 296 | 26 | 285 | 27360 | 711360 | 1.27% | 8 | 1304 |
| 297 | 25 | 297 | 28512 | 712800 | 1.47% | 8 | 2736 |
| 298 | 24 | 309 | 29664 | 711936 | 1.35% | 8 | 1888 |
| 299 | 22 | 337 | 32352 | 711744 | 1.32% | 8 | 1712 |
| 300 | 21 | 353 | 33888 | 711648 | 1.31% | 8 | 1624 |
| 301 | 20 | 371 | 35616 | 712320 | 1.40% | 8 | 2296 |
| 302 | 265 | 28 | 2688 | 712320 | 1.40% | 9 | 316 |
| 303 | 232 | 32 | 3072 | 712704 | 1.46% | 9 | 960 |
| 304 | 206 | 36 | 3456 | 711936 | 1.35% | 9 | 408 |
| 305 | 128 | 58 | 5568 | 712704 | 1.46% | 9 | 1792 |
| 306 | 116 | 64 | 6144 | 712704 | 1.46% | 9 | 1888 |
| 307 | 109 | 68 | 6528 | 711552 | 1.29% | 9 | 804 |
| 308 | 106 | 70 | 6720 | 712320 | 1.40% | 9 | 1588 |
| 309 | 103 | 72 | 6912 | 711936 | 1.35% | 9 | 1232 |
| 310 | 95 | 78 | 7488 | 711360 | 1.27% | 9 | 726 |
| 311 | 79 | 94 | 9024 | 712896 | 1.49% | 9 | 2374 |
| 312 | 70 | 106 | 10176 | 712320 | 1.40% | 9 | 1876 |
| 313 | 65 | 114 | 10944 | 711360 | 1.27% | 9 | 966 |
| 314 | 64 | 116 | 11136 | 712704 | 1.46% | 9 | 2304 |
| 315 | 58 | 128 | 12288 | 712704 | 1.46% | 9 | 2352 |
| 316 | 57 | 130 | 12480 | 711360 | 1.27% | 9 | 1030 |
| 317 | 53 | 140 | 13440 | 712320 | 1.40% | 9 | 2012 |
| 318 | 50 | 148 | 14208 | 710400 | 1.13% | 9 | 136 |
| 319 | 47 | 158 | 15168 | 712896 | 1.49% | 9 | 2630 |
| 320 | 39 | 190 | 18240 | 711360 | 1.27% | 9 | 1174 |
| 321 | 37 | 200 | 19200 | 710400 | 1.13% | 9 | 240 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 322 | 36 | 206 | 19776 | 711936 | 1.35% | 9 | 1768 |
| 323 | 35 | 212 | 20352 | 712320 | 1.40% | 9 | 2156 |
| 324 | 34 | 218 | 20928 | 711552 | 1.29% | 9 | 1404 |
| 325 | 32 | 232 | 22272 | 712704 | 1.46% | 9 | 2560 |
| 326 | 29 | 256 | 24576 | 712704 | 1.46% | 9 | 2584 |
| 327 | 27 | 274 | 26304 | 710208 | 1.10% | 9 | 130 |
| 328 | 25 | 296 | 28416 | 710400 | 1.13% | 9 | 336 |
| 329 | 23 | 322 | 30912 | 710976 | 1.21% | 9 | 922 |
| 330 | 20 | 370 | 35520 | 710400 | 1.13% | 9 | 376 |
| 331 | 19 | 390 | 37440 | 711360 | 1.27% | 9 | 1334 |
| 332 | 297 | 25 | 2400 | 712800 | 1.47% | 10 | 238 |
| 333 | 275 | 27 | 2592 | 712800 | 1.47% | 10 | 436 |
| 334 | 256 | 29 | 2784 | 712704 | 1.46% | 10 | 512 |
| 335 | 225 | 33 | 3168 | 712800 | 1.47% | 10 | 886 |
| 336 | 212 | 35 | 3360 | 712320 | 1.40% | 10 | 528 |
| 337 | 181 | 41 | 3936 | 712416 | 1.42% | 10 | 902 |
| 338 | 165 | 45 | 4320 | 712800 | 1.47% | 10 | 1426 |
| 339 | 158 | 47 | 4512 | 712896 | 1.49% | 10 | 1584 |
| 340 | 140 | 53 | 5088 | 712320 | 1.40% | 10 | 1176 |
| 341 | 135 | 55 | 5280 | 712800 | 1.47% | 10 | 1696 |
| 342 | 130 | 57 | 5472 | 711360 | 1.27% | 10 | 316 |
| 343 | 114 | 65 | 6240 | 711360 | 1.27% | 10 | 460 |
| 344 | 99 | 75 | 7200 | 712800 | 1.47% | 10 | 2020 |
| 345 | 94 | 79 | 7584 | 712896 | 1.49% | 10 | 2160 |
| 346 | 78 | 95 | 9120 | 711360 | 1.27% | 10 | 784 |
| 347 | 75 | 99 | 9504 | 712800 | 1.47% | 10 | 2236 |
| 348 | 72 | 103 | 9888 | 711936 | 1.35% | 10 | 1408 |
| 349 | 68 | 109 | 10464 | 711552 | 1.29% | 10 | 1064 |
| 350 | 55 | 135 | 12960 | 712800 | 1.47% | 10 | 2416 |
| 351 | 46 | 161 | 15456 | 710976 | 1.21% | 10 | 692 |
| 352 | 45 | 165 | 15840 | 712800 | 1.47% | 10 | 2506 |
| 353 | 41 | 181 | 17376 | 712416 | 1.42% | 10 | 2162 |
| 354 | 40 | 185 | 17760 | 710400 | 1.13% | 10 | 176 |
| 355 | 38 | 195 | 18720 | 711360 | 1.27% | 10 | 1144 |
| 356 | 33 | 225 | 21600 | 712800 | 1.47% | 10 | 2614 |
| 357 | 31 | 239 | 22944 | 711264 | 1.25% | 10 | 1112 |
| 358 | 30 | 247 | 23712 | 711360 | 1.27% | 10 | 1216 |
| 359 | 28 | 265 | 25440 | 712320 | 1.40% | 10 | 2184 |
| 360 | 27 | 275 | 26400 | 712800 | 1.47% | 10 | 2668 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 361 | 26 | 285 | 27360 | 711360 | 1.27% | 10 | 1252 |
| 362 | 25 | 297 | 28512 | 712800 | 1.47% | 10 | 2686 |
| 363 | 24 | 309 | 29664 | 711936 | 1.35% | 10 | 1840 |
| 364 | 22 | 337 | 32352 | 711744 | 1.32% | 10 | 1668 |
| 365 | 21 | 353 | 33888 | 711648 | 1.31% | 10 | 1582 |
| 366 | 20 | 371 | 35616 | 712320 | 1.40% | 10 | 2256 |
| 367 | 232 | 32 | 3072 | 712704 | 1.46% | 11 | 496 |
| 368 | 128 | 58 | 5568 | 712704 | 1.46% | 11 | 1536 |
| 369 | 116 | 64 | 6144 | 712704 | 1.46% | 11 | 1656 |
| 370 | 109 | 68 | 6528 | 711552 | 1.29% | 11 | 586 |
| 371 | 106 | 70 | 6720 | 712320 | 1.40% | 11 | 1376 |
| 372 | 103 | 72 | 6912 | 711936 | 1.35% | 11 | 1026 |
| 373 | 95 | 78 | 7488 | 711360 | 1.27% | 11 | 536 |
| 374 | 79 | 94 | 9024 | 712896 | 1.49% | 11 | 2216 |
| 375 | 70 | 106 | 10176 | 712320 | 1.40% | 11 | 1736 |
| 376 | 65 | 114 | 10944 | 711360 | 1.27% | 11 | 836 |
| 377 | 64 | 116 | 11136 | 712704 | 1.46% | 11 | 2176 |
| 378 | 58 | 128 | 12288 | 712704 | 1.46% | 11 | 2236 |
| 379 | 57 | 130 | 12480 | 711360 | 1.27% | 11 | 916 |
| 380 | 53 | 140 | 13440 | 712320 | 1.40% | 11 | 1906 |
| 381 | 50 | 148 | 14208 | 710400 | 1.13% | 11 | 36 |
| 382 | 47 | 158 | 15168 | 712896 | 1.49% | 11 | 2536 |
| 383 | 39 | 190 | 18240 | 711360 | 1.27% | 11 | 1096 |
| 384 | 37 | 200 | 19200 | 710400 | 1.13% | 11 | 166 |
| 385 | 36 | 206 | 19776 | 711936 | 1.35% | 11 | 1696 |
| 386 | 35 | 212 | 20352 | 712320 | 1.40% | 11 | 2086 |
| 387 | 34 | 218 | 20928 | 711552 | 1.29% | 11 | 1336 |
| 388 | 32 | 232 | 22272 | 712704 | 1.46% | 11 | 2496 |
| 389 | 29 | 256 | 24576 | 712704 | 1.46% | 11 | 2526 |
| 390 | 27 | 274 | 26304 | 710208 | 1.10% | 11 | 76 |
| 391 | 25 | 296 | 28416 | 710400 | 1.13% | 11 | 286 |
| 392 | 23 | 322 | 30912 | 710976 | 1.21% | 11 | 876 |
| 393 | 20 | 370 | 35520 | 710400 | 1.13% | 11 | 336 |
| 394 | 19 | 390 | 37440 | 711360 | 1.27% | 11 | 1296 |

In some specific applications, a bus width used in a specific DSP implementation of the receiver and the transmitter is 192 or 128. For ease of hardware implementation, the quantity $N_F$ of symbols in the super-frame needs to be an integer multiple of 192 and 128. Considering that the quantity $N_F$ of symbols in the super-frame needs to be an integer multiple of 192 and 128, Table 83 may be obtained with reference to Table 82. In this case, a frame overhead OH in cases listed in Table 83 is less than 1.50%, and the quantity $N_F$ of symbols in the super-frame is an integer multiple of 192 and 128. In addition, a value range of the quantity $N_{TS}$ of training symbols in each sub-frame is 2 to 11 symbols. The quantity $N_S$ of symbols in each sub-frame is not limited in Table 83.

Table 83

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 436 | 17 | 1632 | 711552 | 1.29% | 2 | 1240 |
| 2 | 296 | 25 | 2400 | 710400 | 1.13% | 2 | 240 |
| 3 | 256 | 29 | 2784 | 712704 | 1.46% | 2 | 2560 |
| 4 | 212 | 35 | 3360 | 712320 | 1.40% | 2 | 2224 |
| 5 | 200 | 37 | 3552 | 710400 | 1.13% | 2 | 336 |
| 6 | 140 | 53 | 5088 | 712320 | 1.40% | 2 | 2296 |
| 7 | 72 | 103 | 9888 | 711936 | 1.35% | 2 | 1984 |
| 8 | 68 | 109 | 10464 | 711552 | 1.29% | 2 | 1608 |
| 9 | 40 | 185 | 17760 | 710400 | 1.13% | 2 | 496 |
| 10 | 28 | 265 | 25440 | 712320 | 1.40% | 2 | 2408 |
| 11 | 24 | 309 | 29664 | 711936 | 1.35% | 2 | 2032 |
| 12 | 20 | 371 | 35616 | 712320 | 1.40% | 2 | 2416 |
| 13 | 742 | 10 | 960 | 712320 | 1.40% | 3 | 952 |
| 14 | 618 | 12 | 1152 | 711936 | 1.35% | 3 | 820 |
| 15 | 463 | 16 | 1536 | 711168 | 1.24% | 3 | 370 |
| 16 | 412 | 18 | 1728 | 711936 | 1.35% | 3 | 1232 |
| 17 | 371 | 20 | 1920 | 712320 | 1.40% | 3 | 1694 |
| 18 | 309 | 24 | 2304 | 711936 | 1.35% | 3 | 1438 |
| 19 | 265 | 28 | 2688 | 712320 | 1.40% | 3 | 1906 |
| 20 | 232 | 32 | 3072 | 712704 | 1.46% | 3 | 2352 |
| 21 | 218 | 34 | 3264 | 711552 | 1.29% | 3 | 1240 |
| 22 | 206 | 36 | 3456 | 711936 | 1.35% | 3 | 1644 |
| 23 | 185 | 40 | 3840 | 710400 | 1.13% | 3 | 166 |
| 24 | 148 | 50 | 4800 | 710400 | 1.13% | 3 | 240 |
| 25 | 128 | 58 | 5568 | 712704 | 1.46% | 3 | 2560 |
| 26 | 116 | 64 | 6144 | 712704 | 1.46% | 3 | 2584 |
| 27 | 109 | 68 | 6528 | 711552 | 1.29% | 3 | 1458 |
| 28 | 106 | 70 | 6720 | 712320 | 1.40% | 3 | 2224 |
| 29 | 103 | 72 | 6912 | 711936 | 1.35% | 3 | 1850 |
| 30 | 100 | 74 | 7104 | 710400 | 1.13% | 3 | 336 |
| 31 | 74 | 100 | 9600 | 710400 | 1.13% | 3 | 388 |
| 32 | 70 | 106 | 10176 | 712320 | 1.40% | 3 | 2296 |
| 33 | 64 | 116 | 11136 | 712704 | 1.46% | 3 | 2688 |
| 34 | 58 | 128 | 12288 | 712704 | 1.46% | 3 | 2700 |
| 35 | 53 | 140 | 13440 | 712320 | 1.40% | 3 | 2330 |
| 36 | 50 | 148 | 14208 | 710400 | 1.13% | 3 | 436 |
| 37 | 43 | 172 | 16512 | 710016 | 1.08% | 3 | 70 |
| 38 | 37 | 200 | 19200 | 710400 | 1.13% | 3 | 462 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 39 | 36 | 206 | 19776 | 711936 | 1.35% | 3 | 1984 |
| 40 | 35 | 212 | 20352 | 712320 | 1.40% | 3 | 2366 |
| 41 | 34 | 218 | 20928 | 711552 | 1.29% | 3 | 1608 |
| 42 | 32 | 232 | 22272 | 712704 | 1.46% | 3 | 2752 |
| 43 | 29 | 256 | 24576 | 712704 | 1.46% | 3 | 2758 |
| 44 | 25 | 296 | 28416 | 710400 | 1.13% | 3 | 486 |
| 45 | 20 | 370 | 35520 | 710400 | 1.13% | 3 | 496 |
| 46 | 436 | 17 | 1632 | 711552 | 1.29% | 4 | 368 |
| 47 | 256 | 29 | 2784 | 712704 | 1.46% | 4 | 2048 |
| 48 | 212 | 35 | 3360 | 712320 | 1.40% | 4 | 1800 |
| 49 | 140 | 53 | 5088 | 712320 | 1.40% | 4 | 2016 |
| 50 | 72 | 103 | 9888 | 711936 | 1.35% | 4 | 1840 |
| 51 | 68 | 109 | 10464 | 711552 | 1.29% | 4 | 1472 |
| 52 | 40 | 185 | 17760 | 710400 | 1.13% | 4 | 416 |
| 53 | 28 | 265 | 25440 | 712320 | 1.40% | 4 | 2352 |
| 54 | 24 | 309 | 29664 | 711936 | 1.35% | 4 | 1984 |
| 55 | 20 | 371 | 35616 | 712320 | 1.40% | 4 | 2376 |
| 56 | 530 | 14 | 1344 | 712320 | 1.40% | 5 | 316 |
| 57 | 464 | 16 | 1536 | 712704 | 1.46% | 5 | 960 |
| 58 | 412 | 18 | 1728 | 711936 | 1.35% | 5 | 408 |
| 59 | 371 | 20 | 1920 | 712320 | 1.40% | 5 | 952 |
| 60 | 309 | 24 | 2304 | 711936 | 1.35% | 5 | 820 |
| 61 | 265 | 28 | 2688 | 712320 | 1.40% | 5 | 1376 |
| 62 | 232 | 32 | 3072 | 712704 | 1.46% | 5 | 1888 |
| 63 | 218 | 34 | 3264 | 711552 | 1.29% | 5 | 804 |
| 64 | 206 | 36 | 3456 | 711936 | 1.35% | 5 | 1232 |
| 65 | 128 | 58 | 5568 | 712704 | 1.46% | 5 | 2304 |
| 66 | 116 | 64 | 6144 | 712704 | 1.46% | 5 | 2352 |
| 67 | 109 | 68 | 6528 | 711552 | 1.29% | 5 | 1240 |
| 68 | 106 | 70 | 6720 | 712320 | 1.40% | 5 | 2012 |
| 69 | 103 | 72 | 6912 | 711936 | 1.35% | 5 | 1644 |
| 70 | 100 | 74 | 7104 | 710400 | 1.13% | 5 | 136 |
| 71 | 74 | 100 | 9600 | 710400 | 1.13% | 5 | 240 |
| 72 | 70 | 106 | 10176 | 712320 | 1.40% | 5 | 2156 |
| 73 | 64 | 116 | 11136 | 712704 | 1.46% | 5 | 2560 |
| 74 | 58 | 128 | 12288 | 712704 | 1.46% | 5 | 2584 |
| 75 | 53 | 140 | 13440 | 712320 | 1.40% | 5 | 2224 |
| 76 | 50 | 148 | 14208 | 710400 | 1.13% | 5 | 336 |
| 77 | 37 | 200 | 19200 | 710400 | 1.13% | 5 | 388 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 78 | 36 | 206 | 19776 | 711936 | 1.35% | 5 | 1912 |
| 79 | 35 | 212 | 20352 | 712320 | 1.40% | 5 | 2296 |
| 80 | 34 | 218 | 20928 | 711552 | 1.29% | 5 | 1540 |
| 81 | 32 | 232 | 22272 | 712704 | 1.46% | 5 | 2688 |
| 82 | 29 | 256 | 24576 | 712704 | 1.46% | 5 | 2700 |
| 83 | 25 | 296 | 28416 | 710400 | 1.13% | 5 | 436 |
| 84 | 20 | 370 | 35520 | 710400 | 1.13% | 5 | 456 |
| 85 | 256 | 29 | 2784 | 712704 | 1.46% | 6 | 1536 |
| 86 | 212 | 35 | 3360 | 712320 | 1.40% | 6 | 1376 |
| 87 | 140 | 53 | 5088 | 712320 | 1.40% | 6 | 1736 |
| 88 | 72 | 103 | 9888 | 711936 | 1.35% | 6 | 1696 |
| 89 | 68 | 109 | 10464 | 711552 | 1.29% | 6 | 1336 |
| 90 | 40 | 185 | 17760 | 710400 | 1.13% | 6 | 336 |
| 91 | 28 | 265 | 25440 | 712320 | 1.40% | 6 | 2296 |
| 92 | 24 | 309 | 29664 | 711936 | 1.35% | 6 | 1936 |
| 93 | 20 | 371 | 35616 | 712320 | 1.40% | 6 | 2336 |
| 94 | 464 | 16 | 1536 | 712704 | 1.46% | 7 | 32 |
| 95 | 371 | 20 | 1920 | 712320 | 1.40% | 7 | 210 |
| 96 | 309 | 24 | 2304 | 711936 | 1.35% | 7 | 202 |
| 97 | 265 | 28 | 2688 | 712320 | 1.40% | 7 | 846 |
| 98 | 232 | 32 | 3072 | 712704 | 1.46% | 7 | 1424 |
| 99 | 218 | 34 | 3264 | 711552 | 1.29% | 7 | 368 |
| 100 | 206 | 36 | 3456 | 711936 | 1.35% | 7 | 820 |
| 101 | 128 | 58 | 5568 | 712704 | 1.46% | 7 | 2048 |
| 102 | 116 | 64 | 6144 | 712704 | 1.46% | 7 | 2120 |
| 103 | 109 | 68 | 6528 | 711552 | 1.29% | 7 | 1022 |
| 104 | 106 | 70 | 6720 | 712320 | 1.40% | 7 | 1800 |
| 105 | 103 | 72 | 6912 | 711936 | 1.35% | 7 | 1438 |
| 106 | 74 | 100 | 9600 | 710400 | 1.13% | 7 | 92 |
| 107 | 70 | 106 | 10176 | 712320 | 1.40% | 7 | 2016 |
| 108 | 64 | 116 | 11136 | 712704 | 1.46% | 7 | 2432 |
| 109 | 58 | 128 | 12288 | 712704 | 1.46% | 7 | 2468 |
| 110 | 53 | 140 | 13440 | 712320 | 1.40% | 7 | 2118 |
| 111 | 50 | 148 | 14208 | 710400 | 1.13% | 7 | 236 |
| 112 | 37 | 200 | 19200 | 710400 | 1.13% | 7 | 314 |
| 113 | 36 | 206 | 19776 | 711936 | 1.35% | 7 | 1840 |
| 114 | 35 | 212 | 20352 | 712320 | 1.40% | 7 | 2226 |
| 115 | 34 | 218 | 20928 | 711552 | 1.29% | 7 | 1472 |
| 116 | 32 | 232 | 22272 | 712704 | 1.46% | 7 | 2624 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 117 | 29 | 256 | 24576 | 712704 | 1.46% | 7 | 2642 |
| 118 | 25 | 296 | 28416 | 710400 | 1.13% | 7 | 386 |
| 119 | 20 | 370 | 35520 | 710400 | 1.13% | 7 | 416 |
| 120 | 256 | 29 | 2784 | 712704 | 1.46% | 8 | 1024 |
| 121 | 212 | 35 | 3360 | 712320 | 1.40% | 8 | 952 |
| 122 | 140 | 53 | 5088 | 712320 | 1.40% | 8 | 1456 |
| 123 | 72 | 103 | 9888 | 711936 | 1.35% | 8 | 1552 |
| 124 | 68 | 109 | 10464 | 711552 | 1.29% | 8 | 1200 |
| 125 | 40 | 185 | 17760 | 710400 | 1.13% | 8 | 256 |
| 126 | 28 | 265 | 25440 | 712320 | 1.40% | 8 | 2240 |
| 127 | 24 | 309 | 29664 | 711936 | 1.35% | 8 | 1888 |
| 128 | 20 | 371 | 35616 | 712320 | 1.40% | 8 | 2296 |
| 129 | 265 | 28 | 2688 | 712320 | 1.40% | 9 | 316 |
| 130 | 232 | 32 | 3072 | 712704 | 1.46% | 9 | 960 |
| 131 | 206 | 36 | 3456 | 711936 | 1.35% | 9 | 408 |
| 132 | 128 | 58 | 5568 | 712704 | 1.46% | 9 | 1792 |
| 133 | 116 | 64 | 6144 | 712704 | 1.46% | 9 | 1888 |
| 134 | 109 | 68 | 6528 | 711552 | 1.29% | 9 | 804 |
| 135 | 106 | 70 | 6720 | 712320 | 1.40% | 9 | 1588 |
| 136 | 103 | 72 | 6912 | 711936 | 1.35% | 9 | 1232 |
| 137 | 70 | 106 | 10176 | 712320 | 1.40% | 9 | 1876 |
| 138 | 64 | 116 | 11136 | 712704 | 1.46% | 9 | 2304 |
| 139 | 58 | 128 | 12288 | 712704 | 1.46% | 9 | 2352 |
| 140 | 53 | 140 | 13440 | 712320 | 1.40% | 9 | 2012 |
| 141 | 50 | 148 | 14208 | 710400 | 1.13% | 9 | 136 |
| 142 | 37 | 200 | 19200 | 710400 | 1.13% | 9 | 240 |
| 143 | 36 | 206 | 19776 | 711936 | 1.35% | 9 | 1768 |
| 144 | 35 | 212 | 20352 | 712320 | 1.40% | 9 | 2156 |
| 145 | 34 | 218 | 20928 | 711552 | 1.29% | 9 | 1404 |
| 146 | 32 | 232 | 22272 | 712704 | 1.46% | 9 | 2560 |
| 147 | 29 | 256 | 24576 | 712704 | 1.46% | 9 | 2584 |
| 148 | 25 | 296 | 28416 | 710400 | 1.13% | 9 | 336 |
| 149 | 20 | 370 | 35520 | 710400 | 1.13% | 9 | 376 |
| 150 | 256 | 29 | 2784 | 712704 | 1.46% | 10 | 512 |
| 151 | 212 | 35 | 3360 | 712320 | 1.40% | 10 | 528 |
| 152 | 140 | 53 | 5088 | 712320 | 1.40% | 10 | 1176 |
| 153 | 72 | 103 | 9888 | 711936 | 1.35% | 10 | 1408 |
| 154 | 68 | 109 | 10464 | 711552 | 1.29% | 10 | 1064 |
| 155 | 40 | 185 | 17760 | 710400 | 1.13% | 10 | 176 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 156 | 28 | 265 | 25440 | 712320 | 1.40% | 10 | 2184 |
| 157 | 24 | 309 | 29664 | 711936 | 1.35% | 10 | 1840 |
| 158 | 20 | 371 | 35616 | 712320 | 1.40% | 10 | 2256 |
| 159 | 232 | 32 | 3072 | 712704 | 1.46% | 11 | 496 |
| 160 | 128 | 58 | 5568 | 712704 | 1.46% | 11 | 1536 |
| 161 | 116 | 64 | 6144 | 712704 | 1.46% | 11 | 1656 |
| 162 | 109 | 68 | 6528 | 711552 | 1.29% | 11 | 586 |
| 163 | 106 | 70 | 6720 | 712320 | 1.40% | 11 | 1376 |
| 164 | 103 | 72 | 6912 | 711936 | 1.35% | 11 | 1026 |
| 165 | 70 | 106 | 10176 | 712320 | 1.40% | 11 | 1736 |
| 166 | 64 | 116 | 11136 | 712704 | 1.46% | 11 | 2176 |
| 167 | 58 | 128 | 12288 | 712704 | 1.46% | 11 | 2236 |
| 168 | 53 | 140 | 13440 | 712320 | 1.40% | 11 | 1906 |
| 169 | 50 | 148 | 14208 | 710400 | 1.13% | 11 | 36 |
| 170 | 37 | 200 | 19200 | 710400 | 1.13% | 11 | 166 |
| 171 | 36 | 206 | 19776 | 711936 | 1.35% | 11 | 1696 |
| 172 | 35 | 212 | 20352 | 712320 | 1.40% | 11 | 2086 |
| 173 | 34 | 218 | 20928 | 711552 | 1.29% | 11 | 1336 |
| 174 | 32 | 232 | 22272 | 712704 | 1.46% | 11 | 2496 |
| 175 | 29 | 256 | 24576 | 712704 | 1.46% | 11 | 2526 |
| 176 | 25 | 296 | 28416 | 710400 | 1.13% | 11 | 286 |
| 177 | 20 | 370 | 35520 | 710400 | 1.13% | 11 | 336 |

In some specific applications, a bus width used in a specific DSP implementation of the receiver and the transmitter is 192 or 128. For ease of hardware implementation, preferably, not only the quantity $N_F$ of symbols in the super-frame needs to be an integer multiple of 192 and 128, but also the quantity $N_S$ of symbols in each sub-frame needs to be an integer multiple of 192 and 128. It should be understood that if $N_S$ is an integer multiple of 192 and 128, $N_F$ is definitely an integer multiple of 192 and 128; or if $N_S$ is not an integer multiple of 192 or 128, $N_F$ is not necessarily an integer multiple of 192 or 128. Considering that the quantity $N_S$ of symbols in each sub-frame is an integer multiple of 192 and 128, Table 84 may be obtained with reference to Table 83. In this case, a frame overhead OH in cases listed in Table 84 is less than 1.50%, and both the quantity $N_F$ of symbols in the super-frame and the quantity $N_S$ of symbols in each sub-frame are integer multiples of 192 and 128. In addition, a value range of the quantity $N_{TS}$ of training symbols in each sub-frame is 2 to 11 symbols.

Table 84

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 1 | 618 | 12 | 1152 | 711936 | 1.35% | 3 | 820 |
| 2 | 463 | 16 | 1536 | 711168 | 1.24% | 3 | 370 |
| 3 | 371 | 20 | 1920 | 712320 | 1.40% | 3 | 1694 |
| 4 | 309 | 24 | 2304 | 711936 | 1.35% | 3 | 1438 |
| 5 | 265 | 28 | 2688 | 712320 | 1.40% | 3 | 1906 |
| 6 | 232 | 32 | 3072 | 712704 | 1.46% | 3 | 2352 |
| 7 | 206 | 36 | 3456 | 711936 | 1.35% | 3 | 1644 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 8 | 185 | 40 | 3840 | 710400 | 1.13% | 3 | 166 |
| 9 | 116 | 64 | 6144 | 712704 | 1.46% | 3 | 2584 |
| 10 | 109 | 68 | 6528 | 711552 | 1.29% | 3 | 1458 |
| 11 | 103 | 72 | 6912 | 711936 | 1.35% | 3 | 1850 |
| 12 | 74 | 100 | 9600 | 710400 | 1.13% | 3 | 388 |
| 13 | 64 | 116 | 11136 | 712704 | 1.46% | 3 | 2688 |
| 14 | 58 | 128 | 12288 | 712704 | 1.46% | 3 | 2700 |
| 15 | 53 | 140 | 13440 | 712320 | 1.40% | 3 | 2330 |
| 16 | 50 | 148 | 14208 | 710400 | 1.13% | 3 | 436 |
| 17 | 43 | 172 | 16512 | 710016 | 1.08% | 3 | 70 |
| 18 | 37 | 200 | 19200 | 710400 | 1.13% | 3 | 462 |
| 19 | 35 | 212 | 20352 | 712320 | 1.40% | 3 | 2366 |
| 20 | 32 | 232 | 22272 | 712704 | 1.46% | 3 | 2752 |
| 21 | 29 | 256 | 24576 | 712704 | 1.46% | 3 | 2758 |
| 22 | 25 | 296 | 28416 | 710400 | 1.13% | 3 | 486 |
| 23 | 464 | 16 | 1536 | 712704 | 1.46% | 5 | 960 |
| 24 | 371 | 20 | 1920 | 712320 | 1.40% | 5 | 952 |
| 25 | 309 | 24 | 2304 | 711936 | 1.35% | 5 | 820 |
| 26 | 265 | 28 | 2688 | 712320 | 1.40% | 5 | 1376 |
| 27 | 232 | 32 | 3072 | 712704 | 1.46% | 5 | 1888 |
| 28 | 206 | 36 | 3456 | 711936 | 1.35% | 5 | 1232 |
| 29 | 116 | 64 | 6144 | 712704 | 1.46% | 5 | 2352 |
| 30 | 109 | 68 | 6528 | 711552 | 1.29% | 5 | 1240 |
| 31 | 103 | 72 | 6912 | 711936 | 1.35% | 5 | 1644 |
| 32 | 74 | 100 | 9600 | 710400 | 1.13% | 5 | 240 |
| 33 | 64 | 116 | 11136 | 712704 | 1.46% | 5 | 2560 |
| 34 | 58 | 128 | 12288 | 712704 | 1.46% | 5 | 2584 |
| 35 | 53 | 140 | 13440 | 712320 | 1.40% | 5 | 2224 |
| 36 | 50 | 148 | 14208 | 710400 | 1.13% | 5 | 336 |
| 37 | 37 | 200 | 19200 | 710400 | 1.13% | 5 | 388 |
| 38 | 35 | 212 | 20352 | 712320 | 1.40% | 5 | 2296 |
| 39 | 32 | 232 | 22272 | 712704 | 1.46% | 5 | 2688 |
| 40 | 29 | 256 | 24576 | 712704 | 1.46% | 5 | 2700 |
| 41 | 25 | 296 | 28416 | 710400 | 1.13% | 5 | 436 |
| 42 | 464 | 16 | 1536 | 712704 | 1.46% | 7 | 32 |
| 43 | 371 | 20 | 1920 | 712320 | 1.40% | 7 | 210 |
| 44 | 309 | 24 | 2304 | 711936 | 1.35% | 7 | 202 |
| 45 | 265 | 28 | 2688 | 712320 | 1.40% | 7 | 846 |
| 46 | 232 | 32 | 3072 | 712704 | 1.46% | 7 | 1424 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 47 | 206 | 36 | 3456 | 711936 | 1.35% | 7 | 820 |
| 48 | 116 | 64 | 6144 | 712704 | 1.46% | 7 | 2120 |
| 49 | 109 | 68 | 6528 | 711552 | 1.29% | 7 | 1022 |
| 50 | 103 | 72 | 6912 | 711936 | 1.35% | 7 | 1438 |
| 51 | 74 | 100 | 9600 | 710400 | 1.13% | 7 | 92 |
| 52 | 64 | 116 | 11136 | 712704 | 1.46% | 7 | 2432 |
| 53 | 58 | 128 | 12288 | 712704 | 1.46% | 7 | 2468 |
| 54 | 53 | 140 | 13440 | 712320 | 1.40% | 7 | 2118 |
| 55 | 50 | 148 | 14208 | 710400 | 1.13% | 7 | 236 |
| 56 | 37 | 200 | 19200 | 710400 | 1.13% | 7 | 314 |
| 57 | 35 | 212 | 20352 | 712320 | 1.40% | 7 | 2226 |
| 58 | 32 | 232 | 22272 | 712704 | 1.46% | 7 | 2624 |
| 59 | 29 | 256 | 24576 | 712704 | 1.46% | 7 | 2642 |
| 60 | 25 | 296 | 28416 | 710400 | 1.13% | 7 | 386 |
| 61 | 265 | 28 | 2688 | 712320 | 1.40% | 9 | 316 |
| 62 | 232 | 32 | 3072 | 712704 | 1.46% | 9 | 960 |
| 63 | 206 | 36 | 3456 | 711936 | 1.35% | 9 | 408 |
| 64 | 116 | 64 | 6144 | 712704 | 1.46% | 9 | 1888 |
| 65 | 109 | 68 | 6528 | 711552 | 1.29% | 9 | 804 |
| 66 | 103 | 72 | 6912 | 711936 | 1.35% | 9 | 1232 |
| 67 | 64 | 116 | 11136 | 712704 | 1.46% | 9 | 2304 |
| 68 | 58 | 128 | 12288 | 712704 | 1.46% | 9 | 2352 |
| 69 | 53 | 140 | 13440 | 712320 | 1.40% | 9 | 2012 |
| 70 | 50 | 148 | 14208 | 710400 | 1.13% | 9 | 136 |
| 71 | 37 | 200 | 19200 | 710400 | 1.13% | 9 | 240 |
| 72 | 35 | 212 | 20352 | 712320 | 1.40% | 9 | 2156 |
| 73 | 32 | 232 | 22272 | 712704 | 1.46% | 9 | 2560 |
| 74 | 29 | 256 | 24576 | 712704 | 1.46% | 9 | 2584 |
| 75 | 25 | 296 | 28416 | 710400 | 1.13% | 9 | 336 |
| 76 | 232 | 32 | 3072 | 712704 | 1.46% | 11 | 496 |
| 77 | 116 | 64 | 6144 | 712704 | 1.46% | 11 | 1656 |
| 78 | 109 | 68 | 6528 | 711552 | 1.29% | 11 | 586 |
| 79 | 103 | 72 | 6912 | 711936 | 1.35% | 11 | 1026 |
| 80 | 64 | 116 | 11136 | 712704 | 1.46% | 11 | 2176 |
| 81 | 58 | 128 | 12288 | 712704 | 1.46% | 11 | 2236 |
| 82 | 53 | 140 | 13440 | 712320 | 1.40% | 11 | 1906 |
| 83 | 50 | 148 | 14208 | 710400 | 1.13% | 11 | 36 |
| 84 | 37 | 200 | 19200 | 710400 | 1.13% | 11 | 166 |
| 85 | 35 | 212 | 20352 | 712320 | 1.40% | 11 | 2086 |

(continued)

| Sequence number | $N_{SF}$ | $N_{PS}$ | $N_S$ | $N_F$ | OH | $N_{TS}$ | $N_{FAW} + N_{RES}$ |
|---|---|---|---|---|---|---|---|
| 86 | 32 | 232 | 22272 | 712704 | 1.46% | 11 | 2496 |
| 87 | 29 | 256 | 24576 | 712704 | 1.46% | 11 | 2526 |
| 88 | 25 | 296 | 28416 | 710400 | 1.13% | 11 | 286 |

Embodiments of this application further provide a plurality of specific super-frame formats, and descriptions are provided as follows.

Embodiment 1: A symbol before framing is obtained by performing OFEC encoding with encoding overhead of approximately of 15.3%. A quantity of symbols before framing is 172032. Pilot symbols are at an interval of 128 symbols. Corresponding parameters such as $N_{SF}$, $N_{TS}$, $N_{PS}$, $N_{FAW}$, $N_{RES}$, $N_S$, $N_F$, and OH are shown in Table 85 below.

Table 85

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 12 | 113 | 14464 | 173568 | 0.89% | 22 | 10 | 50 |

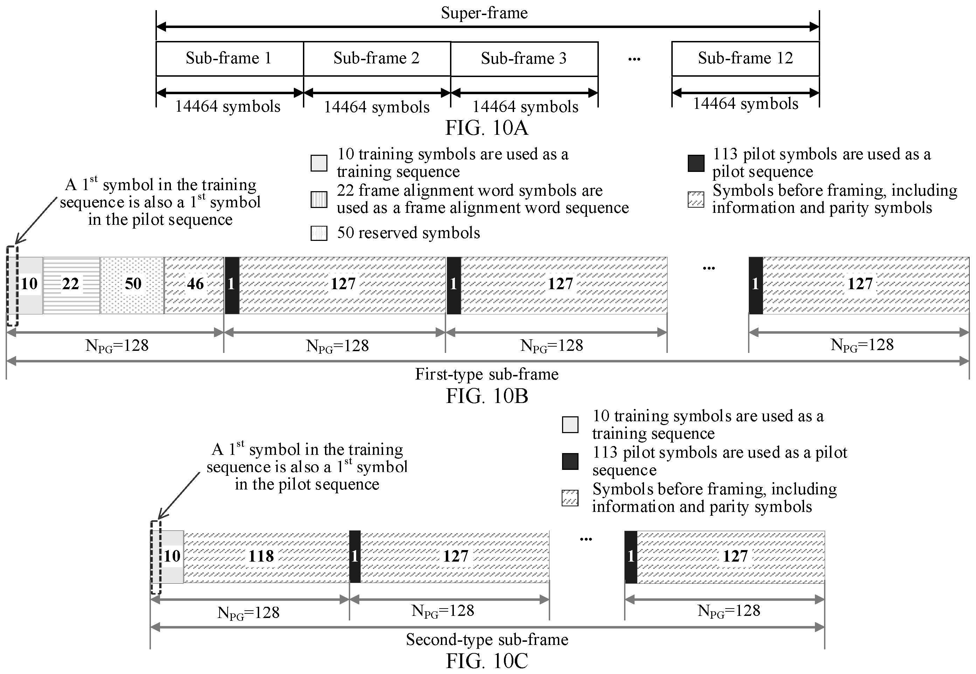

FIG. 10A to FIG. 10C are diagrams of a first implementation of a super-frame and sub-frames according to an embodiment of this application. The super-frame includes 12 sub-frames, and each sub-frame includes 14464 symbols, as shown in FIG. 10A. As shown in FIG. 10B, a first-type sub-frame has 113 pilot symbols, 10 training symbols, 22 frame alignment word symbols, and 50 reserved symbols. In existing 400G-ZR and 800G-ZR standards, a 1st sub-frame also includes 22 frame alignment word symbols, and this facilitates multiplexing. As shown in FIG. 10C, a second-type sub-frame also has 113 pilot symbols and 10 training symbols. In each sub-frame, a 1st symbol in every 128 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, but a quantity $N_S$ of symbols in each sub-frame is not an integer multiple of 192 or 128.

Embodiment 2: A symbol before framing is obtained by performing OFEC encoding with an encoding overhead of approximately of 15.3%. A quantity of symbols before framing is 344064. Pilot symbols are at an interval of 128 symbols. Corresponding parameters such as $N_{SF}$, $N_{TS}$, $N_{PS}$, $N_{FAW}$, $N_{RES}$, $N_S$, $N_F$, and OH are shown in Table 86 below.

Table 86

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 12 | 226 | 28928 | 347136 | 0.89% | 22 | 11 | 218 |

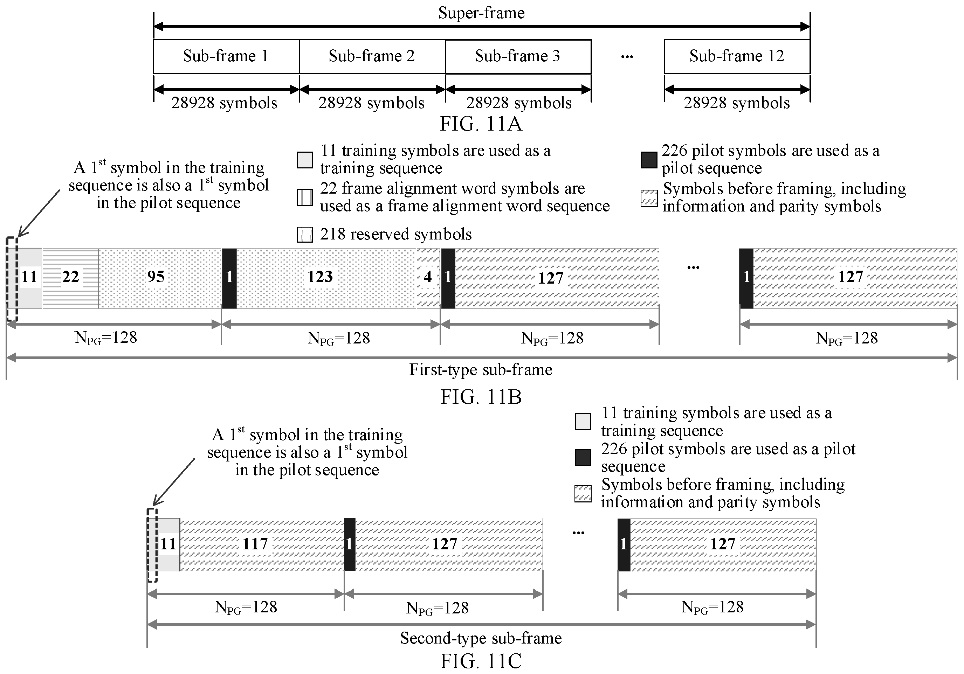

FIG. 11A to FIG. 11C are diagrams of a second implementation of a super-frame and sub-frames according to an embodiment of this application. The super-frame includes 12 sub-frames, and each sub-frame includes 28928 symbols, as shown in FIG. 11A. As shown in FIG. 11B, a first-type sub-frame has 226 pilot symbols, 11 training symbols, 22 frame alignment word symbols, and 218 reserved symbols. In existing 400G-ZR and 800G-ZR standards, a 1st sub-frame also includes 11 training symbols and 22 frame alignment word symbols, and this facilitates multiplexing. As shown in FIG. 11C, a second-type sub-frame also has 226 pilot symbols and 11 training symbols. In each sub-frame, a 1st symbol in every 128 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, but a quantity $N_S$ of symbols in each sub-frame is not an integer multiple of 192 or 128.

Embodiment 3: A symbol before framing is obtained by performing OFEC encoding with an encoding overhead of approximately of 15.3%. A quantity of symbols before framing is 516096. Pilot symbols are at an interval of 128 symbols. Corresponding parameters such as $N_{SF}$, $N_{TS}$, $N_{PS}$, $N_{FAW}$, $N_{RES}$, $N_S$, $N_F$, and OH are shown in Table 87 below.

Table 87

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 97 | 42 | 5376 | 521472 | 1.04% | 22 | 11 | 310 |

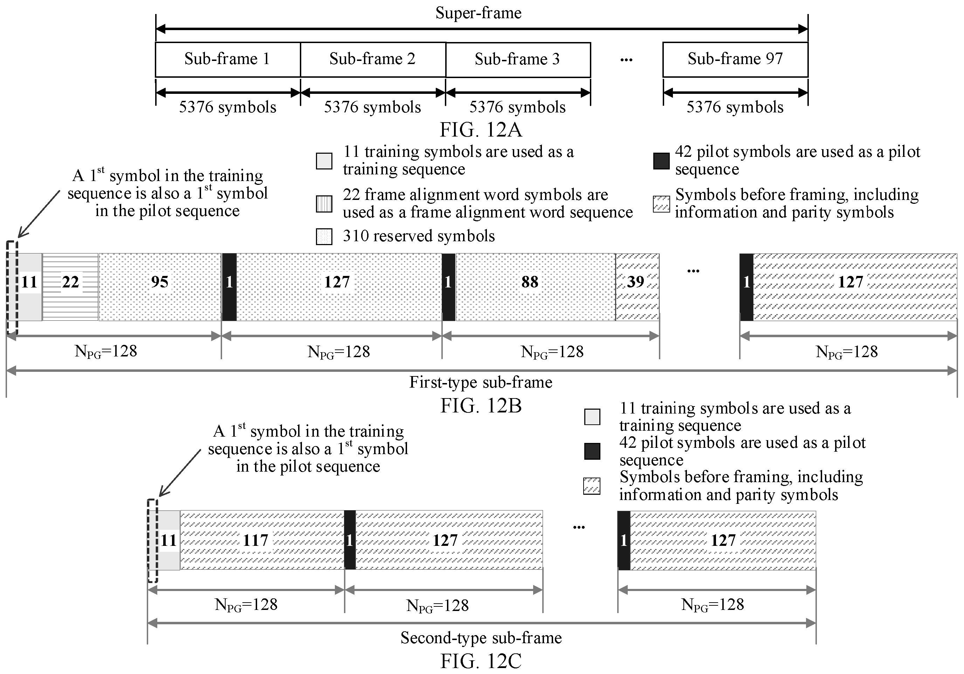

FIG. 12A to FIG. 12C are diagrams of a third implementation of a super-frame and sub-frames according to an embodiment of this application. The super-frame includes 97 sub-frames, and each sub-frame includes 5376 symbols, as shown in FIG. 12A. As shown in FIG. 12B, a first-type sub-frame has 42 pilot symbols, 11 training symbols, 22 frame alignment word symbols, and 310 reserved symbols. In existing 400G-ZR and 800G-ZR standards, a 1st sub-frame also includes 11 training symbols and 22 frame alignment word symbols, and this facilitates multiplexing. As shown in FIG. 12C, a second-type sub-frame also has 42 pilot symbols and 11 training symbols. In each sub-frame, a 1st symbol in every 128 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

Embodiment 4: A symbol before framing is obtained by performing OFEC encoding with an encoding overhead of approximately of 15.3%. A quantity of symbols before framing is 688128. Pilot symbols are at an interval of 128 symbols. Corresponding parameters such as $N_{SF}$, $N_{TS}$, $N_{PS}$, $N_{FAW}$, $N_{RES}$, $N_S$, $N_F$, and OH are shown in Table 88 below.

Table 88

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 67 | 81 | 10368 | 694656 | 0.95% | 22 | 10 | 476 |

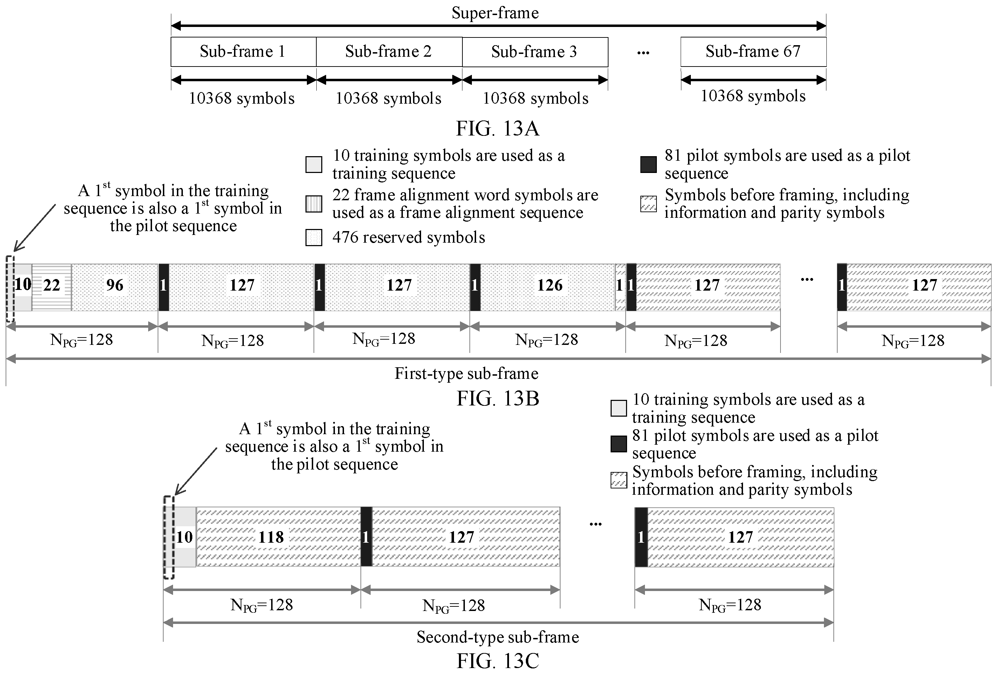

FIG. 13A to FIG. 13C are diagrams of a fourth implementation of a super-frame and sub-frames according to an embodiment of this application. The super-frame includes 67 sub-frames, and each sub-frame includes 10368 symbols, as shown in FIG. 13A. As shown in FIG. 13B, a first-type sub-frame has 81 pilot symbols, 10 training symbols, 22 frame alignment word symbols, and 476 reserved symbols. In existing 400G-ZR and 800G-ZR standards, a 1st sub-frame also includes 22 frame alignment word symbols, and this facilitates multiplexing. As shown in FIG. 13C, a second-type sub-frame also has 81 pilot symbols and 10 training symbols. In each sub-frame, a 1st symbol in every 128 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

Embodiment 5: A symbol before framing is obtained by performing OFEC encoding with an encoding overhead of approximately of 17.9%. A quantity of symbols before framing is 150528. Pilot symbols are at an interval of 128 symbols. Corresponding parameters such as $N_{SF}$, $N_{TS}$, $N_{PS}$, $N_{FAW}$, $N_{RES}$, $N_S$, $N_F$, and OH are shown in Table 89 below.

Table 89

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 22 | 54 | 6912 | 152064 | 1.02% | 22 | 11 | 106 |

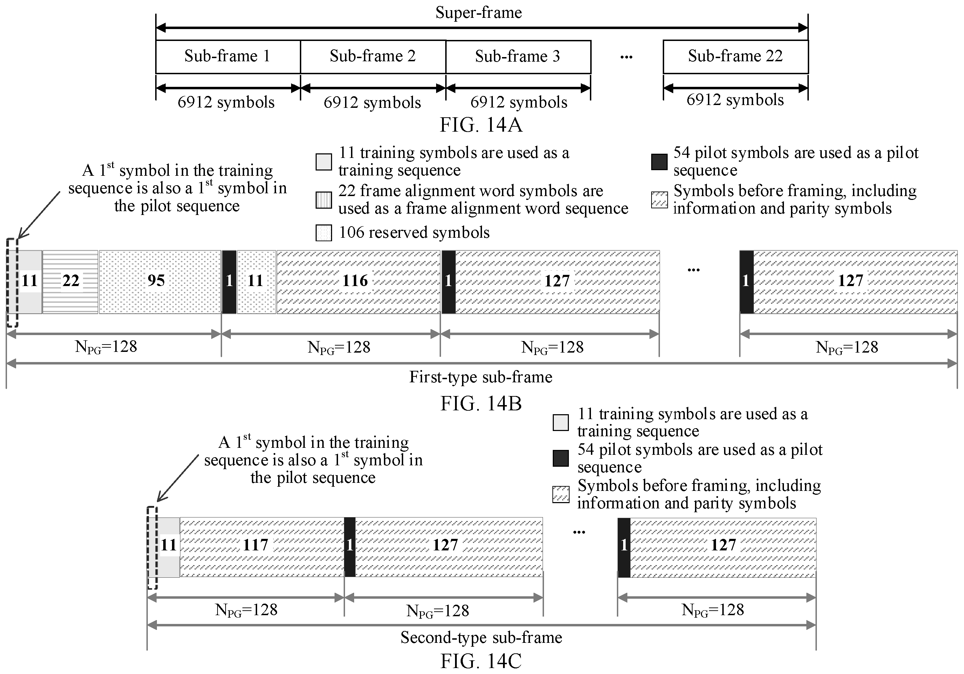

FIG. 14A to FIG. 14C are diagrams of a fifth implementation of a super-frame and sub-frames according to an embodiment of this application. The super-frame includes 22 sub-frames, and each sub-frame includes 6912 symbols, as shown in FIG. 14A. As shown in FIG. 14B, a first-type sub-frame has 54 pilot symbols, 11 training symbols, 22 frame alignment word symbols, and 106 reserved symbols. In existing 400G-ZR and 800G-ZR standards, a 1st sub-frame also includes 11 training symbols and 22 frame alignment word symbols, and this facilitates multiplexing. As shown in FIG. 14C, a second-type sub-frame also has 54 pilot symbols and 11 training symbols. In each sub-frame, a 1st symbol in every 128 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

Embodiment 6: A symbol before framing is obtained by performing OFEC encoding with an encoding overhead of approximately of 21.5%. A quantity of symbols before framing is 129024. Pilot symbols are at an interval of 128 symbols. Corresponding parameters such as $N_{SF}$, $N_{TS}$, $N_{PS}$, $N_{FAW}$, $N_{RES}$, $N_S$, $N_F$, and OH are shown in Table 90 below.

Table 90

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 34 | 30 | 3840 | 130560 | 1.19% | 22 | 11 | 154 |

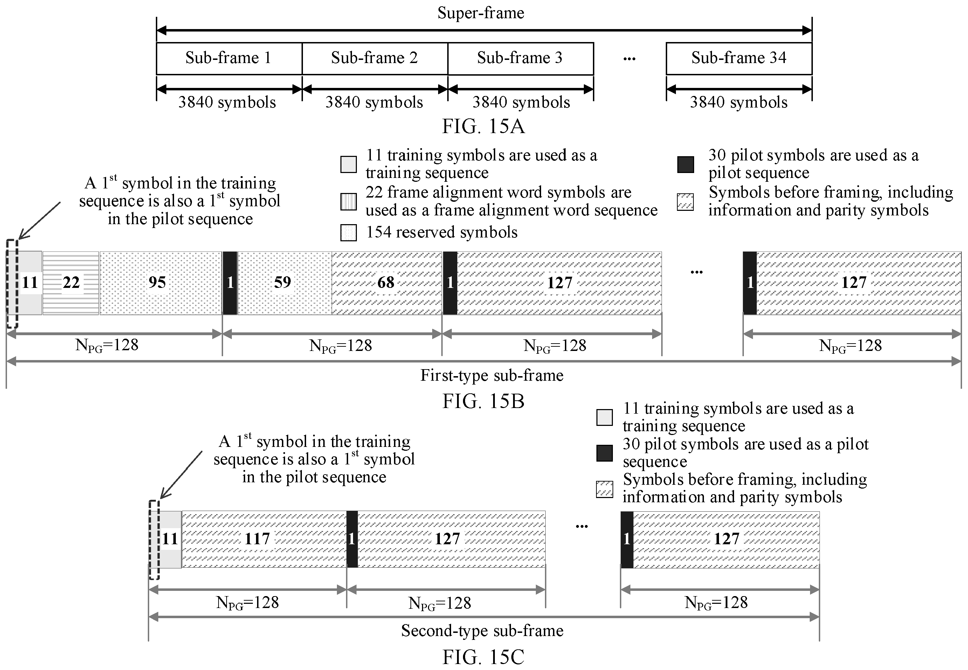

FIG. 15A to FIG. 15C are diagrams of a sixth implementation of a super-frame and sub-frames according to an embodiment of this application. The super-frame includes 34 sub-frames, and each sub-frame includes 3840 symbols, as shown in FIG. 15A. As shown in FIG. 15B, a first-type sub-frame has 30 pilot symbols, 11 training symbols, 22 frame alignment word symbols, and 154 reserved symbols. In existing 400G-ZR and 800G-ZR standards, a 1st sub-frame also includes 11 training symbols and 22 frame alignment word symbols, and this facilitates multiplexing. As shown in FIG. 15C, a second-type sub-frame also has 30 pilot symbols and 11 training symbols. In each sub-frame, a 1st symbol in every 128 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

Embodiment 7: A symbol before framing is obtained by performing OFEC encoding with an encoding overhead of approximately of 27.0%. A quantity of symbols before framing is 107520. Pilot symbols are at an interval of 128 symbols. Corresponding parameters such as $N_{SF}$, $N_{TS}$, $N_{PS}$, $N_{FAW}$, $N_{RES}$, $N_S$, $N_F$, and OH are shown in Table 91 below.

Table 91

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 25 | 34 | 4352 | 108800 | 1.19% | 22 | 11 | 158 |

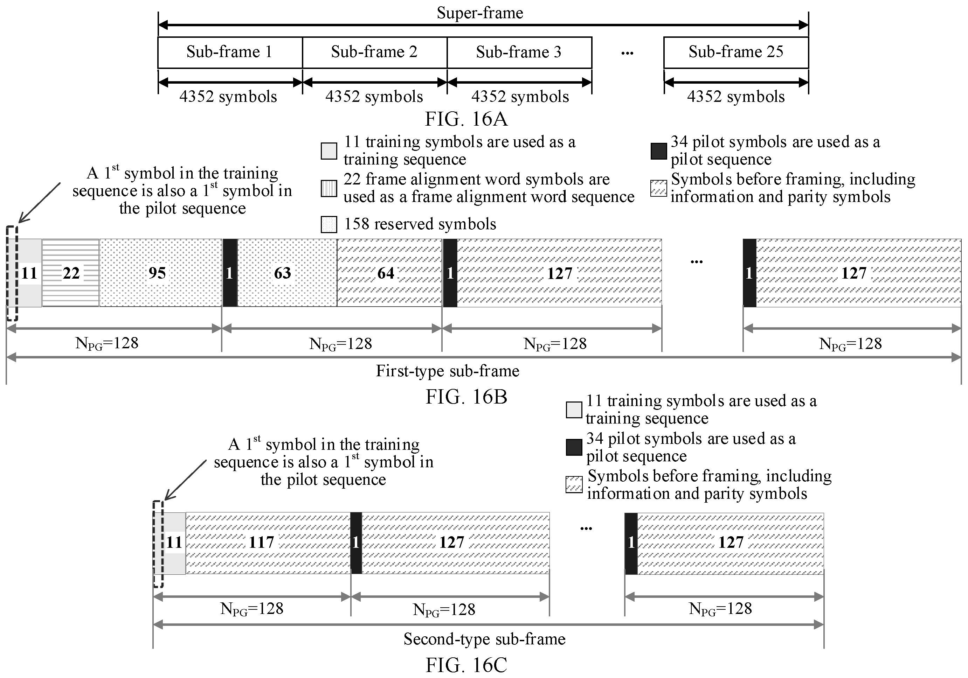

FIG. 16A to FIG. 16C are diagrams of a seventh implementation of a super-frame and sub-frames according to an embodiment of this application. The super-frame includes 25 sub-frames, and each sub-frame includes 4352 symbols, as shown in FIG. 16A. As shown in FIG. 16B, a first-type sub-frame has 34 pilot symbols, 11 training symbols, 22 frame alignment word symbols, and 158 reserved symbols. In existing 400G-ZR and 800G-ZR standards, a 1st sub-frame also includes 11 training symbols and 22 frame alignment word symbols, and this facilitates multiplexing. As shown in FIG. 16C, the second-type sub-frame also has 34 pilot symbols and 11 training symbols. In each sub-frame, a 1st symbol in every 128 symbols is a pilot symbol, and neither a quantity $N_F$ of symbols in the super-frame nor a quantity $N_S$ of symbols in each sub-frame is an integer multiple of 192 or 128.

Embodiment 8: A symbol before framing is obtained by performing CFEC encoding with an encoding overhead of approximately of 15.3%. A quantity of symbols before framing is 175616. Pilot symbols are at an interval of 128 symbols. Corresponding parameters such as $N_{SF}$, $N_{TS}$, $N_{PS}$, $N_{FAW}$, $N_{RES}$, $N_S$, $N_F$, and OH are shown in Table 92 below.

Table 92

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 21 | 66 | 8448 | 177408 | 1.02% | 22 | 11 | 174 |

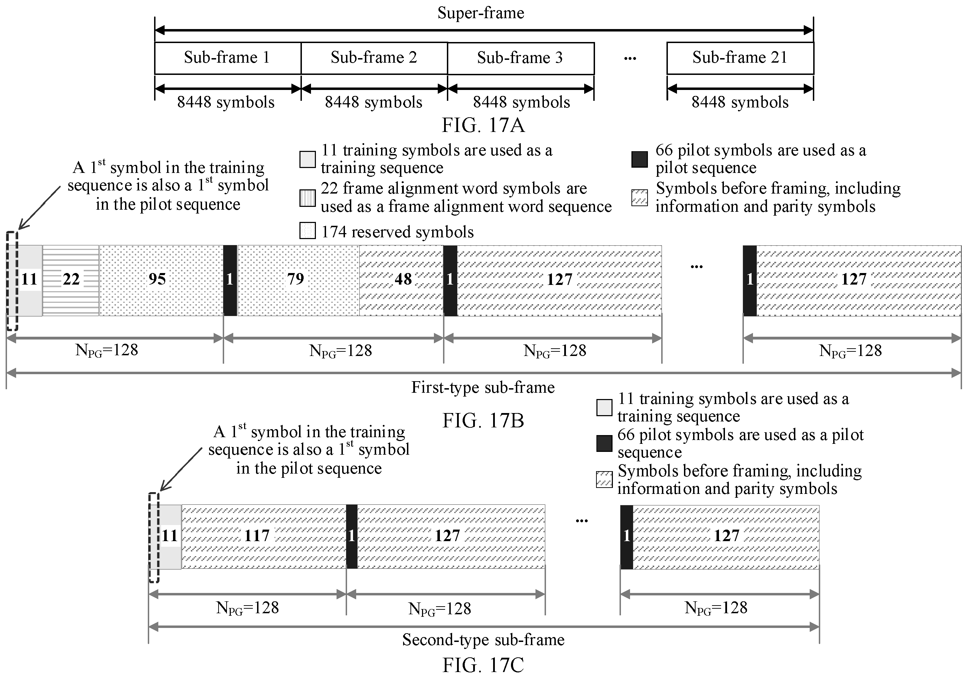

FIG. 17A to FIG. 17C are diagrams of an eighth implementation of a super-frame and sub-frames according to an embodiment of this application. The super-frame includes 21 sub-frames, and each sub-frame includes 8448 symbols, as shown in FIG. 17A. As shown in FIG. 17B, a first-type sub-frame has 66 pilot symbols, 11 training symbols, 22 frame alignment word symbols, and 174 reserved symbols. In existing 400G-ZR and 800G-ZR standards, a 1st sub-frame also includes 11 training symbols and 22 frame alignment word symbols, and this facilitates multiplexing. As shown in FIG. 17C, a second-type sub-frame also has 66 pilot symbols and 11 training symbols. In each sub-frame, a 1st symbol in every 128 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

Embodiment 9: A symbol before framing is obtained by performing OFEC encoding with an encoding overhead of approximately of 15.3%. A quantity of symbols before framing is 172032. Pilot symbols are at an interval of 96 symbols. Corresponding parameters such as $N_{SF}$, $N_{TS}$, $N_{PS}$, $N_{FAW}$, $N_{RES}$, $N_S$, $N_F$, and OH are shown in Table 93 below.

Table 93

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 33 | 55 | 5280 | 174240 | 1.28% | 22 | 10 | 74 |

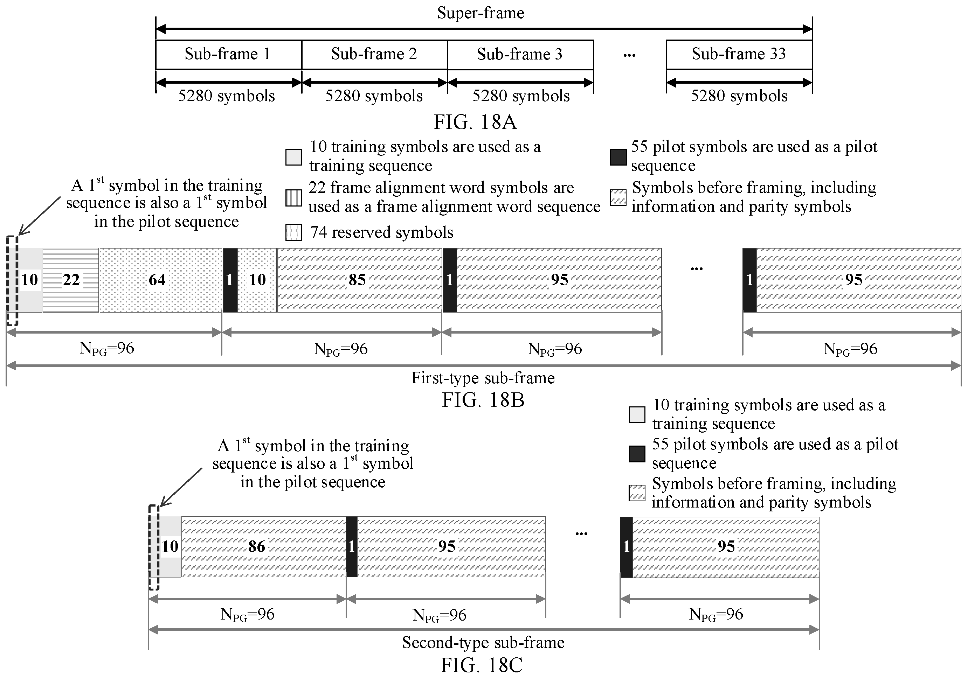

FIG. 18A to FIG. 18C are diagrams of a ninth implementation of a super-frame and sub-frames according to an embodiment of this application. The super-frame includes 33 sub-frames, and each sub-frame includes 5280 symbols, as shown in FIG. 18A. As shown in FIG. 18B, a first-type sub-frame has 55 pilot symbols, 10 training symbols, 22 frame alignment word symbols, and 74 reserved symbols. In existing 400G-ZR and 800G-ZR standards, a 1st sub-frame also includes 22 frame alignment word symbols, and this facilitates multiplexing. As shown in FIG. 18C, a second-type sub-frame also has 55 pilot symbols and 10 training symbols. In each sub-frame, a 1st symbol in every 96 symbols is a pilot symbol, and neither a quantity $N_F$ of symbols in the super-frame nor a quantity $N_S$ of symbols in each sub-frame is an integer multiple of 192 or 128.

Embodiment 10: A symbol before framing is obtained by performing OFEC encoding with an encoding overhead of approximately of 15.3%. A quantity of symbols before framing is 344064. Pilot symbols are at an interval of 96 symbols. Corresponding parameters such as $N_{SF}$, $N_{TS}$, $N_{PS}$, $N_{FAW}$, $N_{RES}$, $N_S$, $N_F$, and OH are shown in Table 94 below.

Table 94

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 24 | 151 | 14496 | 347904 | 1.12% | 22 | 6 | 74 |

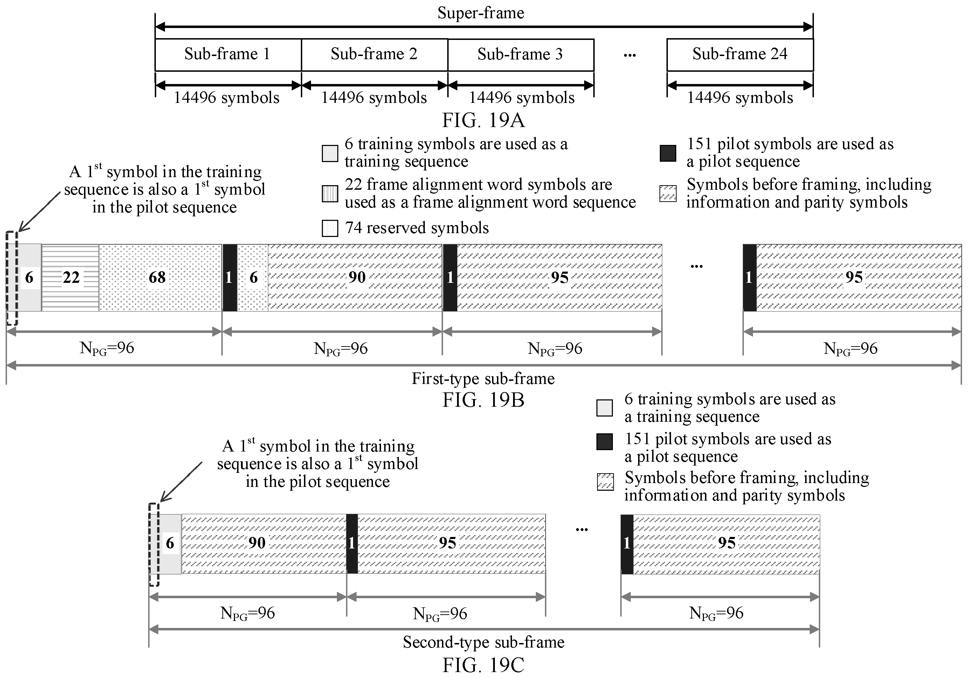

FIG. 19A to FIG. 19C are diagrams of a tenth implementation of a super-frame and sub-frames according to an embodiment of this application. The super-frame includes 24 sub-frames, and each sub-frame includes 14496 symbols, as shown in FIG. 19A. As shown in FIG. 19B, a first-type sub-frame has 151 pilot symbols, 6 training symbols, 22 frame alignment word symbols, and 74 reserved symbols. In existing 400G-ZR and 800G-ZR standards, a 1st sub-frame also includes 22 frame alignment word symbols, and this facilitates multiplexing. As shown in FIG. 19C, a second-type sub-frame also has 151 pilot symbols and 6 training symbols. In each sub-frame, a 1st symbol in every 96 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, but a quantity $N_S$ of symbols in each sub-frame is not an integer multiple of 192 or 128.

Embodiment 11: A symbol before framing is obtained by performing OFEC encoding with an encoding overhead of approximately of 15.3%. A quantity of symbols before framing is 516096. Pilot symbols are at an interval of 96 symbols. Corresponding parameters such as $N_{SF}$, $N_{TS}$, $N_{PS}$, $N_{FAW}$, $N_{RES}$, $N_S$, $N_F$, and OH are shown in Table 95 below.

Table 95

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 40 | 136 | 13056 | 522240 | 1.19% | 22 | 11 | 282 |

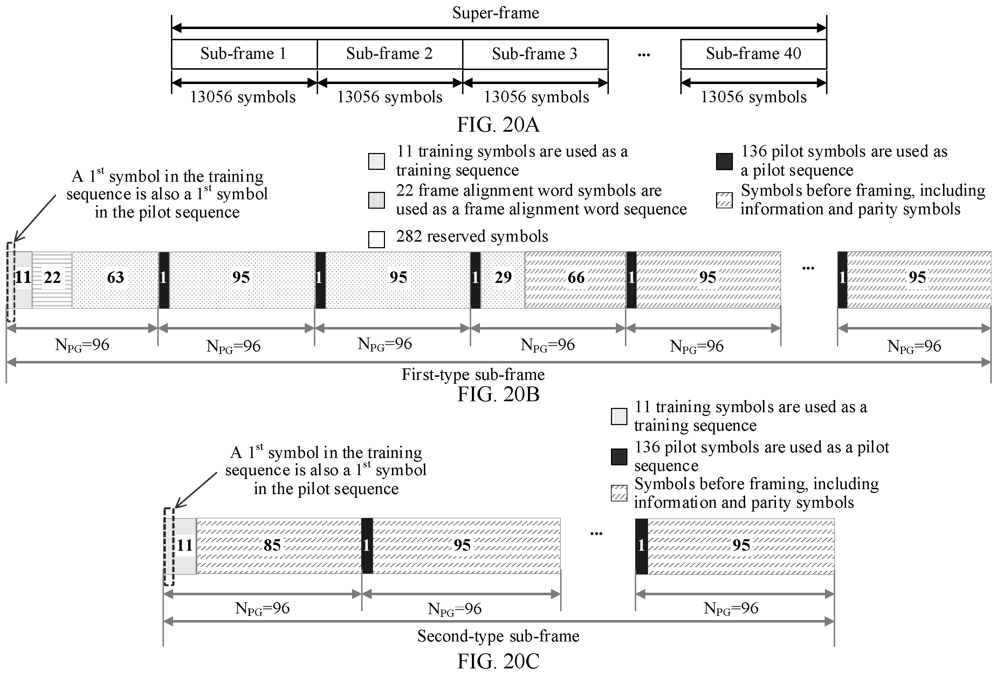

FIG. 20A to FIG. 20C are diagrams of an eleventh implementation of a super-frame and sub-frames according to an embodiment of this application. The super-frame includes 40 sub-frames, and each sub-frame includes 13056 symbols, as shown in FIG. 20A. As shown in FIG. 20B, a first-type sub-frame has 136 pilot symbols, 11 training symbols, 22 frame alignment word symbols, and 282 reserved symbols. In existing 400G-ZR and 800G-ZR standards, a 1st sub-frame also includes 11 training symbols and 22 frame alignment word symbols, and this facilitates multiplexing. As shown in FIG. 20C, a second-type sub-frame also has 136 pilot symbols and 11 training symbols. In each sub-frame, a 1st symbol in every 96 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

Embodiment 12: A symbol before framing is obtained by performing OFEC encoding with an encoding overhead of approximately of 15.3%. A quantity of symbols before framing is 688128. Pilot symbols are at an interval of 96 symbols. Corresponding parameters such as $N_{SF}$, $N_{TS}$, $N_{PS}$, $N_{FAW}$, $N_{RES}$, $N_S$, $N_F$, and OH are shown in Table 96 below.

Table 96

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 49 | 148 | 14208 | 696192 | 1.17% | 22 | 11 | 300 |

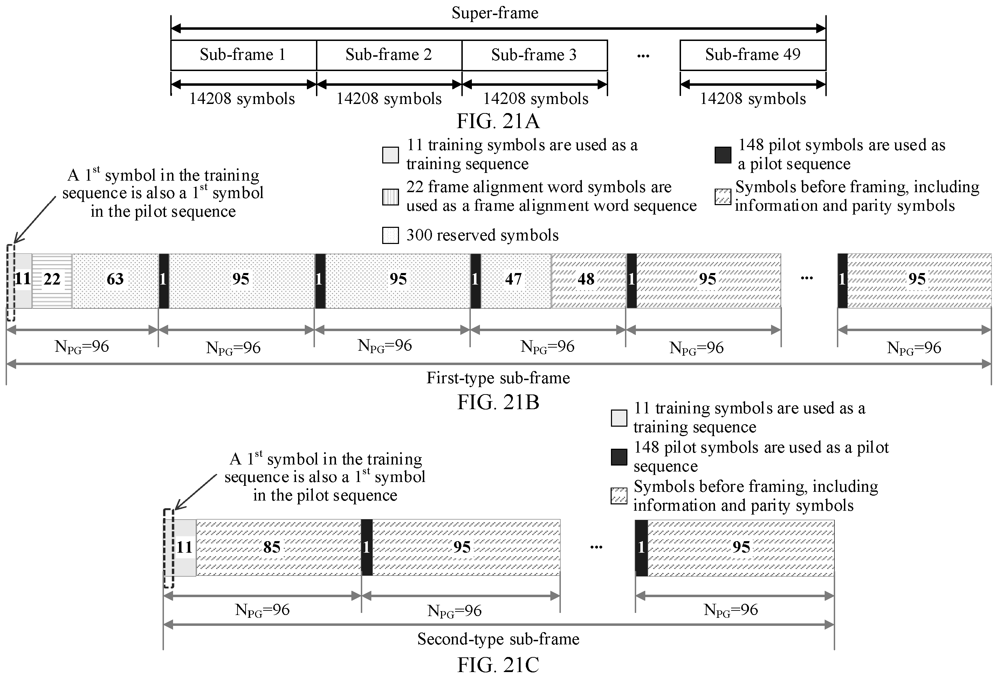

FIG. 21A to FIG. 21C are diagrams of a twelfth implementation of a super-frame and sub-frames according to an embodiment of this application. The super-frame includes 49 sub-frames, and each sub-frame includes 14208 symbols, as shown in FIG. 21A. As shown in FIG. 21B, a first-type sub-frame has 148 pilot symbols, 11 training symbols, 22 frame alignment word symbols, and 300 reserved symbols. In existing 400G-ZR and 800G-ZR standards, a 1st sub-frame also includes 11 training symbols and 22 frame alignment word symbols, and this facilitates multiplexing. As shown in FIG. 21C, the second-type sub-frame also has 148 pilot symbols and 11 training symbols. In each sub-frame, a 1st symbol in every 96 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

Embodiment 13: A symbol before framing is obtained by performing OFEC encoding with an encoding overhead of approximately of 17.9%. A quantity of symbols before framing is 150528. Pilot symbols are at an interval of 96 symbols. Corresponding parameters such as $N_{SF}$, $N_{TS}$, $N_{PS}$, $N_{FAW}$, $N_{RES}$, $N_S$, $N_F$, and OH are shown in Table 97 below.

Table 97

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 23 | 69 | 6624 | 152352 | 1.21% | 22 | 6 | 100 |

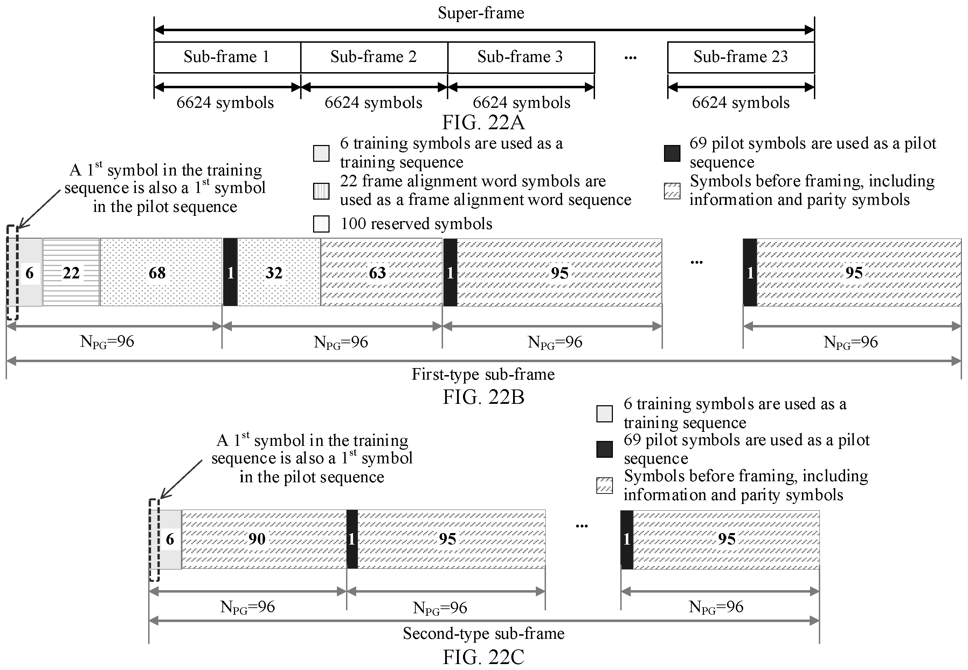

FIG. 22A to FIG. 22C are diagrams of a thirteenth implementation of a super-frame and sub-frames according to an embodiment of this application. The super-frame includes 23 sub-frames, and each sub-frame includes 6624 symbols, as shown in FIG. 22A. As shown in FIG. 22B, a first-type sub-frame has 69 pilot symbols, 6 training symbols, 22 frame alignment word symbols, and 100 reserved symbols. In existing 400G-ZR and 800G-ZR standards, a 1st sub-frame also includes 22 frame alignment word symbols, and this facilitates multiplexing. As shown in FIG. 22C, the second-type sub-frame also has 69 pilot symbols and 6 training symbols. In each sub-frame, a 1st symbol in every 96 symbols is a pilot symbol, and neither a quantity $N_F$ of symbols in the super-frame nor a quantity $N_S$ of symbols in each sub-frame is an integer multiple of 192 or 128.

Embodiment 14: A symbol before framing is obtained by performing OFEC encoding with an encoding overhead of approximately of 21.5%. A quantity of symbols before framing is 129024. Pilot symbols are at an interval of 96 symbols. Corresponding parameters such as $N_{SF}$, $N_{TS}$, $N_{PS}$, $N_{FAW}$, $N_{RES}$, $N_S$, $N_F$, and OH are shown in Table 98 below.

Table 98

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 10 | 136 | 13056 | 130560 | 1.19% | 22 | 11 | 54 |

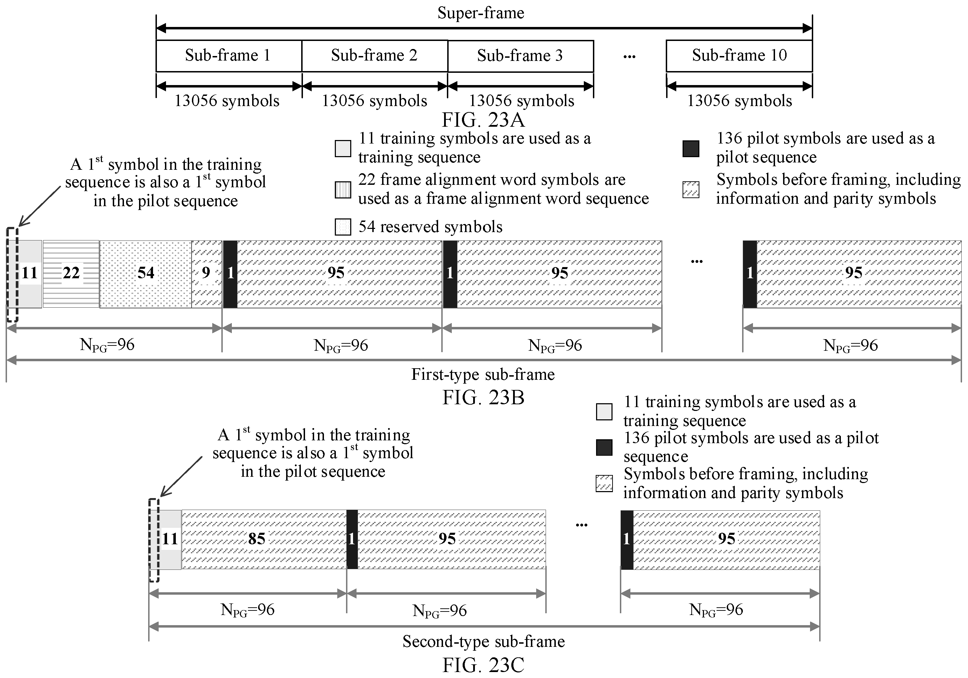

FIG. 23A to FIG. 23C are diagrams of a fourteenth implementation of a super-frame and sub-frames according to an embodiment of this application. The super-frame includes 10 sub-frames, and each sub-frame includes 13056 symbols, as shown in FIG. 23A. As shown in FIG. 23B, a first-type sub-frame has 136 pilot symbols, 11 training symbols, 22 frame alignment word symbols, and 54 reserved symbols. In existing 400G-ZR and 800G-ZR standards, a 1st sub-frame also includes 11 training symbols and 22 frame alignment word symbols, and this facilitates multiplexing. As shown in FIG. 23C, a second-type sub-frame also has 136 pilot symbols and 11 training symbols. In each sub-frame, a 1st symbol in every 96 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

Embodiment 15: A symbol before framing is obtained by performing OFEC encoding with an encoding overhead of approximately of 27.0%. A quantity of symbols before framing is 107520. Pilot symbols are at an interval of 96 symbols. Corresponding parameters such as $N_{SF}$, $N_{TS}$, $N_{PS}$, $N_{FAW}$, $N_{RES}$, $N_S$, $N_F$, and OH are shown in Table 99 below.

Table 99

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 16 | 71 | 6816 | 109056 | 1.43% | 22 | 10 | 234 |

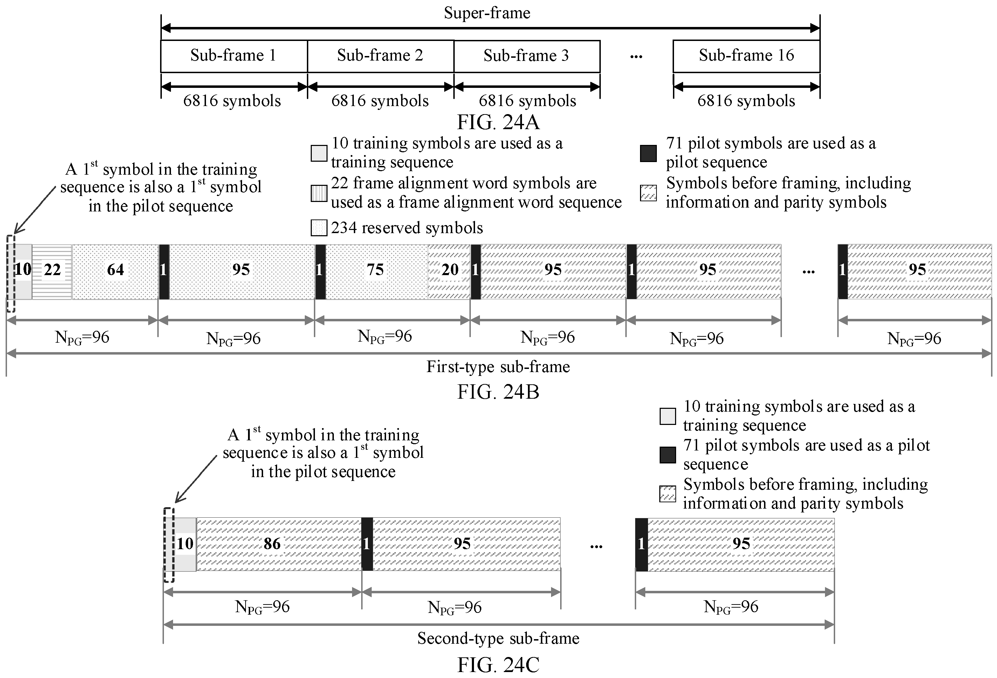

FIG. 24A to FIG. 24C are diagrams of a fifteenth implementation of a super-frame and sub-frames according to an embodiment of this application. The super-frame includes 16 sub-frames, and each sub-frame includes 6816 symbols, as shown in FIG. 24A. As shown in FIG. 24B, a first-type sub-frame has 71 pilot symbols, 10 training symbols, 22 frame alignment word symbols, and 234 reserved symbols. In existing 400G-ZR and 800G-ZR standards, a 1st sub-frame also includes 22 frame alignment word symbols, and this facilitates multiplexing. As shown in FIG. 24C, the second-type sub-frame also has 71 pilot symbols and 10 training symbols. In each sub-frame, a 1st symbol in every 96 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, but a quantity $N_S$ of symbols in each sub-frame is not an integer multiple of 192 or 128.

Embodiment 16: A symbol before framing is obtained by performing CFEC encoding with an encoding overhead of approximately of 15.2%. A quantity of symbols before framing is 175616. Pilot symbols are at an interval of 96 symbols. Corresponding parameters such as $N_{SF}$, $N_{TS}$, $N_{PS}$, $N_{FAW}$, $N_{RES}$, $N_S$, $N_F$, and OH are shown in Table 100 below.

Table 100

| $N_{SF}$ | $N_{PS}$ | $N_S$ | $N_F$ | OH | $N_{FAW}$ | $N_{TS}$ | $N_{RES}$ |
|---|---|---|---|---|---|---|---|
| 58 | 32 | 3072 | 178176 | 1.46% | 22 | 11 | 102 |

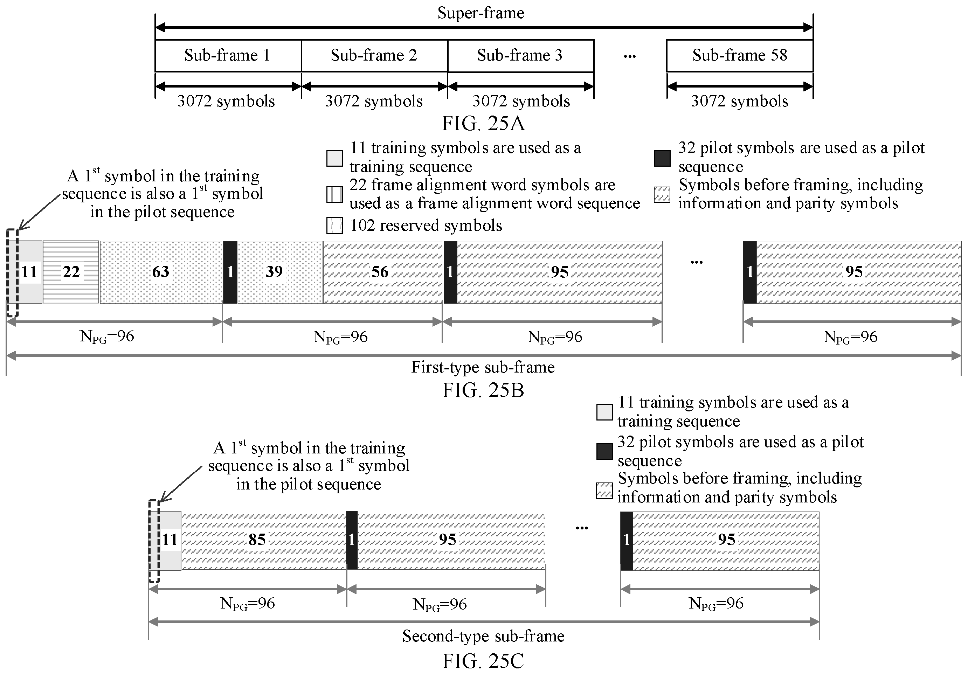

FIG. 25A to FIG. 25C are diagrams of a sixteenth implementation of a super-frame and sub-frames according to an embodiment of this application. The super-frame includes 58 sub-frames, and each sub-frame includes 3072 symbols, as shown in FIG. 25A. As shown in FIG. 25B, a first-type sub-frame has 32 pilot symbols, 11 training symbols, 22 frame alignment word symbols, and 102 reserved symbols. In existing 400G-ZR and 800G-ZR standards, a 1st sub-frame also includes 11 training symbols and 22 frame alignment word symbols, and this facilitates multiplexing. As shown in FIG. 25C, the second-type sub-frame also has 32 pilot symbols and 11 training symbols. In each sub-frame, a 1st symbol in every 96 symbols is a pilot symbol. In some specific applications, a bus width used in a specific DSP implementation of a transmitter and a receiver is 192 or 128. For ease of hardware implementation, a quantity $N_F$ of symbols in the super-frame is an integer multiple of 192 and 128, and preferably, a quantity $N_S$ of symbols in each sub-frame in the super-frame is also an integer multiple of 192 and 128.

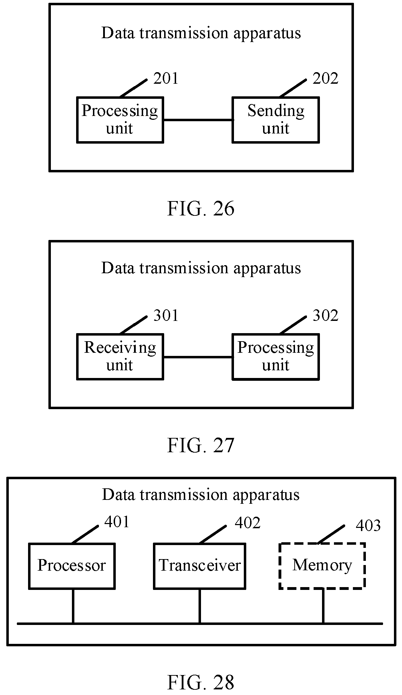

FIG. 26 is a diagram of a structure of a data transmission apparatus at a transmitting side according to an embodiment of this application. As shown in FIG. 26, the data transmission apparatus includes a processing unit 201 and a sending unit 202. The processing unit 201 is configured to perform the operation of step 101. The sending unit 202 is configured to perform the operation of step 102. It should be understood that the data transmission apparatus provided in this embodiment of this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 27 is a diagram of a structure of a data transmission apparatus at a receiving side according to an embodiment of this application. As shown in FIG. 27, the data transmission apparatus includes a receiving unit 301 and a processing unit 302. The receiving unit 301 is configured to perform the operation of step 102. The processing unit 302 is configured to perform the operation of step 103. It should be understood that the data transmission apparatus provided in this embodiment of this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 28 is a diagram of another structure of a data transmission apparatus according to an embodiment of this application. The data transmission apparatus may be at a transmitting side or a receiver. As shown in FIG. 28, the data transmission apparatus includes a processor 401 and a transceiver 402. The processor 401 and the transceiver 402 are connected to each other through a line. Specifically, the transceiver 402 is configured to perform a data sending and receiving operation, and the processor 401 is configured to perform other operations than data sending and receiving. In a possible implementation, the processor 401 may include the processing unit 201 shown in FIG. 26, and the transceiver 402 includes the sending unit 202 shown in FIG. 26. In another possible implementation, the processor 401 may include the processing unit 302 shown in FIG. 27, and the transceiver 402 includes the receiving unit 301 shown in FIG. 27. Optionally, the data transmission apparatus may further include a memory 403. The memory 403 is configured to store program instructions and data.

An embodiment of this application further provides a chip. The chip integrates a circuit and one or more interfaces that are configured to implement a function of the processor 401. When a memory is integrated into the chip, the chip may complete the method steps in any one or more of the foregoing embodiments. When no memory is integrated into the chip, the chip may be connected to an external memory through an interface. The chip implements, based on program code stored in the external memory, actions performed by the transmitter device or the receiver device in the foregoing embodiments.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

   obtaining a super-frame comprising a plurality of sub-frames, wherein each sub-frame comprises training symbols and pilot symbols, in a polarization direction, a quantity of training symbols in the sub-frame is $N_{TS}$, a quantity of pilot symbols in the sub-frame is $N_{PS}$, both $N_{TS}$ and $N_{PS}$ are integers greater than **1,** $N_{TS}+N_{PS}$ is an odd number greater than or equal to 5, one symbol in the sub-frame serves as both a training symbol and a pilot symbol, each training symbol and each pilot symbol are one of four complex numbers: -A-Aj, -A+Aj, A-Aj, and A+Aj, A is a real number, every $N_{PG}$ consecutive symbols in the sub-frame comprise a pilot symbol located at a fixed position, and $N_{PG}$ is 96 or 128; and
   sending the super-frame.

2. The method according to claim **1,** wherein in one sub-frame, a training symbol sequence comprising a plurality of training symbols in a first polarization direction is different from a training symbol sequence comprising a plurality of training symbols in a second polarization direction, a pilot sequence comprising a plurality of pilot symbols in the first polarization direction is different from a pilot sequence comprising a plurality of pilot symbols in the second polarization direction, and the first polarization direction and the second polarization direction are orthogonal to each other.

3. The method according to claim 1 or 2, wherein in one sub-frame and in a polarization direction, a sum of real parts of all symbols comprising all training symbols and all pilot symbols, totally $N_{TS}+N_{PS}-1$ symbols, is 0, and a sum of imaginary parts of all symbols comprising all training symbols and all pilot symbols, totally $N_{TS}+N_{PS}-1$ symbols, is 0.

4. The method according to any one of claims 1 to 3, wherein in one sub-frame and in a polarization direction, among the total of $N_{TS}+N_{PS}-1$ symbols comprising all training symbols and all pilot symbols, a quantity of symbols that are -A-Aj, -A+Aj, A-Aj, and A+Aj differ from each other by no more than 2.

5. The method according to any one of claims 1 to **4,** wherein in one sub-frame and in two polarization directions that are orthogonal to each other, quantities of training symbols and pilot symbols valued at -A-Aj, quantities of training symbols and pilot symbols valued at -A+Aj, quantities of training symbols and pilot symbols valued at A-Aj, and quantities of training symbols and pilot symbols valued at A+Aj are the same.

6. The method according to any one of claims 1 to 5, wherein in one sub-frame, $N_{TS}$ consecutive training symbols are arranged starting from the beginning of the sub-frame.

7. The method according to claim 6, wherein among the $N_{TS}$ consecutive training symbols, a symbol at the beginning serves as both a training symbol and a pilot symbol.

8. The method according to any one of claims 1 to 7, wherein a sub-frame arranged at a 1st position in the super-frame is a first-type sub-frame, the first-type sub-frame further comprises frame alignment word symbols, reserved symbols, and symbols before framing, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and in the first-type sub-frame, training symbols are located before the frame alignment word symbols, the frame alignment word symbols are located before the reserved symbols, and the reserved symbols are located before the symbols before framing.

9. The method according to claim 8, wherein $A=A_{FAW}$.

10. The method according to any one of claims 1 to 9, wherein the super-frame comprises at least one second-type sub-frame, the second-type sub-frame further comprises symbols before framing, and in the second-type sub-frame, training symbols are located before the symbols before framing.

11. The method according to any one of claims 8 to 10, wherein a quantity of symbols before framing in the super-frame is $N_{CW}$, a quantity of all symbols in the super-frame is $N_F$, and a correspondence among $N_{PG}$, $N_{CW}$, and $N_F$ is one of the following:

N_PG=128, N_CW=172032, and N_F=173440, 173568, 173696, 173824, 173952, or 174080;

N_PG=128, N_CW=344064, and N_F=346880, 347136, 347392, 347520, 347648, 347776, 347904, or 348160;

N_PG=128, N_CW=516096, and N_F=520192, 520320, 520448, 520576, 520704, 520832, 520960, 521088, 521472, 521600, 521856, or 522240;

N_PG=128, N_CW=688128, and N_F=693760, 693888, 694144, 694272, 694400, 694656, 694784, 694912, 695040, 695296, 695552, 695808, 696192, or 696320;

N_PG=128, N_CW=150528, and N_F=152064, 152192, or 152320;

N_PG=128, N_CW=129024, and N_F=130048, 130176, or 130560;

N_PG=128, N_CW=107520, and N_F=108416, 108544, 108672, or 108800;

N_PG=128, N_CW=175616, and N_F=177152, 177280, 177408, 177536, or 177664;

N_PG=128, N_CW=351232, and N_F=354304, 354432, 354560, 354688, 354816, 354944, 355072, 355200, or 355328;

N_PG=128, N_CW=526848, and N_F=531200, 531456, 531712, 531840, 532224, 532480, 532608, 532864, 532992, or 533120;

N_PG=128, N_CW=702464, and N_F=708096, 708224, 708480, 708608, 708736, 708864, 708992, 709120, 709376, 709504, 709632, 709888, 710016, 710144, 710272, 710400, 710528, or 710656;

N_PG=96, N_CW=172032, and N_F=173952, 174048, 174240, 174336, 174432, or 174528;

N_PG=96, N_CW=344064, and N_F=347904, 348000, 348096, 348192, 348384, 348480, 348672, 348768, 348864, or 349056;

N_PG=96, N_CW=516096, and N_F=521664, 521856, 522144, 522240, 522720, 522816, 523008, 523200, 523296, 523392, 523488, 523584, or 523776;

N_PG=96, N_CW=688128, and N_F=695520, 695808, 695904, 696000, 696192, 696384, 696672, 696768, 696864, 696960, 697056, 697248, 697344, 697536, 697632, 697728, 698112, or 698400;

N_PG=96, N_CW=150528, and N_F=152160, 152256, 152352, 152448, 152544, 152640, or 152736;

N_PG=96, N_CW=129024, and N_F=130464, 130560, 130752, 130848, or 130944;

N_PG=96, N_CW=107520, and N_F=108672, 108768, 108864, 108960, or 109056;

N_PG=96, N_CW=175616, and N_F=177504, 177600, 177888, 177984, 178080, or 178176;

N_PG=96, N_CW=351232, and N_F=355008, 355104, 355200, 355488, 355680, 355776, 355872, 355968, 356160, 356352, or 356448;

N_PG=96, N_CW=526848, and N_F=532416, 532512, 532608, 532704, 532800, 532896, 532992, 533280, 533376, 533568, 533664, 533760, 533856, 533952, 534144, 534240, 534336, 534432, or 534528; and

N_PG=96, N_CW=702464, and N_F=709920, 710016, 710112, 710208, 710304, 710400, 710688, 710784, 710976, 711168, 711264, 711360, 711552, 711648, 711744, 711936, 712320, 712416, 712704, 712800, or 712896.

12. The method according to any one of claims 1 to 11, wherein in a polarization direction, a modulation format of a symbol in the super-frame is quadrature phase shift keying QPSK, and A=-1 or 1; or

in a polarization direction, a modulation format of a symbol in the super-frame is 16QAM, and

$$A = -1, 1, -3, 3, -\sqrt{5}, \text{ or } \sqrt{5}; \text{ or}$$

in a polarization direction, a modulation format of a symbol in the super-frame is 64QAM, and

$$A = -1, 1, -3, 3, -\sqrt{21}, \sqrt{21}, -5, 5, -7, \text{ or } 7.$$

13. A data transmission method, comprising:

receiving a super-frame comprising a plurality of sub-frames, wherein each sub-frame comprises training symbols and pilot symbols, in a polarization direction, a quantity of training symbols in the sub-frame is $N_{TS}$, a quantity of pilot symbols in the sub-frame is $N_{PS}$, both $N_{TS}$ and $N_{PS}$ are integers greater than 1, $N_{TS}+N_{PS}$ is an odd number greater than or equal to 5, one symbol in the sub-frame serves as both a training symbol and a pilot symbol, each training symbol and each pilot symbol are one of four complex numbers: -A-Aj, -A+Aj, A-Aj, and A+Aj, A is a real number, and every 96 or 128 consecutive symbols in the sub-frame comprise a pilot symbol located at a fixed position; and
decoding the super-frame.

14. The method according to claim 13, wherein in one sub-frame, $N_{TS}$ consecutive training symbols are arranged starting from the beginning of the sub-frame.

**15.** The method according to claim 14, wherein among the $N_{TS}$ consecutive training symbols, a symbol at the beginning serves as both a training symbol and a pilot symbol.

**16.** A chip, wherein the chip comprises a processor and a memory, the memory and the processor are connected to each other through a line, the memory stores instructions, and the processor is configured to perform the method according to any one of claims 1 to 15.

**17.** A data transmission apparatus at a transmitting side, comprising a processing unit and a sending unit, wherein

the processing unit is configured to obtain a super-frame comprising a plurality of sub-frames, wherein each sub-frame comprises training symbols and pilot symbols, in a polarization direction, a quantity of training symbols in the sub-frame is $N_{TS}$, a quantity of pilot symbols in the sub-frame is $N_{PS}$, both $N_{TS}$ and $N_{PS}$ are integers greater than 1, $N_{TS}+N_{PS}$ is an odd number greater than or equal to 5, one symbol in the sub-frame serves as both a training symbol and a pilot symbol, each training symbol and each pilot symbol are one of four complex numbers: -A-Aj, -A+Aj, A-Aj, and A+Aj, A is a real number, and every 96 or 128 consecutive symbols in the sub-frame comprise a pilot symbol located at a fixed position; and
the sending unit is configured to send the super-frame.

**18.** The data transmission apparatus according to claim 17, wherein in one sub-frame, a training symbol sequence comprising a plurality of training symbols in a first polarization direction is different from a training symbol sequence comprising a plurality of training symbols in a second polarization direction, a pilot sequence comprising a plurality of pilot symbols in the first polarization direction is different from a pilot sequence comprising a plurality of pilot symbols in the second polarization direction, and the first polarization direction and the second polarization direction are orthogonal to each other.

**19.** The data transmission apparatus according to claim 17 or 18, wherein in one sub-frame and in a polarization direction, a sum of real parts of all symbols comprising all training symbols and all pilot symbols, totally $N_{TS}+N_{PS}-1$ symbols, is 0, and a sum of imaginary parts of all symbols comprising all training symbols and all pilot symbols, totally $N_{TS}+N_{PS}-1$ symbols, is 0.

**20.** The data transmission apparatus according to any one of claims 17 to 19, wherein in one sub-frame and in a polarization direction, among the total of $N_{TS}+N_{PS}-1$ symbols comprising all training symbols and all pilot symbols, a quantity of symbols that are -A-Aj, -A+Aj, A-Aj, and A+Aj differ from each other by no more than 2.

**21.** The data transmission apparatus according to any one of claims 17 to 20, wherein in one sub-frame and in two polarization directions that are orthogonal to each other, quantities of training symbols and pilot symbols valued at -A-Aj, quantities of training symbols and pilot symbols valued at -A+Aj, quantities of training symbols and pilot symbols valued at A-Aj, and quantities of training symbols and pilot symbols valued at A+Aj are the same.

**22.** The data transmission apparatus according to any one of claims 17 to 21, wherein in one sub-frame, $N_{TS}$ consecutive training symbols are arranged starting from the beginning of the sub-frame.

**23.** The data transmission apparatus according to claim 22, wherein among the $N_{TS}$ consecutive training symbols, a symbol at the beginning serves as both a training symbol and a pilot symbol.

**24.** The data transmission apparatus according to any one of claims 17 to 23, wherein a sub-frame arranged at a 1st position in the super-frame is a first-type sub-frame, the first-type sub-frame further comprises frame alignment word symbols, reserved symbols, and symbols before framing, each frame alignment word symbol is one of four complex numbers: $-A_{FAW}-A_{FAW}j$, $-A_{FAW}+A_{FAW}j$, $A_{FAW}-A_{FAW}j$, and $A_{FAW}+A_{FAW}j$, $A_{FAW}$ is a real number, and in the first-type sub-frame, training symbols are located before the frame alignment word symbols, the frame alignment word symbols are located before the reserved symbols, and the reserved symbols are located before the symbols before framing.

**25.** The data transmission apparatus according to claim 24, wherein $A=A_{FAW}$.

**26.** The data transmission apparatus according to any one of claims 17 to 25, wherein the super-frame comprises at least one second-type sub-frame, the second-type sub-frame further comprises symbols before framing, and in the second-type sub-frame, training symbols are located before the symbols before framing.

**27.** The data transmission apparatus according to any one of claims 24 to 26, wherein a quantity of symbols before framing in the super-frame is $N_{CW}$, a quantity of all symbols in the super-frame is $N_F$, and a correspondence among $N_{PG}$, $N_{CW}$, and $N_F$ is one of the following:

$N_{PG}$=128, $N_{CW}$=172032, and $N_F$=173440, 173568, 173696, 173824, 173952, or 174080;
$N_{PG}$=128, $N_{CW}$=344064, and $N_F$=346880, 347136, 347392, 347520, 347648, 347776, 347904, or 348160;
$N_{PG}$=128, $N_{CW}$=516096, and $N_F$=520192, 520320, 520448, 520576, 520704, 520832, 520960, 521088, 521472, 521600, 521856, or 522240;
$N_{PG}$=128, $N_{CW}$=688128, and $N_F$=693760, 693888, 694144, 694272, 694400, 694656, 694784, 694912, 695040, 695296, 695552, 695808, 696192, or 696320;
$N_{PG}$=128, $N_{CW}$=150528, and $N_F$=152064, 152192, or 152320;
$N_{PG}$=128, $N_{CW}$=129024, and $N_F$=130048, 130176, or 130560;
$N_{PG}$=128, $N_{CW}$=107520, and $N_F$=108416, 108544, 108672, or 108800;
$N_{PG}$=128, $N_{CW}$=175616, and $N_F$=177152, 177280, 177408, 177536, or 177664;
$N_{PG}$=128, $N_{CW}$=351232, and $N_F$=354304, 354432, 354560, 354688, 354816, 354944, 355072, 355200, or 355328;
$N_{PG}$=128, $N_{CW}$=526848, and $N_F$=531200, 531456, 531712, 531840, 532224, 532480, 532608, 532864, 532992, or 533120;
$N_{PG}$=128, $N_{CW}$=702464, and $N_F$=708096, 708224, 708480, 708608, 708736, 708864, 708992, 709120, 709376, 709504, 709632, 709888, 710016, 710144, 710272, 710400, 710528, or 710656;
$N_{PG}$=96, $N_{CW}$=172032, and $N_F$=173952, 174048, 174240, 174336, 174432, or 174528;
$N_{PG}$=96, $N_{CW}$=344064, and $N_F$=347904, 348000, 348096, 348192, 348384, 348480, 348672, 348768, 348864, or 349056;
$N_{PG}$=96, $N_{CW}$=516096, and $N_F$=521664, 521856, 522144, 522240, 522720, 522816, 523008, 523200, 523296, 523392, 523488, 523584, or 523776;
$N_{PG}$=96, $N_{CW}$=688128, and $N_F$=695520, 695808, 695904, 696000, 696192, 696384, 696672, 696768, 696864, 696960, 697056, 697248, 697344, 697536, 697632, 697728, 698112, or 698400;
$N_{PG}$=96, $N_{CW}$=150528, and $N_F$=152160, 152256, 152352, 152448, 152544, 152640, or 152736;
$N_{PG}$=96, $N_{CW}$=129024, and $N_F$=130464, 130560, 130752, 130848, or 130944;
$N_{PG}$=96, $N_{CW}$=107520, and $N_F$=108672, 108768, 108864, 108960, or 109056;
$N_{PG}$=96, $N_{CW}$=175616, and $N_F$=177504, 177600, 177888, 177984, 178080, or 178176;
$N_{PG}$=96, $N_{CW}$=351232, and $N_F$=355008, 355104, 355200, 355488, 355680, 355776, 355872, 355968, 356160, 356352, or 356448;
$N_{PG}$=96, $N_{CW}$=526848, and $N_F$=532416, 532512, 532608, 532704, 532800, 532896, 532992, 533280, 533376, 533568, 533664, 533760, 533856, 533952, 534144, 534240, 534336, 534432, or 534528; and
$N_{PG}$=96, $N_{CW}$=702464, and $N_F$=709920, 710016, 710112, 710208, 710304, 710400, 710688, 710784, 710976, 711168, 711264, 711360, 711552, 711648, 711744, 711936, 712320, 712416, 712704, 712800, or 712896.

**28.** The data transmission apparatus according to any one of claims 17 to 27, wherein in a polarization direction, a modulation format of a symbol in the super-frame is quadrature phase shift keying QPSK, and A=-1 or 1; or

in a polarization direction, a modulation format of a symbol in the super-frame is 16QAM, and $A = -1, 1, -3, 3, -\sqrt{5}$, or $\sqrt{5}$; or
in a polarization direction, a modulation format of a symbol in the super-frame is 64QAM, and $A = -1, 1, -3, 3, -\sqrt{21}, \sqrt{21}, -5, 5, -7$, or 7.

**29.** A data transmission apparatus at a receiving side, comprising a receiving unit and a processing unit, wherein

the receiving unit is configured to receive a super-frame comprising a plurality of sub-frames, wherein each sub-frame comprises training symbols and pilot symbols, in a polarization direction, a quantity of training symbols in the sub-frame is $N_{TS}$, a quantity of pilot symbols in the sub-frame is $N_{PS}$, both $N_{TS}$ and $N_{PS}$ are integers greater than 1, $N_{TS}+N_{PS}$ is an odd number greater than or equal to 5, one symbol in the sub-frame serves as both a training symbol and a pilot symbol, each training symbol and each pilot symbol are one of four complex numbers: -A-Aj, -A+Aj, A-Aj, and A+Aj, A is a real number, and every 96 or 128 consecutive symbols in the sub-frame comprise a pilot symbol located at a fixed position; and
the processing unit is configured to decode the super-frame.

30. The data transmission apparatus according to claim 29, wherein in one sub-frame, $N_{TS}$ consecutive training symbols are arranged starting from the beginning of the sub-frame.

31. The data transmission apparatus according to claim 30, wherein among the $N_{TS}$ consecutive training symbols, a symbol at the beginning serves as both a training symbol and a pilot symbol.

32. A data transmission system, comprising the data transmission apparatus at a transmitting side according to any one of claims 17 to 28 and the data transmission apparatus at a receiving side according to any one of claims 29 to 31.

FIG. 1

FIG. 2A

FIG. 2B

FIG. 2C

Transmitter

Receiver

101: Obtain a super-frame including a
plurality of sub-frames

102: Send the super-frame

103: Decode the super-frame

FIG. 3

Super-frame

| Sub-frame 1 | Sub-frame 2 | Sub-frame 3 | ··· | Sub-frame $N_{SF}$ |

$N_S$ symbols $\quad$ $N_S$ symbols $\quad$ $N_S$ symbols $\qquad$ $N_S$ symbols

FIG. 4

First-type sub-frame
FIG. 5A

Second-type sub-frame
FIG. 5B

A 1<sup>st</sup> symbol in the training sequence is also a 1<sup>st</sup> symbol in the pilot sequence

$N_{TS}$ training symbols are used as a training sequence

$N_{FAW}$ frame alignment word symbols are used as a frame alignment word sequence

$N_{RES}$ reserved symbols

$N_{PS}$ pilot symbols are used as a pilot sequence

Symbols before framing, including information and parity symbols

$N_{TS}$ | $N_{FAW}$ | ... | 1 | ... | ... | 1 | 95 | ... | 1 | 95

$N_{PG}=96$ | $N_{PG}=96$ | $N_{PG}=96$ | $N_{PG}=96$

First-type sub-frame

FIG. 6A

A 1<sup>st</sup> symbol in the training sequence is also a 1<sup>st</sup> symbol in the pilot sequence

$N_{TS}$ training symbols are used as a training sequence

$N_{PS}$ pilot symbols are used as a pilot sequence

Symbols before framing, including information and parity symbols

$N_{TS}$ | 96–$N_{TS}$ | 1 | 95 | ... | 1 | 95

$N_{PG}=96$ | $N_{PG}=96$ | $N_{PG}=96$

Second-type sub-frame

FIG. 6B

FIG. 7A

FIG. 7B

FIG. 8A

FIG. 8B

Including symbol mapping, polarization distribution, and framing

X polarization

Y polarization

Digital-to-analog conversion → $X_I$

Digital-to-analog conversion → $X_Q$

Digital-to-analog conversion → $Y_I$

Digital-to-analog conversion → $Y_Q$

FIG. 9

Super-frame

| Sub-frame 1 | Sub-frame 2 | Sub-frame 3 | ... | Sub-frame 12 |

14464 symbols    14464 symbols    14464 symbols         14464 symbols

FIG. 10A

☐ 10 training symbols are used as a training sequence

▥ 22 frame alignment word symbols are used as a frame alignment word sequence

▨ 50 reserved symbols

■ 113 pilot symbols are used as a pilot sequence

▨ Symbols before framing, including information and parity symbols

A 1st symbol in the training sequence is also a 1st symbol in the pilot sequence

| 10 | 22 | 50 | 46 | 1 | 127 | 1 | 127 | ... | 1 | 127 |

$N_{PG}=128$      $N_{PG}=128$      $N_{PG}=128$            $N_{PG}=128$

First-type sub-frame

FIG. 10B

☐ 10 training symbols are used as a training sequence

■ 113 pilot symbols are used as a pilot sequence

▨ Symbols before framing, including information and parity symbols

A 1st symbol in the training sequence is also a 1st symbol in the pilot sequence

| 10 | 118 | 1 | 127 | ... | 1 | 127 |

$N_{PG}=128$      $N_{PG}=128$            $N_{PG}=128$

Second-type sub-frame

FIG. 10C

EP 4 773 530 A1

Super-frame

| Sub-frame 1 | Sub-frame 2 | Sub-frame 3 | ... | Sub-frame 12 |

28928 symbols | 28928 symbols | 28928 symbols | | 28928 symbols

FIG. 11A

A $1^{st}$ symbol in the training sequence is also a $1^{st}$ symbol in the pilot sequence

■ 11 training symbols are used as a training sequence
▥ 22 frame alignment word symbols are used as a frame alignment word sequence
▦ 218 reserved symbols

■ 226 pilot symbols are used as a pilot sequence
▨ Symbols before framing, including information and parity symbols

First-type sub-frame

FIG. 11B

11 | 22 | 95 | 1 | 123 | 4 | 1 | 127 | ... | 1 | 127

$N_{PG}=128$ | $N_{PG}=128$ | $N_{PG}=128$ | $N_{PG}=128$ | $N_{PG}=128$

□ 11 training symbols are used as a training sequence
■ 226 pilot symbols are used as a pilot sequence
▨ Symbols before framing, including information and parity symbols

A $1^{st}$ symbol in the training sequence is also a $1^{st}$ symbol in the pilot sequence

Second-type sub-frame

FIG. 11C

11 | 117 | 1 | 127 | ... | 1 | 127

$N_{PG}=128$ | $N_{PG}=128$ | $N_{PG}=128$ | $N_{PG}=128$

Super-frame

| Sub-frame 1 | Sub-frame 2 | Sub-frame 3 | ... | Sub-frame 97 |

| 5376 symbols | 5376 symbols | 5376 symbols | | 5376 symbols |

FIG. 12A

☐ 11 training symbols are used as a training sequence

▥ 22 frame alignment word symbols are used as a frame alignment word sequence

▦ 310 reserved symbols

■ 42 pilot symbols are used as a pilot sequence

▨ Symbols before framing, including information and parity symbols

A 1st symbol in the training sequence is also a 1st symbol in the pilot sequence

| 11 | 22 | 95 | 1 | 127 | 1 | 88 | 39 | ... | 1 | 127 |

| $N_{PG}=128$ | $N_{PG}=128$ | $N_{PG}=128$ | | $N_{PG}=128$ |

First-type sub-frame

FIG. 12B

☐ 11 training symbols are used as a training sequence

■ 42 pilot symbols are used as a pilot sequence

▨ Symbols before framing, including information and parity symbols

A 1st symbol in the training sequence is also a 1st symbol in the pilot sequence

| 11 | 117 | 1 | 127 | ... | 1 | 127 |

| $N_{PG}=128$ | $N_{PG}=128$ | | $N_{PG}=128$ |

Second-type sub-frame

FIG. 12C

Super-frame

| Sub-frame 1 | Sub-frame 2 | Sub-frame 3 | ⋯ | Sub-frame 67 |

10368 symbols | 10368 symbols | 10368 symbols | 10368 symbols

FIG. 13A

□ 10 training symbols are used as a training sequence

■ 81 pilot symbols are used as a pilot sequence

▥ 22 frame alignment word symbols are used as a frame alignment sequence

▨ Symbols before framing, including information and parity symbols

▦ 476 reserved symbols

A 1st symbol in the training sequence is also a 1st symbol in the pilot sequence

| 10 | 22 | 96 | 1 | 127 | 1 | 127 | 1 | 126 | 1 | 1 | 127 | ⋯ | 1 | 127 |

$N_{PG}=128$ | $N_{PG}=128$ | $N_{PG}=128$ | $N_{PG}=128$ | $N_{PG}=128$ | $N_{PG}=128$

First-type sub-frame

FIG. 13B

□ 10 training symbols are used as a training sequence

■ 81 pilot symbols are used as a pilot sequence

▨ Symbols before framing, including information and parity symbols

A 1st symbol in the training sequence is also a 1st symbol in the pilot sequence

| 10 | 118 | 1 | 127 | ⋯ | 1 | 127 |

$N_{PG}=128$ | $N_{PG}=128$ | $N_{PG}=128$

Second-type sub-frame

FIG. 13C

EP 4 773 530 A1

FIG. 14A

FIG. 14B

FIG. 14C

Super-frame

| Sub-frame 1 | Sub-frame 2 | Sub-frame 3 | ... | Sub-frame 34 |

3840 symbols    3840 symbols    3840 symbols    3840 symbols

FIG. 15A

A 1st symbol in the training sequence is also a 1st symbol in the pilot sequence

11 training symbols are used as a training sequence

22 frame alignment word symbols are used as a frame alignment word sequence

154 reserved symbols

30 pilot symbols are used as a pilot sequence

Symbols before framing, including information and parity symbols

| 11 | 22 | 95 | 1 | 59 | 68 | 1 | 127 | ... | 1 | 127 |

$N_{PG}=128$    $N_{PG}=128$    $N_{PG}=128$    $N_{PG}=128$

First-type sub-frame

FIG. 15B

EP 4 773 530 A1

A 1st symbol in the training sequence is also a 1st symbol in the pilot sequence

11 training symbols are used as a training sequence

30 pilot symbols are used as a pilot sequence

Symbols before framing, including information and parity symbols

| 11 | 117 | 1 | 127 | ... | 1 | 127 |

$N_{PG}=128$    $N_{PG}=128$    $N_{PG}=128$

Second-type sub-frame

FIG. 15C

| Sub-frame 1 | Sub-frame 2 | Sub-frame 3 | ... | Sub-frame 25 |
|---|---|---|---|---|
| 4352 symbols | 4352 symbols | 4352 symbols | | 4352 symbols |

## FIG. 16A

11 training symbols are used as a training sequence

22 frame alignment word symbols are used as a frame alignment word sequence

158 reserved symbols

34 pilot symbols are used as a pilot sequence

Symbols before framing, including information and parity symbols

A 1$^{st}$ symbol in the training sequence is also a 1$^{st}$ symbol in the pilot sequence

| 11 | 22 | 95 | 1 | 63 | 64 | 1 | 127 | ... | 1 | 127 |
|---|---|---|---|---|---|---|---|---|---|---|

$N_{PG}=128$  $N_{PG}=128$  $N_{PG}=128$  $N_{PG}=128$

First-type sub-frame

## FIG. 16B

11 training symbols are used as a training sequence

34 pilot symbols are used as a pilot sequence

Symbols before framing, including information and parity symbols

A 1$^{st}$ symbol in the training sequence is also a 1$^{st}$ symbol in the pilot sequence

| 11 | 117 | 1 | 127 | ... | 1 | 127 |
|---|---|---|---|---|---|---|

$N_{PG}=128$  $N_{PG}=128$  $N_{PG}=128$

Second-type sub-frame

## FIG. 16C

EP 4 773 530 A1

Super-frame

| Sub-frame 1 | Sub-frame 2 | Sub-frame 3 | ... | Sub-frame 21 |

8448 symbols  8448 symbols  8448 symbols  8448 symbols

FIG. 17A

A 1st symbol in the training sequence is also a 1st symbol in the pilot sequence

☐ 11 training symbols are used as a training sequence

▥ 22 frame alignment word symbols are used as a frame alignment word sequence

☐ 174 reserved symbols

■ 66 pilot symbols are used as a pilot sequence

▨ Symbols before framing, including information and parity symbols

| 11 | 22 | 95 | 1 | 79 | 48 | 1 | 127 | ... | 1 | 127 |

$N_{PG}=128$  $N_{PG}=128$  $N_{PG}=128$  $N_{PG}=128$

First-type sub-frame

FIG. 17B

A 1st symbol in the training sequence is also a 1st symbol in the pilot sequence

☐ 11 training symbols are used as a training sequence

■ 66 pilot symbols are used as a pilot sequence

▨ Symbols before framing, including information and parity symbols

| 11 | 117 | 1 | 127 | ... | 1 | 127 |

$N_{PG}=128$  $N_{PG}=128$  $N_{PG}=128$

Second-type sub-frame

FIG. 17C

Super-frame

| Sub-frame 1 | Sub-frame 2 | Sub-frame 3 | ... | Sub-frame 33 |
|---|---|---|---|---|
| 5280 symbols | 5280 symbols | 5280 symbols | | 5280 symbols |

FIG. 18A

□ 10 training symbols are used as a training sequence

■ 55 pilot symbols are used as a pilot sequence

▥ 22 frame alignment word symbols are used as a frame alignment word sequence

▨ Symbols before framing, including information and parity symbols

□ 74 reserved symbols

A 1st symbol in the training sequence is also a 1st symbol in the pilot sequence

| 10 | 22 | 64 | 1 | 10 | 85 | 1 | 95 | ... | 1 | 95 |
|---|---|---|---|---|---|---|---|---|---|---|

$N_{PG}=96$    $N_{PG}=96$    $N_{PG}=96$    $N_{PG}=96$

First-type sub-frame

FIG. 18B

□ 10 training symbols are used as a training sequence

■ 55 pilot symbols are used as a pilot sequence

▨ Symbols before framing, including information and parity symbols

A 1st symbol in the training sequence is also a 1st symbol in the pilot sequence

| 10 | 86 | 1 | 95 | ... | 1 | 95 |
|---|---|---|---|---|---|---|

$N_{PG}=96$    $N_{PG}=96$    $N_{PG}=96$

Second-type sub-frame

FIG. 18C

FIG. 19A

Super-frame

| Sub-frame 1 | Sub-frame 2 | Sub-frame 3 | ... | Sub-frame 24 |
|---|---|---|---|---|
| 14496 symbols | 14496 symbols | 14496 symbols | | 14496 symbols |

6 training symbols are used as a training sequence

22 frame alignment word symbols are used as a frame alignment word sequence

74 reserved symbols

A 1st symbol in the training sequence is also a 1st symbol in the pilot sequence

First-type sub-frame
FIG. 19B

$N_{PG}=96$

6 | 22 | 68 | 1 | 6 | 90 | 1 | 95 | 1 | 95

151 pilot symbols are used as a pilot sequence

Symbols before framing, including information and parity symbols

Second-type sub-frame
FIG. 19C

A 1st symbol in the training sequence is also a 1st symbol in the pilot sequence

$N_{PG}=96$

6 | 90 | 1 | 95 | 1 | 95

6 training symbols are used as a training sequence

151 pilot symbols are used as a pilot sequence

Symbols before framing, including information and parity symbols

Super-frame

| Sub-frame 1 | Sub-frame 2 | Sub-frame 3 | ... | Sub-frame 40 |
|---|---|---|---|---|
| 13056 symbols | 13056 symbols | 13056 symbols | | 13056 symbols |

FIG. 20A

A 1st symbol in the training sequence is also a 1st symbol in the pilot sequence

☐ 11 training symbols are used as a training sequence

▥ 22 frame alignment word symbols are used as a frame alignment word sequence

☐ 282 reserved symbols

■ 136 pilot symbols are used as a pilot sequence

▨ Symbols before framing, including information and parity symbols

| 11 | 22 | 63 | 1 | 95 | 1 | 95 | 1 | 29 | 66 | 1 | 95 | ... | 1 | 95 |
|---|---|---|---|---|---|---|---|---|---|---|---|---|---|---|

$N_{PG}=96$  $N_{PG}=96$  $N_{PG}=96$  $N_{PG}=96$  $N_{PG}=96$  $N_{PG}=96$

First-type sub-frame

FIG. 20B

☐ 11 training symbols are used as a training sequence

■ 136 pilot symbols are used as a pilot sequence

▨ Symbols before framing, including information and parity symbols

A 1st symbol in the training sequence is also a 1st symbol in the pilot sequence

| 11 | 85 | 1 | 95 | ... | 1 | 95 |
|---|---|---|---|---|---|---|

$N_{PG}=96$  $N_{PG}=96$  $N_{PG}=96$

Second-type sub-frame

FIG. 20C

EP 4 773 530 A1

Super-frame

| Sub-frame 1 | Sub-frame 2 | Sub-frame 3 | ... | Sub-frame 49 |

14208 symbols | 14208 symbols | 14208 symbols | 14208 symbols

FIG. 21A

11 training symbols are used as a training sequence

22 frame alignment word symbols are used as a frame alignment word sequence

300 reserved symbols

A $1^{st}$ symbol in the training sequence is also a $1^{st}$ symbol in the pilot sequence

148 pilot symbols are used as a pilot sequence

Symbols before framing, including information and parity symbols

First-type sub-frame

FIG. 21B

11 training symbols are used as a training sequence

148 pilot symbols are used as a pilot sequence

Symbols before framing, including information and parity symbols

A $1^{st}$ symbol in the training sequence is also a $1^{st}$ symbol in the pilot sequence

Second-type sub-frame

FIG. 21C

FIG. 22A

FIG. 22B
First-type sub-frame

FIG. 22C
Second-type sub-frame

Super-frame

| Sub-frame 1 | Sub-frame 2 | Sub-frame 3 | ... | Sub-frame 10 |

13056 symbols · 13056 symbols · 13056 symbols · 13056 symbols

FIG. 23A

□ 11 training symbols are used as a training sequence

▥ 22 frame alignment word symbols are used as a frame alignment word sequence

▢ 54 reserved symbols

■ 136 pilot symbols are used as a pilot sequence

▨ Symbols before framing, including information and parity symbols

A 1st symbol in the training sequence is also a 1st symbol in the pilot sequence

| 11 | 22 | 54 | 9 | 1 | 95 | 1 | 95 | ... | 1 | 95 |

$N_{PG}=96$ · $N_{PG}=96$ · $N_{PG}=96$ · $N_{PG}=96$

First-type sub-frame

FIG. 23B

□ 11 training symbols are used as a training sequence

■ 136 pilot symbols are used as a pilot sequence

▨ Symbols before framing, including information and parity symbols

A 1st symbol in the training sequence is also a 1st symbol in the pilot sequence

| 11 | 85 | 1 | 95 | ... | 1 | 95 |

$N_{PG}=96$ · $N_{PG}=96$ · $N_{PG}=96$

Second-type sub-frame

FIG. 23C

EP 4 773 530 A1

## Super-frame

| Sub-frame 1 | Sub-frame 2 | Sub-frame 3 | ... | Sub-frame 16 |
|:---:|:---:|:---:|:---:|:---:|
| 6816 symbols | 6816 symbols | 6816 symbols | | 6816 symbols |

FIG. 24A

□ 10 training symbols are used as a training sequence

▦ 22 frame alignment word symbols are used as a frame alignment word sequence

□ 234 reserved symbols

■ 71 pilot symbols are used as a pilot sequence

▨ Symbols before framing, including information and parity symbols

A 1st symbol in the training sequence is also a 1st symbol in the pilot sequence

| 10 | 22 | 64 | 1 | 95 | 1 | 75 | 20 | 1 | 95 | 1 | 95 | ... | 1 | 95 |

| $N_{PG}=96$ | $N_{PG}=96$ | $N_{PG}=96$ | $N_{PG}=96$ | $N_{PG}=96$ | $N_{PG}=96$ |

First-type sub-frame

FIG. 24B

□ 10 training symbols are used as a training sequence

■ 71 pilot symbols are used as a pilot sequence

▨ Symbols before framing, including information and parity symbols

A 1st symbol in the training sequence is also a 1st symbol in the pilot sequence

| 10 | 86 | 1 | 95 | ... | 1 | 95 |

| $N_{PG}=96$ | $N_{PG}=96$ | $N_{PG}=96$ |

Second-type sub-frame

FIG. 24C

EP 4 773 530 A1

Super-frame

| Sub-frame 1 | Sub-frame 2 | Sub-frame 3 | ... | Sub-frame 58 |
| 3072 symbols | 3072 symbols | 3072 symbols | | 3072 symbols |

- 11 training symbols are used as a training sequence
- 22 frame alignment word symbols are used as a frame alignment word sequence
- 102 reserved symbols

FIG. 25A

A 1st symbol in the training sequence is also a 1st symbol in the pilot sequence

11 | 22 | 63 | 1 | 39 | 56 | 1 | 95 | ... | 1 | 95

$N_{PG}=96$

- 32 pilot symbols are used as a pilot sequence
- Symbols before framing, including information and parity symbols

First-type sub-frame
FIG. 25B

A 1st symbol in the training sequence is also a 1st symbol in the pilot sequence

11 | 85 | 1 | 95 | ... | 1 | 95

$N_{PG}=96$

- 11 training symbols are used as a training sequence
- 32 pilot symbols are used as a pilot sequence
- Symbols before framing, including information and parity symbols

Second-type sub-frame
FIG. 25C

Data transmission apparatus

201
Processing unit

202
Sending unit

FIG. 26

Data transmission apparatus

301
Receiving unit

302
Processing unit

FIG. 27

Data transmission apparatus

401
Processor

402
Transceiver

403
Memory

FIG. 28

## INTERNATIONAL SEARCH REPORT

| International application No. |
|---|
| **PCT/CN2024/095639** |

| A. | CLASSIFICATION OF SUBJECT MATTER |
|---|---|

H04L1/00(2006.01)i;  H04B10/54(2013.01)i

According to International Patent Classification (IPC) or to both national classification and IPC

| B. | FIELDS SEARCHED |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP; IEEE: 光通信, 超帧, 子帧, 导频, 训练, 符号, 序列, 偏振, optical, superframe, subframe, pilot, symbol, sequence, polarization

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114978337 A (HUAWEI TECHNOLOGIES CO., LTD.) 30 August 2022 (2022-08-30) description, paragraphs [0143]-[0987] | 1-32 |
| X | CN 116388881 A (HUAWEI TECHNOLOGIES CO., LTD.) 04 July 2023 (2023-07-04) description, paragraphs [0140]-[0959] | 1-32 |
| X | CN 116566498 A (HUAWEI TECHNOLOGIES CO., LTD.) 08 August 2023 (2023-08-08) description, paragraphs [0141]-[0980] | 1-32 |
| X | CN 116683996 A (HUAWEI TECHNOLOGIES CO., LTD.) 01 September 2023 (2023-09-01) description, paragraphs [0142]-[0954] | 1-32 |
| A | US 2012148255 A1 (ALCATEL-LUCENT USA INC.) 14 June 2012 (2012-06-14) entire document | 1-32 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 August 2024** | **25 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/095639**

| Patent document cited in search report | | | Publication date (day/month/year) | Patent family member(s) | | | Publication date (day/month/year) |
|---|---|---|---|---|---|---|---|
| CN | 114978337 | A | 30 August 2022 | None | | | |
| CN | 116388881 | A | 04 July 2023 | None | | | |
| CN | 116566498 | A | 08 August 2023 | None | | | |
| CN | 116683996 | A | 01 September 2023 | None | | | |
| US | 2012148255 | A1 | 14 June 2012 | US | 8660433 | B2 | 25 February 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311288520